# EUROPEAN PATENT APPLICATION

(11) **EP 3 062 271 A1**
(43) Date of publication of application: **31.08.2016**
(21) Application number: 16157728.3
(22) Date of filing: 26.02.2016
(51) Int. Cl.: G06Q 20/00, G06Q 20/04, G06Q 20/32, G06Q 20/40, G07F 7/08, H04L 29/08, G07F 19/00

(54) **ELECTRONIC DEVICE INCLUDING ELECTRONIC PAYMENT SYSTEM AND OPERATING METHOD THEREOF**

(30) Priority: 27.02.2015 US 201562126121 P; 04.11.2015 KR 20150154826
(71) Applicant: Samsung Electronics Co., Ltd., Gyeonggi-do 16677 (KR)
(72) Inventor: PARK, Chanpyo, Seoul (KR); KIM, Heejung, Gyeonggi-do (KR); PAEK, Jooyoun, Seoul (KR); SEO, Youbi, Seoul (KR); YU, Byungin, Seoul (KR)
(74) Representative: Jenkins, Richard Gavin

(57) **Abstract**

A method of an electronic device and an electronic device are provided. The method includes displaying an image, usage information, and a payment module of an electronic card on a screen; detecting the selection of the payment module; and performing payment by using the electronic card. The electronic device includes a display unit; and a controller connected to the display unit and configured to display an image, usage information, and a payment module of an electronic card on a screen, detect a selection of the payment module, and perform a payment using the electronic card.

## Description

### BACKGROUND

### 1. Field of the Disclosure

The present disclosure relates generally to an electronic device and a method, and more particularly, to an electronic device including a controller that is capable of performing payment using the electronic device and a method relating to an electronic payment system.

### 2. Description of the Related Art

With the development of mobile communication technologies, an electronic device can perform various data communication functions as well as voice call functions. An electronic device, for example, a mobile device or a user device, may provide various services through various applications. An electronic device may provide network-based communication services such as multimedia services, for example, a music service, a dynamic image service, a digital broadcasting service, a call, wireless Internet, short message service (SMS), a multimedia messaging service (MMS), and the like. Further, an electronic device has evolved from a simple communication medium to a device having various functions, such as communication, circulation, the Internet, or payment, and may be used in all of the circulation industrial field. an electronic device may provide, for example, a mobile payment scheme through the electronic device by a payment function. An electronic device may enable, for example, payment using the electronic device from a payment scheme using cash or a card (e.g., credit card, debit card, membership card). An electronic device may provide, for example, a function of paying for, using the electronic device, a service or the purchase of goods on-line or off-line (e.g., making a payment after buying a product or food in an actual shop or restaurant) using a mobile payment service. Further, an electronic device may have, for example, a communication function for receiving or transmitting payment information.

However, a user must execute a mobile payment application, and select a card in the executed application so as to execute the mobile payment. A user may be able to use a mobile payment after executing the above described complicated procedure.

### SUMMARY

A method of an electronic device is provided. The method includes displaying an image, usage information, and a payment module of an electronic card on a screen, detecting the selection of the payment module; and performing payment by using the electronic card.

An electronic device is provided. The electronic device includes a display unit and configured to display an image, usage information, and a payment module of an electronic card on a screen, detect a selection of the payment module, and perform a payment using the electronic card.

### BRIEF DESCRIPTION OF THE DRAWINGS

The above and other aspects, features, and advantages of the present disclosure will be more apparent from the following description, taken in conjunction with the accompanying drawings, in which:
FIG. 1 is a block diagram of a network environment according to an embodiment of the present disclosure;
FIG. 2 is a block diagram of an electronic device according to an embodiment of the present disclosure;
FIG. 3 is a block diagram of a program module according to an embodiment of the present disclosure;
FIG. 4 is a block diagram of a plurality of execution environments operated in an electronic device according to an embodiment of the present disclosure;
FIGs. 5A to 5C are block diagrams according to various embodiments of the present disclosure;
FIG. 6 is a block diagram of a payment system according to an embodiment of the present disclosure;
FIG. 7 is a block diagram of a payment system for executing a payment according to an embodiment of the present disclosure;
FIG. 8 is a block diagram of an electronic device according to an embodiment of the present disclosure;
FIG. 9 is a block diagram of a magnetic secure transmission (MST) module according to an embodiment of the present disclosure;
FIG. 10 is a diagram of MST data received by a data reception module according to an embodiment of the present disclosure;
FIGs. 11A to 11C are illustrations of configurations of an electronic device having a coil antenna according to various embodiments of the present disclosure;
FIG. 12 is a chart of an output signal of an MST module and a reception signal of an external device reader according to an embodiment of the present disclosure;
FIG. 13 is an exploded view of an electronic device including a printed circuit board (PCB) type MST coil antenna according to an embodiment of the present disclosure;
FIG. 14 is a diagram of a coil antenna of an electronic device according to an embodiment of the present disclosure;
FIGs. 15A and 15B are diagrams of coil antennas and an electronic device including a plurality of coil antennas according to an embodiment of the present disclosure;
FIGs. 16A to 16C are block diagrams of an interior of an electronic device including a plurality of MST modules according to an embodiment of the present disclosure;
FIGs. 17A to 17C are block diagrams of an interior of an electronic device capable of commonly using at least one module among a plurality of MST modules according to an embodiment of the present disclosure;
FIG. 18 is a block diagram of program modules to be executed in an execution environment of an electronic device according to an embodiment of the present disclosure;
FIGs. 19A to 19D illustrate a payment user interface of an electronic device according to an embodiment of the present disclosure;
FIGs. 20 and 21 illustrate an account-based service server management web page according to an embodiment of the present disclosure;
FIG. 22 is a flow diagram of a payment relay module relaying an authentication request through a personal identification number (PIN) input of a payment application to a security identifier processing module of trusted execution environment (TEE) according to an embodiment of the present disclosure;
FIGs. 23 and 24 are flow diagrams of a payment method using a result of authentication using biological information by a payment relay module according to an embodiment of the present disclosure;
FIG. 25 a block diagram of a method of generating a token cryptogram according to an embodiment of the present disclosure;
FIG. 26 is a flow diagram of a communication method for payment between a near field communication (NFC) module and a point of sale (POS) device according to an embodiment of the present disclosure;
FIG. 27 is a flow diagram of a communication method for payment between an NFC module and a POS device according to an embodiment of the present disclosure;
FIG. 28 is a block diagram of a payment system according to an embodiment of the present disclosure;
FIG. 29 is a block diagram of a server of a payment system according to an embodiment of the present disclosure;
FIG. 30 is a block diagram of a server of a payment system according to an embodiment of the present disclosure;
FIG. 31 is a block diagram of a signal flow of token payment according to an embodiment of the present disclosure;
FIG. 32 is a block diagram of operations of elements of a payment system according to an embodiment of the present disclosure;
FIG. 33 is a block diagram of a signal flow for a tokenization function according to an embodiment of the present disclosure;
FIG. 34 is a signal flow diagram of a token issuing method by an electronic device according to an embodiment of the present disclosure;
FIGs. 35A and 35B are signal flow diagrams of a token issuing method by an electronic device according to various embodiments of the present disclosure;
FIG. 36 is a signal flow diagram of a method of registering a card relating to a user account by an electronic device according to an embodiment of the present disclosure;
FIGs. 37A to 37C are signal flow diagrams of a token issuing method by an electronic device according to various embodiments of the present disclosure;
FIG. 38 is a signal flow diagram of a token using method by an electronic device according to an embodiment of the present disclosure;
FIG. 39 is a signal flow diagram of a token using method by an electronic device according to an embodiment of the present disclosure;
FIG. 40 is a signal flow diagram of a token update method by an electronic device according to an embodiment of the present disclosure;
FIG. 41 is a signal flow diagram of a token update method by an electronic device according to an embodiment of the present disclosure;
FIG. 42 is a signal flow diagram of a token update method by an electronic device according to an embodiment of the present disclosure;
FIG. 43 is a signal flow diagram of a notification indication by an electronic device according to of the present disclosure;
FIGs. 44A and 44B are signal flow diagrams of an encryption method by a payment system according to an embodiment of the present disclosure;
FIG. 45 is a signal flow diagram of a token management method according to an embodiment of the present disclosure;
FIG. 46 is a signal flow diagram of a token management method according to an embodiment of the present disclosure;
FIG. 47 is a signal flow diagram of a token management method according to an embodiment of the present disclosure;
FIG. 48 is a signal flow diagram of a token management method according to an embodiment of the present disclosure;
FIG. 49 is a signal flow diagram of an asset management method according to an embodiment of the present disclosure;
FIG. 50 is a flowchart of a payment method by an electronic device using a first communication module and a second communication module according to an embodiment of the present disclosure;
FIG. 51 is a flowchart of data communication between security applications according to an embodiment of the present disclosure;
FIG. 52 is a flowchart of a method of transmitting, to an external device, data stored in an electronic device using a plurality of coil antennas according to an embodiment of the present disclosure;
FIG. 53 is a flowchart of a method of managing security information by an electronic device according to an embodiment of the present disclosure;
FIG. 54 is a flowchart of a method of managing security information by an electronic device according to an embodiment of the present disclosure;
FIG. 55 is a flowchart of a method of attestation according to an embodiment of the present disclosure;
FIG. 56 is a block diagram of a payment system for managing a token according to an embodiment of the present disclosure;
FIG. 57 is a block diagram of a method of executing a payment transaction using a token according to an embodiment of the present disclosure;
FIG. 58 is a block diagram of an electronic device according to an embodiment of the present disclosure;
FIG. 59 is an illustration of the electronic device of FIG. 58;
FIG. 60 is a flowchart of a method of an electronic device according to an embodiment of the present disclosure;
FIG. 61 is a flowchart of a method of displaying a payment management screen of FIG. 60;
FIG. 62 is a flowchart of a method of displaying an electronic card of FIG. 61;
FIG. 63 is a flowchart of a method of moving an electronic card of FIG. 61;
FIGs. 64A to 67B are illustrations of displaying a payment management screen of FIG. 61;
FIG. 68 is a flowchart of a method of displaying a card information screen of FIG. 60;
FIGs. 69A to 69C are illustrations of the method of displaying a card information screen of FIG. 68;
FIG. 70 is a flowchart of a method of executing a corresponding function of FIG. 60;
FIG. 71 is a flowchart of a method of registration for a payment management function of FIG. 70;
FIGs. 72A to 72F are illustrations of the method of registration for a payment management function of FIG. 71;
FIGs. 73A to 73D are illustrations of a method of executing a corresponding function of FIG. 70;
FIG. 74 is a flowchart of a method of executing a corresponding function of FIG. 60;
FIGs. 75A to 76C are illustrations of the method of executing a corresponding function of FIG. 74;
FIG. 77 is a flowchart of a method of executing a corresponding function of FIG. 60; and
FIGs. 78A to 78D illustrate examples in association with an operation of executing a corresponding function of FIG. 77.

### DETAILED DESCRIPTION OF EMBODIMENTS OF THE PRESENT DISCLOSURE

Hereinafter, various embodiments of the present disclosure are described with reference to the accompanying drawings. However, it should be understood that there is no intent to limit the present disclosure to the particular embodiments disclosed herein; rather, the present disclosure is intended to be construed to cover various modifications, equivalents, and/or alternatives of embodiments of the present disclosure. In describing the drawings, similar reference numerals may be used to designate similar elements.

In the present disclosure, the terms "have," "may have," "include," and "may include" indicate the existence of a corresponding feature (e.g., a numerical value, a function, an operation, or components such as elements), and do not exclude the existence of additional features.

In the present disclosure, the terms "A or B," "at least one of A and/or B," and "one or more of A and/or B" may include all possible combinations of the items listed. For example, the terms "A or B," "at least one of A and B," and "at least one of A or B" indicate all of (1) including at least one A, (2) including at least one B, and (3) including all of at least one A and at least one B.

The terms "a first," "a second," "the first," or "the second" used to describe various embodiments of the present disclosure may modify various components regardless of the order and/or the importance but do not limit the corresponding components. For example, a first electronic device and a second electronic device may indicate different user devices regardless of order or importance thereof. For example, a first element may be referred to as a second element, and similarly, a second element may be referred to as a first element without departing from the scope and spirit of the present disclosure.

It should be understood that when an element (e.g., a first element) is referred to as being (operatively or communicatively) "connected," or "coupled," to another element (e.g., a second element), it may be directly connected or coupled directly to the other element or any other element (e.g., a third element) may be interposed between them. In contrast, it may be understood that when an element (e.g., a first element) is referred to as being "directly connected," or "directly coupled" to another element (e.g., a second element), there is no element (e.g., a third element) interposed between them.

The term "configured to" used in the present disclosure may be exchanged with, for example, "suitable for," "having the capacity to," "designed to," "adapted to," "made to," or "capable of" according to the situation. The term "configured to" may not necessarily imply "specifically designed to" in hardware. Alternatively, in some situations, the term "device configured to" may indicate that the device, together with other devices or components, "is able to." For example, the term "processor adapted (or configured) to perform A, B, and C" may indicate a dedicated processor (e.g., an embedded processor) only for performing the corresponding operations or a general purpose processor (e.g., a central processing unit (CPU) or an application processor (AP)) that may perform the corresponding operations by executing one or more software programs stored in a memory device.

The terms used herein are merely for the purpose of describing particular embodiments of the present disclosure and are not intended to limit the scope of the present disclosure. As used herein, singular forms may include plural forms as well, unless the context clearly indicates otherwise. Unless defined otherwise, all terms used herein, have the same meanings as those commonly understood by a person skilled in the art to which the present disclosure pertains. Such terms as those defined in a generally used dictionary may be interpreted to have the same meanings as those in the relevant field of art, and are not to be interpreted to have ideal or excessively formal meanings unless clearly defined in the present disclosure. In some cases, even a term defined in the present disclosure should not be interpreted to exclude embodiments of the present disclosure.

An electronic device according to various embodiments of the present disclosure may include at least one of, for example, a smart phone, a tablet personal computer (PC), a mobile phone, a video phone, an electronic book reader (e-book reader), a desktop PC, a laptop PC, a netbook computer, a workstation, a server, a personal digital assistant (PDA), a portable multimedia player (PMP), a moving picture experts group (MPEG-1) audio layer-3 (MP3) player, a mobile medical device, a camera, and a wearable device. According to various embodiments, a wearable device may include at least one of an accessory type (e.g., a watch, a ring, a bracelet, an anklet, a necklace, glasses, a contact lens, or a head-mounted device (HMD)), a fabric or clothing integrated type (e.g., electronic clothing), a body-mounted type (e.g., a skin pad, or tattoo), and a bio-implantable type (e.g., an implantable circuit).

According to some embodiments of the present disclosure, an electronic device may be a home appliance. A home appliance may, for example, include at least one of a television, a digital video disk (DVD) player, an audio player, a refrigerator, an air conditioner, a cleaner, an oven, a microwave oven, a washing machine, an air purifier, a set-top box, a home automation control panel, a TV box (e.g., HomeSync®of Samsung, Apple TV^{®}, or Google TV™), a game console (e.g., Xbox®, PlayStation®), an electronic dictionary, an electronic key, a camcorder, and an electronic frame.

According to an embodiment of the present disclosure, an electronic device may include at least one of various medical devices (e.g., various portable medical measuring devices (a blood glucose measuring device, a heart rate measuring device, a blood pressure measuring device, a body temperature measuring device, etc.), a magnetic resonance angiography (MRA) device, a magnetic resonance imaging (MRI) device, a computed tomography (CT) machine, and an ultrasonic machine), a navigation device, a global navigation satellite system (GNSS) receiver, an event data recorder (EDR), a flightdata recorder (FDR), a vehicle infotainment device, an electronic devices for a ship (e.g., a navigation device for a ship, and a gyro-compass), avionics, security devices, an automotive head unit, a robot for home or industry, an automated teller machine (ATM) in banks, a point of sale (POS) device in a shop, or an Internet of Things (IoT) device (e.g., a light bulb, various sensors, an electric or gas meter, a sprinkler device, a fire alarm, a thermostat, a streetlamp, a toaster, sporting goods, a hot water tank, a heater, a boiler, etc.).

According to some embodiments of the present disclosure, an electronic device may include at least one of a part of furniture or a building/structure, an electronic board, an electronic signature-receiving device, a projector, and various types of measuring instruments (e.g., a water meter, an electric meter, a gas meter, and a radio wave meter). An electronic device according to various embodiments of the present disclosure may be a combination of one or more of the aforementioned various devices. An electronic device according to some embodiments of the present disclosure may be a flexible device. Further, an electronic device according to an embodiment of the present disclosure is not limited to the aforementioned devices, and may include a newly developed electronic device.

Hereinafter, an electronic device according to various embodiments is described with reference to the accompanying drawings. As used herein, the term "user" may indicate a person who uses an electronic device or a device (e.g., an artificial intelligence electronic device) that uses an electronic device.

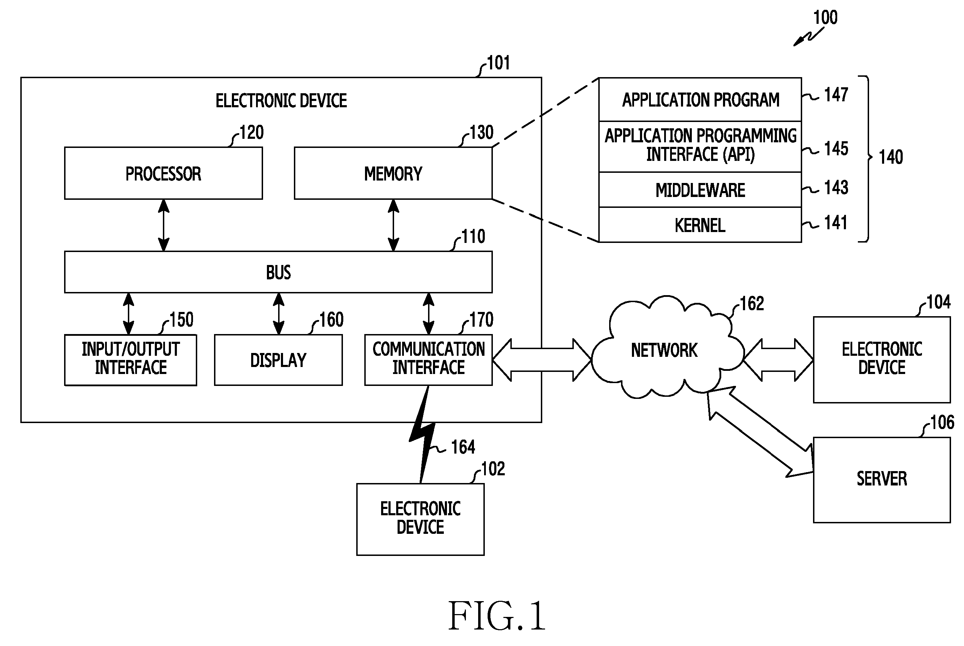

FIG. 1 is a block diagram of a network environment 100 according to an embodiment of the present disclosure.

Referring to FIG. 1, an electronic device 101, 102, or 104 or a server 106 may be connected to each other through a network 162 or a short range communication 164. The electronic device 101 may include a bus 110, a processor 120, a memory 130, an input/output interface 150, a display 160, and a communication interface 170. In some embodiments of the present disclosure, the electronic device 101 may omit at least one of the above elements or may further include other elements.

The bus 110 may include, for example, a circuit for interconnecting the elements 110 to 170 and transferring communication (e.g., control messages and/or data) between the elements 110 to 170.

The processor 120 may include one or more of a CPU, an AP, and a communication processor (CP). The processor 120, for example, may carry out operations or data processing relating to control and/or communication of at least one other element of the electronic device 101.

The memory 130 may include a volatile memory and/or a non-volatile memory. The memory 130 may store, for example, instructions or data relevant to at least one other element of the electronic device 101. According to an embodiment of the present disclosure, the memory 130 may store software and/or a program 140. The program 140 may include, for example, a kernel 141, middleware 143, an application programming interface (API) 145, and/or an application program (or "applications") 147. At least some of the kernel 141, the middleware 143, and the API 145 may be referred to as an operating system (OS).

The kernel 141 may control or manage system resources (e.g., the bus 110, the processor 120, or the memory 130) used for performing an operation or function implemented by the other programs (e.g., the middleware 143, the API 145, or the application program 147). Furthermore, the kernel 141 may provide an interface through which the middleware 143, the API 145, or the application program 147 may access the individual elements 110 to 170 of the electronic device 101 to control or manage the system resources.

The middleware 143, for example, may function as an intermediary for allowing the API 145 or the application program 147 to communicate with the kernel 141 to exchange data.

In addition, the middleware 143 may process one or more task requests received from the application program 147 according to priorities thereof. For example, the middleware 143 may assign priorities for using the system resources (e.g., the bus 110, the processor 120, the memory 130, or the like) of the electronic device 101, to at least one of the application program 147. For example, the middleware 143 may perform scheduling or loading balancing on one or more task requests by processing the one or more task requests according to the priorities assigned thereto.

The API 145 is an interface through which the application program 147 controls functions provided from the kernel 141 or the middleware 143, and may include, for example, at least one interface or function (e.g., instruction) for file control, window control, image processing, or text control.

The input/output interface 150, for example, may function as an interface that may transfer instructions or data input from a user or another external device to the other element(s) of the electronic device 101. Also, the input/output interface 150 may output, to a user or another external device, commands or data received from the element(s) other than the input/output interface 150 within the electronic device 101.

Examples of the display 160 may include a liquid crystal display (LCD), a light emitting diode (LED) display, an organic LED (OLED) display, a microelectromechanical systems (MEMS) display, and an electronic paper display. The display 160, for example, may display various types of contents (for example, text, images, videos, icons, or symbols) for a user. The display 160 may include a touch screen and receive, for example, a touch, a gesture, a proximity touch, or a hovering input by using an electronic pen or a part of a user's body.

The communication interface 170, for example, may establish communication between the electronic device 101 and an external device (e.g., the first external electronic device 102, the second external electronic device 104, or the server 106). For example, the communication interface 170 may be connected to a network 162 through wireless or wired communication to communicate with the second external electronic device 104 or the server 106.

Wireless communication may use at least one of, for example, long term evolution (LTE), LTE-advance (LTE-A), code division multiple access (CDMA), wideband CDMA (WCDMA), universal mobile telecommunications system (UMTS), wireless broadband (WiBro), and global system for mobile communications (GSM), as a cellular communication protocol. In addition, wireless communication may include, for example, short range communication 164. The short-range communication 164 may include at least one of, for example, wireless fidelity (WiFi), Bluetooth, NFC, MST, and GNSS.

MST may generate a pulse according to transmission data using an electromagnetic signal and the pulse may generate a magnetic field signal. The electronic device 101 may transmit the magnetic field signal to a POS device, and the POS device may detect the magnetic field signal using an MST reader and convert the detected magnetic field signal to an electrical signal to restore the data.

GNSS may include at least one of, for example, a global positioning system (GPS), a global navigation satellite system (Glonass), a Beidou navigation satellite system (Beidou), and the European global satellite-based navigation system (Galileo). "GPS" may be interchangeably used with "GNSS." Wired communication may include, for example, at least one of a universal serial bus (USB), a high definition multimedia interface (HDMI), recommended standard 232 (RS-232), and a plain old telephone service (POTS). The network 162 may include at least one of a communication network such as a computer network (e.g., a local area network (LAN) or a wide area network (WAN)), the Internet, and a telephone network.

Each of the first and second external electronic devices 102 and 104 may be of a type identical to or different from that of the electronic device 101. According to an embodiment of the present disclosure, the server 106 may include a group of one or more servers. All or some of the operations performed in the electronic device 101 may be performed in another electronic device or a plurality of electronic devices (e.g., the electronic devices 102 and 104 or the server 106). If the electronic device 101 must perform some functions or services automatically or in response to a request, the electronic device 101 may make a request for performing at least some functions relating thereto to the electronic device 102 or 104 or the server 106 instead of performing the functions or services by itself or in addition. The electronic device 102 or 104 or the server 106 may execute the requested functions or the additional functions, and may deliver a result of the execution to the electronic device 101. The electronic device 101 may process the received result as is or additionally to provide the requested functions or services. In addition, for example, cloud computing, distributed computing, or client-server computing technology may be used.

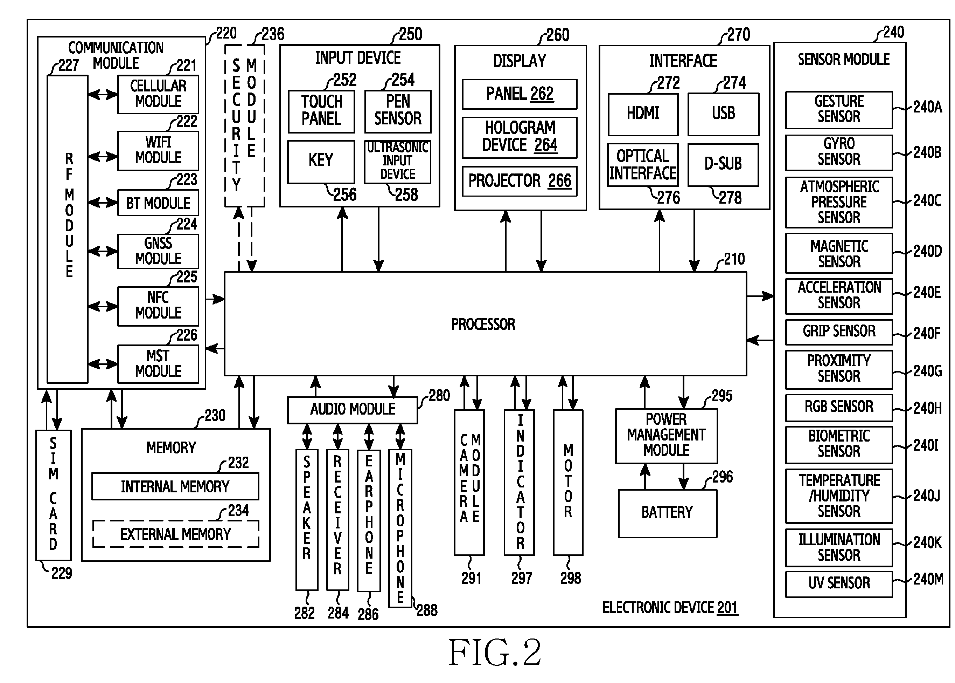

FIG. 2 is a block diagram illustrating an electronic device 201 according to various embodiments of the present disclosure. For example, the electronic device 201 may include all or part of the electronic device 101 illustrated in FIG. 1. The electronic device 201 may include at least one processor 210 (e.g., at least one AP), a communication module 220, a subscriber identification module (SIM) card 229, a memory 230, a sensor module 240, an input device 250, a display 260, an interface 270, an audio module 280, a camera module 291, a power management module 295, a battery 296, an indicator 297, and a motor 298.

The processor 210 may control a plurality of hardware or software components connected to the processor 210 by driving an operating system or an application program and perform processing of various pieces of data and calculations. The processor 210 may be implemented by, for example, a system on chip (SoC). According to an embodiment of the present disclosure, the processor 210 may further include a graphics processing unit (GPU) and/or an image signal processor. The processor 210 may include at least some (e.g., a cellular module 221) of the elements illustrated in FIG. 2. The processor 210 may load, into a volatile memory, instructions or data received from at least one (e.g., a non-volatile memory) of the other elements and may process the loaded instructions or data, and may store various data in a non-volatile memory.

The communication module 220 may have a configuration equal or similar to that of the communication interface 170 of FIG. 1. The communication module 220 may include, for example, a cellular module 221, a WiFi module 222, a BlueTooth module 223, a GNSS module 224 (for example, a GPS module, a Glonass module, a Beidou module, or a Galileo module), an NFC module 225, an MST module 226, and a radio frequency (RF) module 227.

The cellular module 221 may provide a voice call, image call, a text message service, or an Internet service through, for example, a communication network. According to an embodiment of the present disclosure, the cellular module 221 may distinguish between and authenticate electronic device 201 within a communication network using the SIM card 229. The cellular module 221 may perform at least some of the functions that the processor 210 may provide. The cellular module 221 may include a CP.

Each of the WiFi module 222, the BT module 223, the GNSS module 224, the NFC module 225 and the MST module 226 may include, for example, a processor for processing data transmitted and received through the relevant module. According to some embodiments of the present disclosure, at least some (e.g., two or more) of the cellular module 221, the WiFi module 222, the BT module 223, the GNSS module 224, the NFC module 225, and the MST module 226 may be included in one integrated circuit (IC) or IC package.

The RF module 227 may transmit/receive, for example, a communication signal (for example, an RF signal). The RF module 227 may include, for example, a transceiver, a power amplifier module (PAM), a frequency filter, a low noise amplifier (LNA), or an antenna. According to an embodiment of the present disclosure, at least one of the cellular module 221, the WiFi module 222, the Bluetooth module 223, the GNSS module 224, the NFC module 225, and the MST module 226 may transmit and receive RF signals through a separate RF module.

The SIM card 229 may contain unique identification information (e.g., an integrated circuit card identifier (ICCID)) or subscriber information (e.g., an international mobile subscriber identity (IMSI)).

The memory 230 (for example, the memory 130 of FIG. 1) may include, for example, an internal memory 232 or an external memory 234. The internal memory 232 may include at least one of, for example, a volatile memory (for example, a dynamic random access memory (DRAM), a static RAM (SRAM), a synchronous DRAM (SDRAM), and the like) and a non-volatile memory (for example, a one time programmable read only memory (OTPROM), a programmable ROM (PROM), an erasable PROM (EPROM), an electrically erasable PROM (EEPROM), a flash memory (for example, a NAND flash memory or a NOR flash memory), a hard drive, or a solid state drive (SSD).

An external memory 234 may further include a flash drive, for example, a compact flash (CF) drive, a secure digital (SD) memory card, a micro SD (Micro-SD) memory card, a mini SD (Mini-SD) memory card, an extreme digital (xD) memory card, a multimedia card (MMC), a memory stick, or the like. The external memory 234 may be functionally and/or physically connected to the electronic device 201 through various interfaces.

The security module 236 is a module including storage space having a higher security level than that of the memory 230 and may be a circuit that guarantees safe data storage and a protected execution environment. For example, an electronic device may encrypt data (e.g., biometric information, personal information, or card information) which requires a high security level, and may store, in the security module 236, a key that is used for encryption. The security module 236 may be implemented by a separate circuit and may include a separate processor. The security module 236 may exist in, for example, a detachable smart IC or SD memory card, or may include an embedded secure element (eSE) embedded in a fixed IC of the electronic device 201. Further, the security module 236 may be operated by an OS that is different from the OS of the electronic device 201. For example, the security module may operate on the basis of a java card open platform (JCOP) operating system.

The sensor module 240 may measure a physical quantity or detect an operation state of the electronic device 201, and may convert measured or detected information into an electrical signal. The sensor module 240 may include, for example, at least one of a gesture sensor 240A, a gyro sensor 240B, an atmospheric pressure sensor 240C, a magnetic sensor 240D, an acceleration sensor 240E, a grip sensor 240F, a proximity sensor 240G, a color sensor 240H (for example, a red, green, blue (RGB) sensor), a biometric sensor 240I, a temperature/humidity sensor 240J, an illumination sensor 240K, and an ultraviolet (UV) light sensor 240M. Additionally or alternatively, the sensor module 240 may include, for example, an electronic nose (E-nose) sensor, an electromyography (EMG) sensor, an electroencephalogram (EEG) sensor, an electrocardiogram (ECG) sensor, an infrared (IR) sensor, an iris sensor, and/or a fingerprint sensor. The sensor module 240 may further include a control circuit for controlling one or more sensors included therein. In an embodiment of the present disclosure, an electronic device 201 may further include a processor configured to control the sensor module 240 as a part of or separately from the processor 210, and may control the sensor module 240 while the processor 210 is in a sleep state.

The input device 250 may include, for example, a touch panel 252, a (digital) pen sensor 254, a key 256, or an ultrasonic input device 258. The touch panel 252 may use at least one of, for example, a capacitive scheme, a resistive scheme, an infrared scheme, and an ultrasonic scheme. Also, the touch panel 252 may further include a control circuit. The touch panel 252 may further include a tactile layer and provide a tactile reaction to a user.

The (digital) pen sensor 254 may include, for example, a recognition sheet which is a part of the touch panel or is separate from the touch panel. The key 256 may include, for example, a physical button, an optical key or a keypad. The ultrasonic input device 258 may detect an ultrasonic wave generated by an input tool through a microphone 288 and identify data corresponding to the detected ultrasonic wave.

The display 260 (for example, the display 160 of FIG. 1) may include a panel 262, a hologram device 264 or a projector 266. The panel 262 may include a configuration identical or similar to that of the display 160 illustrated in FIG. 1. The panel 262 may be implemented to be, for example, flexible, transparent, or wearable. The panel 262 and the touch panel 252 may be configured by one module. The hologram device 264 may show a three dimensional image in the air by using interference of light. The projector 266 may display an image by projecting light onto a screen. The screen may be located, for example, inside or outside of the electronic device 201. According to an embodiment of the present disclosure, the display 260 may further include a control circuit for controlling the panel 262, the hologram device 264, or the projector 266.

The interface 270 may include, for example, an HDMI 272, a USB 274, an optical interface 276, or a D-subminiature (D-sub) connector 278. The interface 270 may be included in, for example, the communication interface 170 illustrated in FIG. 1. Additionally or alternatively, the interface 270 may include, for example, a mobile high definition link (MHL) interface, an SD card/ MMC interface, or an Infrared Data Association (IrDA) standard interface.

The audio module 280 may bilaterally convert, for example, a sound and an electrical signal. At least some elements of the audio module 280 may be included in, for example, the input/output interface 150 illustrated in FIG. 1. The audio module 280 may process sound information which is input or output through, for example, a speaker 282, a receiver 284, earphones 286, the microphone 288, or the like.

The camera module 291 is a device which may photograph a still image and a dynamic image. According to an embodiment of the present disclosure, the camera module 291 may include one or more image sensors (for example, a front sensor or a back sensor), a lens, an image signal processor (ISP) or a flash (for example, an LED or xenon lamp).

The power management module 295 may manage, for example, power of the electronic device 201. According to an embodiment of the present disclosure, the power management module 295 may include a power management integrated circuit (PMIC), a charger IC, or a battery gauge. The PMIC may use a wired and/or wireless charging method. Examples of the wireless charging method may include, for example, a magnetic resonance method, a magnetic induction method, an electromagnetic method, and the like, and may further include additional circuits (e.g., a coil loop, a resonance circuit, a rectifier, etc.) for wireless charging. The battery gauge may measure, for example, a residual quantity of the battery 296, and a voltage, a current, or a temperature during charging. The battery 296 may include, for example, a rechargeable battery or a solar battery.

The indicator 297 may indicate a particular state (e.g., a booting state, a message state, a charging state, or the like) of the electronic device 201 or a part (e.g., the processor 210) of the electronic device 2201. The motor 298 may convert an electrical signal into mechanical vibration, and may generate a vibration, a haptic effect, or the like. The electronic device 201 may include a processing unit (e.g., a GPU) for supporting mobile television (TV). The processing unit for supporting mobile TV may, for example, process media data according to a certain standard such as digital multimedia broadcasting (DMB), digital video broadcasting (DVB), or mediaFLO™.

Each of the components of the electronic device 201 according to the present disclosure may be implemented by one or more components, and the name of the corresponding component may vary depending on the type of the electronic device 201. The electronic device 201 according to various embodiments of the present disclosure may include at least one of the aforementioned elements. Some elements may be omitted or other additional elements may be further included in the electronic device 201. Also, some of the hardware components according to various embodiments may be combined into one entity, which may perform functions identical to those of the relevant components before the combination.

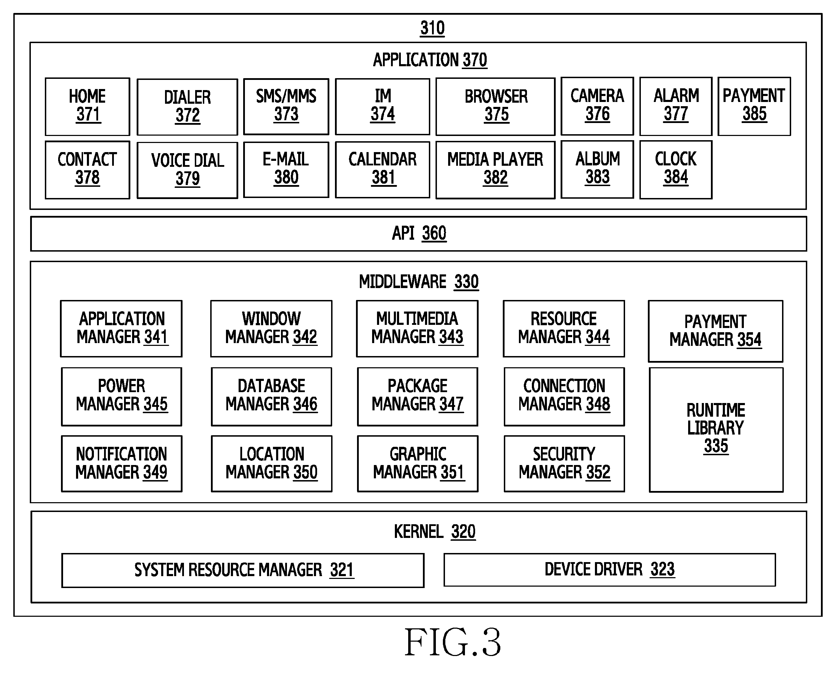

FIG. 3 is a block diagram of a program module 310 according to an embodiment of the present disclosure. The program module 310 (for example, the program 140 of FIG. 1) may include an OS for controlling resources related to the electronic device (for example, the electronic device 101 of FIG. 1) and/or various applications (for example, the application program 147) executed in the OS. The OS may be, for example, Android®, iOS®, Windows®, Symbian™, Tizen®, Bada™, or the like.

The program module 310 may include a kernel 320, middleware 330, an API 360, and/or an application 370. At least some of the program module 310 may be preloaded on the electronic device, or may be downloaded from the electronic device 102 or 104, or the server 106.

The kernel 320 (for example, the kernel 141 of FIG. 1) may include, for example, a system resource manager 321 and/or a device driver 323. The system resource manager 321 may perform the control, allocation, retrieval, or the like of system resources. According to an embodiment of the present disclosure, the system resource manager 321 may include a process manager, a memory manager, a file system manager, or the like. The device driver 323 may include, for example, a display driver, a camera driver, a Bluetooth driver, a shared memory driver, a USB driver, a keypad driver, a WiFi driver, an audio driver, or an inter-process communication (IPC) driver.

The middleware 330 may provide a function required by the application 370 in common or provide various functions to the application 370 through the API 360 so that the application 370 can efficiently use limited system resources within the electronic device. According to an embodiment of the present disclosure, the middleware 330 (for example, the middleware 143 of FIG. 1) may include, for example, at least one of a runtime library 335, an application manager 341, a window manager 342, a multimedia manager 343, a resource manager 344, a power manager 345, a database manager 346, a package manager 347, a connection manager 348, a notification manager 349, a location manager 350, a graphic manager 351, a security manager 352, and a payment manager 354.

The runtime library 335 may include a library module which a compiler uses in order to add a new function through a programming language while the application 370 is being executed. The runtime library 335 may perform input/output management, memory management, the functionality for an arithmetic function, or the like.

The application manager 341 may manage, for example, a life cycle of at least one application of the application 370. The window manager 342 may manage graphical user interface (GUI) resources used for a screen. The multimedia manager 343 may determine a format required to reproduce various media files, and may encode or decode a media file by using a coder/decoder (codec) appropriate for the corresponding format. The resource manager 344 may manage resources, such as source code, memory, storage space, and the like of at least one of application of the application 370.

The power manager 345 may operate with a basic input/output system (BIOS) to manage a battery or power, and may provide power information required for the operation of the electronic device. The database manager 346 may generate, search for, and/or change a database to be used by at least one application of the application 370. The package manager 347 may manage the installation or update of an application distributed in the form of a package file.

The connection manager 348 may manage a wireless connection such as, for example, WiFi or Bluetooth. The notification manager 349 may display or notify of an event, such as an arrival of a message, an appointment, a proximity notification, and the like, in such a manner as not to disturb a user. The location manager 350 may manage location information of the electronic device. The graphic manager 351 may manage a graphic effect, which is to be provided to a user, or a user interface related to a graphic effect. The security manager 352 may provide various security functions required for system security, user authentication, and the like. According to an embodiment of the present disclosure, if the electronic device (for example, the electronic device 101 of FIG. 1) has a telephone call function, the middleware 330 may further include a telephony manager for managing a voice call function or a video call function of the electronic device. The payment manager 354 may relay information for payment from the application 370 to the API 360 or kernel 320. Further, the payment manager 354 may store information related to a payment, which has been received from an external device, in the electronic device 201 or transfer the internally stored information to an external device.

The middleware 330 may include a middleware module that forms a combination of various functions of the above-described elements. The middleware 330 may provide a module specialized for each type of OS in order to provide a differentiated function. Also, the middleware 330 may dynamically delete some of the existing elements, or may add new elements.

The API 360 (e.g., the API 145 of FIG. 1) may be, for example, a set of API programming functions, and may be provided with a different configuration according to an OS. For example, in the case of Android® or iOS®, one API set may be provided for each platform. In the case of Tizen®, two or more API sets may be provided for each platform.

The application 370 (for example, the application program 147 of FIG. 1) may include, for example, one or more applications which can provide functions such as a home application 371, a dialer application 372, an SMS/MMS application 373, an instant messaging application (IM) 374, a browser application 375, a camera application 376, an alarm application 377, a contact application 378, a voice dialer application 379, an email application 380, a calendar application 381, a media player application 382, an album application 383, a clock application 384, a health care application (for example, an application to measure a quantity of exercise or blood sugar level), or an environmental information application (for example, an application for providing atmospheric pressure, humidity, or temperature information).

According to an embodiment of the present disclosure, the application 370 may include an application (hereinafter, referred to as an "information exchange application") supporting information exchange between the electronic device 101 and the electronic device 102 or 104. The information exchange application may include, for example, a notification relay application for transferring certain information to an external electronic device or a device management application for managing an external electronic device.

For example, the notification relay application may include a function of transferring, to the electronic device 102 or 104, notification information generated from other applications of the electronic device 101 (e.g., an SMS/MMS application 373, an e-mail application 380, a health management application, or an environmental information application). Further, the notification relay application may receive notification information from, for example, an external electronic device and provide the received notification information to a user.

For example, the device management application may manage (for example, install, delete, or update) at least one function of the electronic device 104 communicating with the electronic device (for example, a function of turning on/off the external electronic device (or some components) or a function of adjusting luminance (or resolution) of a display), applications operating in the external electronic device, or services provided by the external electronic device (for example, a call service and a message service).

According to an embodiment of the present disclosure, the application 370 may include applications (for example, a health care application of a mobile medical appliance or the like) designated according to attributes of the external electronic device 102 or 104. The application 370 may include an application received from the server 106 or the electronic device 102 or 104. The application 370 may include a preloaded application or a third party application which can be downloaded from the server 106. Names of the elements of the program module 310, according to the above-described embodiments of the present disclosure, may change depending on the type of OS.

According to an embodiment of the present disclosure, at least some of the program module 310 may be implemented in software, firmware, hardware, or a combination of two or more thereof. At least some of the program module 310 may be implemented (e.g., executed) by, for example, the processor (e.g., the processor 210 of FIG. 2). At least some of the program module 310 may include, for example, a module, a program, a routine, a set of instructions, and/or a process for performing one or more functions.

The term "module" as used herein may, for example, indicate a unit including one of hardware, software, and firmware or a combination of two or more of them. The term "module" may be interchangeably used with, for example, the terms "unit," "logic," "logical block," "component," or "circuit." The term "module" may indicate a minimum unit of an integrated component element or a part thereof. The term "module" may indicate a minimum unit for performing one or more functions or a part thereof. The term "module" may indicate a unit that may be mechanically or electronically implemented. For example, the term "module" according to the present disclosure may include at least one of an application specific IC (ASIC), a field programmable gate array (FPGA), and a programmable-logic device for performing operations which are known or will be developed.

According to an embodiment of the present disclosure, at least some of the devices (for example, modules or functions thereof) or the method (for example, operations) may be implemented by a command stored in a non-transitory computer-readable storage medium in a programming module form. An instruction, if executed by a processor (e.g., the processor 120 of FIG. 1), may cause one or more processors to execute the function corresponding to the instruction. The non-transitory computer-readable storage medium may be, for example, the memory 130 of FIG. 1.

The non-transitory computer readable recoding medium may include a hard disk, a floppy disk, magnetic media (e.g., a magnetic tape), optical media (e.g., a compact disc read only memory (CD-ROM) and a digital versatile disc (DVD)), magneto-optical media (e.g., a floptical disk), a hardware device (e.g., a ROM, a random access memory (RAM), a flash memory), and the like. In addition, the program instructions may include high level language code, which may be executed in a computer by using an interpreter, as well as machine readable code generated by a compiler. The aforementioned hardware device may be configured to operate as one or more software modules in order to perform the operation of the present disclosure, and vice versa.

The programming module according to an embodiment of the present disclosure may include one or more of the aforementioned components or may further include other additional components, or some of the aforementioned components may be omitted. Operations executed by a module, a programming module, or other component elements according to various embodiments of the present disclosure may be executed sequentially, in parallel, repeatedly, or in a heuristic manner. Further, some operations may be executed according to another order or may be omitted, or other operations may be added. Various embodiments disclosed herein are provided merely to easily describe technical details of the present disclosure and to facilitate understanding of the present disclosure, and are not intended to limit the scope of the present disclosure. Accordingly, the present disclosure is intended to be construed to include all modifications or various other embodiments of the present disclosure within the scope of the present disclosure as defined by the appended claims and their equivalents.

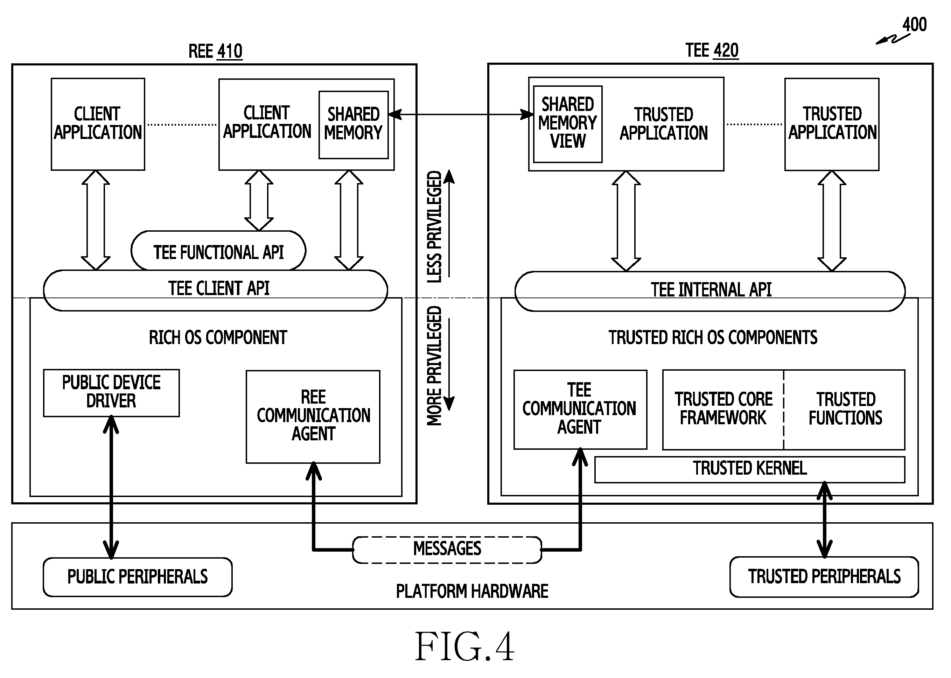

FIG. 4 is a block diagram of a plurality of execution environments operated in an electronic device 400 according to an embodiment of the present disclosure.

Referring to FIG. 4, a rich execution environment (REE) 410 and a trusted execution environment (TEE) 420 operate in an electronic device (e.g., the electronic device 101 of FIG. 1). The electronic device may operate an execution environment having a plurality of security levels in order to reinforce security. The plurality of security levels may include, for example, the REE 410 and the TEE 420. The REE 410 may be, for example, a first execution environment having a first security level. The TEE 420 may be, for example, a second execution environment having a second security level different from (e.g., greater than) the first security level. The electronic device 101 may include another execution environment (e.g., a third execution environment) having a third security level, without being limited thereto.

The TEE 420 may store data requiring a relatively high security level and perform related operations in a safe environment. The TEE 420 may operate on an AP of an electronic device and operate based on the reliable hardware structure determined in the process of manufacturing the electronic device. The TEE 420 may divide the AP or memory into a general area and a security area and operate in the security area. The TEE 420 may configure software or hardware requiring security, to operate in only a security area. The electronic device may operate the TEE 420 through a physical change of hardware or a logical change of software.

The TEE 420 may be separated from the REE 410 through hardware restrictions, or may be separated in view of software and operate in the same hardware. At least one application (e.g. an application for payment 385, contact 378, e-mail 380, or browser 375) operating in an REE 410 may use an API (e.g., TEE-functional API or TEE-client API) allowed to access the TEE 420. The at least one application may transfer, using the API, a message from a communication agent (REE communication agent) of the REE 410 to a communication agent (TEE communication agent) of the TEE 420. The message may be implemented to be transferred to only the TEE 420 in view of the hardware. The communication agent of the TEE 420 may receive the message and transfer the message to a security application (a trusted application (TA), such as digital rights management (DRM), security payment module, or security biological information module) related to the message. The security application may perform an operation related to the message, and transfer a result of the operation to the communication agent of the REE 410 through the communication agent of the TEE 420. The communication agent of the REE 410 may transfer the result to at least one application being operated in the REE 410.

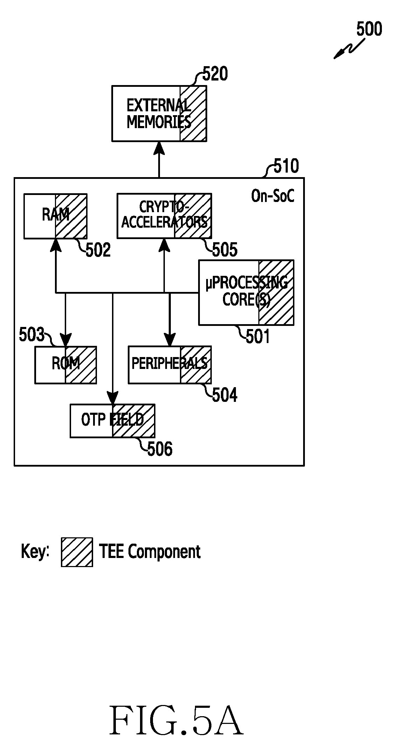

FIGs. 5A to 5C are block diagrams illustrating hardware structure 500 of a TEE according to various embodiments of the present disclosure. FIG. 5A illustrates a case (e.g., trust zone (TZ) of advanced reduced instruction set computer (RISC) machine (ARM)) where one processor and one memory are used while being divided into the REE 410 and the TEE 420 in view of the hardware. According to an embodiment of the present disclosure, the hardware structure of the TEE 420 may include an On-SoC 510 and external memories 520. The On-SoC 510 may include a micro-processing core 501, a RAM 502, a ROM 503, a peripheral 504, a crypto accelerator 505, or OTP fields 506. In order to operate two or more execution environments, the trust zone may temporally divide the processors and separately use the REE 410 and the TEE 420. Further, the trust zone may divide one memory into an area accessible in the REE 410 and an area accessible in the TEE 420 and separately use the areas.

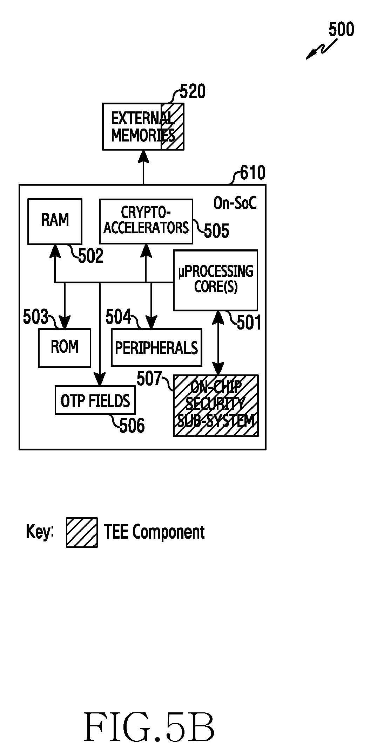

FIG. 5B illustrates a case where a processor for a TEE 420 is implemented together with a processor for operating an REE 410 in the form of on-chip but is implemented in a separate processing core set. According to an embodiment of the present disclosure, the On-SoC 610 may include the components of the On-SoC of FIG. 5A and an On-chip security sub-system 507 including one or more processors in addition to the micro-processing core 501. In this case, the On-SoC 610 may be configured to operate the REE 410 while the On-chip security sub-system 507 is configured to operate the TEE 420. Likewise in FIG. 5A, one memory may be divided into an area accessible in the REE 410 and an area accessible in the TEE 420 and the areas may be separately used in the case of FIG. 5B.

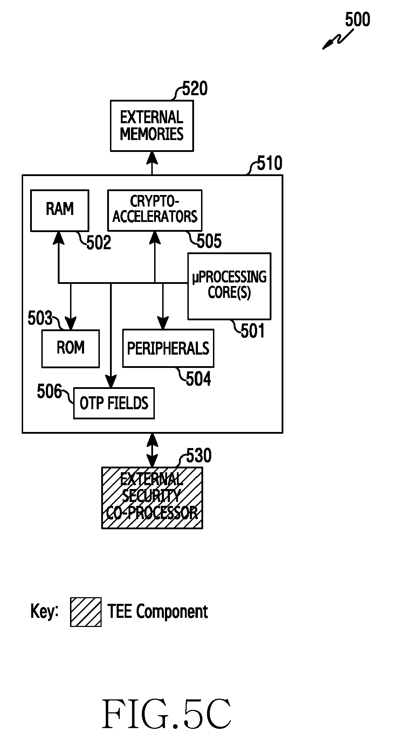

FIG. 5C illustrates a case where a processor for the TEE 420 is implemented in a separate IC or chip in view of the hardware and is separated from a chip in which a processor operates the REE 410. Referring to FIG. 5C, the On-SoC 510 may be configured to operate the REE 410, and one or more external security co-processors 530 disposed outside of the On-SoC 510 may be configured to operate the TEE 420.

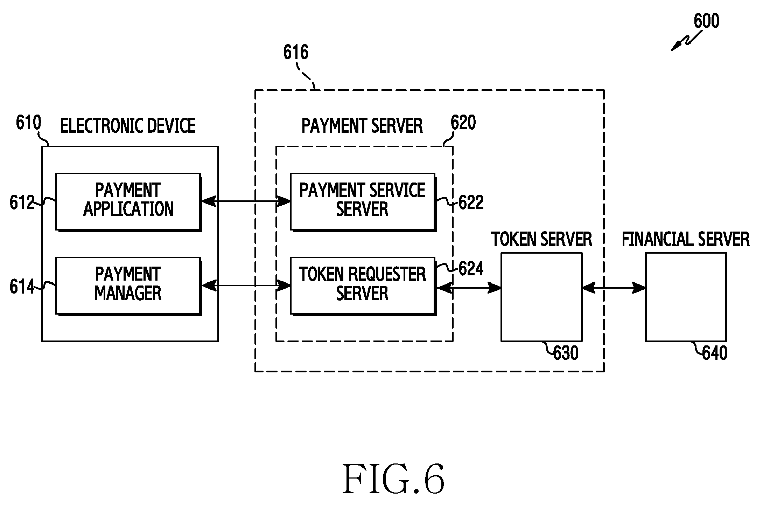

FIG. 6 is a block diagram of a payment system 600 according to an embodiment of the present disclosure.

Referring to FIG. 6, the payment system 600 may include an electronic device 610 and/or a server 616. Further, the server 616 may include, for example, a payment server 620, a token server (e.g., token service provider) 630, or a financial server (e.g., issuer) 640. The electronic device 610 may include, for example, a payment application (e.g., wallet application) 612 and/or a payment manager 614. The payment server 620 may include, for example, a payment service server 622 and/or a token requester server 624.

According to an embodiment of the present disclosure, the payment application 612 may include a payment application (e.g., Samsung Pay™ application). The payment application 612 may provide, for example, a user interface (UI or user experience (UX)) related to payment. The user interface related to payment may include a wallet user interface (UI/UX). For example, the payment application 612 may provide, for example, a user interface related to card registration, payment, or transaction. The payment application 612 may provide, for example, an interface related to card registration through an external input (e.g., a user input) or a text reader (e.g., an optical character reader/recognition (OCR)). Further, the payment application 612 may provide, for example, an interface related to user identification through identification and verification (ID&V).

According to an embodiment of the present disclosure, the payment application 612 may perform payment transaction using the payment application 612. For example, the payment application 612 may provide a user with a payment function through execution of Simple Pay®, Quick Pay®, or a designated application. Using the payment application 612, a user may perform a payment function and receive information associated with the payment function.

According to an embodiment of the present disclosure, the payment manager 614 may include information associated with a card company. For example, the payment manager 614 may include a card company software development kit (SDK).

According to an embodiment of the present disclosure, the payment server 620 may include a management server for electronic payment or mobile payment. The payment server 620 may, for example, receive information related to payment from the electronic device 610 and transmit the information externally or process the information.

According to an embodiment of the present disclosure, the payment server 620 may transmit or receive information between the electronic device 610 and the token server 630, using the payment service server 622 and/or the token requester server 624. The payment service server 622 may include, for example, a payment server (e.g., Samsung payment server) 620. The payment service server 622 may manage, for example, card information linked to a service account (e.g., Samsung account) or a user account. Further, the payment service server 622 may include an API server related to the payment application 612. Further, the payment service server 622 may provide, for example, an account management module (e.g., account integration or Samsung account integration).

According to an embodiment of the present disclosure, the token requester server 624 may provide an interface for processing information relating to payment. For example, the token requester server 624 may perform issuance, deletion, or activation of information (e.g., token) related to payment. Also, the token requester server 624 may be functionally connected to the payment manager 614 to control the information required for the payment.

According to an embodiment of the present disclosure, the payment application 612 included in the electronic device 610 and the payment service server 622 included in the payment server 620 may be functionally connected to each other. For example, the payment application 612 may transmit or receive information relating to payment to or from the payment server 620. The payment manager 614 included in the electronic device 610 and the token requester server 624 included in the payment server 620 may be functionally connected to each other. For example, the payment manager 614 may transmit or receive information relating to payment to or from the token requester server 624.

According to an embodiment of the present disclosure, the token server 630 may issue or manage information (e.g., a token) relating to payment. For example, the token server 630 may control the operation cycle (e.g., life cycle) of a token and the operation cycle may include a generation, revision, or deletion function. Further, the token server 630 may include, for example, a token management server and perform token provisioning, ID&V, replenishment, or life cycle management. Further, the token server 630 may integrate information relating to the financial server 640.

According to an embodiment of the present disclosure, the payment server 620 and/or the token server 630 may be located in an identical area, similar areas, or separated areas. For example, the payment server 620 may be included in a first server while the token server 630 is included in a second server. Further, for example, the payment server 620 and/or the token server 630 may be distinguishably implemented in one server (e.g., the first server or second server).

According to an embodiment of the present disclosure, the financial server 640 may perform issuance of a card. For example, the financial server 640 may include a card issuing bank. Further, the financial server 640 may generate information required for a payment provided to a user. A user may store, in the electronic device 610, information required for a payment generated in the financial server 640, using the payment application 612. Also, the financial server 640 may be functionally connected to the token server 630 to transmit or receive information required for a payment.

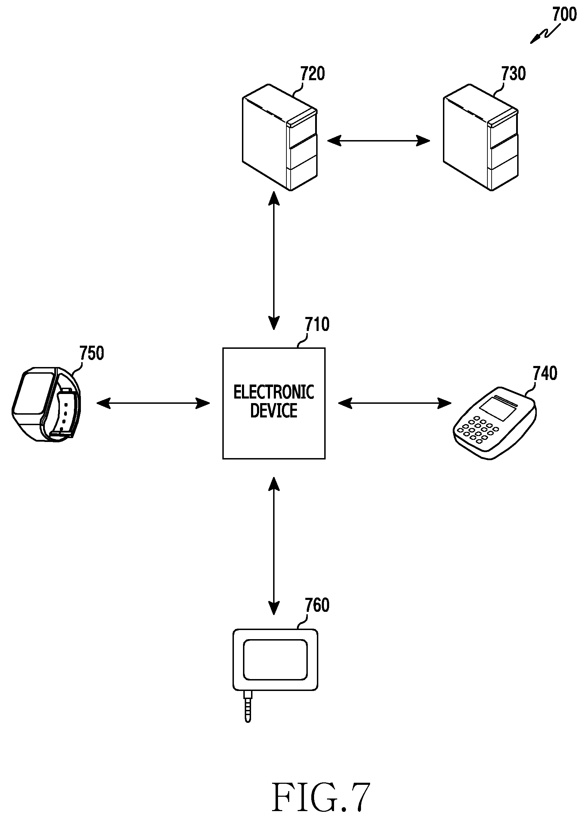

FIG. 7 is a block diagram of a payment system 700 for performing payment according to an embodiment of the present disclosure.

Referring to FIG. 7, the payment system may include an electronic device 710 (e.g., the electronic device 101 of FIG. 1), a payment server 720 (e.g., the server 106 of FIG. 1), a token service provider (TSP) 730 (e.g., the server 106 or another server), and a POS device 740 (e.g., the electronic device 102 of FIG. 1). According to an embodiment of the present disclosure, the payment system may include one or more additional electronic device 750 or 760. The one or more additional electronic device 750 or 760 may include a wearable device (e.g., a smart watch) or an accessory device (e.g., a fob type device of LoopPay Inc.), which can be functionally connected with the electronic device 710. The fob type device of LoopPay Inc. may include an external payment module connected to the electronic device 710 through a microphone.

According to an embodiment of the present disclosure, the electronic device 710 may perform a payment function. The electronic device 710 may register a card (e.g., a credit card such as MasterCard® or VISA®) in the electronic device 710 or the payment server 720 in order to perform the payment function. The payment server 720 may manage information on a plurality of registered cards including a card registered through another electronic device (e.g., the electronic device 750) of a user corresponding to the electronic device 710 or another card registered through an electronic device of another user as well as a card registered through the electronic device 710.

According to an embodiment of the present disclosure, the payment server 720 may acquire token information corresponding to registered card information from the token service provider 730 and transfer the acquired information to the electronic device 710. The payment server 720 may include, for example, a payment service server or token requester server. The payment service server may manage card information of a user. The payment server may provide a service related to payment on the basis of an account. The token requester server may request the token service provider 730 to provide token information necessary for the payment operation and acquire the token information.

The token service provider 730 may issue a token used in a payment process. According to an embodiment of the present disclosure, the token may have a value replacing a primary account number (PAN), which is information of a card. A token may be generated using a bank identification number (BIN). Further, the generated token may be encrypted by the token service provider 730, or may be encrypted by the payment server 720 after being sent to the payment server 720 without being encrypted. The encrypted token information may be transferred to the electronic device 710 through the payment server 720 and then decrypted by the electronic device 710. The token may be generated and encrypted in the token service provider 730 and may be transferred to the electronic device 710 without passing through the payment server 720. The payment server 720 may include a token generation function. In this case, the payment system may omit a separate token service provider 730.

The electronic device 710 may perform payment using, for example, at least one electronic device among one or more other electronic devices 750 or 760 functionally connected thereto based on a short range communication (e.g., Bluetooth or WiFi). According to an embodiment of the present disclosure, the at least one electronic device 750 may be a wearable device (e.g., a smart watch) and, in this case, the electronic device 710 may transmit the token received from the token service provider 730 to the wearable device. The at least one electronic device 760 may be an accessory device (e.g., a fob type device of LoopPay Inc.) and, in this case, the electronic device 710 may be functionally connected to the accessory device (e.g., a fob type device of LoopPay Inc.) through its input/output interface 150 (e.g., the earphone 286 of FIG. 2).

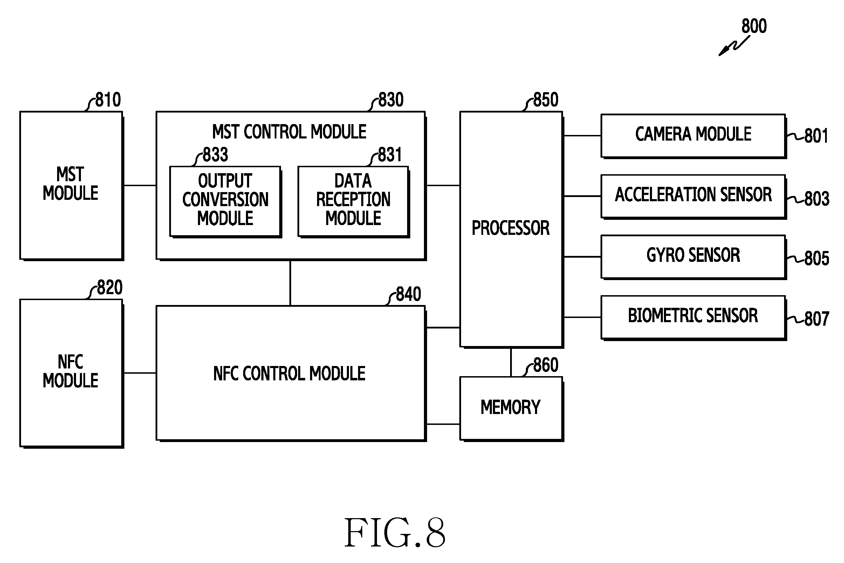

FIG. 8 is a block diagram of an electronic device 800 (e.g., the electronic device 101 of FIG. 1) capable of performing a payment function according to an embodiment of the present disclosure.

Referring to FIG. 8, the electronic device may include, for example, a camera module 801, an acceleration sensor 803, a gyro sensor 805, a biometric sensor 807, an MST module 810, an NFC module 820, an MST control module 830, an NFC control module 840, a processor 850, and a memory 860. The camera module 801 may photograph a card required for payment to acquire card information. The camera module 801 may recognize, through an OCR function, card information (e.g., card company, card number, card expiration date, or card owner) recorded in the card. Otherwise, a user may input necessary card information to the electronic device, using an input device (e.g., a touch panel, a pen sensor, a key, an ultrasonic input device, or a microphone input device) included in the electronic device.

According to an embodiment of the present disclosure, the acceleration sensor 803 or gyro sensor 805 may acquire a location state of the electronic device at a time of payment. The acquired location information of the electronic device (e.g., the electronic device 101 of FIG. 1) is transferred to the processor 850, and the processor 850 may adjust the intensity (e.g., current intensity) of a magnetic field transmitted from the MST module 810 to the POS device based on the acquired location state of the electronic device, or may select a coil antenna to be used, if there are a plurality of coil antennas. The MST control module 830 may include a data reception module 831 and an output conversion module 833. The data reception module 831 may receive a pulse signal in the form of a logical low/high value, which includes payment information transmitted from the processor 850 or the security module (e.g., eSE). Data that the data reception module 831 receives may be in the form of track data of a magnetic stripe of a magnetic card. For example, the received data may be in a form in which a token and payment verification data are inserted into at least one of the formats of track 1, 2, and 3 of the magnetic stripe.

The output conversion module 833 may include a circuit for converting data recognized by the data reception module 831 into necessary types in order to transfer the data to the MST module 810. The circuit may include an H-bridge circuit for controlling the direction of the voltage supplied to opposite ends of the MST module 810. The H-bridge circuit may include a circuit structure connected in a shape similar to the letter "H" using four switches.

According to an embodiment of the present disclosure, based on card information input through the camera module 801 or an input device (e.g., a touch panel or a pen sensor), the electronic device may receive payment information (e.g., track 1/2/3 or token information) included in the magnetic stripe of a magnetic card from a card company/bank server through a communication module and may store the received information in a necessary form in a separate security module 236 (e.g., eSE).

According to an embodiment of the present disclosure, although the tokens that are transferred to a POS device through the MST module 810 and the NFC module 820 are based on an identical card, the tokens may be different from each other. For example, the last four digits of a token (e.g., a digital card number) that is transferred to an external device (e.g., a POS device) through the MST module 810 may be "1111," and the last four digits of a token (e.g., a digital card number) that is transferred to the external device (e.g., a POS device) through the NFC module 820 may be "2222."

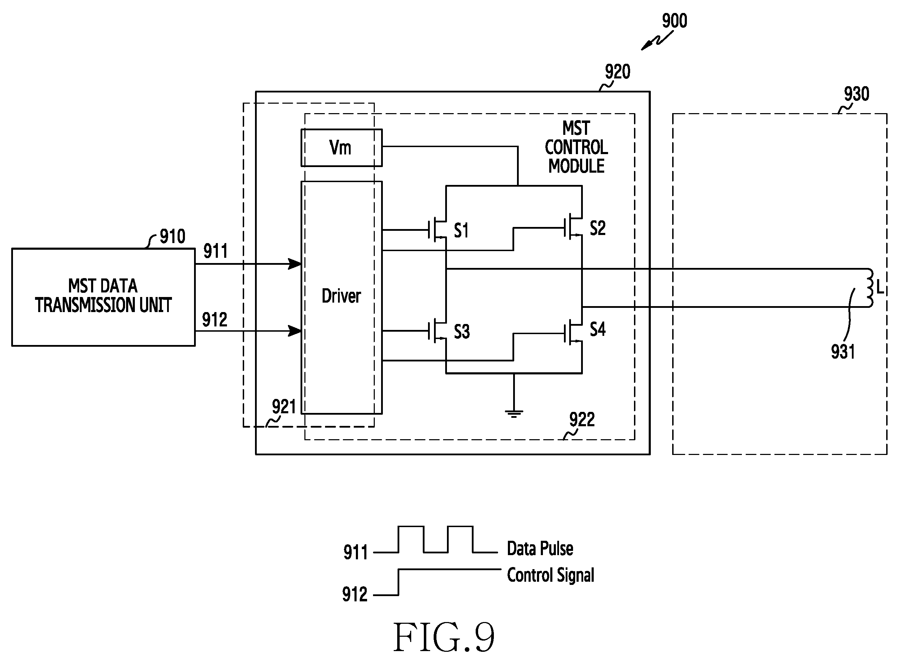

FIG. 9 is a block diagram of an MST module 900 according to an embodiment of the present disclosure.

Referring to FIG. 9, the MST data transmission unit 910 may transmit information necessary for payment to the MST control module 920. The MST data transmission unit 910 may be a processor or a security area (e.g., trust zone) within a processor. The MST data transmission unit 910 may be a separate security module (e.g., eSE or universal integrated circuit card (UICC)) within an electronic device. The MST data may transmit a control signal 912 for activating (e.g., enabling) the MST data transmission unit 910 for a required time, together with a pulse signal 911. The MST data transmission unit 910 may transmit differential type data having different phases. The MST data transmission unit may transmit data (D+/D-) having different phases to their own paths, respectively. The MST data transmission unit 910 may sequentially transmit data of tracks 1, 2, and 3 included in a magnetic card according to a temporal order or alternatively transmit the data in an interleaved order.

According to an embodiment of the present disclosure, the data reception module 921 may recognize the low/high state of the transferred pulse signal as data (e.g., 0 or 1 bit). Otherwise, the data reception module 921 may check the number of transition times between low and high states during a predetermined time and recognize the number of times as data. For example, if the number of transition times is one, the data reception module 921 may recognize the number of times as a 0 bit. If the number of transition times is two, the data reception module 921 may recognize the number of times as a 1 bit. Further, in the case of transmitting differential type data, the data reception module 921 may recognize the case where D+ is high and D-is low as a 1 bit, and may recognize the opposite case as a 0 bit.

The output conversion module 922 may include a circuit for converting data recognized by the data reception module 921 into necessary types in order to transfer the data to the MST module 930. The output conversion module 922 may include a first switch S1, a second switch S2, a third switch S3, and a fourth switch S4. The first switch S1 and the fourth switch S4 may have the same control state, and the second switch S2 and the third switch S3 may have the same control state. According to the control state of the switches S1-S4, the direction of the voltage supplied to the opposite ends of the coil antenna 931 L may be changed. For example, in the case of a 0 bit, the first switch S1 and the fourth switch S4 may be turned on while the second switch S2 and the third switch S3 are turned off. Otherwise, the switches may be operated to the contrary. The output conversion module 922 may change the direction of voltage (e.g., direction of an electrical current) supplied to opposite ends of a coil antenna 931 L in accordance with the data recognized by the data reception module 921, to change the direction of the magnetic field transferred through the coil antenna 931 L to an external device (e.g., a POS device). This may have a form similar to that of a magnetic field generated if a magnetic card is swiped through a card reader of a POS device. The switches S1, S2, S3, or S4 may include an N type metal oxide semiconductor field effect transistor (MOSFET), a P type MOSFET, and a relay.

According to an embodiment of the present disclosure, the MST module 930 may include a coil antenna 931 L. The MST module 930 may further include an inductor, a capacitor, and a resistor. The MST module 930 may further include an amplifier for amplifying a signal. The coil antenna 931 L may commonly use an NFC or wireless charging coil antenna. The coil antenna 931 L may include a plurality of coil antennas.

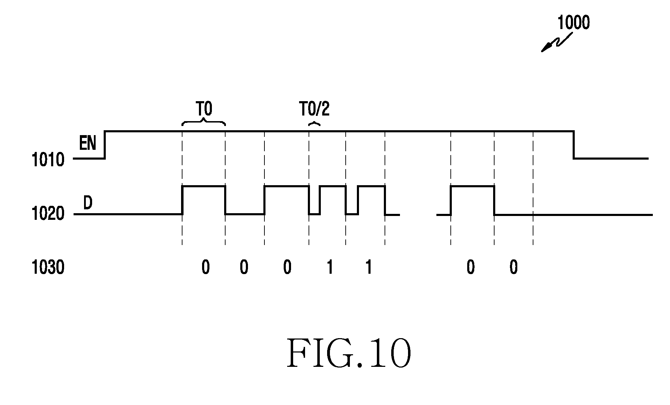

FIG. 10 is a diagram of MST data received by a data reception module according to an embodiment of the present disclosure.

Referring to FIG. 10, if receiving a control signal 1020 for enabling the MST module 910 for a required time together with a data pulse signal 1020, the data reception module 921 may identify the state transition (Low/High) of the data pulse signal 1020 during a particular cycle T0.

According to an embodiment of the present disclosure, if the Low/High state transition during T0 is one, the data reception module may recognize it as a 0 bit. Further, if the Low/High state transition during T0 is two, the data reception module may recognize it as a 1 bit. T0 may be 120 µs to 600 µs.

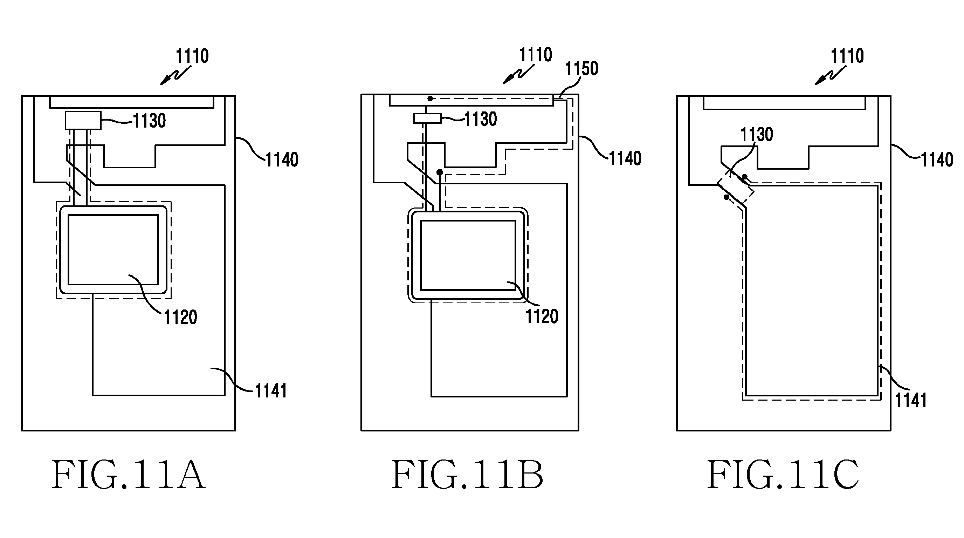

FIGs. 11A to 11C are illustrations of configurations of an electronic device 1110 including a coil antenna according to an embodiment of the present disclosure.

FIG. 11A illustrates a flexible printed circuit board (FPCB) antenna 1120 implementing conductive patterns on an FPCB. The FPCB antenna 1120 may be connected to an MST control module 1130 of the electronic device 1110. According to an embodiment of the present disclosure, a signal transmitted from the MST control module 1130 may form a current path (dotted line) through the patterns included in the FPCB. The FPCB antenna 1120 may be located at an opening 1141 formed through at least a part of a housing 1140 including a conductive material. The FPCB antenna 1120 may further include a loop antenna for NFC and wireless charging, in addition to the coil antenna for MST.

FIG. 11B illustrates a coil antenna using at least a part of a mechanical part of a terminal and the FPCB antenna 1120. According to an embodiment of the present disclosure, a signal transmitted from the MST control module 1130 may form a current path (dotted line) through a part of the housing 1140 including a conductive material (e.g., metal) and patterns included in the FPCB antenna 1120. Further, at least a part of the housing 1140 is separated (e.g., is not electrically connected), but can be electrically connected through a connection element 1150. The connection element 1150 may be a passive element, such as an inductor or a capacitor, or a structure including a conductive material.

FIG. 11C illustrates a coil antenna using at least a part of a housing 1140 of an electronic device. According to an embodiment of the present disclosure, a signal transmitted from the MST control module 1130 may form a current path (dotted line) through a part of the housing 1140 including a conductive material (e.g., metal). The at least a part of the housing 1140 may include a slit or an opening 1141 in order to secure an inductance or the length of the antenna. An electrical current path is formed at a surrounding part (e.g., an edge area) of the slit to enable at least a part of the mechanical part of the electronic device to operate as a loop antenna.

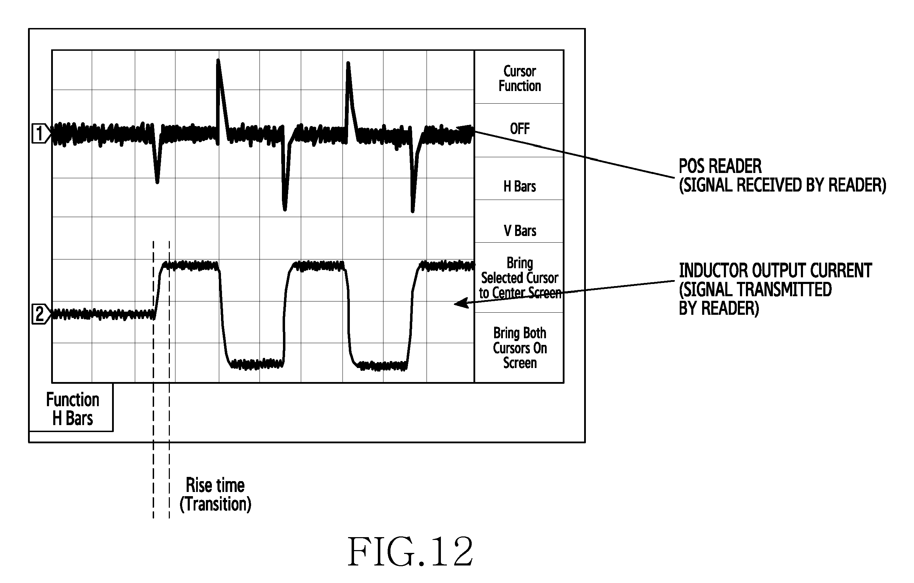

FIG. 12 is a chart of an output signal of an MST module and a reception signal of an external device reader according to an embodiment of the present disclosure.

Referring to FIG. 12, a pulse signal output from an MST module may have a rise time (e.g., a time required for a state transition of a pulse signal from low to high) due to the influence (e.g., an inductance value of a coil antenna) of the MST module. The rise time may be adjusted in order to raise a recognition rate of a reader of an external device. For example, the MST module may include a separate filter configured by at least one of an inductor, a resistor, and a capacitor. For example, an inductance value of the coil antenna may be adjusted.

FIG.is an exploded view of an electronic device 1300 including a PCB type MST coil antenna according to an embodiment of the present disclosure.

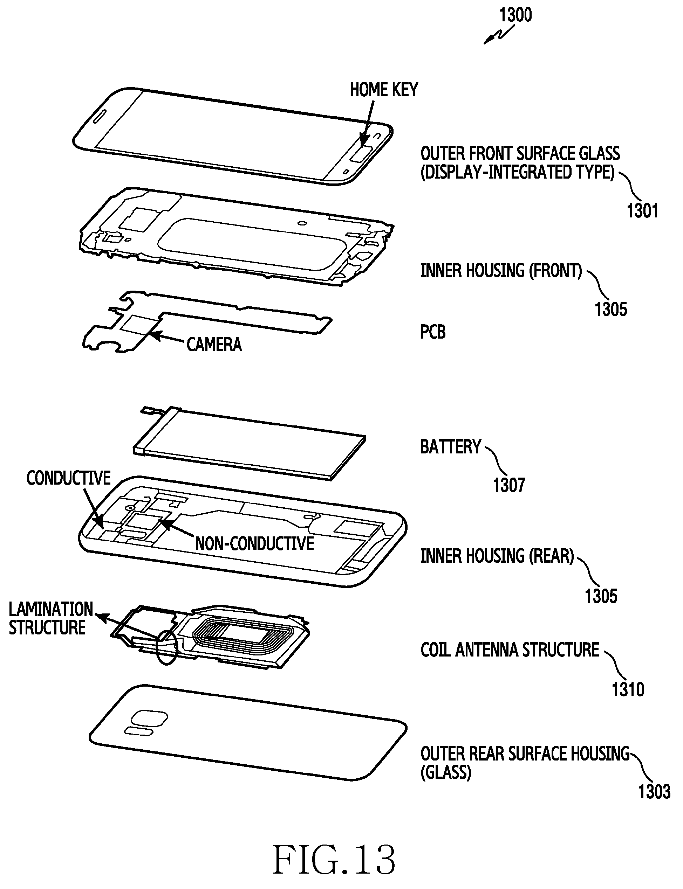

Referring to FIG. 13, one FPCB antenna 1310 may include a plurality of coil antennas for a short range communication. For example, one FPCB antenna 1310 may include an NFC, an MST, or a wireless charging loop antenna. In the case of a terminal 1300, both the front 1301 and rear surface 1303 are made from glass, and the FPCB antenna 1310 may be located between the rear surface 1303 glass and the rear surface of an inner housing 1305 of the electronic device 1300 (e.g. terminal). At least a part of the inner housing 1305 may include a non-conductive material (e.g., plastic injection-molded material). At least a part of the rear surface of the inner housing 1305 may include an opening portion. The FPCB antenna 1310 may be located at the opening portion of the rear surface of the housing 1305. At least a part of the FPCB antenna 1310 may overlap a battery 1307 within the terminal 1300. The FPCB antenna 1310 may further include a radiation sheet (e.g., graphite sheet) and a shielding agent (e.g., ferrite).

According to an embodiment of the present disclosure, a fingerprint sensor for the authentication of a user or card for payment may be included in a home key at the front surface, a key at the side surface, or a separate key at the rear surface of the terminal 1300. Further, the fingerprint sensor may be included in at least a part of a display panel. An approximate position of the MST antenna among the loop antennas is displayed through a display to notify a user of a location for good recognition.

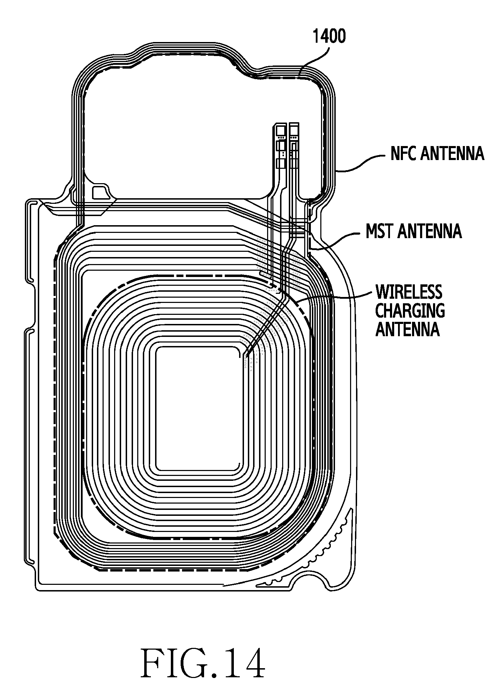

FIG. 14 is a diagram of a coil antenna 1400 of an electronic device according to an embodiment of the present disclosure.

Referring to FIG. 14, the coil antenna 1400 may include 8 to 10 turns. The inductance of the coil antenna 1400 for MST may have a value of, for example, 10 to 20 µH. An antenna for NFC may have an inductance less than 1 µH. The inductance of an inductive wireless charging coil antenna may have a value of, for example, 5 to 10 µH. The inductive wireless charging coil antenna and the coil antenna 1400 for MST may have more turns than the coil antenna for NFC.

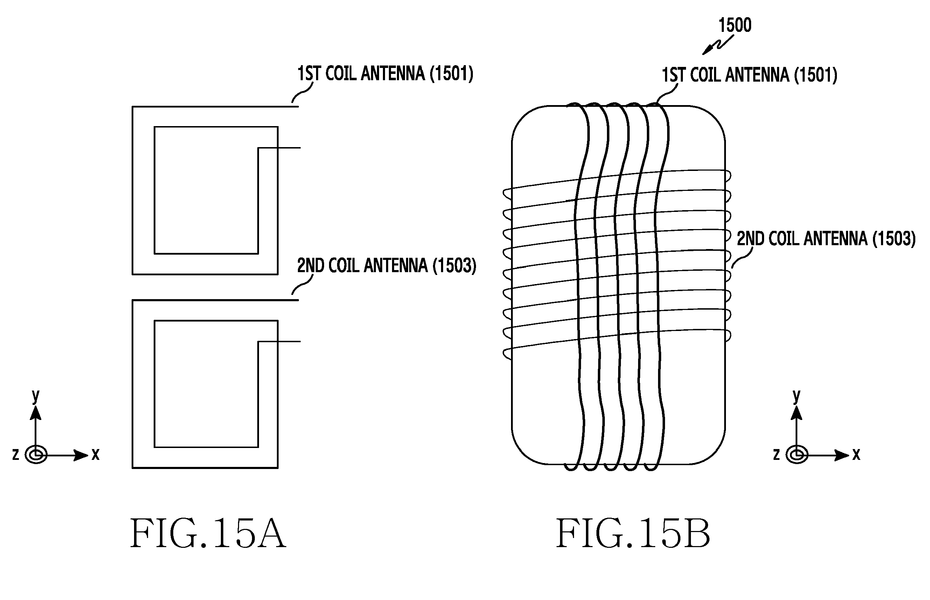

FIGs. 15A and 15B are diagrams of coil antennas and an electronic device including a plurality of coil antennas according to an embodiment of the present disclosure.

Referring to FIG. 15A, a plurality of coil antennas 1501 and 1503 may include different coil antennas on the same plane (z-axis). According to one embodiment, the loop antenna for MST may be manufactured in various forms in order to improve the recognition of a magnetic field transferred to an external device (e.g., a POS device). For example, the antennas 1501 and 1503 may have a shape of the number "8" or the letter "B." The antennas 1501 and 1503 may have a shape which, if an electronic device has approached an electronic device (e.g., a POS device), can form as many current paths as possible in a direction perpendicularly intersecting the direction in which a magnetic card is swiped through the external device (e.g., a POS device).

Referring to FIG. 15B, the coil antennas 1501 and 1503 may be formed on different planes on the basis of different axes. The loop antennas for MST may form loops centered on different axes. For example, the first coil antenna 1501 may form a loop centered on the x-axis, and the second coil antenna 1503 may form a loop centered on the y-axis. A shielding member may be disposed between the first coil antenna 1501 and the second coil antenna 1503 in order to remove interference to each other.

According to an embodiment of the present disclosure, the first coil antenna 1501 or the second coil antenna 1503 may be an FPCB antenna. A loop in the form of a lamination may be formed by connecting patterns to an FPCB configured by a plurality of layers. The first coil antenna 1501 or second coil antenna 1503 may be formed in a diagonal direction, without being limited thereto.

According to an embodiment of the present disclosure, the first coil antenna 1501 or the second coil antenna 1503 may form a loop in the form of surrounding at least a part of the housing of the electronic device. One part of the coil antenna may be located under a display at the front part of the terminal and another part of the coil antenna may be located under a rear cover of the terminal. The coil antenna may have a form of an FPCB or may use at least a part of the external appearance of the terminal.

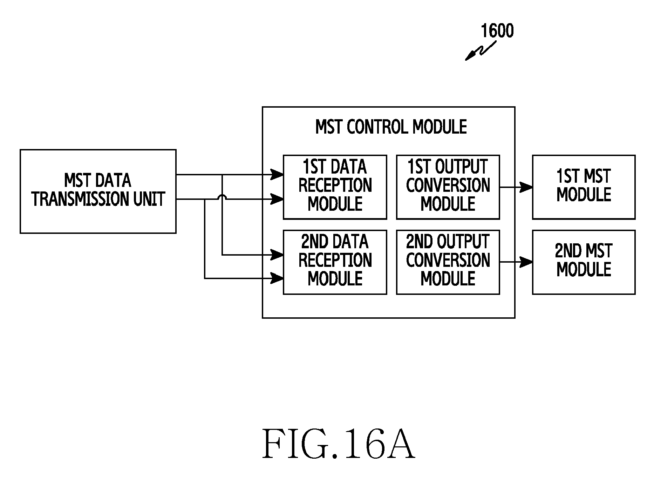

FIGs. 16A to 16C are block diagrams of an interior 1600 of an electronic device including a plurality of MST modules according to an embodiment of the present disclosure.

Referring to FIG. 16A, the first MST module and the second MST module may transmit the same data to an external device. The first MST module and the second MST module may be different types of coil antennas. The first MST module and the second MST module may be spaced apart from each other. The voltage and electrical current transferred to the first MST module and the second MST module may be at different levels.

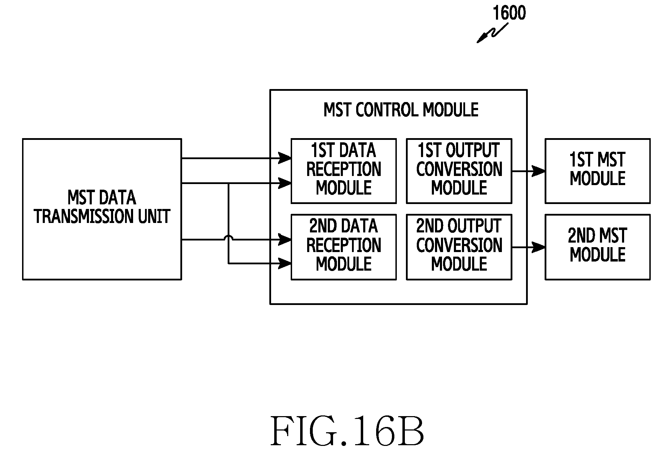

Referring to FIG. 16B, according to an embodiment of the present disclosure, if there is a plurality of MST modules, a first data reception module and a second data reception module within the MST control module may receive at least one identical signal from an MST data transmission unit.

The MST data transmission unit may transmit the same pulse signal (including payment information) to the first data reception module and the second data reception module and may transfer different control signals for activating respective output units to the first data reception module and the second data reception module so as to independently control the first MST module and the second MST module. The first MST module and the second MST module may be sequentially activated on the basis of the control signals. The first MST module and the second MST module may be alternately activated to transmit signals to an external device (e.g. a POS device). The first MST module and the second MST module may be simultaneously activated. The first MST module and the second MST module may be selectively activated according to the state of the electronic device. For example, if a short-range wireless communication (e.g. NFC) is activated in an electronic device using a coil antenna adjacent to the first MST module or a cellular network communication is activated using an adjacent antenna, the MST data transmission unit may transmit an MST signal by activating the second MST module. For example, if a signal transmitted by activating at least one module among the first MST module and the second MST module is not recognized well and a user is thus trying to recognize it again by moving the electronic device (that is, if tagging repeatedly occurs), it may be recognized by a sensor and the first MST module and the second MST module may be simultaneously activated. For example, if the electronic device is in a portrait mode and the second MST module is in a landscape mode, the first MST module may be activated.

According to an embodiment of the present disclosure, the MST data transmission unit may transmit the same control signal for activating the first MST module and the second MST module to the first data reception module and the second data reception module, and may transmit different pulse signals (including payment information) to the first data reception module and the second data reception module. For example, the MST data transmission unit may transfer information of track 1 and track 2 to the first data reception module and the second data reception module, respectively.

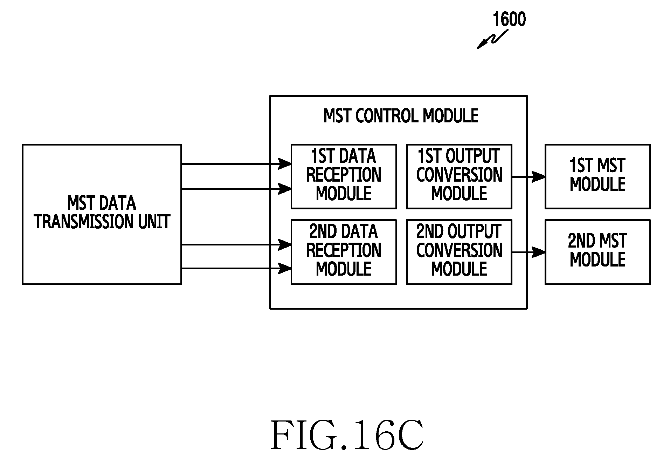

Referring to FIG. 16C, if there is a plurality of MST modules, a first data reception module and a second data reception module within the MST control module may receive different signals from the MST data transmission unit. The first data reception module and the second data reception module may receive different control signals in order to independently control the first MST module and the second MST module, and may receive different pulse signals (including payment information).

The first MST module and the second MST module may be sequentially activated on the basis of the control signals. The first MST module and the second MST module may be alternately activated to transmit signals to an external device (e.g. a POS device). The first MST module and the second MST module may be simultaneously activated. The first MST module and the second MST module may be selectively activated according to the state of the electronic device. For example, if a short-range wireless communication (e.g. NFC) is activated in an electronic device using a coil antenna (or antenna) adjacent to the first MST module or a cellular network wireless communication is activated using an adjacent antenna, the MST data transmission unit may transmit an MST signal by activating the second MST module. For example, if a signal transmitted by activating at least one module among the first MST module and the second MST module is not recognized well and a user is thus trying to recognize it again by moving the electronic device (if tagging is repeatedly performed), it may be recognized by a sensor and the first MST module and the second MST module may be simultaneously activated. For example, if the electronic device is in a portrait mode and the second MST module is in a landscape mode, the first MST module may be activated.

According to an embodiment of the present disclosure, the MST data transmission unit may transmit the same control signal for activating the first MST module and the second MST module to the first data reception module and the second data reception module, and may transmit different pulse signals (including payment information) to the first data reception module and the second data reception module. For example, the MST data transmission unit may transfer information of track 1 and track 2 to the first data reception module and the second data reception module, respectively.

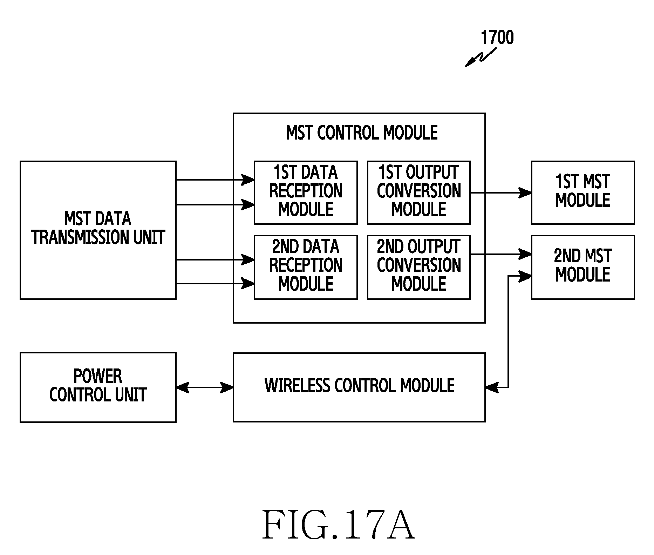

FIGs. 17A to 17C are block diagrams of an interior of an electronic device capable of commonly using at least one module among a plurality of MST modules with another short-range communication network device according to an embodiment of the present disclosure.

Referring to FIG. 17A, the MST control module may include a switching unit to prevent the second MST module to be connected with the MST control module (to be in an open state) if the second MST module is connected with a wireless charging driver and thus operates as a wireless charging module (e.g., a wireless charging coil antenna). The wireless charging drive may include an alternating current/direct current (AC/DC) converter or a rectifying unit. A power control unit may include a power management module 295 included in the terminal. According to according to an embodiment of the present disclosure, the MST module may include a coil antenna having an inductance value of about 10 µH.

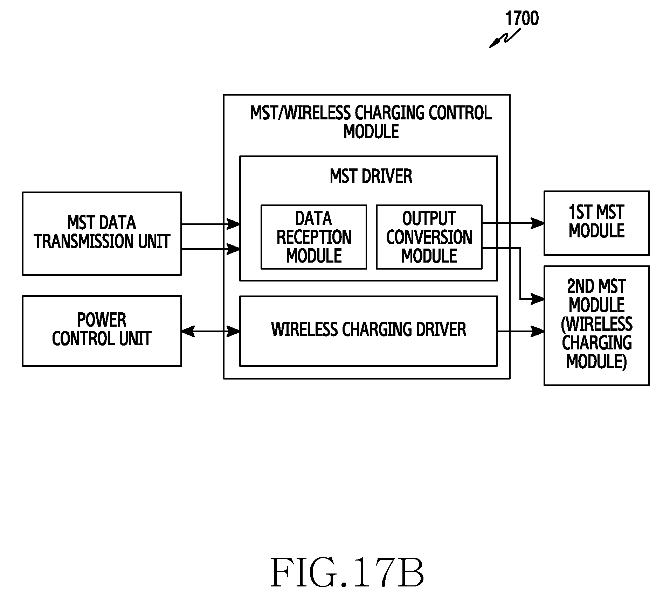

Referring to FIG. 17B, the electronic device 1700 may use at least one MST module among a plurality of MST output units as a resonance type wireless charging coil antenna. The MST/wireless charging control module may include an MST data reception module, an MST output conversion module, or a wireless charging driver.

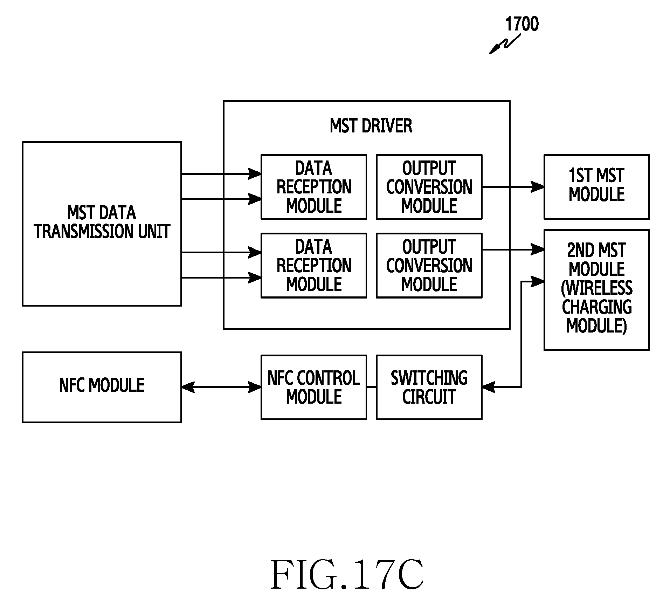

Referring to FIG. 17C, the electronic device 1700 may use at least one MST module among a plurality of MST output units as an NFC coil antenna. If the second MST module is used as an NFC coil antenna, the electronic device 1700 may further include a switching circuit in order to adjust the inductance value or the number of turns of the coil antenna.

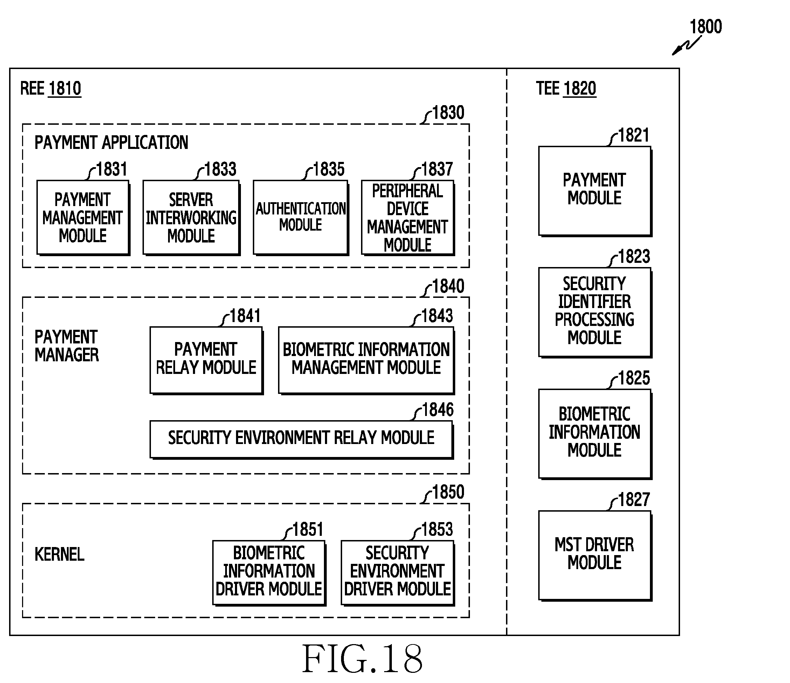

FIG. 18 is a block diagram of program modules to be executed in an execution environment 1800 of an electronic device (e.g., the electronic device 101 of FIG. 1) capable of performing a payment function according to an embodiment of the present disclosure.

Referring to FIG. 18, the execution environment 1800 may include, for example, an REE 1810 and a TEE 1820.

According to an embodiment of the present disclosure, the REE 1810 may include, for example, a payment application 1830 (e.g., a payment application 385 of FIG. 3), a payment manager 1840 (e.g., a payment manager 354 of FIG. 3), and a kernel 1850 (e.g., a kernel 320 of FIG. 3). The payment application 1830 may include, for example, a payment management module 1831, a server inter-working module 1833, an authentication module 1835, and a peripheral device management module 1837.

According to an embodiment of the present disclosure, the payment management module 1831 may perform operations for card registration, card authentication, card de-registration, and payment. The payment management module may register a user's card. The electronic device (e.g., the electronic device 101 of FIG. 1) may receive a card registration request from a user. The electronic device may acquire a card image, using a camera module. The payment management module 1831 may acquire a card image through an OCR module. The payment management module 1831 may receive a user's input of information (e.g., a secret code, a home address, an e-mail address, a phone number, or an account ID) associated with the card information or acquire the information from the payment server 720.

According to an embodiment of the present disclosure, the payment management module 1831 may display a registered card to a user through the display 160. The user may revise at least a part of the information (e.g., a card name, a home address, a phone number, the number of times of payment trials, or information on whether payment notification information has been received or not) of the registered card. The payment management module 1831 may display transaction details of each card. The payment management module 1831 may display the registered card information in a wearable device (e.g., a smart watch) functionally connected to the electronic device.

According to according to an embodiment of the present disclosure, the payment management module 1831 may perform a payment operation using a registered card. The user may select one card among a plurality of registered cards. The user may take the electronic device to a POS device 740. The payment management module 1831 may display product information (e.g., a price) received from the POS device 740 through the display 160. The payment management module 1831 may perform user authentication (e.g., fingerprint authentication) through the authentication module 1835 for payment. If the authentication has been completed, the payment management module 1831 may display notification information reporting the completion of payment through the display 160.

According to an embodiment of the present disclosure, the electronic device 101 or electronic device 710 may transmit payment information to the POS device, using at least one module among the MST module and the NFC module. In order to raise the recognition rate, the electronic device may transmit the payment information to the POS device, simultaneously using the MST module and the NFC module. Otherwise, the electronic device may use the MST module in transmission and may use the NFC module in the transmission if the payment has failed. A method of recognizing a case wherein the payment has failed may include the reception of a notification from a POS device or a 3^{rd} party (e.g., financial institution) or lapse of a predetermined time. Various embodiments of the present disclosure are not limited to the sequence described above, but allow an opposite sequence.

According to an embodiment of the present disclosure, an electronic device may receive a request for the removal of at least one card among already registered cards from a user. The payment management module 1831 may delete information corresponding to the at least one card from the memory 130. The payment management module 1831 may request the payment server 720 to delete the information corresponding to the at least one card.

According to embodiment of the present disclosure, the payment management module 1831 may check whether the owner of the card is identical to the user performing the card registration. The payment management module 1831 may include, for example, an ID&V module. The payment management module 1831 perform user authentication through text messages, e-mail, acceptable risk safeguards (ARS), or phone call. Further, the authentication may be performed through an application issued by a card company or bank. The card registered through the payment management module 1831 may be used after being authenticated.

According to an embodiment of the present disclosure, the payment management module 1831 may include an OCR module. The OCR module may acquire, through a scanner, an image of a letter written by a human or printed by a machine and convert the image to a machine-readable letter. The electronic device may acquire an image of a card possessed by a user through a camera module. The OCR module may convert an image, a letter, or a number written on a card, obtained from a card image, to a machine-readable letter. The OCR module may acquire card information (e.g., card number, user name, or valid period) of the user from converted letters. The electronic device may acquire the card information of the user through the OCR module and perform a card registration process.

According to according to an embodiment of the present disclosure, the payment management module 1831 may display a bar code generated for payment through the display 160. For example, the payment management module 1831 may receive, from the POS device 740, a command indicating generation of a bar code for payment through a bar code reader. The payment management module 1831 may generate a bar code based on the command.

According to an embodiment of the present disclosure, the server interworking module 1833 may receive a payment-related message, a device-related message, or a service-related message from the payment server 720 or the token service provider 730. The server interworking 1833 may transfer the message to the payment management module 1831.

According to an embodiment of the present disclosure, the server interworking module 1833 may include, for example, a push management module and an account management module. For example, a message received from the payment server 720 may be processed by the push management module if the message is in the form of a push notification associated with a token, and may be processed by the account management module if the message relates to account-related information (e.g., Samsung account).

According to an embodiment of the present disclosure, the push management module may calculate or handle the push notification or push message information received from the payment server 720. The push message may be transferred to the server interworking module 1833 within the payment application 1830 through the payment relay module 1841 within the payment manager 1840 or 354 or directly transferred to the payment application 1830. At least some messages among transferred push messages may be transferred to the payment management module 1831 to update card-related information and be synchronized with the payment server 720.

According to an embodiment of the present disclosure, the payment server 720 may include an account server for managing account-related information or a token requester server for providing payment-related information. The account server and the token requester server may be implemented as separate devices (e.g., the server 106) or may be included in a single device.

According to an embodiment of the present disclosure, the message information received by the push management module may include token and payment related information, such as authority configuration (e.g., token provisioning), suspension (e.g., token suspension), disposal (e.g., token disposal), state change (e.g., token status change), additional issuance (e.g., token replenishment), and payment identification (e.g., transaction notification), as shown in Table 1 below.

The messages transmitted/received by the account management module may include at least a part of electronic device-related information, a lost electronic device identification function (e.g., lost device, find my mobile device), remote blocking (e.g., remote lock/unlock), membership management (e.g., loyalty/membership cards), and a web-linked function (e.g., website portal-on-line).

**Table 1**

| Push management | Use case | Details |
|---|---|---|
| Token | **Token provisioning with ID & V** | Card information for identification or verification is sent down for installation and authentication of a token from an external server to a push management module within an electronic device. |
| | **Token suspension** | Transferred, for interruption of use of a token, from an external server to a push management module within an electronic device. |
| | Token resume | Transferred from an external server to a push management module within an electronic device for restart of use of a token. |
| | Token disposal | Transferred from an external server to a push management module within an electronic device for removal of a token. |
| | Token status change | Transferred from an external server to a push management module within an electronic device |
| | | for card state change. |
| | Token Replenishment | Transferred from an external server to a push management module within an electronic device for additional issuance of a token. |
| | Transaction Notification | Token payment details are transferred from an external server (payment server) to a push management module within an electronic device. |
| Device | Lost Device (Find my mobile) | Transfer of loss history information between an external server (service server) and an account management module within an electronic device. |
| | Remote lock /unlock | Transfer of a remote device blocking command between an external server (service server) and an account management module within an electronic device. |
| | Loyalty/Membershi p cards | Transfer of membership information between an external server (service server) and an account management module within an electronic device. |
| | Website (online) | Support of a web-linked function between an external server (service server) and an account management module within an electronic device. |

According to an embodiment of the present disclosure, if token provisioning ID&V information acquired by the payment management module is successfully transferred to an external server through the payment server 720 and the transferred token-related information is valid, the server interworking module 1833 may receive, for example, a "push token {id} status changed" message and transfer the received message to the payment management module 1831.

According to an embodiment of the present disclosure, in regard to card information temporal suspension information acquired by the payment management module 1831 of an electronic device, a use stop command of the payment server 720 may be transferred to the payment application 1830 to switch the card configuration state for mobile payment from the active state to the inactive state.

According to an embodiment of the present disclosure, if the electronic device is lost, the payment server 720 may delete or temporarily stop all token information stored in the payment server 720. In order to synchronize this with the payment application 1830, a push message may be transmitted. The payment server 720 may transfer the push message to the payment application 1830 through the payment relay module 1841 or the server interworking module (e.g. push management module or account management module) 1833.

Referring to Table 2 below, showing contents of push APIs supported by an electronic device and the payment relay module 1831, the APIs may be distinguishably and separately implemented according to the payment relay module 1841.

**Table 2**

| API | Description | type | validation |
|---|---|---|---|
| device.push | Contains push platform | Json | required |
| device.push.spp.id | Samsung push ID | String | required |
| device.push.gcm.id | Google push ID | String | optional |

According to an embodiment of the present disclosure, the account management module may manage, in the payment application 1830, information including a user-specific identifier (e.g., Samsung account ID or device ID), card, or membership which the module exchanges with the payment server 720. The user identifier may include an account, which a user has joined in order to manage cards (e.g., VISA® or MasterCard®) of various business providers, a portal account associated with an electronic device, or a unique identifier (e.g., model name, message authentication code (MAC) address, international mobile equipment identity (IMEI), serial number, universal unique identifier (UUID), or ID) of an electronic device. In addition, the unique identifier may have a value which has been generated by and transferred from the account server 720 through the account.

The account management module may manage registration, addition, deletion, repeated registration, use suspension, or use restart of a card, using the account of the user or the identifier of the electronic device. Moreover, in the case of transmitting (importing/exporting) between an electronic device and a wearable device also, registration, addition, deletion, repeated registration, use suspension, or use restart of a card may be managed based on the generated account or electronic device identifier.

In this case, a management method based on an account may manage a plurality of electronic devices or a plurality of users sharing one account to use a unique account (e.g., a Samsung account) for each electronic device or synthetically manage a plurality of electronic devices by one account.

According to an embodiment of the present disclosure, information of a first card (e.g., VISA®) and a second card (e.g., MasterCard®) generated through an OCR module of the payment management module 1831 may be used to register the cards on the basis of an account (e.g., registration02@samsung.com) generated at the time of opening a Samsung account. The registered information may be synchronized based on the generated account and the payment server 720.

According to an embodiment of the present disclosure, membership information generated through a bar code interface may be used to register the first card (e.g., a Samsung point card) and the second card (e.g., a CJ membership point card) on the basis of an account (e.g., registration01@samsung.com) generated at the time of opening a Samsung account. The registered information may be synchronized based on the generated account and the payment server 720.

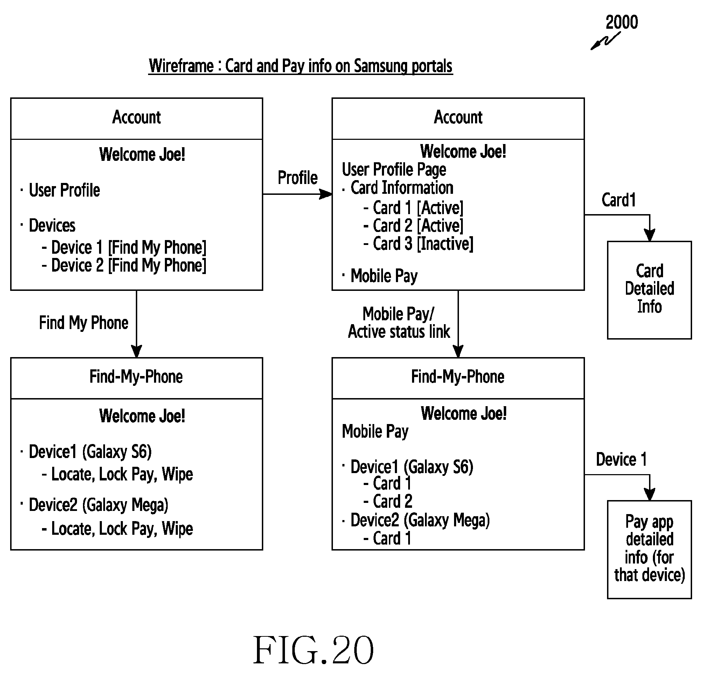

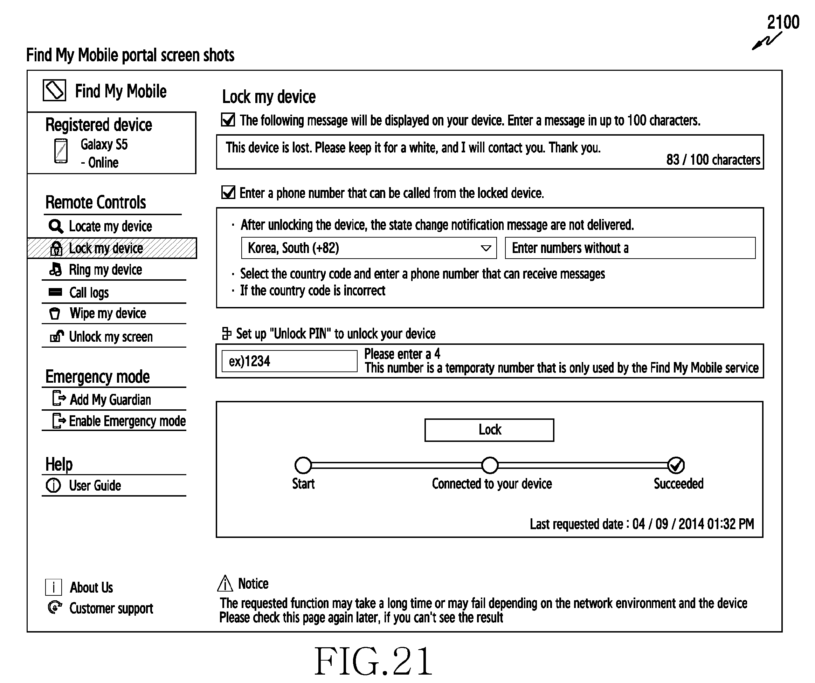

Further, a user may determine the active/inactive states of a card on the basis of an account after logging-in through a payment application 1830 and transferring the determination to the payment server 710 using the account management module 1831, and, in contrast, may change the management of the card state based on an account in a server management web page (e.g., a server portal). A more detailed description thereof is given below with reference to FIGs. 20 and 21.

Further, the account management module may manage, while interworking with the server, the card information (e.g., VISA@ card ID&V) and membership information (e.g., membership points, registraion001@Cj.com) associated with a service account (e.g., registration01@samsung.com). The membership information may be automatically linked, at the time of card payment, to payment processing information (e.g., a payment amount) and membership accumulation information (e.g., points or mileage) to automatically accumulate or subtract the points or mileage.

If an application including an account management module is installed, the configuration state of a part or all of an existing registered card may be continuously linked and used only one time after an account login (or sign-in) process of a user in any device. Further, membership information having a relatively low authentication security level may be registered and linked based on an account of a user to reduce additional authentication processes.

According to an embodiment of the present disclosure, the authentication module 1835 may display a user interface (UI) for authentication of a user or a card for payment through the display 160. The authentication module may include, for example, a biometric information module.

According to an embodiment of the present disclosure, the biometric information module may acquire biometric information of a user. The biometric information of a user may include, for example, information of, a fingerprint, an iris, a face image, a voice, a cardiac impulse, or a blood pressure. The electronic device may acquire biometric information of a user through a sensor module. For example, the electronic device may acquire fingerprint information of a user through a fingerprint sensor. In addition, the electronic device may acquire iris information of a user through a camera module. The biometric information module may display a UI for acquiring biometric information of a user through the display 160.

According to an embodiment of the present disclosure, if a user tries to make a payment using card information registered in an electronic device, the biometric information module may perform an authentication in order to acquire security data (e.g., a token) from a security memory (e.g., an eSE or memory accessible in a secure environment) functionally connected to the electronic device. The electronic device may acquire biometric information (e.g., a fingerprint or an image of an iris) of the user through the biometric information module for user authentication. The acquired biometric information may be transferred to the biometric information management module 1843 of the payment manager 1840. According to an embodiment of the present disclosure, the security memory may be a memory including data stored by an encryption key.

According to an embodiment of the present disclosure, the biometric information module 1843 may proceed with a payment, using card information and biometric information registered in the electronic device, if the user proceeds with electronic payment on an Internet web page. In order to acquire security data (e.g., a token) from a memory or a security module (e.g., an eSE or a memory accessible in a secure environment) functionally connected to the electronic device, the user may perform an authentication. If user authentication has successfully progressed in an electronic device, the electronic device is linked to an external server to enable fast automatic authentication (e.g., fast identity online (FIDO)) without electronic payment on a separate Internet web page. That is, instead of an authentication process required at the time of an on-line payment, a fast authentication may be performed by linking to the biometric information module.

According to an embodiment of the present disclosure, the electronic device may previously assign a fingerprint of a user to a card to be used for payment. For example, if a user performs authentication using a fingerprint in a payment application 1830, the user may assign his or her right hand thumb to a VISA@ credit card and his or her right hand index finger to a MasterCard® credit card, so that payment through a corresponding card can be achieved as soon as the user performs authentication using a corresponding finger or thumb.

According to an embodiment of the present disclosure, the peripheral device management module 1837 may manage an external device functionally connected to an electronic device. The peripheral device management module 1837 may include, for example, an MST peripheral device module and a wearable device module.

According to an embodiment of the present disclosure, the MST peripheral device module may output information on whether an MST accessory (e.g., a fob type device of LoopPay Inc.) and the electronic device are wirelessly or wiredly connected or not, and may provide a UI for a user on the basis thereof. The UI may process and output card registration or deletion, or payment in a state where the MST accessory has been connected thereto. The MST peripheral device module may store various card information necessary for payment in the electronic device or a separate memory within the MST accessory, in a state where it is connected to the MST accessory. As a result, the electronic device or MST accessory may independently process a payment in a state where the MST accessory is not connected.

The wearable device module may output information on whether a wearable device (e.g., a watch, a headset, glasses, or a ring) and the electronic device are wirelessly or wiredly connected or not, and may provide a UI for a user on the basis thereof. The wired or wireless connection may include various interfaces, such as BT, BT low energy (BLE), WiFi, Zigbee, or Z-wave, and may be implemented by applying a particular accessory protocol (e.g., Samsung Accessory Protocol (SAP)). The UI may process and output card registration or deletion, or payment in a state where the wearable device has been connected thereto. In the process of card registration, deletion, or payment, the wearable device module may output information on whether to generate a secure session with the wearable device, and transmit or receive and display a user input value on the electronic device or wearable device. The input of the user may include various card information required for payment and other additional authentication information (e.g., PIN, user-specific pattern-related data, fingerprint recognition-related data, a touch input value of the display 160 or wearable device bezel unit).

According to an embodiment of the present disclosure, the electronic device may share one piece of payment information with the wearable device or accessory. For example, information on one VISA® credit card may be stored in both the wearable device and the electronic device. According to an embodiment of the present disclosure, the electronic device may store different pieces of card information generated from one piece of card information in the wearable device and the accessory, respectively. For example, among different tokens issued from one piece of VISA® credit card information, one token may be stored in the electronic device while the other token is stored in the accessory or wearable device. According to an embodiment of the present disclosure, if a different token issued from one piece of card information is stored in the electronic device while the other token is stored in the accessory or wearable device, if a payment module of one device is activated, a payment module of the other device may be deactivated. For example, among different tokens issued from one piece of VISA® credit card information, if one token is stored in the electronic device while the other token is stored in the accessory or wearable device, payment of the electronic device may be deactivated if the payment is performed by the wearable device. In addition, if the payment is performed by the electronic device, payment by the wearable device may be deactivated.

According to an embodiment of the present disclosure, the payment manager 1840 may include, for example, the payment relay module 1841, a biometric information management module 1843, and a security environment relay module 1846. The payment relay module 1841 may relay a card or information (e.g., token) corresponding to the card to the payment application 1830, kernel, or payment server 710. The payment relay module 1841 may perform off-line payment through a communication module (e.g., an NFC module or an MST module). A payment method using the NFC may be operated through a POS device, and a payment method using the MST may be operated by a user input. Further, the payment relay module 1841 may perform on-line payment through a communication module (e.g., a cellular module, an RF module, or a WiFi module).

According to an embodiment of the present disclosure, the payment relay module 1841 may perform state management (e.g., card/token life cycle management) of a card or information (e.g., a token) corresponding to the card. The payment relay module 1841 may provide at least one API associated with payment to the payment application 1830.

According to an embodiment of the present disclosure, the payment relay module 1841 may further include at least one interface provided by system services associated with a payment, and system service interfaces, which provide security UIs for a payment service for access to a payment module, trustzone-based integrity measurement architecture (TIMA) for kernel integrity authentication, fingerprint recognition result inquiry (e.g., supporting both a security and a non-security mode), and PIN or PAN input. The payment relay module 1841 may include an encryption library in order to transfer a message or command to the TEE 1820. The payment relay module 1841 may send or receive a message or command with the TEE 1820 through the encryption library.

According to an embodiment of the present disclosure, the payment relay module 1841 may include a card management function which provides addition, deletion, or update of a card, as a general card management function. The payment relay module 1841 may include a first payment SDK or a second payment SDK. The first SDK (e.g., a Samsung SDK) may be embedded in an electronic device. The second SDK may be provided by a card company or bank and may be installed in an electronic device. From the first payment SDK or second SDK, the payment relay module 1841 may select a payment SDK corresponding to card information. Further, the payment relay module may set a basic card or select another card other than the basic card.

According to an embodiment of the present disclosure, the payment relay module 1841 may transmit, to the payment server 710, messages, such as token provisioning, token replenishment, token suspension, token resume, and token disposal, as a general token and key management function.

According to an embodiment of the present disclosure, the payment module 1821 may acquire a token and a token cryptogram from the electronic device or another external electronic device. A key (e.g., a limited use key (LUK) or single used key) capable of generating the token or token cryptogram may be stored in the REE 1810 or TEE 1820. Moreover, if the token and the key are stored in the REE 1810, the payment module of the TEE may encrypt and store the token and key, using the key (e.g., device root key (DRK)) of the TEE 1820. If the electronic device performs payment, the payment relay module 1841 may acquire the encrypted token in a decrypted state through the payment module. If the token or key capable of generating the token cryptogram is stored in the TEE 1820, the electronic device may store the token or key in an encrypted form, using the key of the TEE 1820.

According to an embodiment of the present disclosure, the payment relay module 1841 may receive a push message from the TSP 730 and transfer the push message to the payment application 1830.

According to an embodiment of the present disclosure, if the first payment SDK (provided by a card company or bank) provides a self-token management function, the payment relay module 1841 may further include a function of relaying a token management function request to the second payment SDK if receiving the request. For example, the payment relay module 1841 having acquired a token or key, using an SDK of VISA® credit card, may transfer the token or key to the payment module within the TEE 1820, using a Samsung SDK. According to an embodiment of the present disclosure, the payment relay module 1841 may further include, on a payment framework, a host card emulation (HCE) function which enables a virtual card to be used in an electronic device by only software without a separate hardware device (e.g., a security module or secure element (SE)) at the time of payment. The HCE function may transfer a token and a token cryptogram through a communication module (e.g., NFC), using a message standard (e.g., application protocol data unit (APDU)) associated with a POS device.

According to an embodiment of the present disclosure, the payment relay module 1841 may include a function of processing a message received from a POS device. The POS-related message processing function may include a function of managing payment data to be sent to the POS device as a response. The POS-related message analysis function may further include a function of, if the first payment SDK provides a POS-related message processing function, relaying the POS-related message to the first payment SDK. The payment relay module 1841 may include at least one database for storing the card data, token data, or transaction data.

According to an embodiment of the present disclosure, the payment relay module 1841 may select at least one method among a method using NFC and a method using MST. For example, the methods may include a method of first performing payment using NFC and then performing payment using MST, a method of first performing payment using MST and then performing payment using NFC, and a method of performing payment simultaneously using NFC and MST. In the case of first performing payment through one communication module and then performing payment through another communication module, the payment relay module may perform payment through the other communication module if there is no response to a result of payment performance from the communication module having first performed the payment or after passage of a predetermined time.

According to an embodiment of the present disclosure, in the case of having both token information and PAN information for one card, the payment relay module 1841 may use at least one of them for payment. The payment relay module may determine whether a POS device can perform payment using PAN and whether a token is available for payment. For example, the electronic device may receive payable information through BLE, and the payment relay module 1841 may identify the information. Based on the identified information, the payment relay module 1841 may perform the payment using a token if the token is available for the payment and using PAN if the PAN is available for the payment.

According to an embodiment of the present disclosure, the payment relay module 1841 may further include an SDK provided by a payment network. The SDK may further include token management, POS-related message processing, or token/card databases.

According to an embodiment of the present disclosure, the security environment relay module 1846 may further include a function enabling a payment application 1830 to access the biometric information driver module 1851 or the security environment driver module 1853 in order to use functions provided by the payment module 1821 or the biometric information module 1825. The payment relay module 1841 may include an encryption library in order to transfer a message or command to the security environment relay module 1846. The payment relay module 1841 may send or receive a message or command with the security environment relay module 1846 through the encryption library.

An embodiment of the present disclosure may further include the security environment relay module 1846 connected to enable the payment application 1830 to use functions of the security identifier processing module 1823 of the TEE 1820, in the payment manager 1840.

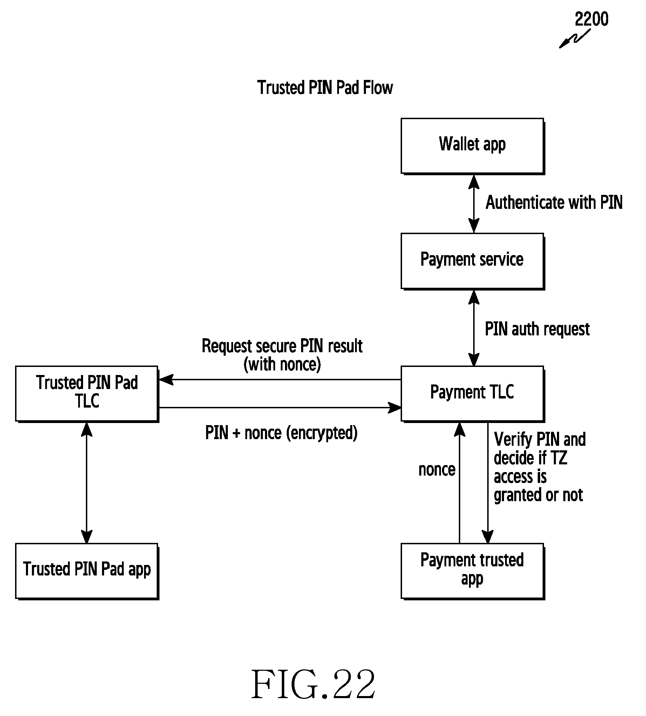

According to an embodiment of the present disclosure, the payment relay module 1841 may include a function of relaying an authentication request through a PIN input by the payment application 1830 to the security identifier processing module 1823 of the TEE 1820. The relaying function is described below in greater detail with reference to FIG. 22.

If there is a request for fingerprint recognition, a general application may acquire information on whether the recognition is a success or a failure. The security payment application may acquire a security biometric result (e.g., secure fingerprint result). The security biometric result may be encrypted by combining a disposable random number and information of success/failure. The disposable random number may be encrypted through a hardware key (e.g., a DRK) of the TEE 1820.

According to an embodiment of the present disclosure, the payment relay module 1841 may transfer a message requiring execution of payment to the payment module 1821 through the security environment driver module 1853 in order to perform payment. The payment module 1821 may notify the payment relay module 1841, through the security environment driver module 1853, that an authentication operation is necessary. The payment relay module 1841 may issue a command requiring the biometric sensor 240I to acquire biometric information through the biometric information management module 1843 and the biometric information driver module 1851. In addition, the payment relay module 1841 may transfer an authentication identification message to the biometric information module 1825 of the TEE 1820 through the biometric information management module 1843 and the security environment driver module 1853. The biometric sensor 240I may be acquired from the biometric information module 1825 of the TEE 1820. The biometric information module 1825 may identify a user's identity by comparing prestored biometric information of the user and information acquired by the biometric sensor 240I. Based on the identified information, the biometric information module 1825 may transfer success or failure of authentication to the biometric information management module 1843 through the security environment driver module 1853, and the biometric information management module 1843 may transfer the received information to the payment relay module 1841. The payment relay module 1841 and the biometric information management module 1843 may be configured to be integrated in a single construction or configured as separate modules.

According to an embodiment of the present disclosure, the payment relay module 1841 may perform an authentication through an external device. For example, the electronic device may request the payment server (e.g., a Samsung account server or token requester server) 720 to authenticate biometric information (e.g., a fingerprint or an iris). The payment server 720 may perform authentication of biometric information of a user and transfer a result of the authentication to the electronic device. If the authentication has been completed, the payment relay module 1841 may perform a token provisioning process by transferring data including information that the authentication has been completed to the token service provider. Further, according to a result of the authentication, the electronic device may perform payment if the authentication is successfully completed, or may not perform payment if the authentication fails or is not completed.

According to an embodiment of the present disclosure, the kernel 1850 may include, for example, the biometric information driver module 1851 and the security environment driver module 1853. The biometric information driver module 1851 may transfer a message transferred from the biometric information management module 1843 of the payment manager 1840 to the biometric sensor 240I. The biometric information obtained by the biometric sensor 240I may be transferred to the biometric information module 1825 within the TEE 1820 instead of being transferred to a module within the REE 1810 through the biometric information driver module 1851.

According to an embodiment of the present disclosure, the security environment driver module 1853 may perform as an interface for transfer from a module in the REE 1810 to a module in the TEE 1820. For example, in the case of the trustzone of ARM, which is an embodiment of the TEE 1810, an AP time-divisionally performs the operations of the REE 1810 and the TEE 1820, and a separate data path for transferring a message from the REE 1810 to the TEE 1820 may be implemented in hardware. In this case, a driver module for accessing the hardware may be the security environment driver module 1853. The security environment driver module 1853 may transfer a message relating to an operation of a module in the TEE 1820 to a module in the REE 1810.

According to an embodiment of the present disclosure, the TEE 1820 may include, for example, the payment module 1821, the security identifier processing module 1823, the biometric information module 1825, and an MST driver module 1827. The electronic device 701 may store data requiring a relatively high security and perform related operations in a safe environment through the TEE 1820. The TEE 1820 may operate on an AP of an electronic device, and a reliable TEE 1820 determined in the step of manufacturing an electronic device may refer to a security area within the electronic device. The electronic device may process data requiring a relatively high security based on a safe hardware structure through the TEE 1820. The TEE 1820 may enable the AP and the memory area to operate in a state of being divided into a general area and a security area. Moreover, the TEE 1820 may enable software or hardware requiring security to operate in only the security area. If the REE 1810 of an electronic device is required to perform an operation related to sensitive information, the electronic device may be allowed to access the TEE 1820 only through an API and a driver capable of accessing the TEE 1820. The TEE 1820 may hand over limited data on related information to the REE 1810. The TEE 1820 may encrypt internally stored data through a hardware key (e.g., a DRK). Without a separate decryption process, the REE 1810 may be unable to interpret data within the TEE 1820.

An application (e.g., a security application (e.g., trusted application) or payment module) within the TEE 1820 may transfer a message to another electronic device (e.g., the token service provider 730) outside of the electronic device.

According to an embodiment of the present disclosure, the TEE 1820 may include a trusted OS and a security application (e.g., trusted application). In addition, the TEE 1820 may include an encryption module related to security, a driver capable of collecting data in hardware requiring security, etc. The security application (e.g., trusted application) may include a payment module. In addition, the trusted application may transfer payment information externally through a communication module. For example, the trusted application may transfer payment information to the MST controller through the MST driver or to the NFC controller through the NFC driver to transmit the information to a POS device.

According to an embodiment of the present disclosure, the trusted application may check the integrity of the REE 1810. The electronic device may store, in the TEE 1820, information on the integrity of the REE 1810. According to a booting sequence in the case of booting an REE 1810 to support the TEE 1820, if a boot loader is executed, the TEE 1820 may be first booted and the REE 1810 is then booted. If the TEE 1820 is booted, the integrity information of the REE 1810 is identified in the TEE 1820, and the identified information may be reported to a user after booting the REE 1810. If the image of REE 1810 has been damaged due to hacking or rooting, the REE 1810 may determine that the integrity thereof is problematic. If the integrity is problematic, the REE 1810 may be prohibited from accessing the TEE 1820. For example, if the payment relay module 1841 tries to transfer a message or command to the TEE 1820 through the security environment driver module 1853, a kernel of the TEE 1820 may disregard the message or command or deny receiving the message.

According to an embodiment of the present disclosure, the payment module 1821 may be an application installed by a bank or card company (e.g., VISA® credit card or MasterCard® credit card). There may be at least one payment module. If a user accesses, in an electronic device, the payment server (e.g., a mobile application platform, a payment gateway, a token requester, a token service provider, a trusted service manager, or a bank server) 720 or the token provider 730, using the payment management module 1831, and approves to install the payment module 1821, the token service provider 730 may perform operations associated with the installation. For example, the payment management module 1831 may acquire a card number and valid term information of a card through OCR, and perform a card registration operation for installing the payment module 1821 in the server. The payment management module 1831 may connect to the token service provider 730 in the network through the payment relay module 1841 having connection information of the token service provider 730 according to each card/bank company to receive an installation file, and the payment relay module 1841 may transfer the information to the TEE 1820 to install the payment module 1821. The process described above may be called a provisioning process or card registration process. There may be a plurality of payment modules 1821 of the TEE 1820. Each payment module 1821 is unable to exchange data within the TEE 1820 and may be configured in an isolated form.

According to an embodiment of the present disclosure, the payment module 1821 may be an application to be used for data communication with the payment server 720. The payment module 1821 may include information of a credit card, a debit card, a membership card, etc. The payment module 1821 may communicate with another external electronic device through encryption. The encryption process may be different according to the card manufacturing company having transferred the payment module. The server may control the state of the payment module. For example, the server may activate, temporarily suspend, resume, or delete (dispose) the payment module 1821.

According to an embodiment of the present disclosure, the connection module 1821 may store information related to the card information. For example, the stored information may include at least one among a token, a token reference ID, a part of a PAN, a PAN product ID, a token requester ID, a token assurance level, token assurance data, a valid term of a token, an encryption key, and a value (e.g., a one time password (OTP)) provided by the token service provider 730, which corresponds to the card information (e.g., a PAN). The token may be controlled by the state of the token service provider 730. For example, the token may be activated, temporarily suspended, resumed, or deleted (e.g., disposed). The token may be static information basically corresponding to the card information (e.g., a PAN).

According to an embodiment of the present disclosure, the payment module 1821 may determine a card to be used for payment. For example, a payment module 1821 corresponding to a card selected by a user in at least one payment management module 1831 may be determined according to a user's selection. The payment management module 1831 may transfer the determined card to the payment relay module 1841. The payment relay module 1841 may transfer the determined card information to the payment module 1821 through the security environment driver module 1853. The payment module 1821 may manage a list of cards actually used in a payment among possessed cards. The list of cards actually used in a payment may be changed based on the determined card information. Changing the list of cards may include a method of raising the priority of the determined card information in the card list or a method of deleting the other card information except for the determined card information.

According to an embodiment of the present disclosure, the payment module 1821 may generate information used for a payment based on information associated with the card information when the payment is executed. The information used for the payment may include a token reference ID, a part of a PAN, a PAN product ID, a token requester ID, a token assurance level, token assurance data, a valid term of a token, a token cryptogram, a POS entry mode, a token requester indicator, etc.

**Table 3**

| Field Name | Comment |
|---|---|
| Payment Token | The payment token number refers to a surrogate value for a PAN that is a 13 to 19-digit numeric value that passes basic validation rules of an account number, including the Luhn check digit. Payment tokens are generated within a BIN range or card range that has been designated as a token BIN range and flagged accordingly in all |
| | appropriate BIN tables. Payment tokens are generated such that they will not have the same value as or conflict with a real PAN. |
| | **Transaction messages** |
| | The payment token number will be passed through the authorization, capture, clearing, and exception messages in lieu of the PAN. The payment token number may optionally be passed from the token service provider to the card issuer as part of the authorization request. |
| Token Expiry Date | The expiration date of the payment token that is generated by and maintained in the token vault. The token expiry date field carries a 4-digit numeric value that is consistent with the ISO 8583 format. |
| | **Transaction messages** |
| | The token expiry date is passed in lieu of a PAN expiry date. The value is replaced by the token service provider with the PAN expiry date which is then passed to the card issuer as part of the authorization request. |
| Last 4 Digits of PAN | The last four digits of the PAN to be provided optionally through the acquirer to the merchant for customer service usage such as being printed on the consumer receipt. |
| | |
| PAN Product ID | The last four digits of the PAN to be provided optionally through the acquirer to the merchant for customer service usage such as being printed on the consumer receipt. |
| | The PAN product ID is an optional identifier used for determining the type of card product that was tokenized. It may be included in cases where transparency of this information is necessary. |
| | **Transaction messages** |
| | The PAN product ID may optionally be passed from the token service provider to the acquirer as part of the authorization response. |
| POS Entry Mode | This specification uses the POS entry mode field to indicate the mode through which the payment token is presented for payment. Each |
| | payment network will define and publish any new POS entry mode values as part of its existing message specifications and customer notification procedures. |
| | **Transaction messages** |
| | POS entry mode is an existing field that will be passed through the authorization, capture, clearing, and exception messages. |
| Token Requestor ID | This value uniquely identifies the pairing of token requestor with the token domain. Thus, if a given token requestor needs tokens for multiple domains, it will have multiple token requestor IDs, one for each domain. It is an 11-digit numeric value assigned by the token service provider and is unique within the token vault: Positions 1-3: token service provider code, unique to each token service provider Positions 4-11: assigned by the token service provider for each requesting entity and token domain |
| | **Transaction messages** |
| | Token requestor ID can be optionally passed through the authorization, capture, clearing, and exception messages. |
| Token Assurance Level | Token assurance level is a value that allows the token service provider to indicate the confidence level of the payment token to PAN/cardholder binding. It is determined as a result of the type of ID&V performed and the entity that performed it. The token assurance level is set when issuing a payment token and may be updated if additional ID&V is performed. It is a two-digit value ranging from 00 which indicates the payment token has no ID&V that has been performed to a value of 99 indicating the highest possible assurance. The specific method to produce the value is defined by the token service provider. |
| | **Transaction messages** |
| | Token assurance level will be provided by the token service provider. |
| | The value may be optionally passed to the card issuer as part of the authorization request. |
| | The value may optionally be passed to the acquirer/merchant in the authorization response, capture, clearing, and exception processing messages. |
| Token Assurance Data | This data provided by the token service provider contains supporting information for the token assurance level. |
| | **Transaction messages** |
| | This data may be optionally passed to the card issuer as part of the authorization request. |
| Token Cryptogram | This cryptogram is uniquely generated by the token requestor to validate authorized use of the token. The cryptogram will be carried in different fields in the transaction message based on the type of transaction and associated use case: |
| | NFC contactless transactions will carry the token cryptogram in existing chip data fields. |
| | Other transactions, such as those originating from a digital wallet, may carry the token cryptogram in an existing field. Transaction messages |
| | The token cryptogram will be passed in the authorization request and validated by the token service provider and/or the card issuer. |
| Token Request Indicator | An indicator used to indicate that the message is intended to authenticate the cardholder during a payment token request. |

According to one embodiment, the payment module 1821 may receive a key (e.g., a LUK or single used key), by which a token cryptogram can be generated, through the token service provider 730 or the payment server 720 (e.g., a payment service server or a token requester server). The key may be transferred and received through a data network or an SMS.

The key may be exchanged using a security channel between the electronic device and the token service provider 730. The security channel may be a logical channel for encrypting data, which is exchanged by a separate key (e.g., a method using a public key or private key) different from the key described above. Moreover, the payment module 1821 may include a module for generating a key capable of generating a token cryptogram. The electronic device may receive the module for generating the key, through the token service provider 730 or the payment server 720. Otherwise, it may be included in the step of manufacturing the electronic device.

According to an embodiment of the present disclosure, the payment module 1821 may generate a token cryptogram, using a key (for example, a limited used key or a single used key) capable of generating the token cryptogram. The payment module 1821 may use different keys according to a predetermined rule, for example, in each transaction, in a predetermined number of times of transaction, or a transaction within a particular time. The token service provider 730 may possess a key paired with the above-described key. The token service provider 730 may decrypt the encrypted token cryptogram through the paired key.

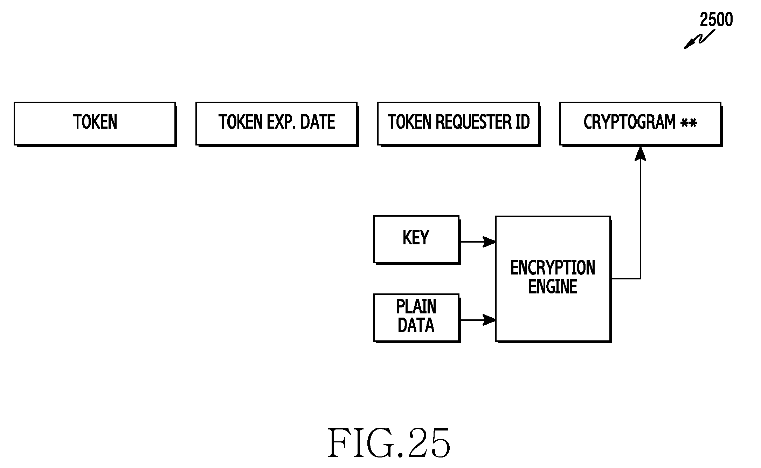

According to an embodiment of the present disclosure, the payment module 1821 may generate a token cryptogram, using a key capable of generating the token cryptogram. A more detailed description thereof is given below with reference to FIG. 25.

According to an embodiment of the present disclosure, when a payment is performed, the electronic device may transfer a message reporting that the payment application 1830 will perform the payment, to the payment relay module 1841. The payment relay module 1841 may determine whether to use MST or NFC for the payment. In the case of using MST for the payment, the payment relay module 1841 may acquire information (for example, a token, a token cryptogram, a part of PAN information, a token valid period, etc.) necessary for payment from the payment module 1821 of the TEE 1820 and transfer the information to the MST driver module 1827 in the TEE 1820. The MST driver module 1827 may transfer the information to the MST controller. The MST controller may transmit the information in order to perform the payment.

According to an embodiment of the present disclosure, when using the NFC for the payment, the electronic device may transfer the information necessary for the payment to the NFC driver module of the TEE 1820. The NFC driver module may transfer the information necessary for the payment to the NFC controller. The NFC controller may perform the payment based on the information.

According to an embodiment of the present disclosure, in the case of using the NFC for the payment, the electronic device may perform the payment when receiving a predetermined message from a POS device 750. For example, when the NFC module detects a predetermined message transferred from the POS device 750, the NFC controller may transfer the message to the NFC driver module. The NFC driver module may report to the payment relay module 1841 of the REE 1810 that the message transferred from the POS device 750 has been received. The payment relay module 1841 may generate a token cryptogram in order to perform payment. The token cryptogram may be generated in the payment module 1821 of the TEE 1820, using a key (for example, a limited used key or a single used key) capable of generating the token cryptogram. The generated token cryptogram may be transferred to the REE 1810. The payment relay module 1841 may transfer payment-related information including the token and token cryptogram through a network module (e.g., an NFC-related host card emulation module). The network module may transfer the payment-related information to the POS device 750 through the NFC module.

According to an embodiment of the present disclosure, the payment module 1821 may transfer information including the token, token valid period, token requester ID, and token cryptogram to an external electronic device. For example, the payment module 1821 may transfer the payment information to the POS device 750 through the MST communication module. In addition, the payment module 1821 may transfer the payment information to the POS device 750 through the NFC communication module.

According to an embodiment of the present disclosure, the payment module 1821 may transmit or receive predetermined information in the payment operation. In the case of NFC, the POS device 750 may first receive the information to perform the payment. In the case of MST, payment-related information including the token and token cryptogram may be transmitted, based on an explicit input from a user or an internal algorithm of the electronic device to the POS device 750.

According to an embodiment of the present disclosure, the biometric information module 1825 may store biometric information of a user of the electronic device and compare the biometric information with information obtained by a biometric sensor to authenticate the user. The biometric information module 1825 may include a fingerprint information module or an iris information module. The biometric information module may collect information from the biometric sensor 240I. When the payment application 1830 shows, through the display 160, contents requiring authentication of biometric information of a user, the user may transfer the biometric information through the biometric sensor 240I. The authentication module 1835 of the payment application 1830 may transfer, through the biometric information management module 1843, a message requiring collection of biometric information to the biometric information driver module 1851. The biometric information driver module 1851 may transfer the message to the biometric sensor 240I. The biometric sensor 240I may collect biometric information and transfer the biometric information to the TEE 1820. The biometric information module 1825 of the TEE 1820 may compare the collected information with the stored biometric information of the user and transfer information on whether to authenticate the collected information, to the authentication module 1835 of the payment application 1830 through the security environment driver module 1853 and the biometric information management module 1843 of the REE 1810. The payment application 1830 may show, through the display 160, whether to authenticate. The biometric information of the user may be stored in the TEE 1820, stored in the REE 1810 in an encrypted state, or stored in the security module (e.g., eSE) 236.

According to an embodiment of the present disclosure, the security identifier processing module 1823 may acquire, through a user input, an input value, which is necessary for the electronic device or is associated with payment or authentication. For example, the input value may be a PIN. Also, the input value may include information related to the card. For example, the information may include a PAN, a card valid term (e.g., an expiration date), or a card verification value (CVV). In addition, the information may include a IC PIN or an ATM PIN. The security identifier processing module 1823 may be indicated in the form of an application. A graphic library necessary for illustration of the application of the security identifier processing module 1823 on a screen may be stored in the TEE 1820. The graphic library stored in the TEE 1820 may be different from a graphic library in the REE 1810. The security identifier processing module 1823 may perform user authentication by an input value, such as a PIN, and may transfer a result of the authentication to the payment management module 1831 through the payment relay module 1841. The security identifier processing module 1823 may receive an encrypted disposable random number (e.g., a nonce) transferred through the security environment driver module 1853 by the security environment relay module 1846. The security identifier processing module 1823 may encrypt the disposable random number and the input value acquired through the user input, using an encryption key (e.g., a device root key) in the TEE 1820, and transfer them to the security environment relay module 1846. The security environment relay module 1846 may transfer the encrypted input value and disposable random number to the payment module 1821 through the security environment driver module 1853. The payment module 1821 may decrypt the input value and disposable random number, using a hardware key in the TEE 1820. The payment module 1821 may identify that the input value transferred through the REE 1810 has integrity, based on the the generated value and the received value of the disposable random number being the same. The payment module 1821 may perform user authentication through the input value, based on the input value having integrity. The payment module 1821 may perform payment through user authentication. A factory reset refers to an operation of returning a software image of an electronic device to the original state at the time when the electronic device is shipped from a factory. This operation may be performed as an explicit operation of a user through an application. Moreover, a module for determining and monitoring a hacking by a predetermined condition (e.g., when it is determined that the system has been hacked) may perform a factory reset. When the operation is performed, data stored in the electronic device is reset and the payment-related information of the user also may be thus reset. The payment-related information may be stored in the payment server 720. When the user accesses the payment server 720 on the basis of an account, the user may be allowed to perform operations of registering a card and installing a payment module 1821 again on the basis of the payment-related information. When the data is reset, the payment-related module stored in the electronic device may notify the token service provider 730 of the resetting through the payment server 720 to deactivate the token service provider 730. When a network of an electronic device has been deactivated, it may be impossible to perform the operation of notification. In this case, the electronic device may perform the factory reset and then access the account of the payment server 720 based on an account. The electronic device may identify a list of pre-registered cards through the payment server 720, and may deactivate a card module or token of the electronic device pre-registered in the token service provider 730 through the payment server 720. In addition, based on the card list of the payment server 720, the electronic device may perform card registration again and receive a payment module, token, etc.

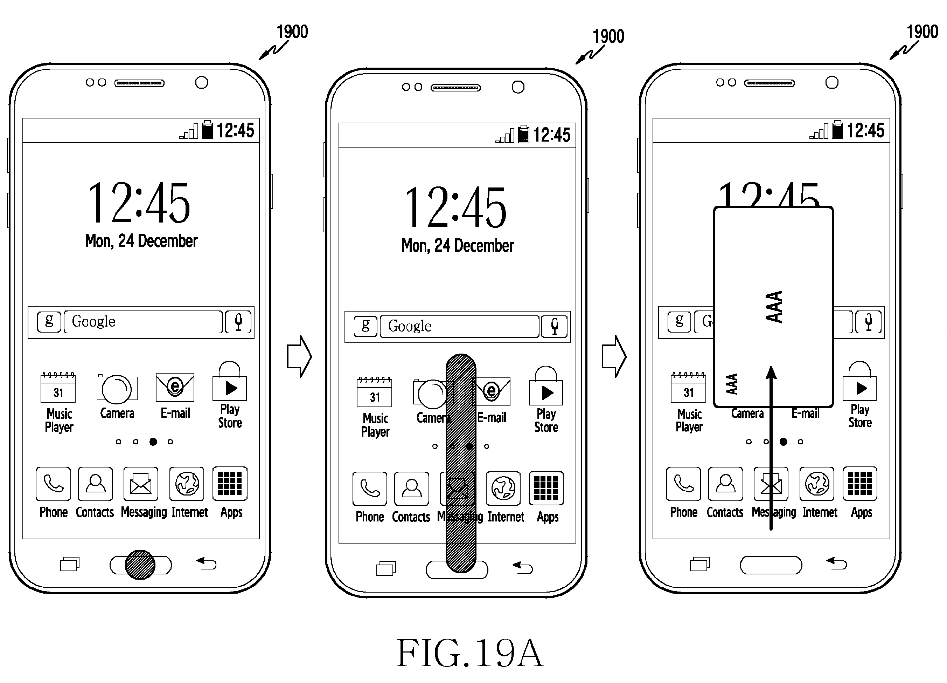

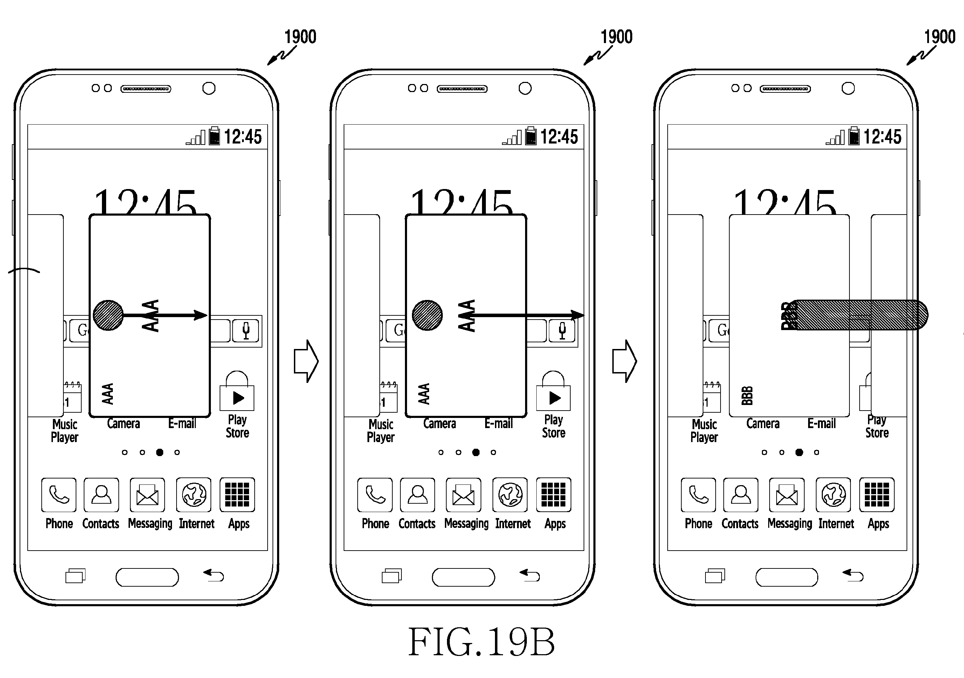

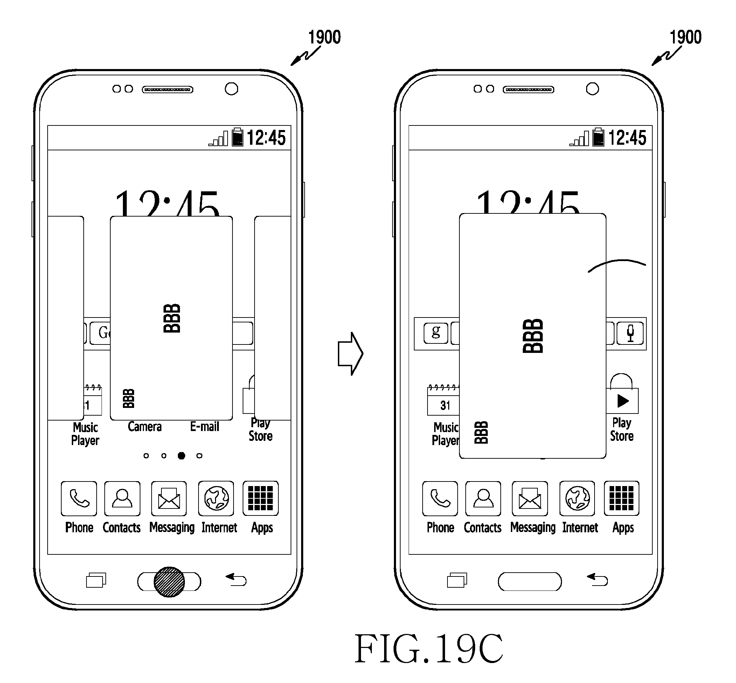

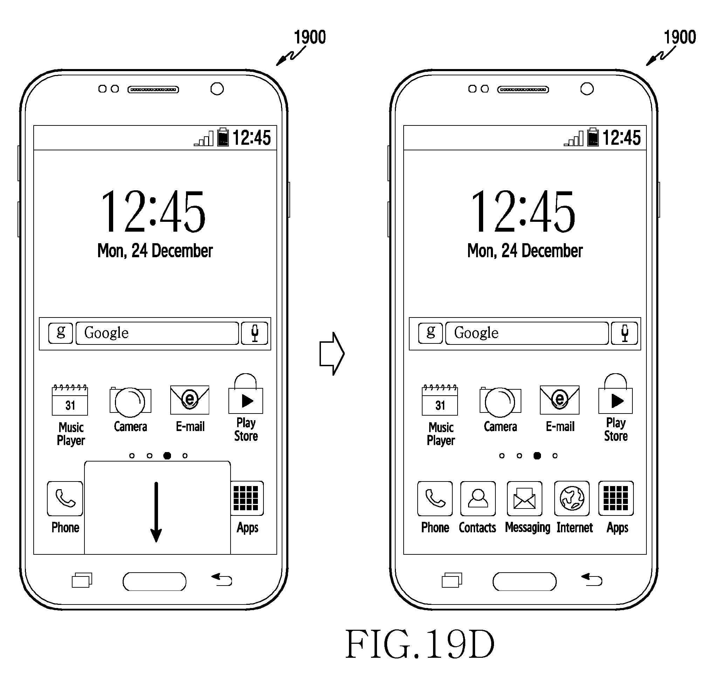

FIGs. 19A to 19D illustrate a payment user interface 1900 of an electronic device according to an embodiment of the present disclosure.

Referring to FIGs. 19A to 19D, the electronic device may receive a user input and execute a payment application. For example, the electronic device may execute a payment application (e.g., Samsung Pay™) through a user input of sweeping in a display direction from a lower end bezel area of the electronic device. In response to the user input, the electronic device may display at least one card among the cards pre-registered in the electronic device, through the display module.

According to an embodiment of the present disclosure, the electronic device may receive a user input and select a card to be used for payment among the pre-registered cards. For example, the electronic device may select a card to be used for payment among a plurality of cards, through a user input of leftward/rightward scrolling. The electronic device may request authentication from the user for payment of the selected card. The authentication method may use, for example, biological information of a user. For example, the electronic device may scan a fingerprint of the user through the fingerprint detection module to perform a payment operation.

FIGs. 20 and 21 illustrate an account-based service server management web page according to an embodiment of the present disclosure.

Referring to FIGs. 20 and 21, a user may determine the active/inactive states of a card based on an account after logging-in through a payment application and transfer the determination to the payment server 710 using the account management module, and otherwise, may change the management of the card state based on an account in a server management web page (e.g., a server portal). Card and payment information may be synthetically managed (e.g., activated, suspended, revoked, expired, etc.) based on an account in a server management web page which a user can access when an electronic device has been lost (e.g., find my mobile (FMM)). Moreover, the lock/unlock function of the payment application may be managed in association with a service account (e.g., Samsung account) or user subscription information (e.g., a user profile).

According to an embodiment of the present disclosure, at the time of simple replacement or loss of an electronic device, when a user registers or authenticates the account in a new electronic device, the user can receive and identify previously used payment card information through the account management module and the payment management module from the payment server 710. The process of identifying the payment card information may include a process in which the payment application outputs, in the form of text or voice, a list of cards already registered in the payment server 710. The payment server 710 may record or store the replacement or loss state of the electronic device and may synchronize a card re-registration state of the electronic device.

According to an embodiment of the present disclosure, when the payment card information has been deleted by an electronic device initialization process (e.g., factory reset), information (e.g., token) necessary for mobile payment may be stored by repeatedly performing card registration and authentication. Meanwhile, card information (e.g., ID & V, card reference ID) used before the electronic device initialization process may be received by simply completing the account registration and authentication process instead of repeatedly performing the card registration and authentication. The payment server 710 may request card re-registration and synchronize the state of the electronic device using the server management web page.

FIG. 22 is a flow diagram of a payment relay module relaying an authentication request through a PIN input of a payment application to a security identifier processing module of a TEE, according to an embodiment of the present disclosure.

Referring to FIG. 22, the payment relay module may include a function of receiving a disposable random number (e.g., a nonce) from the payment module of the TEE through the security environment relay module, a function of obtaining a PIN and an encrypted PIN result from a PIN result obtained by requesting the PIN result from the security identifier processing module through the security environment relay module, and a function of requesting the payment module to verify the encrypted PIN result.

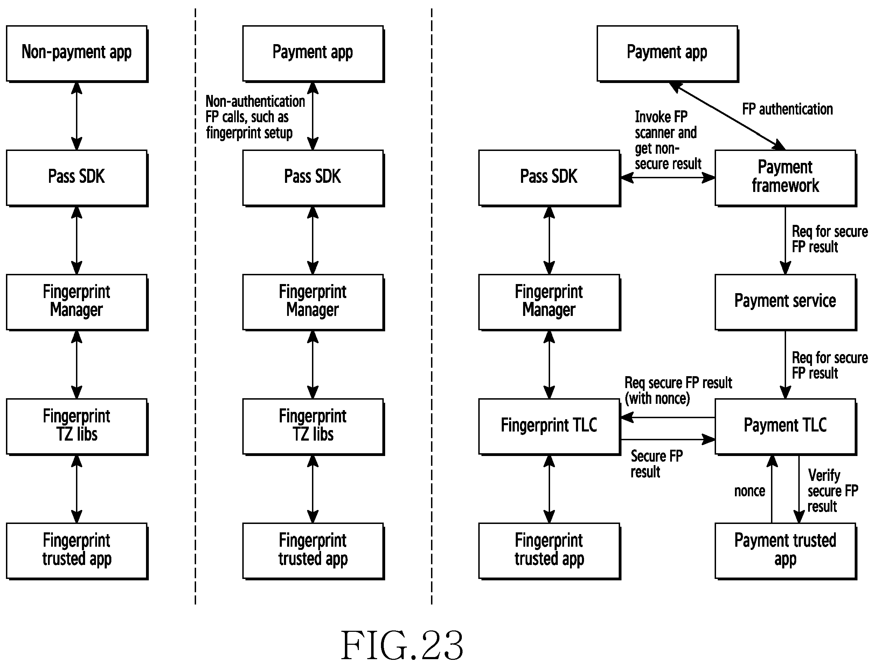

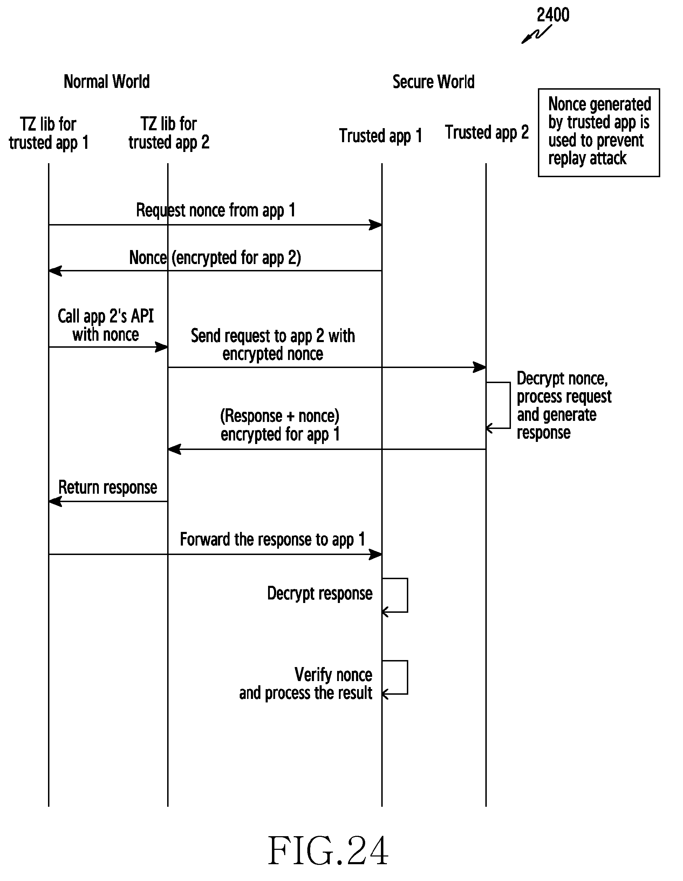

FIGs. 23 and 24 are flow diagrams of a payment method 2400 using a result of authentication using biological information by a payment relay module 1841 according to an embodiment of the present disclosure.

Referring to FIGs. 23 and 24, the payment relay module may request the payment module 1821 in the TEE 1820 to provide a disposable random number (e.g., a nonce), through the security environment driver module 1853 and the security environment relay module 1846.

According to an embodiment of the present disclosure, the payment module 1821 may generate the disposable random number and encrypt the disposable random number, using a key (e.g., a DRK) in the TEE 1820. The payment module 1821 may transfer the encrypted disposable random number to the security environment relay module 1846 through the security environment driver module 1853. Data transmission/transfer between modules or applications being executed in the same device may include a state in which data stored in a memory is accessible.

According to an embodiment of the present disclosure, the security environment relay module 1846 may transfer the encrypted disposable random number to the biometric information module 1825 through the security environment driver module 1853. The biometric information module 1825 may be decrypted using the key. The biometric information module 1825 may authenticate the user, using information acquired from the biometric sensor 240I. The biometric information module 240I may encrypt the user authentication success-or-failure information together with the disposable random number, using the key. The biometric information module 1825 may transfer the encrypted authentication success-or-failure information and disposable random number to the security environment relay module 1846 through the security environment driver module 1853. The security environment relay module 1846 may transfer the encrypted authentication success-or-failure information and disposable random number to the payment module 1821 through the security environment driver module 1853.

According to an embodiment of the present disclosure, the payment module 1821 may decrypt the encrypted authentication success-or-failure information and disposable random number, through the key. The payment module 1821 may compare the received disposable random number with the generated disposable random number to check whether the authentication success-or-failure information has been modified in the REE 1810. The comparison may include determining whether the disposable random number and the received disposable random number completely coincide with each other, or determining that they coincide with each other when the received disposable random number is a number generated based on the transmitted disposable random number even though they do not completely coincide with each other. When the two disposable random numbers coincide and the authentication has succeeded, the payment module 1821 may perform payment. When the disposable random numbers do not coincide and the authentication has not succeeded, the payment module 1821 may not perform payment.

According to an embodiment of the present disclosure, the comparison may be executed in another application or agent (e.g., the payment manager 1840 or the kernel 1850) executed in the TEE 1820 or the REE 1810.

FIG. 25 is a block diagram of a method 2500 of generating a token cryptogram according to an embodiment of the present disclosure.

Referring to FIG. 25, the payment module 1821 may generate a token cryptogram, using a key capable of generating the token cryptogram. The payment module 1821 may use different keys according to a predetermined rule, for example, in each transaction, in a predetermined number of times of transaction, or a transaction within a particular time. The token service provider 730 may possess a key paired with the above-described key. The token service provider 730 may decrypt the encrypted token cryptogram through the paired key.

When the payment module 1821 makes a token cryptogram using the key, the data encrypted by a key and the encryption engine may be widely different according to the encryption method (e.g., advanced encryption standard (AES), temporal key integrity protocol (TKIP), etc.).

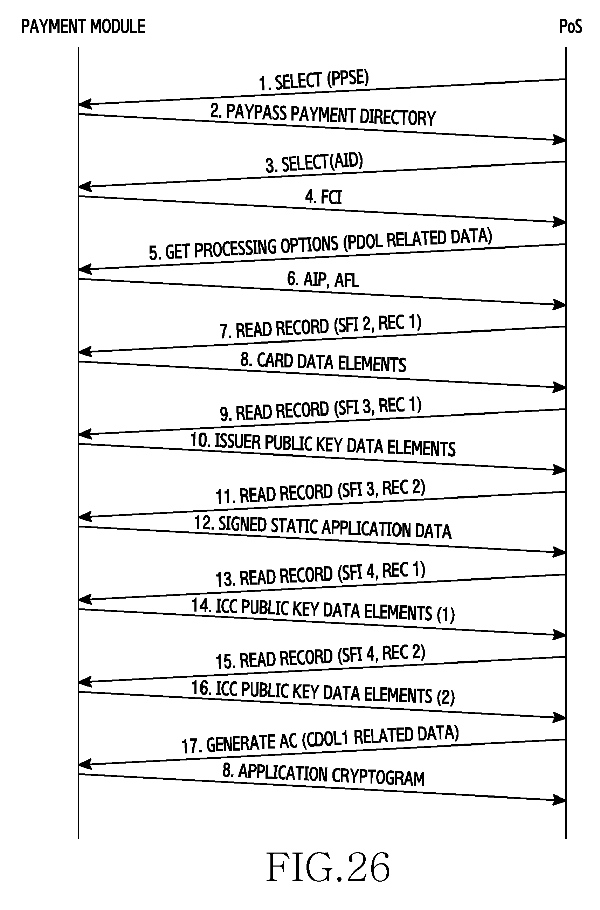

FIG. 26 is a flow diagram of a communication method for payment between an NFC module and a POS device according to an embodiment of the present disclosure. Tables 4 and 5 below show abbreviations and descriptions thereof used in the process.

**Table 4**

| |
|---|
| AAC Application Authentication Cryptogram |
| AC Application Cryptogram |
| ADF Application Definition File |
| AFL Application File Locator |
| AID Application Identifier |
| AIP Application Interchange Profile |
| ASI Application Selection Indicator |
| AN Alphanumeric |
| ANS Alphanumeric Special |
| APDU Application Protocol Data Unit |
| ARQC Authorization Request Cryptogram |
| ATC Application Transaction Counter |
| B Binary |
| BCD Binary Coded Decimal |
| C-APDU Command APDU |
| CDOL Card Risk Management Data Object List |
| CLA Class byte of command message |
| CN Compressed Numeric |
| CVC Card Verification Code |
| CVM Cardholder Verification Method |
| DES Data Encryption Standard |
| DDA Dynamic Data Authentication |
| DGI Data Grouping Identifier |
| EMV Europay MasterCard Visa |
| FCI File Control Information |
| NIC Length of the ICC Public Key Modulus |
| PAN Primary Account Number |
| PCVC3TRACK1 Track 1 Bit Map for CVC3 |
| PCVC3TRACK2 Track 2 Bit Map for CVC3 |
| PDOL Processing Options Data Object List |
| PIN Personal Identification Number |
| PPSE *PayPass* Payment System Environment |
| PSE Payment System Environment |
| PUNATCTRACK1 Track 1 Bit Map for UN and ATC |
| PUNATCTRACK2 Track 2 Bit Map for UN and ATC |
| P1 Parameter 1 |
| P2 Parameter 2 |
| R-APDU Response APDU |
| RFU Reserved for Future Use |
| SDA Static Data Authentication |

**Table 5**

| |
|---|
| A terminal begins by selecting the PayPass Payment Systems Environment (PPSE) using the SELECT command. |
| The card responds with the File Control Information (FCI) including all the AIDs supported by the card with their priority indicator. |
| The terminal selects the AID with the highest priority that is supported by both card and terminal and issues the SELECT command with this AID. |
| The card responds with the File Control Information (FCI). The FCI may contain the Processing Options Data Object List (PDOL). The PDOL is a list of tags and lengths of terminal resident data elements needed by the card in the GET PROCESSING OPTIONS command. |
| The terminal issues the GET PROCESSING OPTIONS command. If there is no PDOL in the card, then the terminal uses the command data field "8300." Otherwise the command data field contains a data object with tag "83" and a value field comprising the concatenated list of data elements resulting from processing the PDOL. |
| The card returns the Application Interchange Profile (AIP) and the Application File Locator (AFL). |
| The terminal issues the READ RECORD command to retrieve the generic card application data elements (e.g. PAN, Application Expiry Date, etc...) located in the first record of the file with SFI 2. The response message of the card contains the record read including all the generic card application data elements. |
| If the card supports offline data authentication (static data authentication or combined DDA/AC generation), then the terminal issues the READ RECORD command to retrieve the card data elements necessary to recover the Issuer Public Key. These data elements are located in the first record of the file with SFI 3. |
| If the card supports static data authentication and the card does not support combined DDA/AC generation, then the terminal issues the READ RECORD |
| command to retrieve the Signed Static Application Data. This data element is located in the second record of the file with SFI 3. |
| If the card supports combined DDA/AC generation, then the terminal issues two READ RECORD commands to retrieve the card data elements necessary to recover the ICC Public Key. These data elements are located in the first and second record of the file with SFI 4. |
| After terminal risk management (application expiry date checking, terminal floor limit checking, exception file checking, etc.) has been completed, the terminal makes a preliminary decision to decline the transaction offline, complete it online or accept it offline. This decision is based upon the Terminal Verification Results (TVR), the issuer action preferences and acquirer action preferences according to the method described in [EMV BOOK 3]. If the decision is to accept the transaction offline, then the terminal issues the GENERATE AC command requesting a TC. If the decision is to decline the transaction offline, then the terminal issues the GENERATE AC command requesting an AAC. In the case the terminal wants to complete the transaction online, then the terminal issues the GENERATE AC command requesting an ARQC. |
| Based upon the CDOL1 related data included in the data field of the GENERATE AC command, the card may perform its own card risk management. As a result of the card risk management process, the card may decide to complete a transaction online, accept offline or decline the transaction. In all three cases the card will generate an Application Cryptogram. If the card responds with a TC or an AAC, then the terminal completes the transaction offline. If the card responds with an ARQC, then the terminal attempts to go online, sending an authorization request message to the issuer. Included in the authorization request message is the ARQC for online card authentication. |

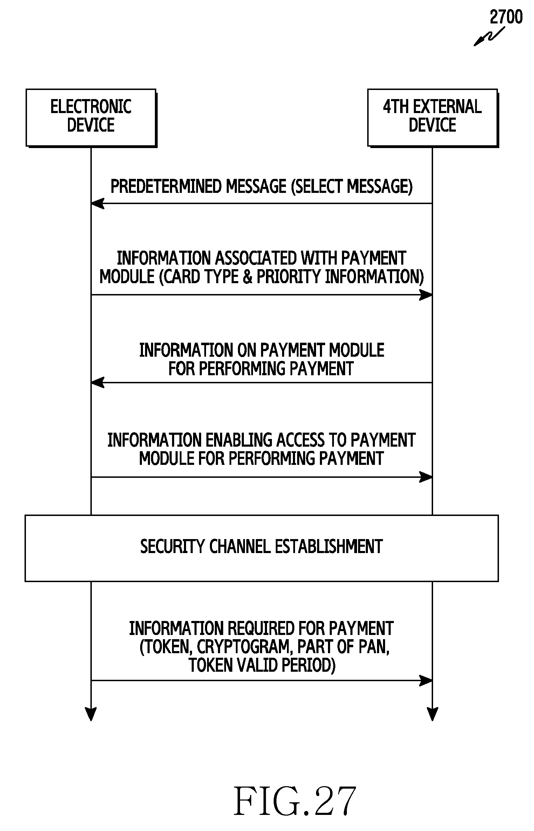

FIG. 27 is a flow diagram of a communication method 2700 for payment between an NFC module and a POS device according to an embodiment of the present disclosure.

Referring to FIG. 27, the payment module may transmit or receive predetermined information in the payment operation with the POS device 750. In the case of NFC, the POS device may first receive the information to perform the payment. In the case of MST, payment-related information including the token and token cryptogram may be transmitted, based on an explicit input from a user or an internal algorithm of the electronic device, to the POS device. In the case of using the NFC for the payment, the electronic device may transmit or receive at least one message. The electronic device may receive a predetermined message from a POS device. The electronic device may transmit information (e.g., card type and priority information) associated with the payment module to the POS device on the basis of the predetermined message. The POS device may determine a payment module to perform the payment on the basis of the information associated with the payment module. The POS device may transfer the information associated with the determined payment module to the electronic device. The electronic device may transfer information which allows an access to the determined payment module to the POS device. The POS device may exchange at least one key capable of establishing a security channel between the electronic device and the POS device, with the electronic device based on the accessible information. The above process may be a process of exchanging at least one message. Based on the security channel, the electronic device may transmit information (e.g., a token, a token cryptogram, a part of PAN information, or a token valid period) necessary for payment to the POS device.

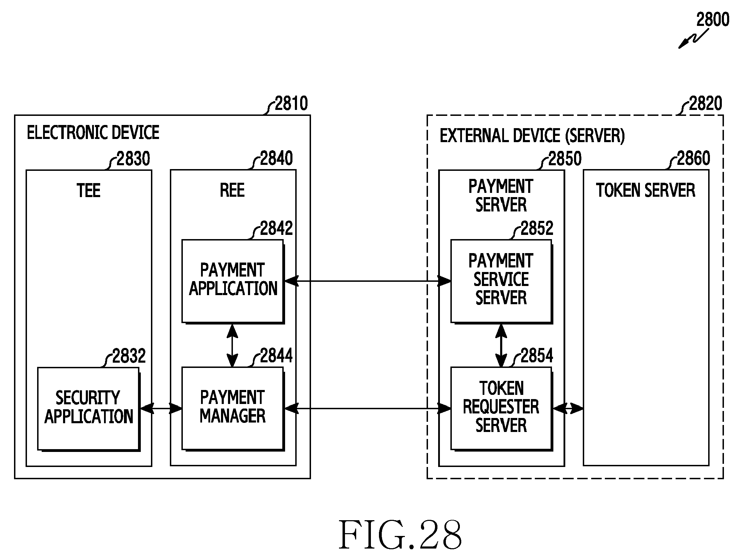

FIG. 28 is a block diagram of a payment system 2800 according to an embodiment of the present disclosure.

Referring to FIG. 28, the payment system 2800 may include an electronic device 2810 and/or an external device 2820 (e.g., a server). The electronic device 2810 may include, for example, a TEE 2830 and/or a REE 2840. The external device 2820 may include, for example, a server, and the server may include, for example, a payment server 2850 and/or a token server 2860. The payment server 2850 may include, for example, a payment service server 2852 or a token requester server 2854.

According to an embodiment of the present disclosure, the TEE 2830 may include a security system related to the electronic device 2810. For example, the electronic device 2810 may protect information included or stored in the TEE 2830 from a control related to a request, a revision, or an input from the outside, using the TEE 2830.

According to an embodiment of the present disclosure, the TEE 2830 may include, for example, a program mode, the security of which has been reinforced. For example, using the TEE 2830, a normal area (normal world) and a security area (security world) may be distinguished. The normal world may be referred to as the REE 2840. Further, the TEE 2830 may, for example, execute a reliable application or manage encrypted information. For example, the encrypted information may include token or key information.

According to an embodiment of the present disclosure, the TEE 2830 may protect the encrypted information from the outside. The token or key information may be used to encrypt the card information. For example, in relation to the token or key information, when the card information is provided to a device for payment, the card information may be at least partly changed rather than being directly provided to the device for payment. In changing the card information, the token or key information may be used. The key may be acquired from, for example, a service provider who provides a payment service. Further, the key may be managed by the electronic device 2810 or the server. The TEE 2830 may include, for example, a security application (e.g., a trusted application) 2832. The TEE 2830 may provide, for example, an environment in which the security application 2832 can be executed.

According to an embodiment of the present disclosure, the security application 2832 may include, for example, information related to a card company included in the TEE 2830. The information related to the card company may include, for example, an application related to the card company, and the application may be provided in a packaged form. The packaged form may be provided by an SDK.

According to an embodiment of the present disclosure, the security application 2832 may include, for example, an application or applet which should be executed in a mode, the security of which has been reinforced, likewise in the TEE 2830. Further, the security application 2832 may include, for example, an encryption-related function. For example, the security application 2832 may perform functions of generating, revising, or deleting a cryptogram related to the payment.

According to an embodiment of the present disclosure, the REE 2840 may include an application layer. For example, the REE 2840 may include an application and/or framework. The REE 2840 may allow access thereto from the outside or control thereof, differently from the TEE 2830. The REE 2840 may include, for example, a payment application (e.g., a wallet application) 2842 and/or a payment manager 2844. The payment application 2842 may perform, for example, functions of identification, OCR, or interfacing for payment by the payment application 2842. For example, the payment application 2842 may perform, for example, functions related to card registration or payment.

According to an embodiment of the present disclosure, the payment manager 2844 may include, for example, information related to a card company included in the REE 2840. The information related to the card company may include, for example, an application related to the card company, and the application may be provided in a packaged form. The packaged form may be provided by an SDK. The payment manager 2844 may include, for example, an encryption-related function. For example, the payment manager 2844 may perform functions of token ID management or card company channel establishment. Further, the payment manager 2844 may perform, for example, interfacing with the external device (e.g., server) 2820. For example, the payment manager 2844 may provide an interface with a server (e.g., the payment server 2850) for a tokenization service.

According to an embodiment of the present disclosure, the payment manager 2844 may be functionally connected with and share information with the security application 2832. For example, the payment manager 2844 may perform interfacing with the security application 2832 for using (e.g., storing) the token or the key. Further, the security application 2832 may include information associated with a network service provider.

According to various embodiments of the present disclosure, the payment application 2842 and the payment manager 2844 may be functionally connected with each other, and the security application 2832 and the payment manager 2844 may be functionally connected with each other. For example, the payment manager 2844 may transfer received from the outside to the payment application 2842 or the security application 2832 or transfer information received from the payment application 2842 or the security application 2832 to the outside. The payment manager 2844 may share information related to payment with the security application 2832 or the payment application 2842.

According to an embodiment of the present disclosure, the electronic device 2810 may include an additional configuration or module, as well as the TEE 2830, the security application 2832, the REE 2840, the payment application 2842, and the payment manager 2844.

According to an embodiment of the present disclosure, the payment server 2850 is a management server for electronic payment or mobile payment and may transmit or receive information (e.g., a token key) related to payment to or from the electronic device 2810. Further, the payment service server 2852 and the token requester server 2854 included in the payment server 2850 are functionally connected with each other to share information relating to payment.

According to an embodiment of the present disclosure, the token server 2860 may be functionally connected to the token requester server 2854 to transmit or receive the information related to payment. For example, the token requester server 2854 and the token server 2860 may provide an interface for transfer of the token or the key.

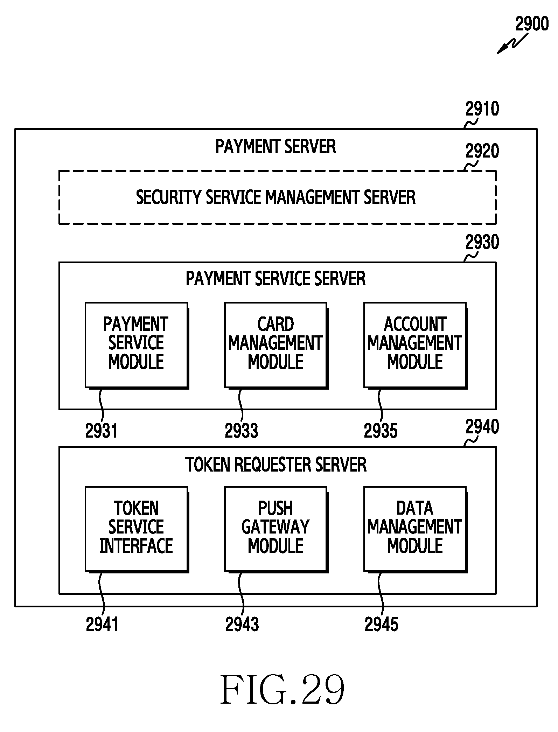

FIG. 29 is a block diagram of a server 2900 of a payment system according to an embodiment of the present disclosure.

Referring to FIG. 29, a management server for payment, for example, the payment server 2910, may include a security service (e.g., a trusted service) management server 2920, a payment service server 2930, or a token requester server 2940. The payment service server 2930 may include, for example, at least one module among a payment service module 2931, a card management module 2933, and an account management module 2935. The account management module 2935 may include, for example, a Samsung account integration. The token requester server 2940 may include at least one module among a payment service interface, a message gateway, and a data management module 2945. The payment service interface may include, for example, a token service interface 2941, and the message gateway may include, for example, a push gateway module 2943.

According to an embodiment of the present disclosure, the security service management server 2920 may manage information relating to payment. For example, the security service management server 2920 may manage the information relating to the payment according to the kind (e.g., security area or non-security area) and/or configuration (e.g., a logical configuration or physical configuration) of the area in which the information related to the payment is stored. For example, when the area in which the information related to payment, for example, a token, is stored is a security module (e.g., an eSE) or embedded subscriber identity module (eSIM), the security service management server 2920 may perform management of the token stored in the security module or eSIM. For example, the security module or eSIM may be included in the first external electronic device 102, the second external electronic device 104, or the server 106 of FIG. 1.

According to an embodiment of the present disclosure, the security service management server 2920 may perform functions of the payment service server 2930 and/or the token requester server 2940. Further, the security service management server 2920 may distinguishably exist from the payment service server 2930 and/or the token requester server 2940. For example, the payment service server 2930 and/or the token requester server 2940 may be included in a first server, and the security service management server 2920 may be included in a second server.

According to an embodiment of the present disclosure, the security service management server 2920 may control a storage area (e.g., memory) for storing the information (e.g., token or key) relating to payment in order to manage the information relating to payment. The storage area for storing the information relating to payment may include a key management module.

According to an embodiment of the present disclosure, the security service management server 2920 may manage, using the key management module, the token stored in the security module or eSIM. The storage area included in the security module or eSIM may include, for example, a supplementary secure domain (SSD). The SSD may be included in, for example, the electronic device and may be generated using a key management module agent or client. The key management module agent or client may be functionally connected with the key management module to perform a payment function.

According to an embodiment of the present disclosure, the electronic device may include a predetermined key when the electronic device is produced or processed. For example, the electronic device may generate a master key in a predetermined area (e.g., security module or eSIM), using the predetermined key.

According to an embodiment of the present disclosure, the electronic device may generate the SSD in the predetermined area, using the master key, in response to a request from the security service management server 2920. The SSD may include a profile or an application (e.g., SDK) required for each bank or financial company to perform a payment function. The profile or application may be installed in the SSD through, for example, the security service management server 2920.

According to an embodiment of the present disclosure, the payment service module may be functionally connected to the payment application included in the electronic device to provide an API for transmitting or receiving information related to payment. Further, the payment service module 2931 may record, for example, flows of information (e.g., data) related to payment. For example, the flows related to the payment may include payment result storage, transmission of payment details to the electronic device, or inquiry to payment history.

According to an embodiment of the present disclosure, the card management module 2933 may generate information on a card received from the payment application. For example, the card management module 2933 may generate resource ID related to the card information received from the payment application. The resource ID may be recorded as "resour.ID." The card information received from the payment application may be received by the payment service server 2930, for example, in response to a command (e.g., registration request) indicating a card for payment from a user. The resource ID may include, for example, a token ID or token reference. Further, the resource ID may include, for example, a plurality of token IDs or token references, and the plurality of token IDs or token references may include information corresponding to information of each card.

According to an embodiment of the present disclosure, the card management module 2933 may transfer the token ID or token reference to the token requester server 2940 included in the payment server 2910. For example, the card management module 2933 may transfer a request for registration of the card information to a token service interface 2941 included in the token requester server 2940.

According to an embodiment of the present disclosure, the card management module 2933 may manage an operation cycle (e.g., a life cycle) of a card corresponding to the token ID or token reference. For example, the operation cycle of the card may include at least one among card registration, token issuance, token activation, or token removal.

According to an embodiment of the present disclosure, the account management module 2935 may manage an account corresponding to a registered card, using the card management module 2933. For example, the account management module 2935 may provide a payment service by linking a card registered in the payment server 2910 with a service account (e.g., a Samsung account). Further, the account management module 2935 may perform, for example, functions of account registration, login, authentication, or generation of a security area. Further, the account management module 2935 may manage, for example, at least one policy among policies according to countries, devices, or card companies.

According to an embodiment of the present disclosure, the token requester server 2940 may be functionally connected with the token server to perform at least one among issuance, removal, and activation of a token, and may interwork with the security service management server 2920 to store a token in the security area (e.g., TEE) of the electronic device. Further, the token requester server 2940 may manage, for example, a security channel with the token server, and perform data collection, ingestion, or service function of the information related to payment.

According to an embodiment of the present disclosure, the token service interface may transfer a request associated with the token received from the electronic device to the token server, and transfer a response to the request, received from the token server, to the electronic device. Further, the token service interface 2941 may manage, for example, the security of a channel functionally connected to the token server.

According to an embodiment of the present disclosure, the push gateway module 2943 may perform a path function for transferring a message associated with the token from the token server to the electronic device.

According to an embodiment of the present disclosure, the data management module 2945 may manage data (e.g., card information or user information) used in the token requester server 2940. Further, the data management module 2945 may provide, for example, a mapping table including card information (e.g., PAN), payment application information, a user, or an electronic device. For example, the data management module 2945 may store, in the form of a table, at least one among a PAN, payment application information, user information, device information, and token information.

According to an embodiment of the present disclosure, the token requester server 2940 may identify the mapping table related to the token, using the data management module 2945. Also, the payment service server 2930 may include information related to an electronic device or account. For example, the payment system may perform user authentication, using the mapping table and the information related to an electronic device or account.

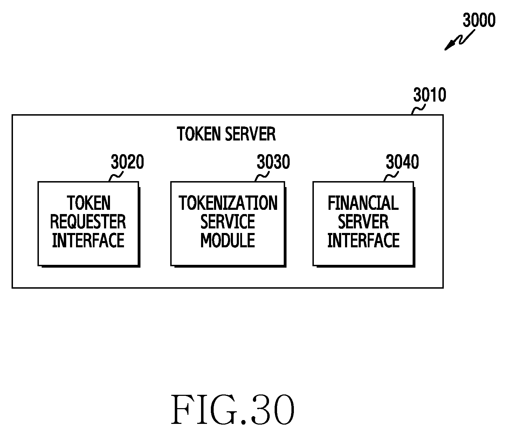

FIG. 30 is a block diagram of a server 3000 of a payment system according to an embodiment of the present disclosure.

Referring to FIG. 30, a token server 3010 may perform the issuance or management of a token. The token server 3010 may include, for example, a token requester interface 3020, a tokenization service module 3030, or a financial server interface 3040.

According to an embodiment of the present disclosure, the token requester interface 3020 may include an interface for receiving a request for the issuance of a token from the token requester server 2940.

According to an embodiment of the present disclosure, when receiving a request for the issuance of a token from the electronic device, the tokenization service module 3030 may issue a token on the basis of card information (e.g., a PAN). Further, at the time of payment transaction, the tokenization service module 3030 may perform a function of comparing a received token with the card information. The tokenization service module 3030 may compare, for example, the card information with the token received at the time of payment transaction, and may proceed the payment transaction when they are identical or coincide with each other, or cease the payment transaction when they are not identical or do not coincide with each other.

According to an embodiment of the present disclosure, the financial server interface 3040 may provide an interface with the financial server for obtaining authentication of a token by the financial server, when the token is issued to the electronic device or a user receives the token at the time of payment.

According to an embodiment of the present disclosure, the electronic device or the electronic device may include at least one among a device ID, app ID, enrollment ID, resource ID, token, or key (e.g., a LUK). The device may include the electronic device or a unique ID included in the electronic device. The app ID may include, for example, a unique ID of an application and may distinguish a plurality of applications. The app ID may include, for example, a wallet or Samsung wallet. The enrollment ID may include, for example, a unique ID capable of identifying a card associated with the payment function at the time of registering the card. The resource ID may include, for example, an ID notifying of a location at which a token reference value included in the payment server is stored. The token may include, for example, a token ID and may include a unique ID distinguished in the payment system. The key may include, for example, an LUK, and may be used to perform a payment function having an integrity or security for the token. The key may include, for example, a plurality of keys corresponding to one token ID. For example, the key may be changed based on a predetermined situation. For example, the key may be deleted, revised, or generated based on a valid period, the signal state of a communication network, or an external input.

According to an embodiment of the present disclosure, the payment server may include a user ID, a device ID, a card reference ID (or card ref. ID), or resource ID{token reference}. The user ID may include, for example, a service account (e.g., a Samsung account) used for a payment function, and may be used in managing an electronic device registered by user information or a user account. The card reference ID may include, for example, an ID issued (generated) for each card at the time of card registration, and may include information capable of identifying each card. Further, the card reference ID may include the enrollment ID. According to one embodiment, the resource ID {token reference} may include a token reference in the resource ID. The token reference may include, for example, a location at which the token included in the token server and the LUK are stored.

According to various embodiments, the token server may include a card reference ID and a token reference{token PAN(Exp date, CVV, etc.) LUK}. The token reference{token PAN(Exp date, CVV, etc.) LUK} may include, for example, a location at which CVV and/or LUK is stored or a valid period associated with a token or PAN in the token reference.

According to an embodiment of the present disclosure, a token ID may be generated based on the user ID, card reference ID, and device ID. When at least one of the user ID, the card reference ID, and the device ID is changed, the token ID may be newly generated. The user ID may include at least one device ID. The device ID may include, for example, at least one card reference ID. According to one embodiment, the resource ID may include information relating to the user ID, the device ID, and the card reference ID. Further, the resource ID may include a token ID, and the token ID may be used to identify information (e.g., token, PAN, or LUK) stored in the token server.

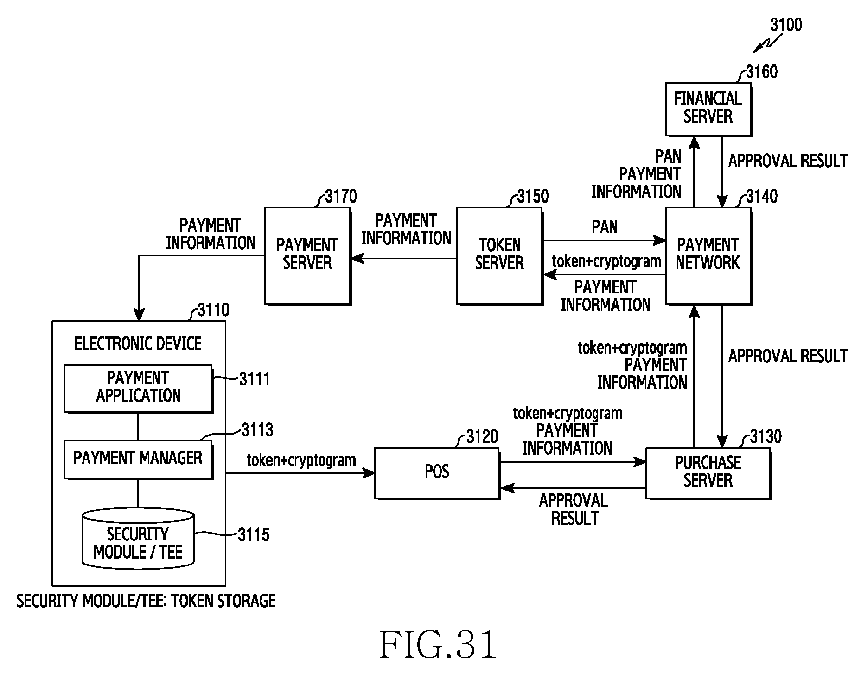

FIG. 31 is a block diagram of a signal flow 3100 of token payment according to an embodiment of the present disclosure.

Referring to FIG. 31, the payment system may include an electronic device 3110, a payment server 3170, a token server 3150, a POS device 3120, a financial server 3160, a purchase server (acquirer) 3130, or a payment network 3140. The electronic device 3110 may include, for example, a payment application 3111, a payment manager 3113, or a security area (e.g. a security module or TEE) 3115. The POS device 3120 may include, for example, a sales time point information management system. The POS device 3120 may be, for example, a combination of functions of a cash register and a computer electronic device, and a user can perform a payment function using the POS device 3120. The financial server 3160 may include, for example, a bank or financial company for issuing a card, and may perform identification of the card. Further, the financial server may proceed with the approval of the card at the time of payment. The purchase server 3130 may include, for example, a bank or financial company that purchases a transaction sheet for the paid card transaction. The payment network 3140 may include, for example, a card network.According to an embodiment of the present disclosure, the electronic device 3110 may transfer a token and/or encryption information (e.g., cryptogram) to the POS device 3120. For example, the token may be stored in the electronic device 3110. Further, the token may be stored in an encrypted area (e.g., security module or TEE 3115). For example, the electronic device 3110 may generate encryption information, using a key received from the outside or a key generated by the electronic device 3110. The security information may include a cryptogram. Further, the electronic device 3110 may transfer the cryptogram and/or the token to the POS device 3120.

According to an embodiment of the present disclosure, the electronic device 3110 may use various communication connections in transferring the token and/or cryptogram to the POS device 3120. The communication connections may include, for example, NFC, MST, barcode, or QR code.

According to an embodiment of the present disclosure, the POS device 3120 may transfer at least one among the token, the encryption information, and the payment information to the purchase server 3130. For example, the POS device 3120 may transfer, to the purchase server 3130, the token received by the electronic device 3110 and/or the cryptogram, and the payment information (e.g., payment details) acquired by the POS device 3120. Further, the payment information may be, for example, acquired from the POS device 3120 or received from an external device, and may include payment details relating to a payment function requested by the user. Further, the payment information may include, for example, payment history performed using the payment system.

According to an embodiment of the present disclosure, the purchase device 3130 may transfer at least one among the token, the encryption information, and the payment information to the purchase network 3140. For example, the purchase server 3130 may transfer at least one among the token, the cryptogram, and the payment information, which have been received from the POS device 3120, to the purchase network 3140.

According to an embodiment of the present disclosure, the payment network 3140 may include a network associated with a card company. The card company may include, for example, VISA®, MasterCard®, or Amex™. The payment network 3140 may include or operate the token server 3150. For example, the payment network 3140 may transfer at least one among the token, the cryptogram, and the payment information from the payment network 3140 to the token server 3150 or may perform the functions of the token server 3150.

According to an embodiment of the present disclosure, the token server 3150 may identify information on the token received from the payment network 3140. For example, the token server 3150 may use the token to identify card information (e.g., PAN) corresponding to the token. For example, the token server 3150 may identify a PAN corresponding to the financial server 3160, using information (e.g. Data) included in the token. The token server 3150 may, for example, identify a PAN corresponding to the financial server 3160 and use the PAN to get payment authentication from the financial server 3160.

According to an embodiment of the present disclosure, the token server 3150 may use the cryptogram in identifying the PAN.

According to an embodiment of the present disclosure, the token server 3150 may transfer the PAN to the payment network 3140.

According to an embodiment of the present disclosure, the payment network 3140 may transfer the PAN and/or the payment information to the financial server 3160. For example, the payment network 3140 may transfer the PAN and/or the payment information received from the purchase server 3130 to the financial server 3160.

According to an embodiment of the present disclosure, the financial server 3160 may determine whether to approve the payment, using the PAN and/or the payment information. For example, the financial server 3160 may use the PAN and/or the payment information and may approve the payment when it coincides with information (e.g. a valid PAN) included in the financial server 3160. Further, the financial server 3160 may reject the payment when the PAN and/or the payment information does not coincide (e.g. an invalid PAN) with information included in the financial server 3160.

According to an embodiment of the present disclosure, the financial server 3160 may transfer the information on whether to approve the payment to the payment network 3140.

According to an embodiment of the present disclosure, the payment network 3140 may transfer the information on whether to approve the payment to the payment network 3140.

According to an embodiment of the present disclosure, the financial server 3160 may transfer the information on whether to approve the payment to the purchase server 3130.

According to an embodiment of the present disclosure, the purchase server 3130 may transfer the information on whether to approve the payment to the POS device 3120.

According to an embodiment of the present disclosure, the payment network 3140 may transfer the payment information to the token server 3150, when the information corresponds to approval.

According to an embodiment of the present disclosure, the token server 3150 may transfer the payment information to the payment server 3170.

According to an embodiment of the present disclosure, the payment server 3170 may transfer the payment information to the electronic device 3110. For example, the payment server 3170 may transfer the payment information to the electronic device 3110, using a predetermined command (e.g., a push message).

According to an embodiment of the present disclosure, the electronic device 3110 may display the payment information in the electronic device 3110. For example, the electronic device 3110 may show the payment information, using the payment application included in the electronic device 3110, or display the payment information through an interface associated with a payment function. The interface associated with the payment function may include a notification bar.

According to an embodiment of the present disclosure, the electronic device 3110 may display the payment information or information (e.g., payment state, payment history, or accumulated amount) associated with the payment through a display functionally connected to the electronic device 3110. For example, the electronic device 3110 may use a notification module (e.g., the notification manager 349 of FIG. 3) of the electronic device 3110 to display the payment information or information associated with the payment. Further, in the electronic device 3110, the payment information or the information associated with the payment may be displayed using at least one among, for example, a notification, an indicator, a status bar, a task bar, an icon, a floating icon, a tile, and a widget, and may be displayed in a partial area of at least one among a home screen, a lock screen, and a curved display.

According to an embodiment of the present disclosure, the electronic device 3110 may output a sound notifying of the payment information or the information associated with the payment through an audio module (e.g., the audio module 280 of FIG. 2 and/or a motor (e.g., the motor 298 of FIG. 2), a tactile feedback device, and a friction display) functionally connected to the electronic device 3110, or generate vibration or haptic effect.

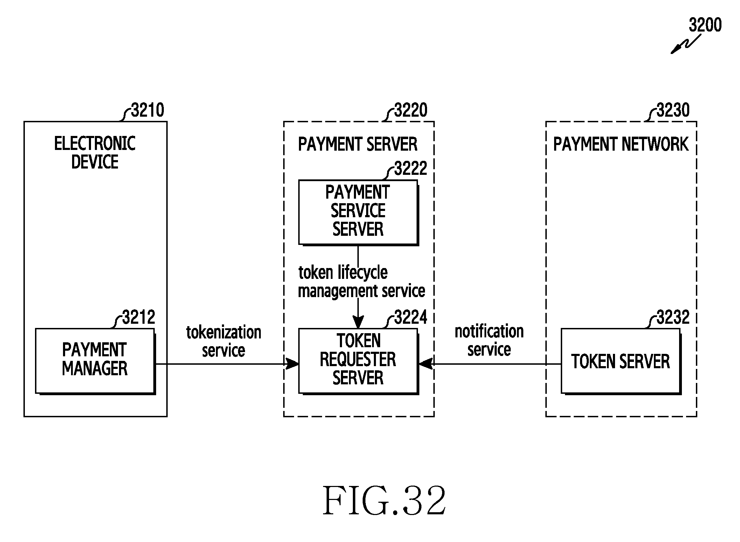

FIG. 32 is a block diagram of operations 3200 of elements of a payment system according to an embodiment of the present disclosure.

Referring to FIG. 32, the payment system may include an electronic device 3210, a payment server 3220, and/or a payment network 3230. The electronic device 3210 may include, for example, a payment manager 3212. The payment server 3220 may include, for example, a payment service server 3222 or token requester server 3224. The payment network 3230 may include, for example, a token server 3232. The payment system may use, for example, the token for the functions performed by each of the electronic device 3210, the payment server 3220, and/or the payment network 3230.

The electronic device 3210 may provide a tokenization service associated with the token, using the payment manager 3212 included in the electronic device 3210 and the token requester server 3224 included in the payment server 3220.

According to an embodiment of the present disclosure, the payment management server 3222 may provide an operation cycle associated with the token (e.g., token life management), using the token requester server 3224 included in the payment server 3220.

According to an embodiment of the present disclosure, the token server 3232 may provide a notification service associated with the token, using the token requester server 3224.

According to an embodiment of the present disclosure, the token requester server 3224 may provide a payment method to the electronic device 3210, using a payment network solution. For example, the token requester server 3224 may determine a payment method proper for the user, using the tokenization service, an operating cycle associated with the token, and/or a notification service associated with the token.

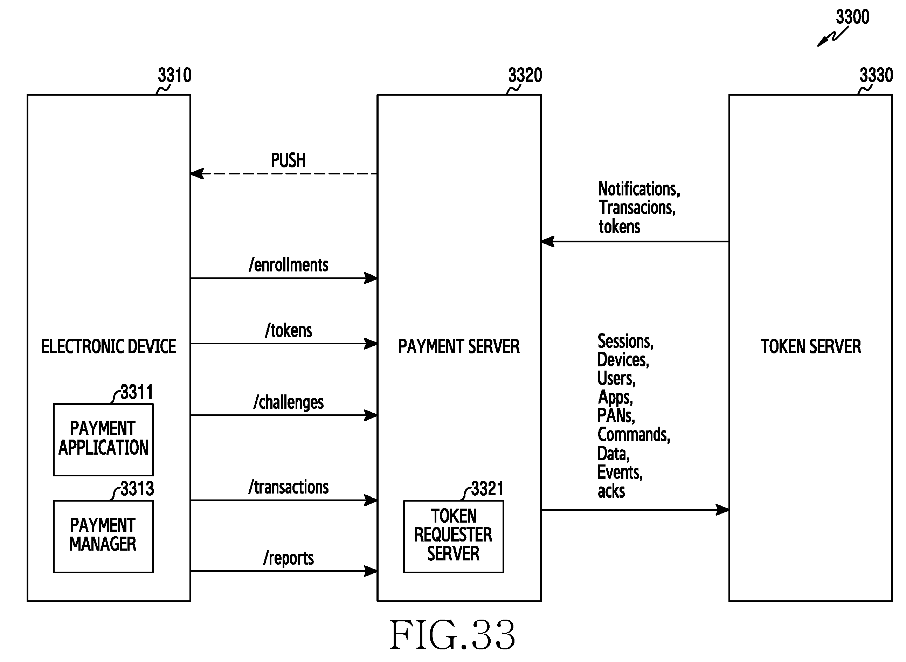

FIG. 33 is a block diagram of a signal flow 3300 of tokenization function according to an embodiment of the present disclosure.

Referring to FIG. 33, the payment system may provide a tokenization function, using an electronic device 3310, a payment server 3320, and/or a token server 3330. The electronic device 3310 may include, for example, a payment application 3311 and/or a payment manager 3313. The payment server 3320 may include, for example, a token requester server 3321. The tokenization function may include, for example, a function of issuing a token containing card information (e.g., PAN).According to an embodiment of the present disclosure, the payment system may provide various APIs associated with the tokenization function. The API may include, for example, at least one among PUSH, /Enrollments, /Tokens, /Challenges, /Transactions, /reports, Notification, Transactions, tokens, Sessions, Devices, Users, Apps, PANs, Commands, Data, Events, and ACKs.

According to an embodiment of the present disclosure, the PUSH may be information (e.g., command) transferring a message from the payment server 3320 to the electronic device 3310.

According to an embodiment of the present disclosure, the /Enrollments, /Tokens, /Challenges, /Transaction, or /reports may be information (e.g., a command) transferred from the electronic device 3310 to the payment server 3320. The /Enrollments may provide, for example, functions associated with registration. For example, it may be used in transmitting information for registration of a card or requesting card registration. The /Tokens may provide, for example, functions associated with a token. For example, it may provide functions for managing an operation cycle (e.g., a life cycle) of a token or requesting a token. The /Challenges may provide, for example, functions associated with identification. For example, it may provide a function of requesting identification. The /Transactions may provide, for example, functions associated with payment details. The /reports may provide, for example, a function of notifying the token requester server of an application event by the payment manager 3313.

According to an embodiment of the present disclosure, the notification, transaction, or tokens may be information (e.g., command) transferred from the token server 3330 to the payment server 3320.

According to an embodiment of the present disclosure, the Sessions, Devices, Users, Apps, PANs, Commands, Data, Events, or ACKs may be information (e.g., a command) transferred from the payment server 3320 to the token server 3330.

According to an embodiment of the present disclosure, the electronic device 3310 may use the payment application 3311 included in the electronic device 3310 in order to receive a token associated with a card using the token requester server. For example, the electronic device may use the payment application 3311 to register identification information (e.g., PAN, information of the electronic device 3310 or user information). The tokenization function may use, for example, the identification information. The identification information may include, for example, at least one among PAN, information of the electronic device 3310, and user information. The electronic device 3310 may register, for example, the identification information, in the payment server 3320.

According to an embodiment of the present disclosure, the token requester server 3321 may transfer the identification information to the token server 3330 to check the validity. Further, the token requester server 3321 may register the identification information in the token requester server and/or the token server 3330 after identifying, for example, the validity.

According to an embodiment of the present disclosure, when the identification information is registered in the token server 3330, the token server 3330 may transfer contract conditions (terms and conditions (T&C)) to the electronic device 3310.

According to an embodiment of the present disclosure, the electronic device 3310 may provide the contract conditions, which have been received from the token server 3330 and/or the payment server 3320, using the payment application 3311 included in the electronic device 3310. Further, the electronic device 3310 may receive a user input corresponding to the contract conditions, using the payment application 3311.

According to an embodiment of the present disclosure, when receiving the user input corresponding to the contract conditions, the electronic device 3310 may determine whether to approve the contract conditions.

According to an embodiment of the present disclosure, the electronic device 3310 may configure (provide) a token when the contract conditions are approved. For example, the electronic device 3310 may perform identification, using the payment application 3311. For example, the electronic device 3310 may provide an interface corresponding to the identification.

According to an embodiment of the present disclosure, the electronic device 3310 may perform the identification on the basis of a policy of the financial server. For example, the electronic device 3310 may provide additional information (e.g., SMS, phone, or e-mail) associated with the identification.

According to an embodiment of the present disclosure, when the identification is performed (e.g., approval), the token server 3330 may activate a token.

According to an embodiment of the present disclosure, the token server 3330 may transfer the information changed into the activated state to the payment server 3320.

According to an embodiment of the present disclosure, the payment server 3320 may transfer the information changed into the activated state to the electronic device 3310.

According to an embodiment of the present disclosure, the electronic device 3310 may receive an activation notification of the token and activate the token stored in the electronic device 3310.

According to an embodiment of the present disclosure, when the state of the token is changed (e.g., activated), the electronic device 3310 may request the token requester server 3321 and/or the token server 3330 to provide a current or latest token state, in order to identify the state of the token. The electronic device 3310 may transfer the token state identification request to the token requester server 3321.

According to an embodiment of the present disclosure, the token requester server 3321 may transfer the token state identification request to the token server 3330.

According to an embodiment of the present disclosure, the token server 3330 may transfer a response corresponding to the token state identification request to the token requester server 3321. The response corresponding to the token state identification request may include, for example, the current or latest token state.

According to an embodiment of the present disclosure, the token requester server 3321 may transfer the current or latest token state received from the token server 3330 to the electronic device 3310.

According to an embodiment of the present disclosure, the electronic device 3310 may compare the current or latest token state received from the token requester server 3321 with the state of the token included in the electronic device 3310. For example, as a result of the comparison, when the states are identical or similar to each other, the state of the token included in the electronic device 3310 may be transferred to the token requester server 3321.

According to an embodiment of the present disclosure, the token requester server 3321 may transfer the state of the token included in the electronic device 3310 to the token server 3330.

According to an embodiment of the present disclosure, the token server 3330 may use, in generating a token, information (e.g., card number, information of the electronic device 3310, or user information) associated with payment at the time of registration (e.g., card registration or user registration). For example, when at least one type of information in the information associated with the payment changes, a new token may be generated or an existing token may be changed (e.g., revised).

According to an embodiment of the present disclosure, a process of transmitting or receiving data associated with the token to or from the server by an electronic device may use other data or another network according to the importance of the data. For example, the electronic device 3310 may use a WiFi network to communicate with a server and transmit/receive general data. Further, the electronic device may use a cellular network, which has smaller packet loss, to communicate with a server and transmit/receive data considered to be important, such as a token. In some cases, even when the electronic device 3310 is connected to a WiFi network, the electronic device may use a cellular network to communicate with a server and transmit/receive important data.

In an embodiment of the present disclosure, the payment system may omit at least one of the above elements or may further include other elements.

In FIGs. 4 to 33, elements included in a payment system are included in a single electronic device (e.g., an electronic devices or a server). However, the present disclosure is not limited thereto. For example, according to the role, function, or capability of an external device, at least a part of a payment system may be distributed in an electronic device and an external device (for example, the first external electronic device 102, the second external electronic device 104, or the server 106 of FIG. 1). For example, an electronic device and/or the payment server may be included in the first electronic device, and the token server and/or the financial server may be included in the second electronic device.

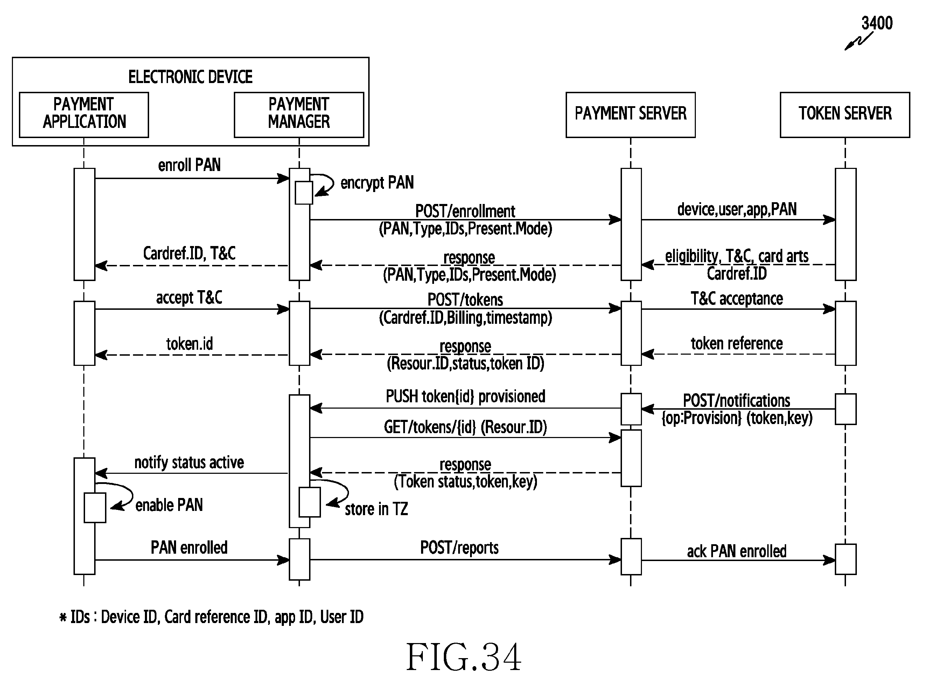

FIG. 34 is a signal flow diagram 3400 of a token issuing method without an identification process of an electronic device according to an embodiment of the present disclosure.

Referring to FIG. 34, the solid line may include a request (e.g., a request or call) command and the dotted line may include a response (e.g., a response or return) command. The payment system may include an electronic device 3310, a payment server 3320, or a token server 3330. The electronic device 3310 may include, for example, a payment application 3311 and/or a payment manager 3313.

According to an embodiment of the present disclosure, the electronic device 3310 may store information that can be used for payment, using an external input or a sensor (e.g., camera sensor or OCR) functionally connected to the electronic device. For example, the information that can be used for payment may include card information (e.g., a PAN), a valid period, CVV, or a user name. The electronic device 3310 may execute an application (e.g., payment application 3311) included in the electronic device 3310 based on an external input (e.g., a user input). The electronic device 3310 may store, in a payment application 3311 included in the electronic device 3310, information that can be used for payment through an external input (e.g., touch, double touch, long press, leftward/rightward movement after touch, gesture, or drag and stop) or a sensor functionally connected to the electronic device. The information that can be used for payment may include, for example, PAN. The PAN may include an account number associated with a BIN generated by a financial server.

According to an embodiment of the present disclosure, the electronic device 3310 may store information, which is associated with the payment application 3311 and can be used for payment, in the electronic device 3310 or the external device (e.g., server). For example, the electronic device 3310 may store information, which can be used for payment corresponding to the payment application 3311, in a memory (e.g., the memory 130 of FIG. 1) included in the electronic device 3310 or in an external device (e.g., the first electronic device 102, the second electronic device 104, or the server 106 of FIG. 1).

According to an embodiment of the present disclosure, the electronic device 3310 may provide an interface for the information that can be used for payment. The interface may include the information that can be used for payment, for example, letters for the PAN, a picture, an icon, a notification, or an indicator.

According to an embodiment of the present disclosure, the electronic device 3310 may register a PAN using the payment application 3311. For example, the electronic device 3310 may transfer the PAN to the payment application 3311. The payment manager 3313 may provide information related to the PAN, which has been input through a sensor functionally connected to the electronic device 3310, to the user by transferring the PAN to the payment application 3311.

According to an embodiment of the present disclosure, the payment manager may encrypt the PAN. For example, the payment manager 3313 may encrypt the PAN using a key included in the security application in order to protect the PAN from the outside. Further, for example, information received from the electronic device 3310 or the external device (e.g., a server or financial server) may be used in the encryption.

According to an embodiment of the present disclosure, the payment manager 3313 may register an encrypted PAN in the payment server 3320. For example, the payment manager 3313 may be functionally connected with the payment server 3320 to transfer the encrypted PAN. The encrypted PAN may be transferred through a protection channel for protection against the outside. For example, the payment manager 3313 may use a predetermined command (e.g., POST/enrollment) in registering the PAN in the payment server 3320. Further, the payment server 3320 may control the encrypted PAN through, for example, the token requester server 3321 included in the payment server 3320. Hereinafter, the encrypted PAN may be simply referred to as a PAN.

According to an embodiment of the present disclosure, POST/enrollment, which is a predetermined command, may be used when the payment manager 3313 requests the payment server 3320 to provide a signal for card registration. The parameter of POST/enrollment may include, for example, one parameter among type, entry, token requester Identity (ID), user Identity (ID), app Identity (ID), device Identity (ID), card reference Identity (ID), device name, device profile, device certificates for encryption and signing, device pair, payment instrument, and presentation mode. The type may include, for example, a payment card name (e.g., payment account brand). The payment card name may include, for example, at least one among VISA®, MasterCard®, American Express®, or Discover®. The entry may include, for example, a card entry method. The card entry method may include, for example, at least one among MANUAL, OCR, APP, and FILE. The device profile may include, for example, the type (e.g., ordinary electronic device or wearable device) of the electronic device. The payment instrument may include, for example, payment information (e.g., PAN, valid period (expiration date), or CVV). The presentation mode may include, for example, a payment method (e.g., MST or NFC) used for payment.

According to an embodiment of the present disclosure, the payment server 3320 may transfer user information to the token server 3330 included in the token server 3330. For example, the user information may include a device profile, a user Identity (ID), an app Identity (ID), and a card Identity (ID). The device profile may include a device ID (e.g., IMEI or a random value capable of specifying a device) and/or payment means (e.g., NFC and/or MST). The user ID may include, for example, a name of a user using the electronic device. The app ID may include, for example, an identifier of a payment application (e.g. a Samsung wallet). The card reference ID may include, for example, an identifier of a card to be registered in the electronic device. The card reference ID may be distinguished from the PAN and may have a predetermined value for managing a card.

According to an embodiment of the present disclosure, the token server 3330 may generate a channel (e.g., a session) between the payment server 3320 and the token server 3330 in response to the reception of the user information. The channel may encrypt information (e.g., data) transmitted or received through the channel, for example, using a common (public) key shared by the payment server 3320 and the token server 3330.

According to an embodiment of the present disclosure, the payment server may transfer a PAN (e.g., an encrypted PAN) to the token server 3330, using a channel generated between the payment server 3320 and the token server 3330.

According to an embodiment of the present disclosure, the token server 3330 may register the PAN received from the payment server 3320. The registration process may include a procedure of checking, using at least one ID among the user ID, app ID, device ID, and card reference ID, whether token issuance is possible. For example, the token server 3330 may perform a process of checking whether it is possible to issue a token for the card, using the card reference ID. A process of checking, by a user having registered using a device ID and a user ID, whether the device having been already registered is right. The token server 3330 may register the PAN received from the payment server 3320 and transfer a response (e.g., enrollment) to the registration to the payment server 3320. The response to the registration may include, for example, at least one among a card reference ID, a contract condition, card metadata, and issuer metadata.

According to an embodiment of the present disclosure, the payment server 3320 may transfer, to the payment manager 3313, information received from the token server 3330, for example, a response to the registration, to the payment manager 3313, and the payment manager 3313 may transfer the information to the payment server 3320. The response to the registration may include, for example, at least one among a card reference ID, a contract condition, card metadata, and issuer metadata. The card metadata may include the type, for example, a payment card name (e.g., payment account brand). The payment card name may include, for example, at least one among VISA®, MasterCard®, American Express®, or Discover®. The card metadata may include, for example, a card picture (e.g., card art). The card picture may be, for example, a picture identical and/or similar to a picture on an actual plastic card or a virtual card. The issuer metadata may include, for example, at least one among a name and a log of the financial server.

According to an embodiment of the present disclosure, at least a part of the response to the registration of PAN (e.g., POST/enrollment) may be information stored in the payment server 3320 or the payment manager 3313 and may be changed (e.g., generation, revision, or removal) according to a predetermined condition.

According to an embodiment of the present disclosure, the payment application 3311 may output at least a part of the response to the registration received from the payment manager 3313 to the outside, using an output unit of the device. For example, the payment application 3311 may display the contract conditions included in the response to the registration.

According to an embodiment of the present disclosure, the payment application 3311 may receive a command associated with the contract conditions through an input (e.g., user input). For example, the payment application 3311 may receive a command (e.g., accept) approving the contract conditions.

According to an embodiment of the present disclosure, the payment manager 3313 may transfer information corresponding to the command approving the contract conditions to the payment server 3320. The information may include, for example, a predetermined command (e.g., POST/tokens). The information corresponding to the command approving the contract conditions may be information related to the time when the input is received.

According to an embodiment of the present disclosure, the POST/tokens may be used when a token is requested after user's approval (e.g., accept) of the contract conditions in the operation of performing card registration to the payment server 3320 by the payment manager 3313. The parameters of POST/ tokens may include, for example, at least one among a card reference ID, contract condition approval (e.g., T&C acceptance), and timestamp. The timestamp may include, for example, a time point at which a command approving the contract conditions from the user is received.

According to an embodiment of the present disclosure, the payment server 3320 may transfer the command approving the contract conditions to the token server 3330. For example, the payment server 3320 may transfer information (e.g., T&C acceptance and/or timestamp) associated with the payment to the token server 3330. Further, the payment server 3320 may transfer the information relating to the payment to the token server 3330 and request the token server 3330 to set a token.

According to an embodiment of the present disclosure, the token server 3330 may transfer information relating to a token to be generated to the payment server 3320. The information relating to a token may include a random value (hereinafter, referred to as "token reference") generated by the token server 3330 in order to distinguish the token. The information relating to the token may include a token ID. The token reference and the token ID may be distinguished.

According to an embodiment of the present disclosure, the payment server 3320 may allocate a logical or physical space for the token reference in the payment server 3320, on the basis of the token reference received from the token server 3330. An ID for identifying a logical or physical space formed in the payment server 3320 may be generated. The resource ID may include an identifier of the registered (enrollment) resource, which may be configured in the form of uniform resource locator (URL). Further, the resource ID may include, for example, reference information storing information related to a token ID and may include an address at which the token ID is stored in the payment server 3320.

Further, as a response to the request (e.g., POST/tokens) from the payment manager 3313, the payment server 3320 may transfer at least one among a resource ID, status, and a token ID to the payment manager 3313. The status may include, for example, a state (e.g., active, suspension, resume, or disposal) of the token.

The payment manager 3313 may transfer at least a part of information, which has been transferred from the payment server 3320, to the payment application 3311. The information transferred to the payment application 3311 may include a token ID.

The token server may transfer a notification message (e.g., POST/notification) requiring progress of the issuance of a token to the payment server 3320. The notification message transferred from the payment server 3320 may include at least one among a token reference, a token ID, a token value, and a key for generation of a cryptogram. Further, the notification message transferred from the payment server 3320 may include an indication (e.g., op:Provision) which implies that the message is a message for the issuance of a token.

The payment server 3320 may transfer at least a part of the notification message from the token server 3330 to the payment manager 3313. The message transferred to the payment manager 3313 may include at least one among a token ID, a resource ID, and an indication for the issuance of a token.

The payment manager 3313 having received at least a part of the message transferred by the payment server 3320 may transfer a message (e.g., GET/token/{id}) requesting the payment server 3320 to provide a token value. The message requesting the token value may include a resource ID.

For example, in response to the request from the payment manager 3313, the payment server 3320 may transfer at least one of the token ID, the token state, the token value, and the key. The at least one of the token ID, the token state, the token value, and the key may be, for example, transferred after being encrypted.

According to various embodiments, the payment manager 3313 may store, in a trust zone, the information (e.g., the token ID, the token state, the token value, or the key) received from the payment server 3320. The trust zone may be included in, for example, the TEE. The payment manager 3313 may store at least one of the token ID, the token state, the token value, and the key in a security application included in the electronic device. 3310

According to an embodiment of the present disclosure, the payment manager 3313 may transfer, the information (e.g., the token ID, the token value, or the key) received from the payment server 3320, for example, a result stored in the trust zone, to the payment application 3311. For example, the payment manager 3313 may transfer a command (e.g., active) associated with token activation to the payment application 3311. For example, the payment manager 3313 may transfer, to the payment application 3311, information reporting that the state of the card related to the payment function is an active state.

According to an embodiment of the present disclosure, the payment application 3311 may change the state of the PAN recognized by the electronic device 3310. For example, the payment application 3311 may change (e.g., enable) the state of the PAN to enable payment using the PAN.

According to an embodiment of the present disclosure, the payment application 3311 may transfer the changed state of the PAN to the payment manager 3313. For example, the payment application 3311 may transfer information (e.g., PAN enrolled) indicating that the PAN has been registered, to the payment manager 3313.

According to an embodiment of the present disclosure, the payment manager 3313 may transfer the changed state of the PAN to the payment server 3320. For example, the payment manager 3313 may transfer the information reporting that the state of the PAN has been changed to a payable state (e.g., enable) to the payment server 3320 using a predetermined command (e.g., POST/reports). The payment manager 3313 may perform, for example, state synchronization with the payment server 3320.

According to an embodiment of the present disclosure, the payment server 3320 may transfer the changed state of the PAN to the token server 3330. For example, the payment server 3320 may transmit a response (e.g., acknowledgement or ACK PAN enrolled) to the token server 3330.

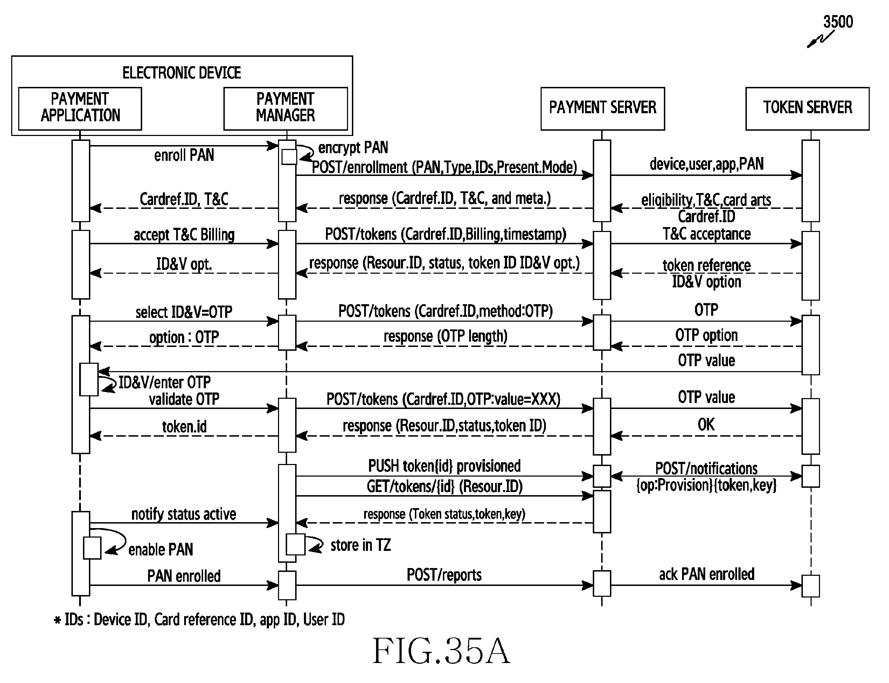

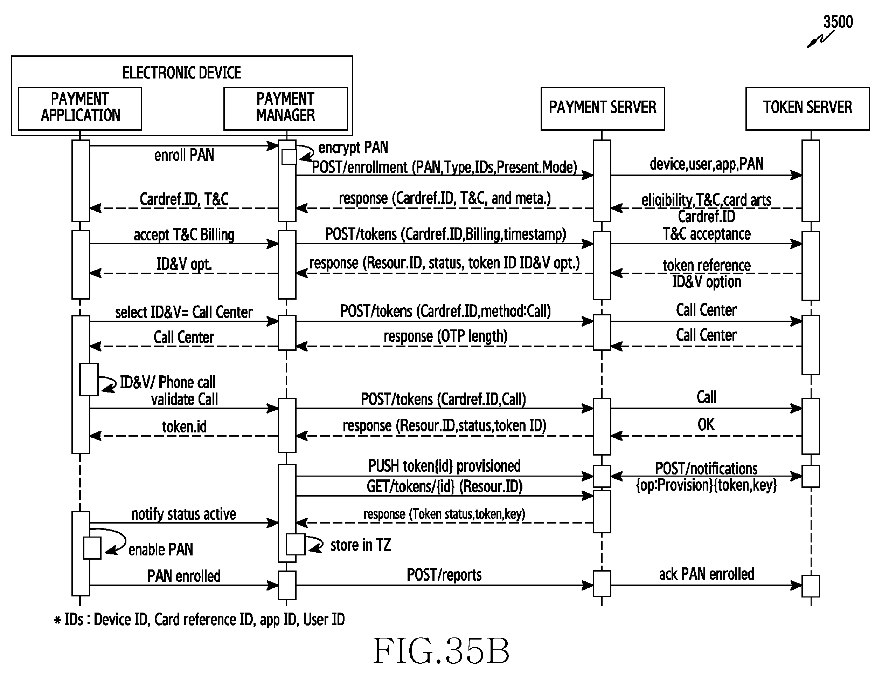

FIGs. 35A and 35B are signal flow diagrams 3500 and 3510 of a token issuing method including an identification method of an electronic device 3310 according to various embodiments of the present disclosure.

FIG. 35A is a signal flow diagram 3500 of a token issuing method using OTP in an identification process of an electronic device 3310 according to an embodiment of the present disclosure.

Referring to FIG. 35A, the solid line may include a request (e.g., a request or a call) command and the dotted line may include a response (e.g., a response or a return) command. The payment system may include an electronic device 3310, a payment server 3320, or a token server 3330. The electronic device 3310 may include, for example, a payment application 3311 and/or a payment manager 3313.

According to an embodiment of the present disclosure, the electronic device 3310 may store information that can be used for payment, using an external input or a sensor (e.g., camera sensor or OCR) functionally connected to the electronic device. For example, the information that can be used for payment may include card information (e.g., a PAN), a valid period, CVV, or a user name. The electronic device 3310 may execute an application (e.g., a payment application) included in the electronic device 3310 based on an external input (e.g., a user input). The electronic device 3310 may store, in a payment application 3311 included in the electronic device, 3310 information that can be used for payment through an external input (e.g., a touch, a double touch, a long press, a leftward/rightward movement after touch, a gesture, or a drag and stop) or a sensor functionally connected to the electronic device 3310. The information that can be used for payment may include, for example, PAN. The PAN may include an account number associated with a BIN generated by a financial server.

According to an embodiment of the present disclosure, the electronic device 3310 may store information, which is associated with the payment application 3311 and can be used for payment, in the electronic device 3310 or the external device (e.g., server). For example, the electronic device 3310 may store information, which can be used for payment corresponding to the payment application 3311, in a memory (e.g., the memory 130 of FIG. 1) included in the electronic device 3310 or in an external device (e.g., the first electronic device 102, the second electronic device 104, or the server 106 of FIG. 1).

According to an embodiment of the present disclosure, the electronic device 3310 may provide an interface for the information that can be used for payment. The interface may include the information that can be used for payment, for example, letters for the PAN, a picture, an icon, a notification, or an indicator.

According to an embodiment of the present disclosure, the electronic device 3310 may register a PAN using the payment application 3311. For example, the electronic device 3310 may transfer the PAN to the payment application 3311. The payment manager 3313 may provide information related to the PAN, which has been input through a sensor functionally connected to the electronic device 3310, to the user by transferring the PAN to the payment application 3311.

According to an embodiment of the present disclosure, the payment manager 3313 may encrypt the PAN. For example, the payment manager 3313 may encrypt the PAN using a key included in the security application in order to protect the PAN from the outside. Further, for example, information received from the electronic device 3310 or the external device (e.g., a server or financial server) may be used in the encryption.

According to an embodiment of the present disclosure, the payment manager 3313 may register an encrypted PAN in the payment server 3320. For example, the payment manager 3313 may be functionally connected with the payment server 3320 to transfer the encrypted PAN. The encrypted PAN may be transferred through a protection channel for protection against the outside. For example, the payment manager 3313 may use a predetermined command (e.g., POST/enrollment) in registering the PAN in the payment server 3320. Further, the payment server 3320 may control the encrypted PAN through, for example, the token requester server 3321 included in the payment server 3320. Hereinafter, the encrypted PAN may be simply referred to as a PAN.

According to an embodiment of the present disclosure, POST/enrollment, which is a predetermined command, may be used when the payment manager 3313 requests the payment server 3320 to provide a signal for card registration. The parameter of POST/enrollment may include, for example, one parameter among type, entry, token requester Identity (ID), user Identity (ID), app Identity (ID), device Identity (ID), card reference Identity (ID), device name, device profile, device certificates for encryption and signing, device pair, payment instrument, and presentation mode. The type may include, for example, a payment card name (e.g., payment account brand). The payment card name may include, for example, at least one among VISA@, MasterCard®, American Express@, or Discover@. The entry may include, for example, a card entry method. The card entry method may include, for example, at least one among MANUAL, OCR, APP, and FILE. The device profile may include, for example, the type (e.g., ordinary electronic device or wearable device) of the electronic device. The payment instrument may include, for example, payment information (e.g., PAN, valid period, or CVV). The presentation mode may include, for example, a payment method (e.g., MST or NFC) used for payment.

According to an embodiment of the present disclosure, the payment server 3320 may transfer user information to the token server 3330 included in the token server 3330. For example, the user information may include a device profile, a user Identity (ID), an app Identity (ID), and a card reference Identity (ID). The device profile may include a device ID (e.g., IMEI or a random value capable of specifying a device) and/or payment means (e.g., NFC and/or MST). The user ID may include, for example, a name of a user using the electronic device. The app ID may include, for example, an identifier of a payment application (e.g. a Samsung wallet). The card reference ID may include, for example, an identifier of a card to be registered in the electronic device. The card reference ID may be distinguished from the PAN and may have a predetermined value for managing a card.

According to an embodiment of the present disclosure, the token server 3330 may generate a channel (e.g., session) between the payment server 3320 and the token server 3330 in response to the reception of the user information. The channel may encrypt information (e.g., data) transmitted or received through the channel, for example, using a common (public) key shared by the payment server 3320 and the token server 3330.

The payment server 3320 may transfer a PAN (e.g., an encrypted PAN) to the token server 3330, using a channel generated between the payment server 3320 and the token server 3330.

According to an embodiment of the present disclosure, the token server 3330 may register the PAN received from the payment server 3320. The registration process may include a procedure of checking, using at least one ID among the user ID, app ID, device ID, and card reference ID, whether token issuance is possible. For example, the token server 3330 may perform a process of checking whether it is possible to issue a token for the card, using the card reference ID. The present disclosure includes a process of checking, by a user having registered using a device ID and a user ID, whether the device having been already registered is correct. The token server 3330 may register the PAN received from the payment server 3320 and transfer a response to the registration to the payment server 3320. The response to the registration may include, for example, at least one among a card reference ID, a contract condition, card metadata, and issuer metadata.

According to an embodiment of the present disclosure, the payment server 3320 may transfer, to the payment manager 3313, information received from the token server 3330, for example, a response to the registration, to the payment manager 3313, and the payment manager 3313 may transfer the information to the payment server 3320. The response to the registration may include, for example, at least one among a card reference ID, a contract condition, card metadata, and issuer metadata. The card metadata may include the type, for example, a payment card name (e.g., payment account brand). The payment card name may include, for example, at least one among VISA®, MasterCard®, American Express®, or Discover®. The card metadata may include, for example, a card picture (e.g., card art). The card picture may be, for example, a picture identical and/or similar to a picture on an actual plastic card or a virtual card. The issuer metadata may include, for example, at least one among a name and a log of the financial server.

According to an embodiment of the present disclosure, at least a part of the response to the registration of PAN (e.g., POST/enrollment) may be information stored in the payment server 3320 or the payment manager 3313 and may be changed (e.g., generation, revision, or removal) according to a predetermined condition.

According to an embodiment of the present disclosure, the payment application 3311 may output at least a part of the response to the registration received from the payment manager 3313 to the outside, using an output unit of the electronic device 3310. For example, the payment application 3311 may display the contract conditions included in the response to the registration.

According to an embodiment of the present disclosure, the payment application 3311 may receive a command associated with the contract conditions through an input (e.g., user input). For example, the payment application 3311 may receive a command (e.g., accept) approving the contract conditions.

According to an embodiment of the present disclosure, the payment application 3311 may receive an input of information associated with a billing address of a user. The billing address is information associated with the card and may include address, postal code, nation, name, and phone number of a card user.

According to an embodiment of the present disclosure, the payment manager 3313 may transfer information corresponding to the command approving the contract conditions to the payment server. The information may include, for example, a predetermined command (e.g., POST/tokens). The information corresponding to the command approving the contract conditions may be information related to the time when the input is received.

According to an embodiment of the present disclosure, the payment manager 3313 may transfer a billing address to the payment server 3320. The information may include, for example, a predetermined command (e.g., POST/tokens).

According to an embodiment of the present disclosure, the POST/tokens may be used when a token is requested after user's approval (e.g., accept) of the contract conditions in the operation of performing card registration to the payment server 3320 by the payment manager 3313. The parameters of POST/ tokens may include, for example, at least one among a card reference ID, contract condition approval (e.g., T&C acceptance), timestamp, and billing address. The timestamp may include, for example, a time point at which a command approving the contract conditions from the user is received.

According to an embodiment of the present disclosure, the payment server 3320 may transfer the command approving the contract conditions to the token server 3330. For example, the payment server 3320 may transfer information (e.g., T&C acceptance and/or timestamp) to the token server 3330. Further, the payment server 3330 may transfer the information relating to the payment to the token server 3330 and request the token server 3330 to set a token.

According to an embodiment of the present disclosure, the token server 3330 may transfer information relating to a token to be generated to the payment server 3320. The information relating to a token may include a random value (e.g., token reference) generated by the token server 3330 in order to distinguish the token. The information relating to the token may include a token ID. The token reference and the token ID may be distinguished. Further, the information relating to the token may include at least one piece of information relating to an identification item (e.g., option).

According to an embodiment of the present disclosure, the token ID may include, for example, index information related to a token. The identification item may include, for example, at least one method among call, SMS, OTP, and App-to-App method. The identification item may be determined by, for example, the token server 3330, and the token server 3330 may determine at least one identification item. The determining of at least one identification item may include, for example, at least two methods related to authentication. Further, the determining of at least one identification item may be, for example, based on the policy.

At least two identification items or methods may be used. For example, an additional identification item or method may be used as well as the OTP method described above as an identification item or method. A plurality of identification items or methods may be used, for example, simultaneously or sequentially in the payment system.

When using at least two identification items or methods according to various embodiments, a user may optionally select an identification item or method. For example, when the token server 3330 does not limit the identification item, the user may use at least one among the identification items available in the electronic device 3310.

According to an embodiment of the present disclosure, the payment server 3320 may allocate a logical or physical space for the token reference in the payment server 3320, on the basis of the token reference received from the token server 3330. An ID for identifying a logical or physical space formed in the payment server 3320 may be generated. The resource ID may include an identifier of the registered (enrollment) resource, which may be configured in the form of a URL. Further, the resource ID may include, for example, reference information storing information related to a token ID and may include an address at which the token ID is stored in the payment server 3320.

According to an embodiment of the present disclosure, based on the information received from the token server 3330, the payment server 3320 may transfer at least one among the token ID, a resource ID, the token state, and an identification item to the payment manager 3313. For example, in response to the request (e.g., POST/tokens) from the payment manager 3313, the payment server 3320 may transfer at least one of the token ID, the resource ID, the token state, and the identification item. The at least one of the token ID, the resource ID, the token state, and the identification item may be, for example, transferred after being encrypted. Further, the payment server 3320 may include, for example, a status or identification method. The status may include, for example, a state (e.g., active, suspension, resume, or disposal) of the token. The identification method may include, for example, an activation method for the token, and the type of the identification method may include, for example, at least one among CODE, CALL, APP, or LINK.

According to an embodiment of the present disclosure, the payment manager 3313 may transfer the information (e.g., the token ID, the resource ID, the token state, or the identification item) received from the payment server 3320 to the payment application 3311. For example, the payment manager 3313 may transfer a command (e.g., pending) associated with token to the payment application 3311. For example, the payment manager 3313 may transfer, to the payment application 3311, information reporting that the state of the card related to the payment function is a standby (pending) state.

According to an embodiment of the present disclosure, the payment manager 3313 may transfer the identification item received from the token requester server to the payment application 3311 to provide an interface so that a user can select the identification item. Further, the payment manager 3313 may provide, for example, an interface to enable the token requester server 3321 included in the payment server 3320 to use at least one item or method as the identification item. The electronic device may perform the identification using, for example, a plurality of identification items or methods.

According to an embodiment of the present disclosure, the payment application 3311 may use an OTP method as the identification item or method. For example, the payment application 3311 may receive the OTP method from a user as the identification item or method.

According to an embodiment of the present disclosure, the payment manager 3313 may transfer the received or acquired identification item or method to the payment server 3320. For example, the payment manager 3313 may transfer the identification item or method to the payment server 3320, using a predetermined command (e.g. POST/tokens or POST/tokens, OTP). Further, the payment manager 3313 may transfer, for example, a card reference ID and the identification method to the payment server 3320. The identification method may include the OTP method received from the user.

According to an embodiment of the present disclosure, the payment server 3320 may transfer the received or acquired identification item or method to the token server 3330. For example, the payment server 3320 may transfer the OTP method, which is an identification item or method received or acquired from the user, to the token server 3330.

According to an embodiment of the present disclosure, the token server 3330 may generate an OTP according to the OTP method received from the payment server 3320. For example, the token server 3330 may generate the OTP based on a preconfigured rule or algorithm. The OTP may include, for example, numbers, letters, or predetermined information (e.g., pattern or picture).

According to an embodiment of the present disclosure, the token server 3330 may transfer information on the OTP (e.g., OTP option) to the payment server 3320.

According to an embodiment of the present disclosure, the payment server 3320 may transfer the information on the OTP (e.g., OTP option) to the payment manager 3313. The information on the OTP may include, for example, the length of the OTP. The length of the OTP may include, for example, digits, and the digits may include, for example, four digits or six digits.

According to an embodiment of the present disclosure, the payment manager 3313 may transfer the information on the OTP (e.g., OTP option) to the payment application 3311. The information on the OTP may include, for example, format information of the OTP.

According to an embodiment of the present disclosure, the token server 3330 may transfer the numerical value or value of the OTP to the payment application 3311. For example, the token server 3330 may use a communication channel to transfer the OTP value or numerical value. The communication channel may include, for example, an SMS or e-mail.

According to an embodiment of the present disclosure, the payment application 3311 may provide an interface displaying information relating to the OTP value or numerical value. For example, the payment application 3311 may provide the OTP value or numerical value, using numbers, letters, or predetermined information (e.g., pattern or picture).

According to an embodiment of the present disclosure, the payment application 3311 may acquire data, from the user, using an interface displaying information relating to the OTP value or numerical value. For example, the payment application 3311 may acquire the OTP value or numerical value through an external device functionally connected to the payment application 3311 or a user input (e.g., touch). The payment application 3311 may change the interface displaying the information relating to the OTP value or numerical value, based on the digits received from the payment server 3320.

According to an embodiment of the present disclosure, the payment application 3311 may transfer the OTP value or numerical value acquired through a user input or from an external device to the payment manager 3313. The OTP value or numerical value acquired through a user input or from an external device may be used in a user authentication operation.

According to an embodiment of the present disclosure, the payment manager 3313 may transfer the OTP value or numerical value acquired through a user input or from an external device to the payment server 3320. The payment manager 3313 may transfer the OTP value or numerical value acquired from external device or through a user input to the payment server 3320, using a predetermined command (e.g., POST/tokens{OTP:value=data).

According to an embodiment of the present disclosure, the payment server 3320 may transfer the OTP value or numerical value acquired through a user input or from an external device to the token server 3330.

According to an embodiment of the present disclosure, the token server 3330 may determine the validity of the OTP value or numerical value received from the payment server 3320. For example, the token server may determine the validity of the identification item (method) acquired from the user and information (data) associated with the identification item. For example, the token server 3330 may determine whether the identification items and data generated by the token server 3330 are identical or similar to information (e.g., OTP method and the OTP value or numerical value) received from the payment server 3320.

According to an embodiment of the present disclosure, when the identification items and data generated by the token server 3330 are identical or similar to information received from the payment server 3320, the token server 3330 may determine the identification items and data as valid. Further, when it is determined that the identification items and data are valid, the token server 3330 may change the token suspension (token pending) indicating the state of the token. For example, the state of the token suspension may be changed to an activation state.

The token server 3330 may transfer a notification message (e.g., POST/notification) requiring the progress of the issuance of a token to the payment server 3320. The notification message transferred from the payment server 3320 may include at least one among a token reference, a token ID, a token value, and a key for generation of a cryptogram. Further, the notification message transferred from the payment server 3320 may include an indication (e.g., op:Provision) which implies that the message is a message for the issuance of a token.

The payment server 3320 may transfer at least a part of the notification message from the token server 3330 to the payment manager 3313. The message transferred to the payment manager 3313 may include at least one among a token ID, a resource ID, and an indication for the issuance of a token.

The payment manager 3313 having received at least a part of the message transferred by the payment server 3320 may transfer a message (e.g., GET/token/{id}) requesting the payment server 3320 to provide a token value. The message requesting the token value may include a resource ID.

For example, in response to the request from the payment manager 3313, the payment server 3320 may transfer at least one of the token ID, the token state, the token value, and the key. The at least one of the token ID, the token state, the token value, and the key may be, for example, transferred after being encrypted.

According to an embodiment of the present disclosure, the payment manager 3313 may store, in a trust zone, the information (e.g., the token ID, the token state, the token value, or the key) received from the payment server 3320. The trust zone may be included in, for example, the TEE. The payment manager 3313 may store at least one of the token ID, the token state, the token value, and the key in a security application included in the electronic device 3310.

According to an embodiment of the present disclosure, the payment manager 3313 may transfer, the information (e.g., the token ID, the token value, or the key) received from the payment server 3320, for example, a result stored in the trust zone, to the payment application 3311. For example, the payment manager 3313 may transfer a command (e.g., active) associated with token activation to the payment application 3311. For example, the payment manager 3313 may transfer, to the payment application 3311, information reporting that the state of the card related to the payment function is an active state.

According to an embodiment of the present disclosure, the payment application 3311 may change the state of the PAN recognized by the electronic device 3310. For example, the payment application 3311 may change (e.g., enable) the state of the PAN to enable payment using the PAN.

According to an embodiment of the present disclosure, the payment application 3311 may transfer the changed state of the PAN to the payment manager 3313. For example, the payment application 3311 may transfer information (e.g., PAN enrolled) indicating that the PAN has been registered, to the payment manager 3313.

According to an embodiment of the present disclosure, the payment manager 3313 may transfer the changed state of the PAN to the payment server 3320. For example, the payment manager 3313 may transfer the information reporting that the state of the PAN has been changed to a payable state (e.g., enable) to the payment server 3320 using a predetermined command (e.g., POST/reports). The payment manager 3313 may perform, for example, state synchronization with the payment server 3320.

According to an embodiment of the present disclosure, the payment server 3320 may transfer the changed state of the PAN to the token server 3330. For example, the payment server 3320 may transmit a response (e.g., acknowledgement or ACK PAN enrolled) to the token server 3330.

FIG. 35B is a signal flow diagram 3510 of a token issuing method using a call center in an identification process of an electronic device according to an embodiment of the present disclosure.

Referring to FIG. 35B, the solid line may include a request (e.g., a request or a call) command and the dotted line may include a response (e.g., a response or a return) command. The payment system may include an electronic device 3310, a payment server 3320, or a token server 3330. The electronic device 3310 may include, for example, a payment application 3311 and/or a payment manager 3313.

According to an embodiment of the present disclosure, the electronic device 3310 may store information that can be used for payment, using an external input or a sensor (e.g., camera sensor or OCR) functionally connected to the electronic device. For example, the information that can be used for payment may include card information (e.g., PAN), a valid period, CVV, or a user name. The electronic device 3310 may execute an application (e.g., a payment application 3311) included in the electronic device 3310 on the basis of an external input (e.g., a user input). The electronic device 3310 may store, in a payment application included in the electronic device 3310, information that can be used for payment through an external input (e.g., touch, double touch, long press, leftward/rightward movement after touch, gesture, or drag and stop) or a sensor functionally connected to the electronic device 3310. The information that can be used for payment may include, for example, PAN. The PAN may include an account number associated with a BIN generated by a financial server.

According to an embodiment of the present disclosure, the electronic device 3310 may store information, which is associated with the payment application 3311 and can be used for payment, in the electronic device 3310 or the external device (e.g., a server). For example, the electronic device 3310 may store information, which can be used for payment corresponding to the payment application 3311, in a memory (e.g., the memory 130 of FIG. 1) included in the electronic device 3310 or in an external device 102, 104, or the server 106 of FIG. 1.

According to an embodiment of the present disclosure, the electronic device 3310 may provide an interface for the information that can be used for payment. The interface may include the information that can be used for payment, for example, letters for the PAN, a picture, an icon, a notification, or an indicator.

According to an embodiment of the present disclosure, the electronic device 3310 may register a PAN using the payment application 3311. For example, the electronic device 3310 may transfer the PAN to the payment application 3311. The payment manager 3313 may provide information related to the PAN, which has been input through a sensor functionally connected to the electronic device 3310, to the user by transferring the PAN to the payment application 3311.

According to an embodiment of the present disclosure, the payment manager 3313 may encrypt the PAN. For example, the payment manager 3313 may encrypt the PAN using a key included in the security application in order to protect the PAN from the outside. Further, for example, information received from the electronic device 3310 or the external device (e.g., a server or financial server) may be used in the encryption.

According to an embodiment of the present disclosure, the payment manager 3313 may register an encrypted PAN in the payment server 3320. For example, the payment manager 3320 may be functionally connected with the payment server 3320 to transfer the encrypted PAN. The encrypted PAN may be transferred through a protection channel for protection against the outside. For example, the payment manager 3313 may use a predetermined command (e.g., POST/enrollment) in registering the PAN in the payment server 3320. Further, the payment server 3320 may control the encrypted PAN through, for example, the token requester server 3321 included in the payment server 3320. Hereinafter, the encrypted PAN may be simply referred to as a PAN.

According to an embodiment of the present disclosure, POST/enrollment, which is a predetermined command, may be used when the payment manager requests the payment server 3320 to provide a signal for card registration. The parameter of POST/enrollment may include, for example, one parameter among type, entry, token requester Identity (ID), user Identity (ID), app Identity (ID), device Identity (ID), card reference Identity (ID), device name, device profile, device certificates for encryption and signing, device pair, payment instrument, and presentation mode. The type may include, for example, a payment card name (e.g., payment account brand). The payment card name may include, for example, at least one among VISA®, MasterCard®, American Express®, or Discover®. The entry may include, for example, a card entry method. The card entry method may include, for example, at least one among MANUAL, OCR, APP, and FILE. The device profile may include, for example, the type (e.g., ordinary electronic device or wearable device) of the electronic device 3310. The payment instrument may include, for example, payment information (e.g., PAN, valid period, or CVV). The presentation mode may include, for example, a payment method (e.g., MST or NFC) used for payment.

According to an embodiment of the present disclosure, the payment server 3320 may transfer user information to the token server 3330 included in the token server 3330. For example, the user information may include a device profile, a user Identity (ID), an app Identity (ID), and a card Identity (ID). The device profile may include a device ID (e.g., IMEI or a random value capable of specifying a device) and/or payment means (e.g., NFC and/or MST). The user ID may include, for example, a name of a user using the electronic device 3310. The app ID may include, for example, an identifier of a payment application 3311 (e.g. a Samsung wallet). The card reference ID may include, for example, an identifier of a card to be registered in the electronic device 3310. The card reference ID may be distinguished from the PAN and may have a predetermined value for managing a card.

According to an embodiment of the present disclosure, the token server 3330 may generate a channel (e.g., session) between the payment server 3320 and the token server 3330 in response to the reception of the user information. The channel may encrypt information (e.g., data) transmitted or received through the channel, for example, using a common (public) key shared by the payment server and the token server 3330.

According to an embodiment of the present disclosure, the payment server 3320 may transfer a PAN (e.g., an encrypted PAN) to the token server 3330, using a channel generated between the payment server 3320 and the token server 3330.

According to an embodiment of the present disclosure, the token server 3330 may register the PAN received from the payment server 3320. The registration process may include a procedure of checking, using at least one ID among the user ID, app ID, device ID, and card reference ID, whether token issuance is possible. For example, the token server 3330 may perform a process of checking whether it is possible to issue a token for the card, using the card reference ID. The present disclosure includes a method of checking, by a user having registered using a device ID and a user ID, whether the device having been already registered is correct. The token server 3330 may register the PAN received from the payment server 3320 and transfer a response to the registration to the payment server 3320. The response to the registration may include, for example, at least one among a card reference ID, a contract condition, card metadata, and issuer metadata.

According to an embodiment of the present disclosure, the payment server 3320 may transfer information received from the token server 3330, for example, a response to the registration, to the payment manager 3313, and the payment manager 3313 may transfer the information to the payment server 3320. The response to the registration may include, for example, at least one among a card reference ID, a contract condition, card metadata, and issuer metadata. The card metadata may include the type, for example, a payment card name (e.g., payment account brand). The payment card name may include, for example, at least one among VISA®, MasterCard®, American Express®, or Discover®. The card metadata may include, for example, a card picture (e.g., card art). The card picture may be, for example, a picture identical and/or similar to a picture on an actual plastic card or a virtual card. The issuer metadata may include, for example, at least one among a name and a log of the financial server.

According to an embodiment of the present disclosure, at least a part of the response to the registration of PAN (e.g., POST/enrollment) may be information stored in the payment server 3320 or the payment manager 3313 and may be changed (e.g., generation, revision, or removal) according to a predetermined condition.

According to an embodiment of the present disclosure, the payment application 3311 may output at least a part of the response to the registration received from the payment manager 3313 to the outside, using an output unit of the device 3310. For example, the payment application 3311 may display the contract conditions included in the response.

According to an embodiment of the present disclosure, the payment application 3311 may receive a command associated with the contract conditions through an input (e.g., user input). For example, the payment application 3311 may receive a command (e.g., accept) approving the contract conditions.

According to an embodiment of the present disclosure, the payment application 3311 may receive an input of information associated with a billing address of a user. The billing address is information associated with the card and may include address, postal code, nation, name, and phone number of a card user.

According to an embodiment of the present disclosure, the payment manager 3313 may transfer information corresponding to the command approving the contract conditions to the payment server 3320. The information may include, for example, a predetermined command (e.g., POST/tokens). The information corresponding to the command approving the contract conditions may be information related to the time when the input is received.

According to an embodiment of the present disclosure, the payment manager 3313 may transfer a billing address to the payment server 3320. The information may include, for example, a predetermined command (e.g., POST/tokens).

According to an embodiment of the present disclosure, the POST/tokens may be used when a token is requested after user's approval (e.g., accept) of the contract conditions in the operation of performing card registration to the payment server 3320 by the payment manager 3313. The parameters of POST/ tokens may include, for example, at least one among a card reference ID, contract condition approval (e.g., T&C acceptance), timestamp, and billing address. The timestamp may include, for example, a time point at which a command approving the contract conditions from the user is received.

According to an embodiment of the present disclosure, the payment server 3320 may transfer the command approving the contract conditions to the token server 3330. For example, the payment server 3320 may transfer information (e.g., T&C acceptance and/or timestamp) to the token server 3330. Further, the payment server 3320 may transfer the information relating to the payment to the token server 3330 and request the token server 3330 to set a token.

According to an embodiment of the present disclosure, the token server 3330 may transfer information relating to a token to be generated to the payment server 3320. The information relating to a token may include a random value (hereinafter, referred to as "token reference") generated by the token server 3330 in order to distinguish the token. The information relating to the token may include a token ID. The token reference and the token ID may be distinguished. Further, the information relating to the token may include at least one piece of information relating to an identification item (e.g., option).

According to an embodiment of the present disclosure, the token ID may include, for example, index information related to a token. The identification item may include, for example, at least one method among call, SMS, OTP, and App-to-App method. The identification item may be determined by, for example, the token server 3330, and the token server 3330 may determine at least one identification item. The determining of at least one identification item may include, for example, at least two methods related to authentication. Further, the determining of at least one identification item may be, for example, based on the policy.

At least two identification items or methods may be used according to various embodiments of the present disclosure. For example, an additional identification item or method may be used as well as the OTP method described above as an identification item or method. A plurality of identification items or methods may be used, for example, simultaneously or sequentially in the payment system.

When using at least two identification items or methods according to various embodiments of the present disclosure, a user may optionally select an identification item or method. For example, when the token server does not limit the identification item, the user may use at least one among the identification items available in the electronic device 3310.

According to an embodiment of the present disclosure, the payment server 3320 may allocate a logical or physical space for the token reference in the payment server 3320, on the basis of the token reference received from the token server 3330. An ID for identifying a logical or physical space formed in the payment server 3320 may be generated. The resource ID may include an identifier of the registered (enrollment) resource, which may be configured in the form of a URL. Further, the resource ID may include, for example, reference information storing information related to a token ID and may include an address at which the token ID is stored in the payment server 3320.

According to an embodiment of the present disclosure, based on the information received from the token server 3330, the payment server 3330 may transfer at least one among the token ID, a resource ID, the token state, and an identification item to the payment manager 3313. For example, in response to the request (e.g., POST/tokens) from the payment manager 3313, the payment server 3320 may transfer at least one of the token ID, the resource state, the token state, and the identification item. The at least one of the token ID, the resource ID, the token state, and the identification item may be, for example, transferred after being encrypted. Further, the payment server 3320 may include, for example, a status or identification method. The status may include, for example, a state (e.g., active, suspension, resume, or disposal) of the token. The identification method may include, for example, an activation method for the token, and the type of the identification method may include, for example, at least one among CODE, CALL, APP, or LINK.

According to an embodiment of the present disclosure, the payment manager 3313 may transfer the information (e.g., the token ID, the resource ID, the token state, or the identification item) received from the payment server 3320 to the payment application 3311. For example, the payment manager 3313 may transfer a command (e.g., pending) associated with token to the payment application 3311. For example, the payment manager 3313 may transfer, to the payment application 3311, information reporting that the state of the card related to the payment function is a standby (pending) state.

According to an embodiment of the present disclosure, the payment manager 3313 may transfer the identification item received from the token requester server 3321 to the payment application 3311 to provide an interface so that a user can select the identification item. Further, the payment manager 3313 may provide, for example, an interface to enable the token requester server 3321 included in the payment server 3320 to use at least one item or method as the identification item. The electronic device 3310 may perform the identification using, for example, a plurality of identification items or methods.

According to an embodiment of the present disclosure, the payment application 3311 may use a call center method as the identification item or method. For example, the payment application 3311 may receive the call center method from a user as the identification item or method.

According to an embodiment of the present disclosure, the payment manager 3313 may transfer the received or acquired identification item or method to the payment server 3320. For example, the payment manager 3313 may transfer the identification item or method to the payment server 3320, using a predetermined command (e.g. POST/tokens or tokens, call). Further, the payment manager 3313 may transfer, for example, a card reference ID and the identification method to the payment server 3320. The identification method may include the call center method (e.g., POST/tokens, CALL) received from the user.

According to an embodiment of the present disclosure, the payment server 3320 may transfer the received or acquired identification item or method to the token server 3330. For example, the payment server 3320 may transfer the call center method, which is an identification item or method received or acquired from the user, to the token server 3330.

According to an embodiment of the present disclosure, the token server 3330 may prepare a call connection (e.g., counsel phone call) according to the call center method received from the payment server 3320. For example, the token server 3330 may use an electronic device associated with the call center method received from the user and a number (e.g., phone number) of the electronic device 3310. The token server 3330 may receive, for example, the electronic device 3310 or the number of the electronic device through at least one among the payment application 3311, the payment manager 3313, and the payment server 3320, or may receive it using a payment network.

According to an embodiment of the present disclosure, the token server 3330 may transfer a notification associated with the call center method to the payment server 3320. The notification associated with the call center method may include, for example, the electronic device 3310 or the number of the electronic device 3310.

According to an embodiment of the present disclosure, the payment server 3320 may transfer a notification associated with the call center method to the payment manager 3313. The notification associated with the call center method may include, for example, the electronic device 3310 or the number of the electronic device 3310.

According to an embodiment of the present disclosure, the payment manager 3313 may transfer a notification associated with the call center method to the payment application 3311. The notification associated with the call center method may include, for example, the electronic device 3310 or the number of the electronic device 3310.

According to an embodiment of the present disclosure, at least one among the token server 3330 and the payment server 3320 may perform a communication connection (e.g., phone connection) associated with the call center method. For example, at least one among the token server and the payment server 3320 may use a communication network (e.g., 2G, 3G, 4G, or LTE communication networks) in order to perform the communication connection.

According to an embodiment of the present disclosure, the payment application 3311 may provide an interface displaying information relating to the call center method. For example, the payment application 3311 may use the electronic device 3310 or an application (e.g., phone application) included in the electronic device 3310 in order to perform the communication connection.

According to an embodiment of the present disclosure, the payment application 3311 may perform an authentication operation, using an interface displaying information relating to the call center method from the user. For example, the payment application 3311 may perform the authentication operation, using an external device functionally connected to the payment application 3311 or a user input (e.g., touch). Further, the payment application 3311 may perform the authentication operation, based on the communication connection. For example, the user may transfer, through the communication connection, information that the authentication operation has succeeded or has been completed. The result (e.g., success or completion of authentication) of the authentication operation may be shared through synchronization with, for example, the token server 3330.

According to an embodiment of the present disclosure, the token server 3330 may identify the authentication operation for the call center method performed in the payment application 3311. For example, the token server 3330 may identify the result of the authentication (e.g., the identification operation) performed using the electronic device 3310 through the communication connection.

According to an embodiment of the present disclosure, the token server 3330 may change the state of the token when the result of the authentication operation is success or authentication completion. For example, the state of the token may be changed to activation.

According to an embodiment of the present disclosure, the payment manager may transfer a value acquired through a user input or from an external device during call to the payment server 3320. The payment manager 3313 may transfer the value acquired from the external device or through the user input during call to the payment server 3320, using a predetermined command (e.g., POST/tokens{Call}).

According to an embodiment of the present disclosure, the payment manager 3313 may transfer a message for identifying a result of authentication performed during a call to the payment server 3320. The payment manager 3313 may transfer a command identifying a result of authentication performed during a call to the payment server 3320, using a predetermined command (e.g., POST/tokens{Call}).

According to an embodiment of the present disclosure, the payment server 3320 may transfer a value acquired through a user input or from an external device during call to the token server 3330.

According to an embodiment of the present disclosure, the payment server 3320 may transfer a message for identifying a result of authentication performed during a call to the token server 3330.

According to an embodiment of the present disclosure, the token server 3330 may determine the validity of the value, which has been acquired from the user input or the external device and has been received from the payment server 3320. For example, the token server 3330 may determine the validity of the identification item (method) acquired from the user and information (data) associated with the identification item. For example, the token server 3330 may determine whether the identification items and data generated by the token server 330 are identical or similar to information (e.g., call method and the input value) received from the payment server 3320.

According to an embodiment of the present disclosure, the token server 3330 may identify the result of authentication performed in the call center. For example, the token server 3330 may determine the validity of the identification item (method) and information (data) associated with the identification item, which have been received from the payment server 3320 on the basis of a result through the call center performed with the user. For example, the token server 3330 may determine whether the token server 3330 is allowed to transfer data to the electronic device 3310, based on information received in the call center.

According to an embodiment of the present disclosure, when the identification items and data generated by the token server 3330 are identical or similar to information received from the payment server 3320, the token server 3330 may determine the identification items and data as valid. When receiving, from the call center, a result reporting that the identification items and data are valid, the token server 3330 may determine the identification items and data as valid. Further, when it is determined that the identification items and data are valid, the token server 3330 may change the token suspension indicating the state of the token. For example, the state of the token suspension may be changed to an activation state.

The token server 3330 may transfer a notification message (e.g., POST/notification) requiring progress of the issuance of a token to the payment serve 3320r. The notification message transferred from the payment server 3320 may include at least one among a token reference, a token ID, a token value, and a key for generation of a cryptogram. Further, the notification message transferred from the payment server 3320 may include an indication (e.g., op:Provision) which implies that the message is a message for the issuance of a token.

The payment server 3320 may transfer at least a part of the notification message from the token server 3330 to the payment manager 3313. The message transferred to the payment manager 3313 may include at least one among a token ID, a resource ID, and an indication for the issuance of a token.

The payment manager 3313 having received at least a part of the message transferred by the payment server 3320 may transfer a message (e.g., GET/token/{id}) requesting the payment server 3320 to provide a token value. The message requesting the token value may include a resource ID.

For example, in response to the request from the payment manager 3313, the payment server 3320 may transfer at least one of the token ID, the token state, the token value, and the key. The at least one of the token ID, the token state, the token value, and the key may be, for example, transferred after being encrypted.

According to an embodiment of the present disclosure, the payment manager 3313 may store, in a trust zone, the information (e.g., the token ID, the token state, the token value, or the key) received from the payment server 3320. The trust zone may be included in, for example, the TEE. The payment manager 3313 may store at least one of the token ID, the token state, the token value, and the key in a security application included in the electronic device 3310.

According to an embodiment of the present disclosure, the payment manager 3313 may transfer, the information (e.g., the token ID, the token value, or the key) received from the payment server 3320, for example, a result stored in the trust zone, to the payment application 3311. For example, the payment manager 3313 may transfer a command (e.g., active) associated with token activation to the payment application 3311. For example, the payment manager 3313 may transfer, to the payment application 3311, information reporting that the state of the card related to the payment function is an active state.

According to an embodiment of the present disclosure, the payment application 3311 may change the state of the PAN recognized by the electronic device 3310. For example, the payment application may change (e.g., enable) the state of the PAN to enable payment using the PAN.

According to an embodiment of the present disclosure, the payment application may transfer the changed state of the PAN to the payment manager. For example, the payment application may transfer information (e.g., PAN enrolled) indicating that the PAN has been registered, to the payment manager 3313.

According to an embodiment of the present disclosure, the payment manager 3313 may transfer the changed state of the PAN to the payment serve 3320r. For example, the payment manager 3313 may transfer the information reporting that the state of the PAN has been changed to a payable state (e.g., enable) to the payment server 3320 using a predetermined command (e.g., POST/reports). The payment manager 3313 may perform, for example, state synchronization with the payment server 3320.

According to an embodiment of the present disclosure, the payment server 3320 may transfer the changed state of the PAN to the token server 3330. For example, the payment server 3320 may transmit a response (e.g., acknowledgement or ACK PAN enrolled) to the token server 3330.

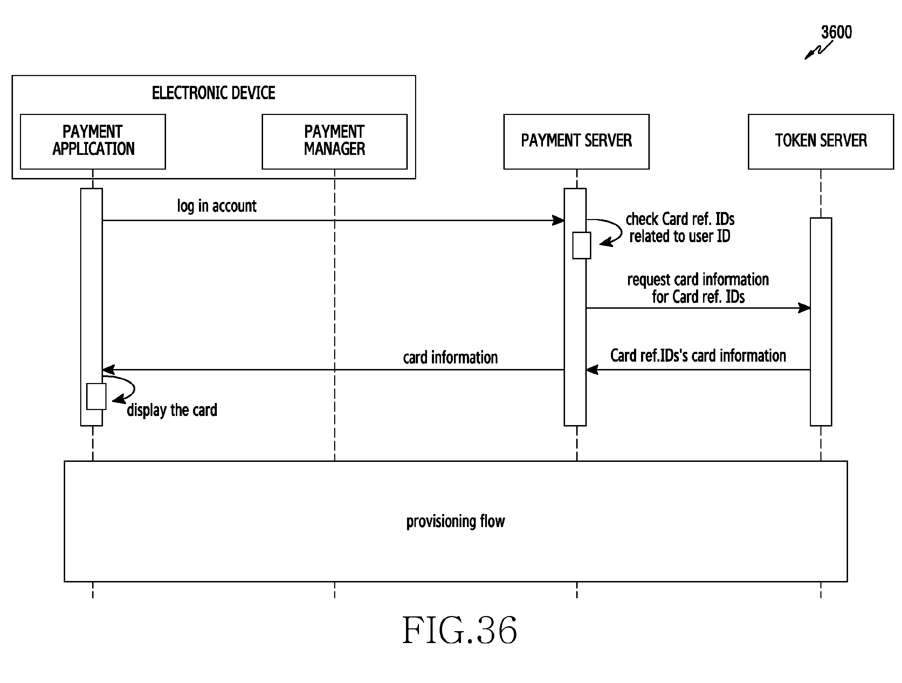

FIG. 36 is a signal flow diagram 3600 of a method of registering a card relating to a user account according to an embodiment of the present disclosure.

Referring to FIG. 36, the solid line may include a request (e.g., request or call) command and the dotted line may include a response (e.g., response or return) command. The payment system may include an electronic device 3310, a payment server 3320, or a token server 3330. The electronic device 3310 may include, for example, a payment application 3311 and/or a payment manager 3313.

According to an embodiment of the present disclosure, if a user tries to register a card in an electronic device 3310, if there is a card already registered in another device, the user may be notified, in advance, of the registered card before the card registration procedure is processed. For example, a card reference ID associated with a user account used at the time of registration of a card by a device may be used. The card reference ID may be used as information by which a registered card can be identified.

According to an embodiment of the present disclosure, if a payment application 3311 is registered through the user account, the payment server 3320 may be shown a list of registered cards to the user, using at least one card reference ID associated with the user account. For example, the payment server 3320 may request associated card information (e.g., PAN, card valid date, CVV, etc.) by transferring the card reference ID to the token server 3330. The token server 3330 may transfer the card information requested by the payment server 3320. The card information may be stored in the payment server 3320 at the time of initial card registration. The operation of sending a request to the payment server 3320 may be omitted.

According to an embodiment of the present disclosure, the payment server 3320 may transfer the acquired card information to the payment application 3311. For example, the payment server 3320 may show information of at least one card to a user for selection. When the user selects a card to be registered, a part of information necessary for the card registration may be automatically input by the payment application 3311, using the card information. The other part of the information which has not been input may be manually input by the user to progress the card registration. All card information may be automatically input by the payment application 3311.

According to an embodiment of the present disclosure, the operation after the input of the card information is completed may progress the same way as the token provisioning process.

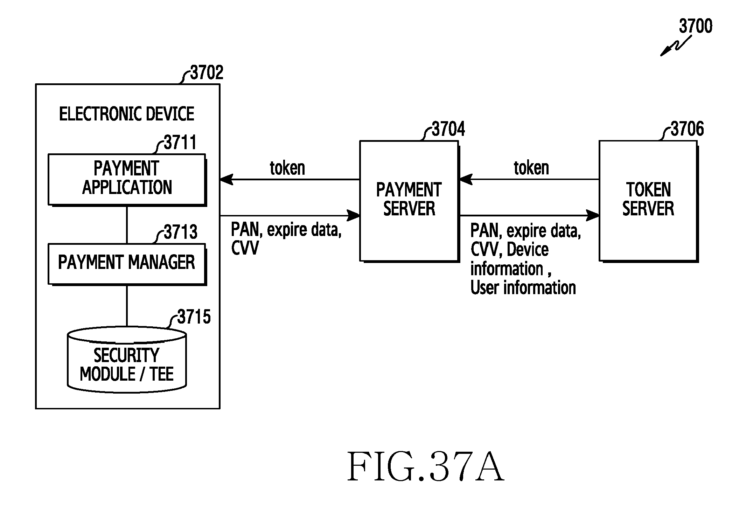

FIGs. 37A to 37C are signal flow diagrams 3700, 3710, and 3720 of a token issuing method of an electronic device according to an embodiment of the present disclosure.

According to an embodiment of the present disclosure, the token issuing method may be changed according to country. For example, the token issuing method may be changed according to the countries such as the United States of America, Europe, or Republic of Korea.

FIG. 37A is a signal flow diagram 3700 of a first token issuing method according to an embodiment of the present disclosure. The first token issuing method may include, for example, an electronic device 3702, a payment server 3704, or a token server 3706. The electronic device 3702 may include, for example, a payment application 3711, a payment manager 3713, a security module 3715, or a TEE.

According to an embodiment of the present disclosure, the electronic device 3702 may acquire card-related information through a sensor functionally connected to the electronic device 3702. The card-related information may be used in, for example, a card registration operation. The sensor may include, for example, an OCR. The card-related information may include, for example, at least one among PAN, valid period, and CVV. For example, the sensor may be operated using the payment application 3711 included in the electronic device 3702.

According to an embodiment of the present disclosure, the payment application 3711 included in the electronic device 3702 may transfer the card-related information to the payment server 3704. The payment server 3704 may include, for example, a payment service server or token requester server, and the card-related information may be transferred between the payment service server and the token requester server.

According to an embodiment of the present disclosure, the payment server (e.g., the token requester server) 3704 may transfer the card-related information and/or information (e.g., device information or user information) related to the electronic device 3702 to the token server 3706. The information related to the electronic device 3702 may include, for example, information of a device having requested the first token issuance operation.

According to an embodiment of the present disclosure, the token server 3706 may issue (generate) a token on the basis of the information received from the payment server 3704.

According to an embodiment of the present disclosure, the token server 3706 may transfer a token on the basis of the information received from the payment server 3704. The token server 3706 may transfer the token to, for example, the token requester server included in the payment server 3704.

According to an embodiment of the present disclosure, the payment server 3704 may transfer the token to the electronic device 3702. The payment server 3704, for example, the token requester server included in the payment server 3704, may transfer the token to the electronic device 3702.

According to an embodiment of the present disclosure, the electronic device 3702 may store, in the security module 3715 or the TEE, the token received from the payment server 3704. For example, the electronic device 3702 may store the token in the security module 3715 or the TEE, which is a security area, to control access from the outside.

According to an embodiment of the present disclosure, the electronic device 3702 may store, in the general memory (e.g., memory included in the REE), the token received from the payment server 3704.

According to an embodiment of the present disclosure, one or more tokens may be issued (generated) based on a payment method (e.g., OTP or call center) performed by the electronic device 3702.

According to an embodiment of the present disclosure, one token may be issued (generated) corresponding to the electronic device 3702. For example, a first token may be included in the first electronic device while a second token is included in the second electronic device. The first token and the second token may be different from each other.

According to an embodiment of the present disclosure, the token may be activated based on an authentication operation (e.g., ID&V). For example, the token may be stored in the electronic device 3702 and activated based on the authentication operation. The authentication operation may include, for example, an identification. The identification may be conducted by, for example, a financial server.

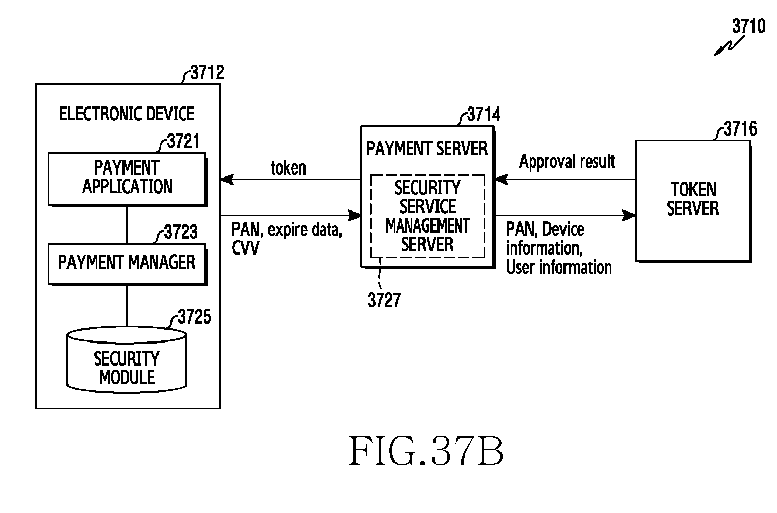

FIG. 37B is a signal flow diagram 3710 of a second token issuance operation according to an embodiment of the present disclosure. The second token issuance operation may include, for example, an electronic device 3712, a payment server 3714, or a token server 3716. The electronic device 3712 may include at least one among, for example, a payment application 3721, a payment manager 3723, and a security module 3725. Further, the payment server 3714 may include, for example, a security service management server 3727.

According to an embodiment of the present disclosure, the electronic device or an electronic device may acquire card-related information through a sensor functionally connected to the electronic device. The card-related information may be used in, for example, a card registration operation. The sensor may include, for example, an OCR. The card-related information may include, for example, at least one among PAN, valid period, and CVV. The sensor may be operated using the payment application included in the electronic device.

According to an embodiment of the present disclosure, the payment application 3721 included in the electronic device 3712 may transfer the card-related information to the payment server 3714. The payment server 3714 may include, for example, a payment service server or token requester server, and the card-related information may be transferred between the payment service server and the token requester server.

According to an embodiment of the present disclosure, the payment server 3714 may transfer the card-related information to the security service management server included in the payment server 3714. The security service management server may be included and internally operate in, for example, the payment server 3714 or located outside of the payment server 3714. For example, the security service management server may be included in another device (e.g., an external device) different from the payment server 3714, and may be functionally connected to the payment server 3714 to transmit or receive the card-related information.

According to an embodiment of the present disclosure, the security service management server 3727 may transfer the card-related information and/or information (e.g., device information or user information) related to the electronic device 3712 to the token server 3716. The information related to the electronic device 3712 may include, for example, information of a device having requested the second token issuance operation.

According to an embodiment of the present disclosure, the token server 3716 may perform an authentication operation based on the information received from the payment server 3714. The token server 3716 may perform an authentication operation, for example, based on the card-related information and/or the information related to the electronic device 3712.

According to an embodiment of the present disclosure, the token server 3716 may transfer a result (e.g., success or failure) of the authentication operation to the security service management server 3727 included in the payment server 3714.

According to an embodiment of the present disclosure, the security service management server 3727 may issue (generate) a token on the basis of the card-related information and/or the information related to the electronic device 3712.

According to an embodiment of the present disclosure, the security service management server may store the token in a security area (e.g. security module) included in the electronic device 3712. For example, the security service management server 3727 may have authority (e.g., security module access authority) to access to the security area of the electronic device 3712. Further, the security service management server 3727 may store the token in the security area of the electronic device 3712, using the access authority. Further, the token may be transferred from the security service managing server 3727 to the electronic device 3712.

According to an embodiment of the present disclosure, the electronic device 3712 may store the token in the security module, which is a security area, to control access from the outside.

According to an embodiment of the present disclosure, one or more tokens may be issued (generated) based on a payment method (e.g., OTP or call center) performed by the electronic device 3712.

According to an embodiment of the present disclosure, one token may be issued (generated) corresponding to the electronic device 3712. For example, a first token may be included in the first electronic device while a second token is included in the second electronic device. The first token and the second token may be different from each other.

According to an embodiment of the present disclosure, the token may be activated based on an authentication operation (e.g., ID&V). For example, the token may be stored in the electronic device 3712 and activated based on the authentication operation. The authentication operation may include, for example, an identification. The identification may be conducted by, for example, a financial server.

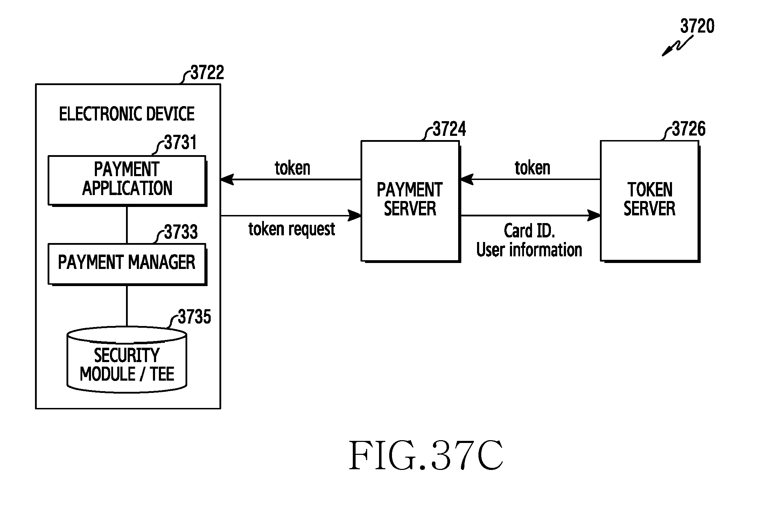

FIG. 37C is a signal flow diagram 3720 of a third token issuing method according to an embodiment of the present disclosure. The third token issuance operation may include, for example, an electronic device 3722, a payment server 3724, or a token server 3726. The electronic device 3722 may include, for example, a payment application 3731, a payment manager 3733, a security module 3735, or a TEE.

According to an embodiment of the present disclosure, the electronic device or an electronic device may acquire card-related information through a sensor functionally connected to the electronic device. The card-related information may be used in, for example, a card registration operation. The sensor may include, for example, an OCR. The card-related information may include, for example, at least one among PAN, valid period, and CVV. The sensor may be operated using the payment application 3731 included in the electronic device.

According to an embodiment of the present disclosure, the electronic device or an electronic device may perform an authentication operation (e.g., ID&V). The authentication operation, for example, an identification, may be performed using the payment application 3731.

According to an embodiment of the present disclosure, the electronic device 3722 may perform the card registration and/or the identification when performing the payment function. For example, the electronic device 3722 may perform the card registration and the identification in order to perform the payment function, and the card registration and the identification may refer to a standby (preparation) state for the payment function.

According to an embodiment of the present disclosure, the electronic device 3722, the payment server 3724, and the token server 3726 may share information associated with the card registration and the identification. For example, the electronic device 3722, the payment server 3724, and the token server 3726 may share at least one type of information among PAN, valid term, CVV, device information, and user information.

According to an embodiment of the present disclosure, a token associated with the third token issuance operation may be issued (generated) when payment is performed using the payment function.

According to an embodiment of the present disclosure, the payment application 3731 included in the electronic device 3722 may perform user authentication in order to perform the payment function. For example, the user authentication may include secret code authentication, pattern authentication, or biometric information authentication.

According to an embodiment of the present disclosure, when the user authentication is successful (e.g., authentication completion), the payment application 3731 may perform the third token issuance operation with respect to the payment server 3724. The third token issuance operation may include, for example, a token request.

According to an embodiment of the present disclosure, based on the token request, the payment server 3724 may transfer card information (e.g., card Identifier) and/or user information to the token server 3726. The information related to the electronic device 3722 may include, for example, information of a device having requested the third token issuance operation.

According to an embodiment of the present disclosure, the token server 3726 may issue (generate) a token on the basis of the information received from the payment server 3724.

According to an embodiment of the present disclosure, the token server 3726 may transfer a token on the basis of the information received from the payment server 3724.

According to an embodiment of the present disclosure, the payment server 3724 may transfer the token to the electronic device 3722.

According to an embodiment of the present disclosure, the electronic device 3722 may store, in the security module or the TEE, the token received from the payment server 3724. For example, the electronic device 3722 may store the token in the security module or the TEE, which is a security area, to control access from the outside.

According to an embodiment of the present disclosure, the electronic device 3722 may store, in the general memory (e.g., memory included in the REE), the token received from the payment server 3724.

According to an embodiment of the present disclosure, the electronic device 3722 may not store, in the storage area (e.g., memory) included in the electronic device 3722, the token received from the payment server 3724. For example, the electronic device 3722 may use the token in the payment function instead of storing the token in the storage area.

According to an embodiment of the present disclosure, the storage area of the token may be changed based on a payment method (e.g., OTP or call center) performed by the electronic device 3722. For example, the token may be stored in the security module 3735 or the TEE when the payment method is OTP, and may not be stored in the electronic device 3722 when the payment method is call center.

According to an embodiment of the present disclosure, the token may include use time or valid time. For example, use of the token may be restricted when a predetermined time (e.g., three hours or one day) has passed from the issuance (generation) of the token.

According to an embodiment of the present disclosure, the token may include card information. For example, the token may include disposable card information (OTC, one time card).

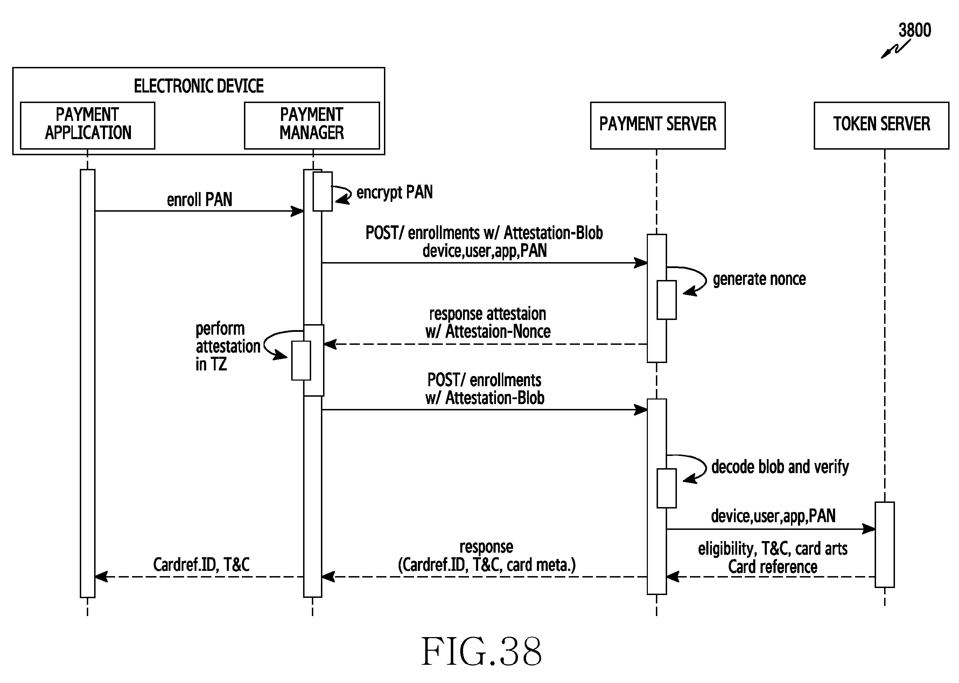

FIG. 38 is a signal flow diagram 3800 of a token use method based on electronic device attestation in an electronic device according to an embodiment of the present disclosure.

Referring to FIG. 38, the solid line may include a request (e.g., a request or a call) command and the dotted line may include a response (e.g., a response or a return) command. The payment system may include an electronic device, a payment server, or a token server. The electronic device may include, for example, a payment application and/or a payment manager.

According to an embodiment of the present disclosure, the electronic device may store information that can be used for payment, using an external input or a sensor (e.g., camera sensor or OCR) functionally connected to the electronic device. For example, the information that can be used for payment may include card information (e.g., PAN), a valid period, CVV, or a user name. The

electronic device may execute an application (e.g., payment application) included in the electronic device on the basis of an external input (e.g., user input). The electronic device may store, in a payment application included in the electronic device, information that can be used for payment through an external input (e.g., touch, double touch, long press, leftward/rightward movement after touch, gesture, or drag and stop) or a sensor functionally connected to the electronic device. The information that can be used for payment may include, for example, PAN. The PAN may include an account number associated with a BIN generated by a financial server.

According to an embodiment of the present disclosure, the electronic device may store information, which is associated with the payment application and can be used for payment, in the electronic device or the external device (e.g., server). For example, the electronic device may store information, which can be used for payment corresponding to the payment application, in a memory (e.g., the memory 130 of FIG. 1) included in the electronic device or in an external device (e.g., the first electronic device 102, the second electronic device 104, or the server 106 of FIG. 1).

According to an embodiment of the present disclosure, the electronic device may provide an interface for the information that can be used for payment. The interface may include the information that can be used for payment, for example, letters for the PAN, a picture, an icon, a notification, or an indicator.

According to an embodiment of the present disclosure, the electronic device may register a PAN using the payment application. For example, the electronic device may transfer the PAN to the payment application. According to an embodiment, the payment manager may provide information related to the PAN, which has been input through a sensor functionally connected to the electronic device, to the user by transferring the PAN to the payment application.

According to an embodiment of the present disclosure, the payment manager may encrypt the PAN. For example, the payment manager may encrypt the PAN using a key included in the security application in order to protect the PAN from the outside. Further, for example, information received from the electronic device or the external device (e.g., a server or financial server) may be used in the encryption.

According to an embodiment of the present disclosure, the payment manager may register an encrypted PAN in the payment server. For example, the payment manager may be functionally connected with the payment server to transfer the encrypted PAN. The encrypted PAN may be transferred through a protection channel for protection against the outside. For example, the payment manager may use a predetermined command (e.g., POST/enrollment) in registering the PAN in the payment server. Further, the payment server may control the encrypted PAN through, for example, the token requester server included in the payment server. Hereinafter, the encrypted PAN may be simply referred to as PAN.

According to an embodiment of the present disclosure, POST/enrollment, which is a predetermined command, may be used when the payment manager requests the payment server to provide a signal for card registration. The parameter of POST/enrollment may include, for example, one parameter among type, entry, token requester ID, user ID, app ID, device ID, card reference ID, device name, device profile, device certificates for encryption and signing, device pair, payment instrument, and presentation mode. The card type may include, for example, a payment card name (e.g., payment account brand). The payment card name may include, for example, at least one among VISA@, MasterCard®, American Express@, or Discover@. The entry may include, for example, a card entry method. The card entry method may include, for example, at least one among MANUAL, OCR, APP, and FILE. The device profile may include, for example, the type (e.g., ordinary electronic device or wearable device) of the electronic device. The payment instrument may include, for example, payment information (e.g., PAN, valid period, or CVV). The presentation mode may include, for example, a payment method (e.g., MST or NFC) used for payment.

According to an embodiment of the present disclosure, the POST/enrollment, which is the predetermined command, may include a command for checking whether the payment server requires attestation of the electronic device, in order to attest the electronic device. For example, the payment server may send a command of Expect; 100 continue, which is used in hypertext transfer protocol (HTTP), to the token server to receive data (e.g., disposable random number) from the token server.

According to an embodiment of the present disclosure, the payment server may perform the attestation on the predetermined command received from the payment manager. For example, the payment server may perform the attestation of the electronic device or the payment manager on the basis of the predetermined command or a condition designated to the payment server.

According to an embodiment of the present disclosure, in the case of not performing the attestation, the payment server may perform at least a part of the token issuance operations of FIGs. 34 to 37C.

According to an embodiment of the present disclosure, in the case of performing the attestation, the payment server may generate a disposable random number (e.g., a nonce). The disposable random number may be, for example, generated by the payment server or received from an external device. Further, the disposable random number may include valid time or use time, for which the payment function is usable.

According to an embodiment of the present disclosure, the payment server may transfer, to the payment manager, an instruction to perform a function associated with the attestation. For example, in response to the predetermined command (e.g., POST/enrollment), the payment server may transfer the instruction, using the disposable random number. For example, the payment server may send a response including attestation-nonce, which is a disposable random number associated with the attestation, to the payment manager.

According to an embodiment of the present disclosure, the payment manager may perform the attestation in accordance with the response associated with the attestation received from the payment server. The attestation may be performed in, for example, the trust zone, which is a security area of the electronic device. The trust zone may be included in, for example, the TEE.

According to various embodiments, the attestation may be performed using a unique electronic device key (e.g. key or LUK) included (e.g., stored) in the trust zone. The attestation may include an operation of checking the integrity of the electronic device or an electronic device performing the payment function. The key may be included in the electronic device at the time of manufacturing (e.g., processing) the electronic device. According to one embodiment, the attestation may be performed by another key made using the key. For example, based on the key, a TEE public key or a TEE private key may be made and used.

According to an embodiment of the present disclosure, the key may be changed at the operation time point of, for example, the electronic device or the electronic device. For example, when the electronic device or the electronic device is not normally booted, the key may be deleted, revised, or damaged. Further, when the key is used in the electronic device or the electronic device using a predetermine revised file (e.g., image), the key may be deleted, revised, or damaged.

According to an embodiment of the present disclosure, when there is a random access to the trust zone, for example, the TEE, from the outside, the key may be deleted, revised, or damaged.

According to an embodiment of the present disclosure, when the electronic device or the electronic device is normally booted, information included in the key may be changed. For example, the key may be randomly changed, and may be generated to include new information whenever the electronic device is booted.

According to an embodiment of the present disclosure, the key may be included in the security module. For example, the key may be stored a security module distinguished from the trust zone. The security module may include, for example, a security area, and may be physically distinguished from an element (e.g., a payment application) of the electronic device or the electronic device. Further, the key may be identical or similar to, for example, a unique key corresponding to the security module.

According to an embodiment of the present disclosure, the payment manager may transfer the disposable random number received by the payment server to the trust zone. The trust zone may perform the attestation using, for example, the disposable random number, and generate blob associated with the attestation.

According to an embodiment of the present disclosure, the trust zone may generate the blob on the basis of the disposable random number, for example, the disposable random number having use time or valid time configured therefor, and the key.

According to an embodiment of the present disclosure, the payment manager may receive a blob generated based on the disposable random number, from the trust zone.

According to an embodiment of the present disclosure, the payment manager may transfer the blob and/or the PAN to the payment server. The payment manager may use a predetermined command (e.g., POST/enrollments w/Attestation-Blob) for the transfer. The payment manager may transfer, for example, the blob, the blob and the PAN, a device profile, a user ID, or an application ID to the payment server.

According to an embodiment of the present disclosure, the token server may determine the validity of the OTP value or numerical value received from the payment server. For example, the payment server may determine the validity, using the blob and the disposable random number generated by the payment server.

According to an embodiment of the present disclosure, when the blob information is valid, the payment server may transfer the device profile, user ID, and the application ID to the token server. The device profile may include a device ID (e.g., IMEI) and/or payment means (e.g., NFC and/or MST). Further, the device profile may include an identifier (e.g., device ID) for identifying a device. The user ID may include, for example, a name of a user using the electronic device. The app ID may include, for example, an identifier of a payment application (e.g. a Samsung wallet).

According to an embodiment of the present disclosure, when the blob information is not valid, the payment server may stop (interrupt) the attestation or card registration operation.

According to an embodiment of the present disclosure, when the blob information is not valid, the payment server may transfer a result (e.g., attestation failure) of the attestation to the electronic device (e.g., the payment manager) or another electronic device.

According to an embodiment of the present disclosure, the token server may generate a channel (e.g., session) between the payment server and the token server in response to the reception of the user information. The channel may encrypt information (e.g., data) transmitted or received through the channel, for example, using a common (public) key shared by the payment server and the token server.

According to an embodiment of the present disclosure, the payment server may transfer a PAN (e.g., an encrypted PAN) to the token server, using a channel generated between the payment server and the token server.

According to an embodiment of the present disclosure, the token server may register the PAN received from the payment server. The registration process may include a procedure of checking, using at least one ID among the user ID, app ID, device ID, and card reference ID, whether token issuance is possible. For example, the token server may perform a process of checking whether it is possible to issue a token for the card, using the card reference ID. The present disclosure includes a method of checking, by a user having registered using a device ID and a user ID, whether the device having been already registered is correct. The token server may register the PAN received from the payment server and transfer a response (e.g., card reference ID) to the registration to the payment server. The response to the registration may include, for example, at least one among a card reference ID, a contract condition, card metadata, and issuer metadata.

According to an embodiment of the present disclosure, the payment server may transfer information received from the token server, for example, a response to the registration, to the payment manager, and the payment manager may transfer the information to the payment server. The response to the registration may include, for example, at least one among a card reference ID, a contract condition, card metadata, and issuer metadata.

According to an embodiment of the present disclosure, at least a part of the response to the registration of PAN (e.g., POST/enrollment) may be information stored in the payment server or the payment manager and may be changed (e.g., generation, revision, or removal) according to a predetermined condition.

According to an embodiment of the present disclosure, the payment application may output at least a part of the response to the registration received from the payment manager to the outside, to the user. For example, the payment application may display the contract conditions included in the response.

According to an embodiment of the present disclosure, the information for performing the attestation may be stored in an external device. For example, in order to perform the attestation, the disposable random number, the blob, the key, the device profile, the user ID, the app ID, or the public (open) key may be stored inside or outside of the electronic device. The external device may include, for example, an attestation server.

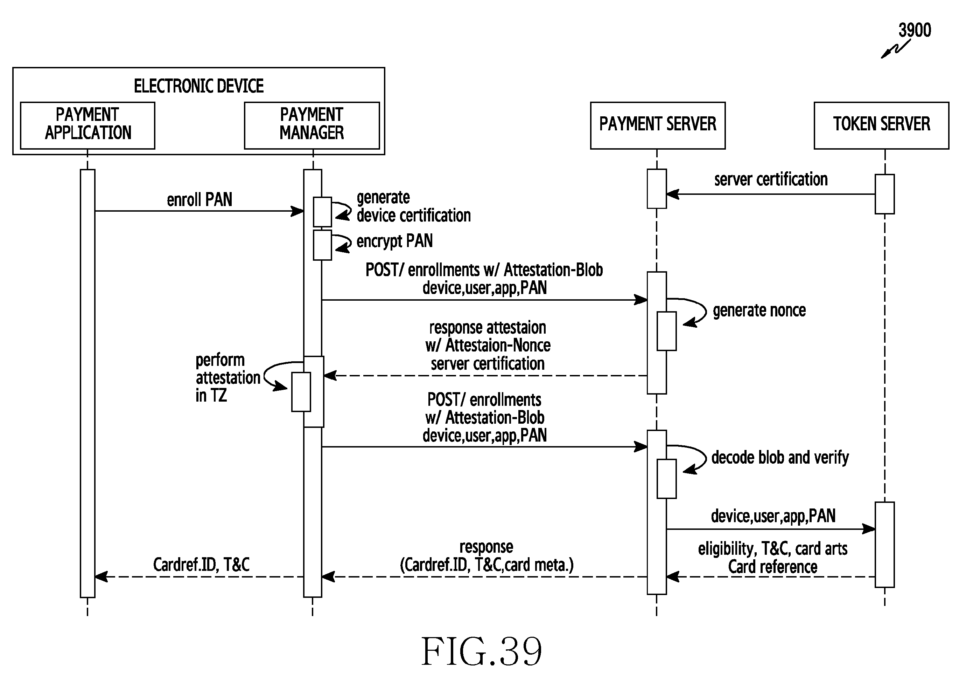

FIG. 39 is a signal flow diagram 3900 of a token use method based on electronic device attestation in an electronic device according to an embodiment of the present disclosure.

Referring to FIG. 39, the solid line may include a request (e.g., a request or a call) command and the dotted line may include a response (e.g., a response or a return) command. The payment system may include an electronic device, a payment server, or a token server. The electronic device may include, for example, a payment application and/or a payment manager.

According to an embodiment of the present disclosure, the token server may transfer information associated with authentication (certification) to the payment server. The authentication may include, for example, server authentication. The server authentication may include, for example, authentication using a certificate authority (CA).

According to an embodiment of the present disclosure, the electronic device may store information that can be used for payment, using an external input or a sensor (e.g., camera sensor or OCR) functionally connected to the electronic device. For example, the information that can be used for payment may include card information (e.g., PAN), a valid period, CVV, or a user name. The electronic device may execute an application (e.g., payment application) included in the electronic device on the basis of an external input (e.g., user input). The electronic device may store, in a payment application included in the electronic device, information that can be used for payment through an external input (e.g., touch, double touch, long press, leftward/rightward movement after touch, gesture, or drag and stop) or a sensor functionally connected to the electronic device. The information that can be used for payment may include, for example, PAN. The PAN may include an account number associated with a BIN generated by a financial server.

According to an embodiment of the present disclosure, the electronic device may store information, which is associated with the payment application and can be used for payment, in the electronic device or the external device (e.g., a server). For example, the electronic device may store information, which can be used for payment corresponding to the payment application, in a memory (e.g., the memory 130 of FIG. 1) included in the electronic device or in an external device (e.g., the first electronic device 102, the second electronic device 104, or the server 106 of FIG. 1).

According to an embodiment of the present disclosure, the electronic device may provide an interface for the information that can be used for payment. The interface may include the information that can be used for payment, for example, letters for the PAN, a picture, an icon, a notification, or an indicator.

According to an embodiment of the present disclosure, the electronic device may register a PAN using the payment application. For example, the electronic device may transfer the PAN to the payment application. According to an embodiment, the payment manager may provide information related to the PAN, which has been input through a sensor functionally connected to the electronic device, to the user by transferring the PAN to the payment application.

According to an embodiment of the present disclosure, the payment manager may encrypt the PAN. For example, the payment manager may encrypt the PAN using a key included in the security application in order to protect the PAN from the outside. Further, for example, information received from the electronic device or the external device (e.g., a server or financial server) may be used in the encryption.

According to an embodiment of the present disclosure, the payment manager may register an encrypted PAN in the payment server. For example, the payment manager may be functionally connected with the payment server to transfer the encrypted PAN. The encrypted PAN may be transferred through a protection channel for protection against the outside. For example, the payment manager may use a predetermined command (e.g., POST/enrollment) in registering the PAN in the payment server. Further, the payment server may control the encrypted PAN through, for example, the token requester server included in the payment server. Hereinafter, the encrypted PAN may be simply referred to as PAN.

According to an embodiment of the present disclosure, POST/enrollment, which is a predetermined command, may be used when the payment manager requests the payment server to provide a signal for card registration. The parameter of POST/enrollment may include, for example, one parameter among type, entry, token requester ID, user ID, app ID, device ID, card reference ID, device name, device profile, device certificates for encryption and signing, device pair, payment instrument, and presentation mode. The card type may include, for example, a payment card name (e.g., payment account brand). The payment card name may include, for example, at least one among VISA®, MasterCard®, American Express®, or Discover®. The entry may include, for example, a card entry method. The card entry method may include, for example, at least one among MANUAL, OCR, APP, and FILE. The device profile may include, for example, the type (e.g., ordinary electronic device or wearable device) of the electronic device. The payment instrument may include, for example, payment information (e.g., PAN, valid period, or CVV). The presentation mode may include, for example, a payment method (e.g., MST or NFC) used for payment.

According to an embodiment of the present disclosure, the POST/enrollment, which is the predetermined command, may include a command for checking whether the payment server requires attestation of the electronic device, in order to attest the electronic device. For example, the payment server may send a command of Expect; 100 continue, which is used in HTTP, to the token server to receive data (e.g., disposable random number) from the token server.

According to an embodiment of the present disclosure, the payment server may perform the attestation on the basis of a predetermined command received from the payment manager. For example, the payment server may perform the attestation of the electronic device or the payment manager on the basis of the predetermined command or a condition designated to the payment server.

According to an embodiment of the present disclosure, in the case of not performing the attestation, the payment server may perform at least a part of the token issuance operations of FIGs. 34 to 37C.

According to an embodiment of the present disclosure, in the case of not performing the attestation, the payment server may generate a disposable random number. The disposable random number may be, for example, generated by the payment server or received from an external device. Further, the disposable random number may include valid time or use time, for which the payment function is usable.

According to an embodiment of the present disclosure, the payment server may transfer, to the payment manager, an instruction to perform a function associated with the attestation. For example, in response to the predetermined command, the payment server may transfer the instruction, using the disposable random number. For example, the payment server may send a response including attestation-nonce, which is a disposable random number associated with the attestation, to the payment manager.

According to an embodiment of the present disclosure, the payment manager may perform the attestation in accordance with the response associated with the attestation received from the payment server. The attestation may be performed in, for example, the trust zone, which is a security area of the electronic device. The trust zone may be included in, for example, the TEE.

According to an embodiment of the present disclosure, the attestation may be performed using a
key included (stored) in the trust zone. The attestation may include an operation of checking the integrity of the electronic device or an electronic device performing the payment function. The key may be included in the electronic device at the time of manufacturing (processing) the electronic device. According to one embodiment, the attestation may be performed using another key made using the key described above. For example, based on the above key, a TEE public key or TEE private key may be made and used.

The notification associated with the call center method may include, for example, the electronic device or the number of the electronic device. For example, when the electronic device or the electronic device is not normally booted, the key may be deleted, revised, or damaged. Further, when the key is used in the electronic device or the electronic device using a predetermine revised file (e.g., image), the key may be deleted, revised, or damaged.

According to an embodiment of the present disclosure, when there is a random access to the trust zone, for example, the TEE, from the outside, the key may be deleted, revised, or damaged.

According to an embodiment of the present disclosure, when the electronic device or the electronic device is normally booted, information included in the key may be changed. For example, the key may be randomly changed, and may be generated to include new information whenever the electronic device is booted.

According to an embodiment of the present disclosure, the key may be included in the security module. For example, the key may be stored a security module distinguished from the trust zone.

The security module may include, for example, a security area, and may be physically distinguished from an element (e.g., payment application) of the electronic device or the electronic device. Further, the key may be identical or similar to, for example, a unique key corresponding to the security module.

According to an embodiment of the present disclosure, the payment manager may transfer the disposable random number received by the payment server to the trust zone. The trust zone may perform the attestation using, for example, the disposable random number, and generate blob associated with the attestation.

According to an embodiment of the present disclosure, the trust zone may generate the blob on the basis of the disposable random number, for example, the disposable random number having use time or valid time configured therefor, and the key.

According to an embodiment of the present disclosure, the payment manager may receive a blob generated based on the disposable random number, from the trust zone.

According to an embodiment of the present disclosure, the payment manager may transfer the blob and/or the PAN to the payment server. The payment manager may use a predetermined command (e.g., POST/enrollments w/Attestation-Blob) for the transfer. The payment manager may transfer, for example, the blob, the blob and the PAN, a device profile, a user ID, or an application ID to the payment server.

According to an embodiment of the present disclosure, the payment server may determine the validity of the blob received from the payment manager. For example, the payment server may determine the validity, using the blob and the disposable random number generated by the payment server.

According to an embodiment of the present disclosure, when the blob information is valid, the payment server may transfer the device profile, user ID, and the application ID to the token server. The device profile may include a device ID (e.g., IMEI) and/or payment means (e.g., NFC and/or MST). Further, the device profile may include an identifier (e.g., device ID) for identifying a device. The user ID may include, for example, a name of a user using the electronic device. The app ID may include, for example, an identifier of a payment application (e.g. a Samsung wallet).

According to an embodiment of the present disclosure, when the blob information is not valid, the payment server may stop (interrupt) the attestation or card registration operation.

According to an embodiment of the present disclosure, when the blob information is not valid, the payment server may transfer a result (e.g., attestation failure) of the attestation to the electronic device (e.g., the payment manager) or another electronic device.

According to an embodiment of the present disclosure, the token server may generate a channel (e.g., session) between the payment server and the token server in response to reception of the user information. The channel may encrypt information (e.g., data) transmitted or received through the channel, for example, using a common (public) key shared by the payment server and the token server.

According to an embodiment of the present disclosure, the payment server may transfer a PAN (e.g., an encrypted PAN) to the token server, using a channel generated between the payment server and the token server.

According to an embodiment of the present disclosure, the token server may register the PAN received from the payment server. The registration process may include a procedure of checking, using at least one ID among the user ID, app ID, device ID, and card reference ID, whether token issuance is possible. For example, the token server may perform a process of checking whether it is possible to issue a token for the card, using the card reference ID. According to another embodiment, a process of checking, by a user having registered using a device ID and a user ID, whether the device having been already registered is right. According to an embodiment of the present disclosure an embodiment of the present disclosure, the token server may register the PAN received from the payment server and transfer a response (e.g., card reference ID) to the registration to the payment server. The response to the registration may include, for example, at least one among a card reference ID, a contract condition, card metadata, and issuer metadata.

According to an embodiment of the present disclosure, the payment server may transfer information received from the token server, for example, a response to the registration, to the payment manager, and the payment manager may transfer the information to the payment server. The response to the registration may include, for example, at least one among a card reference ID, a contract condition, card metadata, and issuer metadata.

According to an embodiment of the present disclosure, at least a part of the response to the registration of PAN (e.g., POST/enrollment) may be information stored in the payment server or the payment manager and may be changed (e.g., generation, revision, or removal) according to a predetermined condition.

According to an embodiment of the present disclosure, the payment application may provide at least a part of the response to the registration received from the payment manager to the outside, to the user. For example, the payment application may provide a user with the contract conditions included in the response to the registration.

According to an embodiment of the present disclosure, the information for performing the attestation may be stored in an external device. For example, the disposable random number, the blob, the key, the device profile, the user ID, the application ID, or the common (public) key, which are to be used for the attestation, may be stored in the electronic device or outside of the electronic device. The external device may include, for example, an attestation server.

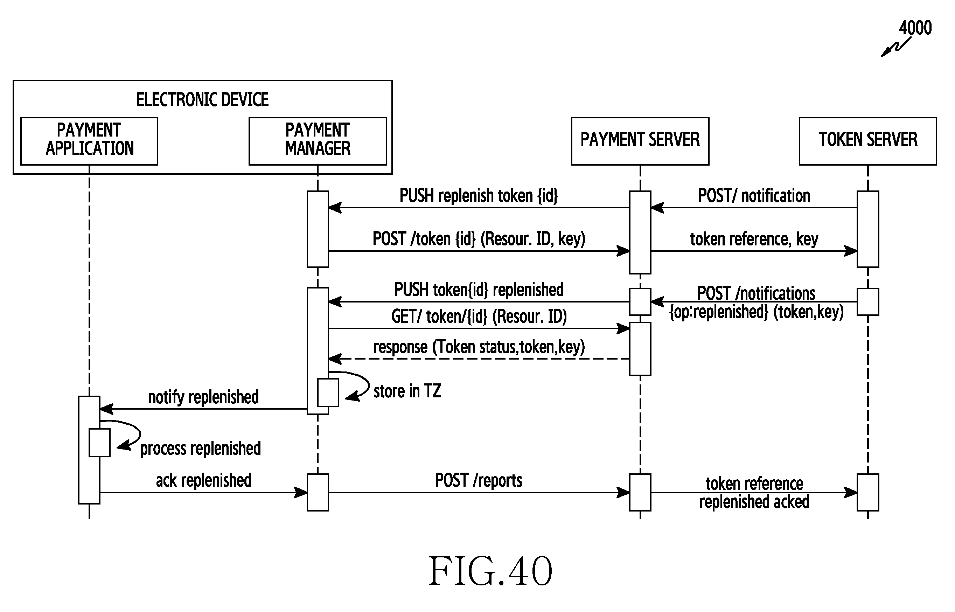

FIG. 40 is a signal flow diagram 4000 of a token update method based on external triggering in an electronic device according to an embodiment of the present disclosure.

Referring to FIG. 40, the solid line may include a request (e.g., a request or a call) command and the dotted line may include a response (e.g., a response or a return) command. The payment system may include an electronic device, a payment server, or a token server. The electronic device may include, for example, a payment application and/or a payment manager.

According to an embodiment of the present disclosure, the token server may transfer a notification to the payment server to operate token update (replenishment). For example, the token server may transfer a predetermined command (e.g., POST/notification) to the payment server to trigger the token update.

According to an embodiment of the present disclosure, the payment server may transfer information relating to the token update to the payment manager. For example, the payment server may transfer the information to the payment manager, using a predetermined command (e.g., PUSH replenish token {id}). The predetermined command may include a push message.

According to an embodiment of the present disclosure, the payment manager may perform the token update, using a push message or a command received from the payment server. For example, the payment manager may request the payment server to perform token update. The request associated with the token update may be made using a predetermined command (e.g., POST/tokens/{id}).

According to an embodiment of the present disclosure, the POST/tokens/{id} may be used in an operation in which the payment manager performs token update with respect to the payment server. For example, the POST/tokens command may include at least one among a token reference and a key (e.g., token key) associated with the token reference when the command is transferred. Based on the token ID, the payment server may update the token. The payment manager may receive, for example, a response corresponding to the POST/tokens/{id} from the payment server, and the response corresponding to the POST/tokens/{id} may include key information. Further, the POST/tokens command may include, for example, a resource ID. The resource ID may include an identifier of the registered (enrollment) resource, which may be configured in the form of a URL. Further, the resource ID may include, for example, reference information storing information related to a token ID or token reference, and may include an address at which the token reference is stored in the payment server.

According to an embodiment of the present disclosure, the payment server may transfer, to the token server, a request relating to the token update received from the payment manager. The payment server may transfer the information (e.g., token reference, and key (e.g., a LUK)) associated with the token update to the token server.

According to an embodiment of the present disclosure, the token server may generate a key, based on a request associated with the token update. For example, the token server may generate, for example, a key (e.g., a LUK) to be used for token update.

According to an embodiment of the present disclosure, the token server may transfer the key to the payment server. For example, the token server may add the state information of "replenished" to the command of POST/notifications and transfer the token and token use key to the payment server.

According to an embodiment of the present disclosure, the payment server may transfer information that the key has been updated, to the payment manager. For example, a command of PUSH tokens{id} replenished may be transferred.

According to an embodiment of the present disclosure, the payment manager may request the payment server to provide a token or token use key. For example, the payment manager may use a command of GET /tokens{id} including a resource ID for the requesting. Further, the resource ID may include, for example, reference information storing information related to a token ID or token reference, and may include an address at which the token reference is stored in the payment server.

According to an embodiment of the present disclosure, the payment server may transfer the token state, the token, and the token use key to the payment manager.

According to an embodiment of the present disclosure, the payment manager may transfer a notification or event associated with the key to the payment application. For example, the payment manager may use a predetermined command (e.g., notify replenished) in transferring the notification or event associated with the key to the payment application.

According to an embodiment of the present disclosure, the payment manager may store, in a trust zone, the information (e.g., the key) received from the payment server. The payment manager may store, for example, the new token use key in a security application included in the electronic device.

According to an embodiment of the present disclosure, the payment application may transfer a notification corresponding to an event or notification associated with the key to the payment manager. For example, the payment application may transfer information (e.g., ACK replenished) indicating that the event or notification associated with the key is performed, to the payment manager. The information indicating that the event or notification associated with the key is performed may include, for example, an acknowledgment type. The notification corresponding to the event or notification associated with the key may include, for example, the token update (replenishment), and the token update may indicate, for example, that the PAN included in the electronic device has been changed into a state allowing the payment function. The new token use key may be used in, for example, completing the update of the key corresponding to the PAN.

According to an embodiment of the present disclosure, the payment manager may transfer the token update operation to the payment server. For example, the payment manager may transfer a report that the token updating operation is performed, to the payment server, using a predetermined command (e.g., POST/reports). The payment manager may transfer, for example, a report that the PAN has been changed into a state allowing execution of the payment function. According to an embodiment, the payment manager may perform state synchronization with the payment server.

According to an embodiment of the present disclosure, the payment server may transfer the token update operation to the token server. For example, the payment server may transmit a response (e.g., acknowledgement or token reference replenished) to the token server.

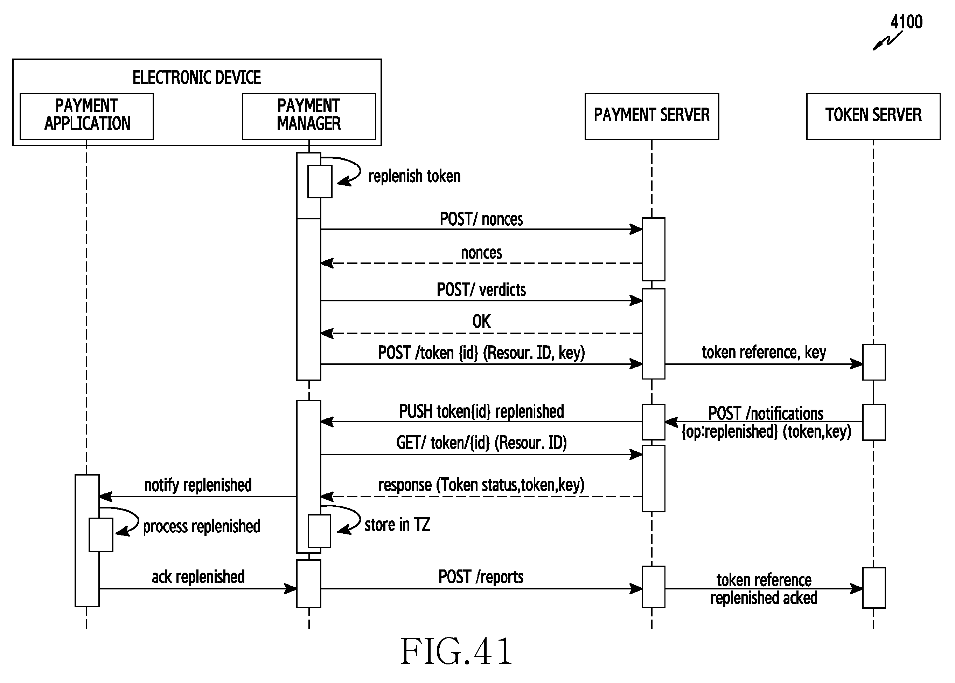

FIG. 41 is a signal flow diagram 4100 of a token update method based on token attestation in an electronic device according to an embodiment of the present disclosure.

Referring to FIG. 41, the solid line may include a request (e.g., a request or a call) command and the dotted line may include a response (e.g., a response or a return) command. The payment system may include an electronic device, a payment server, or a token server. The electronic device may include, for example, a payment application and/or a payment manager.

According to an embodiment of the present disclosure, the payment manager may update (replenish) a token. For example, the payment manager may perform the token update as an internal operation of the payment manager. The token update may be performed based on a predetermined command (e.g., replenish token).

According to an embodiment of the present disclosure, the payment manager may perform token attestation associated with the token update. For example, the payment manager may perform the token attestation to enable use of the token. The token attestation may be performed, for example, by an internal operation of the payment manager or based on an external input (e.g., user input or external device input).

According to an embodiment of the present disclosure, the payment manager may transfer a command associated with the token attestation to the payment server. The command associated with the token attestation may be performed using, for example, a predetermined command (e.g., POST/nonces).

According to an embodiment of the present disclosure, the payment server may transfer a response (e.g., nonces) corresponding to the command associated with the token attestation to the payment manager.

According to an embodiment of the present disclosure, the payment manager may transfer a result associated with the token attestation to the payment server. The result associated with the token attestation may be performed using, for example, a predetermined command (e.g., POST/verdicts).

According to an embodiment of the present disclosure, the payment server may transfer a response (e.g., OK) corresponding to the result associated with the token attestation to the payment manager. According to one embodiment, the payment manager may perform the token update, based on the response corresponding to the result associated with the token attestation.

According to an embodiment of the present disclosure, the payment manager may perform the token update, based on the token attestation. For example, the payment manager may request the payment server to perform token update. The request associated with the token update may be made using a predetermined command (e.g., POST/tokens/{id}).

According to an embodiment of the present disclosure, the POST/tokens/{id} may be used in an operation in which the payment manager performs token update with respect to the payment server. For example, the POST/tokens command may include at least one among a token ID and a key (e.g., token key) associated with the token ID when the command is transferred. Based on the token ID, the payment server may update the token. The payment manager may receive, for example, a response corresponding to the POST/tokens/{id} from the payment server, and the response corresponding to the POST/tokens/{id} may include key information. Further, the POST/tokens command may include, for example, a resource ID. The resource ID may include an identifier of the registered (enrollment) resource, which may be configured in the form of a URL. Further, the resource ID may include, for example, reference information storing information related to a token ID or token reference, and may include an address at which the token ID or the token reference is stored in the payment server.

According to an embodiment of the present disclosure, the payment server may transfer the token state, the token, and the token use key to the payment manager.

According to an embodiment of the present disclosure, the payment manager may transfer a notification or event associated with the key to the payment application. For example, the payment manager may use a predetermined command (e.g., notify replenished) in transferring the notification or event associated with the key to the payment application.

According to an embodiment of the present disclosure, the payment manager may store, in a trust zone, the information (e.g., the key) received from the payment server. The payment manager may store, for example, the new token use key in a security application included in the electronic device.

According to an embodiment of the present disclosure, the payment application may transfer a notification corresponding to an event or notification associated with the key to the payment manager. For example, the payment application may transfer information (e.g., ACK replenished) indicating that the event or notification associated with the key is performed, to the payment manager. The information indicating that the event or notification associated with the key is performed may include, for example, an acknowledgment type. The notification corresponding to the event or notification associated with the key may include, for example, the token update (replenishment), and the token update may indicate, for example, that the PAN included in the electronic device has been changed into a state allowing the payment function. The new token use key may be used in, for example, completing the update of the key corresponding to the PAN.

According to an embodiment of the present disclosure, the payment manager may transfer the token update operation to the payment server. For example, the payment manager may transfer a report that the token updating operation is performed, to the payment server, using a predetermined command (e.g., POST/reports). The payment manager may transfer, for example, a report that the PAN has been changed into a state allowing execution of the payment function. According to an embodiment of the present disclosure, the payment manager may perform state synchronization with the payment server.

According to an embodiment of the present disclosure, the payment server may transfer the token update operation to the token server. For example, the payment server may transmit a response (e.g., acknowledgement or token reference replenished) to the token server.

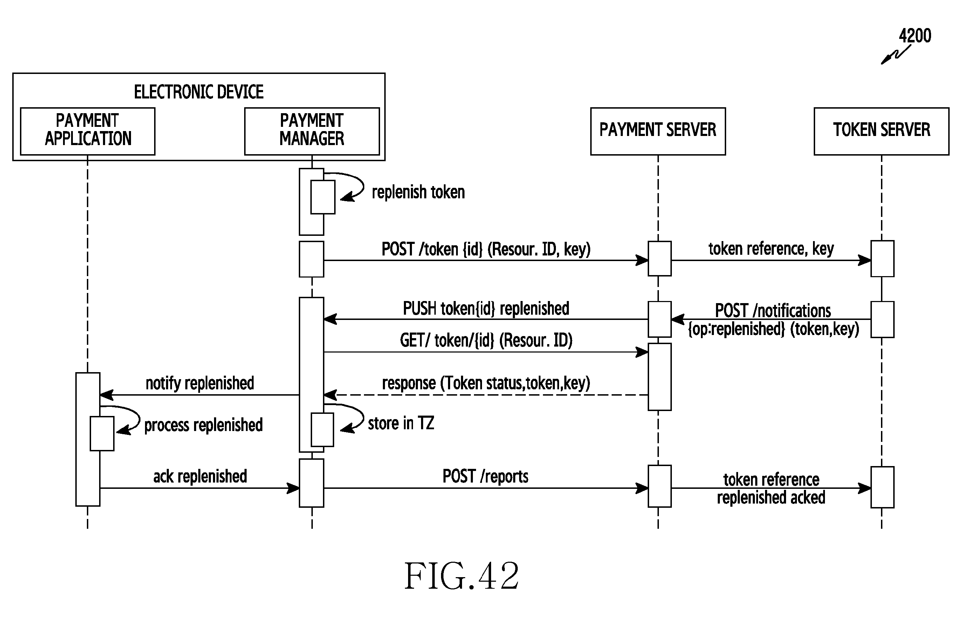

FIG. 42 is a signal flow diagram 4200 of a token update method based on internal triggering in an electronic device according to an embodiment of the present disclosure.

Referring to FIG. 42, the solid line may include a request (e.g., request or call) command and the dotted line may include a response (e.g., response or return) command. The payment system may include an electronic device, a payment server, or a token server.

The electronic device may include, for example, a payment application and/or a payment manager.

According to an embodiment of the present disclosure, the payment manager may update (replenish) a token. For example, the payment manager may perform the token update as an internal operation of the payment manager. The token update may be performed based on a predetermined command (e.g., replenish token).

According to an embodiment of the present disclosure, the payment manager may perform the token update, based on an internal trigger of the payment manager. For example, the payment manager may request the payment server to perform token update. The request associated with the token update may be made using a predetermined command (e.g., POST/tokens/{id}).

According to an embodiment of the present disclosure, the POST/tokens/{id} may be used in an operation in which the payment manager performs token update with respect to the payment server. For example, the POST/tokens command may include at least one among a token ID and a key (e.g., token key) associated with the token ID when the command is transferred. Based on the token ID, the payment server may update the token. The payment manager may receive, for example, a response corresponding to the POST/tokens/{id} from the payment server, and the response corresponding to the POST/tokens/{id} may include key information. Further, the POST/tokens command may include, for example, a resource ID. The resource ID may include an identifier of the registered (enrollment) resource, which may be configured in the form of a URL. Further, the resource ID may include, for example, reference information storing information related to a token ID or token reference, and may include an address at which the token ID or the token reference is stored in the payment server.

According to an embodiment of the present disclosure, the payment server may transfer the token state, the token, and the token use key to the payment manager.

According to an embodiment of the present disclosure, the payment manager may transfer a notification or event associated with the key to the payment application. For example, the payment manager may use a predetermined command (e.g., notify replenished) in transferring the notification or event associated with the key to the payment application.

According to an embodiment of the present disclosure, the payment manager may store, in a trust zone, the information (e.g., the key) received from the payment server. The payment manager may store, for example, the new token use key in a security application included in the electronic device.

According to an embodiment of the present disclosure, the payment application may transfer a notification corresponding to an event or notification associated with the key to the payment manager. For example, the payment application may transfer information (e.g., ACK replenished) indicating that the event or notification associated with the key is performed, to the payment manager. The information indicating that the event or notification associated with the key is performed may include, for example, an acknowledgment type. The notification corresponding to the event or notification associated with the key may include, for example, the token update (replenishment), and the token update may indicate, for example, that the PAN included in the electronic device has been changed into a state allowing the payment function. The new token use key may be used in, for example, completing the update of the key corresponding to the PAN.

According to an embodiment of the present disclosure, the payment manager may transfer the token update operation to the payment server. For example, the payment manager may transfer a report that the token updating operation is performed, to the payment server, using a predetermined command (e.g., POST/reports). The payment manager may transfer, for example, a report that the PAN has been changed into a state allowing execution of the payment function. The payment manager may perform state synchronization with the payment server.

According to an embodiment of the present disclosure, the payment server may transfer the token update operation to the token server. For example, the payment server may transmit a response (e.g., acknowledgement or token reference replenished) to the token server.

According to an embodiment of the present disclosure, different tokens may be configured according to the forms, types, or purposes of the tokens. For example, the token may be configured based on a use period. For example, the tokens may include a disposable token, a token valid for only a predetermined period, or a permanently usable token. The disposable token may be used, for example, in an operation of using a new token when a payment function or payment event is performed.

According to an embodiment of the present disclosure, the token may be configured based on the state (e.g., signal intensity state) of a communication network. For example, the token may be generated when the state of the communication network is bad (e.g., when the signal intensity is lower than a reference intensity). Further, when the state of the communication network is not good, at least one token may be generated and used for the payment function. According to an embodiment, the token may be generated based on the electronic device or information (e.g., schedule information, user action tracking (pattern logging), or payment history). Further, the electronic device or the electronic device may transfer a report that a new token is generated, to the token server.

According to an embodiment of the present disclosure, the token may be configured based on the token server, the electronic device, or the connection state between the token server and the electronic device. For example, the token may be generated when the connection state between the token server and the communication network is not good (e.g., when the signal intensity is less than a reference intensity).

According to an embodiment of the present disclosure, the tokens may include at least one token and may be used based on a predetermined criterion. For example, one or more tokens may be included in the electronic device, and may be simultaneously or sequentially used based the priority or a user input.

According to an embodiment of the present disclosure, issuance of a token may be performed by reflecting the user's payment trend. For example, the disposable token may be obtained each time of payment trial or payment event. In this event, the electronic device may obtain the user's past payment details and predict a payment trial or event according to the location or time. Based on the prediction, the electronic device may receive a plurality of tokens from the token server and use the tokens in payment.

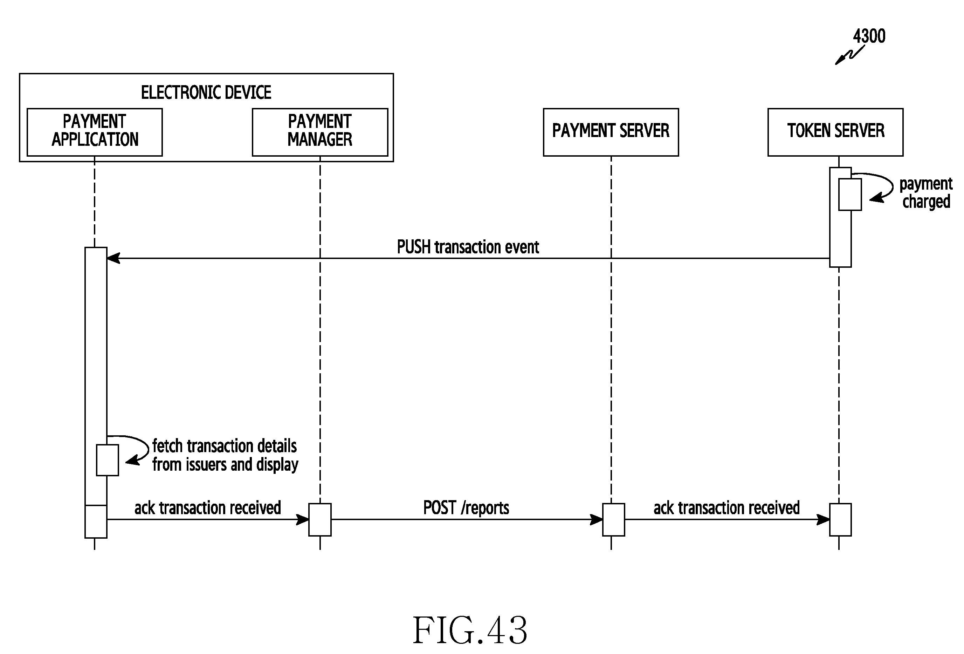

FIG. 43 illustrates a signal flow diagram 4300 of notification display in an electronic device according to an embodiment of the present disclosure.

Referring to FIG. 43, the solid line may include a request (e.g., a request or a call) command and the dotted line may include a response (e.g., a response or a return) command. The payment system may include an electronic device, a payment server, or a token server. The electronic device may include, for example, a payment application and/or a payment manager.

According to an embodiment of the present disclosure, the token server may determine generation of information relating to a payment function. For example, the token server may determine that at least a part of the information related to the payment has been changed. The changing of the payment information may be notified of using a predetermined command (e.g., payment charged). Further, the notification of the changing of the payment information may include, for example, a transaction notification.

According to an embodiment of the present disclosure, the token server may transfer information associated with the transaction notification to the payment application to perform transaction notification. For example, the token server may transfer the information to the payment application, using a predetermined command (e.g., PUSH transaction event). The predetermined command may include a push message.

According to an embodiment of the present disclosure, the information associated with the transaction notification may be requested by at least one among the financial server or the payment network. For example, at least one among the financial server or the payment network may transfer information associated with the transaction notification to the payment application.

According to an embodiment of the present disclosure, the payment application may receive the transaction notification, and display the transaction notification through a display functionally connected with the payment application based on the transaction notification. For example, the payment application may bring (e.g., fetch) information relating to transaction or payment. The information relating to the transaction or payment may be acquired from at least one among, for example, the token requester server, the financial server, and the payment network. The information on the transaction or payment may include, for example, information of details of the transaction notification. Further, the payment application may display the detail information of the transaction notification through, for example, a display functionally connected with the payment application.

According to an embodiment of the present disclosure, the payment application may transfer a result of execution of the transaction notification to the payment manager. For example, the payment application may transfer, to the payment manager, information (e.g., ACK transaction received) indicating that an operation (e.g., fetch transaction details from issuers and display) of the payment application associated with the transaction notification is performed. The information indicating that an operation of the payment application associated with the transaction notification is performed may include, for example, an acknowledgment type.

According to an embodiment of the present disclosure, the payment manager may transfer a result of execution of the transaction notification to the payment server. The result may be transferred to the payment server. For example, the payment manager may transfer a report that the transaction notification is performed, to the payment server, using a predetermined command (e.g., POST/reports). The payment manager may perform state synchronization with the payment server.

According to an embodiment of the present disclosure, the payment server may transfer a result of execution of the transaction notification to the token server. For example, the payment server may transmit a response (e.g., acknowledgement or ACK transaction received) to the token server.

According to an embodiment of the present disclosure, the payment system may generate information for encryption. For example, the payment system may perform the payment function, using a predetermined encryption method (e.g., cryptogram key). The predetermined encryption method may be performed in, for example, an SDK included in the electronic device. The SDK may include, for example, VISA®, MasterCard®, SDK, or Amex™ SDK.

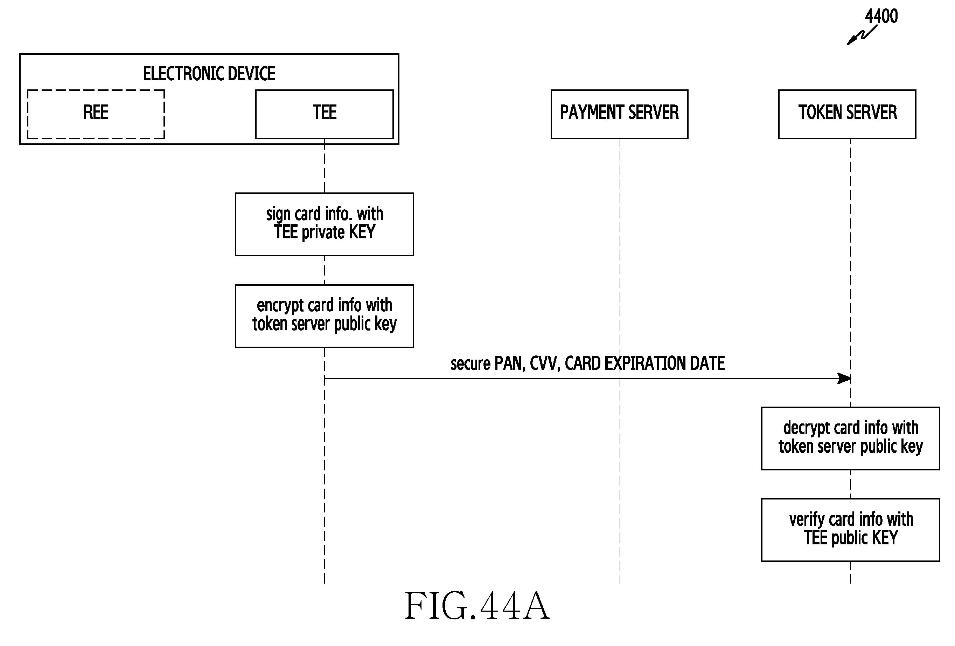

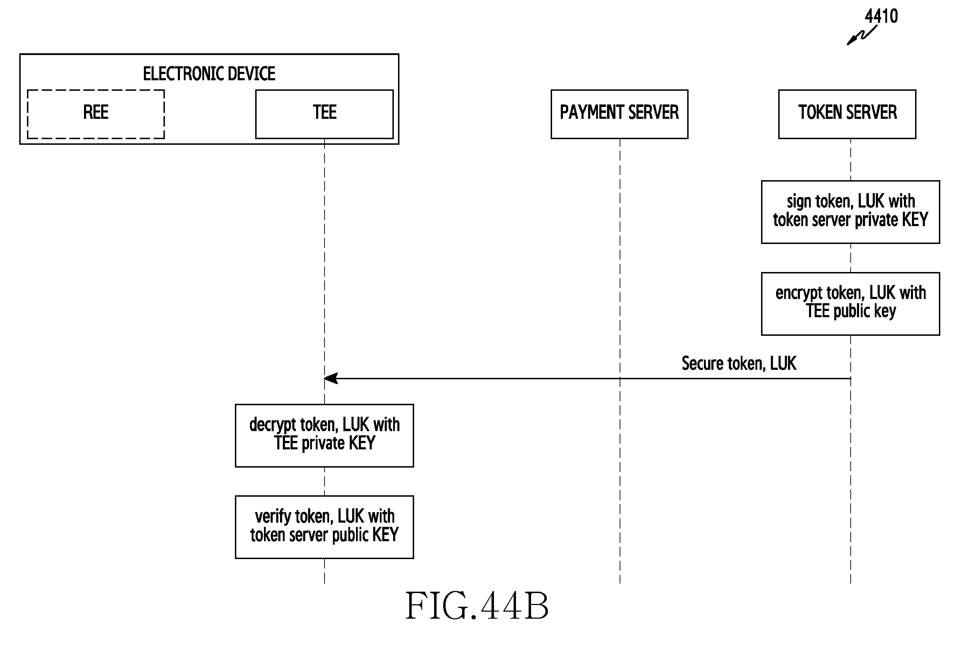

FIGs. 44A and 44B are signal flow diagrams 4400 and 4410 of an encryption method of a payment system according to an embodiment of the present disclosure.

FIG. 44A is a signal flow diagram 4400 of an end-to-end encryption method in a payment system according to an embodiment of the present disclosure. The payment system may include an electronic device, a payment server, or a token server. The electronic device may include an REE and/or a TEE.

Referring to FIGs. 44A and 44B the end-to-end encryption method may be performed in order to protect information used in the payment system, for example, PAN, CVV, card valid term, or LUK. Each of the TEE, the payment server, and the token server may perform an encryption operation in order to protect exchanged information (e.g., data). Further, each of the TEE, the payment server, and the token server may generate an encryption communication channel there between and may exchange information using the encryption communication channel.

According to an embodiment of the present disclosure, the token server may use public key encryption. For example, the token server may generate a public key and a private key, using a key (e.g., on-boarding key) included in the token server. For example, the public key of the token server may be called a token server public key, and the private key of the token server may be called a token server private key.

According to an embodiment of the present disclosure, an electronic device or the electronic device may generate a public key and a private key, using a key (e.g., a DRK) included in the electronic device or the electronic device. For example, the public key of the electronic device or the electronic device may be called a TEE public key, and the private key of the electronic device or the electronic device may be called a token server private key. The token server public key and the TEE public key may be shared between the TEE and the token server.

According to an embodiment of the present disclosure, the electronic device (e.g., TEE) may transfer the TEE public key to the token server. Further, the token server may transfer the token server public key to the electronic device. For example, the token server public key and the TEE public key may be shared between the TEE and the token server when a communication channel (e.g., a session) is generated therebetween. Further, the token server public key and the TEE public key may be shared between the TEE and the token server, for example, based on a user input or an external input. Further, the token server public key and the TEE public key may be shared between the TEE and the token server, for example, when a predetermined condition (e.g., an encryption function request) is satisfied.

According to an embodiment of the present disclosure, when the public key is shared, an authentication certificate included in each of the electronic device (e.g., TEE) and the token server may be used for signing (e.g., a signature) of the public key. The authentication certificate may be used, for example, in order to perform non-repudiation of the information shared by the TEE and the token server. Further, the authentication certificate may be issued (e.g., generated) through, for example, a CA. The signature may include, for example, a digital signature.

According to an embodiment of the present disclosure, the payment system may perform an end-to-end encryption operation in order to protect the PAN.

According to an embodiment of the present disclosure, the electronic device (e.g., TEE) may use the TEE private key for signing (e.g., a signature) of the card information used in the payment function based on the token server public key. The card information may include, for example, PAN, CVV, or card valid term.

According to an embodiment of the present disclosure, the electronic device (e.g., TEE) may use the TEE private key in encrypting the signed card information used in the payment function.

According to an embodiment of the present disclosure, the electronic device (e.g., TEE) may transfer, to the token server, the PAN, CVV, or card valid term, which have been subjected to the signature and encryption.

According to an embodiment of the present disclosure, the card information having been subjected to the signature and encryption may be transferred either to the token server through the payment server or directly to the token server without passing through the payment server.

According to an embodiment of the present disclosure, the token server may signature-decrypt, using the TEE public key, the card information which has been received from the electronic device and has been subjected to the signature and encryption.

According to an embodiment of the present disclosure, when the card information has been decrypted using the TEE public key, the token server may identify the signed card information.

According to an embodiment of the present disclosure, the token server may check whether the signature-authentication of the signed card information is valid, using the token server private key.

According to an embodiment of the present disclosure, the token server may use the decrypted and signature-identified card information or store it in the token server.

FIG. 44B is a signal flow diagram 4410 of an end-to-end encryption operation in a payment system according to an embodiment of the present disclosure. The payment system may include an electronic device, a payment server, or a token server. The electronic device may include an REE and/or a TEE.

Referring to FIG. 44B the end-to-end encryption method may be performed in order to protect information used in the payment system, for example, PAN or LUK. Each of the TEE, the payment server, and the token server may perform an encryption operation in order to protect exchanged information (e.g., data). Further, each of the TEE, the payment server, and the token server may generate an encryption communication channel therebetween and may exchange information using the encryption communication channel.

According to an embodiment of the present disclosure, the electronic device (e.g., TEE) may transfer the TEE public key to the token server. Further, the token server may transfer the token server public key to the electronic device. For example, the token server public key and the TEE public key may be shared between the TEE and the token server when a communication channel (session) is generated therebetween. Further, the token server public key and the TEE public key may be shared between the TEE and the token server, for example, based on a user input or an external input. Further, the token server public key and the TEE public key may be shared between the TEE and the token server, for example, when a predetermined condition (e.g., an encryption function request) is satisfied.

According to an embodiment of the present disclosure, when the public key is shared, an authentication certificate included in each of the electronic device (e.g., TEE) and the token server may be used for signing (signature) of the public key. The authentication certificate may be used, for example, in order to perform non-repudiation of the information shared by the TEE and the token server. Further, the authentication certificate may be issued (e.g., generated) through, for example, a CA. The signature may include, for example, a digital signature.

According to an embodiment of the present disclosure, the payment system may perform an end-to-end encryption operation in order to protect the LUK.

According to an embodiment of the present disclosure, the token server may use the token server private key for signing (e.g., a signature) of the token and key (e.g., a LUK) information used in the payment function. The key information may include, for example, an LUK, and may be functionally connected to the token ID to be used for the payment function. Further, one or more pieces of key information may be generated based on, for example, the token ID or the PAN.

According to an embodiment of the present disclosure, the token server may use the TEE public key to encrypt the token and LUK, which have been signed based on the token server private key.

According to an embodiment of the present disclosure, the token server may transfer the token and LUK, which have been subjected to the signature and encryption, to the electronic device (e.g., TEE).

According to an embodiment of the present disclosure, the LUK having been subjected to the signature and encryption may be transferred either to the electronic device through the payment server or directly to the electronic device without passing through the payment server.

According to an embodiment of the present disclosure, the electronic device may decrypt, using the TEE private key, the token and LUK which have been received from the token server and has been subjected to the signature and encryption.

According to an embodiment of the present disclosure, the electronic device (e.g., TEE) may identify the singed token and LUK having been decrypted using the TEE private key.

According to an embodiment of the present disclosure, the electronic device (e.g. TEE) may verify the signed token and LUK, using the token server public key.

According to an embodiment of the present disclosure, the electronic device (e.g., TEE) may use the signature-authenticated token or LUK or store them in the electronic device (e.g., TEE). The token and LUK may be encrypted and stored in the electronic device.

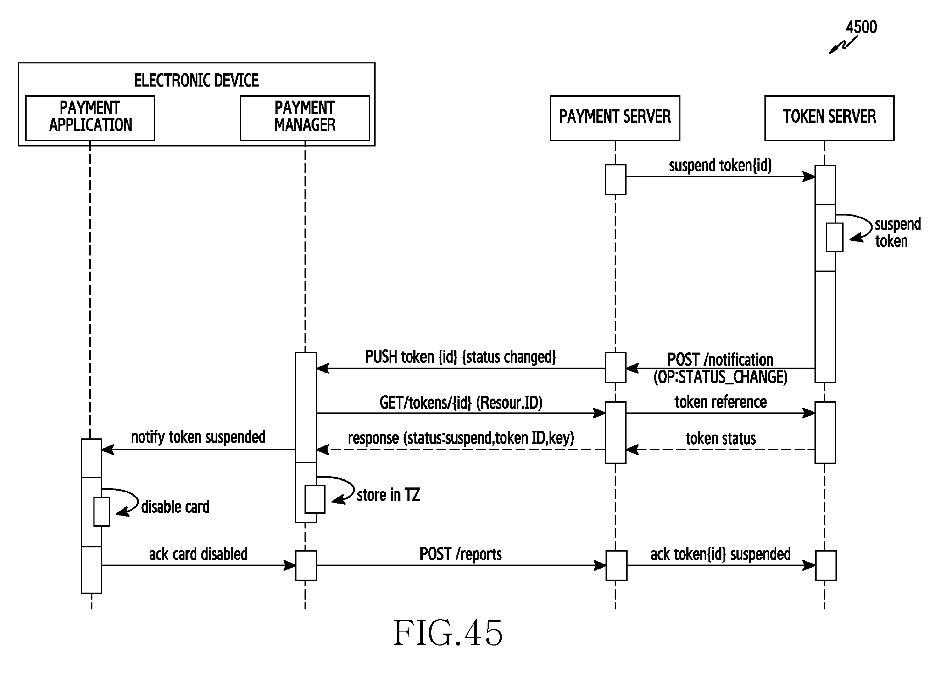

FIG. 45 is a signal flow diagram 4500 of token management operation according to an embodiment of the present disclosure.

Referring to FIG. 45, the solid line may include a request (e.g., a request or a call) command and the dotted line may include a response (e.g., a response or a return) command. The payment system may include an electronic device, a payment server, or a token server. The electronic device may include, for example, a payment application and/or a payment manager.

According to an embodiment of the present disclosure, in relation to the payment function, when an electronic device or a card of a user is lost, the user may notify of the loss of the electronic device or card, using the payment application, the financial server, or a web portal. Further, the payment application may provide the payment application with a function or application (e.g., payment application or FMM) associated with the loss, so as to enable the user to notify of the loss of the electronic device or card.

According to an embodiment of the present disclosure, the payment server may perform a function for stop or suspension of the electronic device or card when a function associated with the loss is performed or a predetermined event (e.g., a temporary card loss) is performed. The payment server may include, for example, the financial server, the web portal, or the payment network. The payment server may use a predetermined command (e.g., suspend token{id} or suspend token{token reference}) associated with the stop function, for the transfer to the token server.

According to an embodiment of the present disclosure, the token server may execute the stop function corresponding to the command (e.g., suspend token{id} or suspend token{token reference}) associated with the stop function and received from the payment server. For example, the token server may change the state of the token. The state of the token may be changed to suspended token.

According to an embodiment of the present disclosure, the token server may transfer a notification associated with the stop function to the payment server. For example, the token server may transfer the suspended token, which corresponds to the changed state of the token, to the payment server, using a predetermined command (e.g., POST//notification{Suspend}). The command may include at least one recognition number (e.g., card reference ID or token ID) associated with the state-changed token.

According to an embodiment of the present disclosure, the token server may transfer a notification associated with the state change of the token to the payment server. For example, the token server may transfer the notification to the payment server, using a command (e.g., POST/notification{Status Change}), which does not include the state of the token. The command may include at least one recognition number (e.g., card reference ID or token ID) associated with the state-changed token.

According to an embodiment of the present disclosure, the payment server may transfer the state of the token to the payment manager. For example, the payment server may transfer of the state of the token to the payment manager, using a predetermined command (e.g. PUSH token {id}{suspend}). The command may include at least one recognition number (e.g., card reference ID, token ID, or resource ID) associated with the state-changed token.

According to an embodiment of the present disclosure, the payment server may transfer the changed state of the token to the payment manager. For example, the payment server may transfer the change of the state of the token to the payment manager, using a predetermined command (e.g. PUSH tokens {id}{status changed}). The command may include at least one recognition number (e.g., card reference ID, token ID, or resource ID) associated with the state-changed token.

According to an embodiment of the present disclosure, the payment manager may transfer the token ID to the payment server, using a predetermined command (e.g. GET /tokens/ {id}) in order to change the state of the token included (stored) in the electronic device. The token ID may be token ID information included in PUSH token {id}{status changed}, which is information associated with the state of the token received from the payment server. Further, the payment manager may transfer, for example, a resource ID to the payment server, using a predetermined command (e.g., GET/tokens/{id}). The resource ID may include an identifier of the registered (enrollment) resource, which may be configured in the form of a URL. Further, the resource ID may include, for example, reference information storing information related to a token ID and may include an address at which the token ID is stored in the payment server.

According to an embodiment of the present disclosure, the command may include information which can be authenticated by the token server. The information which can be authenticated may include a token key associated with the token.

According to an embodiment of the present disclosure, the payment server may transfer, to the token server, at least one among the token ID and the token reference, which are received from the payment manager.

According to an embodiment of the present disclosure, the token server may transfer the state of the token to the payment server. For example, the state of the token may be a state of the token having been changed corresponding to the stop function.

According to an embodiment of the present disclosure, the payment server may transfer the state of the token to the payment manager. For example, the state of the token may be a state of the token having been changed corresponding to the stop function. The changed state of the token may include, for example, token suspended or status: suspend. Further, the payment server may include, for example, the token ID and information associated with the token ID.

The information associated with the token ID may include information that can be authenticated by the payment manager. The information that can be authenticated may include a token key associated with the token.

According to an embodiment of the present disclosure, the payment manager may change the electronic device or the state of the token stored in the electronic device, based on the state (e.g., token suspended) of the token. For example, the payment manager may change the electronic device or the state of the token stored in the electronic device into a suspended state (e.g., token suspended).

According to an embodiment of the present disclosure, the payment manager may change the state of the token stored in a TZ of the electronic device, based on the state (e.g., token suspended) of the token. For example, the payment manager may change the state of the token stored in the TZ of the electronic device into a suspended state (e.g., token suspended).

According to an embodiment of the present disclosure, the payment server may transfer the state of the token to the payment application. For example, the state of the token may be a state of the token having been changed corresponding to the stop function.

According to an embodiment of the present disclosure, the payment manager may change the electronic device or the state of the card or PAN recognized by the electronic device. For example, the payment application may change (e.g., disable) the state of the card of the PAN to suspend the payment function using the PAN. For example, the payment application may display that the card associated with the PAN is unusable. The displaying method may use at least one among a tag, gray processing, and additional mark.

According to an embodiment of the present disclosure, the payment application may transfer the changed state of the card or the PAN to the payment manager. For example, the payment application may transfer information (e.g., ACK card disabled) indicating that the card or the PAN has been suspended, to the payment manager. The payment application may make, for example, the card or the PAN may be unusable in the payment function.

According to an embodiment of the present disclosure, the payment manager may transfer the changed state of the card or the PAN to the payment server. For example, the payment manager may transfer the information reporting that the state of the card or the PAN has been changed to a suspended state (e.g., suspended or disabled) to the payment server using a predetermined command (e.g., POST/reports). The payment manager may perform, for example, state synchronization with the payment server.

According to an embodiment of the present disclosure, the payment server may transfer the changed state of the card or the PAN to the token server. For example, the payment server may transmit a response (e.g., acknowledgement or ACK token{id} suspended) to the token server.

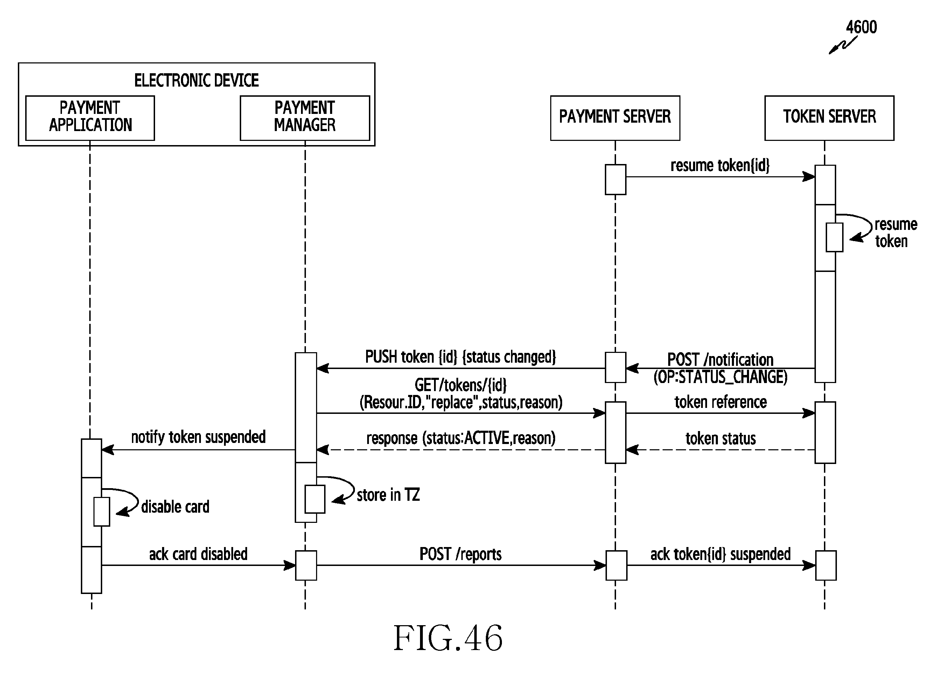

FIG. 46 is a signal flow diagram 4600 of a token management method according to an embodiment of the present disclosure.

Referring to FIG. 46, the solid line may include a request (e.g., a request or a call) command and the dotted line may include a response (e.g., a response or a return) command. The payment system may include an electronic device, a payment server, or a token server. The electronic device may include, for example, a payment application and/or a payment manager.

According to an embodiment of the present disclosure, in relation to the payment function, the user may change the state of the electronic device or the card of the user from the suspension to use. For example, the payment application, the financial server, or the web portal may be used to change the use state of the electronic device or the card. Further, the payment application may provide the payment application with a function or application (e.g., payment application or FMM) associated with the use, so as to enable the user to notify of the use of the electronic device or card.

According to an embodiment of the present disclosure, the payment server may perform a function for restart or resume of the electronic device or card when a function associated with the loss is performed or a predetermined event (e.g., temporary card loss cancellation) is performed. The payment server may include, for example, the financial server, the web portal, or the payment network. The payment server may use a predetermined command (e.g., resume token{id} or resume token{token reference}) associated with the reuse function, for the transfer to the token server.

According to an embodiment of the present disclosure, the token server may execute the reuse function corresponding to the command (e.g., resume token{id} or resume token{token reference}) associated with the reuse function and received from the payment server. For example, the token server may change the state of the token. The state of the token may be changed to resume token.

According to an embodiment of the present disclosure, the token server may transfer a notification associated with the reuse function to the payment server. For example, the token server may transfer the resume token, which corresponds to the changed state of the token, to the payment server, using a predetermined command (e.g., POST//notification{Resume}). According to various embodiments, the command may include at least one recognition number (e.g., card reference ID or token ID) associated with the state-changed token.

According to an embodiment of the present disclosure, the token server may transfer a notification associated with the state change of the token to the payment server. For example, the token server may transfer the notification to the payment server, using a command (e.g., POST/notification{Status Change}), which does not include the state of the token. According to various embodiments, the command may include at least one recognition number (e.g., card reference ID or token ID) associated with the state-changed token.

According to an embodiment of the present disclosure, the payment server may transfer the state of the token to the payment manager. For example, the payment server may transfer the state of the token to the payment manager, using a predetermined command (e.g. PUSH token {id}{resume}). The command may include at least one recognition number (e.g., card reference ID, token ID, or resource ID) associated with the state-changed token.

According to an embodiment of the present disclosure, the payment server may transfer the changed state of the token to the payment manager. For example, the payment server may transfer the change of the state of the token to the payment manager, using a predetermined command (e.g. PUSH tokens {id}{status changed}). The command may include at least one recognition number (e.g., card reference ID, token ID, or resource ID) associated with the state-changed token.

According to an embodiment of the present disclosure, the payment manager may transfer the token ID to the payment server, using a predetermined command (e.g. GET /tokens/ {id}) in order to change the state of the token included (stored) in the electronic device. The token ID may be token ID information included in PUSH token {id}{status changed}, which is information associated with the state of the token received from the payment server. Further, the payment manager may transfer, for example, a resource ID, an instruction, a status, or a reason to the payment server, using a predetermined command (e.g., GET/tokens/{id}). The resource ID may include an identifier of the registered (enrollment) resource, which may be configured in the form of a URL. Further, the resource ID may include, for example, reference information storing information related to a token ID and may include an address at which the token ID is stored in the payment server. The instruction may include, for example, a description for state change of the token, and the description may include replace. The status may include, for example, a state (e.g., active, suspension, resume, or disposal) of the token. The reason may include, for example, a reason why the state of the token is changed, and may include, for example, Found device.

According to an embodiment of the present disclosure, the command may include information which can be authenticated by the token server. The information which can be authenticated may include a token key associated with the token.

According to an embodiment of the present disclosure, the payment server may transfer, to the token server, at least one among the token ID and the token reference, which have been received from the payment manager.

According to an embodiment of the present disclosure, the token server may transfer the state of the token to the payment server. For example, the state of the token may be a state of the token having been changed corresponding to the reuse function.

According to an embodiment of the present disclosure, the payment server may transfer the state of the token or the reason (e.g., reason) when the state of the token is changed to the payment manager. For example, the state of the token may be a state of the token having been changed corresponding to the reuse function. The changed state of the token may include, for example, token resumed or status:ACTIVE. Further, the payment server may include, for example, the token ID and information associated with the token ID.

The information associated with the token ID may include information that can be authenticated by the payment manager. The information that can be authenticated may include a token key associated with the token.

According to an embodiment of the present disclosure, the payment manager may change the electronic device or the state of the token stored in an electronic device, based on the state (e.g., token resumed) of the token. For example, the payment manager may change the electronic device or the state of the token stored in the electronic device into a reuse state (e.g., token resumed).

According to an embodiment of the present disclosure, the payment manager may change the state of the token stored in a TZ of the electronic device, based on the state (e.g., token resumed) of the token. For example, the payment manager may change the state of the token stored in the TZ of the electronic device into a suspended state (e.g., token resumed).

According to an embodiment of the present disclosure, the payment manager may transfer the state of the token to the payment application. For example, the state of the token may be a state of the token having been changed corresponding to the reuse function.

According to an embodiment of the present disclosure, the payment application may change the electronic device or the state of the PAN recognized by the electronic device. For example, the payment application may change (e.g., enable) the state of the card or the PAN to enable the payment function using the PAN to be reused. For example, the payment application may display that the card associated with the PAN is usable. The displaying method may use at least one among a tag, reconstruction to the original color, and additional mark.

According to an embodiment of the present disclosure, the payment application may transfer the changed state of the card or the PAN to the payment manager. For example, the payment application may transfer information (e.g., ACK card enabled) indicating that the card or the PAN has been reused, to the payment manager. The payment application may, for example, reuse the card or the PAN in the payment function.

According to various embodiments, the payment manager may transfer the changed state of the card or the PAN to the payment server. For example, the payment manager may transfer the information reporting that the state of the card or the PAN has been changed to a reused state (e.g., enabled) to the payment server using a predetermined command (e.g., POST/reports). The payment manager may perform, for example, state synchronization with the payment server.

According to an embodiment of the present disclosure, the payment server may transfer the changed state of the card or the PAN to the token server. For example, the payment server may transmit a response (e.g., acknowledgement or ACK token{id} resumed) to the token server.

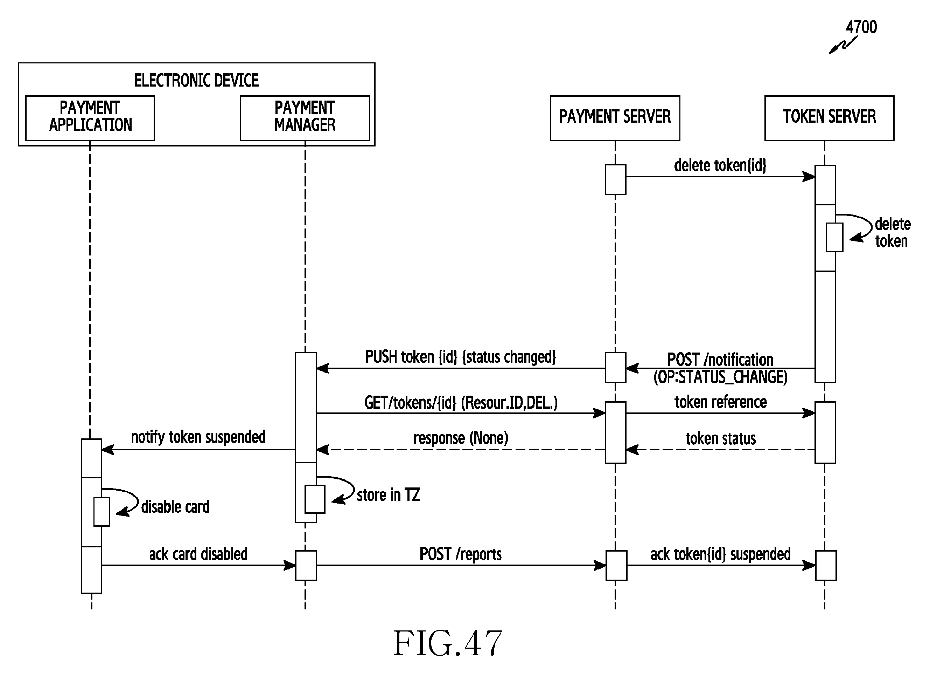

FIG. 47 is a signal flow diagram 4700 of a token management method according to an embodiment of the present disclosure.

Referring to FIG. 47, the solid line may include a request (e.g., a request or a call) command and the dotted line may include a response (e.g., a response or a return) command. The payment system may include an electronic device, a payment server, or a token server. The electronic device may include, for example, a payment application and/or a payment manager.

According to an embodiment of the present disclosure, in relation to the payment function, when an electronic device or a card of a user is lost, the user may notify of the loss of the electronic device or card, using the payment application, the financial server, or a web portal. Further, the payment application may provide the payment application with a function or application (e.g., payment application or FMM) associated with the loss, so as to enable the user to notify of the loss of the electronic device or card.

According to an embodiment of the present disclosure, the payment server may perform a function for discard (disposal) of the electronic device or card when a function associated with the loss is performed or a predetermined event (e.g., temporary card loss) is performed. The payment server may include, for example, the financial server, the web portal, or the payment network. The payment server may use a predetermined command (e.g., delete token{id} or delete token{token reference}) associated with the disposal function, for the transfer to the token server.

According to an embodiment of the present disclosure, the token server may execute the disposal function corresponding to the command (e.g., delete token{id} or delete token{token reference}) associated with the discard (disposal) function and received from the payment server. For example, the token server may change the state of the token. The state of the token may be changed to delete token.

According to an embodiment of the present disclosure, the token server may transfer a notification associated with the disposal function to the payment server. For example, the token server may transfer the delete token, which corresponds to the changed state of the token, to the payment server, using a predetermined command (e.g., POST/notification{delete}). The command may include at least one recognition number (e.g., card reference ID or token ID) associated with the state-changed token.

According to an embodiment of the present disclosure, the token server may transfer a notification associated with the state change of the token to the payment server. For example, the token server may transfer the notification to the payment server, using a command (e.g., POST/notification{Status Change}), which does not include the state of the token. The command may include at least one recognition number (e.g., card reference ID or token ID) associated with the state-changed token. The payment server may transfer the state of the token to the payment manager. For example, the payment server may transfer the state of the token to the payment manager, using a predetermined command (e.g. PUSH token {id}{delete}). The command may include at least one recognition number (e.g., card reference ID, token ID, or resource ID) associated with the state-changed token.

According to an embodiment of the present disclosure, the payment server may transfer the changed state of the token to the payment manager. For example, the payment server may transfer the change of the state of the token to the payment manager, using a predetermined command (e.g. PUSH tokens {id}{status changed}). The command may include at least one recognition number (e.g., card reference ID, token ID, or resource ID) associated with the state-changed token.

According to an embodiment of the present disclosure, the payment manager may transfer the token ID to the payment server, using a predetermined command (e.g. GET /tokens/ {id}) in order to change the state of the token included (stored) in the electronic device. The token ID may be token ID information included in PUSH token {id}{status changed}, which is information associated with the state of the token received from the payment server. Further, the payment manager may transfer, for example, a resource ID to the payment server, using a predetermined command (e.g., GET/tokens/{id}). The resource ID may include an identifier of the registered (enrollment) resource, which may be configured in the form of a URL. Further, the resource ID may include, for example, reference information storing information related to a token ID and may include an address at which the token ID is stored in the payment server.

According to an embodiment of the present disclosure, the command may include information which can be authenticated by the token server. The information which can be authenticated may include a token key associated with the token.

According to an embodiment of the present disclosure, the payment server may transfer, to the token server, at least one among the token ID and card reference ID, which have been received from the payment manager.

According to an embodiment of the present disclosure, the token server may transfer the state of the token to the payment server. For example, the state of the token may be a state (e.g., token not found) of the token having been changed corresponding to the disposal function.

According to an embodiment of the present disclosure, the payment server may transfer the state of the token or the token ID to the payment manager. For example, the state of the token may be a state of the token having been changed corresponding to the disposal function. The changed state of the token may include, for example, token deleted or status:disposal. Further, the payment server may include, for example, the token ID and information associated with the token ID.

The information associated with the token ID may include information that can be authenticated by the payment manager. The information that can be authenticated may include a token key associated with the token.

According to an embodiment of the present disclosure, the payment manager may change the electronic device or the state of the token stored in an electronic device, based on the state (e.g., token deleted) of the token. For example, the payment manager may change the electronic device or the state of the token stored in the electronic device into a disposal state (e.g., token deleted).

According to an embodiment of the present disclosure, the payment manager may change the state of the token stored in a TZ of the electronic device, based on the state (e.g., token deleted) of the token. For example, the payment manager may change the state of the token stored in the TZ of the electronic device into a suspended state (e.g., token deleted).

According to an embodiment of the present disclosure, the payment manager may transfer the state of the token to the payment application. For example, the state of the token may be a state of the token having been changed corresponding to the disposal function.

According to an embodiment of the present disclosure, the payment application may change the state of the card or the PAN recognized by the electronic device. For example, the payment application may change (e.g., disable or deleted) the state of the card of the PAN to discard the payment function using the PAN. For example, the payment application may display that the card associated with the PAN is unusable. The displaying method may use at least one among a tag, gray processing, additional mark, and image deletion.

According to an embodiment of the present disclosure, the payment application may transfer the changed state of the card or the PAN to the payment manager. For example, the payment application may transfer information (e.g., ACK card disabled or ACK card deleted) indicating that the card or the PAN has been discarded, to the payment manager. The payment application may, for example, delete the card or the PAN in the payment application to make the card or the PAN be unusable in the payment function.

According to an embodiment of the present disclosure, the payment manager may transfer the changed state of the card or the PAN to the payment server. For example, the payment manager may transfer the information reporting that the state of the card or the PAN has been changed to a discarded state (e.g., disabled, deleted, or disposal) to the payment server using a predetermined command (e.g., POST/reports). The payment manager may perform, for example, state synchronization with the payment server.

According to an embodiment of the present disclosure, the payment server may transfer the changed state of the card or the PAN to the token server. For example, the payment server may transmit a response (e.g., acknowledgement or ACK token{id} deleted) to the token server.

According to an embodiment of the present disclosure, the card or the PAN may include a use term. For example, the card or the PAN may include a term (e.g., valid term) for which the payment function can be performed. The electronic device or the electronic device may include, for example, the card or the PAN and may perform the disposal function for the card or the PAN when the term for execution of the payment function expires.

According to an embodiment of the present disclosure, the electronic device or the electronic device may request the disposal function when a predetermined function (e.g., memory format, initialization, or factory reset). For example, the electronic device or the electronic device may transfer a report of the execution of the predetermined function to at least one among the payment server or the token server. When receiving the report of the execution of the predetermined function, the at least one among the payment server and the token server may perform the disposal function.

According to an embodiment of the present disclosure, the electronic device may progress an integrity inspection of the electronic device and may request the disposal function when determining that the storage place storing the token is problematic. For example, the integrity inspection may be progressed in a security mode or a general booting operation. When a hardware/software (HW/SW) problem in the TEE or security module in which the token is stored, or an abnormal access to an external device is detected, it may be transferred to at least one among the payment server and the token server.

According to an embodiment of the present disclosure, if a token is stored in a security module, the security service module may be used for the disposal function. For example, the security service management server may have the management authority of the security module. When receiving the disposal request, the security service management server may format the security module in order to delete the token stored in the security module. Further, for synchronization with respect to the token state, the security service management module may request the token server to discard the token.

According to an embodiment of the present disclosure, the user may use the application, the financial server, the web portal, or the payment network to perform the function of discarding the card or the PAN. Further, the payment application, for example, the payment application may provide a function or application (e.g., payment application or FMM) associated with the disposal function, so as to notify of the state (e.g., a disposal state) of the card or the PAN.

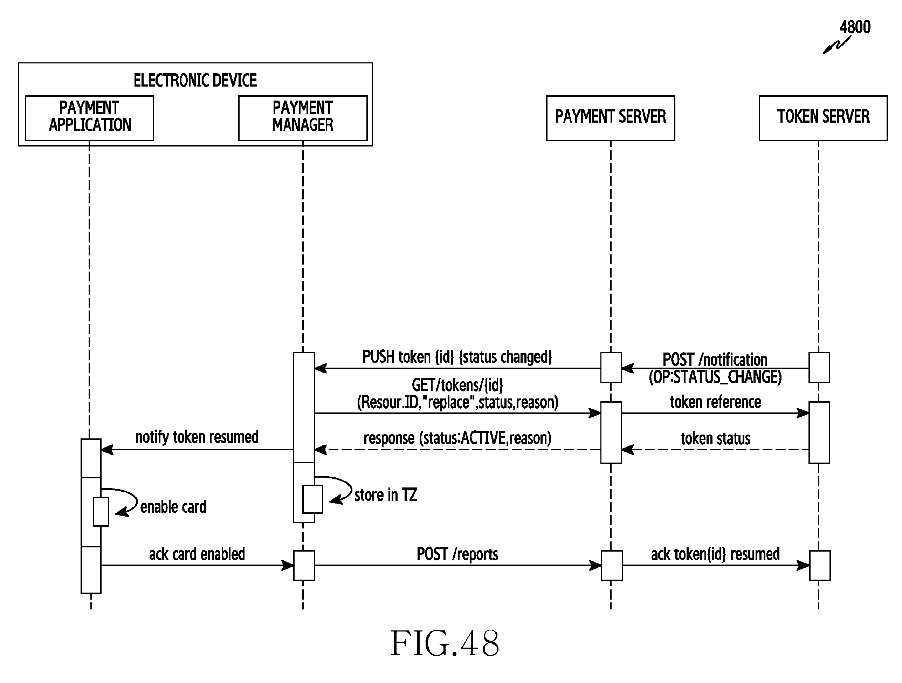

FIG. 48 is a signal flow diagram 4800 of a token management method according to an embodiment of the present disclosure.

Referring to FIG. 48, the solid line may include a request (e.g., a request or a call) command and the dotted line may include a response (e.g., a response or a return) command. The payment system may include an electronic device, a payment server, or a token server. The electronic device may include, for example, a payment application and/or a payment manager.

According to an embodiment of the present disclosure, the token server may change the state of the token on the basis of the operation of the token server or an external input. For example, the token server may transfer the changed state of the token to the payment server. For example, the token server may transfer the state of the token to the payment server, using a predetermined command (e.g., POST/notification{status changed}). The command may include at least one recognition number (e.g., card reference ID or token ID) associated with the state-changed token.

According to an embodiment of the present disclosure, the token server may transfer a notification associated with the state change of the token to the payment server. For example, the token server may transfer a command (e.g., POST/notification{Status Change}), which does not include the state of the token, to the payment server. The command may include at least one recognition number (e.g., card reference ID or token ID) associated with the state-changed token.

According to an embodiment of the present disclosure, the payment server may transfer the state of the token to the payment manager. For example, the payment server may transfer the state of the token to the payment manager, using a predetermined command (e.g. PUSH token {id}{status changed}). The command may include at least one recognition number (e.g., card reference ID, token ID, or resource ID) associated with the state-changed token.

According to an embodiment of the present disclosure, the payment server may transfer the changed state of the token to the payment manager. For example, the payment server may transfer the change of the state of the token to the payment manager, using a predetermined command (e.g. PUSH tokens {id}{status changed}). According to various embodiments, the command may include at least one recognition number (e.g., card reference ID, token ID, or resource ID) associated with the state-changed token.

According to an embodiment of the present disclosure, the payment manager may transfer the token ID to the payment server, using a predetermined command (e.g. GET /tokens/ {id}) in order to change the state of the token included (stored) in the electronic device. The token ID may be token ID information included in PUSH token {id}{status changed}, which is information associated with the state of the token received from the payment server. Further, the payment manager may transfer, for example, a resource ID, an instruction, a status, or a reason to the payment server, using a predetermined command (e.g., GET/tokens/{id}). The resource ID may include an identifier of the registered (enrollment) resource, which may be configured in the form of a URL. Further, the resource ID may include, for example, reference information storing information related to a token ID and may include an address at which the token ID is stored in the payment server. The instruction may include, for example, a description for state change of the token, and the description may include replace. The status may include, for example, a state (e.g., active, suspension, resume, or disposal) of the token. The reason may include, for example, a reason why the state of the token is changed, and may include, for example, found device.

According to an embodiment of the present disclosure, the command may include information which can be authenticated by the token server. The information which can be authenticated may include a token key associated with the token.

According to an embodiment of the present disclosure, the payment server may transfer, to the token server, at least one among the token ID and the token reference, which have been received from the payment manager.

According to an embodiment of the present disclosure, the token server may transfer the state of the token to the payment server. For example, the state of the token may be a state of the token having been changed based on the operation of the token server or an external input.

According to an embodiment of the present disclosure, the payment server may transfer the state of the token to the payment manager. For example, the state of the token may be a state of the token having been changed based on the operation of the token server or an external input.

The information associated with the token ID may include information that can be authenticated by the payment manager. The information that can be authenticated may include a token key associated with the token.

According to an embodiment of the present disclosure, the payment manager may change the electronic device or the state of the token stored in the electronic device, based on the state of the token received from the payment server.

According to an embodiment of the present disclosure, the payment manager may change the state of the token stored in a TZ of the electronic device, based on the state (e.g., token resumed) of the token. For example, the payment manager may change the state of the token stored in the TZ of the electronic device into a suspended state (e.g., token resumed).

According to an embodiment of the present disclosure, the payment server may transfer the state of the token to the payment application. For example, the payment manager may transfer a report of that the state of the token has been changed, to the payment application, using a predetermined command (e.g. notify status change).

According to an embodiment of the present disclosure, the payment application may change the electronic device or the state of the card or the PAN recognized by the electronic device. For example, the payment application may change (e.g., process status change) the state of the card or the PAN into the state of the token received from the payment manager. For example, the payment application may display the state of the card associated with the PAN. According to various embodiments, the displaying method may use at least one among a tag, color change, additional mark, and deletion.

According to an embodiment of the present disclosure, the payment application may transfer the changed state of the card or the PAN to the payment manager. For example, the payment application may transfer information (e.g., ACK card changed) indicating that the card or the PAN has been changed, to the payment manager.

According to an embodiment of the present disclosure, the payment manager may transfer the changed state of the card or the PAN to the payment server. For example, the payment manager may transfer the information reporting that the state of the card or the PAN has been changed, to the payment server, using a predetermined command (e.g., POST/reports). The payment manager may perform, for example, state synchronization with the payment server.

According to an embodiment of the present disclosure, the payment server may transfer the changed state of the card or the PAN to the token server. For example, the payment server may transmit a response (e.g., acknowledgement or token{id} status ACKed) to the token server.

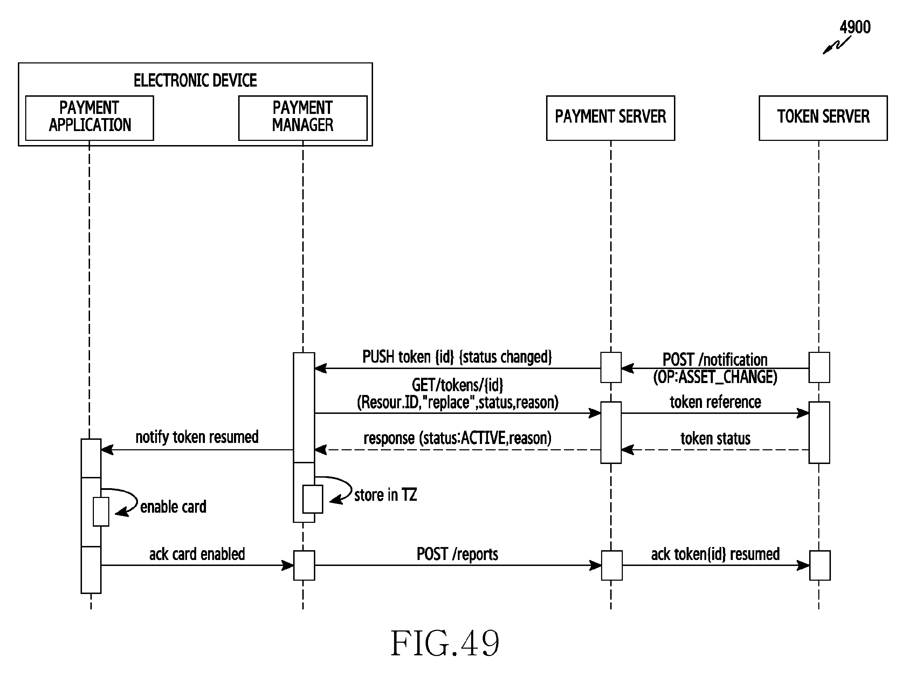

FIG. 49 is a signal flow diagram 4900 of asset management operation according to an embodiment of the present disclosure.

Referring to FIG. 49, the solid line may include a request (e.g., a request or a call) command and the dotted line may include a response (e.g., response or return) command. The payment system may include an electronic device, a payment server, or a token server. The electronic device may include, for example, a payment application and/or a payment manager.

According to an embodiment of the present disclosure, the token server may change information associated with an asset, on the basis of the operation of the token server or an external input. The information associated with an asset may include, for example, PAN associated with the asset, a contract condition associated with the asset, a valid term associated with the asset, and token information associated with the asset. For example, the token server may transfer the information associated with the asset to the payment server. For example, the token server may transfer the information associated with the asset to the payment server, using a predetermined command (e.g., POST/notification(OP:ASSET_CHANGE)). According to various embodiments, the command may include at least one recognition number (e.g., card reference ID or token ID) associated with the changed asset.

According to an embodiment of the present disclosure, the token server may transfer a notification associated with the change of information associated with the asset to the payment server. For example, the token server may transfer a command (e.g., POST/notification{Status Change}), which does not include information associated with the asset, to the payment server. The command may include at least one recognition number (e.g., card reference ID or token ID) associated with the changed asset.

According to an embodiment of the present disclosure, the payment server may transfer the changed information relating to the asset to the payment manager. For example, the payment server may transfer the information of the asset to the payment manager, using a predetermined command (e.g. PUSH token {id}{Asset changed}). The command may include at least one recognition number (e.g., card reference ID, token ID, or resource ID) associated with the changed asset.

According to an embodiment of the present disclosure, the payment server may transfer information reporting that the information relating to the asset has been changed, to the payment manager. For example, the payment server may transfer a report that the information relating to the asset has been changed, to the payment manager, using a predetermined command (e.g. PUSH tokens {id}{Asset changed}). The command may include at least one recognition number (e.g., card reference ID, token ID, or resource ID) associated with the asset, information of which has been changed.

According to an embodiment of the present disclosure, the payment manager may transfer the token ID to the payment server, using a predetermined command (e.g. GET /tokens/ {id}) in order to change the information relating to the asset included (stored) in the electronic device. The token ID may be token ID information included in PUSH token {id}{asset changed}, which is information associated with the asset and received from the payment server. Further, the payment manager may transfer, for example, a resource ID, an instruction, a status, or a reason to the payment server, using a predetermined command (e.g., GET/tokens/{id}). The resource ID may include an identifier of the registered (enrollment) resource, which may be configured in the form of a URL. Further, the resource ID may include, for example, reference information storing information related to a token ID and may include an address at which the token ID is stored in the payment server. The instruction may include, for example, a description for information change of the asset, and the description may include replace. The status may include, for example, a state (e.g., active, suspension, resume, or disposal) of the token associated with the asset. The reason may include, for example, a reason why the information of the asset is changed, and may include, for example, a lost device.

According to an embodiment of the present disclosure, the command may include information which can be authenticated by the token server. The information which can be authenticated may include a token key associated with the token.

According to an embodiment of the present disclosure, the payment server may transfer, to the token server, at least one among the token ID and the token reference, which have been received from the payment manager. The token reference may include, for example, a random value generated by the token server.

According to an embodiment of the present disclosure, the token server may transfer the changed information associated with the asset to the payment server. For example, the information of the asset may be information of the asset having been changed based on the operation of the token server or an external input, and may include a state of the token.

According to an embodiment of the present disclosure, the payment server may transfer the information of the changed asset to the payment manager. For example, the information of the asset may be a state of the asset having been changed based on the operation of the token server or an external input. Further, the payment server may transfer predetermined data (e.g., status:ACTIVE, reason) associated with the information of the changed asset. The predetermined data may include information (e.g., status:ACTIVE) corresponding to the token having changed to the activated state and a reason for the change into the activated state. For example, the information of the changed asset may be a contract condition associated with the asset. Thus, a changed contract condition may be transferred to receive a user input. For example, the information of the changed asset may be a PAN associated with the asset. When the PAN is changed, an already issued token may be used without change. As another embodiment, when the PAN is changed, a process of receiving a newly issued token may be newly progressed.

According to an embodiment of the present disclosure, the payment manager may change the electronic device or the state of the asset or the state of the token stored in the electronic device, based on the state of the asset received from the payment server.

According to an embodiment of the present disclosure, the payment manager may store, in a trust zone, the information (e.g., status:ACTVE, reason) received from the payment server. The trust zone may be included in, for example, the TEE. The payment manager may store, for example, at least one among information (e.g., status:ACTIVE) corresponding to the state of the asset changed into the activated state, which corresponds predetermined data associated with the state of the changed asset, and the reason of the change into the activated state, in the security application included in the electronic device.

According to an embodiment of the present disclosure, the payment manager may change the electronic device or the state of the token stored in the electronic device, based on the information of the asset. For example, the payment manager may change the electronic device or the state of the token stored in the electronic device into a reuse state (e.g., token resumed).

According to an embodiment of the present disclosure, the payment manager may transfer the state of the token associated with the asset to the payment application. For example, the payment manager may transfer a report that the information associated with the asset has been changed, to the payment application, using a predetermined command (e.g. notify token resumed). For example, the information associated with the asset may be a state of the token having been changed corresponding to the reuse state.

According to an embodiment of the present disclosure, the payment application may change the electronic device or the state of the card or the PAN recognized by the electronic device. For example, the payment application may change (e.g., enable) the state of the card of the PAN to enable the payment function using the PAN to be reused. For example, the payment application may display that the card associated with the PAN is usable. The displaying method may use at least one among a tag, reconstruction to the original color, and additional mark.

According to an embodiment of the present disclosure, the payment application may change the electronic device or the information of the asset recognized by the electronic device. For example, the payment application may change the PAN of the asset. For example, a changed contract condition may be displayed.

According to an embodiment of the present disclosure, the payment application may transfer the information of the changed asset to the payment manager. For example, the payment application may transfer information (e.g., ACK card enabled) indicating that the card or the PAN has been reused, to the payment manager. The payment application may, for example, reuse the card or the PAN in the payment function.

According to an embodiment of the present disclosure, the payment manager may transfer the changed state of the card or the PAN to the payment server. For example, the payment manager may transfer the information reporting that the state of the card or the PAN has been changed to a reused state (e.g., enabled) to the payment server using a predetermined command (e.g., POST/reports). The payment manager may perform, for example, state synchronization with the payment server.

According to an embodiment of the present disclosure, the payment server may transfer the changed state of the card or the PAN to the token server. For example, the payment server may transmit a response (e.g., acknowledgement or ACK token{id} resumed) to the token server.

According to an embodiment of the present disclosure, the electronic device (e.g., the electronic device 701) may include a plurality of communication modules including a first communication module and a second communication module; and a processor functionally connected to the first communication module and the second communication module, wherein the processor is configured to generate payment information, transmit the payment information to the outside of the electronic device through the first communication module, and transmit the payment information to the outside through the second communication module when payment based on the payment information fails or when a predetermined time has passed from the transmission.

According to an embodiment of the present disclosure, the first communication module may be configured to include an MST communication module and the second communication module may be configured to include an NFC module.

According to an embodiment of the present disclosure, the processor may be configured to, using a sensor functionally connected to the electronic device, acquire at least one piece of biometric information of a user corresponding to the electronic device and authenticate the user based on the at least one piece of biometric information.

According to an embodiment of the present disclosure, the sensor may include at least one of a fingerprint sensor, an iris sensor, a camera sensor, a sound sensor (microphone), and a cardiac sensor.

According to an embodiment of the present disclosure, the electronic device may operate a plurality of execution environments including a first execution environment and a second execution environment.

According to an embodiment of the present disclosure, the processor may be configured to authenticate a user corresponding to the electronic device through a first application executed in the first execution environment and generate the payment information through a second application executed in the first execution environment.

According to an embodiment of the present disclosure, the processor may be configured to transmit the payment information through the second communication module, based on host card emulation (HCE).

According to an embodiment of the present disclosure, an electronic device (e.g., the electronic device 701) may include a memory for storing data; a first coil and a second coil; at least one sensor, and a processor functionally connected to the sensor, wherein the processor is configured to acquire an orientation of the electronic device, using the at least one sensor, and transmit the data to the outside, using at least one coil selected based on the orientation among the first coil and the second coil.

According to an embodiment of the present disclosure, the first coil or the second coil may include an antenna for performing magnetic stripe transmission.

According to an embodiment of the present disclosure, the first coil or the second coil may be formed on a plurality of surfaces of a printed circuit board of the electronic device.

According to an embodiment of the present disclosure, the first coil may be formed in a first direction and the second coil may be formed in a second direction.

According to an embodiment of the present disclosure, the processor may be configured to: identify that processing based on the data has failed; and based on the identifying, when a movement of the electronic device is detected, transmit the payment information again to the outside, using at least one coil among the first coil and the second coil.

According to an embodiment of the present disclosure, an electronic device may include a communication module for connecting the electronic device to the outside; a memory functionally connected to the communication module; and a processor functionally connected to the memory and the communication module, wherein the processor is configured to receive an input to the electronic device, determine the state of a communication connection of an external electronic device to the electronic device, change at least a part of security information stored in the electronic device when the determined state corresponds to a first state, and refrain from changing the at least a part of the security information when the determined state corresponds to a second state.

According to an embodiment of the present disclosure, the input may include a request for resetting the electronic device.

According to an embodiment of the present disclosure, the processor may be configured to include an operation of determining whether at least one among a signal intensity, a congestion degree, quality of service (QoS), and bandwidth, which correspond to the communication connection, belongs to a predetermined range.

According to an embodiment of the present disclosure, the communication connection may be performed by a wireless network.

According to an embodiment of the present disclosure, the security information may include payment information.

According to an embodiment of the present disclosure, the processor may be configured to include an operation of deleting the at least a part of the security information.

According to an embodiment of the present disclosure, the processor may be configured to include an operation of transmitting the at least a part of the security information to the external electronic device or another external electronic device.

According to an embodiment of the present disclosure, the message may include information associated with a token to be used for payment.

According to an embodiment of the present disclosure, the processor may be configured to include an operation of displaying (marking) that the at least a part of the security information has not been changed.

According to an embodiment of the present disclosure, the processor may be configured to include an operation of changing the at least a part of the security information after a predetermined time or after the electronic device is reset.

According to an embodiment of the present disclosure, an electronic device may include a communication module for connecting the electronic device to the outside; a memory functionally connected to the communication module; and a processor functionally connected to the memory and the communication module, wherein the processor is configured to identify an execution environment of the electronic device, transmit at least one piece of security information corresponding to the electronic device to an external electronic device outside of the electronic device when the execution environment is a first execution environment, and refrain from transmitting the security information when the execution environment is a second execution environment.

According to an embodiment of the present disclosure, the security information may include first authentication information and second authentication information, the first authentication information may include public information, and the second authentication information may include private information.

According to an embodiment of the present disclosure, the processor may be configured to include an operation of encrypting or signing (e.g., verifying) the security information, based on at least one among the first authentication information and the second authentication information.

According to an embodiment of the present disclosure, the security information may include at least one among a LUK, card information, and a token.

According to an embodiment of the present disclosure, the processor may be configured to further include an operation of performing payment based on the security information.

According to an embodiment of the present disclosure, an electronic device may include a communication module for connecting the electronic device to the outside; a memory functionally connected to the communication module; and a processor functionally connected to the memory and the communication module, wherein the processor is configured to obtain attestation information corresponding to the electronic device from an external electronic device corresponding to the electronic device, perform attestation of the electronic device based on the attestation information, and transmit a result of the attestation to the external electronic device or another electronic device.

According to an embodiment of the present disclosure, the processor may be configured to include an operation of determining an integrity.

According to an embodiment of the present disclosure, the attestation information may include at least one among the security of the electronic device, a disposable random number (nonce), and a blob.

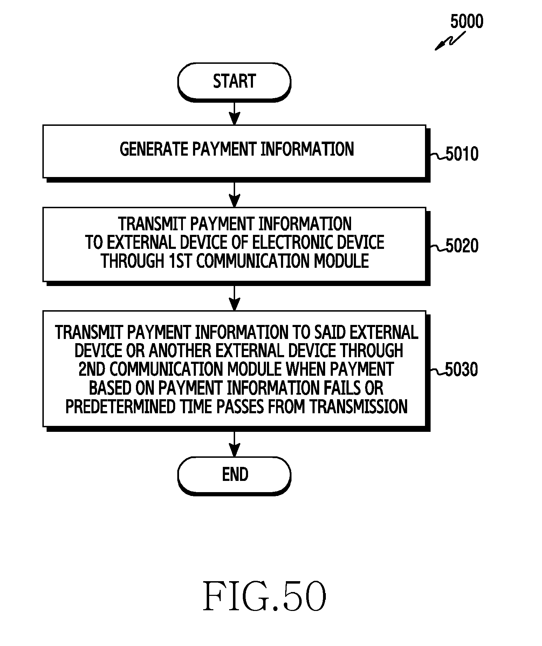

FIG. 50 is a flowchart 5000 of a payment method of an electronic device using a first communication module (e.g., the MST module 226) and a second communication module (e.g., the NFC module 225) according to an embodiment of the present disclosure.

Referring to FIG. 50, in step 5010, an electronic device (e.g., the electronic device 101 or 701) may generate payment information (e.g., token information or cryptogram) for performing payment.

In step 5020, the electronic device may transmit the payment information to a POS device, using at least one of the first communication module and the second communication module. The electronic device may simultaneously transmit the payment information to a POS device, using both the first communication module and the second communication module. The electronic device may sequentially try to make a payment, using the first communication module and the second communication module.

In step 5030, the electronic device may try to perform payment by transmitting the payment information to the POS device using the first communication module (e.g., MST module). Then, if the payment fails (e.g., if the POS device supports only the NFC method or fails to recognize information transmitted from the MST module although the POS device supports both the NFC and the MST methods) or in the case of time-out due to the passage of a predetermined time from the transmission time point, the electronic device may transmit the payment information to the POS device through the second communication module (e.g., the NFC module).

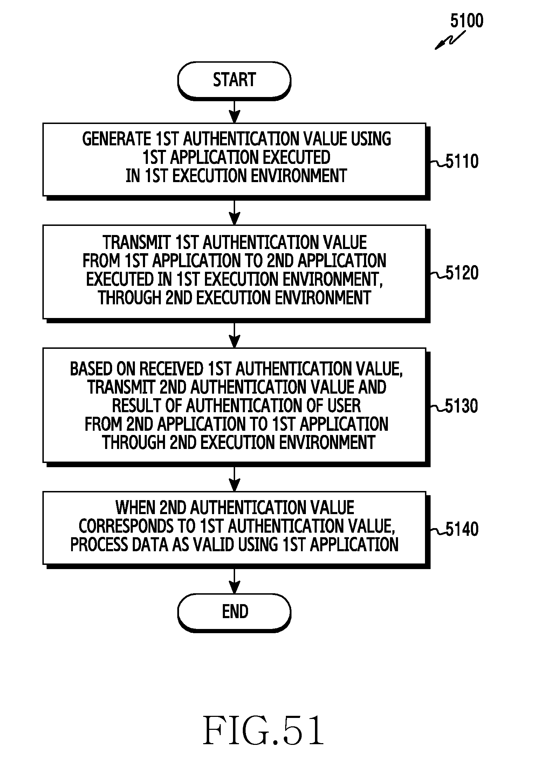

FIG. 51 is a flowchart 5100 of a data communication method between security applications according to an embodiment of the present disclosure.

Referring to FIG. 51, a user may request a first security application (e.g., the security payment module 821) being executed in the TEE 1820 for payment to perform a payment operation, using the payment application being executed in the REE 1810 of an electronic device. In step 5110, the first security application executed in the TEE may generate a disposable random number (e.g., a first authentication value).

According to an embodiment of the present disclosure, the first security application may request a second security application (e.g., the biometric information module 825) being executed in the TEE for user authentication for payment to perform user authentication. In step 5120, in response to the request, the first security application may transmit the disposable random number to the second security application. A request between security applications being executed in the TEE may be transmitted through the REE (e.g., the security environment relay module 846).

According to an an embodiment of the present disclosure, the second security application may acquire the user's biometric information (e.g. fingerprint), using the biometric sensor 240I. The second security application may compare the acquired biometric information with biometric information having been initially registered by the existing user. In step 5130, the second security application may transmit a result of the comparison together with the disposable random number having been received from the first security application, to the first security application. The result of the comparison and the disposable random number may be encrypted before being transmitted. A request between security applications being executed in the TEE may be transmitted through the REE.

In step 5140, based on the result of the comparison between the disposable random number received from the second security application and the random number generated by the first security application, the first security application may determine whether to treat the result of the comparison as valid data.

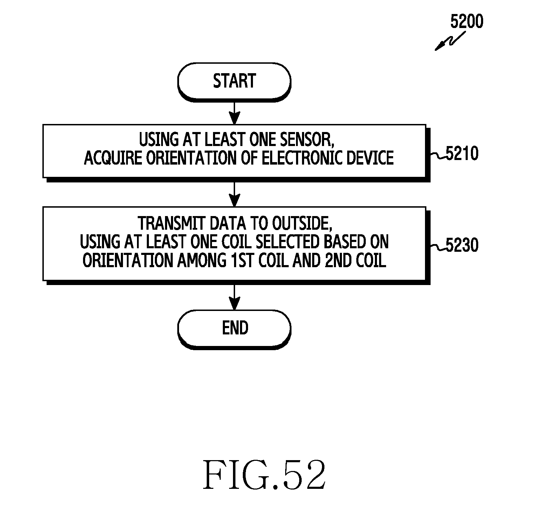

FIG. 52 is a flowchart 5200 of a method of transmitting data stored in an electronic device to an external device, using a plurality of coil antennas according to an embodiment of the present disclosure. The electronic device may include a first coil antenna (e.g., MST antenna) and a second coil antenna (e.g., MST antenna).

Referring to FIG. 52, in step 5210, the electronic device may acquire the orientation (e.g., inclination information) of the electronic device, using the sensor module 240. For example, the electronic device may determine, using the gyro sensor 240B or the acceleration sensor 240E, whether the electronic device is in the landscape direction or in the portrait direction. In step 5230, based on the orientation, the electronic device may select at least one of the first coil antenna and the second coil antenna. Using the selected coil antenna, the electronic device may transmit the payment information to the POS device.

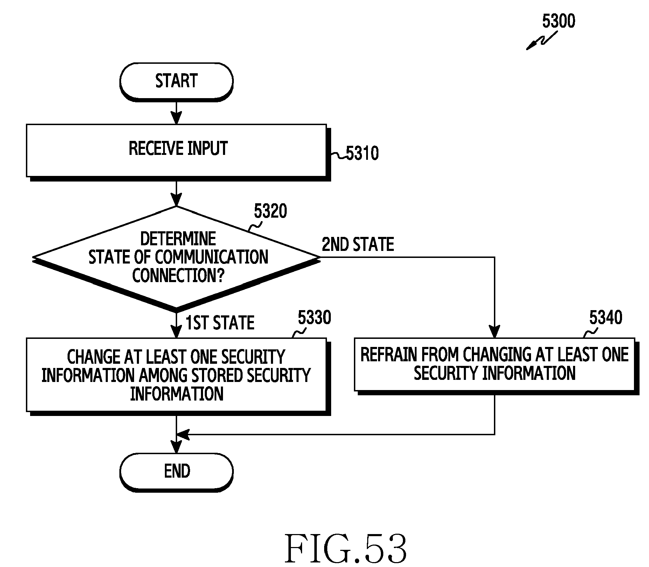

FIG. 53 is a flowchart 5300 of a method of managing security information by an electronic device according to an embodiment of the present disclosure.

Referring to FIG. 53, in step 5310, the electronic device (e.g., a terminal or a portable phone) may receive, for example, an input from the electronic device and/or external device. In step 5310, a user input or an input to the electronic device may be received. The automatic input may include, for example, may be performed based on the recognition of situation, and the situation may include, for example, a position, time, or schedule stored in the electronic device. The input may be performed, for example, automatically.

According to an embodiment of the present disclosure, the input may include a request for resetting the electronic device. For example, the reset may include factory reset, re-operation (power reset), reconfiguration, retry, or memory format.

In step 5320, the electronic device may determine, for example, the state of communication connection between the electronic device and an external electronic device of the electronic device. In step 5320, the electronic device may determine, through comparison, whether the state of the communication connection belongs to the first state or the second state.

According to an embodiment of the present disclosure, the state of the communication connection may include at least one among a signal intensity, a congestion degree, QoS, and bandwidth. The signal intensity may include, for example, a received signal strength indicator (RSSI), and the congestion degree may include a network congestion degree.

In step 5320, as a result of the comparison or determination, if the state corresponds to the first state, the electronic device may perform, for example, step 5330. In step 5330, the electronic device may change at least a part of the security information stored in the electronic device.

According to an embodiment of the present disclosure, if the state of the communication connection is included in a predetermined range, the state may be determined as the first state. For example, if the signal intensity is included in a predetermined range (e.g., signal intensity of -80 dBm to -100 dBm), the state may be determined as the first state.

According to an embodiment of the present disclosure, the security information may include at least one of a token, encryption information, and payment information. Further, the security information may include, for example, a security module (e.g., eSE) functionally connected to the electronic device.

In step 5320, as a result of the comparison or determination, if the state corresponds to the second state, the electronic device may perform, for example, step 5340. In step 5340, the electronic device may refrain from the operation of changing the at least a part of the security information.

According to an embodiment of the present disclosure, if the state of the communication connection is included in a predetermined range, the state may be determined as the first state. For example, if the signal intensity is not included in the predetermined range (e.g., signal intensity of -80 dBm to -100 dBm), the state may be determined as the second state. For example, the state may be determined as the second state if the signal intensity is larger than or equal to a predetermined value (e.g., -100 dBm).

According to an embodiment of the present disclosure, the operation of changing the security information may include operations of deleting, revising, or generating the security information.

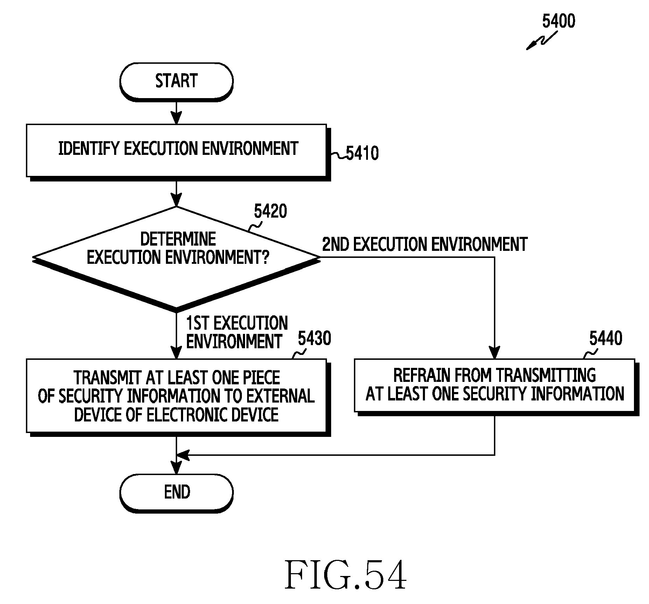

FIG. 54 is a flowchart 5400 of a method of managing security information by an electronic device according to an embodiment of the present disclosure.

Referring to FIG. 54, in step 5410, the electronic device (e.g., terminal or portable phone) may identify, for example, an execution environment of the electronic device. In step 5410, an environment where a command (e.g., control signal) of the electronic device is performed may be identified. For example, the execution environment may include at least one of a TEE and an REE.

In step 5420, the electronic device may determine, for example, an execution environment of the electronic device. In step 5420, the electronic device may determine, through comparison, whether the execution environment is included in the first execution environment or the second execution environment.

In step 5420, as a result of the comparison or determination, if the execution environment corresponds to the first execution environment, the electronic device may perform, for example, step 5430. In step 5430, the electronic device may transmit at least one piece of security information corresponding to the electronic device to an external electronic device of the electronic device. The first execution environment may include, for example, a TEE.

In step 5420, as a result of the comparison or determination, if the execution environment corresponds to the first execution environment, the electronic device may perform, for example, step 5430. In step 5430, the electronic device may refrain from transmitting the at least one piece of the security information. The second execution environment may include, for example, an REE.

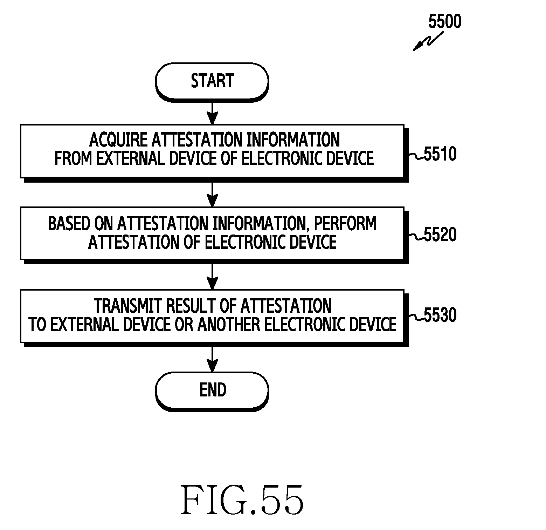

FIG. 55 is a flowchart 5500 of a method of attestation by an electronic device according to an embodiment of the present disclosure.

Referring to FIG. 55, in step 5510, the electronic device (e.g., terminal or portable phone) may acquire, for example, attestation information corresponding to the electronic device from an external electronic device of the electronic device. In step 5510, the electronic device may acquire the attestation information as a request for a determination of the integrity of the electronic device. The attestation information may include, for example, a disposable random number (e.g., a nonce).

In step 5520, the electronic device may perform, for example, attestation of the electronic device, based on the attestation information. The attestation may include a function of identifying the security of the electronic device. The attestation may include a function of identifying the integrity of the electronic device.

In step 5530, the electronic device may transmit, for example, a result of the attestation to the external electronic device or another electronic device. For example, the result (e.g., blob or security) of the attestation may be determined or generated based on the disposable random number (nonce) and/or the security information included in the electronic device. The other electronic device may include, for example, a token server, a 3rd party server, a wearable device, or a cloud server. The cloud server may include, for example, a personal cloud or a public cloud.

According to an embodiment of the present disclosure, an electronic device including a first communication module and a second communication module may perform steps of generating payment information; transmitting the payment information to the outside of the electronic device through the first communication module; and transmitting the payment information to the external device or another external device through the second communication module when payment based on the payment information fails or if a predetermined time has passed from the transmission.

According to an embodiment of the present disclosure, the electronic device may operate a plurality of execution environments including a first execution environment and a second execution environment.

According to an embodiment of the present disclosure, the first execution environment may include an execution environment having a first security level and the second execution environment may include an execution environment having a second security level.

According to an embodiment of the present disclosure, the operation of transmitting the payment information through the first communication module may be performed in the first execution environment, and the step of transmitting the payment information through the second communication module may be performed in the second execution environment.

According to an embodiment of the present disclosure, the electronic device may further perform a step of authenticating a user corresponding to the electronic device through a first application executed in the first execution environment, and the step of generating the payment information can be performed through a second application executed in the first execution environment.

According to an embodiment of the present disclosure, the operation of authenticating may include a step of transmitting the result of the authentication from the first application to the second application through the second execution environment.

According to an embodiment of the present disclosure, the operation of transmitting the result may include a step of transmitting a first authentication value from the first application to the second application, and the first authentication value may be generated on the basis of a second authentication value corresponding to the second application.

According to an embodiment of the present disclosure, the operation of transmitting the result may include a step of encrypting the result or the first authentication value.

According to an embodiment of the present disclosure, the step of transmitting the payment information to the external device or another external device may include a step of determining, using the second application, if the first authentication value matches the second authentication value.

According to an embodiment of the present disclosure, before the step of authenticating, the second authentication value may be transmitted from the second application to the first application through the second execution environment.

According to an embodiment of the present disclosure, an electronic device capable of operating a plurality of execution environments including a first execution environment and a second execution environment may perform a step of generating a first authentication value, using a first application executed in the first execution environment; a step of transmitting the first authentication value from the first application through the second execution environment to a second application executed in the first execution environment; an operation of, based on reception of the first authentication value, transmitting a second authentication value and a result of authentication of the user from the second application to the first application through the second execution environment; and a step of, if the second authentication value corresponds to the first authentication value, processing the data as valid data, using the first application.

According to an embodiment of the present disclosure, the first execution environment is a trusted execution environment and the second execution environment may include a rich execution environment.

According to an embodiment of the present disclosure, an electronic device may perform a step of receiving an input to the electronic device; a step of determining the state of the electronic device and communication connection between the electronic device and an external electronic device; a step of, if the state corresponds to a first state, changing at least a part of the security information stored in the electronic device; and a step of, when the state corresponds to the second state, refraining from changing the at least a part of the security information.

According to an embodiment of the present disclosure, the input may include a request for resetting the electronic device.

According to an embodiment of the present disclosure, the determining operation may include an operation of determining whether at least one among a signal intensity, a congestion degree, QoS, and bandwidth belongs to a predetermined range.

According to an embodiment of the present disclosure, the communication connection may be performed by a wireless network.

According to an embodiment of the present disclosure, the security information may include payment information.

According to an embodiment of the present disclosure, the step of changing may include a step of deleting the at least a part of the security the information.

According to an embodiment of the present disclosure, the step of changing may include a step of transmitting a message associated with the at least a part of the security information to the external electronic device or another external electronic device.

According to an embodiment of the present disclosure, the message may include information associated with a token to be used for payment.

According to an embodiment of the present disclosure, the message may include representational state transfer (REST) API or token requester API.

According to an embodiment of the present disclosure, the step of refraining may include a step of displaying (marking) that the at least a part of the security information has not been changed.

According to an embodiment of the present disclosure, the electronic device may be configured to further perform a step of changing the displayed at least a part of the security information after a predetermined time or after the electronic device is reset.

According to an embodiment of the present disclosure, an electronic device may perform a step of identifying an execution environment of the electronic device; a step of, when the execution environment is a first execution environment, transmitting at least one piece of security information corresponding to the electronic device to an external electronic device of the electronic device; and a step of, when the execution environment is a second execution environment, refraining from transmitting the at least one piece of security information.

According to an embodiment of the present disclosure, the security information may include first authentication information and second authentication information, the first authentication information may include public information, and the second authentication information may include private information.

According to an embodiment of the present disclosure, the step of transmitting may include a step of encrypting or signing (e.g., verifying) the security information, based on at least one among the first authentication information and the second authentication information.

According to an embodiment of the present disclosure, the security information may include at least one among LUK, card information, and a token.

According to an embodiment of the present disclosure, the step of transmitting may further include a step of performing payment based on the security information.

According to an embodiment of the present disclosure, an electronic device may perform a step of acquiring attestation information corresponding to the electronic device from an external electronic device of the electronic device; an operation of, based on the attestation information, performing attestation of the electronic device; and a step of transmitting a result of the attestation to the external electronic device or another electronic device.

According to an embodiment of the present disclosure, the step of performing the attestation may include a step of determining an integrity.

According to an embodiment of the present disclosure, the attestation information may include at least one among the security of the electronic device, a disposable random number (e.g., a nonce), and a blob.

According to an embodiment of the present disclosure, an electronic device including a first communication module and a second communication module may include a non-transitory computer-readable recording medium in which a program for executing a method is stored, the method includes generating payment information; transmitting the payment information to the outside of the electronic device through the first communication module; and transmitting the payment information to the outside through the second communication module if payment based on the payment information fails or if a predetermined time has passed from the transmission.

According to an embodiment of the present disclosure, an electronic device may include a non-transitory computer-readable recording medium in which a program for executing a method is stored, the method includes a step of receiving an input to the electronic device; a step of determining the state of the electronic device and communication connection between the electronic device and an external electronic device; a step of, if the state corresponds to a first state, changing at least a part of the security information stored in the electronic device; and a step of, if the state corresponds to the second state, refraining from changing the at least a part of the security information.

According to an embodiment of the present disclosure, an electronic device may include a non-transitory computer-readable recording medium in which a program for executing a method is stored, the method includes a step of identifying an execution environment of the electronic device; a step of, if the execution environment is a first execution environment, transmitting at least one piece of security information corresponding to the electronic device to an external electronic device of the electronic device; and a step of, if the execution environment is a second execution environment, refraining from transmitting the at least one piece of security information.

According to an embodiment of the present disclosure, an electronic device may include a non-transitory computer-readable recording medium in which a method of executing steps is stored, the method includes a step of acquiring attestation information corresponding to the electronic device from an external electronic device of the electronic device; a step of, based on the attestation information, performing attestation of the electronic device; and a step of transmitting a result of the attestation to the external electronic device or another electronic device.

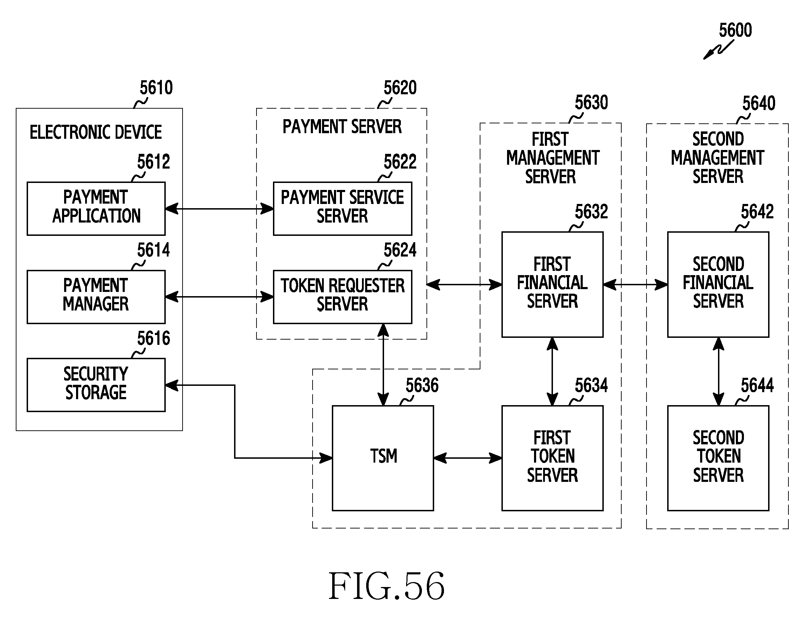

Referring to FIG. 56, is a block diagram of a payment system 5600 according to an embodiment of the present disclosure.

According to an embodiment of the present disclosure, the payment system 5600 may include an electronic device 5610 and/or a plurality of servers. For example, the plurality of servers may include a payment server 5620, a first token server (a token server or a token service provider) 5634, a second token server (a token server or a token service provider) 5644, a first financial server (an issuer or a card network) 5632, a second financial server (an issuer or a card network) 5642, or a trusted service manager (TSM) 5636. The electronic device 5610 may include, for example, a payment application (e.g., a wallet application) 5612, a payment manager 5614, and/or a security storage unit 5616. The payment server 5620 may include, for example, a payment service server 5622 and/or a token requester server (a token requester) 5624. A combination of the first financial server 5632, the first token server 5634, and the TSM 5636 may be embodied as a single server (e.g., a first management server). For example, the first management server 5630 may be formed of a combination of the first financial server 5232 and the first token server 5634, a combination of the first financial server 5632 and the TSM 5636, a combination of the first token server 5634 and the TSM 5636, a combination of the first financial server 5632 and the TSM 5636, or a combination of the first financial server 5632, the first token server 5634, and the TSM 5636. The second financial server 5642 and the second token server 5644 may be embodied as a single server (e.g., a second management server 5640).

According to an embodiment of the present disclosure, the payment application 5612 may include the Samsung PayTM application. The payment application 5612 may provide, for example, a UI or a UX associated with payment. The UI associated with the payment may include a wallet UI (UI/UX). For example, the payment application 5612 may provide a UI that is associated with card registration, payment, or transaction. The payment application 5612 may provide, for example, an interface associated with card registration through a character reader (e.g., OCR) or an external input (e.g., a user input). Also, the payment application 5612 may provide, for example, an interface associated with user authentication through ID&V.

According to an embodiment of the present disclosure, the payment application 5612 may execute a payment transaction. For example, the payment application 5612 may provide a user with a payment function that includes Simple Pay, Quick Pay, or a designated application. The user may execute the payment function using the payment application 5612, and may be provided with information associated with the payment function.

According to an embodiment of the present disclosure, the payment manager 5614 may include information associated with a card company. For example, the payment manager 5614 may include an SDK of a card company.

According to an embodiment of the present disclosure, the secure storage unit 5616 may include a security module 236 and a secure area (e.g., TEE). A payment related program (e.g., applet or a trusted application) that is issued by the first finance server or the second finance server may be installed. The payment related program may generate payment information (e.g., a token, a cryptogram, a time-stamping code, or a repeat count of executing payment) that is to be transmitted to an MST to be appropriate for a track data format of a magnetic card. For example, the time-stamping code is a value to check the validity associated with payment information, and a predetermined time value may be used for generating the time-stamping code. Coordinated universal time (UTC) information may be used as the predetermined time value. For example, an electronic device may obtain UTC information through a network identity and time zone (NITZ) or a network time protocol (NTP), and when an external server (e.g., the first management server) also obtains UTC information, the electronic device and the external server are synchronized from the perspective of time and the time-stamping code may be authenticated. The external server may also obtain a predetermined time value in the same manner as the electronic device (e.g., NITZ or NTP).

In addition, the security storage unit 5616 may store payment information (e.g., a key for generating a token or a cryptogram).

The TSM 5636 may be capable of storing and managing (e.g., deleting or updating information) payment information by communicating with the payment-related program installed in the secure storage unit 5616.

According to an embodiment of the present disclosure, the payment server 5620 may include a management server for electronic payment or mobile payment. The payment server 5620, for example, may receive information associated with payment from the electronic device 5610, and may transmit the same to the outside or process the same in the payment server 5620.

According to an embodiment of the present disclosure, the payment server 5620 may execute the transmission and reception of information (e.g., a request for issuing a token) between the electronic device 5610 and the first financial server 5632 using the payment service server 5622 and/or the token requester server 5624. The payment service server 5622 may include, for example, a payment server (e.g., a Samsung payment server) 5620. The payment service server 5622 may manage, for example, card information associated with a service account (e.g., Samsung account) or a user account. Also, the payment service server 5622 may include an API server related to the payment application 5612. Also, the payment service server 5622 may provide, for example, an account managing module (e.g., account integration or Samsung account integration).

According to an embodiment of the present disclosure, the token requester server 5624 may provide an interface for processing information associated with payment. For example, the token requester server 5624 may issue, delete, or activate information (e.g., token) associated with payment. Alternatively, the token requester server 5624 may be functionally connected with the payment manager 5614, so as to control the information required to execute payment.

According to an embodiment of the present disclosure, the payment application 5612 included in the electronic device 5610 and the payment service server 5622 included in the payment server 5620 may be functionally connected. For example, the payment application 5612 may transmit or receive information associated with payment to/from the payment server 5620. The payment manager 5614 included in the electronic device 5610 and the token requester server 5624 included in the payment server 5620 may be functionally connected. For example, the payment manager 5614 may transmit or receive information associated with payment to/from the token requester server 5624.

According to an embodiment of the present disclosure, the first financial server 5632 and the second financial server 5642 may manage data used for issuing payment related information (e.g., a token). For example, the first financial server 5632 may request the first token server to issue second payment information that is associated with first payment information that is issued from the second token server. Also, the first financial server 5632 may store and manage information (e.g., a token ID) from which information indicating that the first token and the second token are related may be determined when requesting the first token server 5634 to issue a token.

According to an embodiment of the present disclosure, the first payment information (e.g., a digital card number, a token, and/or a key for generating a cryptogram) and the second payment information (e.g., a digital card number, a token, and/or a key for generating a cryptogram) may be tokens that are respectively issued based on a transmission scheme (e.g., MST or NFC) that the electronic device 5610 uses for payment. For example, the first payment information may be used when payment is executed using MST, and the second payment information may be used when payment is executed using NFC. In addition, the opposite is possible, and the first payment information and the second payment information may be identical. The token indicates a digital card number, which may replace a PAN. At least some of the first payment information or at least some of the second payment information may be transmitted from the electronic device 5610 to the outside via a POS device in a store or via a network, and a finance server may identify the token and determine whether to approve the payment.

According to an embodiment of the present disclosure, the first token server 5634 and the second token server 5644 may issue information (e.g., token) associated with payment, or manage information associated with payment. For example, the first token server 5634 may control a life cycle of a token, and the life cycle may include a generation, correction, or deletion function. Also, the first token server 5634 may include, for example, a token managing server, and may execute token provisioning, ID&V, replenishment, or life cycle management. Also, it may execute the integration of information associated with a finance server.

According to an embodiment of the present disclosure, the TSM 5636 may install, in the secure storage unit 5616, a first token and/or a second token issued from the first token server 5634 and the second token server 5644. In addition, a payment-related program used for generating and managing payment information including a corresponding token may be installed.

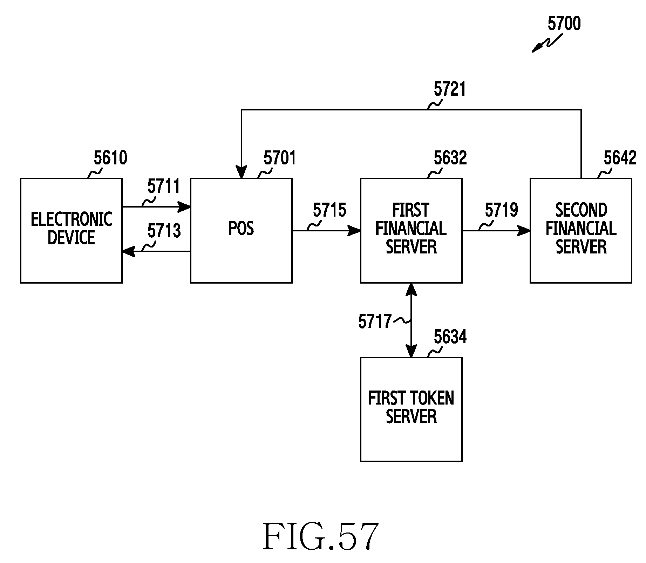

FIG. 57 is a block diagram of a method of executing a payment transaction using a token according to an embodiment of the present disclosure. The components described below with reference to FIG. 57 may be identical to the components of the payment system described above. The electronic device 5610 may be capable of executing payment transaction using NFC and/or MST. Hereinafter, although descriptions are provided from the perspective of a payment transaction that uses NFC and/or MST, the present disclosure is not be limited thereto.

Referring to FIG. 57, in step 5711, the electronic device 5610 transmits payment information (e.g., a token or a cryptogram) to a POS device 5701, using NFC. For example, when a payment transaction begins, the electronic device 5610 may wait to detect an external NFC signal. In this case, if an active signal is received from the POS device 5701, the electronic device 5610 may generate an NFC signal and transmit first payment information.

In step 5713, the electronic device 5610 transmits payment information (e.g., a token or a cryptogram) to the POS device 5701 by using MST. For example, when a payment transaction begins, the electronic device 5610 includes second payment information in a track data format, and transmits an MST signal to a magnetic signal reader of the POS device 5701. The track data format may include an authentication code generated using a predetermined time value. For example, the electronic device 5610 may generate an authentication code using UTC information obtained from NITX or NTP; include the second payment information and the authentication code in the track data format; and transmit an MST signal to the magnetic signal reader of the POS device 5701.

In step 5715, the POS 5701 transfers, to the first financial server 5632, the first payment information or the second payment information that is transferred from the electronic device 5610. The first financial server 5632 may execute authentication with respect to the first payment information or the second payment information that is received in step 5715. For example, the first financial server 5632 determines the time information included in or transmitted together with the second payment information or the authentication code that is generated based on the time information, and transfers, to an external device (e.g., the POS device or the second financial server 5642), failure of payment authentication in association with the second payment information that is received after the determined set time, as a payment authentication result value. The above described authentication method may be executed similarly in the second financial server 5642.

In step 5717, the first token server 5634 changes the second payment information with the first payment information when the information that the first financial server 5632 receives is the second payment information. For example, when the information that the first financial server 5632 receives is the second payment information, the first financial server 5632 may transfer the second payment information to the first token server 5634. The first financial server 5632 may match the first payment information and the second payment information when issuing the second payment information. In the payment transaction, the first payment information that is matched to the second payment information may be determined based on matching information, and thus, related first payment information may be determined.

In step 5719, the first financial server 5632 requests the second financial server 5642 to execute authentication with respect to the first payment information.

In step 5721, the second financial server 5642 transfers an authentication result with respect to the received first payment information to the POS device 5701. The POS device 5701 may output a receipt for the completion of transaction or display a message of failure of transaction, based on the authentication result.

Figures illustrate payment user interfaces of an electronic device according to various embodiments.According to an embodiment of the present disclosure, the electronic device may receive a user input and execute a payment application. For example, the electronic device may execute a payment application (e.g., Samsung Pay™) through a user input of swiping in a display direction from a lower end bezel area of the electronic device. In response to the user input, the electronic device may display at least one card among the cards pre-registered in the electronic device, through the display module.

According to an embodiment of the present disclosure, the electronic device may receive a user input and select a card to be used for payment among the pre-registered cards. For example, the electronic device may select a card to be used for payment among a plurality of cards, through a user input of leftward/rightward scrolling. The electronic device may request authentication from the user for payment of the selected card. The authentication method may use, for example, biological information of a user. For example, the electronic device may scan a fingerprint of the user through the fingerprint detection module to perform a payment operation.

In order to actually use mobile payment, an electronic device may register and store financial information regarding a card, for example, in advance in the electronic device. The financial information may be identified or verified through a financial institution, such as a card issuing company or a bank.

The user may register a card, which is owned by himself/herself, in the electronic device prior to actually using it on-line/off-line.

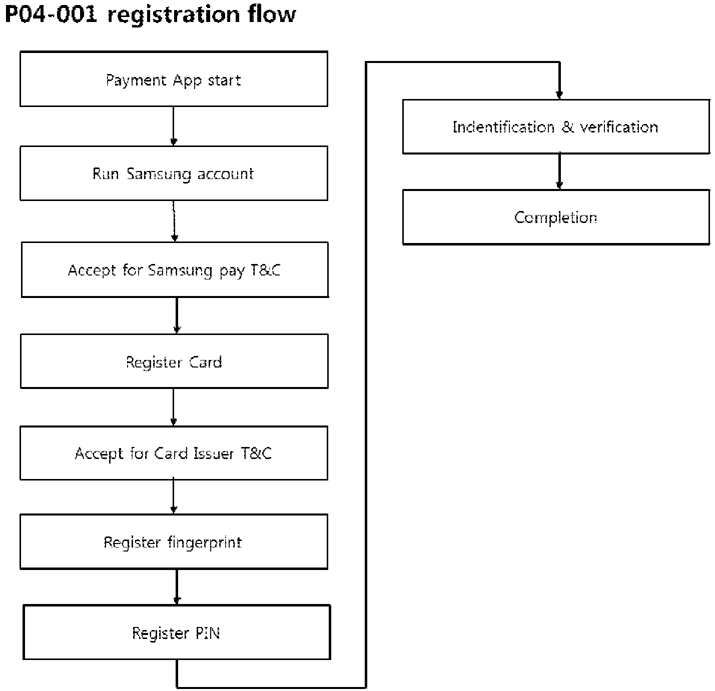

The registration process may vary depending on the region, the nation, or the financial (card) institution, and some processes may be omitted from and added to the above process. In addition, when card information or fingerprint information, for example, has already been stored, the corresponding process may be omitted without repeating the same.

In FIG. P04-001, a payment application is executed first so as to register a Samsung account and to log in; an agreement regarding the terms and conditions (T&C) of the payment application is made; card information is input and modified manually or in an OCR method through a camera, for example, or manually; the T&C of the financial (card) institution is checked; a fingerprint is registered; a PIN is registered; and ID & V is completed, thereby finishing the registration.

In this case, the PAN, for example, may be stored in the electronic device, but, instead of the PAN, a token, which has been issued by a token server, may be transferred through the payment server, stored, and used for payment.

FIG. P04-003 illustrates an additional embodiment, which is another example that illustrates registration process 2, wherein particulars regarding a verification process using a fingerprint, signature, and the like are added. When the payment application is executed, the battery and the network are checked; when a predetermined condition is satisfied, the same is executed so as to register a Samsung account and log in; an agreement regarding the T&C of the payment application is made; card information is input and modified in an OCR type using a camera, for example, or manually; and a card password can be input. In the next step, the T&C of the financial (card) institution is checked; identification & verification processes are performed by the financial (card) institution; the user's fingerprint is registered; and the fingerprint can be verified through an external server (for example, FIDO). Thereafter, a PIN is registered, a signature is registered, and the preparation to transact with the payment application can be finished.

In this case, raw data itself, such as the explicit card number, is not directly stored in the electronic device, which will be described in more detail in the detailed description.

According to an embodiment of the present disclosure, instead of the method of registering a fingerprint, the iris, the voice, or the face may be registered to recognize the iris or to identify the voice or the face, and used in place of the fingerprint.

In the present disclosure, Quick Pay may be used interchangeably with Simple Pay, and may be interpreted as having the same meaning. 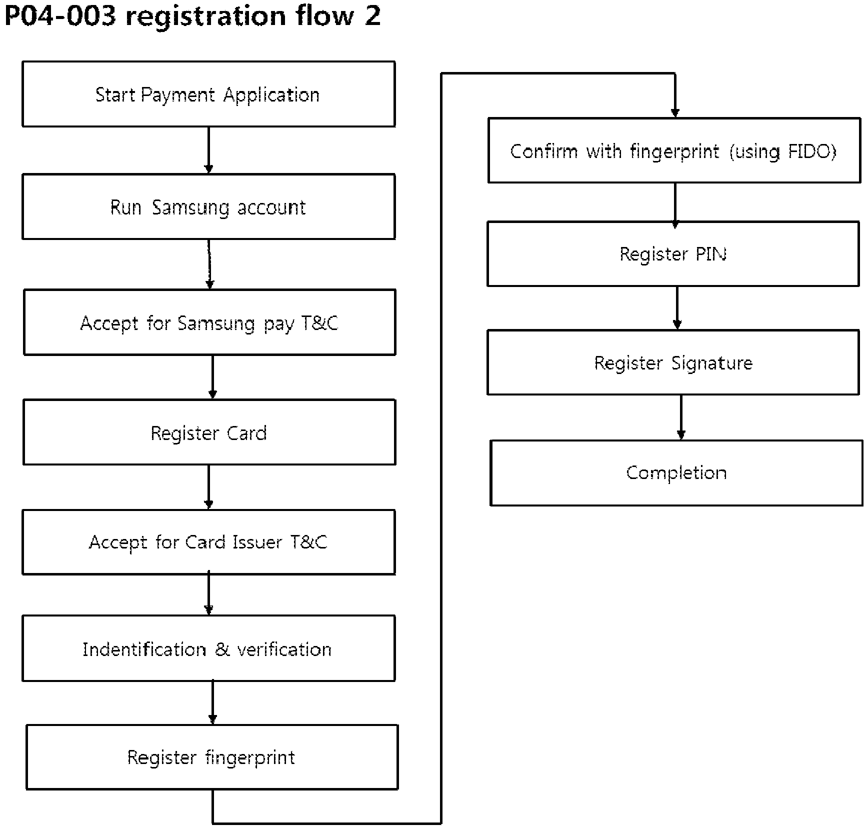 FIG. P04-005 illustrates a GUI of an electronic device when actual payment information is registered by the electronic device according to various embodiments.

The drawing, from (A) to (I), illustrates an embodiment regarding a process occurring when card information is added by the electronic device.

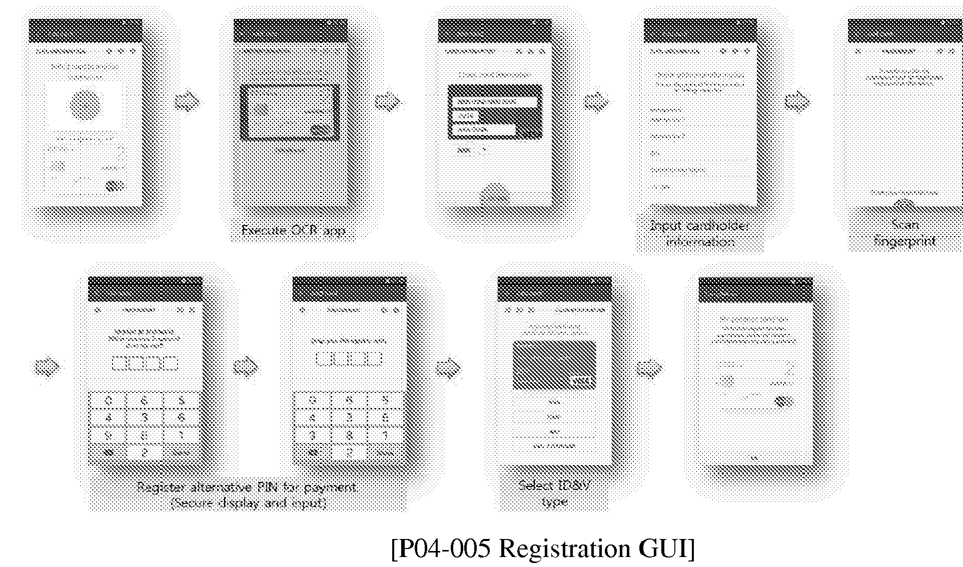

### 2.2.2 Account

When a payment application is executed, the battery state is checked and, when a predetermined level is not satisfied, the user is informed through a popup notification, for example, that the same is unavailable, and the process may end. According to an embodiment of the present disclosure, it may be confirmed whether a network connection has been made and whether a predetermined rate is available, and the SIM enabled state and the like may be checked; the payment application may then proceed or not. For example, when the battery level is 15% or less, the user may be notified of the amount of power through a popup notification and sound or through vibration, and the application may be used; when the battery level is 10% or less, or when the current level is less than a predetermined value, execution of the payment application itself may be disabled, and the user may be provided with a warning message. According to an embodiment of the present disclosure, when the payment application is executed, or when the electronic device, on which the payment application is installed, is booted, attempts payment, or accesses a token, the payment application may be executed after confirming the stability of the device by confirming the stability of the TEE, in which the token is stored, the REE, which is encrypted by the TEE, or the secure element, by confirming whether the application is infected with a virus or not, and by checking malware, malicious codes, and the like. In addition, it is also possible to determine whether or not to execute the payment application and whether or not to stop it during execution by considering whether a network connection has been made or not, whether a predetermined rate is available or not, the SIM enabled state, and the battery state as a whole. When the payment application cannot be executed, the user may be informed through a message on the screen, such as a popup notification, through sound or vibration, or through LED blinking.

The mobile electronic device may be used after registering and setting an account, such as Samsung account. If
the same user uses multiple devices, transaction management, financial management, card management, and the like may be conducted through a single account. The payment function of electronic device A, device B, such as Galaxy Gear, and device C, such as a wearable fitness device, may be activated, and all transaction records may be inspected in each of the three devices; if device 2 goes missing, for example, the payment function of devices A and C may be deactivated, thereby improving security. In addition, if another device is lost, the corresponding device card may be deactivated. In addition, according to an additional embodiment, when a card is registered in device A, the same card may be registered in devices B and C and used. If a separate token needs to be issued for each device card, in some cases, device A may have information of devices B and C and, when the user issues a card, the payment application itself may request simultaneous issuance of three cards, which are to be used by respective devices, and may issue or register cards for respective devices. This may remove the inconvenience of having to apply for the issuance of the same card redundantly for each device by each device.

In an embodiment of the present disclosure, a card registered in device C may be registered together in devices A and B, in which the same account is registered, and become available. In an embodiment of the present disclosure, use of only specific kinds of cards may be allowed in each device; use of both credit and debit cards may be allowed in electronic device A, while use of only debit cards may be allowed in device B.

A payment application screen may correspond to a state after logging in using "abcde" account of Samsung account. Selection of a "set my card" portion on the bottom right side using a method such as touch, hovering, or the like through a finger or a pen will lead to a screen display for card registration and setting. The selecting method includes all of the following methods: selection by a tap, a double tap, a touch & hold, a flick, hovering, and eye tracking, a voice recognition-based method, etc.; the expression "selecting of touching a part of a token server or a display device" used in the above document may replace all the expressions given above.

This process related to an account may be omitted when only one electronic device is used, for example.

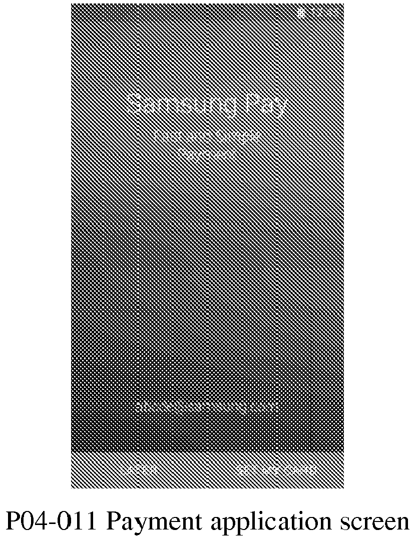

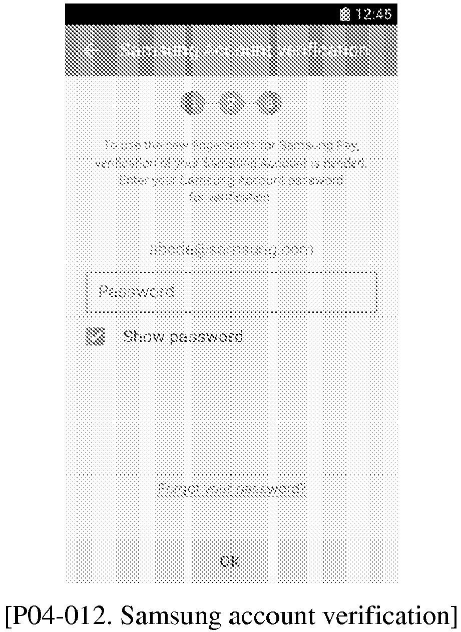

### 2.2.3 Terms & Conditions

When an account is registered as a Samsung account and when logged in using the corresponding account, the payment application can be used only after agreeing with terms and conditions related to payment. The terms and conditions may vary depending on the country and region.

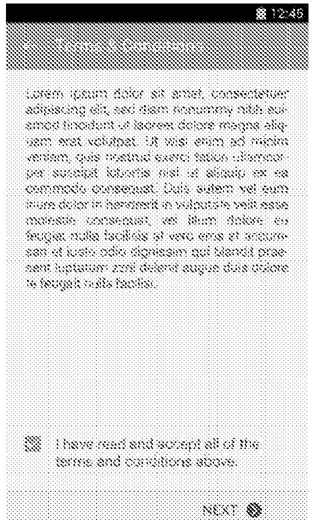

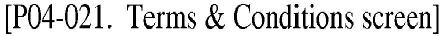

### 2.2.4 Register Card

FIG. P04-031 illustrates a screen for adding a card to a payment application. FIG. P04-031 (a) may show both an actual UI, which enables addition, and a list of already added cards. When (+) portion of the empty card is selected from screen (a), the screen switches to screen (b), and an OCR module can be executed through a camera. When an actual card is positioned at the center portion of the screen of the electronic device, the camera can automatically capture the actual card and automatically acquire card information through the image. If there is no camera, or if the camera cannot be executed, an image file of the actual card may be loaded to automatically recognize card data. The camera may be a camera included inside the electronic device, or may be a camera of an accessory type, which communicates with the electronic device, or a camera included in an external device.

The card type, the card number [PAN], the valid date, the name, and the like, which appear on an actual card, can be recognized automatically; this data may be modified manually by the user, and it is also possible to input new data.

The screen (C) of FIG. P04-031 overlaps the card number, the valid date, the name, and the like, which have been recognized actually when a card has been recognized through an OCR module, so that the user can instantly check the same and thereby confirm whether the card data, which has been automatically recognized through the OCR, is accurate data or not.

In an embodiment of the present disclosure, the card image, which is displayed as above, may be displayed after changing the transparency or color and mapping or overlapping the text right above numbers and characters of the card image; the color, size, and font type of the text is changed according to the card image and thus can be easily recognized.

The screen (d) of FIG. P04-031 appears when manual input is selected or after a predetermined time passes from the screen (c), and shows card data finally so that the user can confirm the same. In various embodiments, the PAN, the user name, the valid data, and the like may be input, from the beginning, through the user's input as in FIG. P04-033. The security code may be input through the user's manual input or through the OCR routine that has proceeded as above.

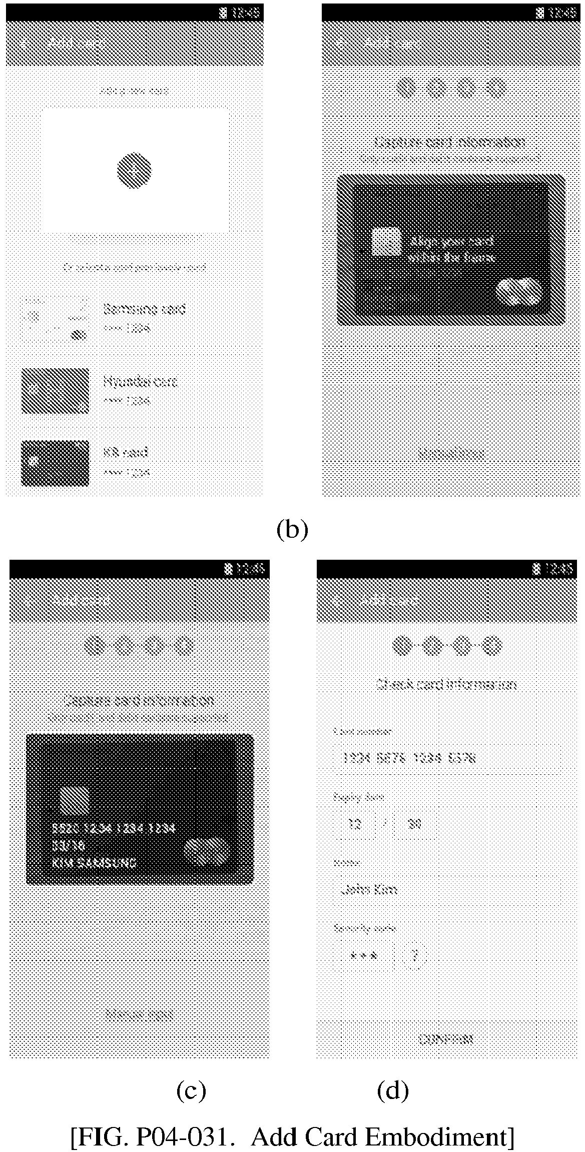

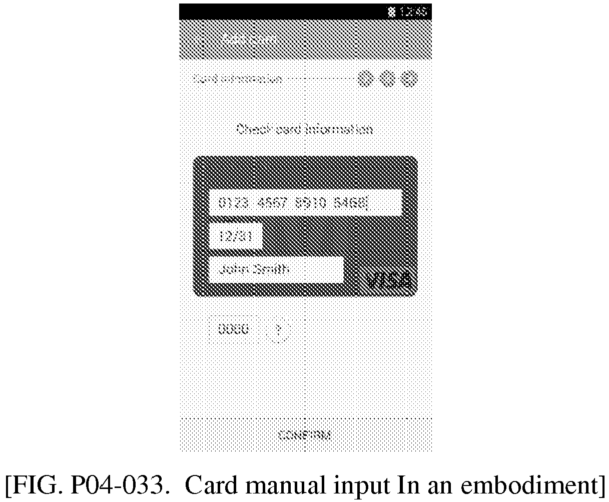

In various embodiments of the present disclosure, when the payment application receives a PAN and enrolls it, and when the PAN is transmitted to a token server via a payment server, an encrypted PAN may be transmitted. In addition, a device profile may be transmitted to a server, such as a token server, the device profile including information regarding whether an MST or NFC, which is a card payment scheme supported by the device, is supported or not.

In an additional embodiment, a card may be newly added from billing information related to a card, which has already been used, instead of registering a new card. Even when a card, which has been used, is completely deleted from the payment application, the billing information may be stored in the payment application. The electronic device may newly add a card on the basis of the above information. When a part that requires security, such as a card number, is not accurately described in the billing information, the user may modify/complement such a part only and register the same. FIG. P04-032 illustrates such an embodiment wherein, when "Card Add" is selected from the receipt or billing information, addition can be made.

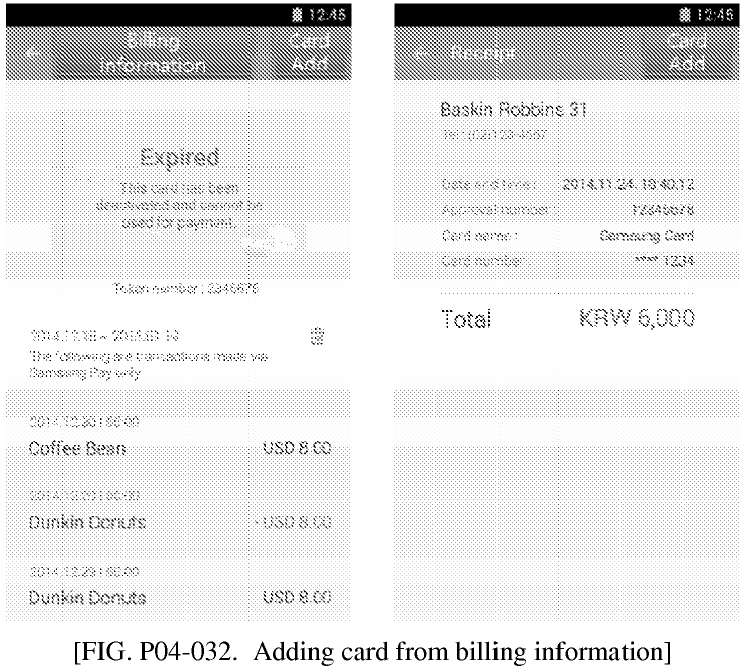

### 2.2.5 Accept for Card Issuer T&C

After inputting the above-described card data, the user may agree with or reject the terms and conditions of the card issuer. After agreement, the user can proceed to the next step.

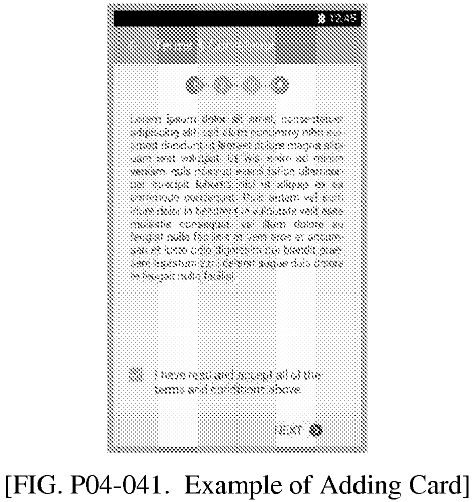

### 2.2.6 Register Fingerprint

In order to use a service of a payment application, which is referred to as Simple Pay or Quick Pay, the fingerprint may be used to undergo a security checkup. The electronic device may already have set the fingerprint as the basic operation for security release by the electronic device, or may not have any setting; this process can be omitted, if the fingerprint has been registered for security of the electronic device, and the registered fingerprint may be used for payment. In an additional embodiment, the fingerprint registration process may be omitted regardless of whether a fingerprint has been registered in the electronic device or not.

Fingerprint recognition may support both an area type and a swipe type, and it is also possible to mix and use the two types. That is, even if the area type has been registered, it is possible to use both the area type and the swipe type during actual payment. Of course, the sensor and the fingerprint recognition module need to support both types. FIG. P04-051 illustrates an embodiment in which the user's fingerprint has been successfully registered; (A) corresponds to an example of the area type, and (B) corresponds to an example of the swipe type.

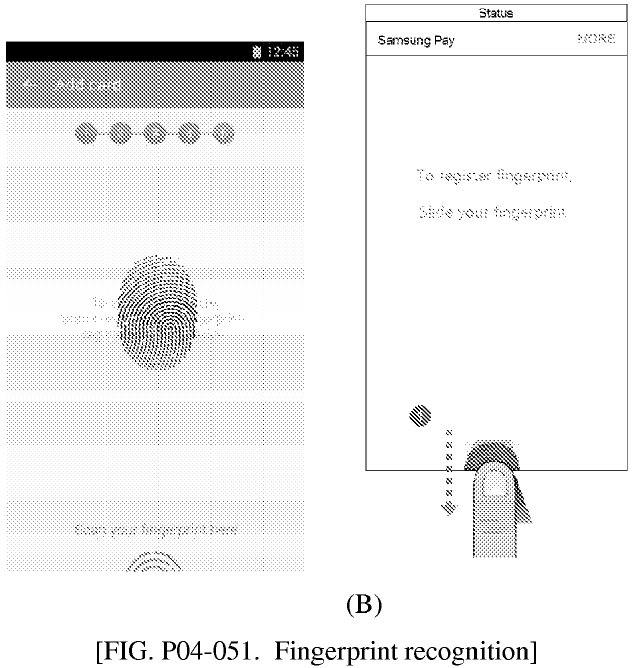

FIG. P04-052 illustrates another embodiment in which the user has failed to normally recognize the fingerprint, or an error has occurred. When the fingerprint recognition fails, a number of retrials may be made to obtain verification; in the case of a failure, sound and haptic feedback are given so that the user can recognize the same. It is also possible to give sound and haptic feedback in the case of a success as well, but they may differ from those in the case of a recognition failure.

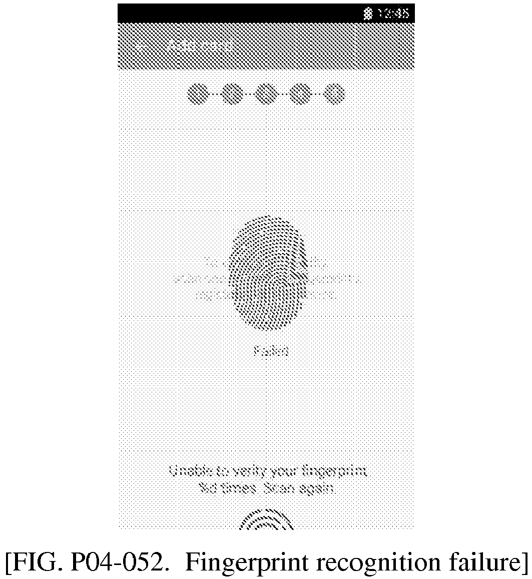

### 2.2.7 Register PIN

Although the fingerprint can be used, the user can also conduct payment using a PIN number when security verification using the fingerprint is difficult. To this end, a PIN number may be registered in advance; FIG. P04-061 illustrates an embodiment in which a PIN number may be registered by repeatedly inputting four digits.

In an embodiment of the present disclosure, six digits may be registered and used as in FIG. P04-062; it is also possible to use characters other than numerals, including alphabetical letters and special letters, as the PIN.

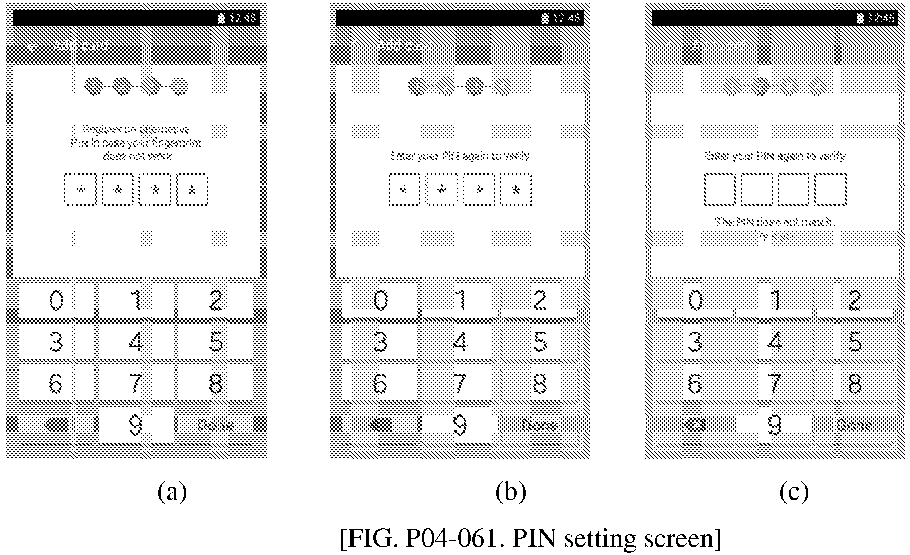

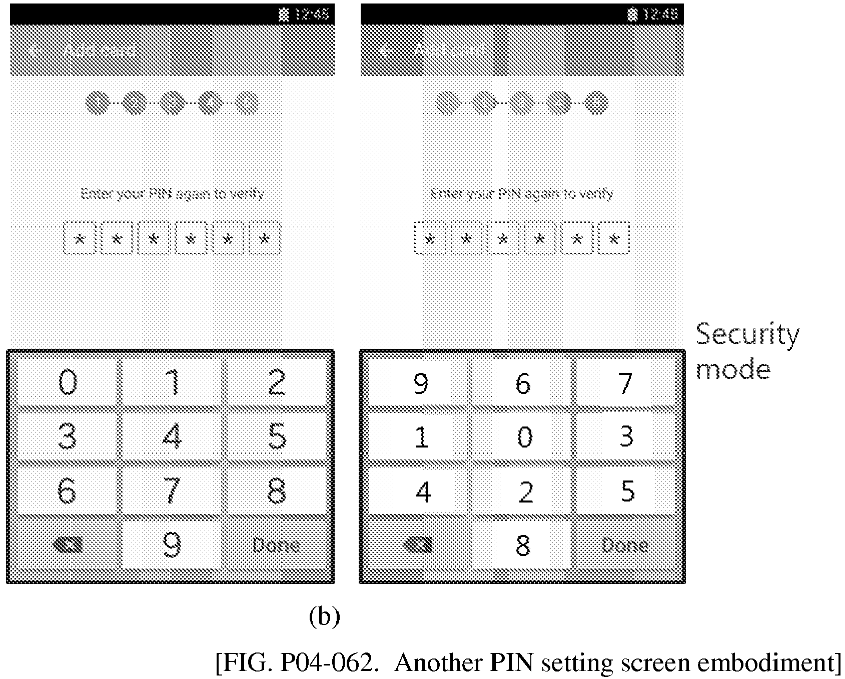

The keypad portion area, which is used to receive the user's input during PIN number input, is an area referred to as a SIP, which is a layer operating in a security mode. The area numbered (5) illustrated in FIG. P04-063 corresponds to the same, and (5) may be a structure existing in a layer different from that of (1)-(4). The area no. (5) is in a different trust UI layer, thereby enhancing security. A keypad may be configured using a trusted UI, which is different from a normal keypad. For example, the arrangement of numbers may be changed and displayed every time the input keypad is shown. It is also possible to transfer only a coordinate value, which has been touched by a finger or a pen, to a touch system, instead of number or character information, such that the touch system operates so as to know what character or number has been selected by the user.

In an additional embodiment, furthermore, the number or characters of the keypad may not constitute an area that is fixed always, but may be displayed differently, depending on the case, as illustrated in FIG. P04-062. This may make it difficult to recognize the user's character or number input.

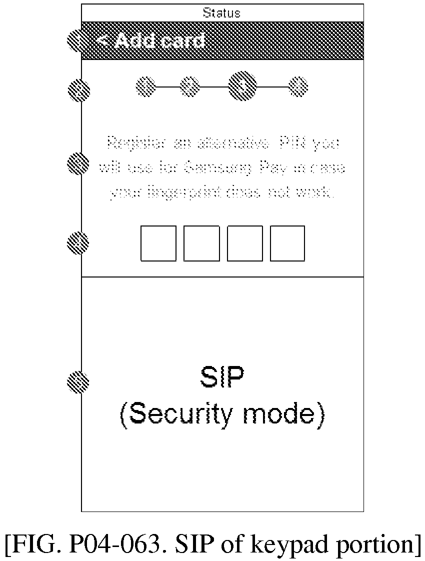

Although PIN registration has been described so far, the PIN registration part may be omitted, and the PIN may not be used actually.

When a fingerprint and a PIN are registered, and when card registration is then selected, switching occurs to a screen for an ID & V process. As the ID & V process, various methods, such as a SMS, Email, an ARS, a call attendant, back app. etc., can be used for verification. FIG. P04-071 illustrates, as an embodiment, the screen of an electronic device, and, as the method for ID & V, various methods may be added besides the above methods.

In some countries and regions, it is possible to undergo the ID & V process after conducting token provisioning without ID & V and then receiving a token from the token server. Additionally, in a different embodiment, the process of token provisioning with ID & V is conducted together with token provisioning.

The token, which has been received through an external token server in the above identification & verification process, may be encrypted by a TEE and may be kept and stored in a REE or a secure element. The token is still in a pending state; when a push alarm is received from the token server later, the token state changes to active, and may be synchronized.

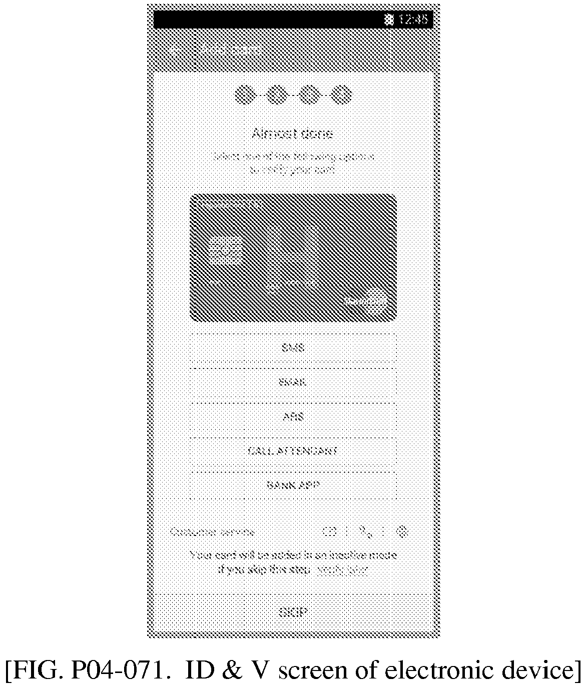

When the Email method is selected for ID & V, for example, verification email will be transmitted to the email, which is registered in the Samsung account, or to a newly input email address, and the screen as illustrated in FIG. P04-072 will appear to the user.

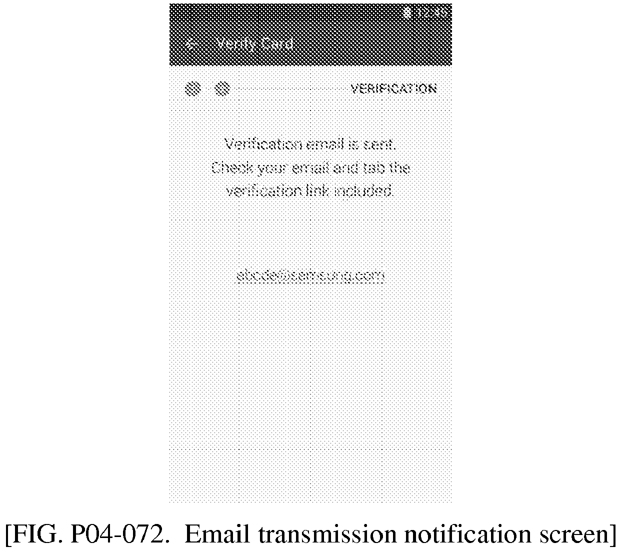

### 2.2.8.1 Description of Operation of Token Provisioning without ID&V

Chapter 1 - Can be described with reference to Architecture and Protocols in FIG. 34.

### 2.2.8.2 Description of Operation of Token Provisioning with ID&V

Chapter 1 - Can be described with reference to Architecture and Protocols in FIG. 35 a or FIG. 35b.

### 2.2.9 Register Signature

As in the flow of FIG. 04-003, a process of registering the user's signature is added in some situations, such as in Korea. The corresponding signature may be used for verification during payment together with the fingerprint; it is also possible to simply confirm signature information against signature information stored in the card company, thereby additionally confirming whether the card registration request is normal or not. Such a routine may vary depending on the situation, and may not be used at all, or may be used differently by each financial institution.

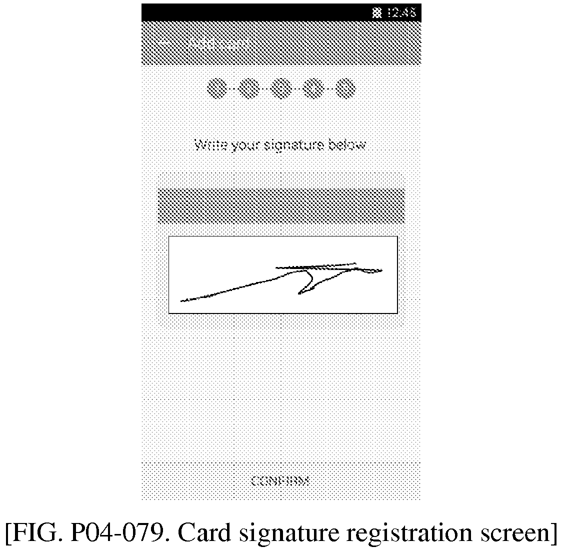

### 2.2.10 Completion

FIG. P04-081 illustrates an example of a screen that shows completion of a card verification process by a payment application; when the token server transmits a push alarm to the electronic device, the electronic device changes the token state from pending to an active state, in which actual use is possible, and may synchronize with the token server. 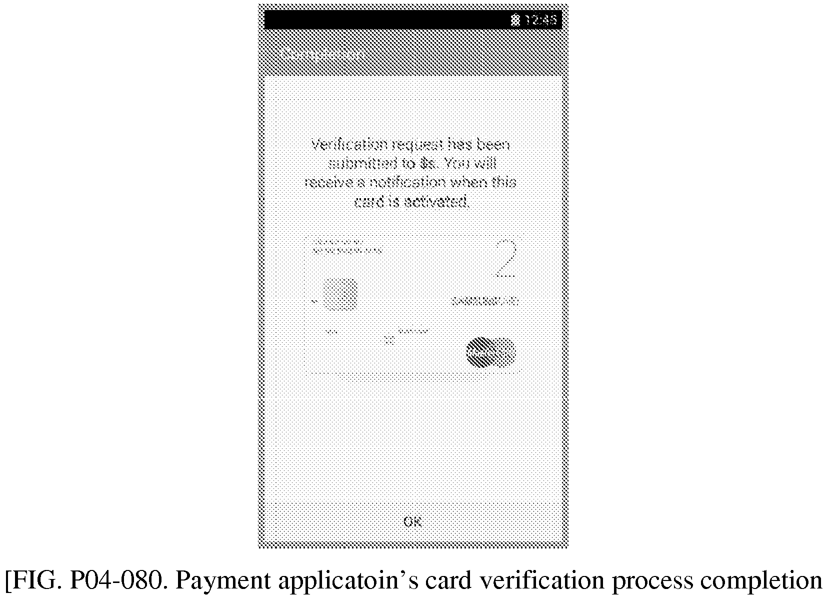 screen]

### 2.3 Offline Payment

### 2.3.1 Offline pay

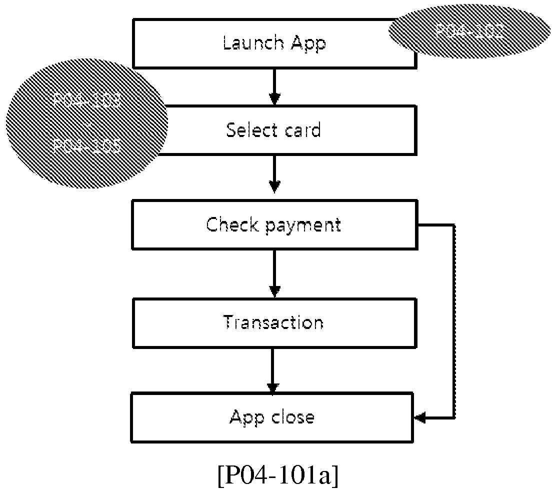

According to an embodiment, the payment-related order may be described as illustrated in P04-101a.present disclosure, a payment-related application may be executed. A card to be used for payment may be selected. A user may proceed with his/her own verification through the fingerprint. It can be checked whether payment is possible or not. For example, a fingerprint may be used to verify a user. A battery can be checked. Details regarding this will be described later with reference to P04-101b.

According to an embodiment of the present disclosure, the payment transaction may proceed after grasping the payment situation. A payment may be conducted using NFC, MST, or a barcode. Detailed descriptions will be given with reference to FIG. P04-101c.

According to an embodiment of the present disclosure, the payment-related application may be ended when payment is completed or when a payment error occurs due to some errors.

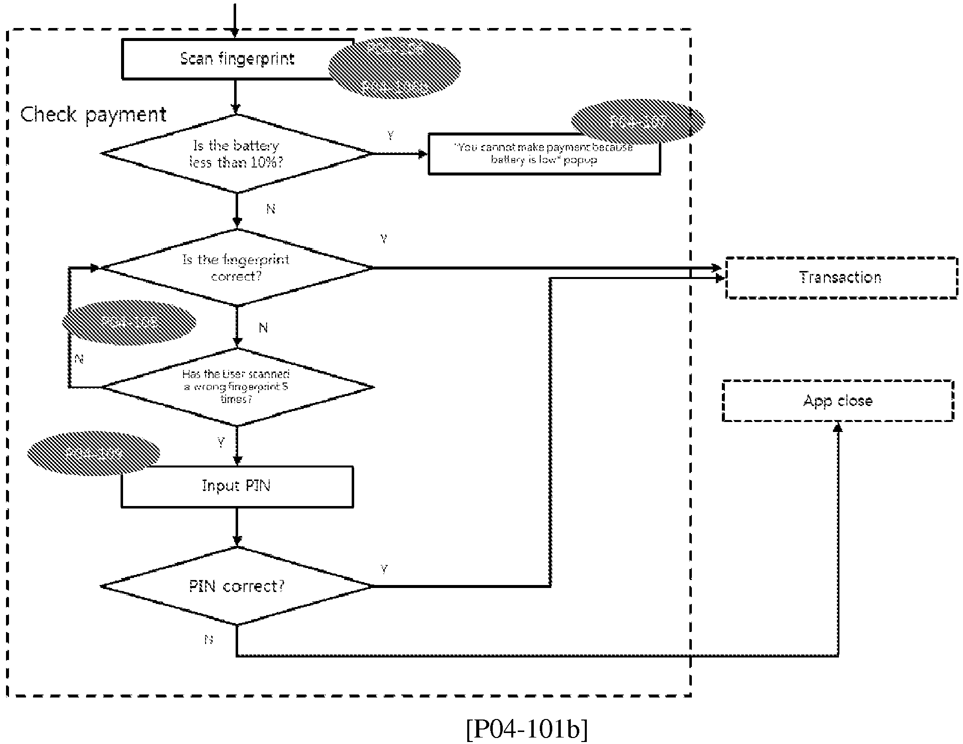

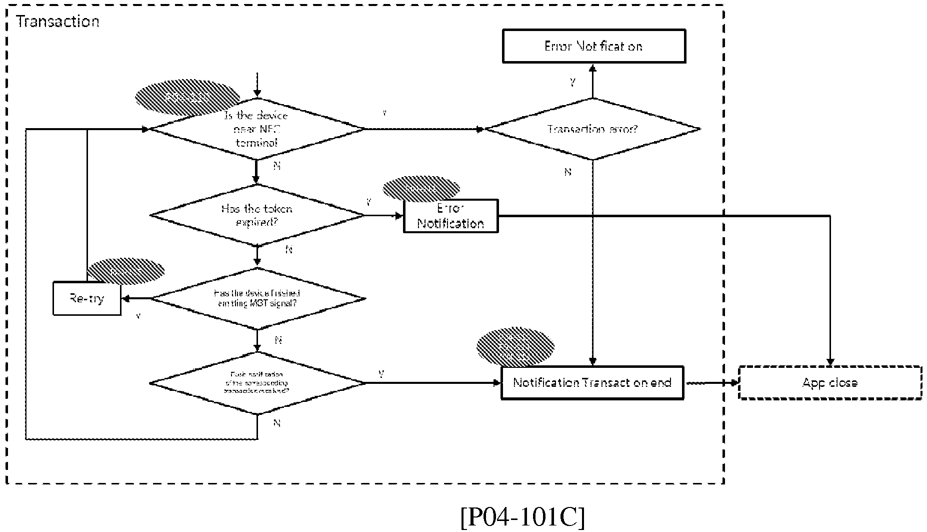

### 2.3.1.1 Launch app

According to an embodiment, the user may touch an icon of a payment application, thereby executing the payment application.

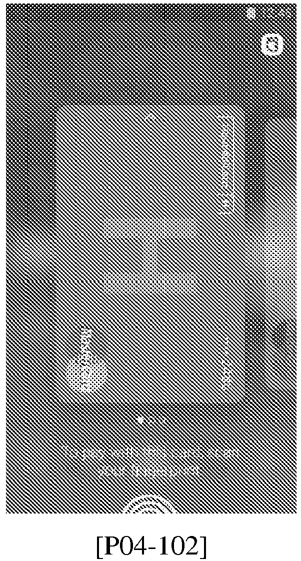

Referring to FIG. P04-102, the screen may be shown when the payment application is executed and when the initial entry is made. One of images, which are related to a card having a token in an activated state, may be shown. For example, the most recently used card may be shown. A card set by the user may be shown. The payment application may receive information from an external device and may select and show a card, which gives the user benefits, such as discount or mileage accumulation, when payment is made at the corresponding store.

According to an embodiment of the present disclosure, screen processing may be conducted in connection with showing a card image. For example, parts other than the card image, which is shown by default, may be blurred or made semi-transparent so that the screen, before the card app is executed, may appear faintly. According to an embodiment, in connection with showing a part of the screen before execution, some areas may be shown the same as the existing screen. For example, among the screen configuration of FIG. P04-102, the top area, in which a battery figure or a clock is displayed, may be displayed in the same manner as before.

According to an embodiment of the present disclosure, the card image, which is shown by default, may be displayed completely opaquely. The card image, which is shown by default, may be in a semi-transparent state in which some parts of the rear image are visible.

According to an embodiment of the present disclosure, cards other than the card image, which is shown by default, may be displayed to be distinguished from the card shown by default. For example, at least one of the following manners may be used: displaying a card at a higher transparency than the card shown by default and displaying a card to be smaller than the default card, as illustrated in FIG. P04-012. According to another embodiment, at. At least one of the following manners may be used: displaying a card at a higher transparency than the card shown by default and displaying a card to be larger than the default card.

According to an embodiment of the present disclosure, a guide may be displayed on the initial screen so as to receive an input of fingerprint.

The user may change the card in order to make payment using a card other than the card that is initially shown when entering the payment application. According to an embodiment, a token and a LUK, which are related to the selected card image, may be used for payment.

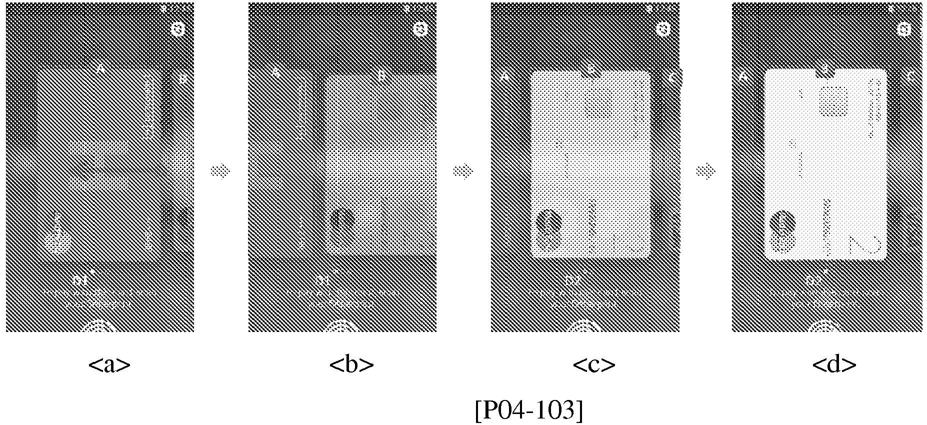

According to an embodiment, FIG. P04-103 may illustrate a method for selecting of the present disclosure, a card may be selected when there are three or less tokens.

According to an embodiment of the present disclosure, the user may perform a swipe operation from the right side of the screen to the left side as in <a>.

According to an embodiment of the present disclosure, a card A may move to the left side during the swipe operation. At least one of the following effects may be made while card A moves to the left side: making the card smaller than the original size and making the card transparent.

According to an embodiment, a card B may move to the left side. According to an embodiment, at least one of the following effects may be made while card B moves to the left side: making the card larger than the original size and making the card opaque.

According to an embodiment, a card C may appear from the right side. According to an embodiment, when card C appears from the right side, it may be displayed in the same manner as card B looks.

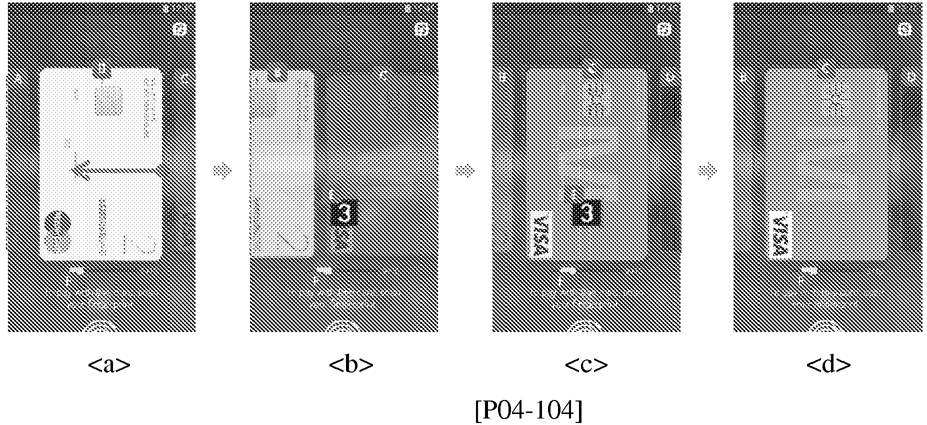

According to an embodiment, FIG. P04-103 may illustrate a method for selecting of the present disclosure, a card may be selected when there are four or more tokens.

According to an embodiment, the user may perform a swipe operation from the right side of the screen to the left side as in <a>.

According to an embodiment of the present disclosure, card A moves to the left side during the swipe operation. According to an embodiment, card A may move to the left side and disappear from the screen.

According to an embodiment, card B may move to the left side. According to an embodiment, at least one of the following effects may be made while card B moves to the left side: making the card smaller than the original size and making the card transparent.

According to an embodiment, card C may move to the left side. According to an embodiment, at least one of the following effects may be made while card C moves to the left side: making the card larger than the original size and making the card opaque.

According to an embodiment, card D may appear from the right side. According to an embodiment, when card D appears from the right side, it may be displayed in the same manner as card C of <a> looks.

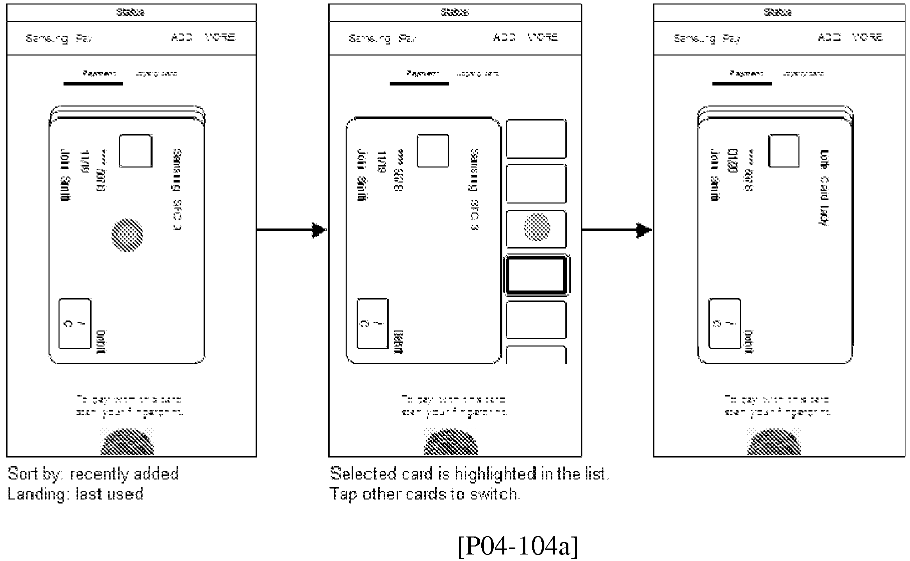

According to an embodiment of the present disclosure, the terminal may provide a screen, which enables card selection, as in FIG. P04-104a. For example, multiple card images may be overlapped on the screen, after a payment application is executed, and displayed to the user. In this case, the card image, which is shown in the uppermost position, may be related to the card that has been set as the default card by the user. In connection with the card image shown in the uppermost position, the payment application may receive information from an external device and may select and show a card, which gives the user benefits, such as discount or mileage accumulation, when payment is made at the corresponding store. A card shown in an upper position may be a recently registered card. A card shown in the upper position may be a recently used card. A card shown in the upper position may be the most frequently used card.

According to an embodiment of the present disclosure, when a user event (for example, a touch, swipe, long press, etc.) is input on a card image shown in the upper position, card images, which have been overlapped, may be spread to the side of the card in the upper position and shown. Among the card images that have been spread, the card shown in the upper position may be displayed distinctly. For example, a separate line may be displayed on the outer peripheral line of the card image shown in the upper position. The color of the card image shown in the upper position may be displayed differently. Card images other than the card image, which is shown in the upper position, may be displayed faintly. The card image, which is shown in the upper position, may be displayed to be larger than the other card images. The card image shown in the upper position may be displayed at the upper end.

According to an embodiment of the present disclosure, if all card images do not appear on the screen, a menu may be provided such that cards can be displayed. For example, the user may move card images, which have been spread, upwards or downwards through a swipe gesture so that card images, which have been invisible, appear on the screen.

According to an embodiment of the present disclosure, one may be selected from multiple card images, which have been spread, as set as the default card. Operations for selecting a card may include the following operations: a user touch, a long press touch, selecting a corresponding card image and then dragging-and-dropping it to the existing default image, and selecting a corresponding card image and then swiping it to the default card image.

According to an embodiment, when the card selection operation is completed, the card images, which have been spread, may be changed to overlapped card images.

In an embodiment, FIG. P04-104b may illustrate a screen may be used by the payment application to recommend a card prior to payment. The screen (a) recommendsmay recommend Samsung SFC 3 and informs, in (2),inform that a discount of 5% is available, a discount of 10% is available when purchasing $100 or more, and the card may be used for an additional $1350, so that the user can easily check benefits and information regarding this card. On the screen, the user may recognize the fingerprint and instantly make payment. In addition, when the user wants to check another recommended card, he/she can switch the screen to screen (b) by swiping the screen, for example.

The card of a screen (b) can inform that, when XXXX AMEX card is used, a discount of 1% is available, a discount of 7% is available when purchasing $100 or more, and the card can be used for an additional $390; payment can be made instantly; and the user can check another card when such card conditions are not satisfactory.

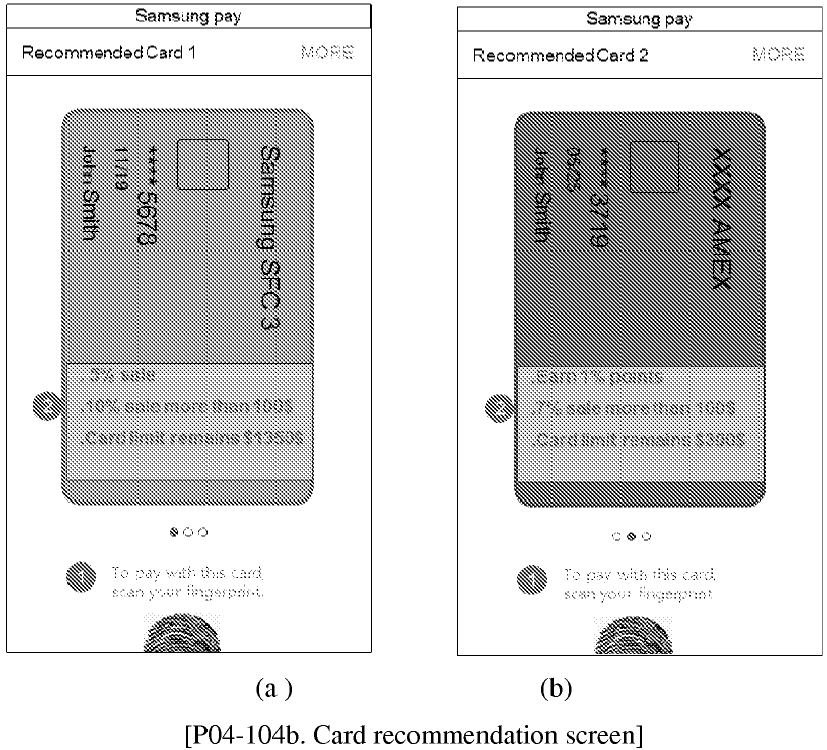

The electronic device may recommend a card in view of the price, at which the user wants to make a purchase, conditions, the amount of purchases so far, the total amount of purchases made by the card, the settlement limit, the point accumulation rate, the discount condition and price, and the like; the electronic device may keep and store past transaction particulars in the payment application or in the cloud so that it can check the history and recognize similar purchase patterns, thereby recommending a card.

In an additional embodiment, when only $390 can be additionally settled using card 2, which is preferentially recommended when the user purchases a product priced at $1000, settlement may be recommended in combination with card 3, which can be used for a large amount of additional payment. Only one card settlement may be recommended, but a method of recommending that a plurality of cards is simultaneously used for settlement may also be included.

The payment application can, in the case of online shopping, identify the unique ID of each store and each site and thereby recognize a store; in the case of an offline store, it can be identified on the basis of Bluetooth, the beacon of BLE, or data included in a frame received from a base station of a network such as 3G or LTE; and it is also possible to check store and discount information on the basis of confirmation of a position through a positioning technology, such as GPS or indoor LBS, and information regarding a store in the corresponding position.

In an embodiment of the present disclosure, the user's movement and position can be identified on the basis of a beacon arranged in each segment inside a store; if the user, who has been in the garment segment inside a department store, moves to a food corner, a card is recommended according to the same and may be displayed on the screen with a high priority.

In an embodiment of the present disclosure, when the user purchases an article, for example, offline and wants to pay for it using a card, the user may complicatedly think which card would have a better discount benefit and whether he/she carries a discount card or not. In such a case, the user is made to instantly check various kinds of data related to the store, such as a point card related to the store, the unique number, and the like, simply by talking, for example, in any process of the payment application. In an embodiment of the present disclosure, when the user says to an electronic device or a wearable device "Let me know about my membership card," "Where is E-mart membership number?," or "Find me a discount coupon," the barcode of the corresponding membership card is searched for so that discount, accumulation, or the like can be made instantly. It is also possible to display information regarding a discount coupon, a barcode, and the like, even if there is no corresponding card or a subscribed membership, so that a discount can be made instantly.

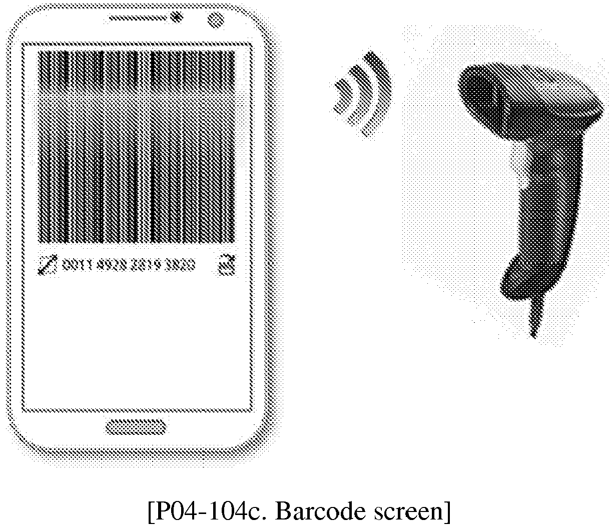

Methods for checking information related to a store include a method based on a beacon of Bluetooth or BLE or data included in a frame received from a base station of a network, such as 3G or LTE and a method based on position confirmation, such as GPS and indoor positioning technology, and the like, and information regarding a store in the corresponding position.

In an embodiment of the present disclosure, when the user goes to a CGV theater and is about to buy a movie ticket, the user may deliver a voice command "CGV subscription information" or "CGV discount membership" to an electronic device, including a wearable device, so that, as illustrated in FIG. P04-104c, the card image, the card number, the barcode, my membership grade, and the like are displayed, and a setting screen related to the corresponding card may be displayed on the lower end of the full screen or on a separate screen.

Various settings can be made on the screen for setting a payment card and a membership card, such as an automatic alarm when arriving at a specific place, setting a repeated alarm according to time, adding card event and purchase information to the calendar, and the like.

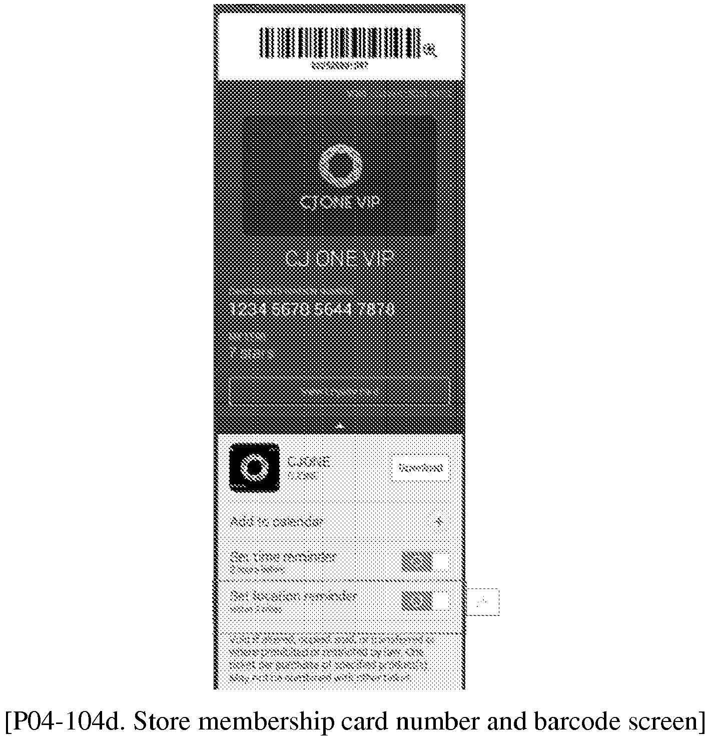

In various embodiments, by setting part (A) of FIG. P04-104d, an alarm may be provided automatically, when arriving at CGV theater, informing that the card can be used. In addition, the user can check discount and accumulation during a ticket purchase and other use particulars through the barcode and card number of FIG. P04-087.

Among the settings, a corresponding place may be stored manually, or the electronic device may automatically register the place; then, the electronic device can inform so as to use the corresponding card, when the position or place is reached, through a popup or a notification bar. The method of automatic registration includes a method based on the user's record of use of the corresponding card and position data acquired through a positioning technology, such as GPS, or indoor LBS, and a method based on a store connected with the card and store information on the map.

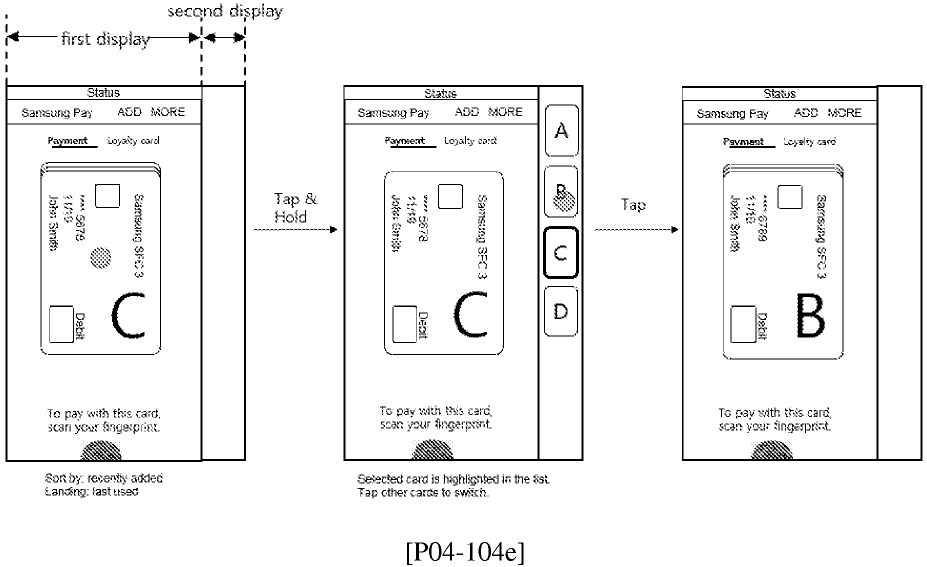

According to an embodiment of the present disclosure, the terminal may provide a second display, which is adjacent to a first display, with a screen that enables card selection, as in FIG. P04-104e. For example, multiple card images may be overlapped on the screen of the first display, after a payment application is executed, and displayed to the user. In this case, the card image, which is shown in the uppermost position, may be related to the card that has been set as the default card by the user, as in FIG. P04-104a. According to an embodiment, in connection with the card image shown in the uppermost position, the payment application may receive information from an external device and may select and show a card, which gives the user benefits, such as discount or mileage accumulation, when payment is made at the corresponding store. The card shown in the upper position may be a recently registered card. The card shown in the upper position may be a recently used card. The card shown in the upper position may be the most frequently used card.

According to an embodiment of the present disclosure, when a user event (for example, a touch, a swipe, a long press) is input to a card image, which is shown in the upper position, among overlapped card images displayed on the first display, the overlapped card images may be spread and displayed on the second display, which is adjacent to the first display. Among the card images that have been spread, the card shown in the upper position may be displayed distinctly. For example, a card image displayed on the second display, which is related to the card image displayed in the upper portion on the first display, may be displayed as a separate line on the outer peripheral line. A card image displayed on the second display, which is related to the card image displayed in the upper portion on the first display, may be displayed with a different color. A card image displayed on the second display, which is related to the card image displayed in the upper portion on the first display, may be displayed with a different transparency and a different clarity from the other cards displayed on the second display. A card image displayed on the second display, which is related to the card image displayed in the upper portion on the first display, may be displayed to be bigger than the other card images. A card image displayed on the second display, which is related to the card image displayed in the upper portion on the first display, may be displayed on the upper end.

According to an embodiment of the present disclosure, when the entire card images are not visible from the second display screen, a menu may be provided to the first display or the second display so that all cards can be seen. For example, the user may move card images, which have been spread, upwards or downwards through a swipe gesture related to the second display so that card images, which have been invisible, appear on the screen.

According to an embodiment of the present disclosure, one may be selected from multiple card images, which have been spread on the second display screen, as set as the default card. Operations for selecting a card may include the following operations: a user touch related to the second display, a long press touch, selecting a corresponding card image and then dragging-and-dropping it to the first display, and selecting a corresponding card image and then swiping it to the first display.

According to an embodiment of the present disclosure, when the card selection operation is completed, the card images, which have been spread, may be changed to overlapped card images.

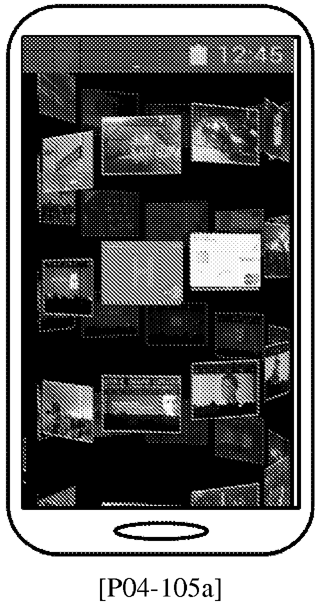

According to an embodiment of the present disclosure, multiple card images may be displayed in spiral shapes.

### (All images shown in spiral structures are card images)

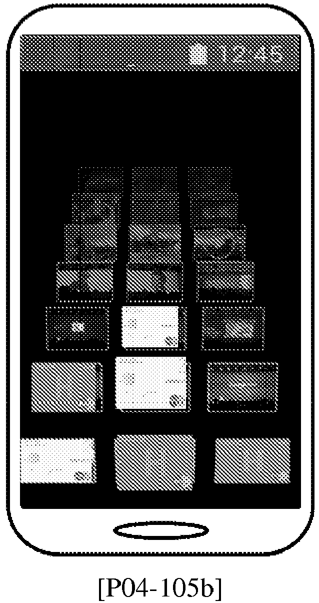

According to an embodiment of the present disclosure, multiple card images may be displayed as in FIG. P04-105b. For example, a display can be made such that the size or transparency of cards differs depending on the line. A display may be made such that card images in some areas and card images in other areas have different perceptions of depth.

### (All images shown in corresponding structures are card images)

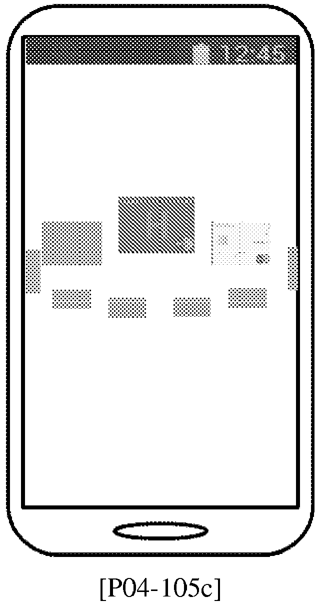

According to an embodiment of the present disclosure, a display may be made in multiple card ring shapes.

(Each image of the drawing, which is structured such that card images constitute one big circle in a fence type, indicates a card.)

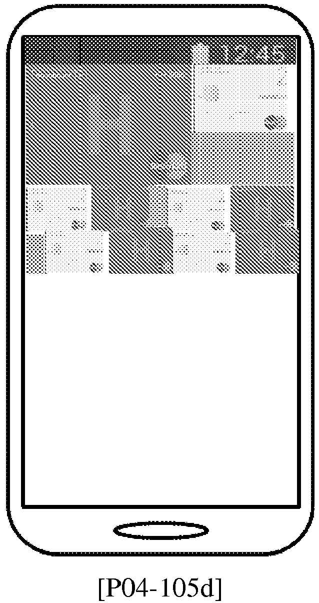

According to an embodiment of the present disclosure, card images having different sizes may be displayed in tile shapes according to the attribute or priority of cards.

According to an embodiment, of the present disclosure a card, which has been set by default among tile shapes, may be displayed to be distinguished from other cards. For example, a card set by default may be displayed to be larger than other cards. The card set by default may be displayed to be smaller than other cards. The card set by default may be displayed with a different color from those of other cards. The card set by default may be displayed such that, unlike other cards, the outer peripheral line is highlighted. The card set by default may be displayed to be larger than other cards. When card B is moved to the position of card A, which is a default card, using a drag-and-drop method, card B may be set as the default card.

According to an embodiment of the present disclosure, the user's fingerprint may be used, in order to verify payment, to verify the person.

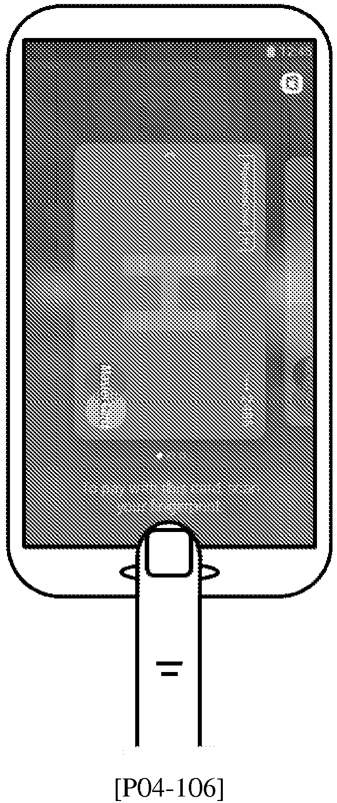

According to an embodiment, FIG. P04-105 may illustrate a finger recognizing operation. According to an embodiment of the present disclosure, fingerprint recognition may be conducted by touching the home button on the front portion. Fingerprint recognition may be conducted in such a type that the home button on the front portion is swiped by a finger. Fingerprint recognition may be conducted in such a type that a button on the rear surface is touched. Fingerprint recognition may be conducted in such a type that a button on the rear surface is swiped. Personal verification may be conducted through recognition of a registered iris. Personal verification may be conducted a registered voice recognition.

According to an embodiment of the present disclosure, after personal verification succeeds, a right to access a token and a LUK, which are necessary for payment, can be acquired.

A fingerprint sensor is not fixed in some limited positions, but can recognize a fingerprint in any position on a touch screen panel (TSP). The combination of a TSP and a fingerprint sensor enables the user to recognize a touch on parts including the screen and even some areas around the screen, thereby recognizing a fingerprint.

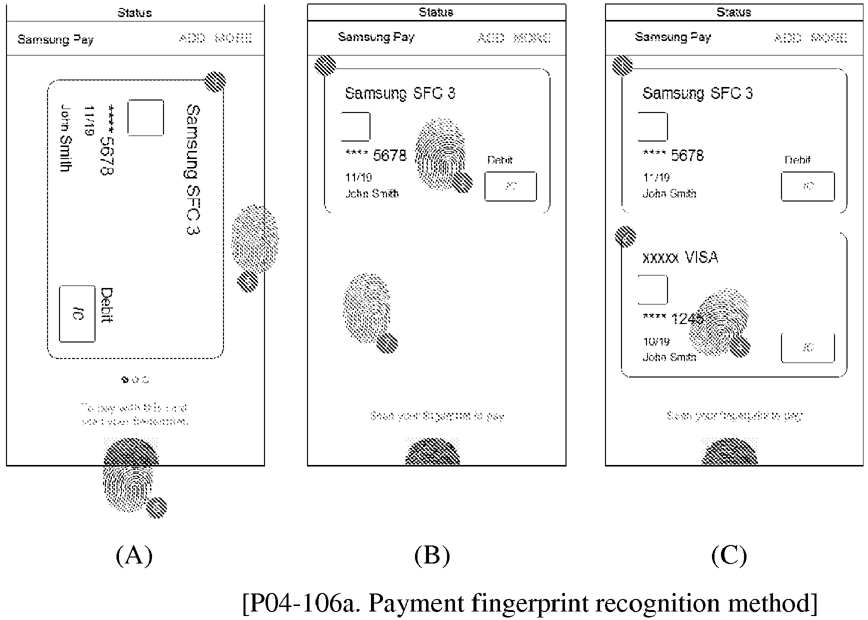

As illustrated in FIG. P04-106a, cards may appear in various types on the screen of an electronic device. As in the embodiment illustrated in (C), two or more cards may appear simultaneously; the user may select a card, which is to be used for payment, and recognize a fingerprint again; alternatively, the user may make a fingerprint recognized, which corresponds to a desired card, thereby selecting the corresponding card and recognizing the fingerprint. In the embodiment of (C) of FIG. P04-106a, when the user wants to use card no. 2 for payment, the user gets a fingerprint recognized on card no. 2; then the card will be used for payment. It is possible to regard a fingerprint recognition on a card, as in (3), as a normal selection, while (5) and (7) outside the card area are not regarded as normal selections, and the user may be requested to select or recognize again. An area-type fingerprint recognition has been given as an example in the above description, but a slide-type fingerprint recognition method can also be applied in the same manner.

In an embodiment of the present disclosure, it is possible to register and use a plurality of fingerprints of various fingerprints. It is possible to register a total of ten fingerprints of the left and right hands (thumbs, forefingers, middle fingers, etc.), and different settlement methods may be designated to respective fingerprints. For example, a thumb may be used to verify payment using Samsung card (1), and a forefinger may be used to verify payment using xxxx Visa® card (2). A payment application can be executed, in connection with the simple pay, through an operation of swiping the lower end portion from the bottom to the top in a home screen state; a screen display may be made such that a swipe using a thumb makes the card (1) appear as the first card, and use of a forefinger makes the card (2) available. When fingerprints of various fingers are registered, an erroneous operation may occur, i.e. a fingerprint is recognized in an unwanted situation; in order to prevent such an operation, it is possible to separately designate an area and an application, in which the fingerprint of each finger is recognized normally.

FIG. P04-106b illustrates an embodiment of of the present disclosure, an electronic device, which may have one or more displays, has a first display and a second display, where a fingerprint may be recognized on the second display, thereby conducting payment. A fingerprint may be recognized on both the first and second displays, depending on the specific Application and situation, and it is also possible to recognize fingerprints only on one display or only in a predetermined area. In an embodiment of the present disclosure, a thumbprint may only be recognized on the first display, and the fingerprint of a forefinger may only be recognized on the second display.

This can prevent an erroneous operation of recognizing a finger touch input, which is a normal selection on a TSP, as a fingerprint.

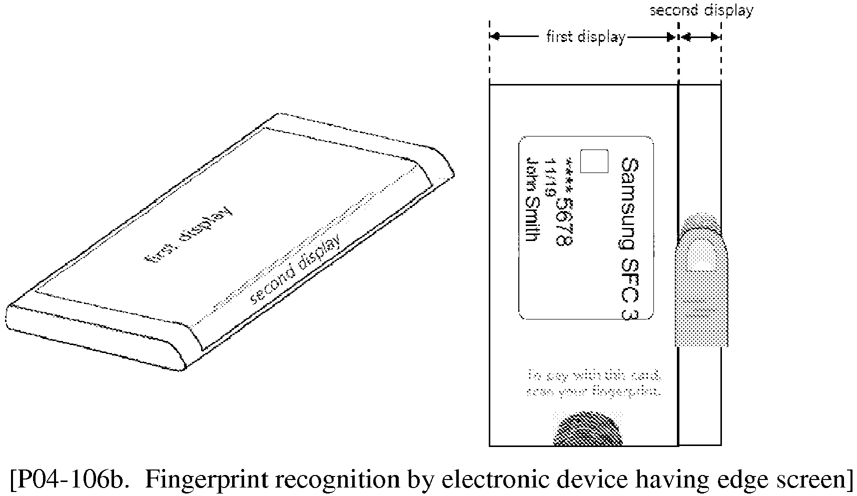

According to an embodiment of the present disclosure, a checkup may be conducted before a payment is made. For example, settings may be made such that a payment operation can be performed only when the remaining amount of power is 10% or higher. It is checked whether the remaining amount of power is 10% or not, according to the setting; if the remaining amount of power is 10% or higher, the next payment operation is performed and, if the remaining amount of power is less than 10%, the user may be provided with a warning message, and the payment operation may be canceled.

For example, if the battery less than 10%, the terminal may check the amount of power and determine whether or not to continue the payment. If the remaining amount of power of the battery is insufficient, a warning message may be generated, and the payment may be stopped. According to an embodiment, the battery power may be checked before payment is made using a fingerprint.

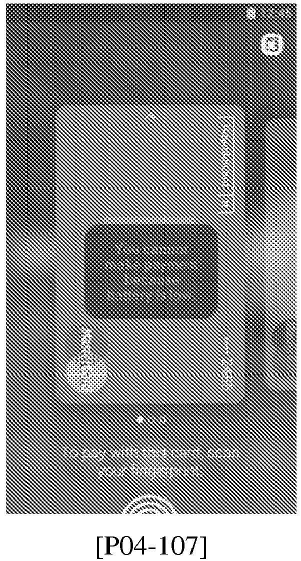

According to an embodiment, FIG. P04-105 may illustrate a message displayed on the screen when the amount of power is less than a reference.

According to an embodiment of the present disclosure, when the payment application is executed, or when the electronic device, on which the payment application is installed, is booted, attempts payment, or accesses a token, the payment application may be executed after confirming the stability of the device by confirming the stability of the TEE, in which the token is stored, the REE, which is encrypted by the TEE, or the secure element, by confirming whether the application is infected with a virus or not, and by checking malware, malicious codes, and the like. In addition, it is also possible to determine whether or not to execute the payment application and whether or not to stop it during execution by considering whether a network connection has been made or not, whether a predetermined rate is available or not, the SIM enabled state, and the battery state as a whole. When the payment application cannot be executed, the user may be informed through a message on the screen, such as a popup notification, through sound or vibration, or through LED blinking.

According to an embodiment, personal verification may be performed through inputted fingerprint information. For example, inputted fingerprint information and stored fingerprint information may be compared to determine whether they are the same person or not. When it is determined that they are the same person, the next payment step can proceed.

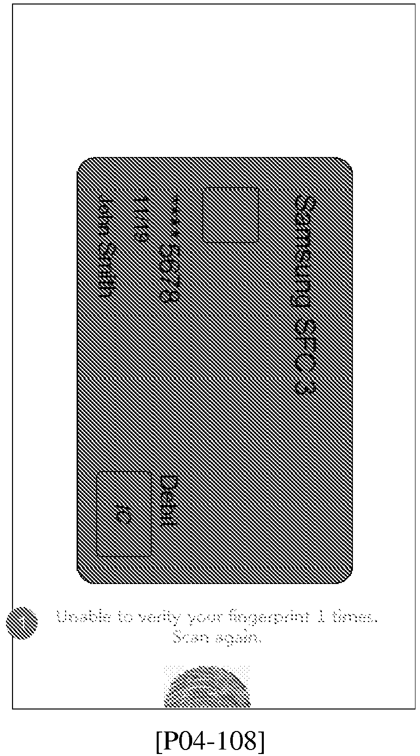

A screen, which is displayed when fingerprint verification fails, may be described with reference to FIG. P04-108.

According to an embodiment of the present disclosure, when fingerprint fails as in P04-108, the number of failures may be displayed. Fingerprint verification may be attempted until a preset number of allowed failures is reached.

According to an embodiment of the present disclosure, when the preset number of allowable failures is reached, person verification can be performed using a preset PIN, instead of the fingerprint.

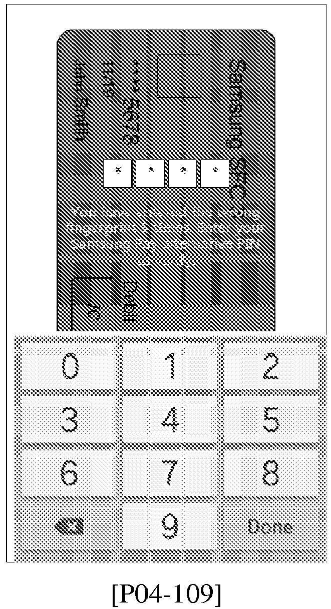

According to an embodiment of the present disclosure, a PIN input screen may be configured as illustrated in FIG. P04-109. For example, it may be displayed on the upper end of the screen which PIN has been entered during the PIN input. It is possible to replace the displayed content with a new content, such as "*". The keypad used for input may be configured using a trusted UI, unlike a normal keypad. For example, the arrangement of numbers may be changed and displayed every time the input keypad is shown. In addition, instead of information regarding entered numbers, only the coordinate values of pressed keys may be transferred to the keypad system such that the keypad system is aware of what characters have been selected by the user.

According to an embodiment of the present disclosure, the next payment operation can proceed when personal verification succeeds through PIN input. The payment application may be ended when personal verification through PIN input fails. It is possible to return to the first payment screen when personal verification through PIN input fails. When personal verification through PIN input fails, the user may be informed of the personal verification failure through a screen display, vibration, an alarm sound, and the like.

According to an embodiment of the present disclosure, the next payment operation can proceed if personal verification using fingerprint verification or PIN input succeeds.

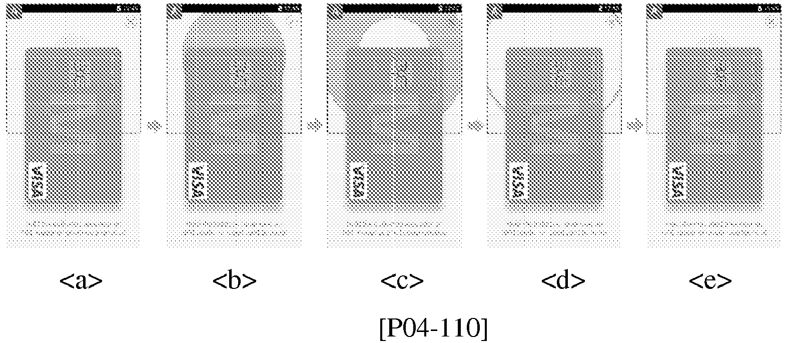

According to an embodiment of the present disclosure, a state, in which payment is possible, may be displayed as in FIG. P04-110. For example, in <a>, a part of a semi-transparent circle may be displayed behind the card image. An effect of gradually increasing the circle may be displayed, as in <b>. A circle of a different color may be generated inside the circle, which has increased in size, as in <c>. The circle of a different color may increase to the size of the original circle, as in <d>. Thereafter, operations <a>-<b> that correspond to a state in which payment is possible may be repeated continuously and displayed on the screen. According to an embodiment, a popup message may be used to indicate a payment state. According to an embodiment, the LED, for example, may be turned on to inform the user of the payment state.

According to an embodiment of the present disclosure, the terminal may be generating a MST signal while the screen of FIG. P04-110 is being displayed.

According to an embodiment of the present disclosure, a screen that repeats <a>-<e> of FIG. P04-110 may be displayed, or information related to a token may be displayed in at least one of barcode shapes.

According to an embodiment of the present disclosure, it is possible to check whether an NFC terminal exists in a predetermined range of <device> or not while the screen of FIG. P04-110 is being displayed. For example, <device> may sense a signal sent by the NFC terminal within a predetermined range and thereby confirm the existence of the NFC terminal. After confirmation, a NFC communication scheme may be used to transmit a token and a cryptogram to the NFC terminal and conduct payment.

According to an embodiment of the present disclosure, no NFC terminal may exist within a predetermined range of the terminal. In this case, it can be checked whether a stored token is available or not.

The electronic device may grasp, when approaching or entering a store, whether the NFC, MST, or barcode of the payment POS is supported or not and may change the UI and operation of the payment application on the basis of the same.

The position can be grasped using a technology such as GPS of the electronic device or an indoor positioning location based services (LBS) module, for example; alternatively, thee position can be grasped using short-distance or long-distance network position information. On the basis of the above position information, it can be distinguished whether the NFC, MST, or barcode of the POS device is supported or not.

According to an embodiment of the present disclosure, it can be distinguished whether the NFC, MST, or barcode of the payment POS device is supported or not, on the basis of beacon information of Bluetooth or BLE or frame data of WiFi.

The payment application may operate only one module of NFC/MST/barcode during actual payment on the basis of the POS information.

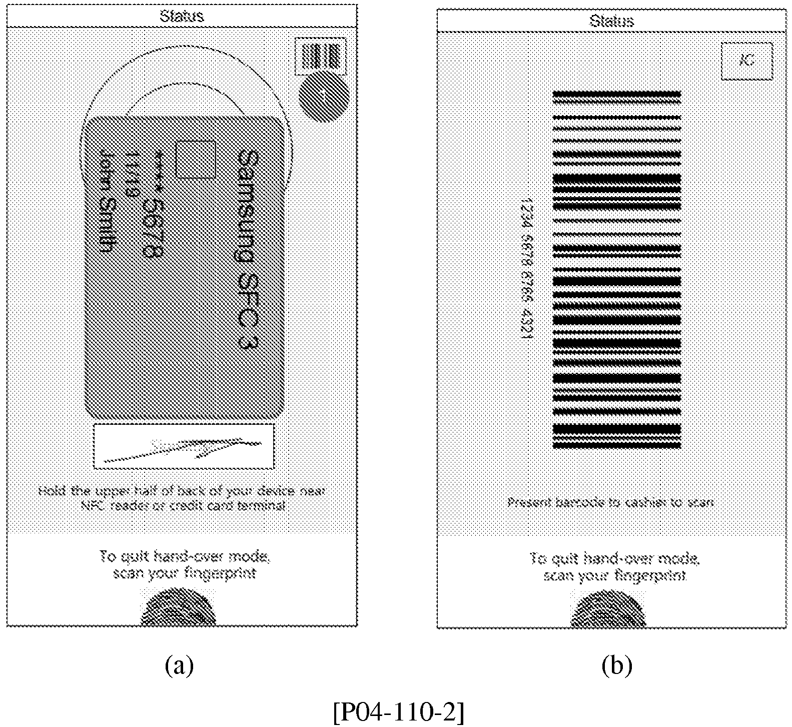

In FIG. P04-110-2, (a) illustrates an example of starting or modifying a payment application in conformity with an electronic device, which supports only NFC at the POS device, where the POS device supports MST only, a screen and a module of a payment application, which have been modified in conformity with MST, may be operated instead of a screen.

When a part no. 1 of (a) is clicked, a change is made to screen (b), and a change may be made such that payment can be made using a barcode.

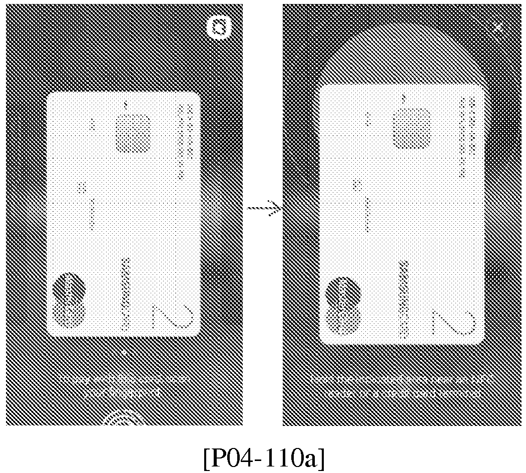

According to an embodiment of the present disclosure, the direction of the terminal may be guided to the user during payment. For example, a communication signal for payment may be emitted through the rear surface of the terminal. In such a case, the user may be guided through the screen or sound so that the rear surface of the terminal faces a payment reader.

According to an embodiment of the present disclosure, when it is determined, using a proximity sensor on the front portion of the terminal, that a payment reader is approaching, the user may be guided through audio so as to flip the terminal for payment, as in FIG. P04-110a, or the user may recognize it through vibration.

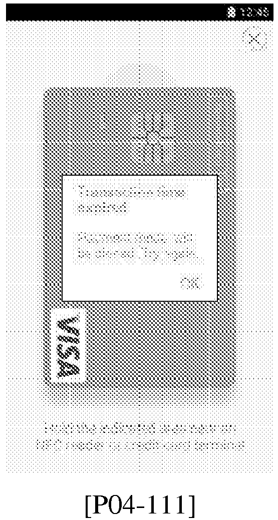

According to an embodiment of the present disclosure, if a token related to a card is invalid, the user may be provided with a screen display as in FIG. P04-111.. The payment application can be ended by selecting "Ok" on the screen of FIG. P04-111.. The fact that the token is invalid may indicate that the token's use period may have expired.

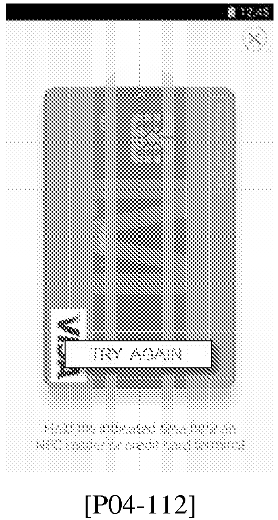

According to an embodiment of the present disclosure, when a token is valid, it can be checked whether a MST signal is being emitted or not. If emission of a MST signal has been terminated, the user may be provided with a re-try menu as in FIG. P04-112.

According to an embodiment of the present disclosure, when the user selects the re-try menu, screens <a>-<e> of FIG. P04-110 may be displayed repeatedly.

According to an embodiment of the present disclosure, when emission of a MST signal continues, it can be checked whether a payment completion message has been received from the outside or not. It can be determined, if a payment completion message is received, that payment has been completed. In this case, it is possible to stop emission of the MST signal and display payment completion.

According to an embodiment of the present disclosure, the payment completion message may be a message transmitted from a token server. The payment completion message may be a message transmitted from an issuer. The payment completion message may be a message coming from a POS device.

According to an embodiment of the present disclosure, the user may be provided with an indication when an error occurs during a payment transaction.

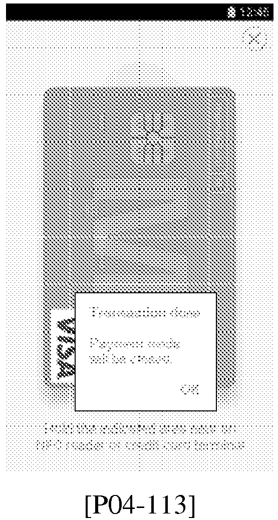

According to an embodiment, the user may be provided with an indication as in FIG. 04-113 when payment succeeds.

According to an embodiment of the present disclosure, when payment is ended normally, the initial state of payment application execution may be returned to, as in FIG. P04-102.

According to an embodiment of the present disclosure, vibration may be generated. Sound may be generated through the speaker. An LED may blink. The LED, which has been turned on during payment, may be turned off.

According to an embodiment of the present disclosure, the payment application may be ended after informing the user of payment completion.

According to an embodiment of the present disclosure, the payment application may stand by in the initial state informing the user of payment completion.

According to an embodiment, the payment particulars may be displayed on the screen after informing the user of payment completion.

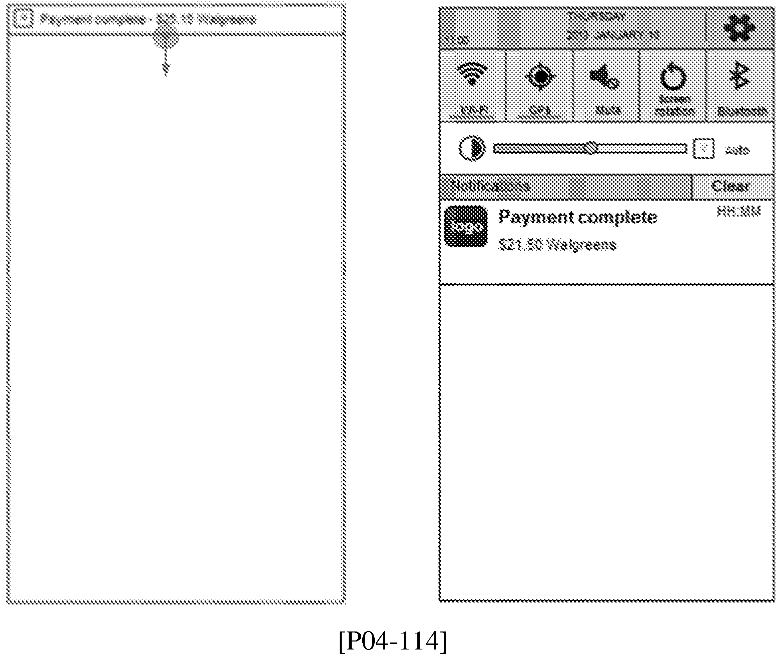

According to an embodiment of the present disclosure, a message regarding payment particulars may be received after payment is ended normally. The content of the message may be summarized and displayed on a notification bar on the upper end of the screen. If the notification bar is selected and is swiped downwards, the payment particulars may be displayed in more detail than the notification bar.

According to an embodiment of the present disclosure, a predetermined time may be taken, after the electronic device has made payment attempts in various manners to the POS device, until the final payment is made; and a payment error message, for example, may be displayed to the user during the payment process. In addition, such a message may be displayed as a notification bar or a popup or may be displayed in a predetermined area of the screen or on the second screen.

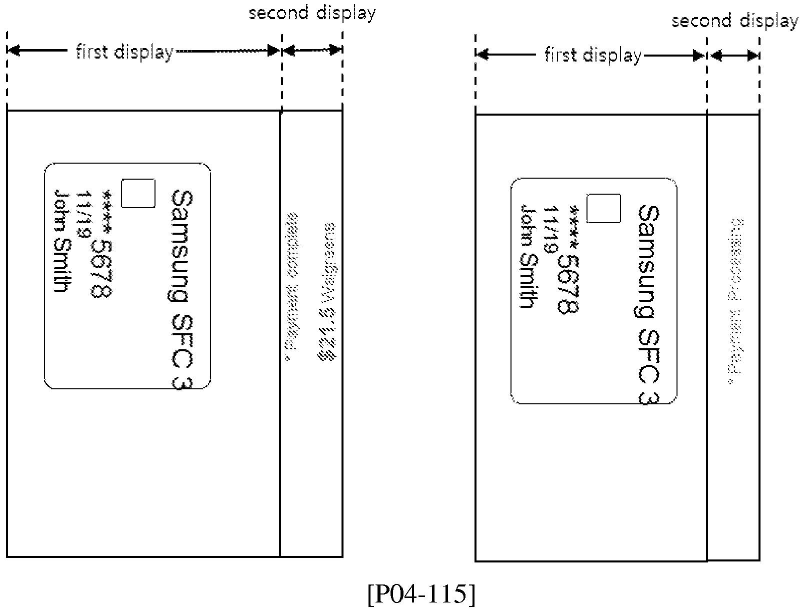

According to an embodiment of the present disclosure, content related to payment success and transaction particulars may be omitted in view of the payment transaction flow.

### 2.3.2 Offline Pay (simple pay)

The flowchart is identical to that of In_app pay and, since some content is changed, only the changed content will be described.

### 2.3.2.1 Lunch app

Basic content is the same as in 2.3.1.1. There are other added items.

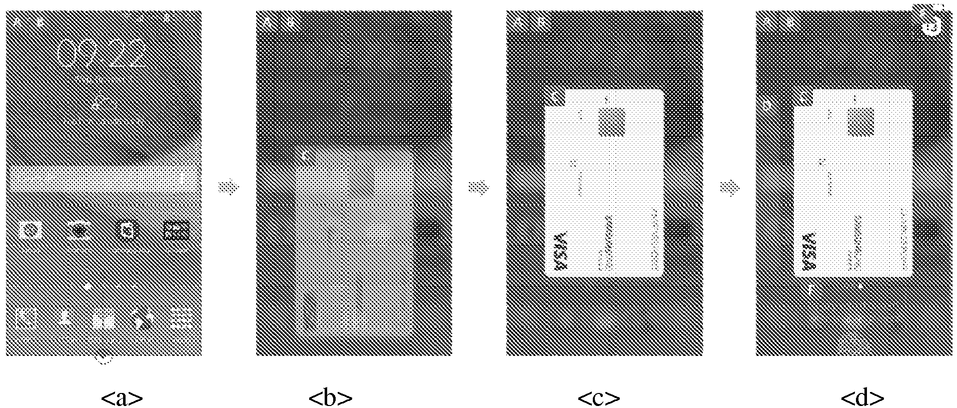

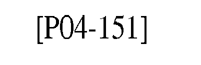

A method for simply paying in a mobile environment can be described with reference to FIG. P04-151.

According to an embodiment of the present disclosure, a payment application can be executed by swiping, in a home screen state as in <a>, the bottom portion from below in the upward direction. A card image related to payment may be generated on the basis of the swipe gesture. According to an embodiment, the card image generating method may start in a semi-transparent state, as card C of <b>. According to an embodiment, a card image may be generated while moving from the bottom portion of the screen towards the top. When generation is completed as card C of <c>, the card image may become opaque. The size of card C of <b> and the size of card C of <c> may be different during display. An additional card image may be displayed differently from card C. For example, at least one of the following methods may be used: the size is smaller than that of card C, as card D of <d>" and the card is displayed semi-transparently.

According to an embodiment of the present disclosure, after a card image display is completed, additional content may be added and displayed. For example, E may be a menu button for viewing detailed card information. F of <d> may display at least one of a text and an image, which guide fingerprint recognition for the user.

According to an embodiment of the present disclosure, the payment application may receive information from an external device and may select and show a card, which gives the user benefits, such as discount or mileage accumulation, when payment is made at the corresponding store.

According to an embodiment of the present disclosure, screen processing may be conducted in connection with showing a card image. For example, parts other than the card image, which is shown by default, may be blurred or made semi-transparent so that the screen, before the card app is executed, may appear faintly. In connection with showing a part of the screen before execution, some areas may be shown the same as the existing screen. For example, among the screen configuration of <a> of FIG. P04-151, the top area, in which a battery figure or a clock is displayed, may be displayed in the same manner as before.

According to an embodiment of the present disclosure, the card image, which is shown by default, may be displayed completely opaquely. The card image, which is shown by default, may be in a semi-transparent state in which some parts of the rear image are visible.

According to an embodiment of the present disclosure, cards other than the card image, which is shown by default, may be displayed to be distinguished from the card shown by default. For example, at least one of the following manners may be used: displaying a card at a higher transparency than the card shown by default and displaying a card to be smaller than the default card, as illustrated in <d> of FIG. P04-151.. At least one of the following manners may be used: displaying a card at a higher transparency than the card shown by default and displaying a card to be larger than the default card.

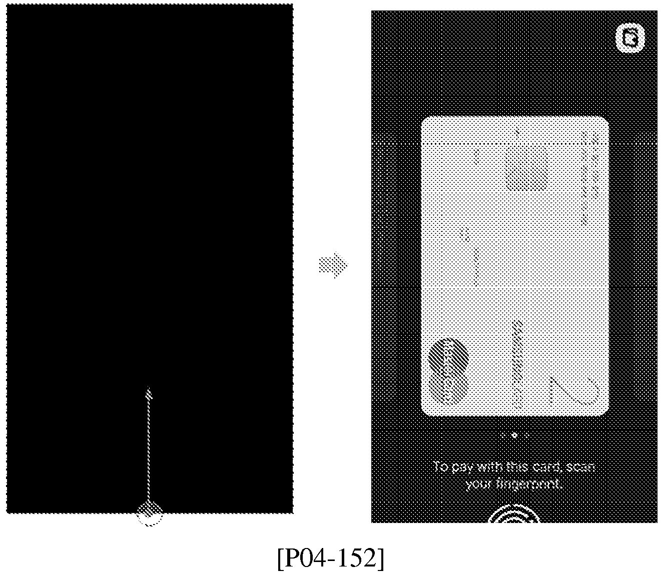

A method for executing a payment application, while the screen is turned off, can be described with reference to FIG. P04-152.

According to an embodiment of the present disclosure, while the screen is turned off, an operation of swiping the bottom portion of the screen from below to the top may be performed. Receiving a swipe input while the screen is turned off may be conducted by receiving the swipe gesture by activating a TSP (touch sensor pad) in only a partial area of the screen. A card may be generated if the number of touches exceeds a threshold during the swipe operation. The rear surface of the card may be displayed with the same color as when the LCD screen is turned off. The following overall card generation operation is the same as described with reference to <b>-<d> of FIG. P04-152.

In general, when a specific function of an electronic device is to be used, the screen is turned on by pressing the hold or home button of the electronic device; if it has been locked, the payment function, for example, can be used after unlocking the same. Such an operation is inconvenient; therefore, the user may want to use card payment easily and quickly while the screen of the electronic device is turned off. In an embodiment, when an electronic device wants to use a specific application, such as card payment, quickly while the screen is turned off, a specific area, such as the lower end of the screen, can be swiped up, thereby instantly activating the card payment application.

According to an embodiment of the present disclosure, considering that such an operation may occur in an unwanted situation, it is possible to recognize the above operation and show the card payment screen only when at least a predetermined length or area of the screen is swiped up.

When the screen of FIG. 1(a) is swiped up more than a threshold, the payment module or payment application can be activated as in (B).

FIG. 1(C) illustrates various embodiments wherein, the user's swipe up motion may not approach a predetermined threshold, a part of the card is displayed on the lower end of the screen, in order to confirm whether or not to execute the card application, and a visual clue or a hint image is provided, as in other screens, so as to enable dragging up. In this case, the user may drag up the hint image and place it in the app recall area, thereby executing the card app; if there is no additional user input for a predetermined period of time, the device may return to the screen off or lock screen state, as before.

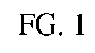

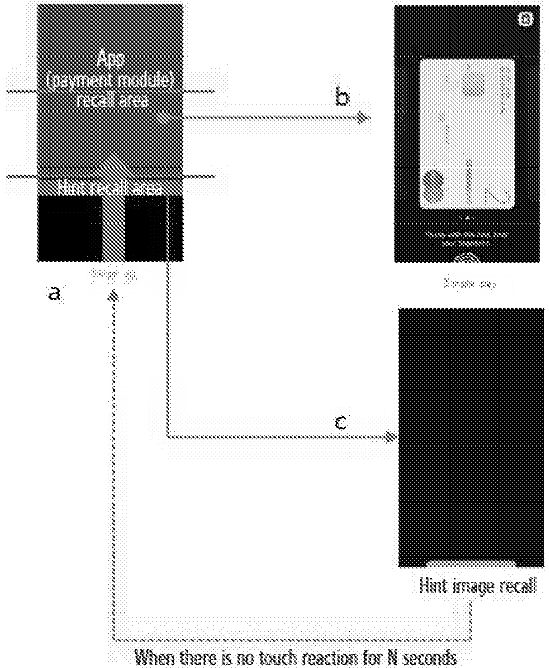

In an embodiment of the present disclosure, when a swipe fails to approach the threshold, the device may return to the previous state, such as screen off, without doing any operation.

During an operation of passing through the threshold, a gradual increase in vibration may clearly transfer a feedback that an operation of recalling a function is proceeding; the feedback, in this connection, may be vibration, blinking of the LED on the front or rear surface of the electronic device, audio output, or a combination thereof.

FIG. 2 illustrates an example, according to various embodiments, wherein, when a predetermined character or figure is drawn on the screen and inputted, the same is recognized, and the corresponding payment application or payment card is identified and executed. When a quadrangle is drawn on the TSP of the electronic device and inputted, it may be recognized that Samsung card is assigned to the quadrangle, the payment application may be executed, and the card image may be displayed on the screen.

FIG. 3 illustrates various embodiments wherein, when V-shaped input is made on the upper portion of the TSP of the electronic device, it is determined that Samsung card matches with the area, the payment application is executed or activated, and the image of Samsung card is displayed on the screen. If V character is touch-inputted on the portion of the electronic device, which is described later, using a finger or pen, it is recognized that Hyundai M card matches with the area, the payment application is executed or activated, and the image of Hyundai M card is displayed on the screen.

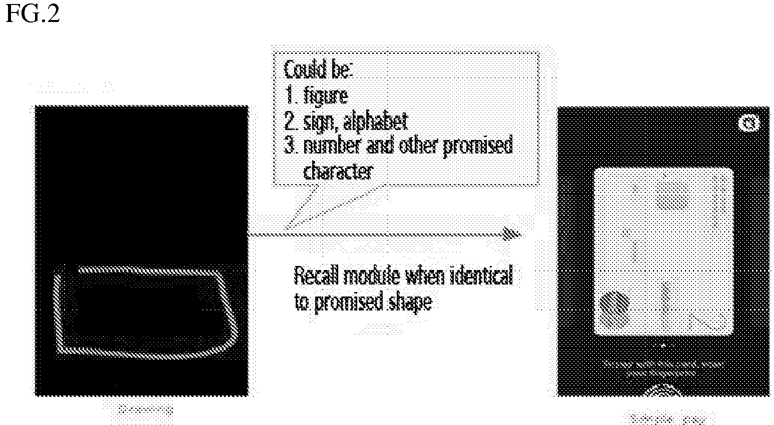

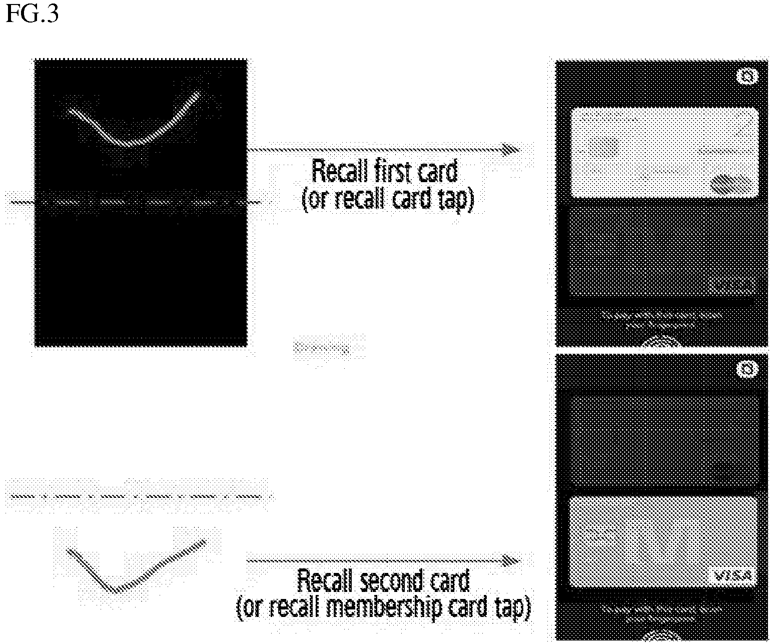

In an embodiment of the present disclosure, the number of knocking the screen or the knocked area may be recognized, and a corresponding card may be recalled.

According to an embodiment of the present disclosure, even while another application is being executed, the payment application can be executed through an operation of swiping the bottom portion from below in the upward direction.

According to an embodiment of the present disclosure, the payment application can be executed through an operation of swiping the bottom portion of the locked screen from below in the upward direction.

According to an embodiment of the present disclosure, in connection with executing a payment mode through a swipe up operation in a screen off state, as described above, execution of the corresponding payment mode may be canceled or aborted when a specific condition is satisfied. For example, when the electronic device is close to a specific object more than a predetermined range, that is, when the electronic device sticks to a specific object, the electronic device may recognize an erroneous input, i.e. There is no intention of executing the payment mode, and may cancel or abort execution of the payment mode. As another example, when brightness sensed by a luminance sensor is less than a predetermined brightness, it is recognized that an erroneous input has occurred in a pocket or a bag, and execution of the payment mode may be canceled or aborted. 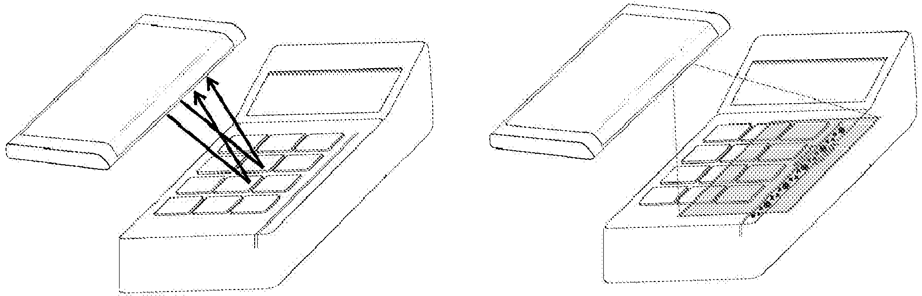 According to an embodiment of the present disclosure, various methods may be employed to start emission of MST signals. MST uses unidirectional communication to emit signals from an electronic device to a POS device; therefore, there is no method to find out whether the POS device can receive signals in the current state.

According to an embodiment of the present disclosure, it may be sensed whether the POS device is in a position, in which it can receive MST signals emitted from the electronic device, or not, and a payment signal may be emitted accordingly. For example, as the sensing method, the proximity sensor of a mobile electronic device may be used to determine, if a close object exists within a predetermined distance, that the close object is a POS device, and emission of MST signals may begin; alternatively, the camera of the mobile electronic device may be used to start emission of MST signals when a specific image or pattern, which is displayed in a specific position of the POS device, is recognized.

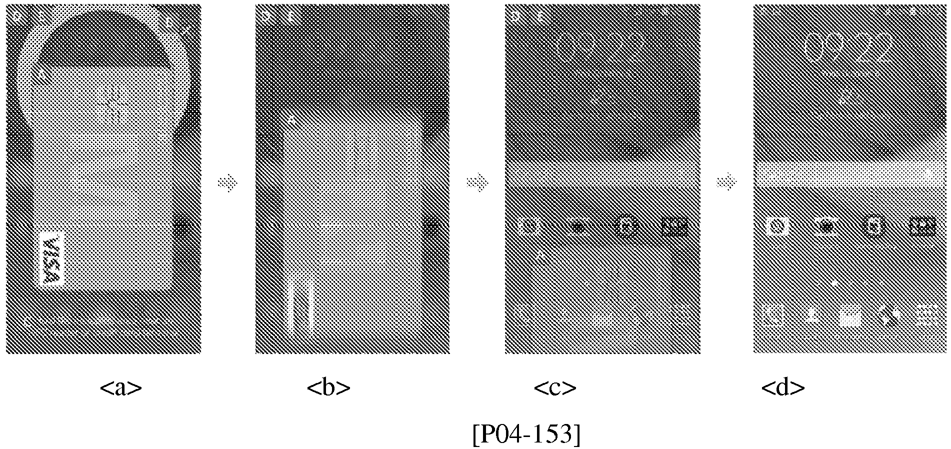

According to an embodiment of the present disclosure, the device may return to the previous screen after payment is ended. For example, the device may return to the home screen. The device may return to the screen of a previously executed application. After returning to the home screen, the screen may be turned off. The device may return to the locked screen.

According to an embodiment of the present disclosure, images C and B of <a> may disappear first, and the card image may disappear. All images related to the payment application may disappear simultaneously.

According to an embodiment of the present disclosure, card A may gradually change to a transparent shape while disappearing to the lower end. The peripheral portion other than the card, which has been blurred, may be gradually displayed clearer.

According to an embodiment of the present disclosure, various methods may be employed to stop emission of MST signals. In the case of MST, unlike NFC, there is no method for receiving and processing signals from a POS device, and there is no method for finding out, directly from the POS device, whether payment has ended or not.

According to an embodiment of the present disclosure, when an event, which is supposed to occur when payment is completed, occurs at the POS device, the terminal may sense the same and suspend the payment signal. The event, for example, may include a receipt output sound, a payment completion notification sound, and the like, which occur in the POS device.

According to an embodiment of the present disclosure, the payment signal may be suspended through information received from another server when payment is completed. For example, a financial server, including a bank server or a card server, may transfer the corresponding message to the terminal in an SMS type. The terminal, which has received the SMS, may analyze the content of the SMS, may confirm completion of payment by the used card, and may suspend the payment signal. A corresponding server may transfer the corresponding message to the terminal during the payment process. For example, the purchase server or the token server may transfer the corresponding message to the terminal via a cellular network or a data communication network. The terminal, which has received the message from the corresponding server, may analyze the content, may confirm completion of payment by the used card, and may suspend the payment signal.

According to an embodiment of the present disclosure, payment signal emission may be stopped by determining whether a POS device is close or not. For example, the terminal may determine, through a proximity sensor, that the POS device is moving away and may stop payment signal emission.

According to an embodiment of the present disclosure, payment signal emission may be stopped when an image, which has been recognized by the terminal when the payment starts, is recognized.

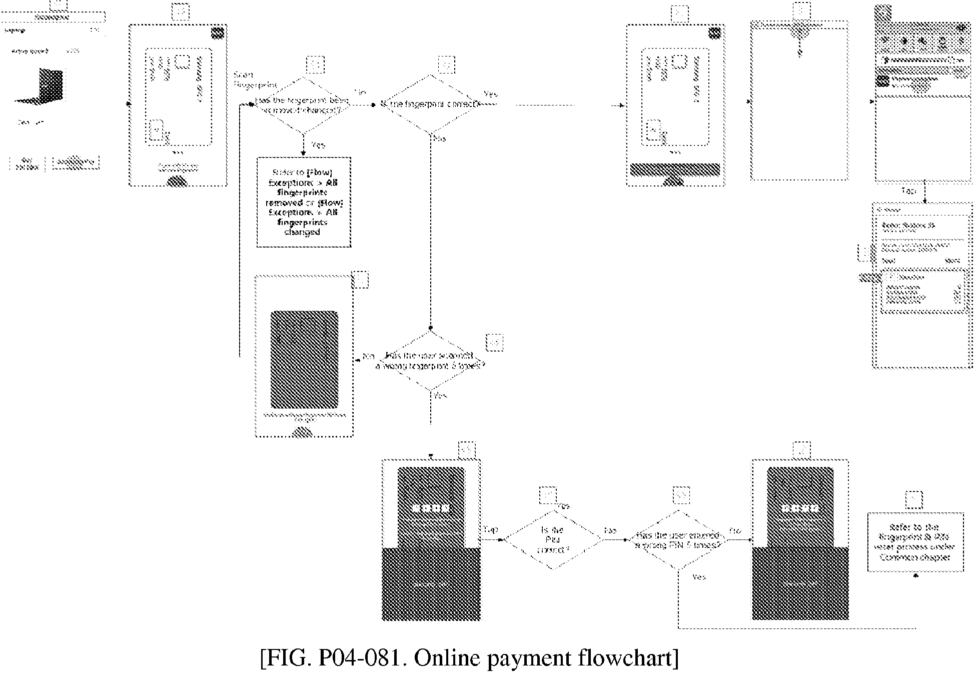

The basic routine of online payment is substantially similar to that of offline payment. There is a difference, however, in that the NFC or MST module is not used, and the payment application can transmit a token and a cryptogram to a payment network.

FIG. P04-081 illustrates an exemplary flow; when the user wants to purchase a desired article and selects a purchase button in the Merchant App or Merchant Site, a card screen is displayed; when fingerprint recognition is normally verified, the purchase transaction is completed; and the purchase transaction particulars will be received on the purchase screen or on the notification bar of the electronic device. If the fingerprint recognition fails, fingerprint scan may be attempted repeatedly up to five times; if a predetermined number is exceeded, PIN may be inputted, instead of fingerprint, to make a purchase.

FIG. P04-081-1 magnifies, as an example, the flow, which has been described briefly in the overall description, in connection with card selection and fingerprint recognition. Referring to (A) of FIG. P04-081-1, when Samsung pay, which leads to a payment application, is selected on the Merchant App or Merchant Site screen, Samsung pay may validate Merchant ID before requesting another API. When Merchant ID is valid, Samsung Pay may show a payment mode screen together with detailed transaction information Card screen (B) may be a payment mode screen.

When screen (B) appears, a card that has already been registered and can be used for payment appearing on screen (B), the electronic device requests the user to scan fingerprint, scans the fingerprint, and thereby undergoes the confirmation process of (C). When the registered fingerprint is not changed but is normal, it is confirmed in (D) whether the fingerprint is identical to registered data. When it is confirmed that the fingerprint is invalid as a result of confirming in (D) whether the fingerprint is normal or not, the screen may display a guide, as in (L), informing that the fingerprint cannot be confirmed normally and that re-scanning is needed. Fingerprint re-recognition may be attempted by repeating such a confirmation process up to five times.

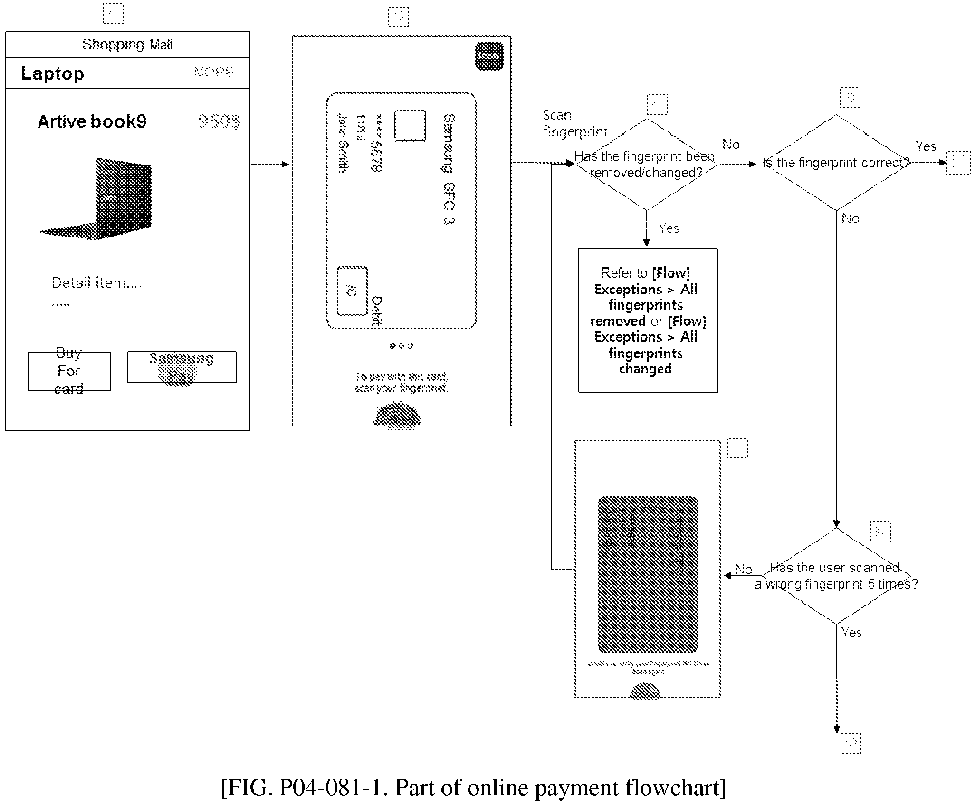

The user, during online or offline payment, can select one from cards held by him/her, using the payment application, and conduct the payment. A card shown to the user, as on screen (B), may have an activated token. A card having a pending or deactivated token may appear on a later rank of the list, may not be shown at all, or may be displayed as an unavailable card. The display card list may be shown in such an order that recently used cards come first, in a card order designated with regard to each use position, in the order of card use, in the issuance order, in the order of use frequency, in an order designated by the user, or in such an order that cards that fail to satisfy a predetermined condition, which is designated by a financial institute, come first. In various embodiments, the predetermined condition may be the following: some cards are eligible for 1% discount or no-interest divided payment when a predetermined amount of money, such as $200, is spent over a predetermined period of time; or otherwise are not eligible for such benefits.

In an embodiment of the present disclosure, the rate and condition of discount and accumulation during payment may vary depending on the store or card. In such a case, the payment application may recommend a card to the user at the current shopping mall or store. Furthermore, in an additional embodiment, checkup can be made in the order of a list of cards recommended when visiting near a shopping mall or a store, before payment, or when searched for.

Card display in FIG. P04-081 may not always appear similar to (B), but may be given on various screens. Screen (B) of FIG. P04-081 enables the user to select and use it for payment; it may appear in a predetermined order or in an order recommended by the payment application.

In an embodiment, FIG. P04-085 may illustrate a screen is used by the payment application to recommend a card prior to payment. The screen (a) recommends Samsung SFC 3 and informs, in (2), that a discount of 5% is available, a discount of 10% is available when purchasing $100 or more, and the card can be used for additional $1350, so that the user can easily check benefits and information regarding this card. On this screen, the user can recognize the fingerprint and instantly make payment. In addition, when the user wants to check another recommended card, he/she can switch the screen to screen (b) by swiping the screen, for example.

The card of a screen (b) can inform that, when XXXX AMEX card is used, a discount of 1% is available, a discount of 7% is available when purchasing $100 or more, and the card can be used for additional $390; payment can be made instantly; and the user can check another card when such card conditions are not satisfactory.

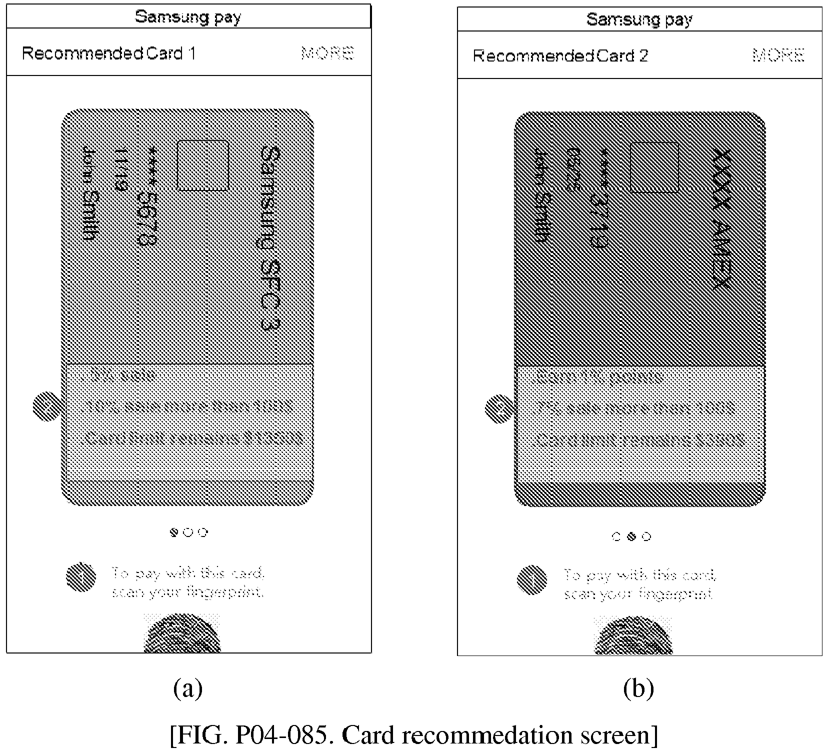

The electronic device may recommend a card in view of the price, at which the user wants to make a purchase, conditions, the amount of purchases so far, the total amount of purchases made by the card, the settlement limit, the point accumulation rate, the discount condition and price, and the like; the electronic device may keep and store past transaction particulars in the payment application or in the cloud so that it can check the history and recognize similar purchase patterns, thereby recommending a card.

In an additional embodiment, when only $390 can be additionally settled using card 2, which is preferentially recommended when the user purchases a product priced at $1000, settlement may be recommended in combination with card 3, which can be used for a large amount of additional payment. Only one card settlement may be recommended, but a method of recommending that a plurality of cards are simultaneously used for settlement may also be included.

The payment application can, in the case of online shopping, identify the unique ID of each store and each site and thereby recognize a store; in the case of an offline store, it can be identified on the basis of Bluetooth, the beacon of BLE, or data included in a frame received from a base station of a network such as 3G or LTE; and it is also possible to check store and discount information on the basis of confirmation of a position through GPS or indoor positioning, for example, and information regarding a store in the corresponding position.

In this document, data can be transmitted so as to distinguish the electronic device or the user, if necessary, when acquiring all position information, but the electronic device may obtain position information while guaranteeing anonymity with regard to external networks and external devices.

In an embodiment of the present disclosure, when the user purchases an article, for example, offline and wants to pay for it using a card, the user may complicate things by thinking which card would provide a better discount benefit and whether he/she carries a discount card or not. In such a case, the user is made to instantly check various kinds of data related to the store, such as a point card related to the store, the unique number, and the like, simply by talking, for example, in any process of the payment application. When the user says to an electronic device or a wearable device "Let me know about my membership card," "Where is E-mart membership number?," or "Find me a discount coupon," the barcode of the corresponding membership card is searched for so that discount, accumulation, or the like can be made instantly. It is also possible to display information regarding a discount coupon, a barcode, and the like, even if there is no corresponding card or a subscribed membership, so that a discount can be made instantly.

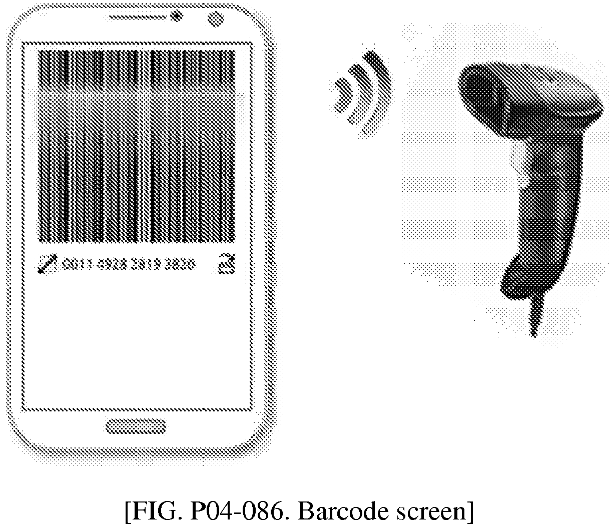

Methods for checking information related to a store include a method based on a beacon of Bluetooth or BLE or data included in a frame received from a base station of a network, such as 3G, LTE, or WiFi and a method based on position acquisition through positioning technologies, such as GPS and indoor LBS, and information regarding a store in the corresponding position.

In various embodiments, when the user goes to CGV theater and is about to buy a movie ticket, the user may deliver a voice command "CGV subscription information" or "CGV discount membership" to an electronic device, including a wearable device, so that, as illustrated in FIG. P04-087, the card image, the card number, the barcode, my membership grade, and the like are displayed, and a setting screen related to the corresponding card may be displayed on the lower end of the full screen or on a separate screen.

Various settings can be made on the screen for setting a payment card and a membership card, such as an automatic alarm when arriving at a specific place, setting an alarm according to time, adding card-related event and relevant purchase information to the calendar, and the like.

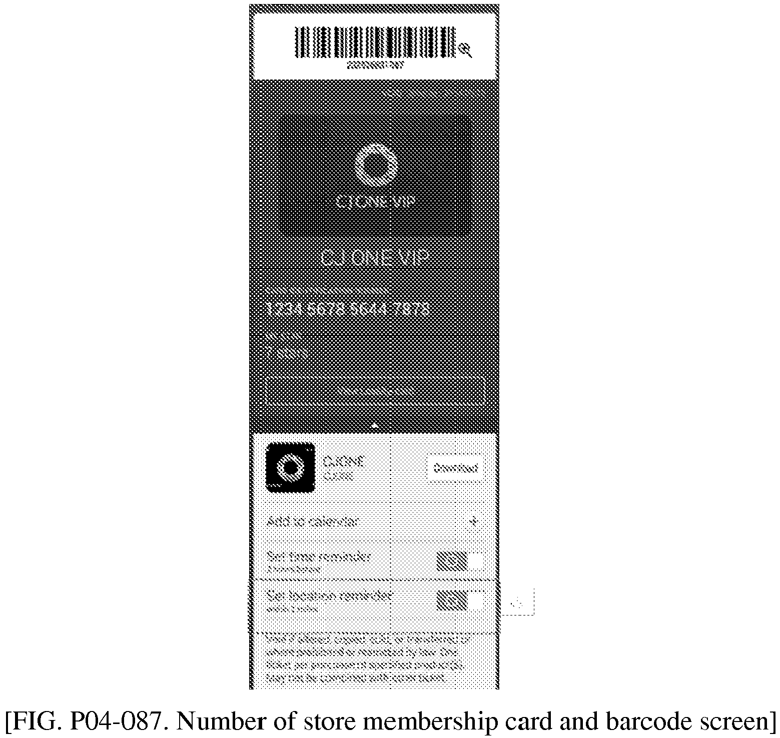

In various embodiments, by setting part (A) of FIG. P04-087, a location-based alerts function may be provided automatically, when arriving at CGV theater, informing that the card can be used. In addition, the user can check discount and accumulation during a ticket purchase and other use particulars through a barcode and card number of FIG. P04-087.

Among the settings, a corresponding place may be stored manually, or the electronic device may automatically register the place; then, the electronic device can inform so as to use the corresponding card, when the position or place is reached, through a popup or a notification bar. The method of automatic registration includes a method based on the user's record of use of the corresponding card and position data acquired through a positioning technology, such as GPS, or indoor LBS, and a method based on a store connected with the card and store information on the map.

In an embodiment of the present disclosure, as a method for determining the position, a cell ID, which has a regional position in a baseband subsystem, is registered and then monitored continuously so that, when a position having the corresponding cell ID is reached, the position can be determined.

When payments are made both online and offline, transaction may occur after receiving and verifying the user's fingerprint. However, only using a fingerprint sensor in a certain position has so far been mentioned, such as method no. (6) of FIG. P04-088. However, a fingerprint sensor is not fixed in some limited positions, but can recognize a fingerprint in any position on a TSP. The combination of a TSP and a fingerprint sensor enables the user to recognize a touch on parts including the screen and even some areas around the screen, thereby recognizing a fingerprint.

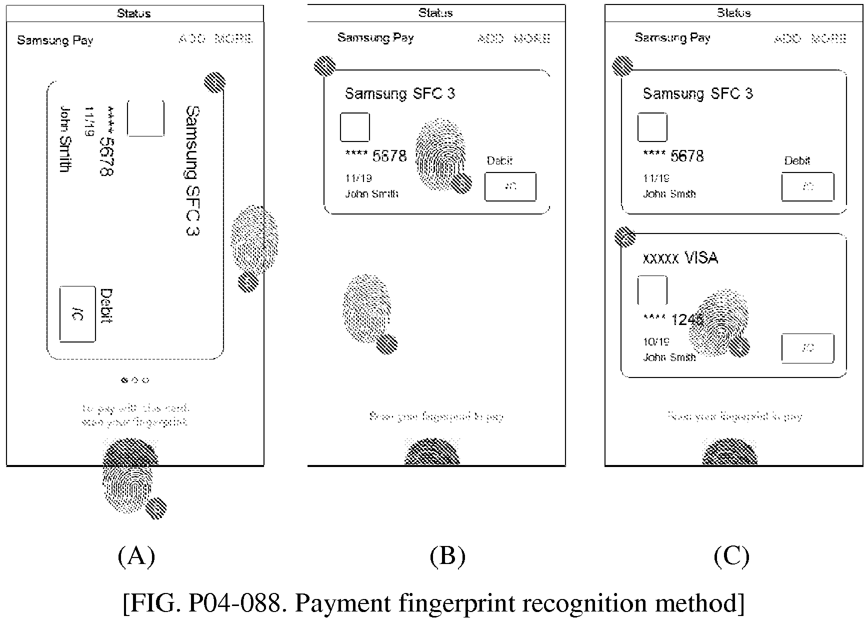

As illustrated in FIG. P04-088, cards may appear in various types on the screen of an electronic device. As in the embodiment illustrated in (C), two or more cards may appear simultaneously, the user may select a card, which is to be used for payment, and recognize a fingerprint again; alternatively, the user may make a fingerprint recognized, which corresponds to a desired card, thereby selecting the corresponding card and recognizing the fingerprint. In the embodiment of (C) of FIG. P04-088, when the user wants to use card no. 2 for payment, the user get a fingerprint recognized on card no. 2; then the card will be used for payment. As a further description, it is possible to regard a fingerprint recognition on a card, as in (3), as a normal selection, while (5) and (7) outside the card area are not regarded as normal selections, and the user may be requested to select or recognize again. An area-type fingerprint recognition has been given as an example in the above description, but a slide-type fingerprint recognition method can also be applied in the same manner.

In an embodiment of the present disclosure, it is possible to register and use a plurality of fingerprints of various fingerprints. It is possible to register a total of ten fingerprints of fingers of left and right hands, and different settlement methods may be designated to respective fingerprints. For example, a thumb may be used to verify payment using a Samsung card (1), and a forefinger may be used to verify payment using xxxx VISA® card (2). A payment application can be executed, in connection with the simple pay described above, through an operation of swiping the lower end portion from the bottom to the top in a home screen state; a screen display may be made such that a swipe using a thumb makes the card (1) appear as the first card, and use of a forefinger makes the card (2) available. When fingerprints of various fingers are registered, an erroneous operation may occur, i.e. a fingerprint is recognized in an unwanted situation; in order to prevent such an operation, it is possible to separately designate an area and an application, in which the fingerprint of each finger is recognized normally.

In an embodiment of the present disclosure, an electronic device, which may have one or more displays, has a first display and a second display, where a fingerprint may be recognized on the second display, thereby conducting payment. It is possible to recognize fingerprints on both the first and second displays, depending on the specific application and situation, and it is also possible to recognize fingerprints only on one display or only in a predetermined area. In an additional embodiment of the present disclosure, a thumbprint may only be recognized on the first display, and the fingerprint of a forefinger may only can be recognized on the second display.

This can prevent an erroneous operation of recognizing a finger touch input, which is a normal selection on a TSP, as a fingerprint.

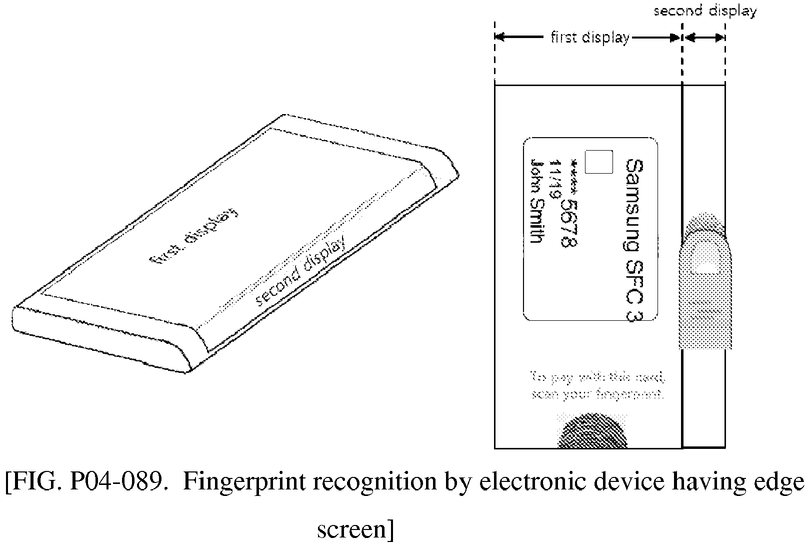

When payment through fingerprint recognition fails a predetermined number of times or more, a pre-registered PIN may be used for payment. When a fingerprint verification fails five times or more, no more fingerprint scanning occurs, and a PIN registered by the user may be used.

Although the PIN is a four-digit number in (O) of FIG. P04-081, it is also possible to use a combination of four or more characters and numbers. When it is determined that an entered PIN is identical to the registered PIN, a normal transaction may proceed, and the screen may switch to screen (E) of FIG. P04-081. If it is determined that the entered PIN is a wrong PIN, the user may be informed of the wrong PIN through a UI on the screen and sound or vibration, for example, and requested to re-enter a PIN. If a wrong PIN is entered five times or more, the payment may be canceled, and switching may occur to a screen and a module that enable resetting of the PIN and fingerprint.

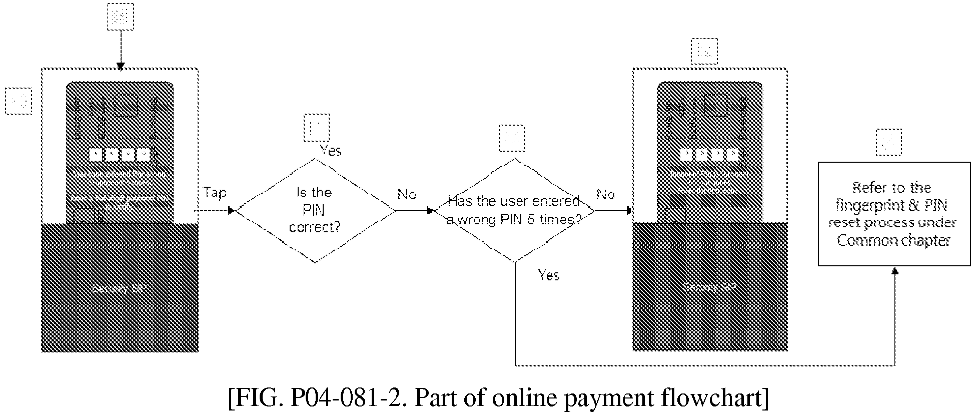

According to an embodiment of the present disclosure, a signature may be used instead of the PIN, or a signature may be used for verification together with the PIN.

According to an embodiment of the present disclosure, if the token is invalid even when the fingerprint is verified normally, an error message may be displayed on the screen and provided to the user after process (D). A token being invalid may indicate that the token's use period has expired, or that a token, which has been deleted from the token server, or which has been changed, has not been synchronized with the electronic device.

When the fingerprint is normally verified inside the electronic device or through an external server, the payment application may transfer a token and a cryptogram, which are needed for transaction, to a merchant app, and the information may be transmitted to the payment server or the token server. The server may proceed with the approval or payment procedure and display the result of approval or payment on the screen of the electronic device. The Samsung Pay server may receive a notification of the transaction approval result through a payment network and may transmit the same to the payment application. According to various embodiments, the screen shows that the transaction has been conducted normally, as in (E), and a display may also be made on the notification bar for easy checkup. As illustrated on screen (F), when the upper portion of the screen of the electronic device is tapped and swiped downwards, the amount of money actually spent for purchase or transaction, the transactor, or the store name may be displayed as on screen (G).

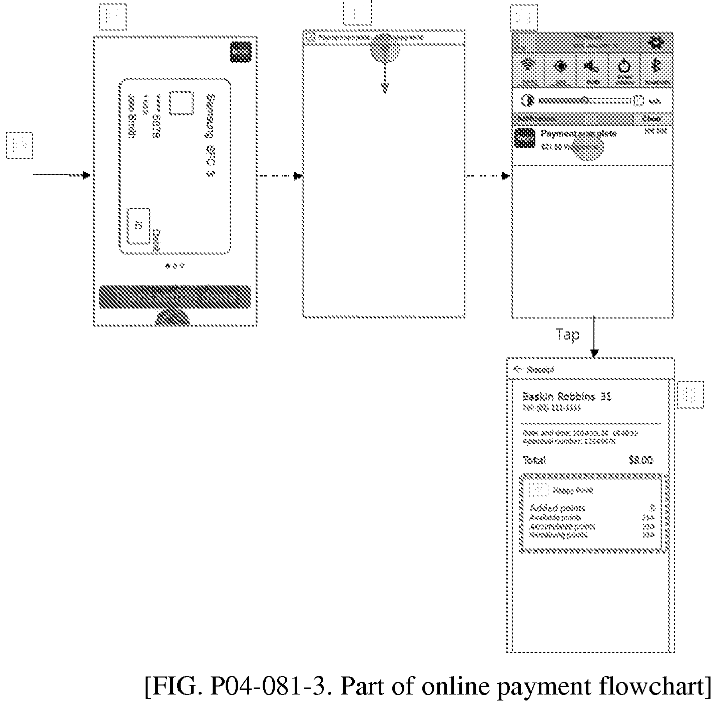

When the notification particulars of screen (G) are tapped, the detailed receipt can be checked. It is possible to check, from the receipt, the date of transaction, the approval number, the total amount of money, the amount of added value tax, the accumulated points, the available points, the remaining points, etc. The detailed particulars that can be checked may differ depending on the card type and the transaction type, and screen (H) is an example of such. The notification may include, besides a message regarding payment completion, a payment error message occurring when the limit is exceeded or when a token error occurred.

According to an embodiment, a financial server or a payment network directly transmits a transaction notification to the electronic device. The transaction detail is transmitted to the financial server or the payment network and is displayed on the screen of the payment application. The payment error message, which occurs when the limit is exceeded or when a token error occurred, may also be a message transmitted from the financial server or the payment network.

According to an embodiment of the present disclosure, when a payment completion or error message is received, audio or haptic feedback may occur besides the alarm through the screen. It is possible to generate audio and haptic feedbacks, which are set differently for respective message types, so that, without checking the screen, the user can recognize what message has been received on the basis of the audio or haptic feedback alone. An LED may blink, and the LED may be turned off or on during or after payment. In an embodiment, when a wearable device is operating as a companion to an electronic device, the electronic device and the wearable device may be informed through audio, vibration, or LED; alternatively, settings can be made so that both devices are informed, or only one device is informed.

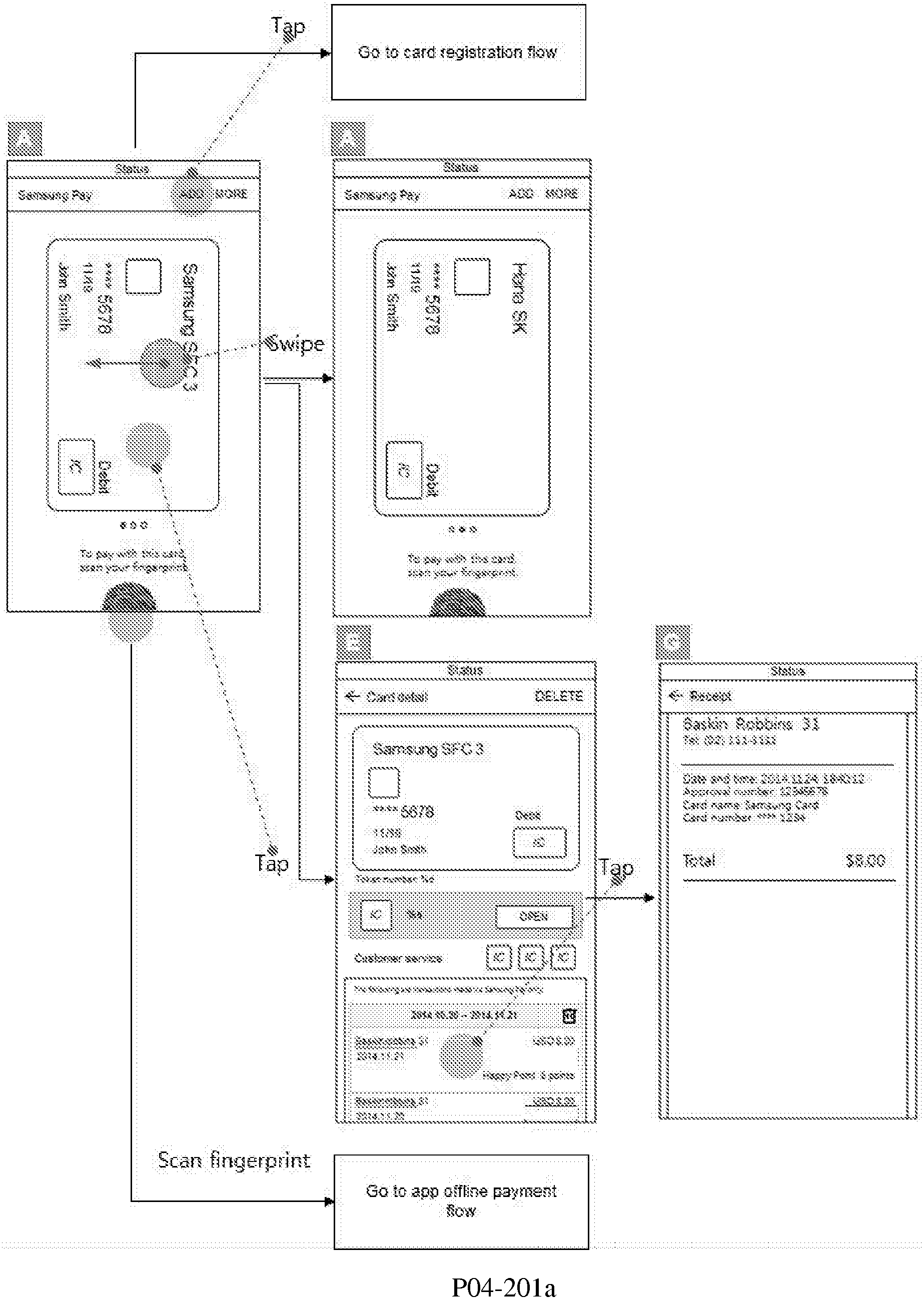

The electronic device may execute the payment application on the basis of a specific event. The electronic device may display an initial screen, which includes a payment card image, on the display in response to execution of the payment application.

The electronic device may receive a user input related to an area that is associated with the card display. The user input may be a swipe input. The electronic device may display a card, which is different from the card displayed before the corresponding input, in response to the swipe input.

The user input may be a tap input. The electronic device may display detailed card information regarding the corresponding card on the screen in response to the tap input. The detailed information may include at least one of an image related to the corresponding card, a token number, a website or application link, a customer service link, a transaction particulars link, a card limit, and the amount of accumulated uses.

According to an embodiment of the present disclosure, in connection with displaying the detailed information, the electronic device may request the payment server to provide at least a part of detailed information to be displayed and may display the same on the basis of information received from the payment server.

The electronic device may receive a user input regarding each item of the transaction particulars list and may display receipt information related to the corresponding transaction in response to the same. In connection with displaying the receipt information, the electronic device may request the payment server to provide at least a part of receipt information to be displayed and may display the same on the basis of information received from the payment server.

The electronic device may display a link button ADD, which is used to enter a card registration function, on the initial screen.

The electronic device may display information related to payment mode entry on the initial screen. The information may be link information, which is used to enter a payment mode, or information regarding an image or a text related to a method for entering the payment mode. The information regarding an image or text related to a method for entering the payment mode may be guide information that induces input of the user's fingerprint on a fingerprint sensor, in order to enter the payment mode.

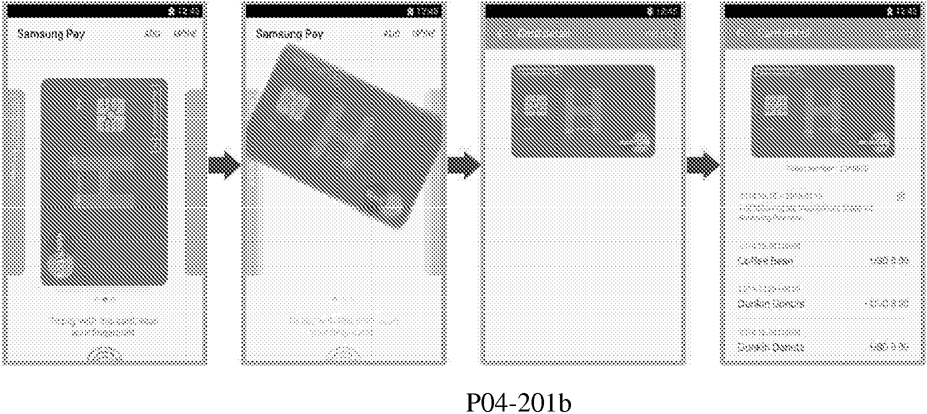

The electronic device may display a specific GUI effect in connection with receiving a user input regarding an area related to the card display on the initial screen and displaying detailed card information regarding the corresponding card on the screen in response to the tap input. The electronic device, upon receiving the tap input on the initial screen, may continuously display a process, in which the card image of the initial screen changes to a card image of the detailed information screen, through animation. The animation may include a GUI that continuously changes and displays at least one of the color, shape, position, size, and angle of a card image until the color, shape, position, size, or angle of a card image displayed on the initial screen are displayed with the color, shape, position, size, or angle of a card image of the detailed information screen. The electronic device may conduct a control such that the time of display is different for each piece of displayed information, in connection with displaying at least one, on the detailed information screen, a card-related image, a token number, a website or application link, a customer service link, a transaction particulars list, a card limit, and the amount of accumulated uses. For example, the card image may be displayed first, and the remaining pieces of information may be displayed at a predetermined time difference.

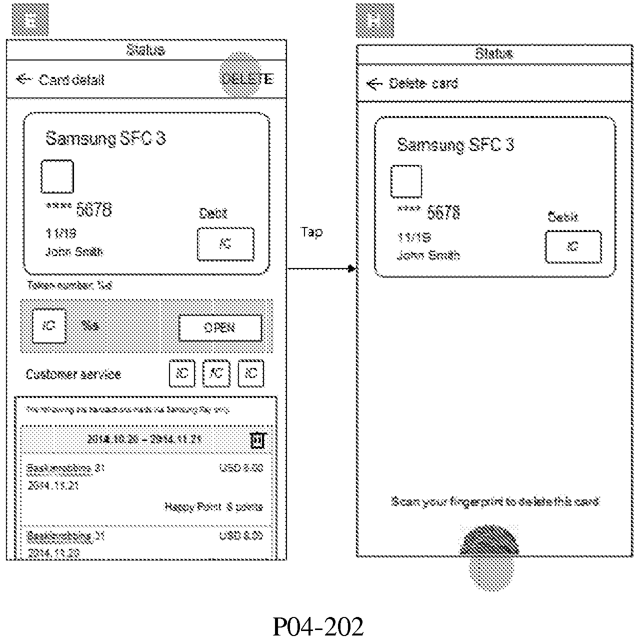

A screen may include a link DELETE, which is used to enter a screen for deleting card information related to the corresponding detailed information. The card information may include the token information. The electronic device may display a deletion screen related to the corresponding token information in response to a user input regarding the link.

The deletion screen may display information related to a user input that determines deletion of the corresponding token information. The information related to a user input may be information regarding an image or a text related to a method for determining deletion. The information regarding an image or text related to a method for determining deletion may be guide information that induces input of the user's fingerprint on a fingerprint sensor, in order to determine deletion.

When a user fingerprint input is received by the fingerprint sensor, the electronic device may perform personal verification through the user's fingerprint information received from the fingerprint sensor. For example, inputted fingerprint information and stored fingerprint information may be compared to determine whether they are the same person or not. When it is determined that they are the same person, a request for deletion of the corresponding token may be transmitted to the payment server, in order to delete a token related to the corresponding card. Thereafter, token deletion completion information may be received from the payment server, and the token information stored in a TEE, a REE encrypted by the TEE, or a secure element may be deleted or switched to a disabled state.

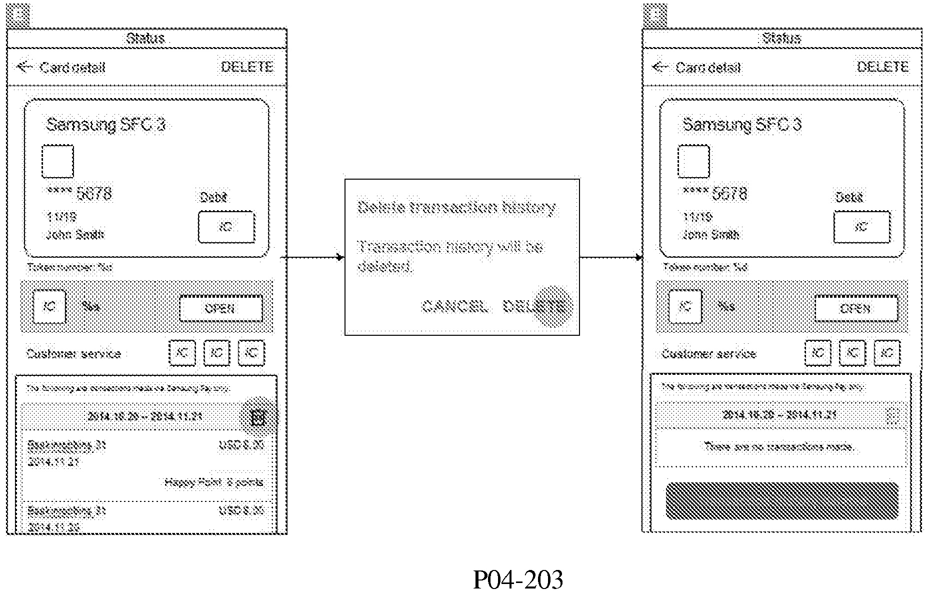

The detailed information screen may include a button (e.g., trash bin image) related to execution of a function of deleting information regarding transaction particulars of a token related to the corresponding card. The electronic device may perform deletion of information regarding transaction particulars of a token related to the corresponding card, in response to the user's input related to the button, and may display a screen or a popup image related to deletion determination.

The electronic device may determine deletion of information regarding transaction particulars of the token related to the corresponding card, in response to the user's input, and may delete the information regarding transaction particulars and receipt information related to information regarding respective transaction particulars.

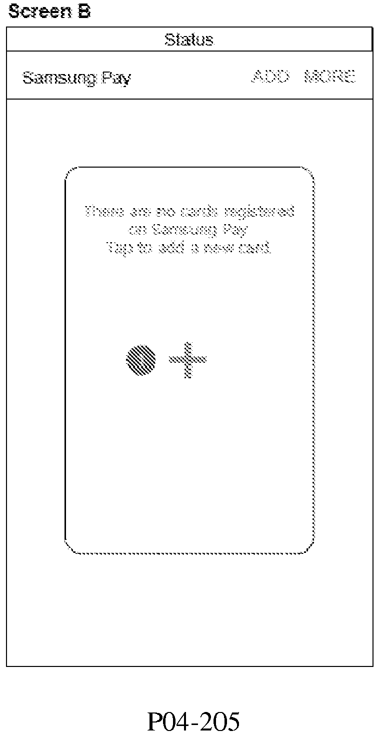

The electronic device may change information displayed on the initial screen on the basis of state information regarding a token related to a payment card. When information regarding the state of a token related to the payment card is "No registered card", i.e. when there is no token related to a registered payment card, the electronic device may display a default card image on the initial screen. The default card image may include information regarding a text or an image, which induces the user's payment token registration, and a link used to enter "Card registration" function screen.

When there is no token related to a card, which can be used for payment, as in "No registered cards" state, the electronic device may not display information related to the payment mode entry on the initial screen.

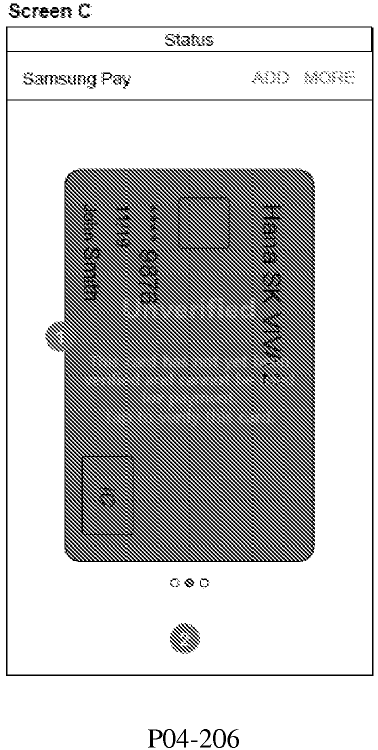

The electronic device may change information displayed on the initial screen on the basis of information regarding the state of a token related to a card, which corresponds to a payment card image to be displayed on the initial screen. When information regarding the state of a token related to a card displayed on the screen is "Unverified", i.e. when a procedure for verifying and confirming a token related to the corresponding card has not been conducted, the electronic device may change and display the corresponding card image on the initial screen or may display text information related to the state information. For example, a card image corresponding to an unverified token may be dimmed and displayed, a semi-transparent layer may be overlapped on the same and displayed, or text data that explains the card state may be overlapped on the card image and displayed. The changed card image may include a link used to enter a screen, which guides the user to a method for verifying and confirming a token related to the corresponding card, or a screen for conducting a procedure of verifying and confirming a token related to the card.

When a card corresponding to a token, which cannot be used for payment, is displayed on the screen, as in "Unverified" state, the electronic device may not display information related to the payment mode entry on the corresponding screen.

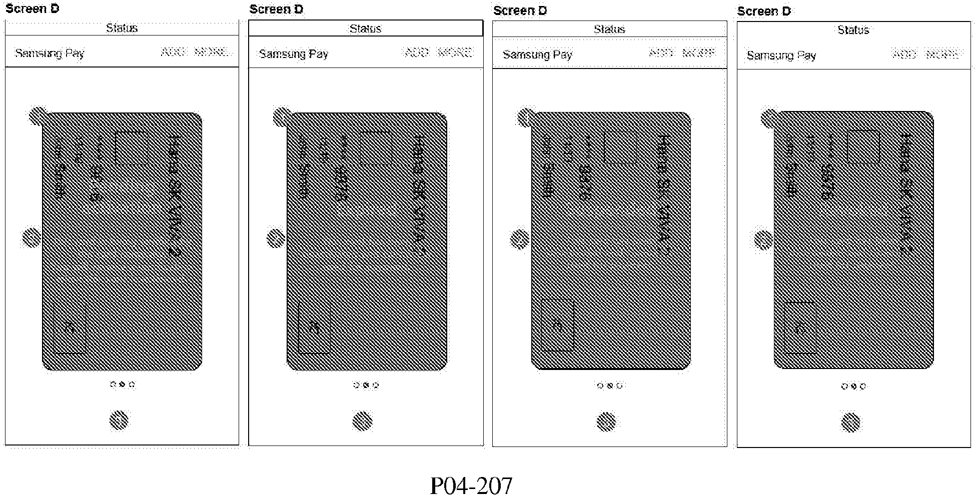

According to an embodiment of the present disclosure, when information regarding the state of a token related to the card displayed on the screen is "Pending," "Expired," "Suspended," or "Revoked," that is, when the token related to the corresponding card has not been completely verified by the card company, when the valid period of the token related to the corresponding card has expired, when the token related to the corresponding card is suspended, or when the token related to the corresponding card is revoked or discharged, the electronic device may change and display a card image related to the corresponding token on the initial screen or may display text information related to the state information. For example, a card image related to the token may be dimmed and displayed, a semi-transparent layer may be overlapped on the same and displayed, or text data that explains the state of the token related to the card may be overlapped on the card image and displayed. The changed card image may include a link used to enter a screen, which provides the user with a guide corresponding to token use, or which is used to verify and update card use.

When a card corresponding to a token, which cannot be used for payment, is displayed on the screen, as in the above state, the electronic device may not display information related to the payment mode entry on the corresponding screen.

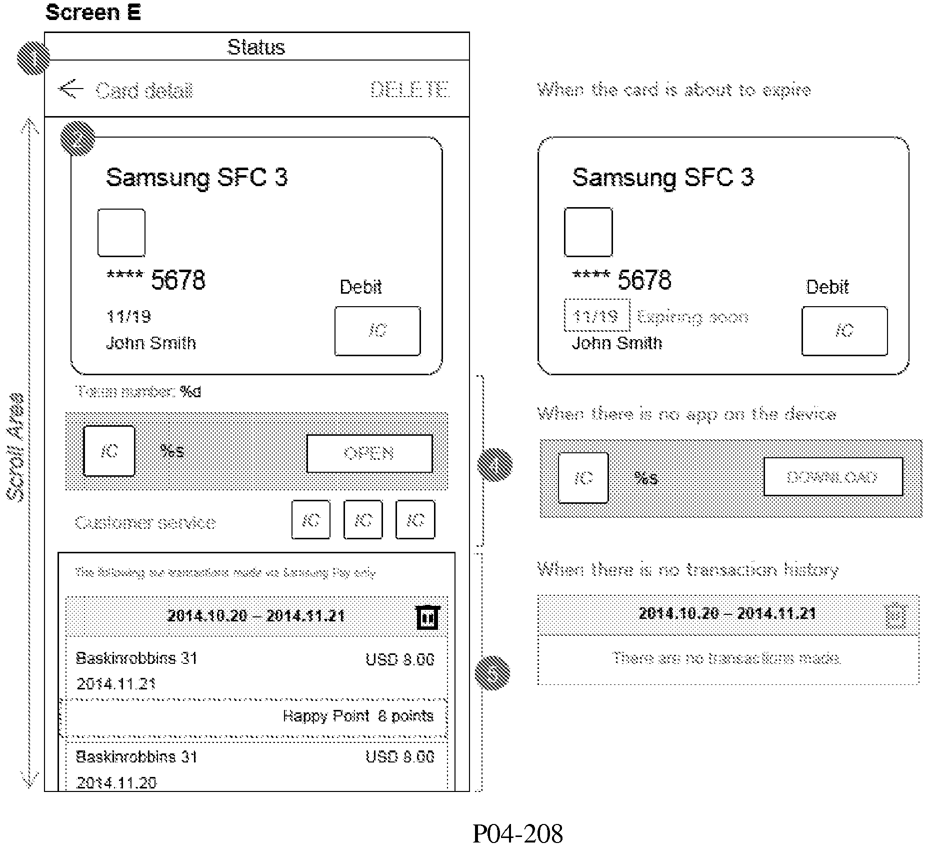

The electronic device may display a card, which is related to a certain token, on the screen and may display detailed information regarding the token, which is related to the corresponding card, on the screen on the basis of a user input. The detailed information screen may include at least one of a number related to the corresponding token, the name of the card, at least a part of the number of the card, the valid period, the holder's name, and a financial institution logo. The electronic device may check the valid period expiration date related to the token and, when it is determined that the valid period is within a predetermined range, may display additional information related to valid period expiration.

According to an embodiment of the present disclosure, the detailed information screen may include application information related to a financial server corresponding to the token, and the application information may include link information that executes the corresponding application. The electronic device may check whether an application, which is related to a financial server corresponding to the token, is installed or not, may display the link information as a button for executing the corresponding application, when the application is installed, and may display the link information as a button for downloading or installing the corresponding application, when no application is installed.

According to an embodiment of the present disclosure, the detailed information screen may include a link that provides a financial server, which corresponds to the token, with a contact function. The electronic device may display information regarding a link, which is used to send a message to a contact related to a financial server corresponding to the token or to connect a telephone call, or a link used to connect to a related website.

According to an embodiment of the present disclosure, the detailed information screen may include a list of transaction particulars related to the token, which corresponds to a designated period of time. The electronic device may display at least one of a member store related to payment of the token, the amount of money, the date, the time, loyalty information, and a payment list, on the screen. 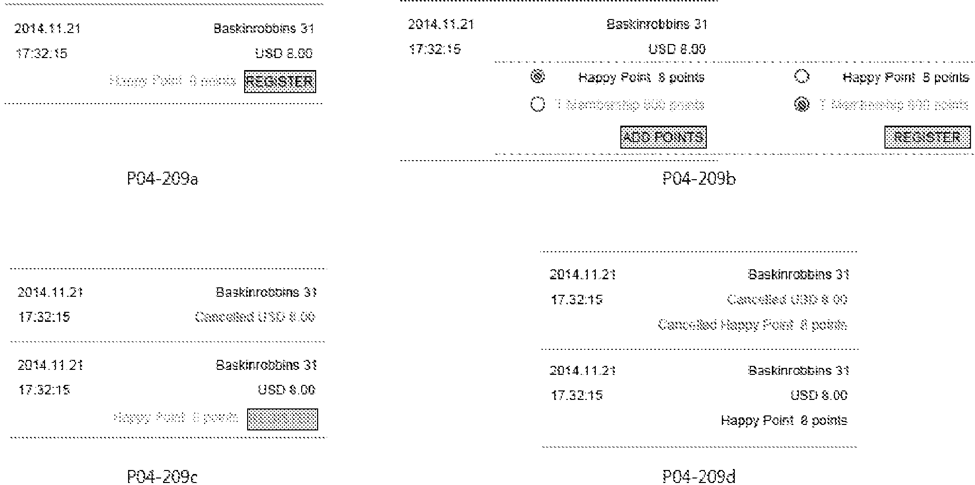 In connection with displaying the loyalty information, the electronic device may display various types of information according to at least one loyalty-related condition or state related to the corresponding payment. When a loyalty corresponding to a specific transaction exists, the electronic device may display accumulated loyalty point information. As another example, it is possible to display a loyalty point, which can be accumulated on the basis of a specific transaction, as in FIG. P04-209a, and to display link information related to registration so that, for the purpose of the corresponding accumulation, registration can be made to the corresponding loyalty.

According to an embodiment of the present disclosure, when a plurality of loyalties corresponding to a specific transaction exist, the electronic device may display a loyalty point, which corresponds to the plurality of loyalties, and which can be accumulated, may select at least one from the plurality of loyalty points on the basis of a user input, and may request and perform point accumulation related to the selected loyalty. As in FIG. P04-209b, the electronic device may display all of a plurality of loyalty points corresponding to a specific transaction, may conduct a control such that, according to a selection based on a user input, a loyalty point is accumulated selectively, may determine one between a button related to loyalty point accumulation and link information related to loyalty registration, according to whether the selected loyalty is registered or not, and may display the selected one on the screen.

According to an embodiment of the present disclosure, in connection with displaying link information related to the registration, the electronic device may, when payment cancelation information related to the corresponding transaction is updated as in FIG. P04-209c, display link information related to the registration in a deactivated state or may not display the same.

According to an embodiment of the present disclosure, in connection with displaying the accumulated loyalty point, the electronic device may, when payment cancelation information related to the corresponding transaction is updated as in FIG. P04-209d, display information indicating that the accumulated loyalty point has been recovered or cancelled, in the corresponding cancelled transaction particulars.

According to an embodiment of the present disclosure, in connection with displaying the detailed information, the electronic device may request the payment server to provide at least a part of detailed information to be displayed and may display the same on the basis of information received from the payment server.

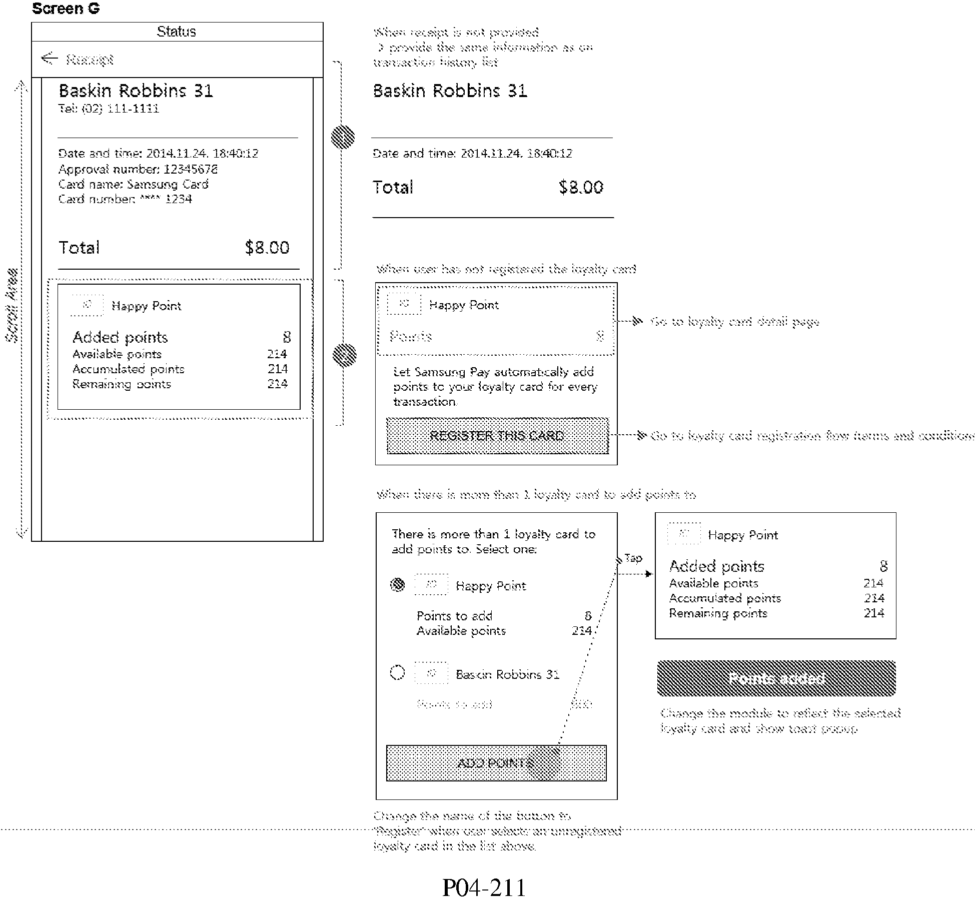

The electronic device may display transaction information corresponding to a token related to a payment card, and the transaction information may include receipt information. The receipt information may be based on information received from a financial server and may include at least one of the transaction date and time, the approval number, the name of a card related to a token, at least a part of the number of the card, and the amount of money of transaction. In connection with displaying the receipt information, the electronic device may request the payment server to provide at least a part of receipt information to be displayed and may display the same on the basis of information received from the payment server.

According to an embodiment of the present disclosure, the receipt information may include loyalty information. The loyalty information may include at least one of an accumulated point, a point that can be accumulated, an available point, a collected point, a remaining point, a detailed information viewing link, a link related to loyalty registration, and a button related to point accumulation execution. When a plurality of loyalties corresponding to a specific transaction exist, the electronic device may display a loyalty point, which corresponds to the plurality of loyalties, and which can be accumulated, may select at least one from the plurality of loyalty points on the basis of a user input, and may request and perform point accumulation related to the selected loyalty. As in FIG. P04-211, the electronic device may display all of a plurality of loyalty points corresponding to a specific transaction, may conduct a control such that, according to a selection based on a user input, a loyalty point is accumulated selectively, may determine one between a button related to loyalty point accumulation and link information related to loyalty registration, according to whether the selected loyalty is registered or not, and may display the selected one on the screen.

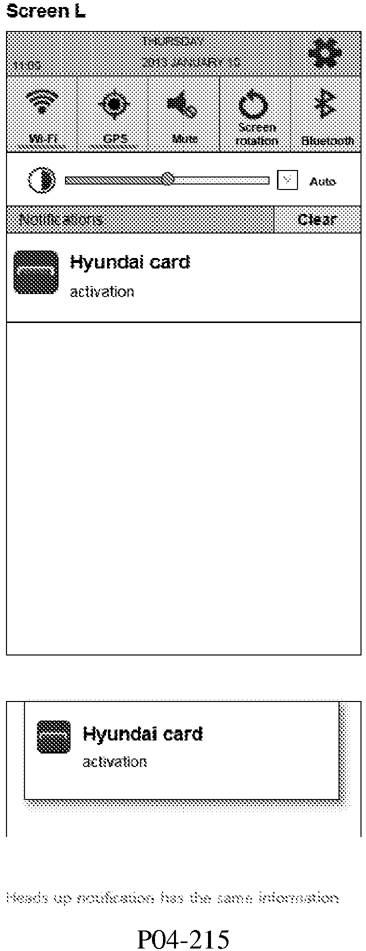

The electronic device may confirm that the state of at least one stored token changes. The confirming operation may include an operation of monitoring the state of the corresponding token at every designated time or an operation of determining the state of the token on the basis of information received from the payment server (push message, information, notification).

According to an embodiment of the present disclosure, upon confirming that the state of at least one stored token changes, the electronic device may generate and display a notification in various methods. For example, when ID&V related to a specific token is proceeding, the token's state information may be "Pending"; after the ID& V is completed, and after the electronic device receives information related to completion of ID&V from the payment server, the electronic device may change the corresponding token's state information to "activation", may generate a notification related thereto, and may display the same on the screen. In connection with displaying the notification, the electronic device may display the same on a notification panel or a notification bar or may display the same as a heads up notification.

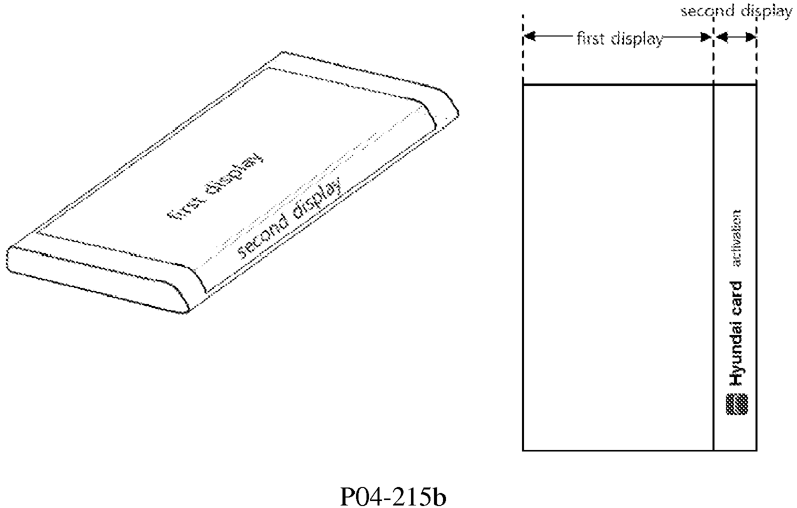

According to an embodiment of the present disclosure, upon confirming that the state of at least one stored token changes, the electronic device may generate a notification in various methods and may display the generated notification on a second display, which is adjacent to the main display.

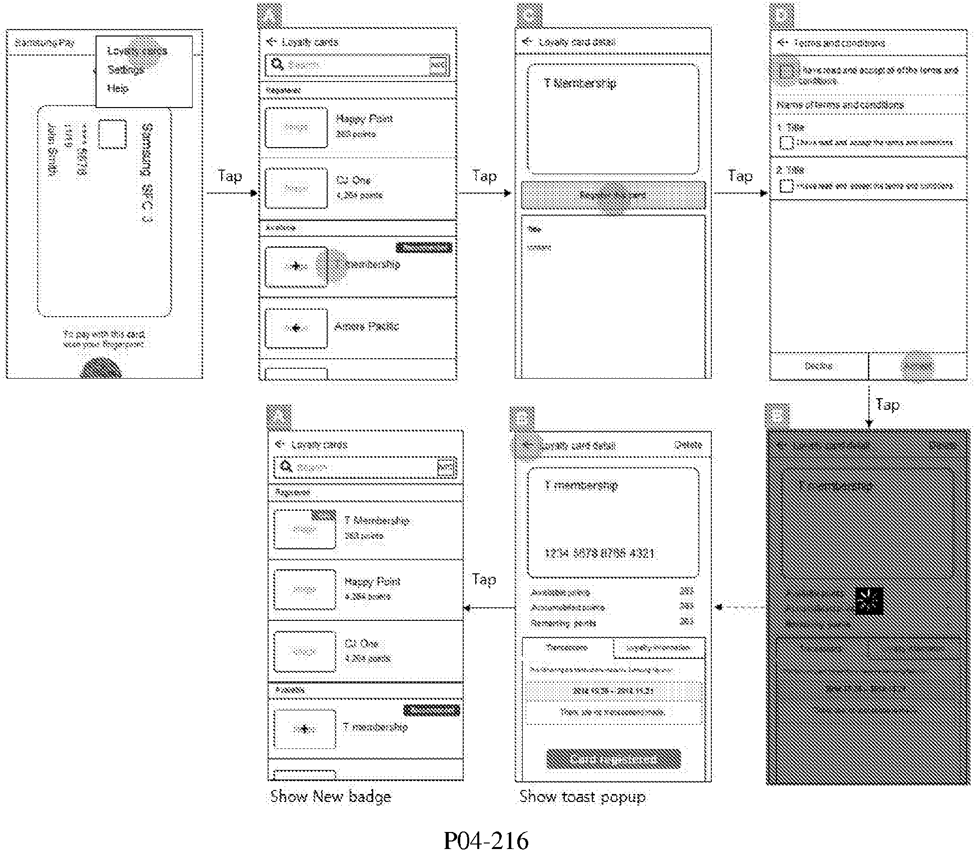

The electronic device may provide a link, which is related to loyalty cards information, on the initial screen and, when an input regarding the link related to the loyalty cards information is received, may display information related to the loyalty cards information. The electronic device may distinguish between information regarding loyalty cards, which have been registered, and information regarding loyalty cards, which can be registered, on the screen related to the loyalty cards information and may display them separately. The displaying operation may include an operation of displaying information regarding a plurality of loyalty cards in a list type.

The electronic device may receive a user input regarding the loyalty cards information display area and may display detailed information regarding the corresponding loyalty cards information on the screen. The detailed information screen may display different information depending on whether the loyalty cards information is registered or not. A detailed information screen corresponding to information regarding loyalty cards, which can be registered, i.e. which have not been registered, may include images of the loyalty cards and a link related to the corresponding loyalty registration.

The electronic device may receive a user input regarding a link display area, which is related to the loyalty registration, and may display a contact condition screen related to the corresponding loyalty. The contact condition screen may include information enabling selection of user agreement regarding contract conditions related to the corresponding loyalty. At least a part of the information may include information received from a payment server after the electronic device has requested the payment server to provide the same.

The electronic device may receive a user input through the contact condition screen and may determine whether the user agrees or not. When it is determined that the user has agreed, the electronic device may transfer information, which includes user agreement information, to the payment server and may receive additional information regarding the corresponding loyalty from the payment server. The electronic device may update and display the detailed information screen on the basis of additional information regarding the loyalty. The updated detailed information screen may include at least one of loyalty cards numbers, loyalty point information, and loyalty point transaction particulars, besides images of the loyalty cards, and may not display a link related to the loyalty registration.

According to an embodiment of the present disclosure, the electronic device may update and display the screen, which is related to the loyalty cards information, on the basis of the additional information regarding the loyalty. The operation of update and display may include an operation of updating and displaying information regarding loyalty cards, which have been registered, and information regarding loyalty cards, which can be registered, and an operation of determining whether the registration time, among the information regarding registered loyalty cards, is within a designated range or not and adding specific badge information to loyalty card information that is within the designated range.

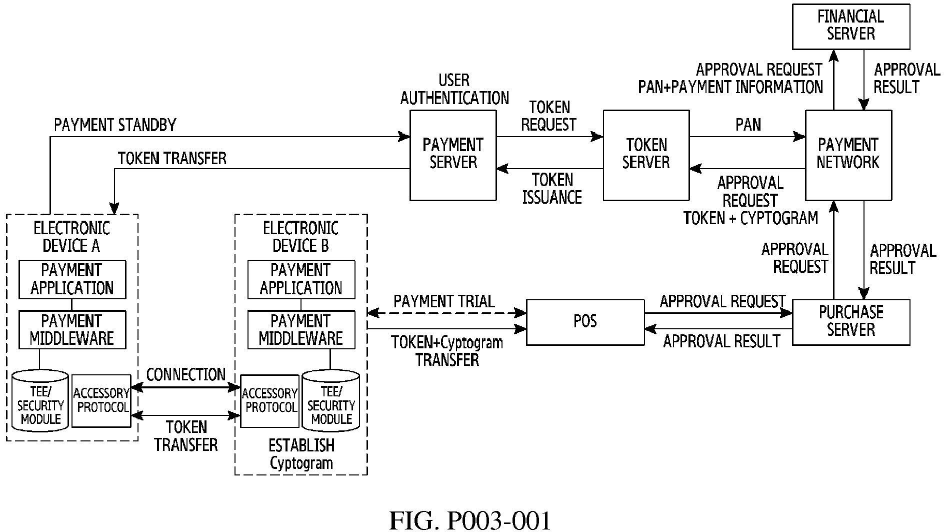

FIG. P003-001 illustrates an embodiment of a payment process. In an embodiment of the present disclosure, a payment process may be made using a wearable device. Entities participating in the payment may include electronic device A and electronic device B, which are electronic devices having different functions, a payment server, a token server, a financial server, a purchase server, and a POS device.

Electronic device A may refer to an electronic device, to which electronic device B connects to perform a communication function with an external server. Electronic device A may refer to an electronic device which can connect to electronic device B to share payment information, etc. Electronic device A may refer to an electronic device which can collect and re-distribute information related to at least one electronic device B.

Electronic device B may be a wearable device capable of communicating with electronic device A using a short range communication such as BT. Electronic device B may be an electronic device which directly performs payment to a POS device. Electronic device B alone may perform a communication function with an external server. Electronic device B may information relating to payment to electronic device A through an external server or using a short range communication, or may receive information of other electronic devices B.

The payment server is a server related to a service account and may communicate electronic device A and a token server. The payment server may directly communicate with electronic device B.

The token server is a server responsible for issuance and management of a token and may communicate with a financial server or a purchase server.

The financial server belongs to a bank or financial company which has issued the card, and may perform operations for ID&V of the card and approval of payment. The financial server is responsible for the final approval of payment and may request and identify payment approval from the token server.

The purchase server may include a bank or financial company which purchases a card transaction sheet for payment in a shop. The purchase server may transfer an approval request from the POS device to the token server and transmit a result thereof to the POS device. However, functions of the financial server and the purchase server may be integrated/separated according to countries.

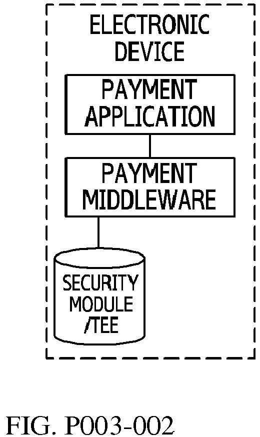

TEE is an environment having a reinforced security and may provide an environment for execution of a security application. The TEE may be used as a storage area for protecting a token and an LUK associated with payment.

The payment application is an application associated with payment, may provide an interface related to card registration and transaction, a UX for card registration through a user input or OCR, and a UX for user authentication through identification, and may provide various access methods for rapidly executing an application, such as shortcut icons or gesture.

Payment middleware is middleware associated with payment and may provide a payment SDK capable of performing functions, such as establishment of a channel of a card company, and an in for a token. Further, a security application interface for storing an LUK capable of generating a token and cryptogram.

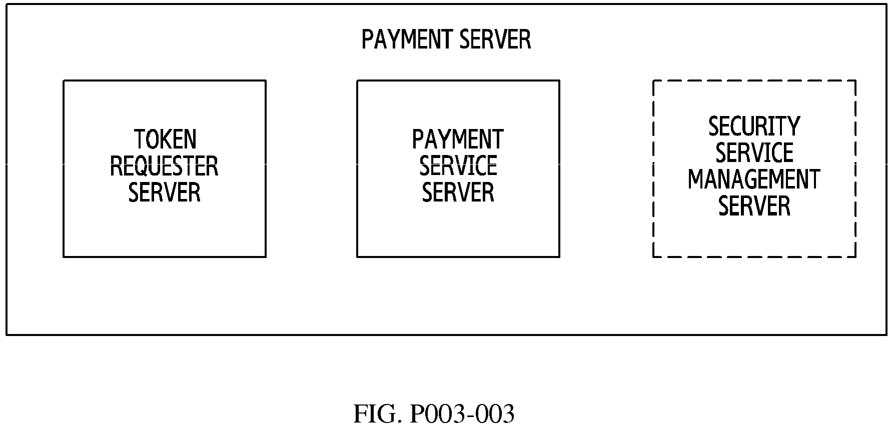

The payment server exists between an electronic device and a token server and may transfer the token and information of the electronic device.

The token requester server may connect to the token server to perform issuance/removal/activation of a token, and may interwork with a security service management server to store a token in a security space of the electronic device.

The payment service server may manage a payment application server, a service account, and a service account-linked card information.

When the storage area of the token is a security module or eSIM, the security service management server may manage the storage area. As one embodiment, the security service management server may perform functions of servers from the payment service serve or token requester serve to the security service management serve. Further, according to another embodiment, the security service management server may perform functions as a separate device from the payment service server or the token requester server. A master key of the security module may be generated using a key input at the time of processing of the electronic device, and a Supplementary Secure Domain (SSD) may be generated within the security module, using the master key by a request from the security service management server. A profile or application required for payment according each bank or financial company may be installed in the generated SSD through the security service management server.

In order to efficiently manage a plurality of cards possessed by a user, a method using various IDs as shown in FIG. P003-004 may be employed.

According to an embodiment of the present disclosure, the electronic device may include at least one among a device ID, an app ID, an enrollment ID, a resource ID, a token, or a key (e.g., a LUK). The electronic device ID may include a unique ID included in the electronic device. The app ID may include, for example, a unique ID of an application and may distinguish a plurality of applications. The app ID may include, for example, a wallet or Samsung wallet. The enrollment ID may include, for example, a unique capable of identifying a card associated with the payment function at the time of registering the card. The resource ID may include, for example, an ID notifying of a location at which a token reference value included in the payment server is stored. The token may include, for example, a token ID and may include a unique ID distinguished in the payment system. The key may include, for example, an LUK, and may be used to perform a payment function having an integrity or security for the token. The key may include, for example, a plurality of keys corresponding to one token ID. For example, the key may be changed based on a predetermined situation. For example, the key may be deleted, revised, or generated based on a valid period, the signal state of a communication network, or an external input.

According to an embodiment of the present disclosure, the payment server may include a user ID, an electronic device ID, a card reference ID (or card ref. ID), or resource ID {token reference}. The user ID may include, for example, a service account (e.g., Samsung account) used for a payment function, and may be used in managing an electronic device registered by user information or a user account. The card reference ID may include, for example, an ID issued (generated) for each card at the time of card registration, and may include information capable of identifying each card. Further, the card reference ID may include the enrollment ID. According to one embodiment, the resource ID{token reference} may include a token reference in the resource ID. The token reference may include, for example, a location at which the token included in the token server and the LUK are stored.

According to an embodiment of the present disclosure, the token server may include a card reference ID and a token reference{token PAN(Exp date, CVV, etc.) LUK}. The token reference{token PAN(Exp date, CVV, etc.) LUK} may include, for example, a location at which CVV and/or LUK or a valid period associated with a token or PAN in the token reference.

According to an embodiment of the present disclosure, a token ID may be generated based on the user ID, card reference ID, and electronic device ID. When at least one of the user ID, the card reference ID, and the electronic device ID is changed, the token ID may be newly generated. The user ID may include at least one electronic device ID. The electronic device ID may include, for example, at least one card reference ID. The resource ID may include information relating to the user ID, the electronic device ID, and the card reference ID. Further, the resource ID may include a token ID, and the token ID may be used to identify information (e.g., token, PAN, or LUK) stored in the token server.

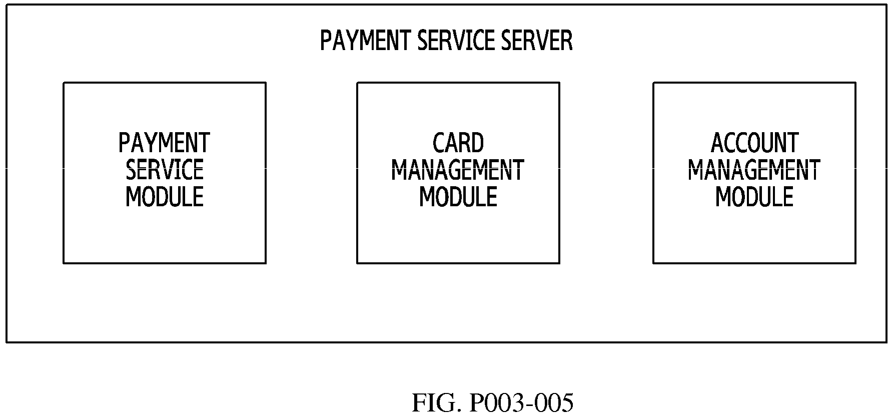

The payment service module may provide an API for communicating with a payment application. The payment service module may store a result of payment, transmit payment details to an electronic device, or record payment-related data flows, such as inquiry of payment history.

The card management module may generate a reference ID of a card, registration of which has been requested by the payment application, and transfer the registration request to a token service interface of the token requester server. The card management module may manage card life cycle including registration of a generated reference ID card, issuance of a token, token activation, and token removal.

The account management module may perform service account management for linking information of the registered card. The account management module may perform account registration, logging-in, authentication, and generation of a security area. The account management module may manage policies according to countries/devices/card companies.

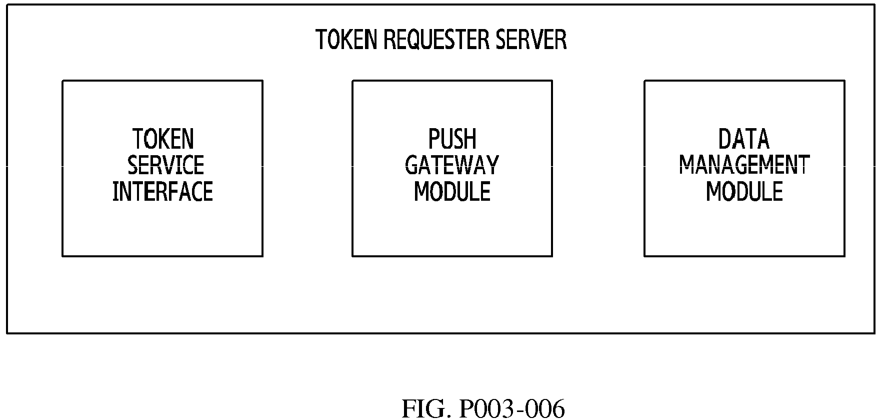

The token service interface may transfer a token-related request, which has been received from an electronic device, to a token server, and transfer a response to the request from the token server to the electronic device. The token service interface may manage the security of a channel connected to the token server.

The data management module may manage data required by the token requester server. The data management module may store token information, payment application information, user information, and electronic device information in the form of a table.

According to an embodiment of the present disclosure, the token requester server has a table related to information associated with a token and the payment service server has information associated with an electronic device, and a user authentication may be thus performed through information of the token requester server and the payment service server.

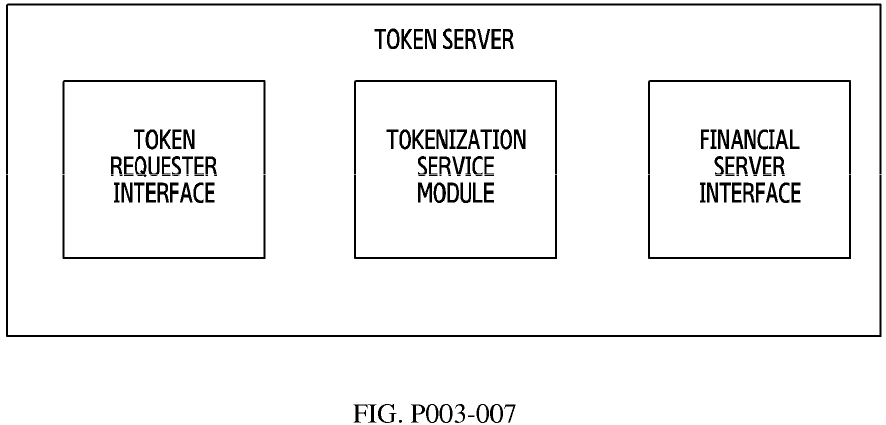

The token server may be involved in issuance and management of a token.

The token requester server may be an interface for receiving a request for the issuance of a token from the token requester server within the payment server.

When issuing a token to an electronic device, the tokenization module may issue the token based on PAN information and may perform an operation matching the token obtained at the time of transaction with the PAN.

When issuing a token to an electronic device or receiving a token for actual payment, the financial server interface may serve as an interface with a financial server for obtaining authentication of the token from the financial server.

Payment may be performed in the following sequence.

When electronic device A and electronic device B are connected, a channel may be established between the two electronic devices. Information needed to be transferred between electronic device B and electronic device A requiring payment is transferred through this channel, and this channel may require a security of a high level in order to protect information necessary for the payment.

Electronic device A may transmit information relating to electronic device B to the payment server to request the payment server to enable electronic device B to perform the payment.

The payment server may use the information sent from electronic device A to identify the information relating to electronic device B. In this case, the identified information may be at least one type of information among service account information and the information relating to electronic device B. The identified information may include information on whether electronic device B is allowed to use the payment service.

The payment server requests the token server to generate a token for electronic device B. The payment server transfers at least one type of information among information received from electronic device A and information stored in the payment server. The token is used in the payment process and may be issued by the token server.

The token issued by the token server may be transferred to the payment server.

The token received from the payment server may be transferred to electronic device A.

Electronic device A may transfer the received token to electronic device B through the channel established between electronic device A and electronic device B.

Electronic device B may try payment through contact with a POS device in a shop. Otherwise, a payment application of electronic device A or electronic device B may try payment.

When the payment is performed, electronic device A or electronic device B may generate a cryptogram. In generating a cryptogram, information related to electronic device B, information of a POS device, and information of payment time, payment date, etc. may be used.

The generated cryptogram may be transmitted together with the received token.

The POS device in the shop may send the cryptogram and the token to the purchase server to request approval thereof.

The purchase server may transfer the received information to a payment network.

The payment network may send the received information to the token server to make the token server determine whether a payment trial is rightful. The data transferred to the token server may include at least one among the token and the cryptogram transferred by electronic device B. The token server may determine whether the received information is identical to the token issued by the token server.

The token server may use the received information to transfer PAN information to the payment network.

The payment network may transfer the received PAN information to the financial server to request approval. In this event, payment information received from the POS device may be transferred together with the PAN information.

A result of approval from the financial server may be transferred to the payment network.

The payment network may transmit the received approval result to the purchase server.

The purchase server may transfer the result of approval to the POS server and terminate the payment.

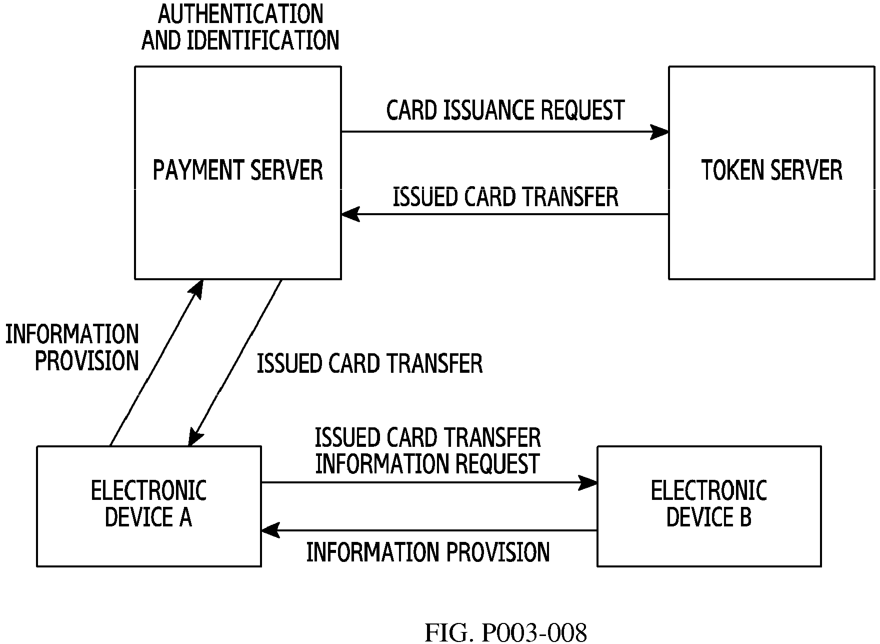

FIG. P003-008 illustrates an embodiment of the present disclosure, an electronic device B gets an issued token for payment.

The payment application of electronic device A may be used to determine whether a card is to be issued to electronic device B.

Electronic device A requests information relating to payment from electronic device B which wants to get an issued token. The requested information related to payment may include at least one among a unique ID of electronic device B and a security module ID of electronic device B. A request for information may be transmitted within a protected channel.

Electronic device B may transmit the requested information relating to the payment to electronic device A.

The information may be transmitted within a protected channel.

Electronic device A may transmit the information received from electronic device B to the payment server.

A validity identification process including authentication and identification of the transferred information may be performed.

The payment server may request token issuance by transmitting the information to the token server.

The token server may issue a token on the basis of the received information and transmit the token to the payment server.

The payment server may transfer the received token information to electronic device A.

Electronic device A may transfer the received token information to electronic device B.

The token issued to electronic device B in the process described above may be used after being subject o an activation process. User identification is performed in the process of activating the token, and the identification process may include a process of authenticating whether the owner of the card and the user performing the card registration coincide. Methods for the user identification may include user authentication through text messages, e-mail, ARS, or phone call. Further, the authentication may be performed through an application issued by a card company or bank.

In an embodiment of the present disclosure, when a card registration starts in the payment application of electronic device B instead of registering a card in electronic device A, electronic device B may show, to a user, a message requesting the payment application of electronic device A to be first configured. Further, in this case, the payment application of electronic device A may be first executed before the message requesting the configuration may be shown to the user.

In an embodiment of the present disclosure, in the case where electronic device B uses the payment service, when a new card is registered in electronic device A, a pop-up associated with a user input related to whether to add the card in electronic device B also may be displayed at least one among a display of electronic device A and a display of electronic device B. One or more new cards may be added in electronic device A, a user input may be received for each card, or at least one card may be added in electronic device B by the user input. A user input to allow all the cards stored in electronic device A to be added in electronic device B may be received. An electronic device A and electronic device B may show, to the user, a notification that the payment application has been ready to be used.

In the drawings, the token issuance method performed among electronic device A, the payment server, and the token server may be different according to the policy of each country. The the embodiments described below show token issuance methods according to policies of the countries. Further, in the following description, information required by electronic device B in order to perform payment may be transmitted from electronic device A to electronic device B.

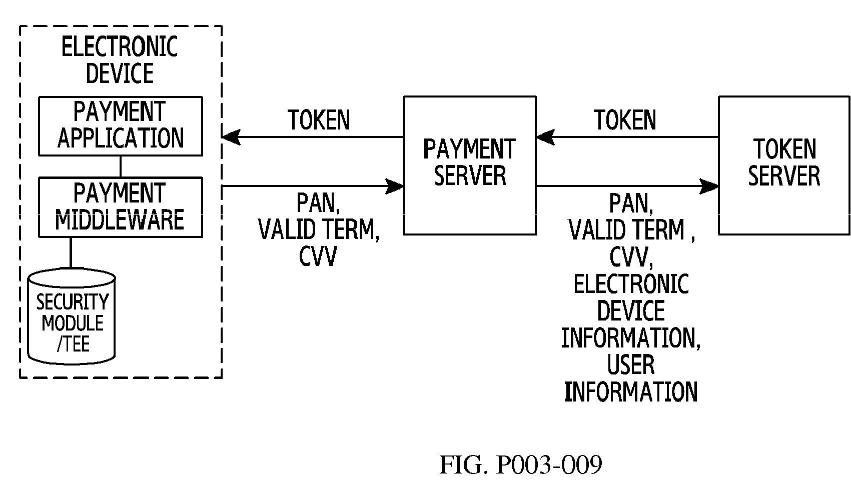

FIG. P003-009 illustrates a token issuance process according to one embodiment. Information relating to a card may be acquired through an OCR method provided by a device. The acquired information may include a PAN, a valid period, and a CVV.

According to an embodiment of the present disclosure, the acquired information may be transferred from a payment application in electronic device A to a payment service server of the payment server. The payment service server in the payment server may transfer the received information to the token requester server.

According to an embodiment of the present disclosure, the token requester server of the payment server may transfer, to the token server, user information and electronic device information of the device having requested the token issuance in addition to the received information. The token server may issue a token, using the **received information.**

**According to an embodiment of the present disclosure, the token server may transfer the token to the token requester server of the payment server.**

**According to an embodiment of the present disclosure, the token requester server of the payment server may transmit the token to the electronic device. The electronic device A may transfer the received token to electronic device B to store the token in a security module or TEE of electronic device B. The token received from the payment server may be stored in a general memory. One or more tokens may be issued according to the payment method. According to an embodiment of the present disclosure, only one token may be issued regardless of the payment method. If a stored token has not been used yet, it may be used after it is allowed to be used after being subjected to an identification process.** 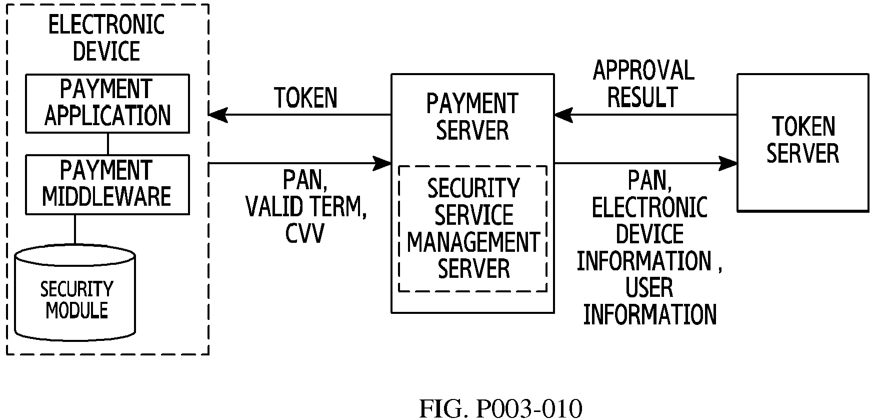 **FIG. P003-010 illustrates a token issuance process according to one embodiment.**

**Information relating to a card may be acquired through an OCR method provided by an electronic device. The acquired information may include a PAN, a valid period, and a CVV.**

**According to an embodiment of the present disclosure, the acquired information may be transferred from a payment application in an electronic device to a payment service server of the payment server. The payment service server in the payment server may transfer the received information to the security service** management server. The security service management server may operate outside the payment server other than inside thereof.

According to an embodiment of the present disclosure, the security service management server of the payment server may transfer, to the token server, user information and information of the device having requested the token issuance in addition to the received information. The token server may authenticate the received information.

According to an embodiment of the present disclosure, the token server may transfer a result of the approval to the security service management server of the payment server.

According to an embodiment of the present disclosure, the security service management server of the payment server may use the access authority of electronic device A to transmit the token to the security module of electronic device B and store the token therein. One or more tokens may be issued according to the payment method. According to an embodiment of the present disclosure, only one token may be issued regardless of the payment method. If a stored token has not been used yet, it may be used after it is allowed to be used after being subjected to an identification process.

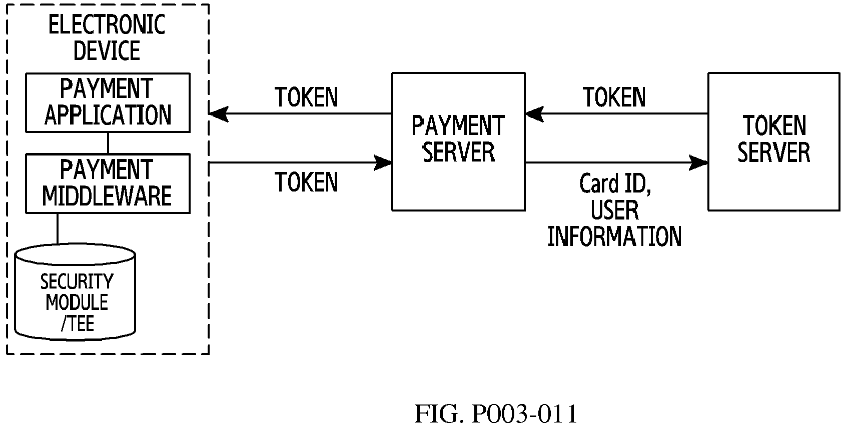

FIG. P003-011 illustrates a token issuance process according to one embodiment. According to an embodiment of the present disclosure, the token issuance may be performed at the time of payment. For example, the card registration and identification process trough an OCR may be completed. In this case, information associated with the card may be shared without issuance of the card.

According to an embodiment of the present disclosure, when a payment application for actual payment is executed and authentication of self-identity succeeds, the electronic device may forward a token request to the payment server.

According to an embodiment of the present disclosure, the payment server may transfer the card ID and user information to the token server.

The token server may transmit the requested token to the payment server.

The payment server may transmit the token to electronic device B through electronic device A. The token received by electronic device B may be instantly used for payment without being separately stored. The token may be differently generated according to the payment method. The token server may have a use limit time. The token may be disposable card information (e.g., one time card (OTC)).

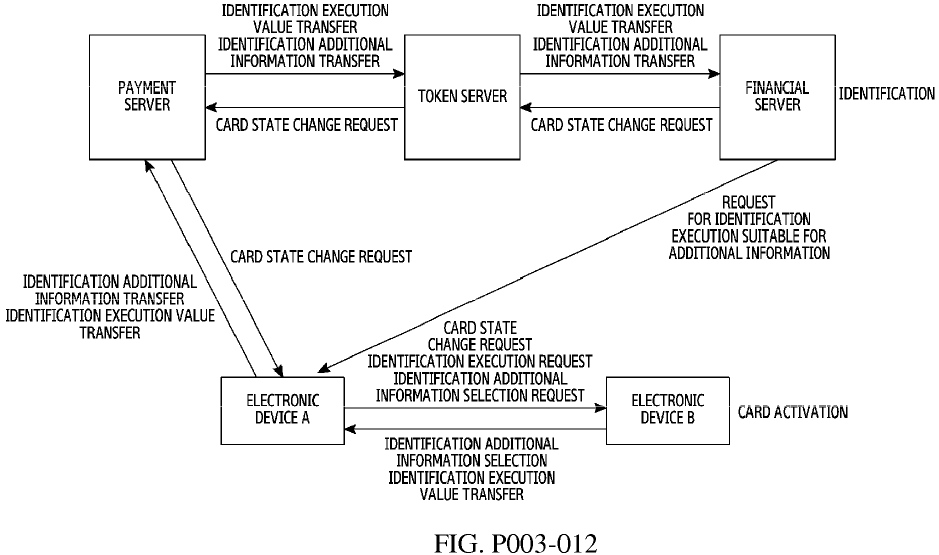

FIG. P003-012 illustrates an embodiment of an identification process for activating a state of a token to enable electronic device B to perform payment.

If an electronic device B is requested to select additional information associated with an identification method, the additional information may include an OTP through a phone, an SMS, or an e-mail.

Identification-additional information may be selected to notify electronic device A thereof.

Electronic device A having been notified of the identification-additional information may transfer the information to the financial server through the payment server and the token server.

The financial server may check whether the identification process has been exactly performed.

According to a result of the checking, the state of the card stored in electronic device B may be requested to be changed, through the token server, the payment server, and electronic device A.

According to an embodiment of the present disclosure, the financial server may proceed with the next process by requesting electronic device A to perform identification of electronic device B connected to electronic device A in order to activate the issued token.

The payment application of electronic device A may display information of an identification method supported by each financial server, on a display. The payment application of electronic device A may receive an input of selecting one of the identification methods on a displayed screen.

The supported methods may include an OTP through a call center, app-to-app, SMS, or e-mail.

The payment application of electronic device A may display an identification method of each credit card, on a display.

Electronic device A may transfer the identification method selected by the user to a connected electronic device.

When the OTP method is selected as the identification method, the payment application of electronic device B may display a notification inducing the user to input an OTP. For validation, the payment application of electronic device A may transmit the input OTP to the financial server.

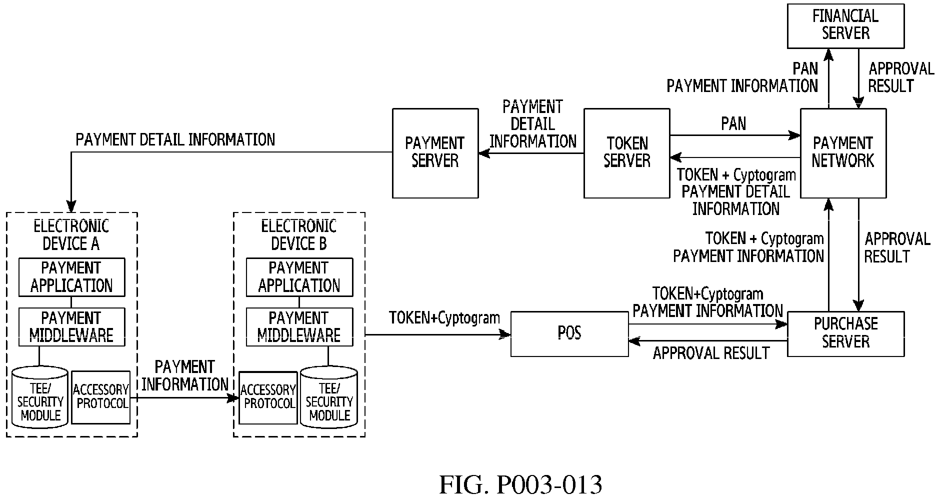

FIG. P003-013 illustrates a signal flow 3100 of token payment according to various embodiments.

According to an embodiment of the present disclosure, a payment system may include electronic device A, electronic device B, a payment server, a token server, a POS device, a financial server, a purchase server, or a payment network. Electronic device A may include, for example, a payment application, a payment manager, or a security area (e.g. a security module or TEE). Electronic device B may include, for example, a payment application, a payment manager, or a security area (e.g. a security module or TEE). The POS device may include, for example, a sales time point information management system. The POS device may be, for example, a combination of functions of a cash register and a computer electronic device, and a user can perform a payment function using the POS device. The financial server may include, for example, a bank or financial company for issuing a card, and may perform identification of the card. Further, the financial server may proceed approval of the card at the time of payment. The purchase server may include, for example, a bank or financial company which purchases a transaction sheet for a card transaction performed at a shop (e.g., POS device). The payment network may include, for example, a card network.

According to an embodiment of the present disclosure, electronic device B may transfer a token and/or encryption information (e.g., cryptogram) to the POS device. For example, the token may be stored in the electronic device. Further, the token may be stored in an encrypted area. For example, electronic device B may generate encryption information, using a key received from the outside or a key generated by electronic device B. For example, electronic device B may generate encryption information, using a key received from electronic device A or a key generated by electronic device A. The security information may include a cryptogram. Further, electronic device B may transfer the cryptogram and/or the token to the POS device.

According an embodiment of the present disclosure, electronic device B may use various communication connections in transferring the token and/or cryptogram to the POS device. The communication connections may include, for example, NFC, MST, barcode, or QR code.

According to an embodiment of the present disclosure, the POS device may transfer at least one of a token, encryption information, and payment information to the purchase server. For example, the POS device may transfer, to the purchase server, the token and/or the cryptogram received by the electronic device B, and the payment information (e.g., payment details) acquired by the POS device. Further, the payment information may be, for example, acquired from the POS device or received from an external device, and may include payment details relating to a payment function requested by the user. Further, the payment information may include, for example, payment history performed using the payment system.

According to an embodiment of the present disclosure, the purchase server may transfer at least one among the token, the encryption information, and the payment information to the payment network. For example, the purchase server may transfer at least one among the token, the cryptogram, and the payment information, which have been received from the POS device 3120, to the payment network.

According to an embodiment of the present disclosure, the payment network may include a network associated with a card company. The card company may include, for example, VISA®, MasterCard®, or Amex™. The payment network may include or operate the token server. For example, the payment network may transfer at least one among the token, the cryptogram, and the payment information from the payment network to the token server or may perform the functions of the token server.

According to an embodiment of the present disclosure, the token server may identify information on the token received from the payment network. For example, the token server may use the token to identify card information (e.g., PAN) corresponding to the token. For example, the token server may identify a PAN corresponding to the financial server, using information (e.g. Data) included in the token. The token server may, for example, identify a PAN corresponding to the financial server and use the PAN to get payment authentication from the financial server.

According to an embodiment of the present disclosure, the token server may use the cryptogram in identifying the PAN.

According to an embodiment of the present disclosure, the token server may transfer the PAN to the payment server.

According to an embodiment of the present disclosure, the payment network may transfer the PAN and/or the payment information to the financial server. For example, the payment network may transfer the PAN and/or the payment information received from the purchase server to the financial server.

According to an embodiment of the present disclosure, the financial server may determine whether to approve the payment, using the PAN and/or the payment information. For example, the financial server may use the PAN and/or the payment information and may approve the payment when it coincides with information included in the financial server (e.g., in the case of a valid PAN). Further, the financial server may reject use the payment when the PAN and/or the payment information does not coincide (e.g. Invalid PAN) with information included in the financial server.

According to an embodiment of the present disclosure, the financial server may transfer the information of approval or denial to the payment network.

According to an embodiment of the present disclosure, the payment network may transfer the information of approval or denial to the payment network.

According to an embodiment of the present disclosure, the financial server may transfer the information of approval or denial to the purchase server.

According to an embodiment of the present disclosure, the purchase server may transfer the information of approval or denial to the POS device.

According to an embodiment of the present disclosure, when the information of approval or denial corresponds to approval, the payment network may transfer the payment information to the token server.

According to an embodiment of the present disclosure, the token server may transfer the payment information to the payment server.

According to an embodiment of the present disclosure, the payment server may transfer the payment information to the electronic device. For example, the payment server may transfer the payment information to electronic device A or electronic device B, using a predetermined command (e.g., a push message).

According to an embodiment of the present disclosure, electronic device B may display the payment information in electronic device B. For example, electronic device B may show the payment information, using the payment application included in electronic device B, or display the payment information through an interface associated with the payment function. The interface associated with the payment function may include a notification bar.

According to an embodiment of the present disclosure, electronic device A may display the payment information in the electronic device A. For example, electronic device A may show the payment information, using the payment application included in electronic device A, or display the payment information through an interface associated with the payment function. The interface associated with the payment function may include a notification bar.

According to an embodiment of the present disclosure, electronic device A may transfer the payment information in electronic device B. For example, electronic device A may transfer the payment information to electronic device B through the payment middleware included in the electronic device A.

According to an embodiment of the present disclosure, electronic device B may display the payment information received from an external device or electronic device A or information (e.g., payment state, payment history, or accumulated amount) associated with the payment, through a display functionally connected to electronic device B. For example, the electronic device may use a notification module of the electronic device to display the information associated with the payment. Further, in the electronic device, the payment information or the information associated with the payment may be displayed using at least one among, for example, a notification, an indicator, a status bar, a task bar, an icon, a floating icon, a tile, and a widget, and may be displayed in a partial area of at least one among a home screen, a lock screen, and a curved display.

According to an embodiment of the present disclosure, electronic device B may output, or generate vibrations or a haptic effect thereof, the payment information received from an external device or electronic device A or a notification associated with the payment information, through an audio module and/or a motor or a frictional display functionally connected to electronic device B.

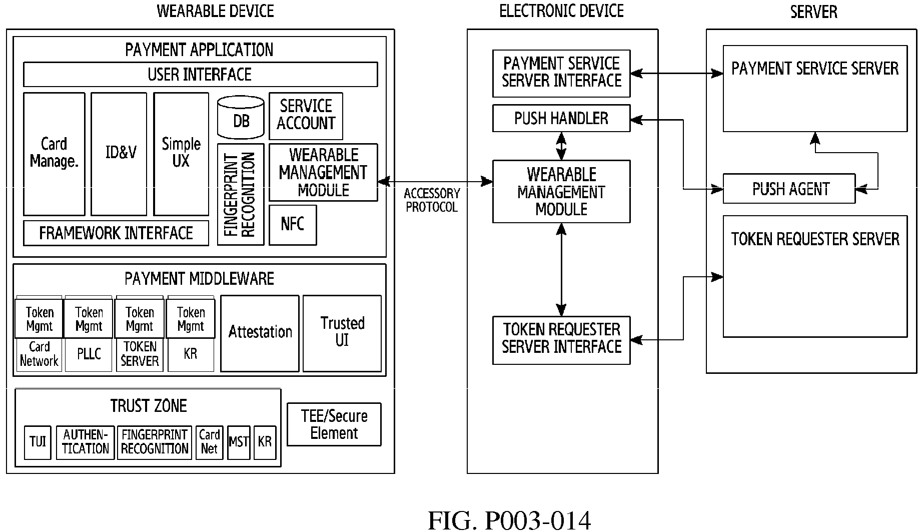

FIG. P003-014 illustrates a structure of the entire system of a wearable device.

The figure illustrates modules in view of a server, an electronic device, and a wearable device.

The server may include a payment service server and a token requester server. A service provider server, which is known as a token server or financial server, is not illustrated in this figure. The payment service server and the token requester server may configure a payment server. The payment server may manage service account information, for example, a service account, and a token according to an electronic device ID. When a wearable device connected to the electronic device has been initially executed, metadata including already-issued card information of the electronic device, for example, at least a part of information of a token to the wearable device to induce easy issuance of a card.

The electronic device or wearable device may include a payment service server interface (wallet interface), a push handler, a wearable management module, and a token requester server interface. The service server interface performs a data communication with a payment service server in the server. The push handler is a module necessary when receiving data from the payment server. The wearable management module is a connection management module for ensuring a secure communication between the electronic device and the wearable device and a protocol, for example, an accessory protocol, may be defined and used. The token requester server interface is a module for communicating with the token requester server of the payment server. The MST is a mode for transmitting data in the magnet stripe method and can transfer card information to a POS device in a non-contact method. The NFC is a module for transmitting data through wireless communication and can transfer card information to a POS device in a non-contact method.

The wearable device includes a module for issuing a card, an identification module (e.g., ID&V) for authenticating a card, and a module for storage. This may be the same as the structure of the electronic device.

The wearable device is an electronic device which is mainly worn on a body or a part of clothes or worn in the same manner as clothes, includes a functional unit performing a control, communication, or input and output, like an existing portable electronic device, and further includes a wearing unit to be worn on a body. Examples of the wearable device include a head-mountable display (e.g., head-mounted display), smart eye glasses, a smart watch, or wristband, a contact lens type device, a ring type device, a shoes type device, a clothes-type device, and a glove-type device.

The functional unit of the wearable device may not include some of the principal functional elements of the existing general portable device according to the various use environment and required use characteristics, such as the purpose and method of use, the volume and weight, and design, or further include design elements in the external appearance or user interface configuration. A functional element mounted in the functional unit may be added through a wired/wireless port, and a method of combining an individual functional element with a base platform may be used.

The wearing unit may be a kind of fixed device in the form of a band, clip, necklace, or hook, which allows the functional unit to be effectively worn on a body or combined with clothes, or include a type like clothes, which can be worn on a body. The wearing unit may further include an additional fastening structure for combining the functional unit with a human body and ensuring the usability, and an input device and a sensor for performing additional functions of the functional unit. The wearing unit may be integrated as a part of a housing of the functional unit, and can be attached to or detached from the functional unit to provide a new wearing type suitable for a situation or add a new design element when it is replaced by a new wearing part.

The figures illustrated below show several exemplary electronic device forms.

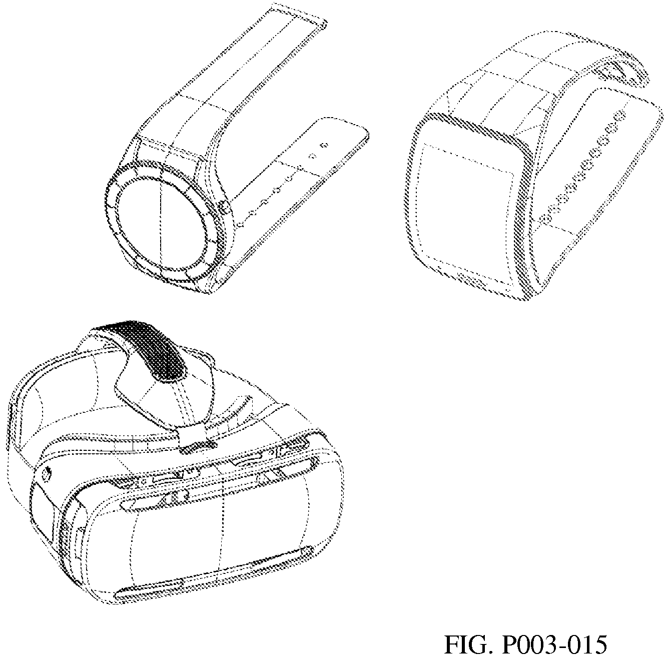

An electronic device, like a watch, which can be worn on a wrist of a user, provides a display device having a substantially circular shape.

An embodiment of the present disclosure may include a bezel that can rotate around a display. The bezel may further include an indicia including various letters, characters, or designs, various sensors for detecting a display device or an angular position of a wheel, a TX device, such as an imprint or an electromagnetic element, and an input device capable of receiving a user input, such as a button or touch pad.

An embodiment of the present disclosure may include a wheel type or circular user interface. The user interface provides a user interface corresponding to the circular display and bezel, and may further provide a user interface having a serial structure for a selected input.

An embodiment of the present disclosure may include a stem or button disposed at a side of the electronic device. The stem or button may be used for an input of user's menu search or selection and may inter-work with the bezel to configure a complex operation.

An embodiment of the present disclosure may have an antenna device disposed adjacently to one side of the electronic device. An antenna (NFC, TX) for a short-range communication is formed at the rear surface of the display to enable the wearable device to perform the short-range communication with an Rx device, and a coil antenna (RX) may be formed inside of the rear surface of the wearable device to receive power from a wireless charging device (TX).

An embodiment of the present disclosure may include a communication antenna that can communicate with a service server. A predetermined antenna may be included in the wearable device, or a metal housing may be configured as an antenna for communication.

An embodiment of the present disclosure may include a wireless or wired interface port that can inter-work with a host (or router) device. The interface includes a wireless interface, such as BT, WiFi, or wireless gigabit alliance (WiGig), and a wired interface of a node-contact type, such as USB, HDMI, or an individually provided POGO pin contact.

An embodiment of the present disclosure may include a pressure sensor for receiving, as an input, a pressure pressing the display. A pressure sensor, such as a strain gage, may be disposed in the display to be used as a surface input device distinguished from the touch sensor disposed at the display. For example, the pressure sensor can implement a simple triggering operation, such as a slide unlock, on a narrow display area, or may be used as a simple security means, such as a pattern lock.

An embodiment of the present disclosure may further include, therein, a sensor for detecting a biometric signal. The sensor is disposed at a surface of a wearable device, which is adjacent to a human body, to detect a human body signal. To this end, the wearing unit of the wearable device may have an additional fastener device for a tight contact with the human body to exactly detect the human body signal. The fastener device may further have a structure for switching between a release mode and a fastening mode in order to provide a sense of comfort wearing to a user.

An embodiment of the present disclosure may further include, therein, a sensor for detecting a motion of a user. The motion of the user detected by the sensor may be received as an input to perform user interface direction change, function mode transition, and execution of predetermined functions.

An embodiment of the present disclosure may have a section capable of directly or indirectly exposing the sensor or interface. The sensor for detecting a biometric signal requires a proper opening through which a signal can pass. To this end, a part of the housing of the wearable device corresponding to the sensor may be configured to be transparent. A contact type port forms a physical contact through an opening formed at the housing of the wearable device. According to the main use type of the wearable device, a separate cover may be formed to selectively open or close the opening or an additional structure may be arranged to completely close the opening.

An embodiment of the present disclosure may include a substantially polygonal display device as an electronic device, like a watch, which can be worn on a wrist of a user.

An embodiment of the present disclosure may have a shape bent according to a curve of a user's wrist. In the case of a wearable device having a display screen of a proper area or larger in order to effectively transmit information, the display and a function unit adjacent thereto may have a shape properly curved according to the curved surface of a human body.

An embodiment of the present disclosure may include a button and another sensor (e.g. a biometric sensor) disposed at the front surface thereof. The button and the sensor can receive operations of menu search and selection of a user, provide a proper function by detecting user's operation and state, and surrounding environment, and perform a function associated with an authentication and a user authentication means.

An embodiment of the present disclosure may have an antenna device disposed adjacently to one side of the electronic embodiment. An antenna (NFC, TX) for a short-range communication is formed at the rear surface of the display to enable the wearable device to perform the short-range communication with an Rx device, and a coil antenna (RX) may be formed inside of the rear surface of the wearable device to receive power from a wireless charging device (TX).

An embodiment of the present disclosure may include a communication antenna that can communicate with a service server. A predetermined antenna may be included in the wearable device, or a metal housing may be configured as an antenna for communication.

An embodiment of the present disclosure may include a wireless or wired interface port that can inter-work with a host (or router) device. The interface includes a wireless interface, such as BT, WiFi, or WiGig, and a wired interface of a node-contact type, such as USB, HDMI, or an individually provided POGO pin contact.

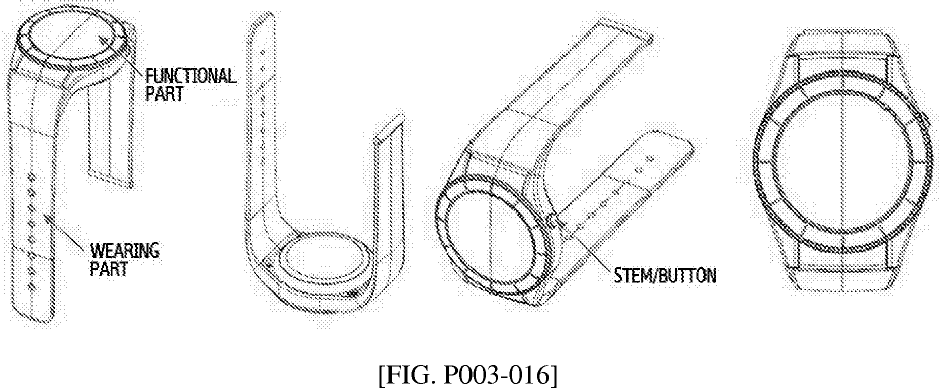

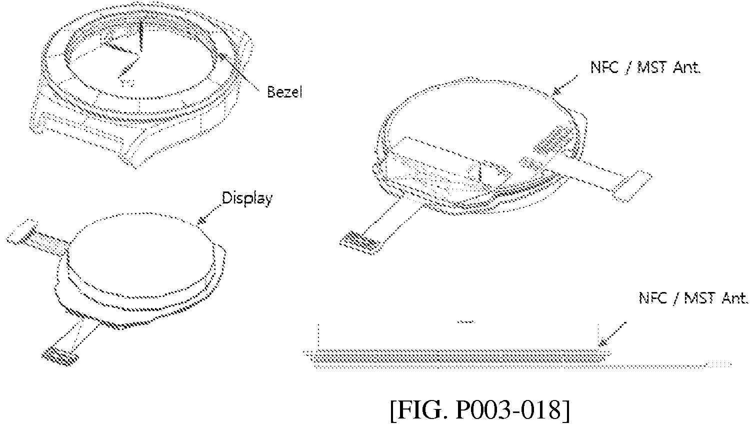

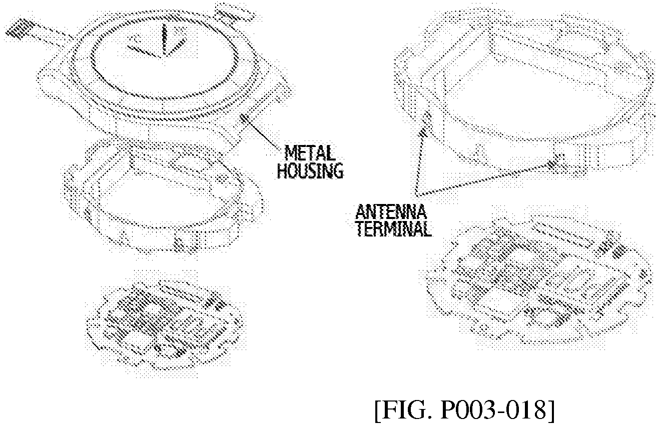

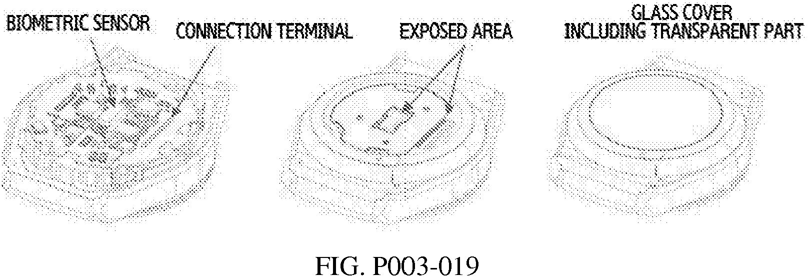

An embodiment of the present disclosure may further include, therein, a sensor for detecting a biometric signal. The sensor is disposed at a surface of a wearable device, which is adjacent to a human body, to detect a human body signal. To this end, the wearing unit of the wearable device may have an additional fastener device for a tight contact with the human body to exactly detect the human body signal. The fastener device may further have a structure for switching between a release mode and a fastening mode in order to provide a sense of comfort wearing to a user.

An embodiment of the present disclosure may further include, therein, a sensor for detecting a motion of a user. The motion of the user detected by the sensor may be received as an input to perform user interface direction change, function mode transition, and execution of predetermined functions.

An embodiment of the present disclosure may have a section capable of directly or indirectly exposing the sensor or interface. The sensor for detecting a biometric signal requires a proper opening through which a signal can pass. In this case, a separate window may be formed at a part of the housing area of the wearable device corresponding to the sensor. A contact type port forms a physical contact through an opening formed at the housing of the wearable device. According to the main use type of the wearable device, a node may be constantly exposed through the opening.

An embodiment of the present disclosure may further include a slot in which an additional device can be inserted. An opening, in which an SD card for expanding a memory or a SIM card for device authentication can be installed externally, may be formed at one surface (mainly unexposed surface) among the outer appearance of the wearable device. The opening may be constantly opened or selectively opened or closed by a separate cover arranged therein, according to the main use type of the wearable device.

An embodiment of the present disclosure may further include a voice input/output device. The wearable device may perform general functions, including communication, alarm, recording, and music reproduction, and may be used for user authentication using voice command or written text according to the implemented functions.

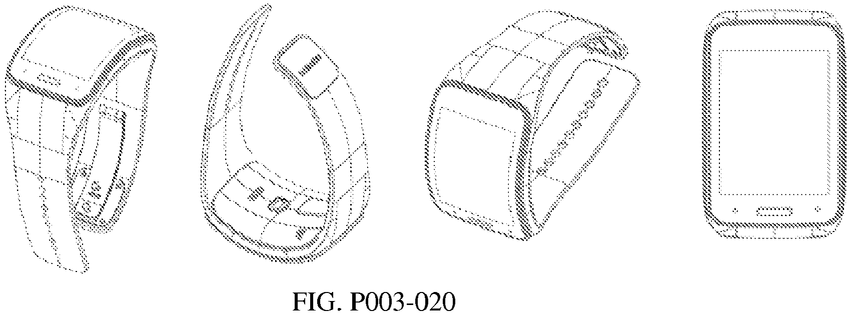

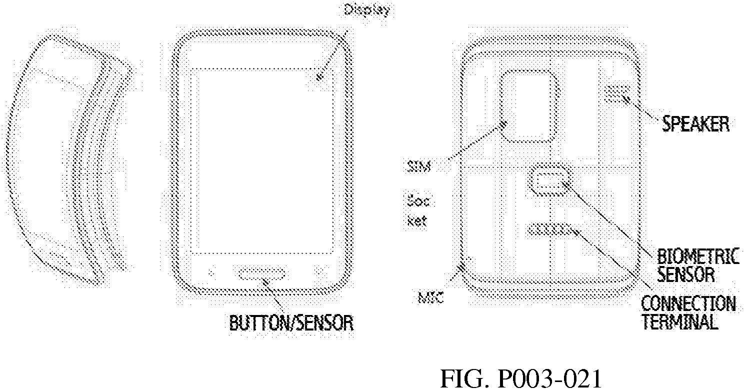

An embodiment of the present disclosure may be located outside of the display area. Due to the restriction in the size of the wearable device, a display occupies most of the area, and most of the antenna devices are usually located under the display area or at a lower part partly overlapping the display area for the efficiency in the use of the space or component arrangement. However, when the display is substantially small or omitted, the antennas may be packaged in parallel in an area other than the display area. Particularly, in order to ensure the performance and usability, the antennas may be substantially arranged adjacently to a display, which is recognized as a front part when the wearable device has been worn, another functional unit, or a shape unit.

An embodiment of the present disclosure may include a stem or button disposed at a side of the electronic device. The stem or button may be used for an input of user's menu search or selection and may inter-work with the bezel to configure a complex operation.

An embodiment of the present disclosure may include a communication antenna that can communicate with a service server. A predetermined antenna may be included in the wearable device, or a metal housing may be configured as an antenna for communication.

An embodiment of the present disclosure may include a wireless or wired interface port that can inter-work with a host (or router) device. The interface includes a wireless interface, such as BT, WiFi, or WiGig, and a wired interface of a node-contact type, such as USB, HDMI, or an individually provided POGO pin contact.

In an embodiment of the present disclosure, the function of the antenna may be replaced by replacing the wearing unit or cover, etc. When the display is small or omitted, the mounting space of the functional unit may be also relatively reduced to make it difficult to install the functional element. In this case, a new wearing unit may be installed or the housing may be replaced to add a new function or replace the existing function. A part of the housing may be separated to allow a direct replacement of an internal component module.

An embodiment of the present disclosure may further include, therein, an antenna for providing a location-based service. A wearable device in the type of a simple band for kids, seniors, or sports, which provides a simple function, may further include a location detecting device, such as a GPS, in order to provide a location-related main function for a user.

An embodiment of the present disclosure may further include, therein, a sensor for detecting the state of a user. The electronic device may further include an acceleration sensor or temperature or humidity sensors proper for the user or use environment, to detect the motion type of the user or change in the surrounding environment.

An embodiment of the present disclosure may further include a slot in which an additional device can be inserted. An opening, in which an SD card for expanding a memory or a SIM card for device authentication can be installed from the outside, may be formed at one surface (mainly unexposed surface) among the outer appearance of the wearable device. The opening may be constantly opened or selectively opened or closed by a separate cover arranged therein, according to the main use type of the wearable device.

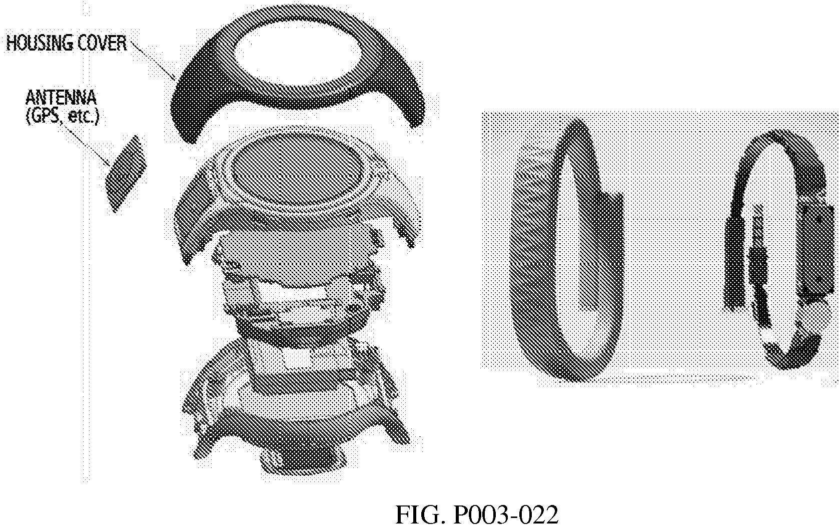

An embodiment of the present disclosure may include a display installed in or separate from a gear device worn on a head. The gear device may include a wearing unit for surrounding a head and a functional unit including a functional element, and further include a mounting unit for mounting a personal portable device at a part of the functional unit or wearing unit.

An embodiment of the present disclosure may provide, through a display, a virtual reality (VR)/augmented reality (AR) user interface.

An embodiment of the present disclosure may include an additional functional element in the functional unit of the gear device and a personal portable device to be combined to perform a new function. A personal portable device installed in the gear device can recognize user information of the portable device and provide a function included in the gear device in link with the personal information.

An embodiment of the present disclosure may include a touch pad or button in the gear device. The touch pad or button may receive an input of and performs the function of menu search and selection by a user.

An embodiment of the present disclosure may include a camera device that can photograph a surrounding environment. The camera device may show, to the user, user's motion and state or surrounding environment through a display screen, may detect a particular input motion and perform a proper function, or may perform a function associated with an authentication or a user authentication means.

An embodiment of the present disclosure may include a communication antenna that can communicate with a service server. A predetermined antenna may be included in the wearable device, or a metal housing may be configured as an antenna for communication.

An embodiment of the present disclosure may include a wireless or wired interface port that can inter-work with a host (or router) device. The interface includes a wireless interface, such as BT, WiFi, or WiGig, and a wired interface of a node-contact type, such as USB, HDMI, or an individually provided POGO pin contact.

An embodiment of the present disclosure may further include, therein, a sensor for detecting a motion of a user. The motion of the user detected by the sensor may be received as an input to perform function mode transition or execution of predetermined functions.

An embodiment of the present disclosure may further include, therein, a sensor for detecting a biometric signal. The sensor is disposed at a surface of a wearable device, which is adjacent to a human body, to detect a human body signal. To this end, the wearing unit of the wearable device may have an additional fastener device for a tight contact with the human body to exactly detect the human body signal. The fastener device may further have a structure for switching between a release mode and a fastening mode in order to provide a sense of comfort wearing to a user.

An embodiment of the present disclosure may have a section capable of directly or indirectly exposing the sensor or interface. The sensor for detecting a biometric signal requires a proper opening through which a signal can pass. To this end, a part of the housing area of the wearable device corresponding to the sensor may be configured to be transparent or a separate window may be formed at the part. A contact type port forms a physical contact through an opening formed at the housing of the wearable device. According to the main use type of the wearable device, the node may be constantly opened through the opening, a separate cover may be formed to selectively open or close the opening, or an additional structure may be arranged to completely close the opening.

An embodiment of the present disclosure may include an additional functional element included in the central controller of a vehicle gear device and a personal portable device or payment means to be combined to perform a new function. A personal portable device or payment means installed in the vehicle device can recognize user information of the portable device and provide a function included in the vehicle device in link with the personal information.

An embodiment of the present disclosure may include a communication antenna that can communicate with a service server. A predetermined antenna may be included in the vehicle device, or a metal housing may be configured as an antenna for communication.

An embodiment of the present disclosure may include a wireless or wired interface port that can inter-work with a host (or router) device. The interface includes a wireless interface, such as BT, WiFi, or WiGig, and a wired interface of a node-contact type, such as USB, HDMI, an individually provided POGO pin contact, or a card reader.

An embodiment of the present disclosure may further include, therein, a sensor for detecting a motion of a user. The motion of the user detected by the sensor may be received as an input to perform function mode transition or execution of predetermined functions.

An embodiment of the present disclosure may further include, therein, a sensor for detecting a biometric signal. The sensor is disposed at a surface of the vehicle device, which is adjacent to a human body, to detect a human body signal. To this end, a seat part of the vehicle device may have an additional fastener device for a tight contact with the human body to exactly detect the human body signal. The fastener device may further have a structure for switching between a release mode and a fastening mode in order to provide a sense of comfort wearing to a user.

An embodiment of the present disclosure 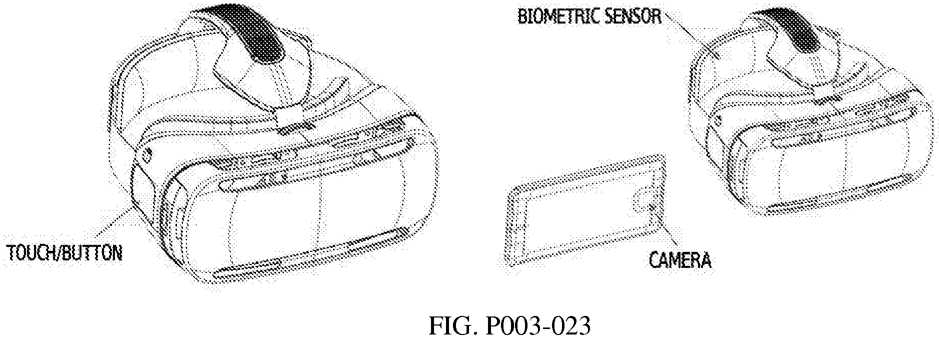 may include a touch pad or button in the vehicle device. The touch pad or button may receive an input of and performs the function of menu search and selection by a user.

An embodiment of the present disclosure may include an electronic device or a payment means in the vehicle device that can be ridden. The vehicle device may be configured by a driver seat on which a driver rides and a passenger seat on which a passenger rides, and each of the driver seat and the passenger seat may further include an interface unit for pairing the personal portable device or payment means.

An embodiment of the present disclosure may include a VR user interface through a (group/individual) display in the vehicle device.

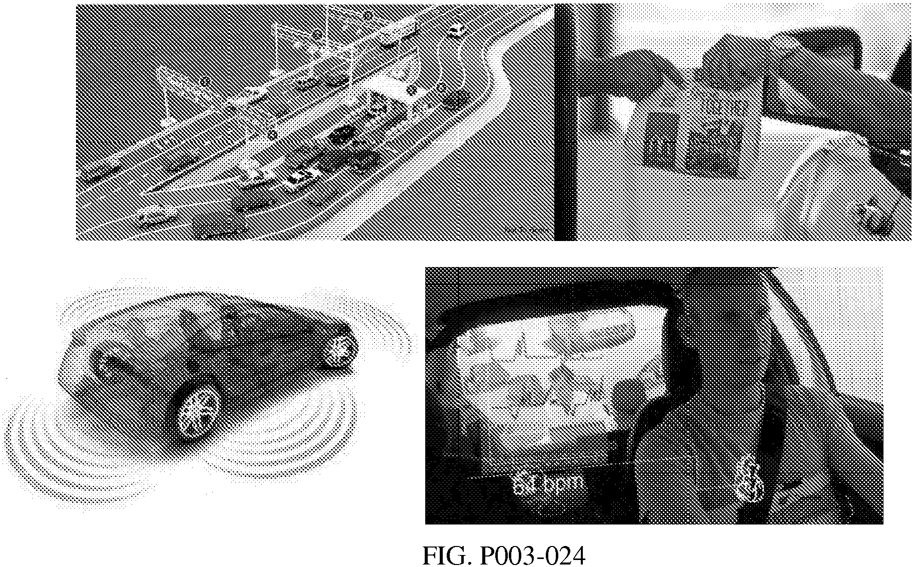

An embodiment of the present disclosure includes a payment means installed in a tag device that can be implanted in a body. The tag device may be configured by an indicia part that can be recognized by an external device and a base (primer) part capable of maintaining the indicia part in a body, and the indicia part may include payment-related personal information.

In an embodiment of the present disclosure, the indicia part may be invisible.

In an embodiment of the present disclosure, the indicia part may be partially visible.

In an embodiment of the present disclosure, the indicia part may change to be visible.

In an embodiment of the present disclosure, the base part may be included in the form of a film or chemical solvent.

In an embodiment of the present disclosure, the indicia part stably placed on the base part may be removed.

In an embodiment of the present disclosure, an electronic device may be dosed.

In an embodiment of the present disclosure, the characteristics of the base part or the indicia part may be changed by the temperature, pressure, or moisture.

In an embodiment of the present disclosure, the indicia part may be activated only in a particular temperature range.

In an embodiment of the present disclosure, an electronic device may be identified only by an authenticated portable device.

In an embodiment of the present disclosure, the indicia part may be authenticated in link with a human body pattern (vein, etc.).

In an embodiment of the present disclosure, the base part may be included in the form of a film or chemical solvent.

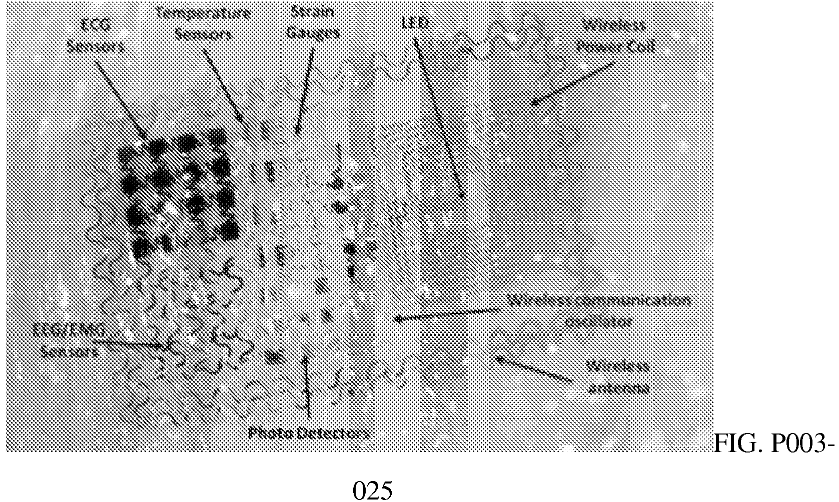

In an embodiment of the present disclosure, a payment means may be installed to an auxiliary device that can be added to an existing electronic device. The auxiliary device may include a coupling part for coupling the existing electronic device, a connection part for providing communication between the existing electronic device and the auxiliary device, and a machine part including various components, and the machine part may include a payment-related function.

In an embodiment of the present disclosure, the coupling part and the connection part may be integrally formed.

In an embodiment of the present disclosure, an electronic device may include a coupling structure, such as a hook, snap fit, attachment, or screw.

In an embodiment of the present disclosure, the connection part may include a tangible connection device, such as an ear jack plug, a USB terminal, and a POGO pint terminal.

In an embodiment of the present disclosure, the connection part may include an invisible connection device, such as BT or WiFi.

In an embodiment of the present disclosure, communication or power transfer between the existing electronic device and the machine part may be performed through the connection part.

In an embodiment of the present disclosure, the machine part may include a transmission/reception unit capable of performing payment using NFC or MST.

In an embodiment of the present disclosure, the machine part may further include an antenna means for communication with a payment electronic device.

In an embodiment of the present disclosure, the coupling part may have a shape surrounding at least one surface of the existing electronic device.

In an embodiment of the present disclosure, the payment operation may be performed in the state where the machine part is installed in the existing electronic device.

In an embodiment of the present disclosure, the existing electronic device performs payment-related authentication and the machine part transfers a material obtained from the existing electronic device to the payment electronic device.

In an embodiment of the present disclosure, the payment operation may be performed in the state where the machine part is separated from the existing electronic device.

An embodiment of the present disclosure may further include a separate power source.

In an embodiment of the present disclosure, the machine part may further include a separate antenna.

In an embodiment of the present disclosure, the machine part can transfer the payment information through only a POS device linked thereto in real time.

In an embodiment of the present disclosure, the machine part has an LED or display to show the state of an auxiliary device, for example, the battery state, payment progressing situation, or payment option.

An embodiment of the present disclosure may provide the auxiliary device with a charging function of a wireless method.

An embodiment of the present disclosure may provide the auxiliary device with a charging function of a wireless method and allows charging of a wireless method to be performed through an existing electronic device.

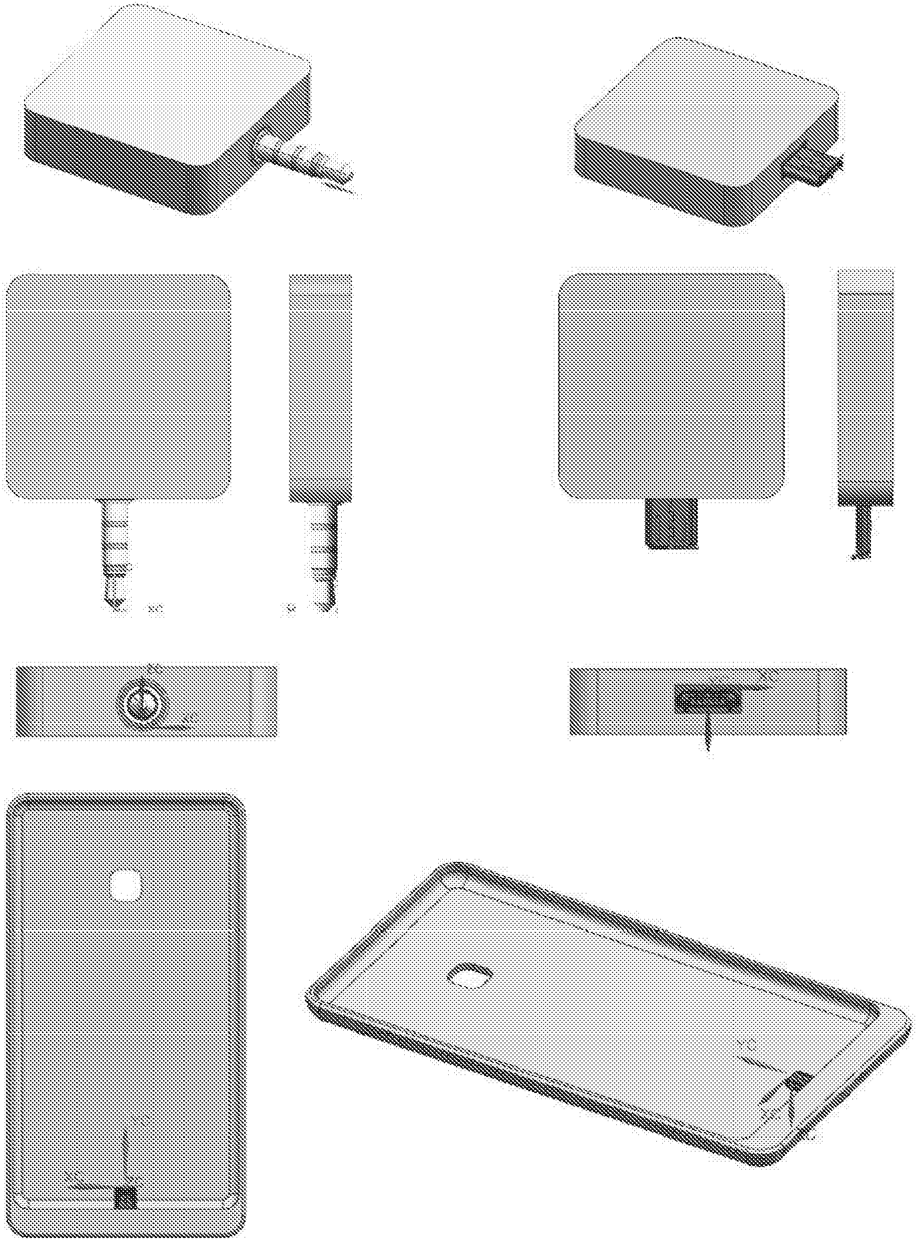

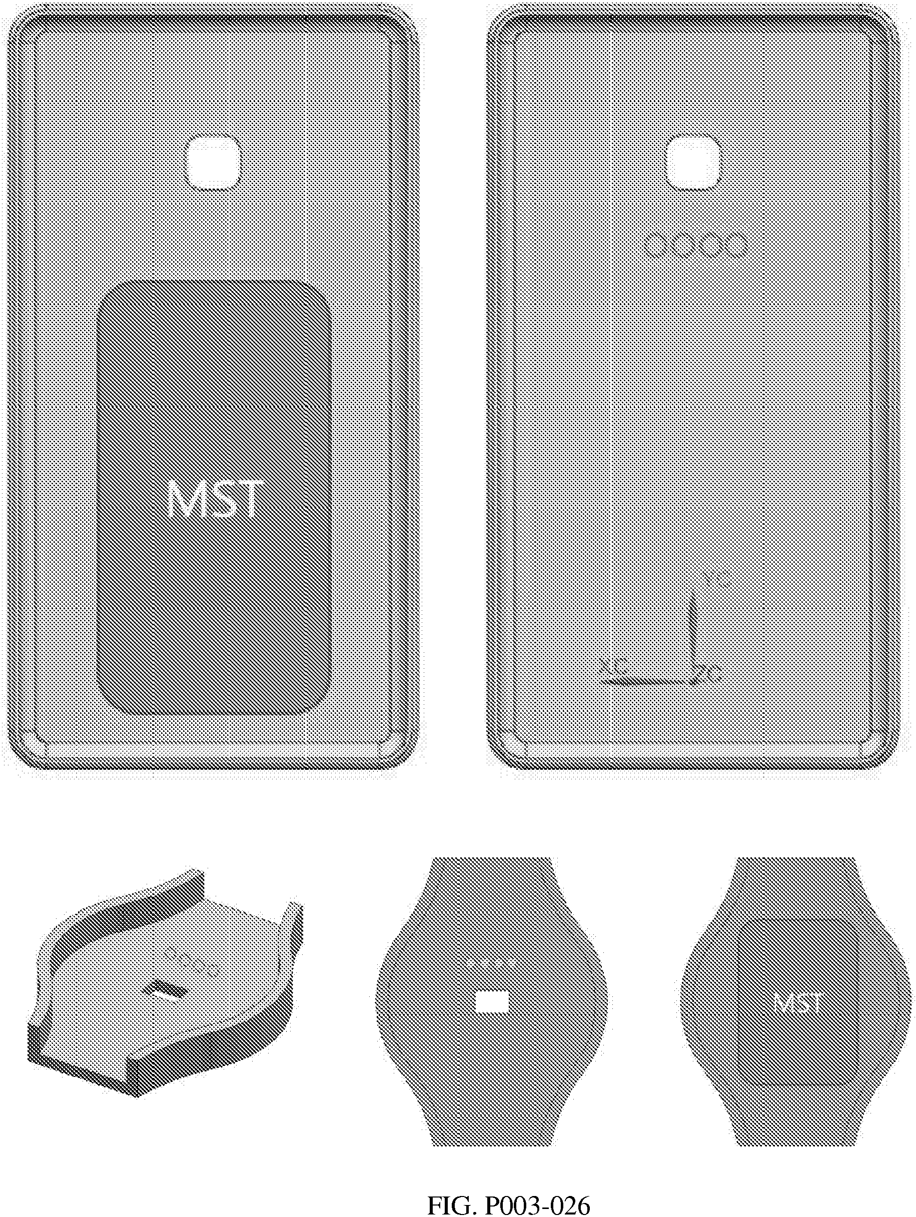

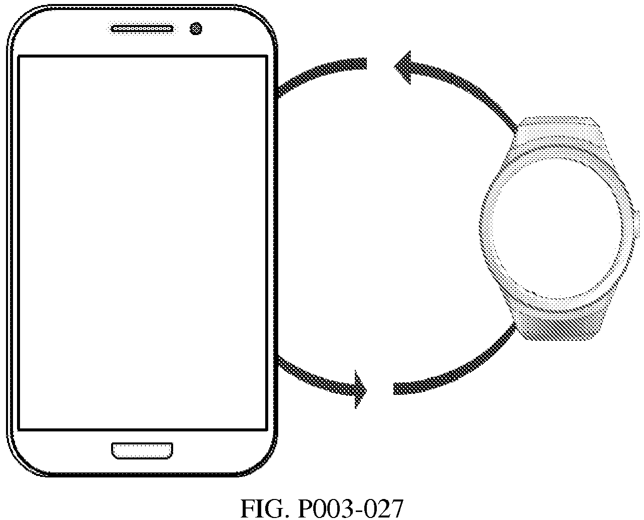

As described above, there may beIn an embodiment of the present disclosure, two devices may operate a token, which is one piece of data among data for which payment can be made by an electronic device connected to the present electronic device. There may be a memory area (e.g., a TEE or security module, or a storage area for operating an HCE) usable for storage in order to operate each token information.

In order to control card information for payment by a user, the card information may be displayed in a display and a display connected to each electronic device may be used to operate.

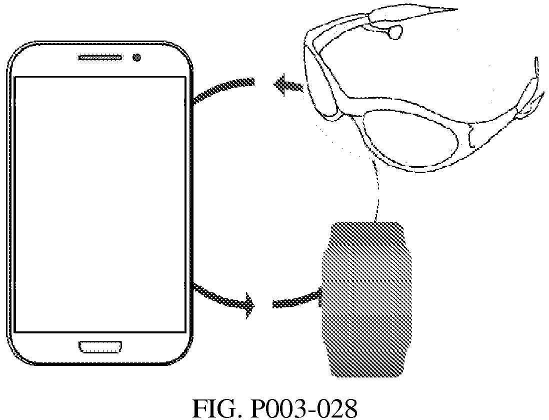

There may be at least two devices which can be operated by a user. The devices may separately have a memory unit and a display, respectively, and payment can be performed through an electronic device having the memory unit storing card information and an electronic device having a connected display.

For example, in the case of performing an exercise, the payment may be performed in a state where a glass type device and an electronic device having no display. The glass type device may provide a display for card selection or payment.

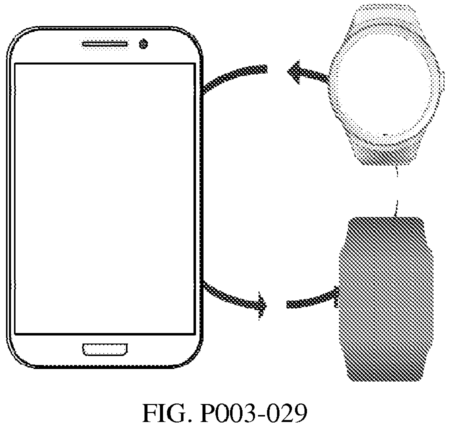

There may be at least two devices which can be operated by the user. At least two wearable devices may be used, and at least one memory unit and display may be operated according to a use scenario. One wearable device may have only a memory, while another wearable device may have both a memory and a display.

Since a user may wear different devices according to purpose of use, the connection relation and operation form may be different according to the form of the usable electronic devices.

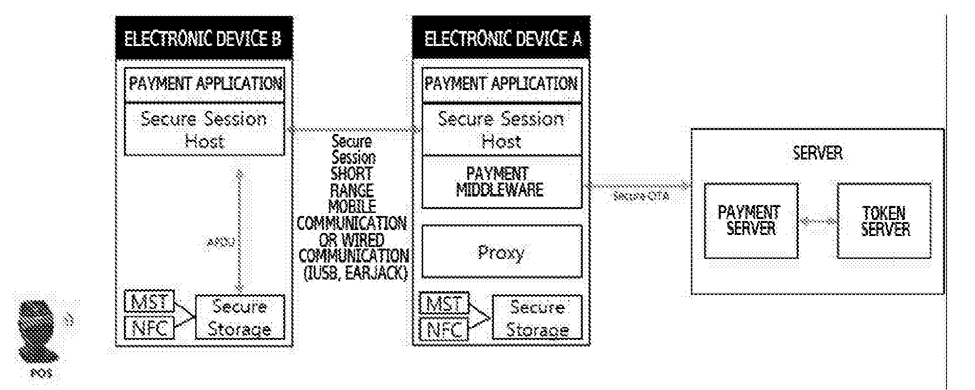

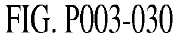

Modules necessary in the present figure may include a payment application, payment middleware, a payment server, a token server, a secure storage, and a secure session host. The payment application may be a service operating at the application level of electronic device A and electronic device B. The payment middleware may include an SDK operated by a card company, and may send, to the server, data processed by the payment middleware in response to a request from the payment application. Electronic device A and electronic device B may be devices connected to each other, and each electronic device may have a secure session host since the two electronic devices are connected through a secure session. The server may have a payment server including a security service management module for issuing a card and helping OTP processing, and may have a token server operated by an actual card issuance business provider.

In a state where electronic device A and electronic device B are connected through a secure session, if electronic device B is a device (e.g., wearable device) connected to electronic device A, electronic device B may not have a module functioning as payment middleware for communicating with the payment server. Since there is no payment middleware, electronic device B may borrow the function of electronic device A to issue a card or token. Electronic device B may not have a module for direct communication with the server. Electronic device B needs a network communication. However, a token may be normally issued for a communication function in electronic device A. In this event, the electronic device requesting the issuance and the payment middleware have different locations, and the server may thus issue the token, using information of electronic device A as well as information of electronic device B. For example, the payment server is allowed to issue a token only after receiving the information (e.g., IDs) of both electronic device A and electronic device B. The payment server may issue a token of electronic device B, based on only the information of electronic device A. Otherwise, the server may issue a token through information received from a payment server through a security connection between electronic device A and electronic device B. Information used in the above process may include at least one among device IDs of electronic device A and electronic device B and user IDs. The information used in the above process may include information associated with a card issued by electronic device A. The issued card may be stored in accordance with NFC or MST, and the stored device may be an electronic device A, electronic device B, or another type of electronic device connected thereto.

According to an embodiment of the present disclosure, a method of obtaining an issued token through electronic device A by electronic device B is provided, which includes:
Payment middleware of electronic device A: no payment middleware directly inter-acting with electronic device B;
Secure OTA network of electronic device A; and
User input UX of electronic device A.
The method described above may be applied when issuing a token with the assistance of electronic device A (e.g., a wearable device and an accessory).

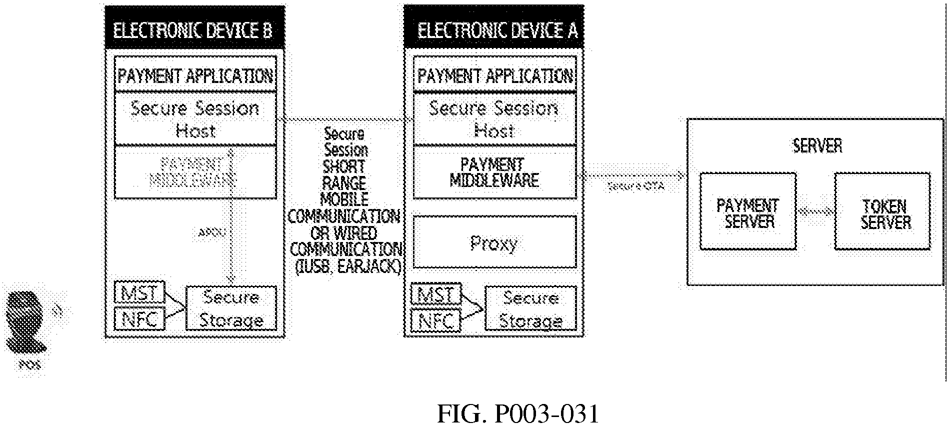

Modules necessary in the present figure may include a payment application, payment middleware, a payment server, a token server, a secure storage, and a secure session host. The payment application may be a service operating at the application level of electronic device A and electronic device B. The payment middleware may include an SDK operated by a card company, and may send, to the server, data processed by the payment middleware in response to a request from the payment application. Electronic device A and electronic device B may be devices connected to each other, and each electronic device may have a secure session host since the two electronic devices are connected through a secure session. The server may have a payment server including a security service management module for issuing a card and helping OTP processing, and may have a token server operated by an actual card issuance business provider.

This may correspond to a case where electronic device B has a payment middleware capable of directly interacting with the token server but does not have a modem for direct processing through a network or is unable to perform a communication, and thus performs a data communication through a payment middleware of electronic device A connected thereto capable of performing a network communication.

In a state where electronic device A and electronic device B are connected through a secure session, if electronic device B is a device (e.g., wearable device) connected to electronic device A, electronic device B has but does not use a module functioning as payment middleware for communicating with the payment server. Since this function has been deactivated, electronic device B may borrow the function of electronic device A to issue a card or token. When the payment middleware function has been deactivated, electronic device B may have been connected to, for example, electronic device A and have deactivated the module by a companion module. The module for the communication in electronic device B may be temporarily deactivated or may not exist. Electronic device B needs a network communication. However, a token may be normally issued for a communication function in electronic device A connected thereto. In this event, the electronic device requesting the issuance and the payment middleware have different locations, and the server may thus issue the token, using information of electronic device A as well as information of electronic device B. For example, the payment server is allowed to issue a token only after receiving the information of both electronic device A and electronic device B. As another embodiment, the payment server may issue a token of electronic device B, based on only the information of electronic device A. Otherwise, the server may issue a token through information received from a payment server through a security connection between electronic device A and electronic device B. Information used in the above process may include at least one among device IDs of electronic device A and electronic device B and user IDs. As another embodiment, the information used in the above process may include information associated with a card issued by electronic device A. The issued card may be stored in accordance with NFC or MST, and the stored device may be an electronic device A, electronic device B, or another type of electronic device connected thereto.

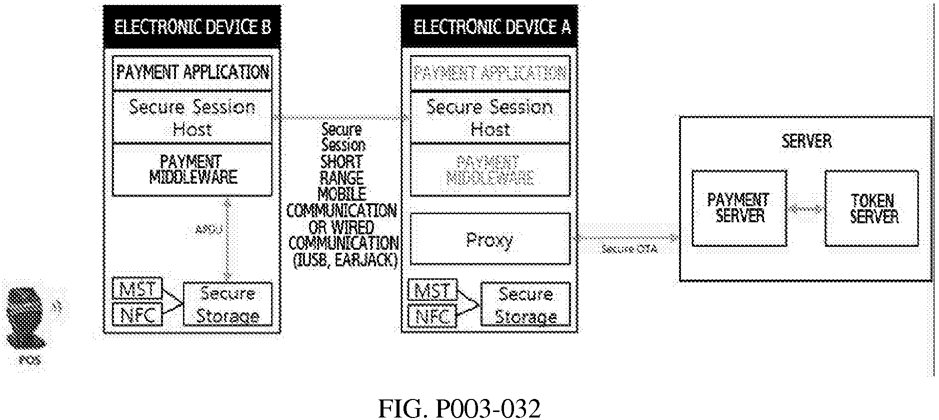

Modules necessary in the present figure may include a payment application, payment middleware, a payment server, a token server, a secure storage, and a secure session host. The payment application may be a service operating at the application level of electronic device A and electronic device B. The payment middleware may include an SDK operated by a card company, and may send, to the server, data processed by the payment middleware in response to a request from the payment application. Electronic device A and electronic device B may be devices connected to each other, and each electronic device may have a secure session host since the two electronic devices are connected through a secure session. The server may have a payment server including a security service management module for issuing a card and helping OTP processing, and may have a token server operated by an actual card issuance business provider.

In a state where electronic device A and electronic device B are connected through a secure session, if electronic device B is a device (e.g., wearable device) connected to electronic device A, electronic device B has a module functioning as payment middleware for communicating with the payment server and uses electronic device A as a simple proxy path. In this case, electronic device B may borrow the function of the payment middleware of electronic device A to issue a card or token. The modem for the communication in electronic device B may be temporarily deactivated or may not exist. Electronic device B needs a network communication. However, a token may be normally issued for a communication function in electronic device A connected thereto. In this event, the electronic device directly connected to the network and the payment middleware have different locations, and the server may thus issue the token, using information of electronic device A as well as information of electronic device B. For example, the payment server is allowed to issue a token only after receiving the information (e.g., electronic device IDs) of both electronic device A and electronic device B. As another embodiment, the payment server may issue a token of electronic device B, based on only the information of electronic device A. In this event, electronic device B may send an encryption key of electronic device B also to prevent electronic device A from opening or using an issued key when the key has been arrived. Otherwise, the server may issue a token through information received from a payment server through a security connection between electronic device A and electronic device B. Since there is a payment middleware capable of directly interacting with the server, electronic device A may operate only as a proxy. In this event, the payment middleware performing as only a path may not be separately used. Information used in the above process may include at least one among device IDs of electronic device A and electronic device B and user IDs. As another embodiment, the information used in the above process may include information associated with a card issued by electronic device A. The issued card may be stored in accordance with NFC or MST, and the stored device may be an electronic device A, electronic device B, or another type of electronic device connected thereto.

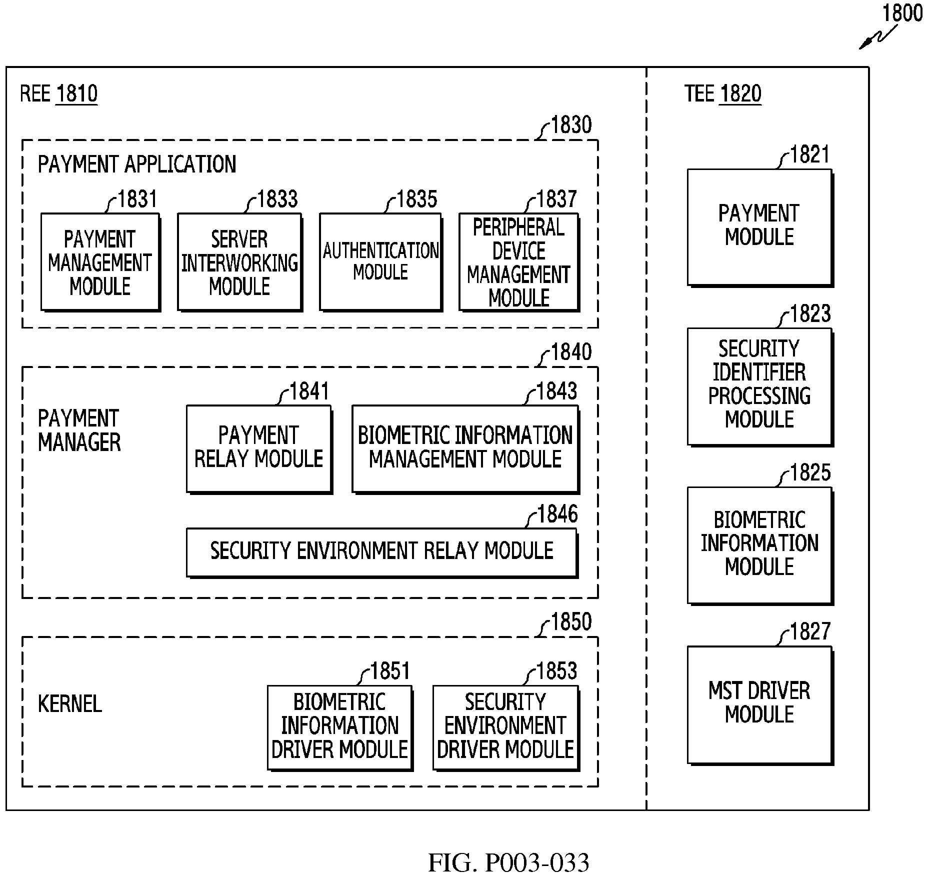

FIG. P003-033 is a program module may be executed in an execution environment 1800 of a wearable device capable of performing a payment function according to various embodiments. Referring to FIG. P003-033, the execution environment 1801 may include, for example, an REE 1810 and a TEE 1820.

According to an embodiment of the present disclosure, the REE may include, for example, a payment application 1830, a payment manager 1840, and a kernel 1850. The payment application 1830 may include, for example, a payment management module 1831, a server inter-working module 1833, an authentication module 1835, and a surrounding device management module 1837.

According to an embodiment of the present disclosure, the payment management module 1831 may perform operations for card registration, card authentication, card de-registration, and payment. The payment management module 1831 may register a user's card. The wearable device may receive a card registration request from the user. The wearable device may acquire a card image, using a camera module. The payment management module 1831 may acquire a card image through an OCR module. The payment management module 1831 may receive a user's input of information (e.g., a secret code, a home address, an e-mail address, a phone number, or an account ID) associated with the card information or acquire the information from the payment service server.

According to an embodiment of the present disclosure, the payment management module 1831 may display a registered card to the user through the display. The user may revise at least a part of the information (e.g., a card name, a home address, a phone number, the number of times of payment trials, or information on whether payment notification information has been received or not) of the registered card. The payment management module 1831 may display transaction details of each card. The payment management module 1831 may display the registered card information in a wearable device (e.g., a smart watch or accessory) functionally connected to another wearable device.

According to an embodiment of the present disclosure, the payment management module 1831 may perform a payment operation using a registered card. The user may select one card among a plurality of registered card. The user may take a wearable device to a POS device. The payment management module 1831 may display product information (e.g., price) received from the POS device through the display. The payment management module 1831 may perform user authentication (e.g., fingerprint authentication) through the authentication module 1835 for payment. When the authentication has been completed, the payment management module 1831 may display notification information reporting completion of payment through the display.

According to an embodiment of the present disclosure, a wearable device may receive a request for removal of at least one card among already registered cards from a user. The payment management module 1831 may delete information corresponding to the at least one card from the memory. The payment management module 1831 may request the payment service server to delete the information corresponding to the at least one card.

According to an embodiment of the present disclosure, the payment management module 1831 may check whether the owner of the card is identical to the user performing the card registration. The payment management module 1831 may include, for example, an identification module. The payment management module 1831 perform user authentication through text messages, e-mail, ARS, or phone call. Further, the authentication may be performed through an application issued by a card company or bank. The card registered through the payment management module 1831 may be used after being authenticated.

According to an embodiment of the present disclosure, the payment management module 1831 may include an OCR module. The OCR module may acquire, through a scanner, an image of a letter written by a human or printed by a machine and convert the image to a machine-readable letter. The wearable device may acquire an image of a card possessed by a user, through a camera module. The OCR module may convert an image, a letter, or a number written in a card, obtained from a card image, to a machine-readable letter. The OCR module may acquire card information (e.g., card number, user name, or valid period) of the user from converted letters. The wearable device may acquire the card information of the user through the OCR module and perform a card registration process.

According to an embodiment of the present disclosure, the payment management module 1831 may display a bar code generated for payment through the display. For example, the payment management module 1831 may receive, from the POS device 740, a command indicating generation of a bar code for payment through a bar code reader. The payment management module 1831 may generate a bar code based on the command.

According to an embodiment of the present disclosure, the server interworking module 1833 may receive a payment-related message, a device-related message, or a service-related message from the payment service server or the token service provider 730. The server interworking 1833 may transfer the message to the payment management module 1831.

According to an embodiment, the server interworking module 1833 may include, for example, a push management module and an account management module. For example, a message received from the payment service server may be processed by the push management module when the message is in the form of a push notification associated with a token, and may be processed by the account management module when the message relates to account-related information (e.g., a Samsung account).

According to an embodiment of the present disclosure, the push management module may calculate or handle the push notification or push message information received from the payment service server. The push message may be transferred to the server interworking module 1833 within the payment application 1830 through the payment relay module 1841 within the payment manager 1840 or 354 or directly transferred to the payment application 1830. At least some messages among transferred push messages may be transferred to the payment management module 1831 to update card-related information and be synchronized with the payment service server.

According to an embodiment of the present disclosure, the message information received by the push management module may include token and payment related information, such authority configuration (e.g., token provisioning), state change (e.g., token status change), additional issuance (e.g., token replenishment), and payment identification (e.g., transaction notification).

The messages transmitted/received by the account management module may include at least a part of wearable device-related information, a lost electronic device identification function (e.g., lost device, find my mobile), remote blocking (e.g., remote lock/unlock), membership management (e.g., loyalty/membership cards), a web-linked function (e.g., website portal-on-line).

According to an embodiment of the present disclosure, when the identification information acquired by the payment management module is successfully transferred through the payment service server to an external server and the transferred token-related information is valid, the server interworking module 1833 may receive, for example, a "push token {id} status changed" message and transfer the received message to the payment management module 1831.

According to an embodiment of the present disclosure, in regard to card information temporal suspension (e.g., token suspension) information acquired by the payment management module 1831 of an electronic device, a use stop command of the payment server 720 may be transferred to the payment application 1830 to switch the card configuration state for mobile payment from the active state to the inactive state.

According to an embodiment of the present disclosure, when the electronic device is lost, the payment service server may delete or temporarily stop all token information stored in the payment service server. In order to synchronize this with the payment application 1830, a push message may be transmitted. The payment service server may transfer the push message to the payment application 1830 through the payment relay module 1831 or the server interworking module (e.g. push management module or account management module) 1833.

According to an embodiment of the present disclosure, the account management module may manage, in the payment application, information including a user-specific identifier, card, or membership which the module exchanges with the payment service server. The user identifier may include an account, which a user has joined in order to manage cards (e.g., VISA® card or MasterCard®) of various business providers, a portal account associated with an electronic device, or a unique identifier (e.g., model name, MAC address, IMEI, serial number, UUID, or ID) of an electronic device. In addition, the unique identifier may have a value which has been generated by and transferred from the payment service server through the account.

The account management module may registration, addition, deletion, repeated registration, use suspension, or use restart of a card, using the account of the user or the identifier of the electronic device. Moreover, in the case of transmitting card information between a wearable device and another wearable device also, registration, addition, deletion, repeated registration identification, use suspension, or use restart of a card may be managed based on the generated account or electronic device identifier.

In this case, a management method based on an account may manage a plurality of electronic devices or a plurality of users sharing one account to use a unique account (e.g., a Samsung account) for each wearable device or synthetically manage a plurality of electronic devices by one account.

According to an embodiment of the present disclosure, information of a first card (e.g., VISA® card) and a second card (e.g., MasterCard®) generated through an OCR module of the payment management module 1831 may be used to register the cards on the basis of an account (e.g., registration02@mail.com) generated at the time of joining the Samsung account. The registered information may be synchronized based on the generated account and the payment service server.

According to an embodiment of the present disclosure, membership information generated through a bar code interface may be used to register the first card (e.g., VISA® card) and the second card (e.g., MasterCard®) on the basis of an account (e.g., registration01@mail.com) generated at the time of joining the Samsung account. The registered information may be synchronized based on the generated account and the payment service server.

Further, the account management module manages, while interworking with the server, the card information (e.g., VISA@ card identification) and membership information associated with a service account (e.g., registration01@mail.com). The membership information may be automatically linked, at the time of card payment, to payment processing information (e.g., payment amount) and membership accumulation information (e.g., points or mileage) to automatically accumulate or subtract the points or mileage.

When an application including an account management module is installed, the configuration state of a part or all of an existing registered card may be continuously linked and used by only one time of an account log-in process of a user even in any device. Further, even membership information having a relatively low authentication security level may be registered and linked on the basis of an account of the user to reduce additional authentication processes. The authentication module 1835 may display a UI for authentication of a user or a card for payment through the display. The authentication module may include, for example, a biometric information module.

According to an embodiment of the present disclosure, the biometric information module may acquire biometric information of a user. The biometric information may include, for example, information of, a fingerprint, an iris, a face image, voice, cardiac impulse, or blood pressure. The wearable device may acquire biometric information of a user through a sensor module. For example, the electronic device may acquire fingerprint information of a user through a fingerprint sensor. Otherwise, the wearable device may acquire iris information of a user through a camera module. The biometric information module may display a UI for acquiring biometric information of a user through the display.

According to an embodiment of the present disclosure, when a user tries payment using card information registered in a wearable device, the biometric information module may perform an authentication in order to acquire security data (e.g., token) from a security memory (e.g., security module or memory accessible in TEE) functionally connected to the wearable device. The wearable device may acquire biometric information (e.g., fingerprint or iris) of the user through the biometric information module for user authentication. The acquired biometric information may be transferred to the biometric information management module 1843 of the payment manager 1840. The security memory may be a memory including data stored by encryption key.

According to an embodiment of the present disclosure, the biometric information management module 1843 may proceed with payment, using card information and biometric information registered in the wearable device, when the user proceeds with electronic payment on an Internet web page. In order to acquire security data (e.g., token) from a memory or security module (e.g., an eSE or a memory accessible in TEE) functionally connected to the wearable device, the user may perform an authentication. When user authentication has successfully progressed in an electronic device, the wearable device is linked to an external server to enable fast automatic authentication (e.g., FIDO) without electronic payment on a separate Internet web page. That is, instead of an authentication process required at the time of on-line payment, a fast authentication may be performed by liking to the biometric information module.

According to an embodiment of the present disclosure, the wearable device may previously appoint a fingerprint of a user and a card to be used for payment. For example, when the user performs authentication using a fingerprint in the payment application, the user may appoint his or her right hand thumb to VISA® card and his or her right hand index finger to MatserCard®, so that payment through a corresponding card can be achieved as soon as the user performs authentication using a corresponding finger.

According to an embodiment of the present disclosure, the peripheral device management module 1837 may manage an external device functionally connected to a wearable device. The peripheral device management module 1837 may include, for example, an MST peripheral device module and a wearable device module.

According to an embodiment of the present disclosure, the MST peripheral device module may output information on whether an MST accessory (e.g., LoopPay fob) and the electronic device are connected or not wirelessly or wiredly, and may provide a UI proper for the user on the basis thereof. The UI may progress and output card registration or deletion, or payment in a state where the MST accessory has been connected thereto. The MST surrounding device module may store various card information necessary for payment in the electronic device or a separate memory within the MST accessory, in a state where it is connected to the MST accessory. As a result, the electronic device or MST accessory can independently progress the payment in a state where the MST accessory is not connected.

The wearable device module may output information on whether another electronic device (e.g., watch, headset, glasses, or ring) and the wearable device are connected or not wirelessly or wiredly, and may provide a UI proper for the user on the basis thereof. The wired or wireless connection may include various interfaces, such as BT, BLE, WiFi, Zigbee, or Z-wave, and may be implemented by applying a particular accessory protocol (e.g., SAP). The UI may progress and output card registration or deletion, or payment in a state where the wearable device has been connected thereto. In the process of card registration, deletion, or payment, the wearable device module may output information on whether to generate a secure session with the wearable device, and transmit or receive and display a user input value on the electronic device or wearable device. The input of the user may include various card information required for payment and other additional authentication information (e.g., PIN, user-specific pattern-related data, fingerprint recognition-related data, a touch input value of the display or wearable device bezel unit).

According to an embodiment of the present disclosure, the wearable device may share one piece of payment information with the wearable device or another electronic device. For example, information on one VISA® card may be stored in both the wearable device and the electronic device. The electronic device may store different pieces of card information generated from one piece of of card information in the wearable device and the accessory, respectively. For example, among different tokens issued from one piece of VISA® card information, one token may be stored in the electronic device while the other token is stored in the accessory or wearable device. When a different token issued from one piece of card information is stored in the electronic device while the other token is stored in the accessory or wearable device, if a payment module of one device is activated, a payment module of the other device may be deactivated. For example, among different tokens issued from one piece of VISA® card information, if one token is stored in the electronic device while the other token is stored in the accessory or wearable device, payment of the electronic device may be deactivated when the payment is performed by the wearable device. In addition, when the payment is performed by the electronic device, payment by the wearable device may be deactivated.

According to an embodiment of the present disclosure, the payment manager 1840 may include, for example, a payment relay module 1841, a biometric information management module 1843, and a security environment relay module 1846.

According to an embodiment of the present disclosure, the payment relay module 1841 may relay a card or information (e.g., a token) corresponding to the card to the payment application, the kernel, or a first external device. The payment relay module 1841 may perform off-line payment through a communication module (e.g., NFC module or MST module). A payment method using the NFC may be operated through a POS device, and a payment method using the MST may be operated by a user input. Further, the payment relay module 1841 may perform on-line payment through a communication module (e.g., cellular module, RF module, or WiFi module).

According to an embodiment of the present disclosure, the payment relay module 1841 may perform state management (e.g., card/token life cycle management) of a card or information (e.g., a token) corresponding to the card. The payment relay module 1841 may provide at least one API associated with payment to the payment application 1830.

According to an embodiment of the present disclosure, the payment relay module 1841 may further include at least one interface provided by system services associated with payment, and system service interfaces, which provide security UIs for a payment service for access to a payment module, TIMA for kernel integrity authentication, fingerprint recognition result inquiry (e.g., supporting both the security and non-security mode), and PIN or PAN input. The payment relay module 1841 may include an encryption library in order to transfer a message or command to the TEE 1820. The payment relay module 1841 may send or receive a message or command with the TEE 1820 through the encryption library.

According to an embodiment, the payment relay module 1841 may include a card management function which provides addition, deletion, or update of a card, as a general card management function. The payment relay module 1841 may include a first payment SDK or a second payment SDK. The first SDK (e.g., Samsung SDK) may be embedded in an electronic device. The second SDK may be provided by a card company or bank and may be installed in an electronic device. From the first payment SDK or second SDK, the payment relay module 1841 may select a payment SDK corresponding to card information. Further, the payment relay module may set a basic card or select another card other than the basic card.

According to an embodiment of the present disclosure, the payment relay module 1841 may transmit messages, such as token provisioning, token replenishment, token suspension, token resume, and token disposal, as a general token and key management function, to the first external device.

According to an embodiment of the present disclosure, another external electronic device outside a wearable device may acquire a token or token cryptogram from the payment module 1821 of the TEE 1820. A key (e.g., a LUK) capable of generating the token or token cryptogram may be stored in the REE 1810 or TEE 1820. Moreover, when the token and the key are stored in the REE 1810, the payment module of the TEE 1820 may encrypt and store the token and key, using the key of the TEE 1820. When the wearable device performs payment, the payment relay module 1841 may acquire the encrypted token in a decrypted state through the payment module. When the token or key capable of generating the token cryptogram is stored in the TEE 1820, the wearable device may store the token or key in an encrypted form, using the key of the TEE 1820.

According to an embodiment of the present disclosure, the payment relay module 1841 may receive a push message from the token server and transfer the push message to the payment application.

According to an embodiment of the present disclosure, when the first payment SDK (provided by a card company or bank) provides a self-token management function, the payment relay module 1841 may further include a function of relaying a token management function request to the second payment SDK when receiving the request. For example, the payment relay module having acquired a token or key, using an SDK of VISA® card, may transfer the token or key to the payment module within the TEE 1820, using a Samsung™ SDK. The payment relay module 1841 may further include, on a payment framework, an HCE function which enables a virtual card to be used in an electronic device by only software without a separate hardware device (e.g., security module or SE) at the time of payment. The HCE function may transfer a token and a token cryptogram through a communication module (e.g., NFC), using a message associated with the POS device.

According to an embodiment of the present disclosure, the payment relay module 1841 may include a function of processing a message received from a POS device. The POS-related message processing function may include a function of managing payment data to be sent to the POS device as a response. The POS-related message analysis function may include a function of, when the first payment SDK provides a self POS-related message processing function, relaying the POS-related message to the first payment SDK. According to an embodiment of the present disclosure, the payment relay module 1841 may include at least one database for storing the card data, token data, or transaction data.

According to an embodiment of the present disclosure, the payment relay module 1841 may select at least one method among a method using NFC and a method using MST. For example, the methods may include a method of first performing payment using NFC and then performing payment using MST, a method of first performing payment using MST and then performing payment using NFC, and a method of performing payment simultaneously using NFC and MST. In the case of first performing payment through one communication module and then performing payment through another communication module, the payment relay module 1841 may perform payment through the another communication module when there is no response to a result of payment performance from the communication module having first performed the payment or after passage of a predetermined time.

According to an embodiment of the present disclosure, in the case of having both token information and PAN information for one card, the payment relay module 1841 may use at least one of them for payment. The payment relay module may determine whether a POS device can perform payment using PAN and whether a token is available for payment. For example, the wearable device may receive payable information through BLE, and the payment relay module may identify the information. Based on the identified information, the payment relay module 1841 may perform the payment using a token when the token is available for the payment and using PAN when the PAN is available for the payment.

According to an embodiment of the present disclosure, the payment relay module 1841 may further include an SDK provided by a payment network. The SDK may further include token management, POS-related message processing, or token/card databases.

According to an embodiment of the present disclosure, the security environment relay module 1846 may further include a function enabling a payment application 1830 to access the biometric information driver module 1851 or the security environment driver module 1853 in order to use functions provided by the payment module 1821 or the biometric information module 1825. The payment relay module 1841 may include an encryption library in order to transfer a message or command to the security environment relay module 1846. The payment relay module 1841 may send or receive a message or command with the security environment relay module 1846 through the encryption library.

An embodiment of the present disclosure may further include a security environment relay module 1846 connected to enable the payment application to use functions of the security identifier processing module of the TEE 1820, in the payment manager 1840.

According to an embodiment of the present disclosure, the payment relay module 1841 may include a function of relaying an authentication request through a PIN input by the payment application 1830 to the security identifier processing module 1823 of the TEE 1820. The relaying function is described above in detail with reference to FIG. 22.

When there is a request for fingerprint recognition, a general application may acquire information on whether the recognition is success or failure. The security payment application may acquire a security biometric result. The security biometric result may have a form encrypted by combining a disposable random number and information of success/failure. The disposable random number may be encrypted using a hardware key of the TEE 1820.

According to an embodiment of the present disclosure, the payment relay module 1841 may transfer a message requiring execution of payment to the payment module 1821 through the security environment driver module 1853 in order to perform payment. The payment module 1821 may notify the payment relay module 1841, through the security environment driver module 1853, that an authentication operation is necessary. The payment relay module 1841 may issue a command requiring the biometric sensor 240I to acquire biometric information through the biometric information management module 1843 and the biometric information driver module 1851. In addition, the payment relay module 1841 may transfer an authentication identification message to the biometric information module 1825 of the TEE 1820 through the biometric information management module 1843 and the security environment driver module 1853. The biometric information module 1825 may be acquired from the biometric information module 1825 of the TEE 1820. The biometric information module 1825 may identify a user's identity by comparing prestored biometric information of the user and information acquired by the biometric sensor 240I. Based on the identified information, the biometric information module 1825 may transfer success or failure of authentication to the biometric information management module 1843 through the security environment driver module 1853, and the biometric information management module 1843 may transfer the received information to the payment relay module 1841. The payment relay module 1841 and the biometric information management module 1843 may be configured to be integrated in a single construction or configured as separate modules.

According to an embodiment of the present disclosure, the payment relay module 1841 may perform an authentication through an external device. For example, the wearable device may request the payment service server (e.g., a Samsung account server or token requester server) 720 to authenticate biometric information (e.g., a fingerprint or an iris). The payment service server may perform authentication of biometric information of a user and transfer a result of the authentication to the wearable device. When the authentication has been completed, the payment relay module 1841 may perform a token provisioning process by transferring data including information that the authentication has been completed to the token service provider. Further, according to a result of the authentication, the wearable device may perform payment when the authentication is successfully completed, or may not perform payment when the authentication fails or is not completed. The kernel 1850 may include, for example, the biometric information driver module 1851 and the security environment driver module 1853. The biometric information driver module 1851 may transfer a message transferred from the biometric information management module 1843 of the payment manager 1840 to the biometric sensor 240I. The biometric information obtained by the biometric sensor may be transferred to the biometric information module 1825 within the TEE 1820 instead of being transferred to a module within the REE 1810 through the biometric information driver module 1853.

According to an embodiment of the present disclosure, the security environment driver module 1853 may perform as an interface for transfer from a module in the REE 1810 to a module in the TEE 1820. For example, in the case of the trustzone of ARM, which is an embodiment of the TEE 1820, an application processor time-divisionally performs the operations of the REE 1810 and the TEE 1820, and a separate data path for transferring a message from the REE 1810 to the TEE 1820 may be implemented by hardware. In this event, a driver module for accessing the hardware may be the security environment driver module 1853. The security environment driver module 1853 may transfer a message relating to an operation of a module in the TEE 1820 to a module in the REE 1810.

According to an embodiment of the present disclosure, the TEE 1820 may include, for example, the payment module 1821, the security identifier processing module 1823, the biometric information module 1825, and an MST driver module 1827. The electronic device 701 may store data requiring a relatively high security and perform related operations in a safe environment. The TEE 1820 may operate on an application processor of an electronic device, and a reliable TEE 1820 determined in the step of manufacturing an electronic device may refer to a security area within the electronic device. The electronic device may process data requiring a relatively high security on the basis of a safe hardware structure through the TEE 1820. The TEE 1820 may enable the application processor and the memory area to operate in a state of being divided into a general area and a security area. Moreover, the TEE 1820 may enable software or hardware requiring security to operate in only the security area. When the REE 1810 of a wearable device is required to perform an operation related to sensitive information, the electronic device may be allowed to access the TEE 1820 only through an API and a driver capable of accessing the TEE 1820. The TEE 1820 may hand over limited data on related information to the REE 1810. The TEE 1820 may encrypt internally stored data, through a hardware key. Without a separate decryption process, the REE 1810 may unable to interpret data within the TEE 1820.

An application within the TEE 1820 may transfer a message to another electronic device (e.g., the token service provider 730) outside of the wearable device.

According to an embodiment of the present disclosure, the TEE 1820 may include a trusted OS and a security application. In addition, the TEE 1820 may include an encryption module related to the security, a driver capable of collecting data in hardware requiring security, etc. The security application may include a payment module. In addition, the trusted application may transfer payment information to the outside through a communication module. For example, the trusted application may transfer the payment information to the MST controller through the MST driver or the NFC controller through the NFC driver to transmit the information to a third external device (e.g., a POS device).

According to an embodiment of the present disclosure, the trusted application may check whether the REE 1810 has an integrity. The electronic device may store, in the TEE 1820, information on whether the REE 1810 has an integrity. According to a booting sequence in the case of an REE 1810 booting that supports the TEE 1820, when a boot loader is executed, the TEE 1820 may be first booted and the REE 1810 is then booted. When the TEE 1820 is booted, the integrity information of the REE 1810 is identified in the TEE 1820, and the identified information may be reported to a user after the REE 1810 booting. If the image of REE 1810 has been damaged due to hacking or rooting, the REE 1810 may determine that the integrity thereof is problematic. When the integrity is problematic, the REE 1810 may be prohibited to access the TEE. For example, when the payment relay module 1841 tries to transfer a message or command to the TEE 1820 through the security environment driver module 1853, a kernel of the TEE 1820 may disregard the message or command or deny receiving the message.

According to an embodiment of the present disclosure, the payment module 1821 may be an application installed by a bank or card company (e.g., VISA® card or MasterCard®). There may be at least one payment module. If a user, in a wearable device, accesses the payment service server or token server, using the payment management module 1831, and approves installation of the payment module 1821, the token server may perform an operation associated with the installation. For example, the payment management module 1831 may acquire a card number and valid term information of a plastic card through OCR, and perform a card registration operation for installing the payment module 1821 in the server. The payment management module 1831 may connect to the token server in the network through the payment relay module 1841 having connection information of the token server according to each card/bank company to receive an installation file, and the payment relay module 1841 may transfer the information to the TEE 1820 to install the payment module 1821. There may be a plurality of payment modules 1821 of the TEE 1820. Each payment module 1821 is unable to exchange data within the TEE 1820 and may be configured in an isolated form.

According to an embodiment of the present disclosure, the payment module 1821 may be an application to be used for data communication with the payment service server. The payment module 1821 may include information of a credit card, a debit card, a membership card, etc. The payment module 1821 may communicate with another external electronic device through encryption. The encryption process may be different according to the card manufacturing company having transferred the payment module. The server may control the state of the payment module. For example, the server may activate, temporarily stop, re-activate, or delete the payment module.

According to an embodiment of the present disclosure, the payment module 1821 may store information related to the card information. For example, the information associated with the card may be at least one among, for example, a token corresponding to the PAN, a token requester ID, a part of the PAN, a valid term of a token, a key, and a value (e.g., OTP) provided by the token server.

According to an embodiment of the present disclosure, the payment module 1821 may determine a card to be used for payment. For example, a payment module 1821 corresponding to a card selected by the user in at least one payment management module 1831 may be determined according to a user's selection. The payment management module 1831 may transfer the determined card to the payment relay module 1841. The payment relay module 1841 may transfer the determined card information to the payment module 1821 through the security environment driver module 1853. The payment module 1821 may manage a list of cards actually used in the payment among possessed cards. The list of cards actually used in the payment may be changed based on the determined card information. The changing may include a method of raising the priority of the determined card information in the card list or a method of deleting the other card information except for the determined card information.

According to one embodiment, the payment module 1821 may receive a key (e.g., a LUK) capable of producing a cryptogram through the token server or the payment service server (e.g., account management server or token requester server). The key may be transferred and received through a data network or an SMS.

According to an embodiment of the present disclosure, the payment module 1821 may generate a token cryptogram, using a key (e.g., a LUK) capable of generating the cryptogram. The payment module 1821 may use different keys according to a predetermined rule, for example, in each transaction, in a predetermined number of times of transaction, or a transaction within a particular time.

According to an embodiment of the present disclosure, when the payment is performed, the electronic device may transfer a message reporting that the payment application will perform the payment, to the payment relay module 1841. The payment relay module 1841 may determine whether to use MST or NFC for the payment.

According to an embodiment, the biometric information module 1825 may store biometric information of a user of the electronic device and compare the biometric information with information obtained by the biometric sensor 240I to authenticate the user. The biometric information module 1825 may include a fingerprint information module or an iris information module. The biometric information module may collect information from the biometric sensor 240I. When the payment application shows, through the display, contents requiring authentication of the biometric information of the user, the user may transfer the biometric information through the biometric sensor 240I. The authentication module 1835 of the payment application 1830 may transfer, through the biometric information management module 1843, a message requiring collection of biometric information to the biometric information driver module 1851. The biometric information driver module 1851 may transfer the message to the biometric sensor 240I. The biometric sensor 240I may collect biometric information and transfer the biometric information to the TEE 1820. The biometric information module 1825 of the TEE 1820 may compare the collected information with the stored biometric information of the user and transfer information on whether to authenticate the collected information, to the authentication module 1835 of the payment application 1830 through the security environment driver module 1853 and the biometric information management module 1843 of the REE 1810. The payment application 1830 may show, through the display, whether to authenticate. The biometric information of the user may be stored in the TEE 1820, stored in the REE 1810 in an encrypted state, or stored in the security module (e.g., an eSE) 236.

According to an embodiment of the present disclosure, the security identifier processing module 1823 may acquire, through a user input, an input value, which is necessary for the electronic device or is associated with payment or authentication. For example, the input value may be a PIN during payment. Also, the input value may include information related to the card. For example, the input value may be a PAN, valid term, or CVV. In addition, the information may include an IC PIN or ATM PIN. The security identifier processing module 1823 may be indicated in the form of an application. A graphic library necessary for illustration of the application of the security identifier processing module on a screen may be stored in the TEE 1820. The graphic library stored in the TEE may be different from a graphic library in the REE 1810. The security identifier processing module 1823 may perform user authentication by an input value, such as PIN, and may transfer a result of the authentication to the payment management module 1831 through the payment relay module 1841. The security identifier processing module 1823 may receive an encrypted disposable random number (e.g., a nonce) transferred through the security environment driver module 1853 by the security environment relay module 1846. The security identifier processing module 1823 may encrypt the disposable random number and the input value acquired through the user input, using an encryption key in the TEE 1820, and transfer them to the security environment relay module 1846. The security environment relay module 1846 may transfer the encrypted input value and disposable random number to the payment module 1821 through the security environment driver module 1853. The payment module 1821 may decrypt the input value and disposable random number, using a hardware key in the TEE 1820. The payment module may identify that the input value transferred through the REE 1810 has an integrity, based on the point that the generated value and the received value of the disposable random number are the same. The payment module 1821 may perform user authentication through the input value, based on the point that the input value has an integrity. The payment module 1821 may perform payment through user authentication. A factory reset refers to an operation of returning a software image of an electronic device to the original state at the time when the electronic device is shipped from a factory. This operation may be performed as an explicit operation of a user through an application. Moreover, a module for determining and monitoring a hacking by a predetermined condition (e.g., when it is determined that the system has been hacked) may perform a factory reset. When the operation is performed, data stored in the electronic device is reset and the payment-related information of the user also may be thus reset. The payment-related information may be stored in the payment service server. When the user accesses the payment service server based on an account, the user may be allowed to perform operations of registering a card and installing a payment module again on the basis of the payment-related information. When the data is reset, the payment-related module stored in the electronic device may notify the token server of the resetting through the payment service server to deactivate the token server. When a network of an electronic device has been deactivated, it may be impossible to perform the operation of notification. In this event, the electronic device may perform the factory reset and then access the account of the payment service server on the basis of an account. The electronic device may identify a list of pre-registered cards through the payment service server, and may deactivate a card module or token of the electronic device pre-registered in the token server through the payment service server. in addition, based on the card list of the payment service server, the electronic device may perform card registration again and receive a payment module, token, etc.

According to an embodiment of the present disclosure, a wearable device to perform payment is provided.

A connection between electronic device A and electronic device B may be made based on a secure connection. The secure connection may be made, for example, based on BT, or may be made by an accessory protocol. When the connection between the two devices is completed, the state of electronic devices A and B may be checked. Data needed to check the state may be related to whether each electronic device supports a payment application or not, whether a payment service is available or not, the payment service support type, and the like.

**Table 6**

| **Whether electronic device A supports payment application/payment middleware or not** | **Whether electronic device B supports payment application/payment middleware or not** | **Device capable of using payment service** |
|---|---|---|
| O | O | Electronic Device A |
| | | Electronic Device B |
| O | X | Electronic Device A |
| X | O | Electronic Device B |
| X | X | X |

Table 6 above is an exemplary table indicating whether a payment service is available or not according to whether a payment application is supported by each device. When a payment service can be used by electronic device A, and when electronic device B, which is connected thereto, does not support the payment service, the payment service can only be used through electronic device A. When both electronic devices A and B support a payment service, the payment service can be used through each or both of electronic devices A and B. When electronic device A does not support a payment application, and when electronic device B solely supports the payment application, the payment service can also be used in electronic device B alone, provided that electronic device B allows direct issuance of a token from the payment server. When electronic device A does not support the payment application and the payment middleware, but only plays the role of a proxy and is connected to electronic device B, the payment process can be processed through the payment application and payment middleware of electronic device B. When neither electronic device A nor electronic device B supports the payment application, the payment service may be unavailable.

As an example, when it is determined that electronic device A and electronic device B enable the payment service, the user may be provided with a user interface after determining that a user interface (for example, UI or UX) of a payment application, which is necessary for payment, is not being shown.

According to an embodiment of the present disclosure, electronic device A and electronic device B may be connected through an existing wireless connection means, such as Bluetooth, BLE, WiFi, or Zigbee. Furthermore, electronic device A and electronic device B may be connected through a wireless connection means, such as a serial cable, a parallel cable, USB communication, or an ear jack, thereby performing functions.

According to an embodiment of the present disclosure, electronic device A and electronic device B may be connected through a security-enhanced connection on the basis of an existing wireless connection means (for example, communication means such as Bluetooth, BLE, WiFi, Zigbee) or a wired connection means (for example, a serial cable, a parallel cable, USB communication, connection through an ear jack).

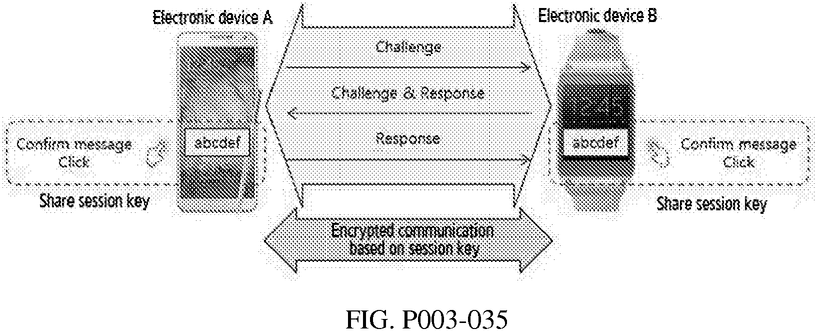

FIG. P003-035 illustrates an example of paring between electronic device A and electronic device B; electronic devices A and B may have an equal relationship; alternatively, electronic device B may be subordinate to electronic device A. In the above example, electronic devices A and B are connected through a session key-based encrypted communication network, and electronic devices A and B may confirm the connection by checking mutual messages through a challenge-and-response technique.

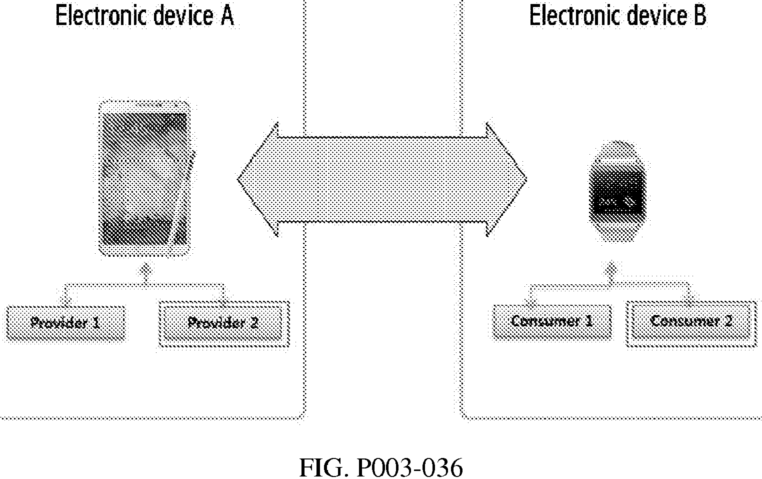

FIG. P003-036 illustrate another example of paring between electronic devices A and B are paired, electronic devices A and B may use an encryption technique for protecting data communication of the application itself, separate from protection of the communication channel. FIG. As illustrated in FIG. P003-036, electronic device A has application A (provider 1) and application B (provider 2) installed therein, which are provided by respective application providers; in the case of electronic device B, application C (consumer 1) and application D (consumer 2) exist, which are paired with application A and application B, which are provided by respective application providers. In this case, application A (provider 1) and application C (consumer 1) are configured to constitute a pair and perform operations, and this is the same in the case of application B (provider 2) and application D (consumer 2). In order to apply security, applications may use respective encryption keys and isolate/protect data between applications. By using the corresponding encryption key, devices A and B can perform communication between devices at a higher level of security.

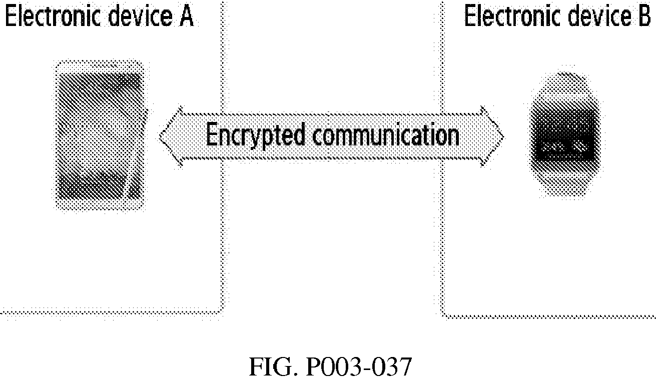

FIG. P003-037 illustrates an example of paring between electronic device A and electronic device B. In the above example, when electronic devices A and B, which are paired, transfer data, an encrypted communication technique is used; when electronic device A sends data, electronic device A conducts encryption, and electronic device B conducts decryption; and, in the opposite case, i.e. when electronic device B sends data, electronic device B conducts encryption, and electronic device A conducts decryption.

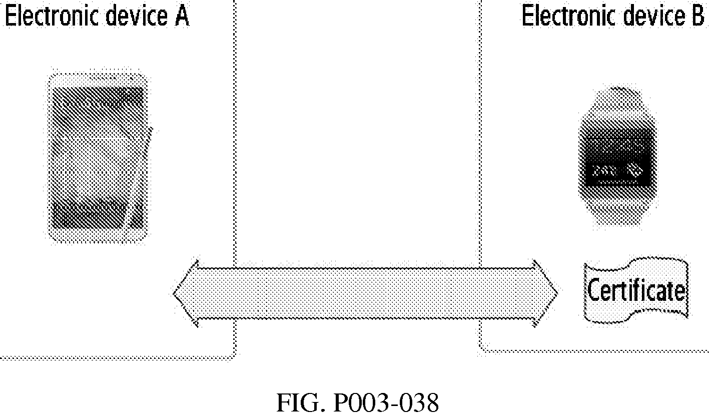

FIG. P003-038 illustrates an example of the present disclosure, a connection provides security through validating of verification information, which is included in a certificate provided by electronic device B or electronic device A, and/or validating of a digital signature provided by an accessory. The standard certificate may server as a container of data, such as the certificate creator (issuer, country, etc.), the certificate type, the valid certificate date range, and other metadata. In addition, the certificate is created and signed by at least one certificate authority (CA), and has a unique serial number.

In an example, the certificate can verify a certified signature using device class information and a public key, besides metadata as a standard certificate. The certificate may be used to transfer a public key and specific information of other electronic device A or electronic device B to electronic device A or electronic device B.

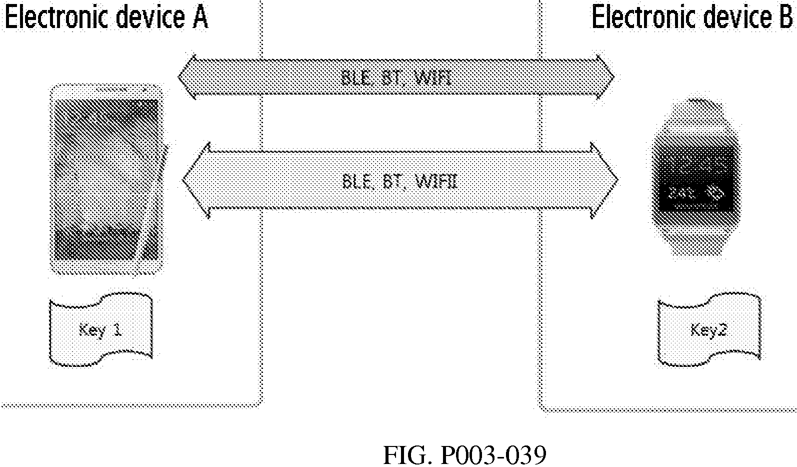

FIG. P003-039 illustrates an example of a system in which electronic device A and electronic device B are connected. Electronic devices A and B may be interconnected through at least two kinds of wireless or wired connection technologies. In this case, the first wireless or wired connection technology may be used to determine whether a device, to which a connection is to be made, exists in the periphery or not. As the corresponding technology, BLE, BT, WiFi, or the like may be used. Furthermore, the first wireless or wired connection technology may be used to wake up a device, which is to be used for connection. The second connection technology may be used to transmit data between two devices, which are ready to be connected. As the corresponding connection technology, in this case, BLE, BR, WiFi, or the like may be used.

In addition, field values of at least one piece of user ID information of two devices may be used for the corresponding connection, and may be used for encrypted communication. For example, a key may be generated in electronic device A through the user ID's telephone number, email, or the like, and a key, which is paired with the corresponding key, may be generated in electronic device B, thereby enhancing security.

The security techniques given above as examples may be used separately or simultaneously, and the connection between electronic devices A and B may be made using not only a general device-to-device communication means, but also any technique that employs enhanced security.

When at least two electronic devices are connected, there may be an operation that needed to be checked prior to card issuance and verification. In one of various embodiments, when a wearable electronic device is connected to a main electronic device, the wearable electronic device may first ask the user whether or not to use a payment service. Through this operation, an application, which can be used by the user, may be made invisible and then visible. When the user determines to use the payment service, he/she may select and input a security method necessary for application execution or transaction processing. For example, the user may be requested to input a password, which is composed of a PIN, characters, numbers, or symbols, or biometric security information (not illustrated) such as fingerprint or iris. After security data input is completed, basic operations for card issuance and verification may be finished, and the next operation may proceed.

In one of various embodiments, it can be confirmed during an intermediate operation whether a PIN has been input or not; when it is told that there is PIN information stored already, input of the PIN may be requested right after application execution; when the PIN does not match, multiple opportunities may be provided and processed (for example, five times); and, when the PIN does not match, a movement may be made to an operation of processing PIN errors.

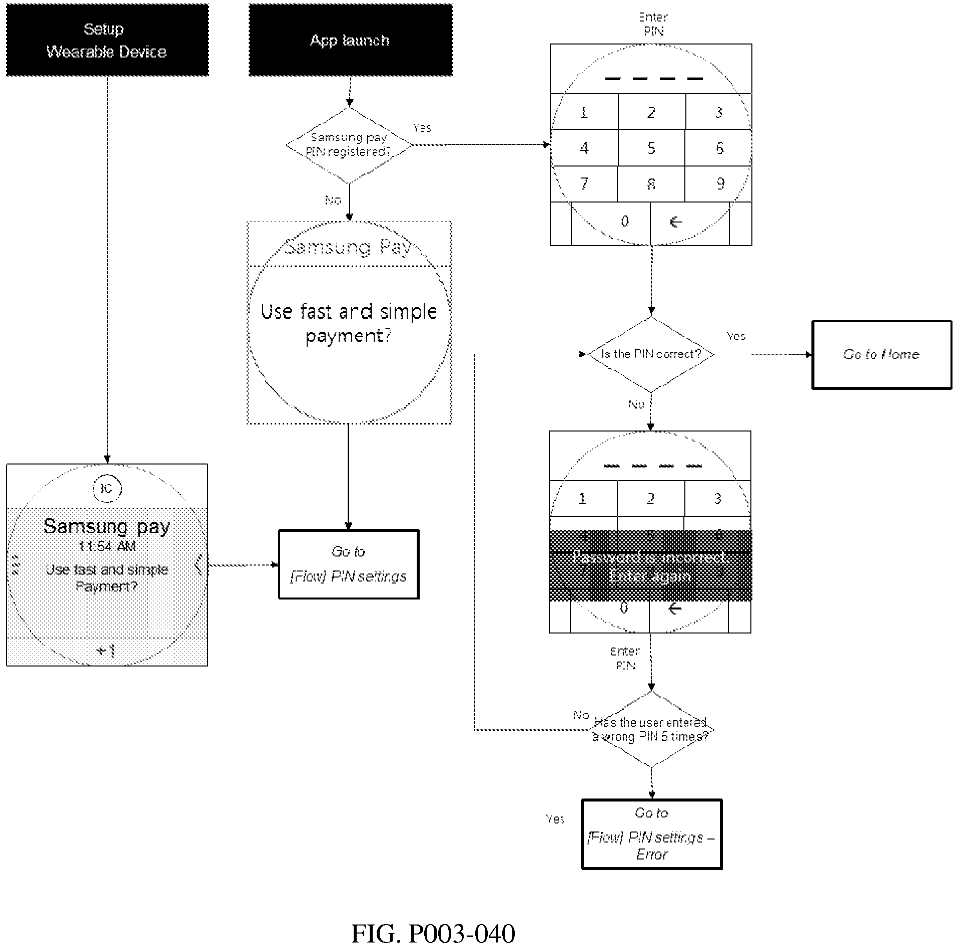

FIG. P003-040 illustrates an embodiment for showing a flow of a card setup user interface (for example, UI (user interface) or a UX (user experience) before payment of electronic device B. When there is no connection between electronic device B and electronic device A, a user interface for connection between the electronic devices may be displayed on the display. When the user chooses to connect between electronic devices, and when a connection is made, the payment application user interface may be displayed to the user. In addition, an operation of inputting and confirming a PIN using a security method may follow.

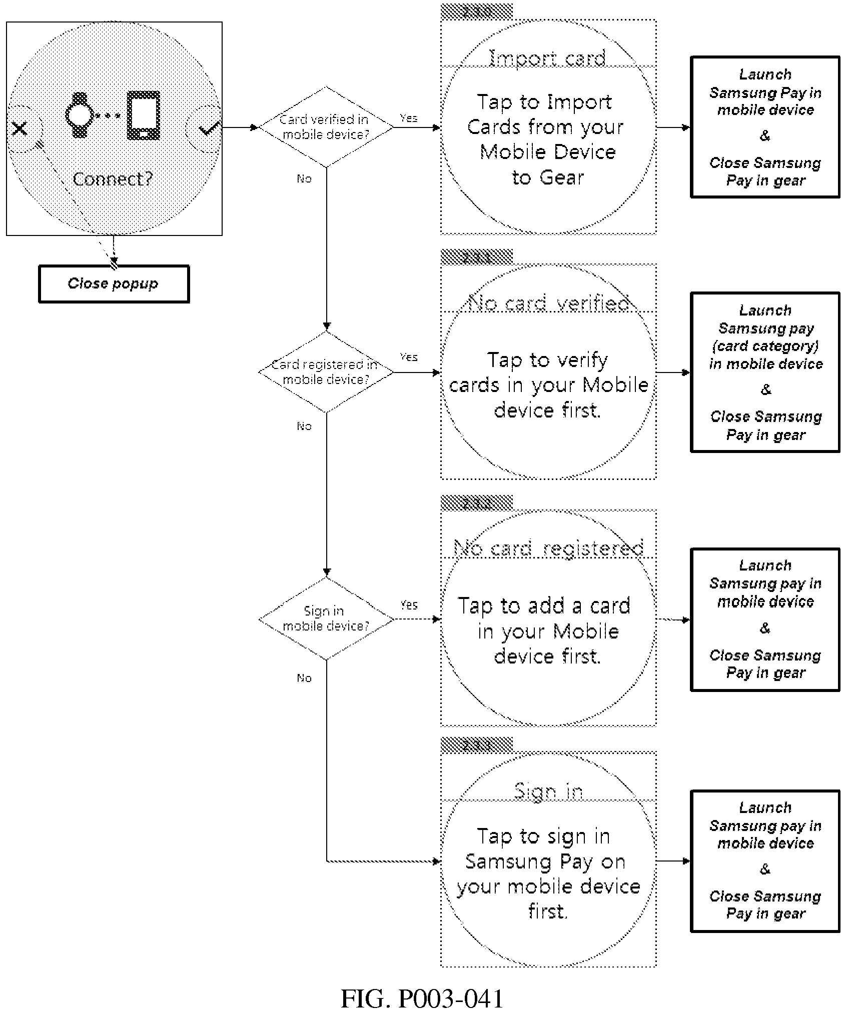

FIG. P003-041 illustrates an embodiment for showing a flow of a setup user interface (for example, UI (user interface) or a UX (user experience) for a payment service of electronic device B. When there is no connection between electronic device B and electronic device A, a user interface for connection between the electronic devices may be displayed on the display. When the user chooses to connect between electronic devices, and when a connection is made, the payment application user interface may be displayed to the user. A user interface may be displayed to the user so that a card, which has undergone an identification confirmation procedure and has passed verification, can be selected and stored in electronic device B. When the card has not been verified, a procedure may be conducted to confirm whether the card has been registered or not. When the card has been registered, the user interface of the payment application of electronic device B may be closed so that an identification confirmation process can be performed, a payment application of electronic device A may be activated, and an identification confirmation process may be performed. When both verification and card registration have failed to be processed, it may be confirmed whether the payment server account has been signed in or not. When the payment server account has been signed in, the card registration procedure may be executed by the payment application of electronic device A. When the payment server account has not been activated, the payment application of electronic device A may conduct the payment server account sign-in.

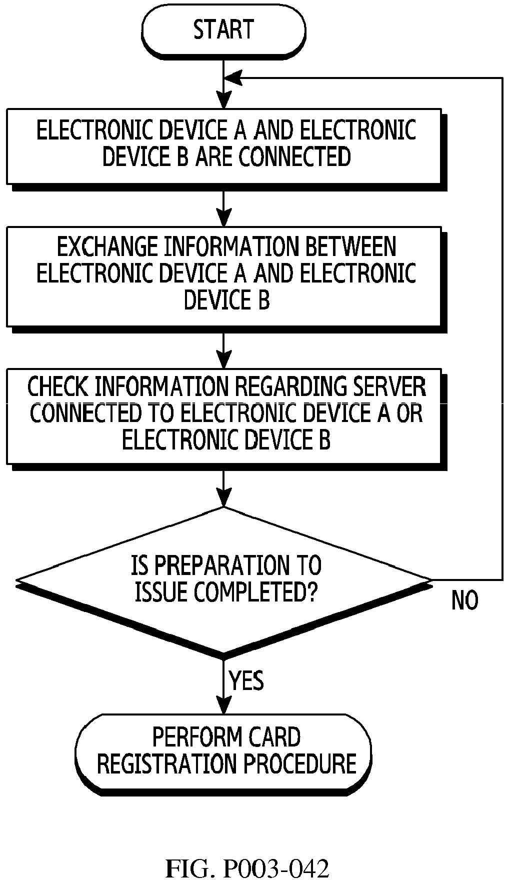

FIG. P003-042 illustrates an embodiment for checking electronic device environment information in order to perform a card registration after electronic device A and electronic device B are connected. When a connection is made between electronic devices A and B at 1111, information can be exchanged between the electronic devices. Information exchange between electronic devices A and B can be conducted as electronic device A requests electronic device B to provide information. Alternatively, electronic device B may request electronic device A to provide information. The requested information may be environment information necessary for payment. The environment information may be, for example, at least one piece of payment-related information among wireless communication information, MST, NFT support/non-support, binary information, electronic device ID, card reference ID, user ID, and encryption key. When information exchange between the electronic devices is made, information can be exchanged again and can be confirmed between the payment service server and the electronic devices at 1112. Information can be received through an electronic device connected to a server, which is connected to electronic device A or electronic device B, and it can be confirmed whether card issuance is possible or not in the current state. When it is determined that preparation for issuance is completed at 1114, the card registration procedure may be performed at 1115.

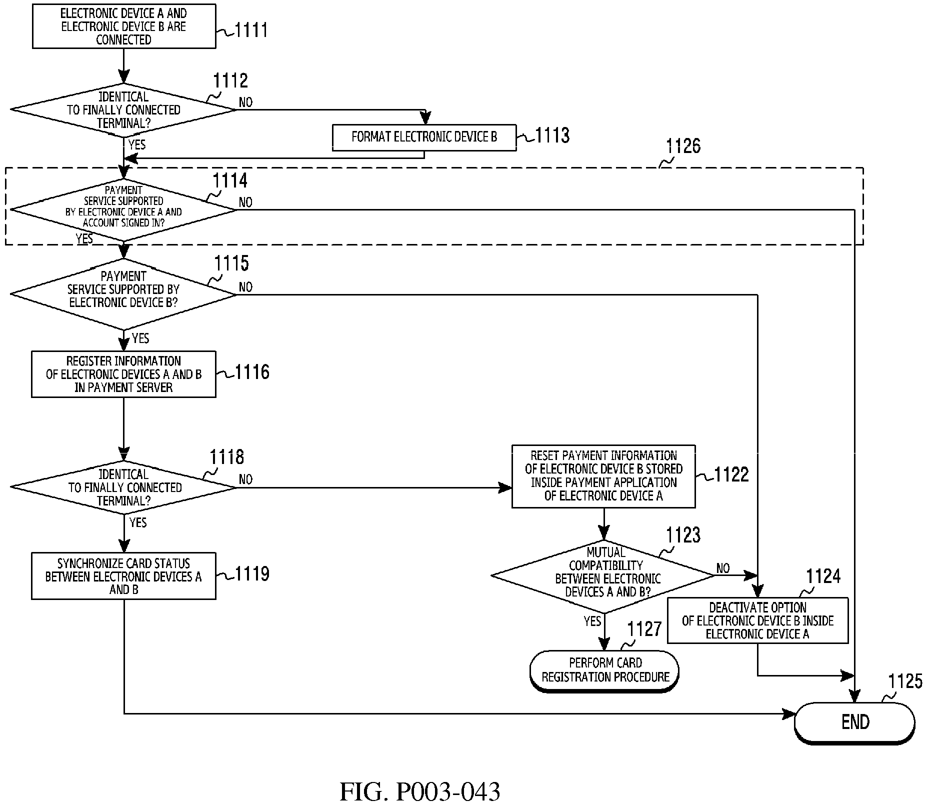

FIG. P003-043 illustrates another embodiment of the present disclosure, card state synchronization may be attempted between respective electronic devices, when a connection has been made between electronic devices A and B (paired), or for attempting card issuance (or card registration) by electronic device B. The process may be performed by electronic device A, may be performed by electronic device B after electronic device A sends a signal, or may be performed while exchanging signals between electronic device A and the payment service network. When a connection has been made between electronic devices A and B at 1111, if the ID of connected electronic device B is different from the ID of an electronic device, which has been finally connected to electronic device A at 1112, electronic device B may be formatted, for example, initialized by factory settings at 1113.

It may be confirmed whether electronic device A supports the payment service or not (i.e. whether payment modules such as a payment application and payment middleware are supported or not) and whether the payment server account has been signed in or not. When it is confirmed that the payment service is supported, and that the payment server account has been signed in, it can be confirmed whether electronic device B supports the payment service or not at 1115, and, otherwise, the procedure may end at 1125.

When electronic device B does not support the payment service at 1115, information regarding electronic device B, inside electronic device A, may be deactivated at 1124. The connection between the electronic devices may be broken before or after deactivating information regarding electronic device B inside electronic device. If the payment server of electronic device A has not been signed in at 1114, the following process may end at 1125. The account sign-in user interface of electronic device A may be shown to the user for the sake of payment server sign-in. When both electronic devices A and B support the payment service, electronic device A may transmit various types of information to the payment server and confirm whether payment is possible using the electronic device held by the user. The various types of information may include a payment server account, wireless communication information, MST, NFC support/non-support, binary information, electronic device ID, card reference ID, user ID, and encryption key information at 1116.

When electronic device B, which is connected to electronic device A, is not identical to the finally connected electronic device at 1118, previous payment information regarding electronic device B, which is stored in electronic device A, may be reset at 1122, and compatibility between electronic devices A and B may be checked at 1123. When electronic device A supports the payment service at 1115, and when the result of compatibility comparison shows that electronic device B is not compatible with electronic device A (for example, binary version difference), the option of electronic device B, inside electronic device A, may be deactivated at 1124. When there is compatibility between electronic devices A and B, electronic device B may perform a card registration procedure at 1127. Information necessary for the registration procedure may include the ID of electronic device A, the ID of electronic device B, the binary version of electronic device B, payment server account information, etc.

If finally connected electronic device B and newly connected electronic device B are the same at 1118, electronic devices A and B may synchronize the card status at 1119.

In an embodiment of the present disclosure, there may be no need for a procedure at 1114 corresponding to a case in which electronic device A does not support the payment application or payment middleware and can only play the role of a network proxy during payment using electronic device B at 1126.

Electronic device A and electronic device B may be electronic devices that are connected to each other or electronic devices between which a secure connection is made. If electronic device A may be a device connected to electronic device B such as a wearable electronic device, the electronic device A may receive, from a server, basic information, that is, metadata, on a token of electronic device B, which has already been issued or has been authenticated after the issuance thereof. The metadata may include at least one of a card company, a card type, and a basic card image. Alternatively, electronic device B may be authenticated from a server and then provided with metadata.

Electronic device B that has been provided with the metadata stores the relevant information, and can shorten a card issuance procedure and directly perform verification processing through ID&V. The present disclosure includes a procedure for issuing a token for electronic device B using card information stored in electronic device A.

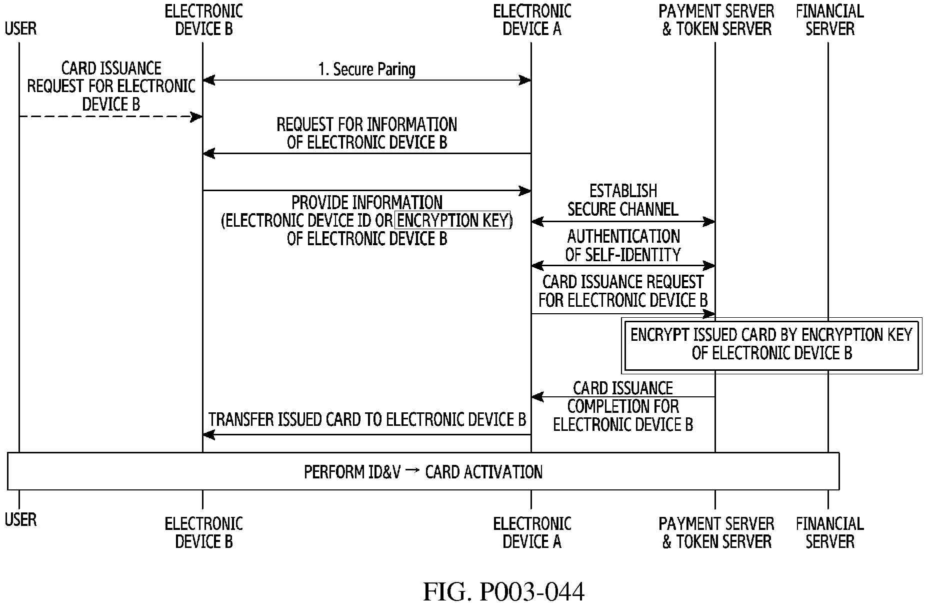

Modules required for card issuance include a user, electronic device A, electronic device B, a security service management server, and a financial server.

Electronic device A and electronic device B may be electronic devices that are connected to each other or electronic devices between which a secure connection is made. Electronic device A is an electronic device connected to electronic device B, and may be an electronic device connected to electronic device B such as a wearable device. The security service management server is responsible for storage and issuance processing of a card and a token, and may be considered as belonging to the payment server. The security service management server is a module for processing token issuance for electronic device A and electronic device B. Further, the security service management server acts as an intermediary that is responsible for a connection between the financial server and the electronic devices. The financial server has information on the service account of the user, and possesses the actual information for card issuance.

If the user requests electronic device B for card issuance while electronic device A and electronic device B are connected to each other by secure paring, electronic device B requests electronic device A for information on electronic device A. This may be information predefined when a card is issued through the security service management server. Electronic device B may provide electronic device A with at least a part of information of electronic device B, for example, an electronic device ID and an encryption key. The electronic device ID is information that can indicate electronic device B, and may be a unique number of the electronic device. The encryption key may be at least a part of data required in the process of encrypting a token such that only electronic device B requesting the issuance is allowed to open the token when the token is issued. The encryption key may be transferred to the security service management server or financial server. The security service management server or financial server may also encrypt the token using the transferred encryption key. Electronic device A may be unable to open or use the encrypted token after receiving data. Upon receiving a card issuance request from electronic device B or electronic device A, a token server including the financial server may request a consent to the card issuance by sending identification and verification information including consent information for the card issuance, for example, T&C, to the electronic device, and data to which the electronic device has consented may be sent back to the server, that is, the token server. Before the security service management server transfers, to the financial server, the information received from electronic device B, the security service management server may be connected to a module for assigning an area for SSD, that is, supplementary secure domain, in the TEE of the electronic device. The flow of creating a space for the token of electronic device A or electronic device B by the security service management server or key management server may be added to the module for assigning this area, for example, a key management module. The data transferred to the security service management server may be delivered to the financial server so as to issue a token after confirming the relevant information, the financial server may transfer the issued token to electronic device A through the security service management server, and electronic device A may transfer the token to electronic device B so as to store it in the TEE. The transfer of the token from electronic device A to electronic device B may not be continuous, and the token may be transferred after a time delay, but the present disclosure is not limited thereto. As another embodiment of the present disclosure, the token transferred to electronic device B may also be transferred to or stored in an additionally connected electronic device. The additional connection may be a wired or wireless connection. For example, the wired connection may be a USB or ear jack port.

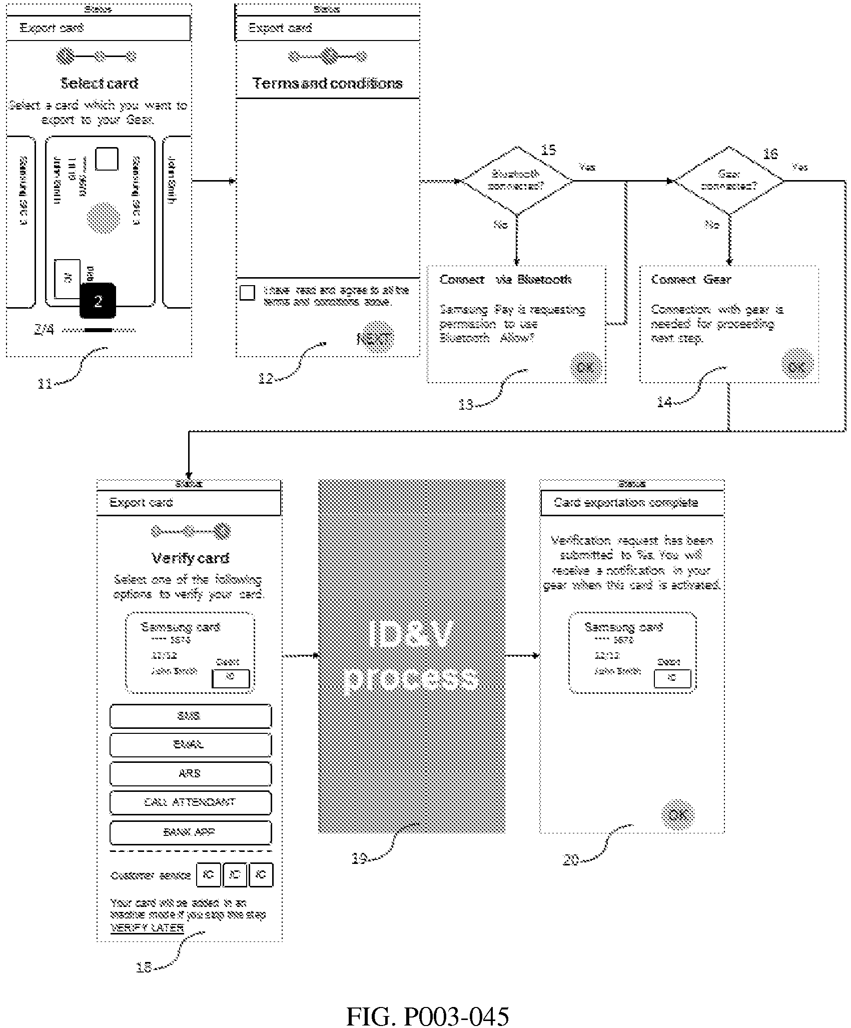

FIG. P003-045 is one of various embodiments showing the UI flow until identification and verification (ID&V) for card issuance is completed. In the above embodiment, the user may be allowed to determine which of cards included in electronic device is exported to electronic device B at 11. After the user selects a card, terms and conditions transferred from the financial server may be displayed to the user at 12. The details of the terms and conditions may be displayed to the user so as to confirm whether the user consents the terms and conditions at 12. Whether the connection between electronic device A and electronic device B is maintained may be checked, and when the connection between electronic device A and electronic device B is maintained, which method is used for authentication may be displayed in the menu at 15, 16. The user may select an identification and verification method from among various means for exchanging information between the electronic device and the server, such as SMS, E-mail, ARS, CALL ATTENDANT, and BANK APP at 18. Once the identification and verification method is selected, the identification and verification may be performed at 19. Upon the completion of the identification and verification, the result thereof may be displayed to the user at 20.

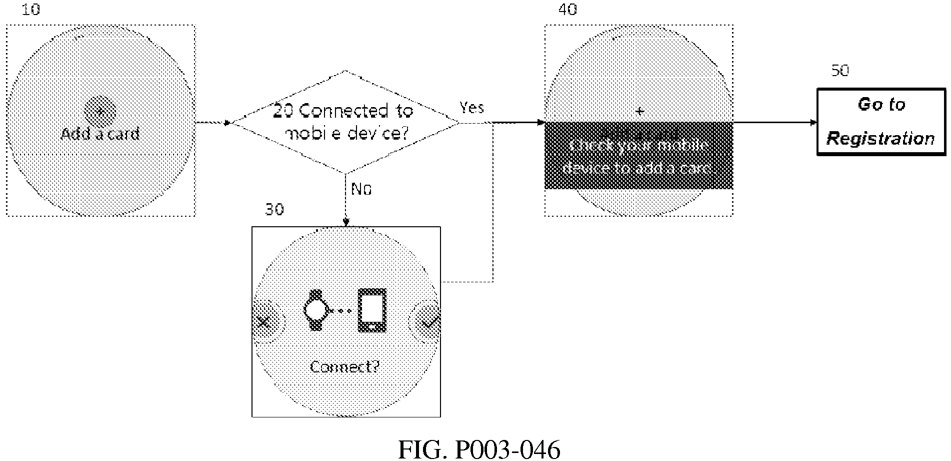

Electronic device B may receive an input of adding a card.

If electronic device B is not in a connected state, a step for inquiring of the user whether to connect to the electronic device may be performed. When electronic device is connected to the electronic device as a result of checking whether electronic device B is in a connected state, electronic device B may proceed to the next step.

Saying that check the electronic device to add a card may be displayed on the display.

The step for inquiring of the user whether to connect to the electronic device may be displayed on the screen. When an indication of connecting to the electronic device is input from the user, electronic device B may proceed to the preceding step. When there is no input from the user for a predetermined period of time or an indication of not connecting to the electronic device is input from the user, the card input procedure may be stopped.

Whether a card to be added exists in the electronic device may be checked, and when the card to be added exists, a step for executing a function of importing the card through the electronic device may be performed.

FIG. P003-047 illustrates a procedure of performing ID&V in order to use the card registered through the above procedure.

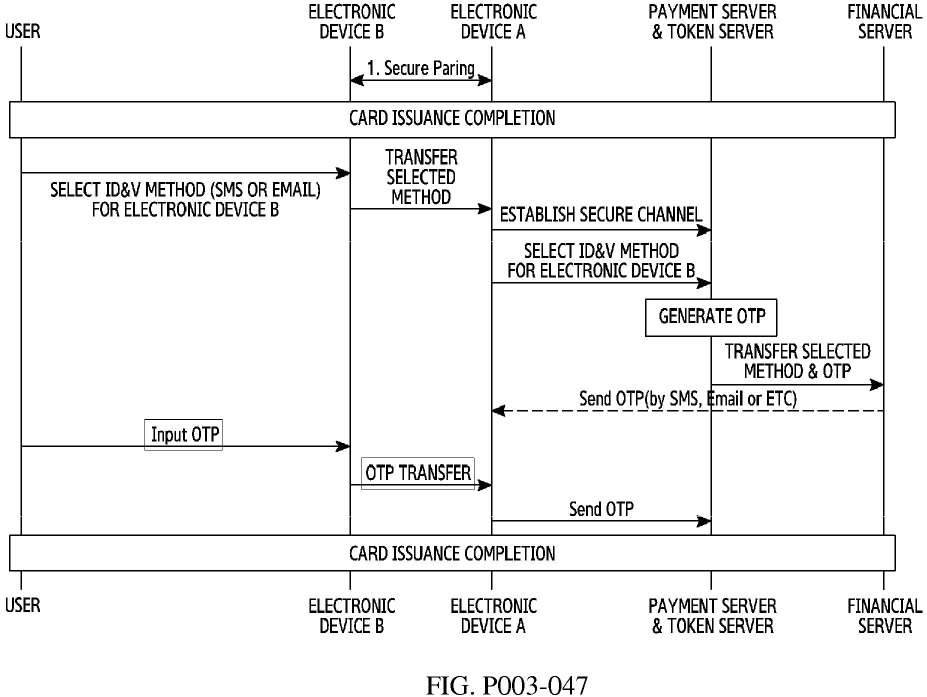

Modules required for card issuance include electronic device A, electronic device B, a security service management server, and a financial server. Electronic device A and electronic device B may be electronic devices that are connected to each other or electronic devices between which a secure connection is made. Electronic device A is an electronic device connected to electronic device B, and may be an electronic device connected to electronic device B such as a wearable device. The security service management server is responsible for ID&V processing of an issued card, and may be considered as belonging to the payment server. The security service management server is a module for processing authentication of a token issued to electronic device A and electronic device B. Further, the security service management server acts as an intermediary that is responsible for a connection between the financial server and the electronic devices. In addition, the security service management server is responsible for generating an OTP by receiving an input from the user. The financial server has information on the service account of the user, and possesses the actual information for card issuance.

A security connection between electronic device A and electronic device B might have been established. In the state where a token or card has been already issued or stored, identification for change into a payable state may be performed. The user may transfer, through electronic device B, a user selection information OTP method for authentication of an OTP. The OTP method may include SMS, Email, app-to-app, and a call center connection. Electronic device A may receive a selected method from electronic device B, and then send information to a server, such as a payment server, which is maintained to operate token or account information by an electronic device company. The payment server may be connected with a security service management server. Electronic device A and the payment server or security service management server may be connected in a state where a security channel has been established. The security service management server may transfer, to the financial server, information received from electronic device A and an OTP generated using information received from electronic device A. Thereafter, the financial server may send the OTP in an OTP method selected by the user. For example, if the user has selected SMS, the financial server may send an SMS to a user electronic device to identify authentication information. In this case, when electronic device B, which is an electronic device having requested identification, is temporarily unable to directly perform a network communication or lacks a modem therefor, the OTP may be transferred through electronic device A, and electronic device B may input the transferred OTP through electronic device A and send the input information to the security service management server through electronic device A. Electronic device A may receive the OTP from the security service management server, the user may transfer the OTP from electronic device A to the security service management server regardless of whether to additionally transfer the OTP to electronic device B. Thereafter, if it is determined that there is no problem, the OTP may be sent together with a key value corresponding to a token, for example, an LUK containing payment information, such as use term or the number of times of use, to electronic device A or electronic device B to be stored therein. The authentication is completed by completion of payment of LUK, and the card or token may have a usable form. The LUK transferred to electronic device B may also be transferred to or stored in an additionally connected electronic device. The additional connection may be a wired or wireless connection. For example, the wired connection may be a USB or ear jack port.

FIG. P003-048 indicates a signal flow of identification using electronic device A by electronic device B. A security connection is established between electronic device A and electronic device B. A method (e.g., email or SMS) for identification is selected by electronic device B and the selected method is transferred to electronic device A. A security channel is established between electronic device A and a security service management server. The selected identification method is transferred to the security service management server. The security service management server generates an OTP for identification, and the generated OTP is transferred to the financial server of a card, of which identification has been performed. The financial server transmits the OTP in an identification method selected by electronic device A, using registered customer information (phone number or e-mail address). The OTP received from electronic device A is input to electronic device B, and the security service management server is requested to perform identifying thereof. The state in which the identification has been completed is synchronized and the card is activated.

According to an embodiment of the present disclosure, in the state where electronic device B connected to electronic device A does not exist, another card in addition to the card to be used in electronic device may be issued at the time of card issuance to, when an additional electronic device (e.g., electronic device B) is security-connected in the future, enable the additional card to be transferred to the additional electronic device to be usable without an additional authentication procedure.

In order to activate the issued card, an identification operation by a financial server is necessary. Electronic device B may use the security-connected electronic device A to perform an identification operation from the financial server.

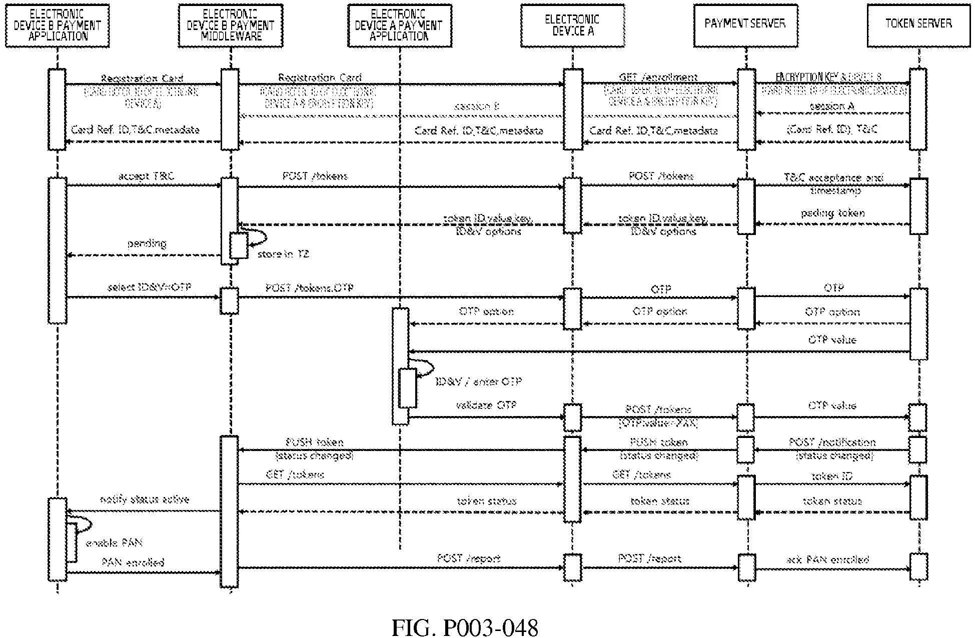

A user may register a card by inputting a PAN in the payment application of electronic device B. The registered card information may be transmitted to the payment middleware of electronic device A. The transferred card information may include at least one among a PAN of a card, device information, and service account information. Further, an encryption key of electronic device B may be transferred to the payment server through the payment middleware of electronic device A. Using this encryption key, the payment server may perform encryption. The card information of electronic device B received from the payment middleware of electronic device A may be sent to the payment server. Further, the received encryption key of electronic device B may be transferred to the payment server. Using this encryption key, the payment server may perform encryption. The payment server may transmit the collected information of electronic device A and electronic device B to the token server. The transmitted information may include device ID, application ID, and user ID.

The token server may receive user information and, as a response thereto, generate session A for continuous communication of the payment server and the token server. The generation of session A may include a method of sharing an encryption key and encrypting data. The encryption key may be a key which the payment middleware of electronic device B has transferred to the payment server.

When generation of session A has been completed for continuous communication of the payment server and the token server, session B may be generated between the payment middleware of electronic device B and the payment server. The generation of session B may include a method of encrypting data, using the encryption key transferred to the payment by the payment middleware of electronic device B.

After the registration, the token server may transfer a card reference ID and contract conditions to the payment server. The card reference ID and contract conditions received from the token server may be transferred from the payment server to the payment middleware of electronic device A. The card reference ID and contract conditions received from the payment server may be transferred from the payment middleware of electronic device A to the payment middleware of electronic device B. The card reference ID, contract conditions, and card-related information received from the token server may be transferred from the payment middleware of electronic device B to the payment application of electronic device B. From the user, an input associated with approval of the contract conditions may be received through the payment application of electronic device B. The payment middleware of electronic device B may transfer contents associated with the approval of the contract conditions to the payment middleware of electronic device A. The payment middleware of electronic device A may transfer contents associated with the approval of the contract conditions to the payment server. The payment server may transfer the contents associated with the approval of the contract conditions and time information associated with the approval to the token server to request activation of the token.

The token server may transfer a token ID, token value, and key to the payment server to activate the deactivated token for authentication. The payment server may transfer the token ID, token value, key, and an identification selection list to the payment middleware of electronic device A. The payment middleware of electronic device A may transfer the token ID, token value, key, and an identification selection list to the payment middleware of electronic device B. The payment middleware of electronic device B may store at least a part of the information received from the payment server in the TEE of electronic device B. Some data among the stored information may be encrypted and thus be prevented from being used until the user authentication is completed.

The payment middleware of electronic device B may notify of reception of a deactivated token in the payment application of electronic device B. Further, the identification select list may be transferred for user's selection. A user selection for the identification selection list may be received by the payment application of electronic device A. OTP may be used as the received identification selection list. The payment middleware of electronic device B may transfer information on the selection (e.g., OTP method) of the user received from the payment application of electronic device B to the payment middleware of electronic device A. The payment middleware of electronic device A may transfer, to the payment server, the information on the selection (e.g., OTP method) of the user received from the payment application of electronic device A or received from the payment middleware of electronic device B. The payment server may transfer the received information on the selection of the user to the token server. The token server generates an OTP, and the selection of OTP may be transferred to the payment server. The format of the OTP received by the payment server may be transferred to the payment middleware of electronic device A. The format of the OTP received by the payment middleware of electronic device A may be transferred to the payment application of electronic device A. The token server may transfer the OTP value to the payment application of electronic device A, using SMS or e-mail. The payment application of electronic device A may receive OTP and display a value thereof. The payment application of electronic device A may transfer the value input for authentication to the payment middleware of electronic device A. The input value associated with the received OTP may be transferred to the payment server by the payment middleware of electronic device A. The payment server may transfer the received OTP-related input value to the token server. When the input value is valid, the token server may activate an already received token and notify the payment server of the token state.

The payment server may transmit a notification message to the payment middleware of electronic device A.

The payment middleware of electronic device A may transmit the notification message to the payment middleware of electronic device B.

The payment middleware of electronic device B may transfer a corresponding token ID to the payment middleware of electronic device A in order to change the state of the token stored in the electronic device.

The payment middleware of electronic device A may transfer the token ID received from the payment middleware of electronic device B to the payment server. The payment server may transfer the received token ID to the token server. The token server may transfer the changed token state to the payment server. The payment server may transfer the changed token state to the payment middleware of electronic device A. The payment middleware of electronic device A may transfer the changed token state to the payment middleware of electronic device B. The payment middleware of electronic device B may change the token state stored in the TEE into an activated state and transfer the corresponding information to the payment application of electronic device B. The payment application of electronic device B may change the state to enable the corresponding PAN to perform the payment. The payment application of electronic device B may transfer the changed (registration-completed) payable state of the PAN to the payment middleware of electronic device B. The payment middleware of electronic device B may transfer the registration result to the payment middleware of electronic device A. The payment middleware of electronic device B may transfer the registration result to the payment server. The payment server may transfer the normal registration result to the token server.

In the process of issuing and authenticating a card, a payment function may be activated after one card or token may be issued or authenticated each time. As one of various embodiments, various types of tokens, for example, tokes of NFC or MST may be generated and stored in an electronic device. At the time of generation, an electronic device may send data of type supportable by the electronic device to a security service management server, or an intermediate server for management may send the data to the security service management server. Basically, one token can be issued and authenticated before another token is processed. As one of various embodiments, at least two tokens may be collectively issued and authenticated when the at least two tokens are processed. A collective authentication can be made after a collective issuance. Just a single request for card issuance from a user may cause a collective issuance of all types of supportable tokens. A plurality of issued tokens may be collectively processed by a single identification. When at least two electronic devices have been connected, a single request for issuance may cause issuance or authentication of at least two tokens.

### Electronic device B may display a card in a deactivated state.

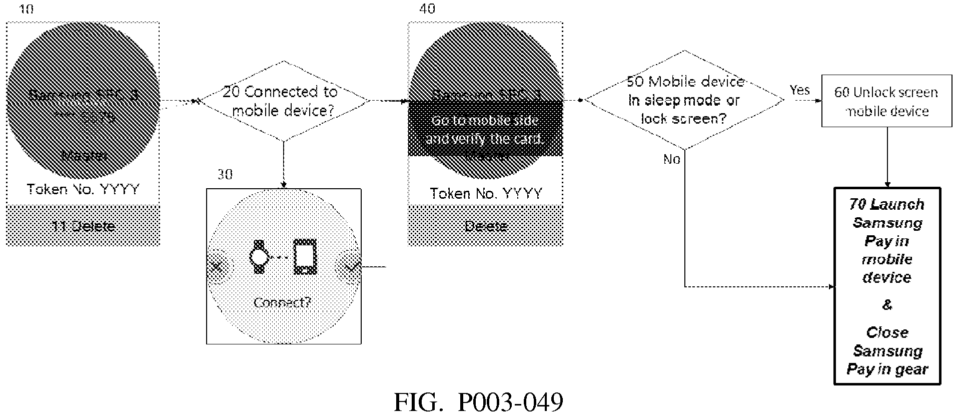

This may require a process of performing an additional authentication process to enable a card to be payable. Electronic device B may receive an input of starting additional authentication.

If electronic device B is not in a connected state, a step for inquiring of the user whether to connect to the electronic device may be performed. When electronic device is connected to the electronic device as a result of checking whether electronic device B is in a connected state, electronic device B may proceed to the next step.

An indication that user authentication will be performed through an electronic device may be displayed on a display.

When an indication of connecting to the electronic device is input from the user, electronic device B may proceed to the preceding step. When there is no input from the user for a predetermined period of time or an indication of not connecting to the electronic device is input from the user, the card input procedure may be stopped.

The step for inquiring of the user whether to connect to the electronic device may be displayed on a display.

Determine whether the electronic device is in a locked state or sleep state. The process proceeds to the next step when the electronic device is in an unlocked state, and proceeds to step thereafter when the electronic device is in a locked state or sleep state.

The payment application of electronic device A may perform the payment application and terminate the payment application of electronic device B.

The electronic devices are converted into the unlocked state, and the process proceeds to the preceding step.

Electronic device B may receive an input for deleting the deactivated card.

In the embodiment described below, the system includes electronic device A, electronic device B, and a POS device. For example, electronic device A and electronic device B are connected to each other, and each of electronic device A and electronic device B may have a payment transaction application associated with payment. A POS device may perform payment through MST, NFC, etc. Electronic device A and electronic device B may perform payment in a state where they are connected to each other, or each of them alone may perform the payment in a state where they are disconnected. Further, each of electronic device A and electronic device B may use its own token. Further, when electronic device B alone proceeds with the payment, electronic device B may use a token previously received from electronic device A for the payment. Electronic device B may have its own communication module and receive a toke for connection with a long distance communication network for payment. For example, electronic device B may receive information associated with WiFi connection through BLE in a shop, and may be connected with the payment server, etc. Through the module. As another example, electronic device B may have a 3G or LTE module and may exchange payment-related data with the payment server, etc. Through the module.

In the next two examples, two cases including a case where payment is performed through a payment application of electronic device B and a case where payment is started by a contact (tap) of electronic device B with a POS device will be described. In the corresponding conditions, it is assumed that authentication of the user has been already completed.

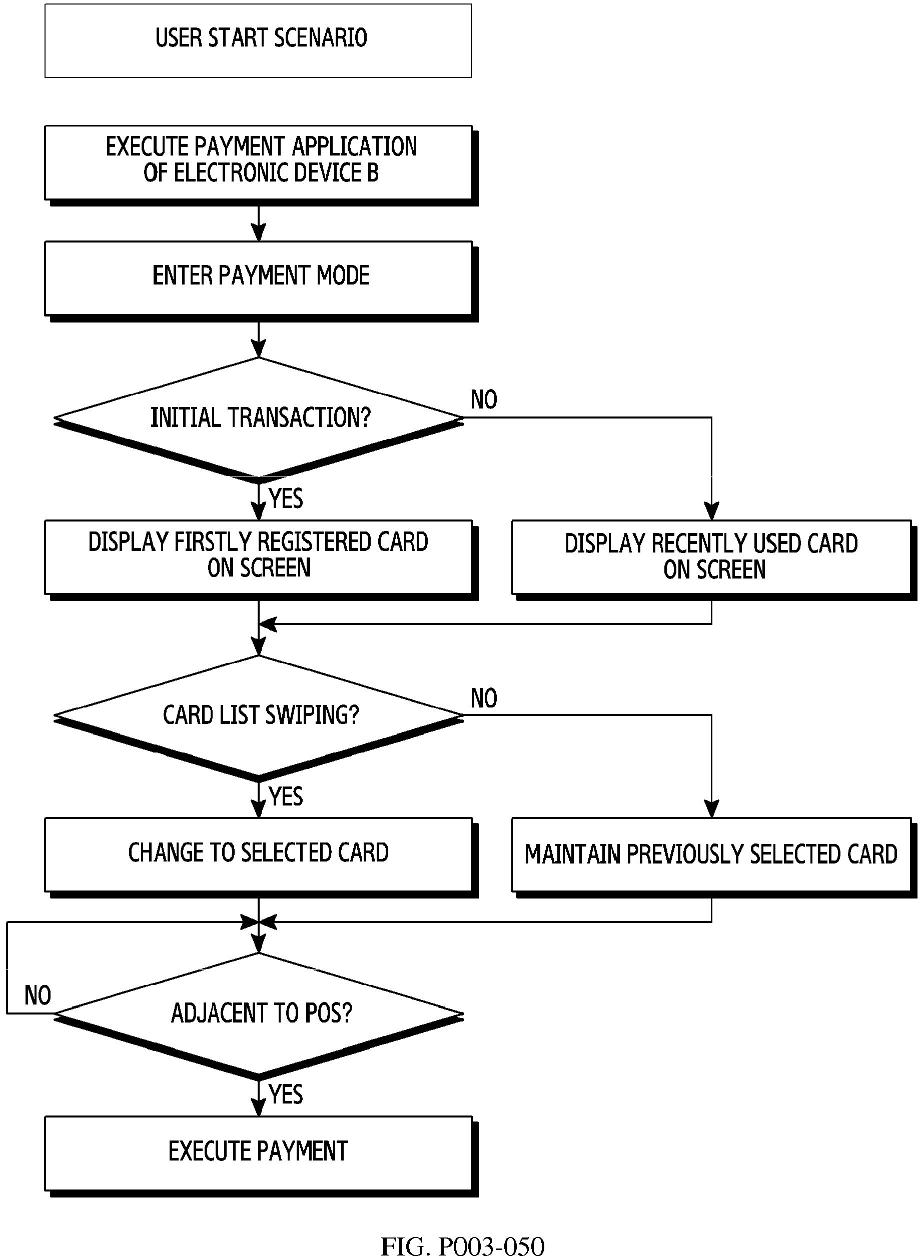

FIG. P003-050 illustrates an example according to an embodiment of the present disclosure in which, when payment is performed through electronic device B, a payment process is progressed through a payment application of electronic device B.

Initially, a user may execute the payment application through a user input means, such as a touch input, key input, stem operation, or dial operation in electronic device B.

When executed, the payment application may display a payment mode screen together with a recently used card.

In the case of an initial transaction, the payment application may show a firstly registered card. The user may change the card to be used for payment by an input through a touch or swiping, key input, stem operation, or dial operation in the card list.

If a POS device is adjacently located, a contacting operation may be used for the payment through the POS device using MST or NFC.

When the transaction is completed, the payment completion may be notified to the user through vibration, etc. Further, a result of the transaction may be received from the server and then displayed on a display of electronic device A or electronic device B.

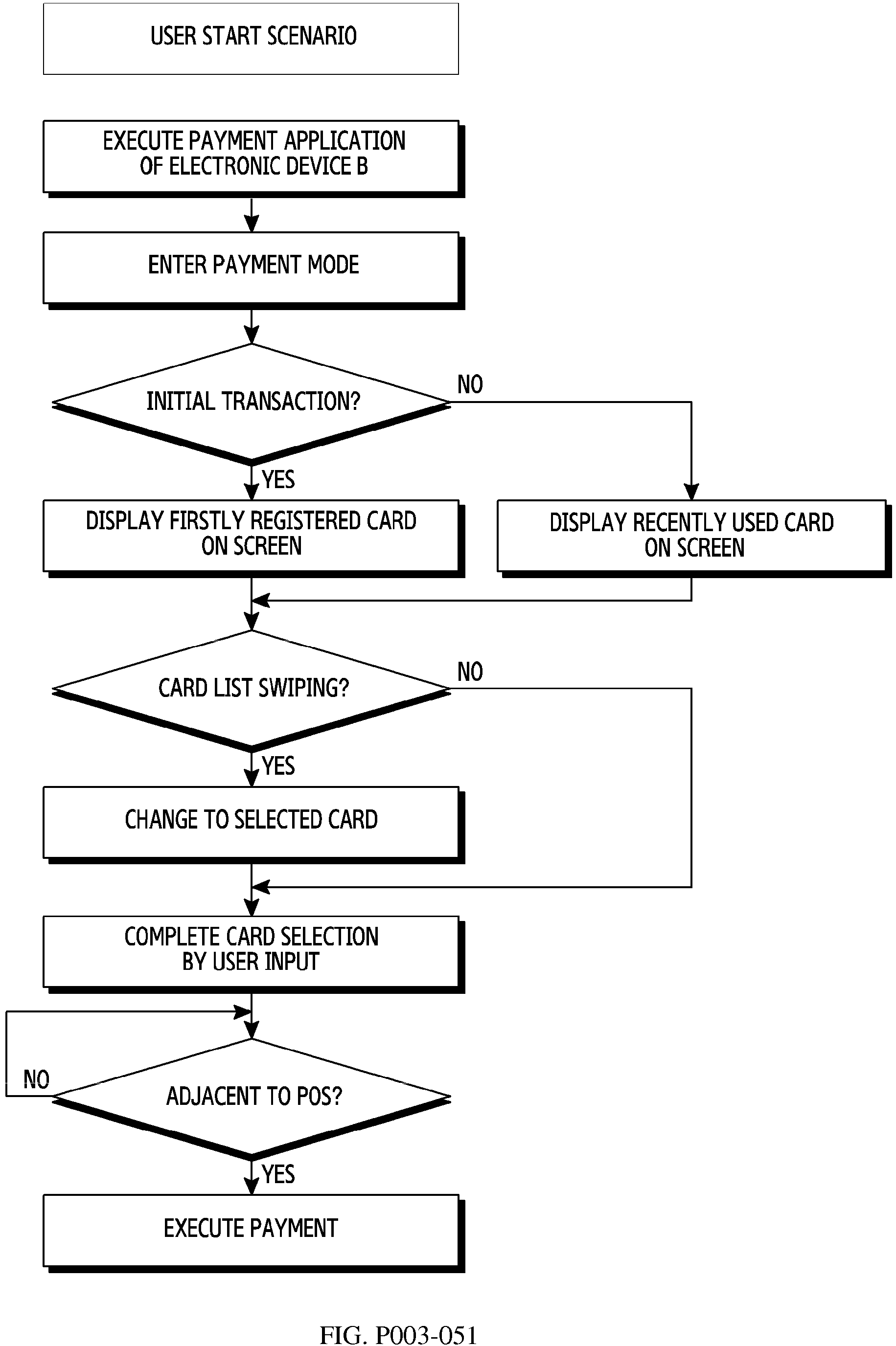

FIG. P003-051 illustrates an example according to an embodiment of the present disclosure in which, when payment is performed through electronic device B, a payment process is progressed through a payment application of electronic device B.

Initially, a user may execute the payment application through a user input means, such as a touch input, key input, stem operation, or dial operation in electronic device B.

When executed, the payment application may display a payment mode screen together with a recently used card.

In the case of initial transaction, the payment application may show a firstly registered card. The user may change the card to be used for payment by an input through a touch or swiping, key input, stem operation, or dial operation in the card list.

The user may finally select a card to be used for payment by an input through a touch or swiping, key input, stem operation, or dial operation in the card list.

If a POS device is adjacently located, a contacting operation may be used for the payment through the POS device using MST or NFC.

When the transaction is completed, the user may be notified of payment completion through vibration, etc. Further, a result of the transaction may be received from the server and then displayed on a display of electronic device A or electronic device B.

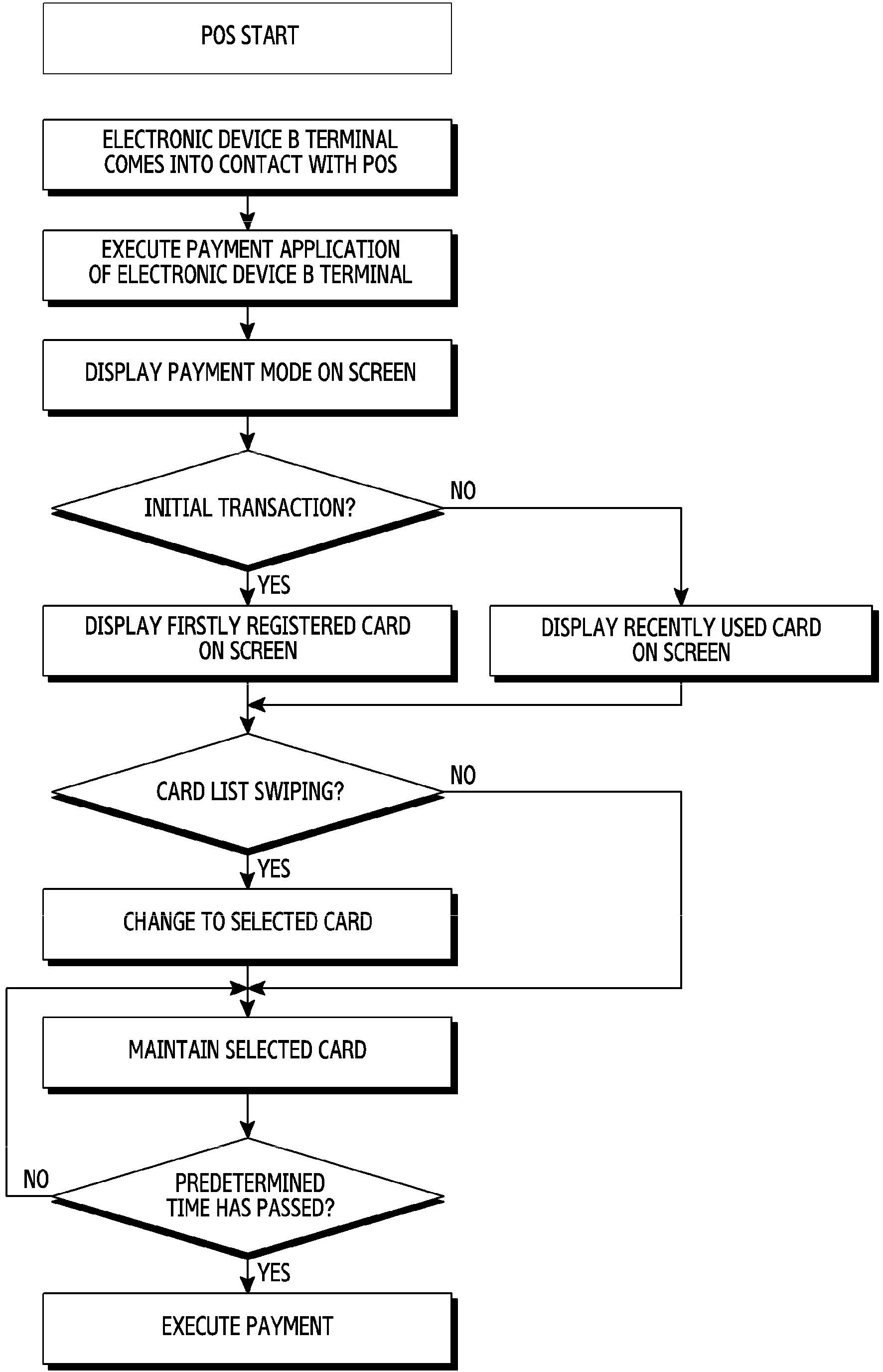

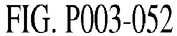

FIG. P003-052 illustrates an example according to an embodiment of the present disclosure in which, when payment is performed through electronic device B, a payment process is progressed after being started by a contact between electronic device B and a POS device, other than through an operation of a payment application of electronic device B.

Initially, the user may make electronic device B come into contact (tap) with the POS device to cause electronic device B to shift into a wake-up state.

Electronic device B may display a payment mode-related screen to the user.

Electronic device B may notify the user of the state prepared for the payment through a short vibration and a visual display.

The payment-related application displayed in electronic device B may display a most recently used card. In this event, for example, a firstly registered card may be shown.

If the user selects another card through an input by a touch or swiping, key input, stem operation, or dial operation, a card to be used for the payment may be changed to another card selected by the user.

An advice guide may notify the user of how to change the card and how much time is left for the completion of the transaction.

When there is no user input for a particular time or longer, the currently shown card is used and the payment through the NFC POS device may be completed.

The completion of the transaction may be notified through vibration or a display of electronic device B.

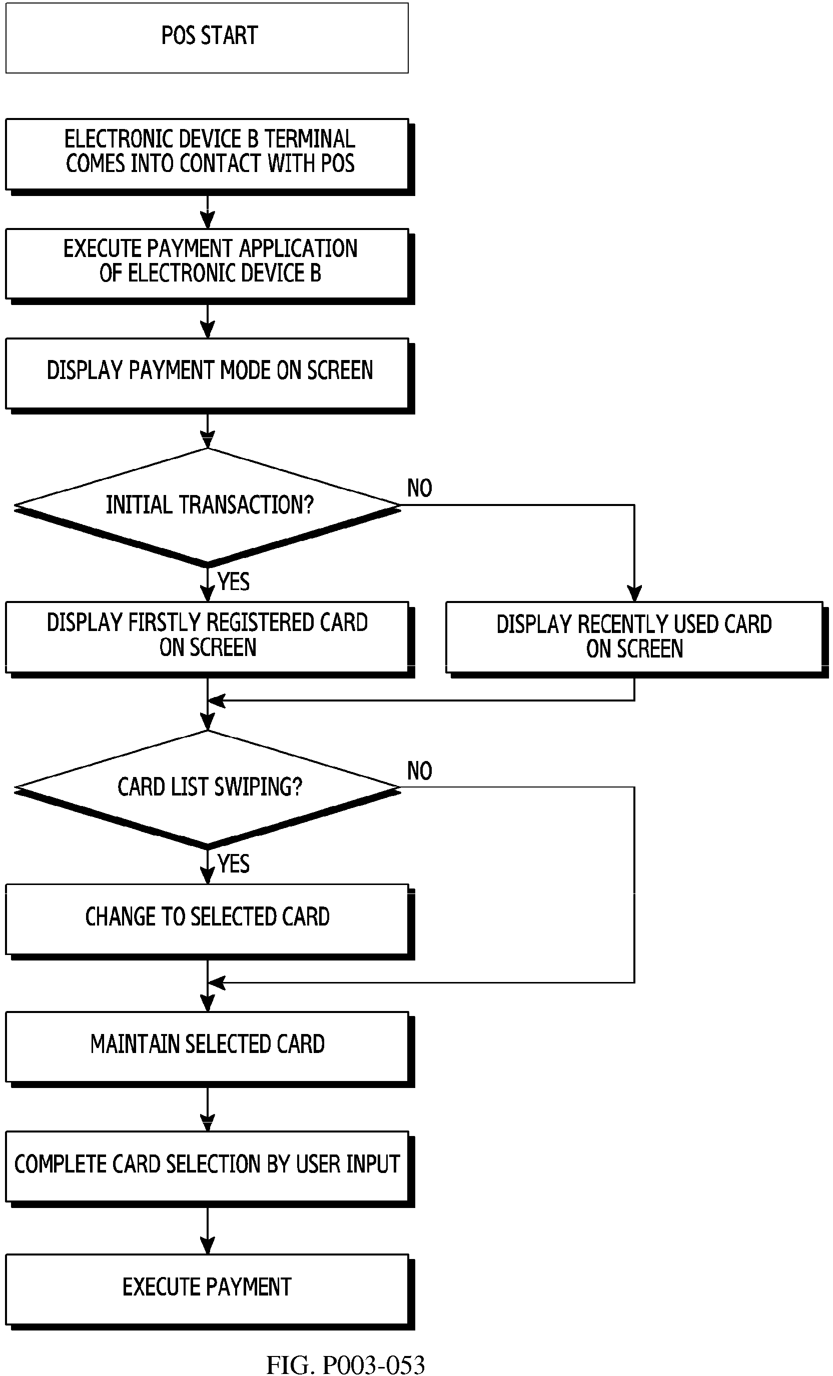

FIG. P003-053 illustrates an example according to an embodiment of the present disclosure in which, when payment is performed through electronic device B, a payment process is progressed after being started by a contact between electronic device B and a POS device, other than through a payment application of electronic device B.

Initially, the user may make electronic device B come into contact (tap) with the POS device to cause electronic device B to shift into a wake-up state.

Electronic device B may display a payment mode-related screen to the user.

Electronic device B may notify the user of the state prepared for the payment through a short vibration and a visual display.

The payment-related application displayed in electronic device B may display a most recently used card. In this event, for example, a first registered card may be shown.

If the user selects another card through an input by a touch or swiping, key input, stem operation, or dial operation, a card to be used for the payment may be changed to another card selected by the user.

An advice guide may notify the user of how to change the card and how much time is left for the completion of the transaction.

The user may finally select a card to be used for payment by an input through a touch or swiping, key input, stem operation, or dial operation.

The user may be notified of completion of the transaction through vibration or a display of electronic device B.

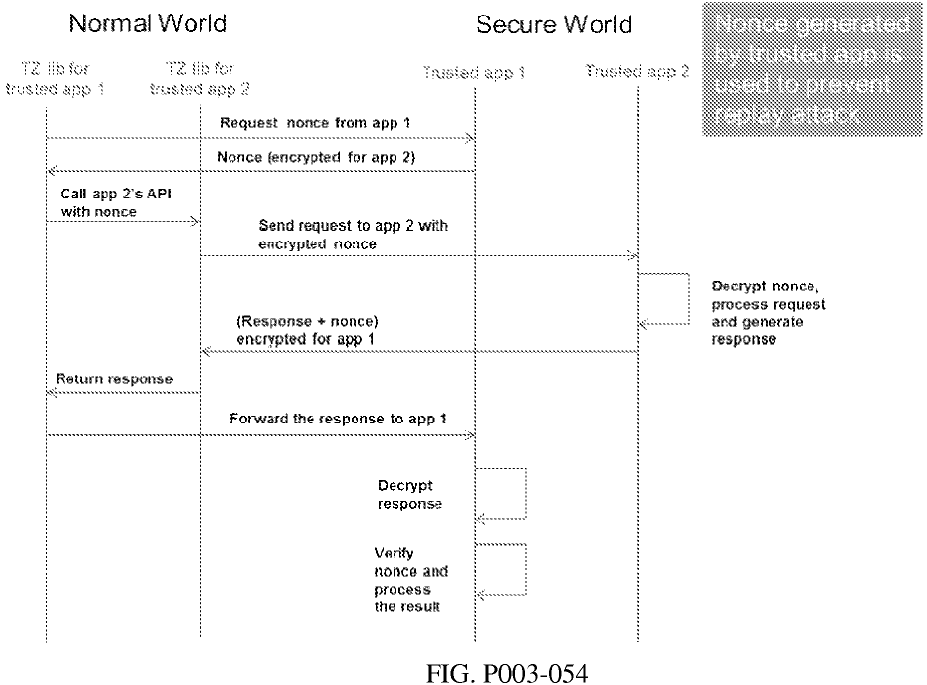

FIG. 003-054 illustrates a method 2400 for performing payment using a result of authentication using biological information by a payment relay module 1841 according to various embodiments. According to an embodiment of the present disclosure, the payment relay module may request the payment module 1821 in the security execution environment TEE to provide a disposable random number (e.g., nonce), through the security environment driver module 1853 and the security environment relay module 1846. The payment module 1821 may generate the disposable random number and encrypt the disposable random number, using a key (e.g., DRK) in the TEE. The payment module 1821 may transfer the encrypted disposable random number to the security environment relay module 1846 through the security environment driver module 1853. Data transmission/transfer between modules or applications being executed in the same device may include a state in which data stored in a memory is accessible. The security environment relay module 1846 may transfer the encrypted disposable random number to the biometric information module 1825 through the security environment driver module. The biometric information module 1825 may be decrypted using the key. The the biometric information module 1825 may authenticate the user, using information acquired from the biometric sensor 240I. The biometric information module 1825 may encrypt the user authentication success-or-failure information together with the disposable random number, using the key. The biometric information module 1825 may transfer the encrypted authentication success-or-failure information and disposable random number to the security environment relay module 1846 through the security environment driver module 1853. The security environment relay module 1846 may transfer the encrypted authentication success-or-failure information and disposable random number to the payment module 1821 through the security environment driver module 1853. The payment module 1821 may decrypt the encrypted authentication success-or-failure information and disposable random number, through the key. The payment module 1821 may compare the received disposable random number with the generated disposable random number to check whether the authentication success-or-failure information has been modified in the general execution environment REE 1810. The comparison may include determining whether the disposable random number and the received disposable random number completely coincide with each other, or determining that they coincide with each other when the received disposable random number is a number generated based on the transmitted disposable random number even though they do not completely coincide with each other. When the two disposable random numbers coincide and the authentication has succeeded, the payment module 1821 may perform payment. When the disposable random numbers do not coincide and the authentication has not succeeded, the payment module may not perform payment.

According to an embodiment, the comparison may be executed in another application or agent (e.g., payment manager or kernel) executed in the TEE 1820 or REE 1810.

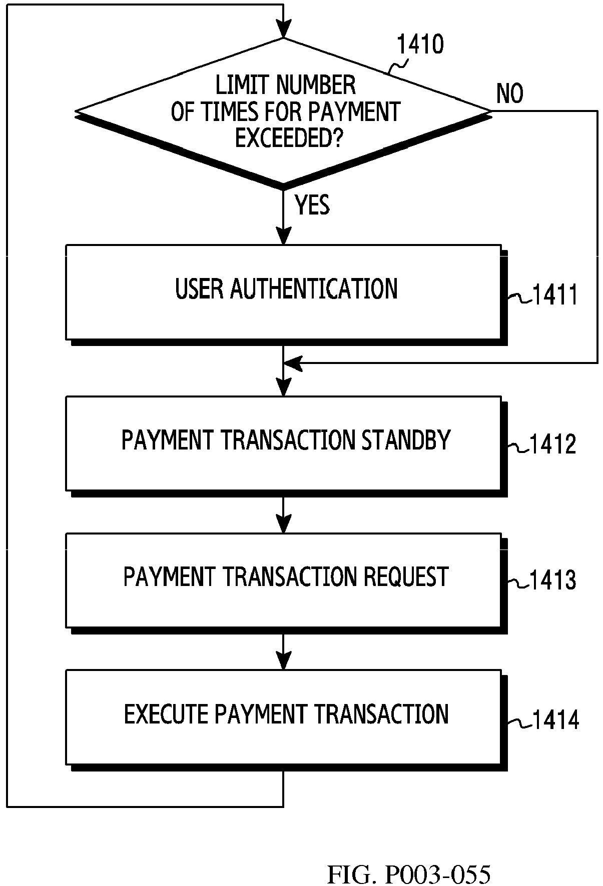

FIG. P003-055 illustrates one of various embodiments in electronic device A or electronic device B performs user authentication when the limit number of times of payment has been exceeded. When a limit number of times of payment designated in a network or a limit number of times of payment predetermined in electronic device A or electronic device B has been exceeded (1410), the electronic device may progress user authentication (1411). The user authentication may use not only a method of inputting a secret code previously stored in an electronic device, such as a PIN number or pattern secret code, by a user, but also various other methods including biometric information recognition methods, such as voice recognition, fingerprint recognition, and iris recognition. When the limit number of times of payment has not been exceeded, the payment transaction can be progressed without authentication (1412). Thereafter, once the payment transaction starts (1413), the payment transaction can be performed without a separate authentication procedure (1414). In the above embodiment, instead of checking the limit number of times of payment, whether a limit time for payment has been exceeded may be checked (1410). When the limit time for payment has not been exceeded, the payment transaction may be progressed without user authentication (1412).

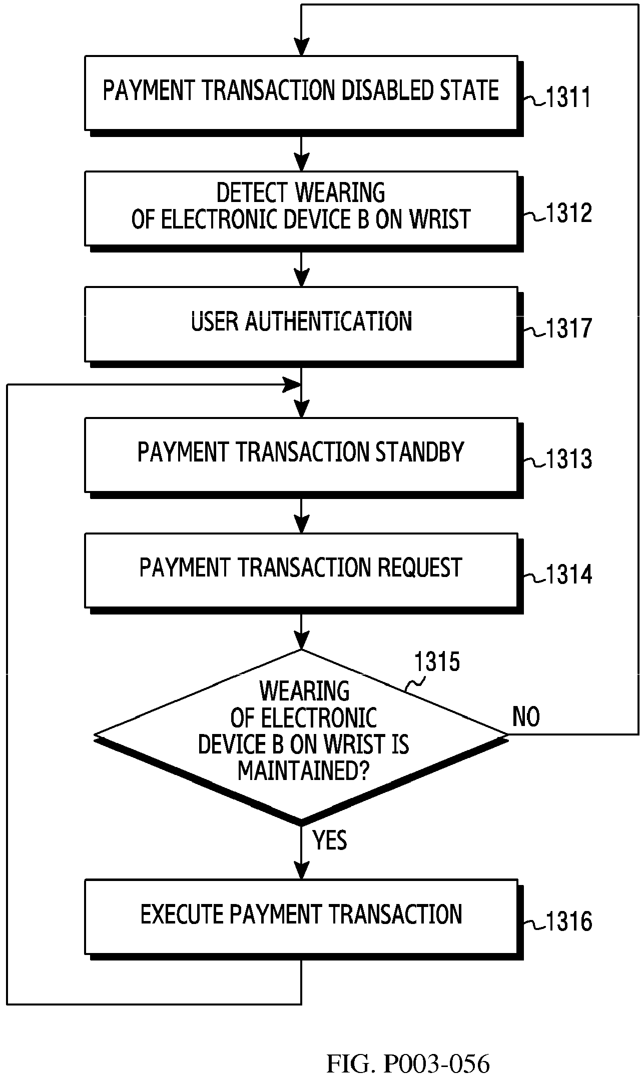

FIG. P003-056 illustrates oneIn an embodiment of the present disclosure, only one occurrence of user authentication enables the payable state to be maintained until electronic device B is separated from a body. A state in which a payment transaction is not allowed may be maintained before electronic device B receives an input of PIN (1311). It may be detected that electronic device B has been worn on a user's wrist (1312). The wearing of electronic device B may be detected through a change in or a combination of signals of various sensors, such as an acceleration sensor, a geomagnetic sensor, an infrared ray sensor, a force sensitive sensor, a contact sensor, a light sensor, a camera, and a proximity sensor. A part of a user's body body on which electronic device B is worn may be a particular part of the user's body, such as a wrist, an ankle, a finger, a head, or an area adjacent to one of those areas. When it is detected that electronic device B is in contact with or adjacent to a body, a user authentication may be tried through a user interface of the electronic device (1312). The user authentication may be progressed using not only a method of inputting a secret code previously stored in an electronic device, such as a PIN number, password, or pattern secret code, by a user, but also various other methods including biometric information recognition methods, such as voice recognition, fingerprint recognition, and iris recognition (1317). When a payment transaction initiated by a user or POS device starts (1314), electronic device B may determine whether the user has continuously worn the electronic device (1315). When the wearing state has been maintained after the processing of the user authentication, the payment transaction may be processed (1316). Otherwise, if electronic device B has not been worn by or attached to the user, the payment transaction is not allowed (1311). Electronic device B may be configured such that, even without a request for the payment transaction (1314), when electronic device B has been separated from the user (1315), the user authentication may be performed again (1317) or the payment transaction may be disabled (1311).

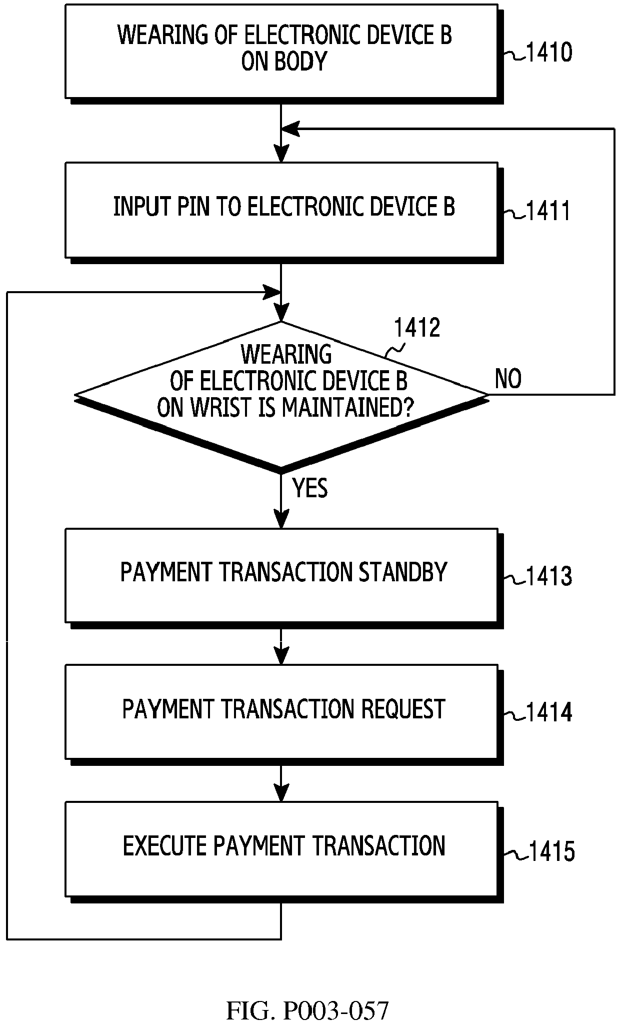

FIG. P003-057 illustrates another embodiment of the present disclosure, only one occurrence of user authentication enables the payable state to be maintained until electronic device B is separated from a body of the user. If electronic device B is worn on a body (1410), a display of the electronic device may display a secret code input screen allowing a user to input a secret code for authenticating the user, such as PIN, password, or pattern secret code. The user may progress user authentication, using the user interface (1411). In the above embodiment, electronic device B checks whether the user wearing state is maintained (1412). The body wearing state may be detected through a change in or a combination of signals of various sensors, such as an acceleration sensor, a geomagnetic sensor, an infrared ray sensor, a force sensitive sensor, a contact sensor, a light sensor, a camera, and a proximity sensor. When the wearing state is maintained, a separate user authentication may not be required for the user in the following payment procedure. A part of a body on which electronic device B is worn may be a particular part of a body, such as a wrist, an ankle, a finger, a head, or an area adjacent to one of those areas. In the above embodiment, the user authentication may be progressed using not only a method of inputting a secret code previously stored in an electronic device, such as a PIN number, password, or pattern secret code, by a user, but also various other methods including biometric information recognition methods, such as voice recognition, fingerprint recognition, and iris recognition (1411).

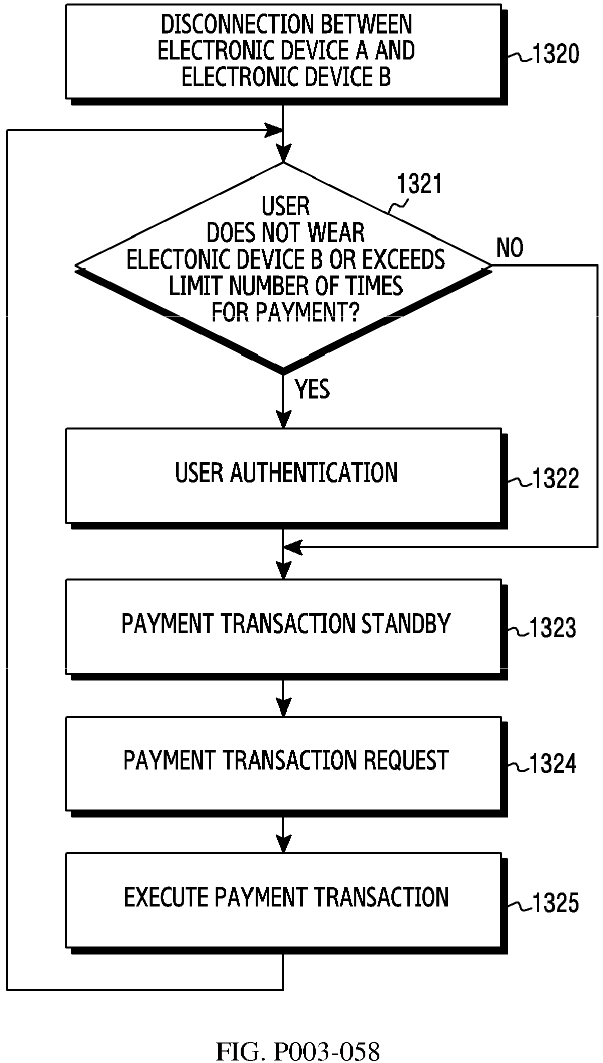

FIG. P003-058 illustrates one embodiment of a payment process flow in the case where payment is performed in a state where connection is not established between electronic device A and electronic device B. In a state where connection is not established between electronic device A and electronic device B (1320), when a user has not worn electronic device B on his or her body (1321), in order to enter into a payment transaction mode (1322), electronic device B should perform user authentication (1323). Further, when a predetermined limited number of times of payment has been exceeded (1321), user authentication is indispensable for the payment transaction. In a state where a user wears electronic device B on his or her body without exceeding the limited number of times of payment, user authentication may not be required at the time of a payment transaction. Instead of the limit number of times of payment, it may be checked whether a limited time for payment has been exceeded. When the limited number of times of payment has been exceeded or when the user is not wearing electronic device B, user authentication may progress using a PIN input, etc. The user authentication may be performed using an authentication method (e.g., a PIN input, a password input, a secret code pattern input, a fingerprint input, voice fingerprint input, or iris recognition) supported by the electronic device, or a combination of two or more of the methods.

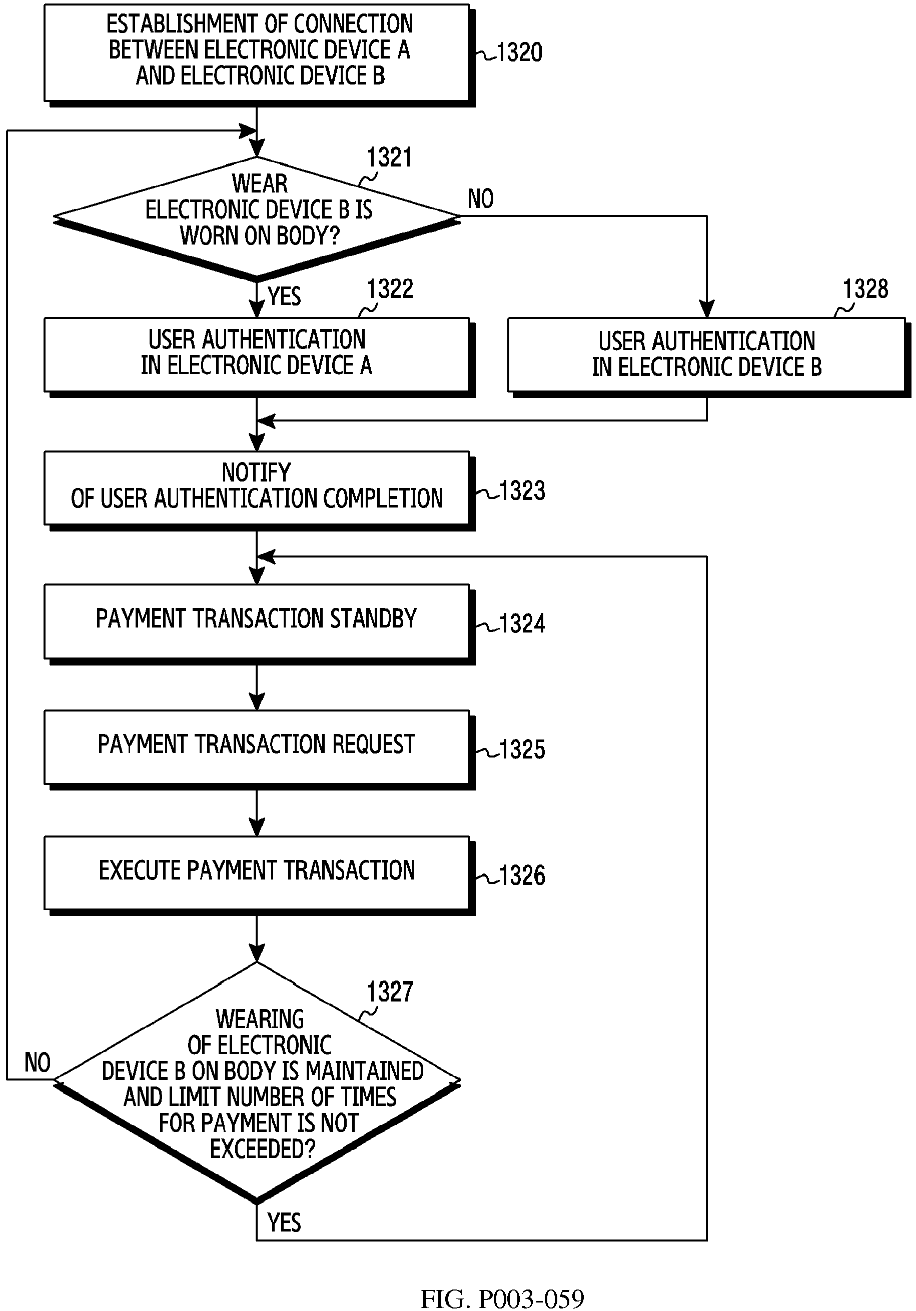

In an embodiment of the present disclosure, there is a difference in user authentication depending on whether a user wears electronic device B. In a state where a connection between electronic device A and electronic device B has been established, if authentication is completed through electronic device A, the completion of the authentication is notified to electronic device B connected to electronic device A to enable user authentication of electronic device B, which is regarded as having been completed. After the connection between electronic device A and electronic device B is established, electronic device A (1322) or electronic device B may perform an authentication process (1328) according to whether the user is wearing electronic device B on his or her body (1321). If the user is wearing electronic device B on his or her body, a user authentication mode may be entered using a user authentication method pre-designated in the electronic device, such as fingerprint recognition or PIN input, through electronic device A (1322). If the user is not wearing electronic device B on a part of his or her body, user authentication (e.g., PIN number input, password input, pattern secret code input, iris recognition, or fingerprint recognition) may progress through electronic device B(1328). After the connection between electronic device A and electronic device B is established, a request for payment transaction may be generated through a POS device or the user may start the payment application of electronic device B. Once the payment application has begun, it is checked whether the user is wearing electronic device B. When the user is wearing electronic device B, electronic device A may perform user authentication (1322). When electronic device A or electronic device B has successfully completed the user authentication, a user authentication completion notification may be sent to electronic device A, electronic device B, or both of electronic device A and electronic device B (1323). After the user authentication is completed through electronic device A or electronic device B, additional payment transaction may be repeatedly treated before the limit number of times of payment is exceeded or the user puts off electronic device B (or electronic device B is spaced apart from the user) (1327). When electronic device B is not worn on a part of the body or the limited number of times of payment is exceeded (1327), the user authentication may be performed again (1321). Instead of checking the limit number of times of payment, whether a time limit for payment has been exceeded may be checked. When the time limit for payment has not been exceeded, the payment transaction may be performed without user authentication (1327).

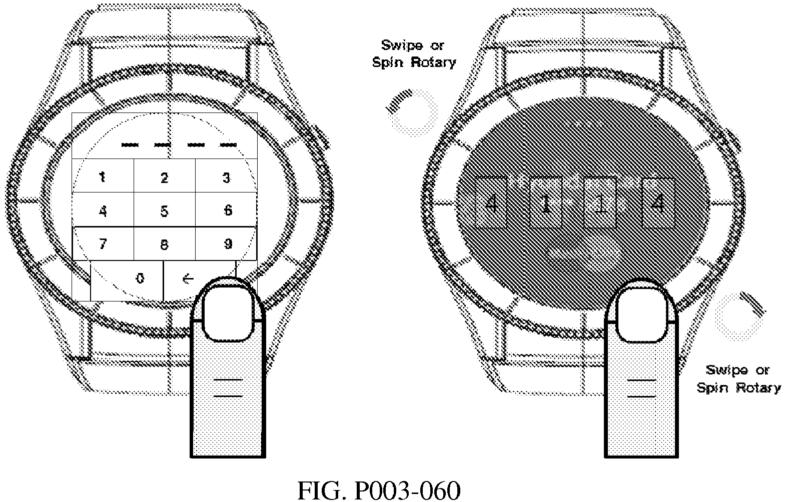

In FIG. P003-060 showing an example of user authentication of a payment system, a user may authenticate the authority by inputting a PIN number using a touch screen or using a rotary bezel or stem. Without inputting a PIN number, authentication may be performed using the rotation direction or the number of revolutions of the rotary bezel.

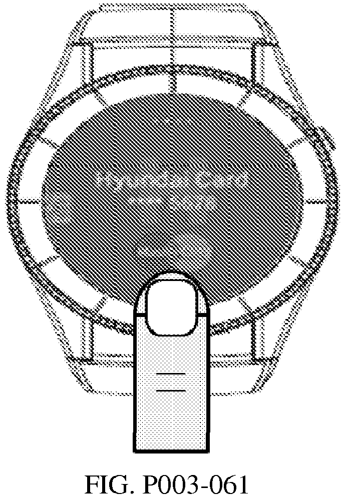

In FIG. P003-061 showing an example of user authentication of a payment system, a user may authenticate the authority, using a fingerprint sensor installed in a touch screen.

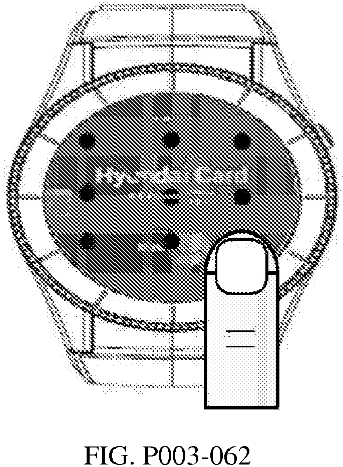

In FIG. P003-062 showing an example of user authentication of a payment system, a user may authenticate the authority by inputting a pattern through a touch screen.

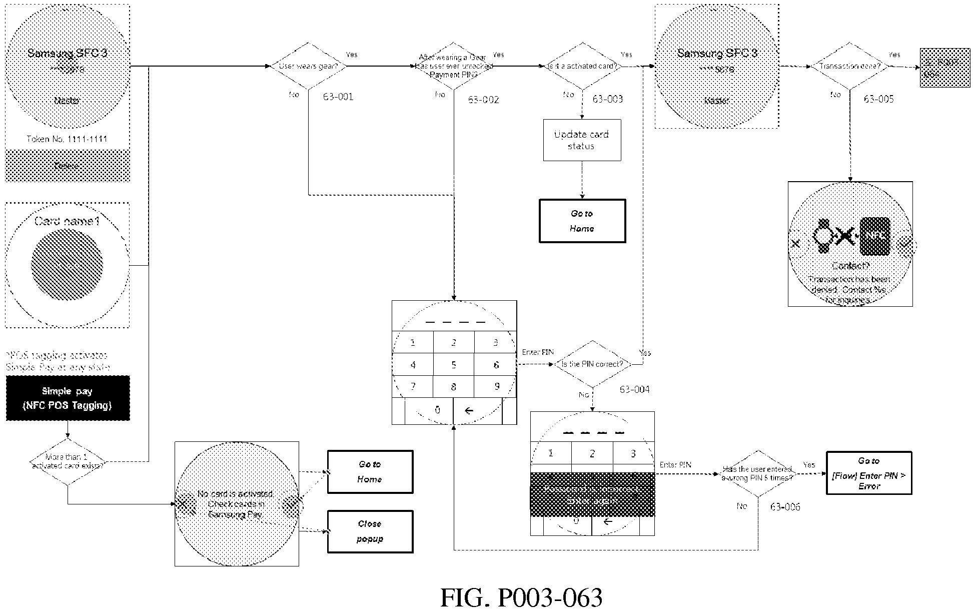

FIG. P003-063 illustrates an embodiment of a signal flow of a UI provided to a user by electronic device B in the process where a user progresses payment. The user may start payment through a payment application of electronic device B or by making electronic device B come into contact (tap) with a POS device. When the user starts by making electronic device B come into contact (tap) with a POS device, if electronic device B has no activated card, the absence of an activated card may be notified of. When the user starts payment using the payment application of electronic device B, the payment application may first show an activated card. If the user is not wearing electronic device B, whether the user is a proper user may be checked by providing a user interface necessary for user recognition, such as PIN code or fingerprint recognition (63-001). If the user has performed the user authentication process while wearing electronic device B (63-002), whether the card has been activated may checked. When there is no problem, data may be transmitted to a POS device (63-003). When the communication with the POS device is not smooth, the user may be notified of the problem in the data transmission. (63-005)

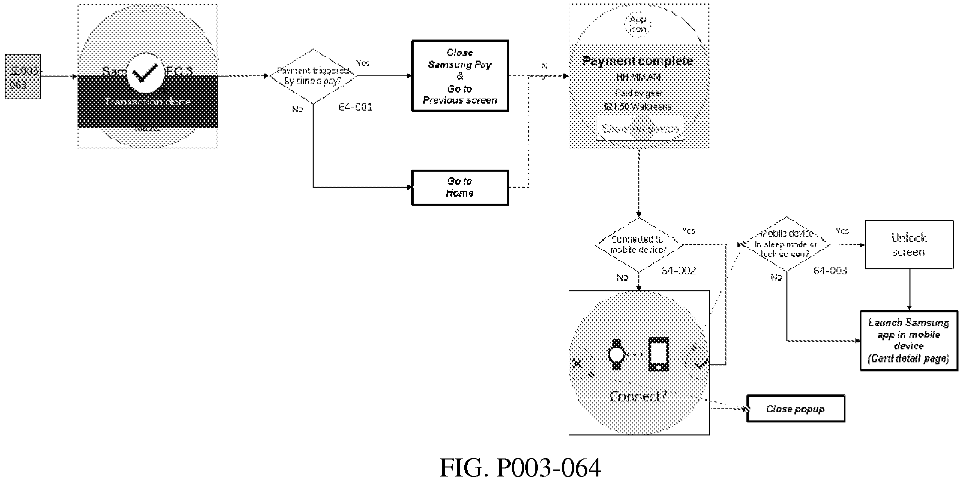

FIG. P003-064 corresponds to a process after FIG. P003-063, and illustrates an embodiment of a signal flow of a UI provided to a user by electronic device B in the process where a user progresses payment. When the user has completed data transmission to a POS device using electronic device B, a notification of the completion of the transmission may be sent to electronic device B. Thereafter, whether the payment has been started by a tapping onto the POS device or through a payment application by the user is determined, and then the process may return to a previous screen or HOME screen. When the payment has been completed, the completion of the payment is notified to the user and detailed information thereof may be provided to the user. Further, the detailed information may be shown in electronic device B or electronic device A may be selected to show the detailed information.

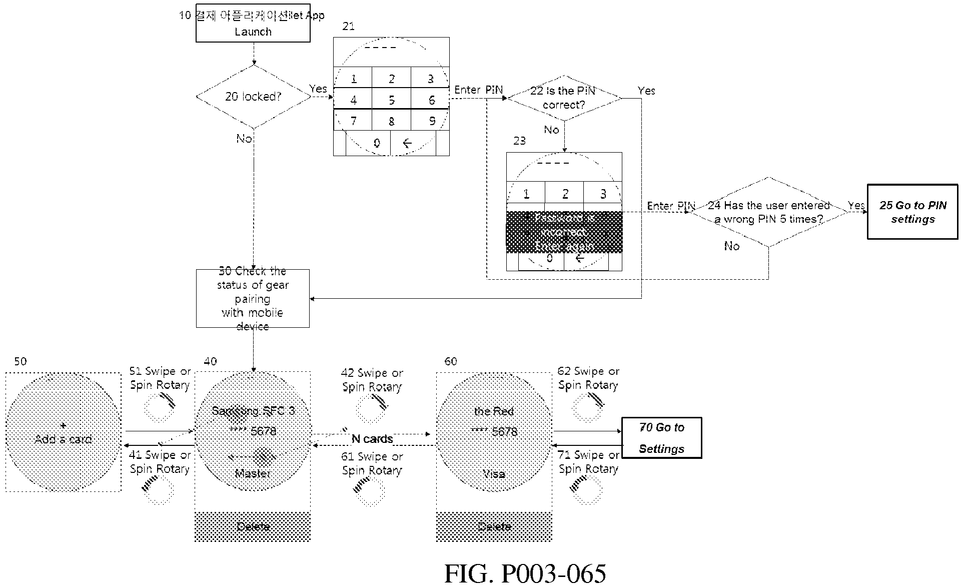

When electronic device B executes the payment application, the payment application may be in a locked state. If the payment application is in the locked state, an input of a password may be requested. If the payment application is in the locked state, a password may be input. When an approved secret code is not input, the process may check the status of the gear pairing. However, when an approved secret code is input, an input of a password may be requested again. When an approved secret code is not input, a notification requesting re-input of a password may be displayed. When an unapproved password has been input a predetermined number of times (five times in the figure), a connection may be made for re-setting of a password. However, the process may check the status of the gear pairing anytime when an approved password is input. Otherwise, the password may be set again. Electronic device B may identify the state of at least one card stored in another electronic device through communication with the another electronic device. If the state of the at least one card stored in the another electronic device has changed, the state of the at least one card stored in another electronic device should be also changed according to the changed state. The change of the state of the card may include deletion or use suspension. When it is determined that at least one card is in a payable state, the at least one card may be displayed on a display. When the state of the card has changed and there is a card unable to be used for the payment, at least one payable card among the cards stored in electronic device B may be displayed on the display. Although only one card is displayed in the embodiment, the priorities of the displayed cards may follow the sequence described above. In the display showing the card, the screen may be converted to a 50/60 screen by scrolling the screen leftward/rightward.

As an embodiment of the present disclosure, in the display, if a leftward scroll gesture is input, a screen allowing addition of a card may be displayed. In the display, if a rightward scroll gesture is input, at least one different card may be displayed. In the case of reaching the last card, a change may be given to the screen. If a rightward scroll gesture is input at the last card, the screen may be switched to a screen allowing additional setting. In 41, 42, 51, 52, 61, 62, and 71, the bezel of a clock may be rotated leftward/rightward, and 40, 50, and 70, allow screen switching into 70.

Electronic device A may operate a payment application and may have a means for receiving an input from a user and a screen capable of notifying a user of the current state of the electronic device. Electronic device B may operate a payment application and may have a means for receiving an input from a user and a screen capable of notifying a user of the current state of the electronic device. Electronic device A and electronic device B may be connected to each other through a wire or wirelessly, and may perform the payment either in a state where the two devices are connected or individually in a state where they are disconnected.

In an embodiment of the present disclosure, when executing the payment application, electronic device A and electronic device B may first display a most-recently used card.

In an embodiment of the present disclosure, electronic device B may have the same priority as that of electronic device A. That is, if electronic device A has a recently used card, electronic device B may firstly display the card to the user.

In an embodiment of the present disclosure, electronic device B may have a priority different from that of electronic device A. That is, regardless of the card used in electronic device A, electronic device B may firstly display a card used in electronic device B to the user.

In an embodiment of the present disclosure, upon receiving shop information from a POS device, electronic device A or electronic device B may show benefits according to the shop by displaying the benefits in an image.

In an embodiment of the present disclosure, upon receiving shop information from a POS device, electronic device A or electronic device B may automatically select related membership card information and transfer the selected information in combination with amount payment information.

In an embodiment of the present disclosure, upon receiving shop information from a POS device, electronic device A or electronic device B may automatically select related membership card information and transfer the selected information sequentially after transferring the amount payment information.

In an embodiment of the present disclosure, electronic device A or electronic device B may firstly display, to the user, a frequently used card or a predetermined card in consideration of the user's consumption pattern or use pattern.

In an embodiment of the present disclosure, in order to determine a card required in a currently located shop using electronic device A or electronic device B, information (e.g., GPS, LBS, etc.) of the current position of the electronic device or information of accessed access points (APs) may be used.

An operation of updating information relating to a token, which is one type of information among payable card information, may be performed centering on a server connected to the electronic device of the user. The updating work may be performed centering a service account of the server or an account associated with the service account. The job of updating the token may be determined at the time point of wireless communication connection between the two electronic devices or at a wired or wireless connection time point using a USB or an ear jack port.

The payment middleware may receive a key (e.g., a LUK) capable of producing a cryptogram through the token server or token requester server. The key may be transferred and received through a data network or an SMS. Otherwise, the key may be included in the stage of manufacturing the electronic device.

The received key may be transferred into and stored in the TEE. Otherwise, the received key may be encrypted in the TEE and then stored in the electronic device. The received key may be transferred into and stored in the security module.

For the key, the TEE may generate a cryptogram. The payment module may use different keys according to a predetermined rule, for example, in each transaction, in a predetermined number of times of transaction, or a transaction within a particular time.

A cryptogram is made by an already-known encryption algorithm, using the key and payment-related data. The payment-related data may include at least one among a POS ID, payment time, payment date, payment amount, and electronic device information.

According to an embodiment of the present disclosure, the payment module may transfer information including the token, token valid period, token requester ID, and cryptogram to an external electronic device. For example, the payment module may transfer the payment information to the POS device through the MST communication module. In addition, the payment module may transfer the payment information to an external POS device through the NFC communication module.

The token server may own a key associated with the key described above. The token server may decrypt the encrypted cryptogram, using the associated key. Use of the key may be limited by the term or the number of times of use. Otherwise, the key may be used without a limit in the term or the number of times of use. Also, one or more keys may be stored in the electronic device, and one key may be used one time while a used key is prevented from being additionally used. Otherwise, one or more keys may be stored in the electronic device, and each key may be continuously used for a predetermined period of time. Also, one or more keys may be stored in the electronic device, and multiple keys may be used for each payment while a used key is prevented from being additionally used. This can be achieved by transmitting different signals for payment.

For a use-limited key, an electronic device may request the token server to re-issue a token or or update the token in relation to the use-limited key. When a use-limited key is generated, the token server may be requested to re-issue or update the key. Regardless of the generation of the use-limited key, the token server may be requested to re-issue or update the key when a predetermined time has passed from the time point at which the key is received. When the payment has been performed a predetermined number of times, the token server may be requested to re-issue or update the key. Alternatively, whenever electronic device B is connected to electronic device A, the token server may be requested to re-issue or update the key. As another embodiment, when a plurality of cards has been registered in electronic device B, a key of each card may be used for re-issuance or update regardless of an input of the user whenever it is necessary. When the use period has expired or is just about to expire, electronic device A and/or electronic device B may display a notification.

In an embodiment of the present disclosure, a process in which the payment middleware of electronic device B determines that re-issuance of a key is necessary and performs the re-issuance.

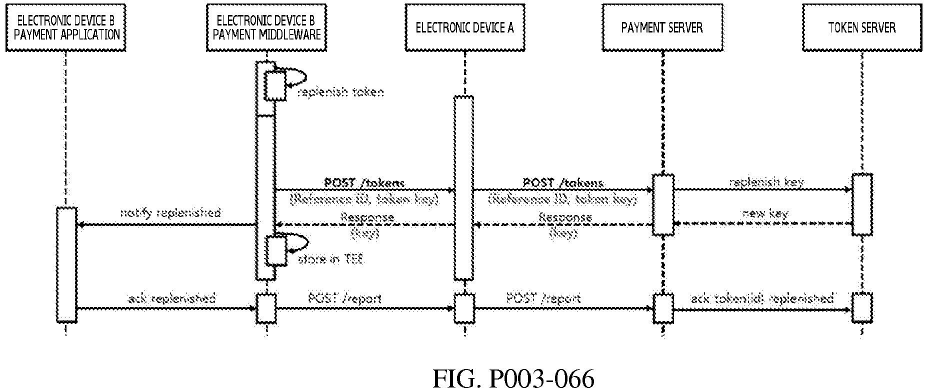

The payment middleware of electronic device B may determine that re-issuance or update of an LUK is necessary. When the payment middleware of electronic device B determines that re-issuance or update of an LUK is necessary, the payment middleware of electronic device B may transmit a token update request message to be transferred to the payment server to the payment middleware of electronic device A. The payment middleware of electronic device A may transmit the received token update request message to the payment server. The payment server transfers the received request to the token server. The token server generates a new LUK and transfers the LUK to the payment server. The payment server transfers the new LUK to the payment middleware of electronic device A. The payment middleware of electronic device A transfers the received new LUK to the payment middleware of electronic device B. The payment middleware of electronic device B stores the new LUK in the TEE of electronic device B. The payment middleware of electronic device B notifies the payment application of electronic device B of the contents of the process described above. The payment application of electronic device B may change the state to enable the corresponding PAN to perform the payment, as a result of the completion of the update of the key. The payment application of electronic device B may transfer the contents of the progress described above to the payment middleware of electronic device B. The payment middleware of electronic device A having received the report that the PAN in the payment application of electronic device B has been changed to a payable state may transfer the report to the payment middleware of electronic device B. The payment middleware of electronic device B may be transferred to the payment server. The payment server may transmit a notification message to the token server. The present disclosure includes a process in which electronic device B identifies connection with electronic device A and progresses re-issuance of the key.

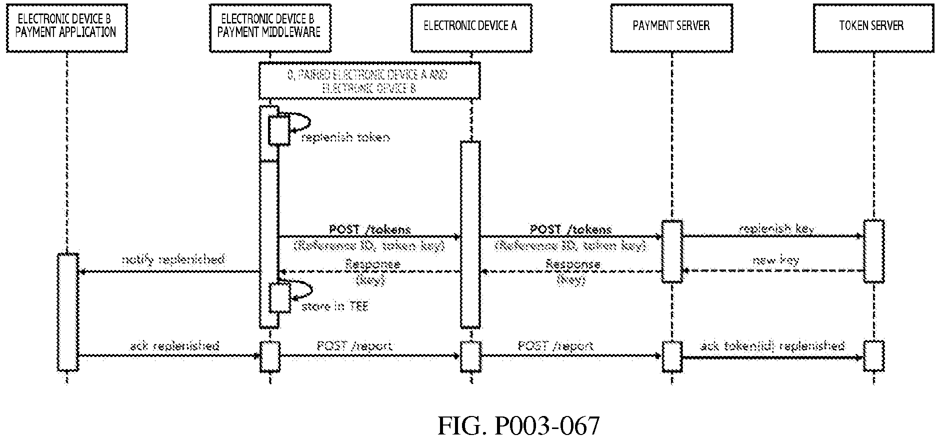

FIG. P003-067 shows a process in which electronic device B is connected with electronic device A and re-issues a key.

The payment middleware of electronic device B may identify connection between electronic device B and electronic device A and determine to perform re-issuance or update of an LUK. The payment middleware of electronic device B may determine that re-issuance or update of an LUK is necessary. When the payment middleware of electronic device B determines that re-issuance or update of an LUK is necessary, the payment middleware of electronic device B may transmit a token update request message to be transferred to the payment server to the payment middleware of electronic device A. The payment middleware of electronic device A may transmit the received token update request message to the payment server. The payment server transfers the received request to the token server. The token server generates a new LUK and transfers the LUK to the payment server. The payment server transfers the new LUK to the payment middleware of electronic device A. The payment middleware of electronic device A transfers the received new LUK to the payment middleware of electronic device B. The payment middleware of electronic device B stores the new LUK in the TEE of electronic device B. The payment middleware of electronic device B notifies the payment application of electronic device B of the contents of the process described above. The payment application of electronic device B may change the state to enable the corresponding PAN to perform the payment, as a result of the completion of the update of the key. The payment application of electronic device B may transfer the contents of the progress described above to the payment middleware of electronic device B. The payment middleware of electronic device A having received the report that the PAN in the payment application of electronic device B has been changed to a payable state may transfer the report to the payment middleware of electronic device B. The payment middleware of electronic device B may be transferred to the payment server. The payment server may transmit a notification message to the token server.

In an embodiment of the present disclosure, a wearable device may be temporarily unable to access the network or may lack a modem communicating with the network. In this event, information indicating the valid term or allowed number of times shows a short time or small number of times, a notification may be given to the present electronic device. Further, when payment cannot be performed due to incapability of a network communication in spite of desire to use the network communication, the notification may be transferred slightly earlier than an expected period. In this case, checking of the alarm period may be performed through a communication using SDK provided by the payment middleware, wherein the checking may be performed by another electronic device or may be performed by a wearable electronic device and then notified to the other electronic device. Otherwise, a server, such as a payment server, may proceed with the management after identification through a periodical checking request.

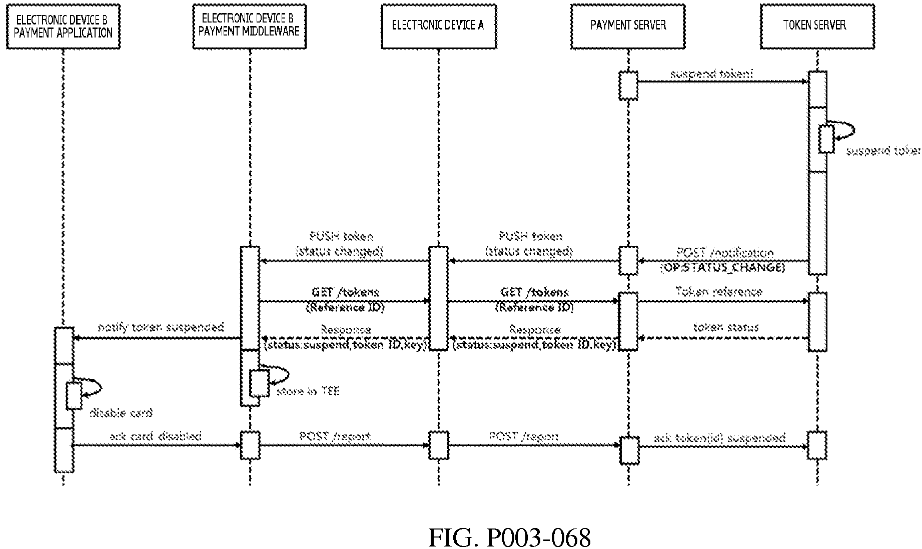

FIG. P003-068 illustrates a signal flow of a token management operation according to various embodiments.

According to various embodiments, referring to FIG. P003-068, the solid line may include a request (e.g., request or call) command and the dotted line may include a response (e.g., response or return) command. According to one embodiment, the payment system may include the payment application and payment middleware included in electronic device A, and the payment application, payment middleware, payment server, and token server included in electronic device B.

According to an embodiment of the present disclosure, in relation to the payment function, when an electronic device or a card of a user is lost, the user may notify of the loss of the electronic device or card, using the payment application of electronic device A, the payment application of electronic device B, the financial server, or a web site. Further, the payment application of electronic device A or the payment application of electronic device B may provide the payment application of electronic device A or the payment application of electronic device B with a function or application (e.g., payment application or find my mobile (FMM)) associated with the loss, so as to enable the user to notify of the loss of the electronic device or card.

According to an embodiment of the present disclosure, the payment server may perform a function for suspension of the electronic device or card when a function associated with the loss is performed or a predetermined event (e.g., temporary card loss) is performed. The payment server may include, for example, the financial server, the web site, or the payment network. The payment server may use a predetermined command (e.g., suspend token{token ID} or suspend token{token reference}) associated with the stop function, for the transfer to the token server.

According to an embodiment of the present disclosure, the token server may execute the stop function corresponding to the command (e.g., suspend token{token id} or suspend token{token reference}) associated with the stop function and received from the payment server. For example, the token server may change the state of the token. The state of the token may be changed to "suspend token."

According an embodiment of the present disclosure, the token server may transfer a notification associated with the stop function to the payment server. For example, the token server may transfer the "suspend token," which corresponds to the changed state of the token, to the payment server, using a predetermined command (e.g., POST//notification{Suspend}). The command may include at least one recognition number (e.g., at least one among token reference and token ID) associated with the state-changed token.

According to an embodiment of the present disclosure, the token server may transfer a notification associated with the state change of the token to the payment server. For example, the token server may transfer a command (e.g., POST/notification{Status Change}), which does not include the state of the token, to the payment server. The command may include at least one recognition number (e.g., at least one among token reference and token ID) associated with the state-changed token.

According to an embodiment of the present disclosure, the payment server may transfer the state of the token to the payment middleware of electronic device B through electronic device A. When the information is transferred to the payment middleware of electronic device B through electronic device A, the information may be transferred through at least one among the payment middleware and the proxy included in electronic device A. For example, the payment server may transfer of the state of the token to the payment middleware of electronic device B through electronic device A, using a predetermined command (e.g. PUSH token {id}{suspend}). The command may include at least one recognition number (e.g., at least one among card reference ID, token ID, and reference ID) associated with the state-changed token.

According to an embodiment of the present disclosure, the payment server may transfer the state change of the token to the payment middleware of electronic device B through electronic device A. When the information is transferred to the payment middleware of electronic device B through electronic device A, the information may be transferred through at least one among the payment middleware and the proxy included in electronic device A. For example, the payment server may transfer the change of the state of the token to the payment middleware of electronic device B, using a predetermined command (e.g. PUSH tokens {id}{status changed}). The command may include at least one recognition number (at least one among reference ID, token ID, and reference ID) associated with the state-changed token.

According to an embodiment of the present disclosure, the payment middleware of electronic device B may transfer the token ID to the payment server, using a predetermined command (e.g. GET /tokens/ {id}) in order to change the state of the token included (stored) in the electronic device. For example, the token ID may be token ID information included in PUSH token {id}{status changed}, which is information associated with the state of the token received from the payment server. Further, the payment middleware of electronic device B may transfer, for example, a resource ID to the payment server, using a predetermined command (e.g., GET/tokens/{id}). The resource ID may include an identifier of the registered resource, which may be configured in the form of a URL. Further, the reference ID may include, for example, reference information storing information related to a token ID and may include an address at which the token ID is stored in the payment server.

According to an embodiment of the present disclosure, the command may include information which can be authenticated by the token server. The information which can be authenticated may include a token key associated with the token.

According to an embodiment of the present disclosure, the payment server may transfer, to the token server, at least one among the token ID and the token reference, which have been received from the payment middleware of electronic device B through electronic device A.

According to an embodiment of the present disclosure, the token server may transfer the the state of the token to the payment server. For example, the state of the token may be a state of the token having been changed corresponding to the stop function.

According to an embodiment of the present disclosure, the payment server may transfer the state of the token to the payment middleware of electronic device B through electronic device A. For example, the state of the token may be a state of the token having been changed corresponding to the stop function. The state of the changed token may include, for example, token suspended or status:suspend. Further, the payment server may include, for example, the token ID and information associated with the token ID.

The information associated with the token ID may include information that can be authenticated by the payment middleware of electronic device B. The information that can be authenticated may include a token key associated with the token.

According to an embodiment of the present disclosure, the payment middleware of electronic device B may change the electronic device or the state of the token stored in the electronic device, based on the state (e.g., token suspended) of the token. For example, the payment middleware of electronic device B may change the electronic device or the state of the token stored in the electronic device into a suspended state (e.g., token suspended).

According to an embodiment of the present disclosure, the payment middleware of electronic device B may change the state of the token stored in the TEE of electronic device B, based on the state (e.g., token suspended) of the token. For example, the payment middleware of electronic device B may change the state of the token stored in the TEE into a suspended state (e.g., token suspended).

According to an embodiment of the present disclosure, the payment middleware of electronic device B may transfer the state of the token to the payment application of electronic device B. For example, the state of the token may be a state of the token having been changed corresponding to the stop function.

According to an embodiment of the present disclosure, the payment application of electronic device B may change the state of the PAN recognized by the electronic device. For example, the payment application of electronic device B may change (e.g., disable) the state of the card of the PAN to suspend the payment function using the PAN. For example, the payment application of electronic device B may display that the card associated with the PAN is unusable. The displaying method may use at least one among a tag, gray processing, and additional mark.

According to an embodiment of the present disclosure, the payment application of electronic device B may transfer the changed state of the card or the PAN to the payment middleware. For example, the payment application of electronic device B may transfer information (e.g., ACK card disabled) indicating that the PAN has been suspended, to the payment middleware of electronic device B. The payment application of electronic device B may make, for example, the card or the PAN be unusable in the payment function.

According to an embodiment of the present disclosure, the payment middleware of electronic device B may transfer the changed state of the card or the PAN to the payment server through electronic device A. For example, the payment middleware of electronic device B may transfer the information reporting that the state of the card or the PAN has been changed to a suspended state (e.g., suspended or disabled), to the payment server through electronic device A, using a predetermined command (e.g., POST/reports). The payment middleware of electronic device B may perform, for example, state synchronization with the payment server.

According to an embodiment of the present disclosure, the payment server may transfer the changed state of the card or the PAN to the token server. For example, the payment server may transmit a response (e.g., [acknowledgement] or ACK token{id} suspended) to the token server.

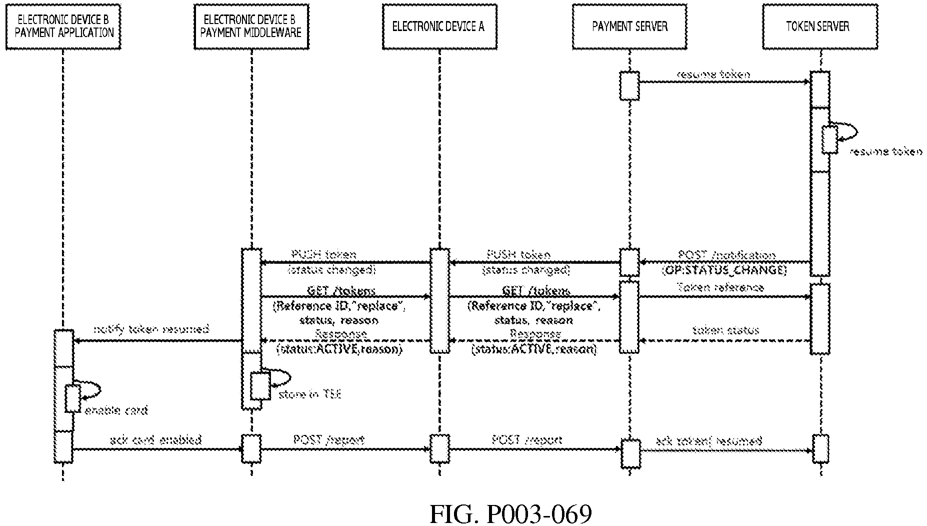

FIG. P003-069 illustrates a signal flow of a token management operation according to various embodiments.

According to various embodiments, referring to FIG. P003-069, the solid line may include a request (e.g., request or call) command and the dotted line may include a response (e.g., response or return) command. According to an embodiment an embodiment of the present disclosure, the payment system may include the payment application, payment middleware, and proxy included in electronic device A (hereinafter, referred to as payment application of electronic device A, payment middleware of electronic device A, and proxy of electronic device A, respectively), and the payment application and payment middleware (hereinafter, referred to as payment application of electronic device B and payment middleware of electronic device B, respectively), payment server, and token server included in electronic device B.

According to an embodiment of the present disclosure, in relation to the payment function, the user may change the state of the electronic device or the card of the user from the suspension to use. For example, the payment application of electronic device A, the payment application of electronic device B, the financial server, or the web site may be used to change the use state of the electronic device or the card. Further, the payment application of electronic device A or the payment application of electronic device B may provide the payment application of electronic device A or the payment application of electronic device B with a function or application (e.g., payment application or FMM) associated with the use, so as to enable the user to notify of the use of the electronic device or card.

According to an embodiment of the present disclosure, the payment server may perform a function for resume of the electronic device or card when a function associated with the loss is performed or a predetermined event (e.g., temporary card loss cancellation) is performed. The payment server may include, for example, the financial server, the web site, or the payment network. The payment server may use a predetermined command (e.g., resume token{token ID} or resume token{token reference}) associated with the reuse function, for the transfer to the token server.

According to an embodiment of the present disclosure, the token server may execute the reuse function corresponding to the command (e.g., resume token{token id} or resume token{token reference}) associated with the reuse function and received from the payment server. For example, the token server may change the state of the token. The state of the token may be changed to resume token.

According to an embodiment of the present disclosure, the token server may transfer a notification associated with the reuse function to the payment server. For example, the token server may transfer the resume token, which corresponds to the changed state of the token, to the payment server, using a predetermined command (e.g., POST//notification{Resume}). The command may include a recognition number (e.g., at least one among token reference and token ID) associated with the state-changed token.

According to an embodiment of the present disclosure, the token server may transfer a notification associated with the state change of the token to the payment server. For example, the token server may transfer a command (e.g., POST/notification{Status Change}), which does not include the state of the token, to the payment server. The command may include a recognition number (e.g., at least one among token reference and token ID) associated with the state-changed token.

According to an embodiment of the present disclosure, the payment server may transfer the state of the token to the payment middleware of electronic device B through electronic device A. When the information is transferred to the payment middleware of electronic device B through electronic device A, the information may be transferred through at least one among the payment middleware and the proxy included in electronic device A. For example, the payment server may transfer of the state of the token to the payment middleware of electronic device B through electronic device A, using a predetermined command (e.g. PUSH token {id}{resume}). The command may include a recognition number (e.g., at least one among token reference, token ID, and reference ID) associated with the state-changed token.

According to an embodiment of the present disclosure, the payment server may transfer the state change of the token to the payment middleware of electronic device B through electronic device A. When the information is transferred to the payment middleware of electronic device B through electronic device A, the information may be transferred through at least one among the payment middleware and the proxy included in electronic device A. For example, the payment server may transfer the change of the state of the token to the payment middleware of electronic device B, using a predetermined command (e.g. PUSH tokens {id}{status changed}). According to various embodiments, the command may include a recognition number (e.g., at least one among token reference, token ID, and reference ID) associated with the state-changed token.

According to an embodiment of the present disclosure, the payment middleware of electronic device B may transfer the token ID to the payment server, using a predetermined command (e.g. GET /tokens/ {id}) in order to change the state of the token included (stored) in the electronic device. The token ID may be, for example, token ID information included in PUSH token {id}{status changed}, which is information associated with the state of the token received from the payment server. Further, the payment middleware of electronic device B may transfer, for example, a token reference, an instruction, a status, or a reason to the payment server, using a predetermined command (e.g., GET/tokens/{id}). The token reference may include, for example, an identifier of the registered (enrollment) resource, which may be configured in the form of a URL. Further, the token reference may include, for example, reference information storing information related to a token ID and may include an address at which the token ID is stored in the payment server. The instruction may include, for example, a description for state change of the token, and the description may include replace. The status may include, for example, a state (e.g., active, suspension, resume, or disposal) of the token. The reason may include, for example, a reason why the state of the token is changed, and may include, for example, found device.

According to an embodiment of the present disclosure, the command may include information which can be authenticated by the token server. The information which can be authenticated may include a token key associated with the token.

According to an embodiment of the present disclosure, the payment server may transfer, to the token server, at least one among the token ID and the token reference, which have been received from the payment middleware of electronic device B through electronic device A.

According to an embodiment of the present disclosure, the token server may transfer the the state of the token to the payment server. For example, the state of the token may be a state of the token having been changed corresponding to the reuse function.

According to an embodiment of the present disclosure, the payment server may transfer the state of the token or the reason (e.g., reason) when the state of the token is changed to the payment middleware of electronic device B through electronic device A. For example, the state of the token may be a state of the token having been changed corresponding to the reuse function. The changed state of the token may include, for example, token resumed or status:ACTIVE. Further, the payment server may include, for example, the token ID and information associated with the token ID.

The information associated with the token ID may include information that can be authenticated by the payment middleware of electronic device B. The information that can be authenticated may include a token key associated with the token.

According to an embodiment of the present disclosure, the payment middleware of electronic device B may change the electronic device or the state of the token stored in the electronic device, based on the state (e.g., token resumed) of the token. For example, the payment middleware of electronic device B may change the electronic device or the state of the token stored in the electronic device into a reuse state (e.g., token resumed).

According to an embodiment of the present disclosure, the payment middleware of electronic device B may change the state of the token stored in the TEE of electronic device B, based on the state (e.g., token resumed) of the token. For example, the payment middleware of electronic device B may change the state of the token stored in the TEE into a reuse state (e.g., token resumed).

According to an embodiment of the present disclosure, the payment middleware of electronic device B may transfer the state of the token to the payment application of electronic device B. For example, the state of the token may be a state of the token having been changed corresponding to the reuse function.

According to an embodiment of the present disclosure, the payment application of electronic device B may change the state of the PAN recognized by the electronic device. For example, the payment application of electronic device B may change (e.g., enable) the state of the card or the PAN of electronic device B to enable the payment function using the PAN to be reused. For example, the payment application of electronic device B may display that the card associated with the PAN is usable. The displaying method may use at least one among a tag, reconstruction to the original color, and additional mark.

According to an embodiment of the present disclosure, the payment application of electronic device B may transfer the changed state of the card or the PAN to the payment middleware of electronic device B. For example, the payment application of electronic device B may transfer information (e.g., ACK card enabled) indicating that the card or the PAN has been reused, to the payment middleware of electronic device B. The payment application may, for example, reuse the card or the PAN in the payment function.

According to an embodiment of the present disclosure, the payment middleware of electronic device B may transfer the changed state of the card or the PAN to the payment server through electronic device A. For example, the payment middleware of electronic device B may transfer the information reporting that the state of the card or the PAN has been changed to a reused state (e.g., enabled) to the payment server using a predetermined command (e.g., POST/reports). The payment middleware of electronic device B may perform, for example, state synchronization with the payment server.

According to an embodiment of the present disclosure, the payment server may transfer the changed state of the card or the PAN to the token server. For example, the payment server may transmit a response (e.g., [acknowledgement] or ACK token{id} resumed) to the token server.

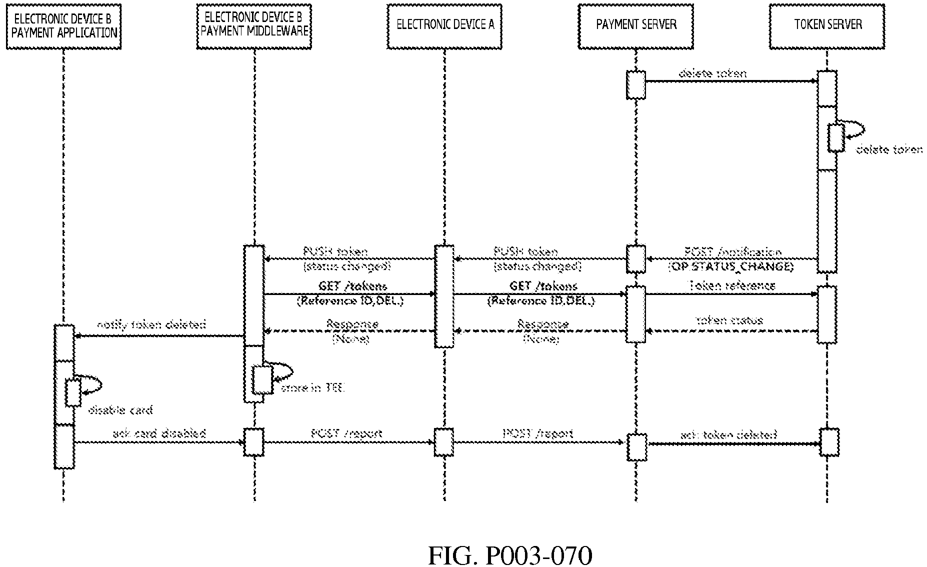

FIG. P003-070 illustrates a signal flow of a token management operation according to various embodiments.According to various embodiments, referring to FIG. P003-070, the solid line may include a request (e.g., request or call) command and the dotted line may include a response (e.g., response or return) command. According to an embodiment of the present disclosure, the payment system may include the payment application, payment middleware, and proxy included in electronic device A, and the payment application, payment middleware, payment server, and token server included in electronic device B.

According to an embodiment of the present disclosure, in relation to the payment function, when an electronic device or a card of a user is lost, the user may notify of the loss of the electronic device or card, using the payment application of electronic device A, the payment application of electronic device B, the financial server, or a web site. Further, the payment application of electronic device A or the payment application of electronic device B may provide, for example, the payment application of electronic device A or the payment application of electronic device B with a function or application (e.g., payment application or FMM) associated with the loss, so as to enable the user to notify of the loss of the electronic device or card.

According to an embodiment of the present disclosure, the payment server may perform a function for disposal of the electronic device or card when a function associated with the loss is performed or a predetermined event (e.g., temporary card loss) is performed. The payment server may include, for example, the financial server, the web site, or the payment network. The payment server may use a predetermined command (e.g., delete token{id} or delete token{reference ID}) associated with the disposal function, for the transfer to the token server.

According to an embodiment of the present disclosure, the token server may execute the disposal function corresponding to the command (e.g., delete token{token id} or delete token{token reference}) associated with the discard (disposal) function and received from the payment server. For example, the token server may change the state of the token. The state of the token may be changed to "delete token."

According to an embodiment of the present disclosure, the token server may transfer a notification associated with the disposal function to the payment server. For example, the token server may transfer the delete token, which corresponds to the changed state of the token, to the payment server, using a predetermined command (e.g., POST/notification{delete}). The command may include a recognition number (e.g., at least one among token reference and token ID) associated with the state-changed token.

According to an embodiment of the present disclosure, the token server may transfer a notification associated with the state change of the token to the payment server. For example, the token server may transfer a command (e.g., POST/notification{Status Change}), which does not include the state of the token, to the payment server. The command may include a recognition number (e.g., at least one among token reference and token ID) associated with the state-changed token.

According to an embodiment of the present disclosure, the payment server may transfer the state of the token to the payment middleware of electronic device B through electronic device A. When the information is transferred to the payment middleware of electronic device B through electronic device A, the information may be transferred through at least one among the payment middleware and the proxy included in electronic device A. For example, the payment server may transfer of the state of the token to the payment middleware of electronic device B through electronic device A, using a predetermined command (e.g. PUSH token {id}{delete}). The command may include a recognition number (e.g., at least one among token reference, token ID, and reference ID) associated with the state-changed token.

According to an embodiment of the present disclosure, the payment server may transfer the state change of the token to the payment middleware of electronic device B through electronic device A. When the information is transferred to the payment middleware of electronic device B through electronic device A, the information may be transferred through at least one among the payment middleware and the proxy included in electronic device A. For example, the payment server may transfer the change of the state of the token to the payment middleware of electronic device B, using a predetermined command (e.g. PUSH tokens {id}{status changed}). The command may include a recognition number (e.g., at least one among token reference, token ID, and reference ID) associated with the state-changed token.

According to an embodiment of the present disclosure, the payment middleware of electronic device B may transfer the token ID to the payment server, using a predetermined command (e.g. GET /tokens/ {token ID}) in order to change the state of the token included (stored) in the electronic device. The token ID may be, for example, token ID information included in PUSH token {id}{status changed}, which is information associated with the state of the token received from the payment server. Further, the payment middleware of electronic device B may transfer, for example, a token reference, to the payment server, using a predetermined command (e.g., GET/tokens/{id}). The token reference may include, for example, an identifier of the registered resource, which may be configured in the form of a URL. Further, the token reference may include, for example, reference information storing information related to a token ID and may include an address at which the token ID is stored in the payment server.

According to an embodiment of the present disclosure, the command may include information which can be authenticated by the token server. The information which can be authenticated may include a token key associated with the token.

According to an embodiment of the present disclosure, the payment server may transfer, to the token server, at least one among the token ID and the token reference, which have been received from the payment middleware of electronic device B through electronic device A.

According to an embodiment of the present disclosure, the token server may transfer the the state of the token to the payment server. For example, the state of the token may be a state (e.g., token not found) of the token having been changed corresponding to the disposal function.

According to an embodiment of the present disclosure, the payment server may transfer the state or the token ID of the token to the payment middleware of electronic device B through electronic device A. For example, the state of the token may be a state of the token having been changed corresponding to the disposal function. The changed state of the token may include, for example, token deleted or status:disposal. Further, the payment server may include, for example, the token ID and information associated with the token ID.

The information associated with the token ID may include information that can be authenticated by the payment middleware of electronic device B. The information that can be authenticated may include a token key associated with the token.

According to an embodiment of the present disclosure, the payment middleware of electronic device B may change the electronic device or the state of the token stored in the electronic device, based on the state (e.g., token deleted) of the token. For example, the payment middleware of electronic device B may change the electronic device or the state of the token stored in the electronic device into a disposal state (e.g., token deleted).

According to an embodiment of the present disclosure, the payment middleware of electronic device B may change the state of the token stored in the TEE of electronic device B, based on the state (e.g., token deleted) of the token. For example, the payment middleware of electronic device B may change the state of the token stored in the TEE into a suspended state (e.g., token deleted).

According to an embodiment of the present disclosure, the payment middleware of electronic device B may transfer the state of the token to the payment application of electronic device B. For example, the state of the token may be a state of the token having been changed corresponding to the disposal function.

According to an embodiment of the present disclosure, the payment application of electronic device B may change the state of the PAN recognized by the electronic device. For example, the payment application of electronic device B may change (e.g., disabled or deleted) the state of the card of the PAN to discard the payment function using the PAN. For example, the payment application of electronic device B may display that the card associated with the PAN is unusable. The displaying method may use at least one among a tag, gray processing, additional mark, and image deletion.

According to an embodiment of the present disclosure, the payment application of electronic device B may transfer the changed state of the card or the PAN to the payment middleware. For example, the payment application of electronic device B may transfer information (e.g., ACK card disabled or ACK card deleted) indicating that the card or the PAN has been discarded, to the payment middleware of electronic device B. The payment application of electronic device B may, for example, delete the card or the PAN in the payment application of electronic device B to make the card or the PAN be unusable in the payment function.

According to an embodiment of the present disclosure, the payment middleware of electronic device B may transfer the changed state of the card or the PAN to the payment server through electronic device A. For example, the payment middleware of electronic device B may transfer the information reporting that the state of the card or the PAN has been changed to a discarded state (e.g., disabled, deleted, or disposal) to the payment server through electronic device A, using a predetermined command (e.g., POST/reports). The payment middleware of electronic device B may perform, for example, state synchronization with the payment server.

According to an embodiment of the present disclosure, the payment server may transfer the changed state of the card or the PAN to the token server. For example, the payment server may transmit a response (e.g., [acknowledgement] or ACK token {id} deleted) to the token server. 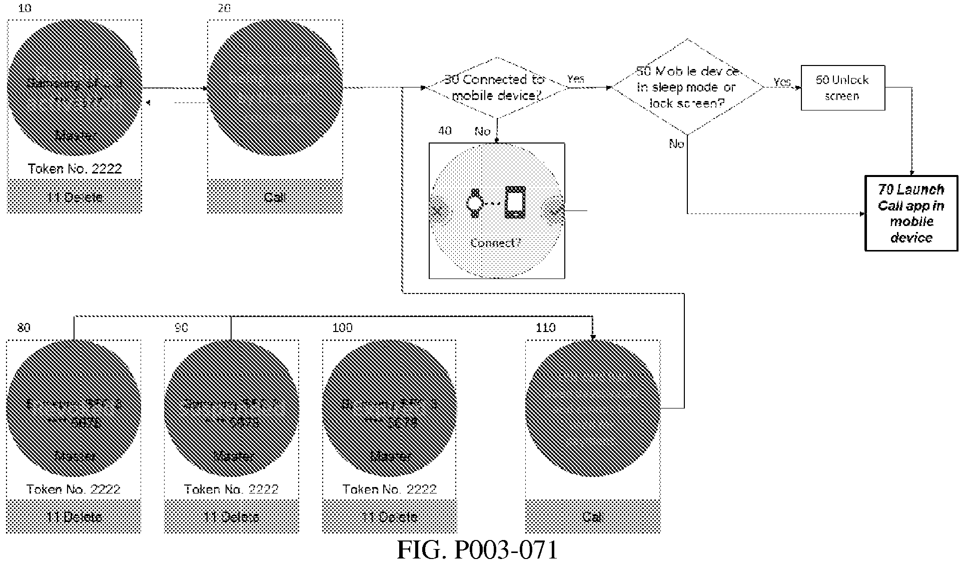 When a user authentication is in progress for activation, information that a card of electronic device B is being activated may be displayed.

When there is an additional input in the preceding step, the electronic device may display information that user authentication with card companies is in progress. Further, a user input of an intention to call each card company may be received. If an input of an intention to call each card company has been received in this step, the process may proceed to the next step.

When electronic device B is connected to electronic device A as a result of checking whether electronic device B is in a connected state, electronic device B may proceed to the next step. If electronic device B is not in a connected state, a step for inquiring of the user whether to connect to the electronic device may be performed.

The step for inquiring of the user whether to connect to the electronic device may be displayed on a display. When the user has input an intention to connect to electronic device A, electronic device B, and when there is no input from the user for a predetermined period of time or an intention of denial to connect to electronic device A is input from the user, the card input procedure may be stopped.

If electronic device A is in a locked state or sleep state, the payment application of electronic device A may be performed, when the electronic device is in an unlocked state, or proceeds to the step 60 when the electronic device is in a locked state or sleep state.

Electronic device A may be converted into the unlocked state, and the process may proceed to the step.

The payment application of electronic device A may be performed.

In the case of a discarded card, the payment application of electronic device B may display information that the card is a discarded card.

In the case of a use-suspended card, the payment application of electronic device B may display a report that the card is a use-suspended card.

In the case of a use term-expired card, the payment application of electronic device B may display a report that the card is a use term-expired card.

When there is an additional input in the last four steps, a description that the corresponding card is unusable may be displayed on a display. Further, a user input of an intention to call each card company may be received. If an input of an intention to call each card company has been received in this step, the process may proceed to the third step above.

A module for managing information of not only an electronic device owned by the user but also the server, for example, a service account of a payment server, may update the token information for an electronic device connected to the user or an electronic device of an authenticated family account. As one of various embodiments, on an assumption that a child electronic device and a parent electronic device are connected to each other, even when the two electronic devices have different service accounts, if it is determined, based on the information of the server, that the accounts are family accounts, the parent electronic device may request token update and transfer an updated token to the child electronic device.

In an embodiment of the present disclosure, when the token has expired in the child electronic device, a notification message may be transferred to the father electronic device. The time point at which the expiration of the token is transferred to the father electronic device may be the time point of wireless communication connection between the two electronic devices or a wired or wireless connection time point using a USB or an ear jack port.

According to an embodiment of the present disclosure, when electronic device B is connected with electronic device A, all information including the ID of the previously connected electronic device A and payment-related information in the case of new connection to another electronic device may be deleted. The ID possessed by the electronic device may include at least one ID among, for example, an electronic device ID, a card reference ID, and a user ID.

In an embodiment of the present disclosure, the user may format electronic device B, using an application mounted in electronic device A. The application may have a function capable of remotely configuring and operating electronic device B.

According to an embodiment of the present disclosure, a user may operate the factory initialization or formatting by himself or herself in electronic device B without connection to another electronic device. Electronic device B may be entered into a boot loader mode and be formatted therein. The boot loader mode may be entered by pressing a particular key or a combination of particular keys for at least a particular time or repeatedly.

According to an embodiment of the present disclosure, the operation of factory initialization or formatting performed in an electronic device using an HCE module may delete all information of the payment application as well as the payment information, such as a token. When booting is executed after payment information or user information in the payment application is deleted by factory initialization or formatting, a first booting operation together with payment-related electronic device information of electronic device B should be notified to the payment server at the time of initial connection to a mobile electronic device supported by the payment service. The payment-related electronic device information may be, for example, at least one piece of payment-related information among wireless communication information, MST, NFT support/non-support, binary information, electronic device ID, card reference ID, user ID, and encryption key. When a resetting process of the factory initialization or formatting by the payment application is completed, at least one payment-related module, for example, the payment server, may recognize whether all tokens registered in the financial server or card network has been de-registered or started. The payment application operating together with the card network or financial server and a reliable application of the card network may recognize whether the factory resetting has been completed and whether a step of deactivating all tokens having been registered in the existing service has been performed. Even the reliable application, such as the token requester server of the card network, and the payment application operating in link with the financial server and card network may recognize a resetting completion-or-not, such as factory initialization or formatting of electronic device B.

According to an embodiment of the present disclosure, a case of initially booting electronic device B after a resetting operation, such as factory initialization or formatting, is generated in electronic device B using a security module will be described. After the resetting is executed, the payment application may notify a server in the payment service network of the first booting operation together with the ID of electronic device B. The mentioned ID may include at least one ID among, for example, an electronic device ID, a card reference ID, and a user ID.

According to an embodiment of the present disclosure, the key management module of the electronic device and the payment application may recognize whether a step of de-registering all the tokens registered before the service after the factory resetting is completed has been performed.

According to an embodiment of the present disclosure, a module of the payment service network server, for example, the token requester server or payment server, may recognize whether a step of de-registering or deactivating all the tokens in the security service management server after the electronic device resetting is completed has been performed.

According to an embodiment of the present disclosure, the key management module of the electronic device and the payment application may recognize whether a step of de-registering all the tokens registered before the service after the factory resetting is completed has been performed.

According to an embodiment of the present disclosure, a user may contact the financial server to request for blocking of a card. The financial server may determine suspension or deactivation of the token.

According to an embodiment of the present disclosure, a person having acquired electronic device B may unable to use the electronic device without PIN.

According to an embodiment of the present disclosure, if electronic device B is paired with another electronic device, electronic device B may be formatted according to the process described above.

By a request from a user, access to a card can be blocked in various methods. According to an embodiment of the present disclosure, all payment-related information can be deleted by sending data from a server (e.g., FMM) to the electronic device. Further, PIN information may be changed when a PIN has been set, or a PIN may be configured when PIN has not been configured. Fundamentally, in addition to the access blocking method, the token may be changed to an unusable token by requesting the security service management server to inhibit use of the token.

In an embodiment of the present disclosure, a user input indicates an input made by at least one, or a combination of two or more, of a touch, a hover, a drag, a flip, a swipe, a tap, a double-tap, a flick, and a force-touch. The term "user input" may be different in each embodiment of the present disclosure, and a touch and a tap may be interchangeably used.

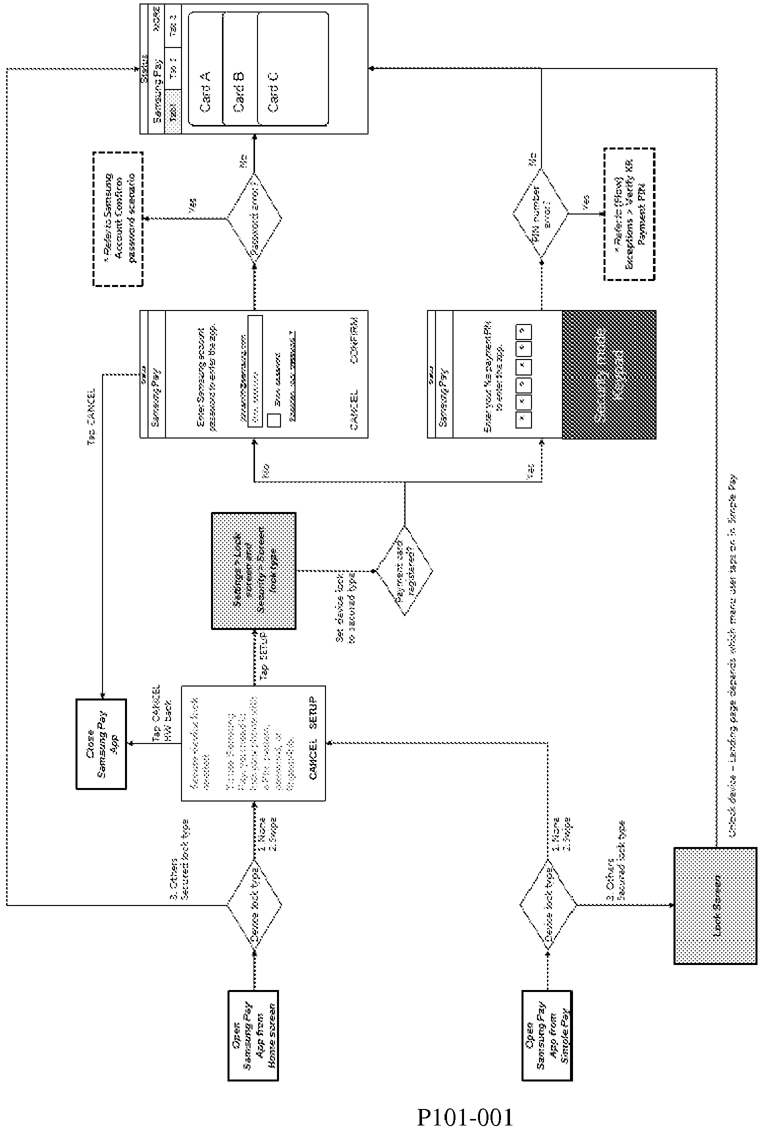

An electronic device may execute a payment application based on a predetermined event. The electronic device may display an initial screen including a payment card image in a display in response to the execution of the payment application.

The electronic device may receive the predetermined event, and may determine a lock type that is set in the electronic device before executing the payment application. The lock type may be at least one lock type, which is is set by a user, out of different lock types having different security levels, such as a type in which locking is not set; a type in which locking is unlocked through inputting a swipe; a type in which locking is unlocked through a predetermined pattern inputted by a touch or a gesture; a type in which locking is unlocked through inputting a user signature; a type in which locking is unlocked through inputting a PIN or password; a type in which locking is unlocked through inputting biometric information (such as a fingerprint, an iris, or the like); a type in which locking is unlocked through inputting a user's face image information; and the like. The operation of determining the lock type that is set in the electronic device may include an operation of determining whether the lock type that is set in the electronic device is a predetermined lock type; or an operation of determining whether the security level of the lock type that is set in the electronic device is greater than or equal to a predetermined security level. For example, the type in which locking is not set and the type in which locking is unlocked through inputting a swipe may be different from the predetermined lock type or the lock type of which the security level is greater than a predetermined security level.

The electronic device may determine whether to execute the payment application based on the operation of determining the lock type that is set in the electronic device. When the lock type that is set in the electronic device is the predetermined lock type or has a security level that is higher than the predetermined security level, the electronic device may execute the payment application. As another example, when the lock type that is set in the electronic device is different from the predetermined lock type or has a security level that is lower than or equal to the predetermined security level, the electronic device may not execute the payment application.

In response to the operation that does not execute the payment application, the electronic device may provide a user with notification information associated with the execution of the payment application or the lock type that is set in the electronic device. For example, there may be provided information indicating that the designated lock type or a lock type of which the security level is greater than the predetermined security level is required to use the payment application. The provided notification information may include link information associated with a function that is capable of setting or changing the lock type set in the electronic device.

When the lock type that is set in the electronic device is completely changed to the predetermined lock type or a lock type of which the security level is greater than the predetermined security level, in a function screen provided through the link information, the electronic device may execute the payment application.

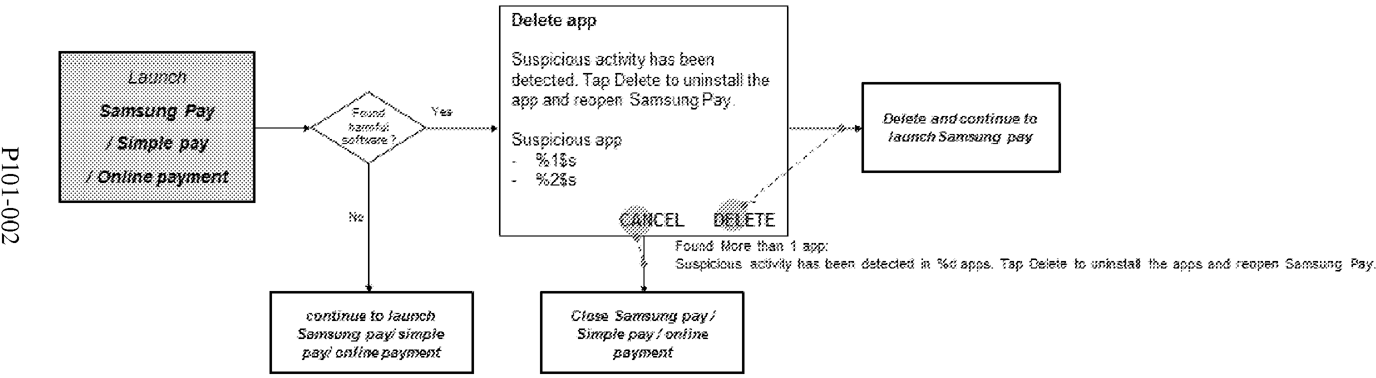

The electronic device may receive the predetermined event, and may determine whether the electronic device includes harmful data in association with the payment application, before executing the payment application. The harmful data may be a malignant code, a hacking related data, and data associated with the leakage of personal information.

The operation of determining whether the electronic device includes the harmful data may be executed by a separate security application that is executed in response to the operation of receiving the predetermined event.

When the harmful data is detected in the operation of determining whether the electronic device includes the harmful data, the electronic device may provide a user with information indicating that the harmful data is detected.

The electronic device may determine whether to execute the payment application based on the operation of determining whether the electronic device includes the harmful data. When the harmful data is not detected, the electronic device may execute the payment application. As another example, when the harmful data is detected, the electronic device may not execute the payment application.

In response to the operation that does not execute the payment application, the electronic device may provide a user with notification information associated with the execution of the payment application or the harmful data included in the electronic device. For example, there may be provided information associated with the detected harmful data or information indicating that the detected harmful data needs to be deleted to use the payment application. The provided notification information may include link information associated with a function that is capable of deleting the harmful data.

When the harmful data is deleted by a user input with respect to the link that is capable of deleting the harmful data, and the deletion is completed, the electronic device may execute the payment application.

Referring to drawings, a payment user interface of an electronic device is illustrated according to various embodiments.

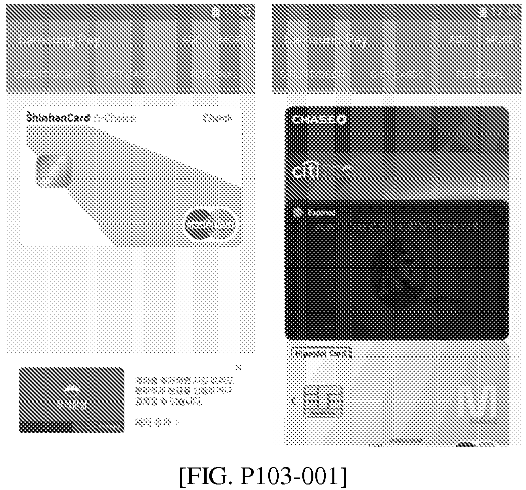

According to an embodiment of the present disclosure, an electronic device receives a user input and executes a payment application. A user may register various cards in the payment application and utilize the same. In this instance, to manage a plurality of cards, categories may be provided that are distinguished by a plurality of tabs based on an attribute and a type. FIG. P103-001 illustrates an example thereof, and categories that are distinguished by "credit/debit," "gift," "cards," and "personal" are provided, and cards are classified into categories corresponding to their attributes when they are registered.

According to an embodiment, FIG. P103-002 illustrates a payment application includes four categories that are distinguished by "payment," "membership," "traffic," and "storage box," and cards are classified into corresponding categories. When a category is selected by touching a corresponding tap, corresponding cards may be shown. A card may be moved to another category through a flick to the right or to the left.

One or more cards that are recommended to a user may be displayed in the bottom of the payment application, as shown in the diagrams (a) and (b) of FIG. P103-002.

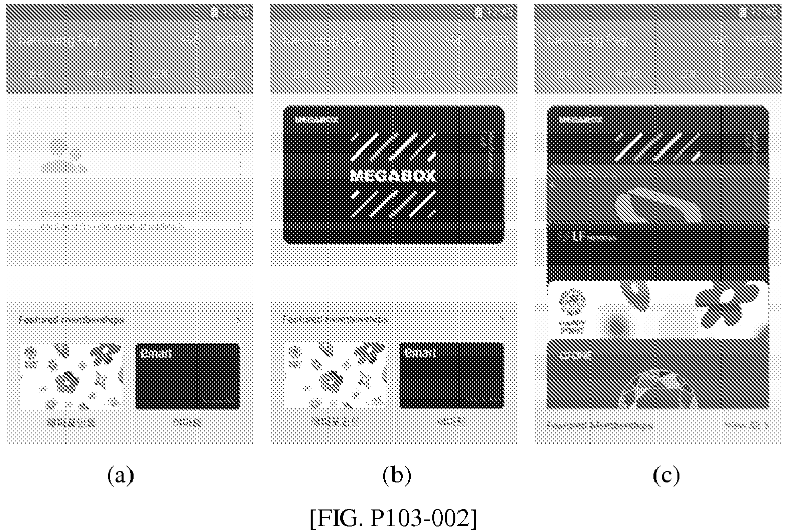

According to an embodiment of the present disclosure, when a plurality of cards exists, the entire list may not be shown in a limited screen. As shown in FIG. P103-003, when a plurality of cards exists, a user may provide a flick to the upside in the diagram (a), and as the list is scrolled, a navigation bar may disappear from the payment application. In addition, when the last card in the card list is shown through scrolling, the navigation bar may appear again as shown in the diagram (c).

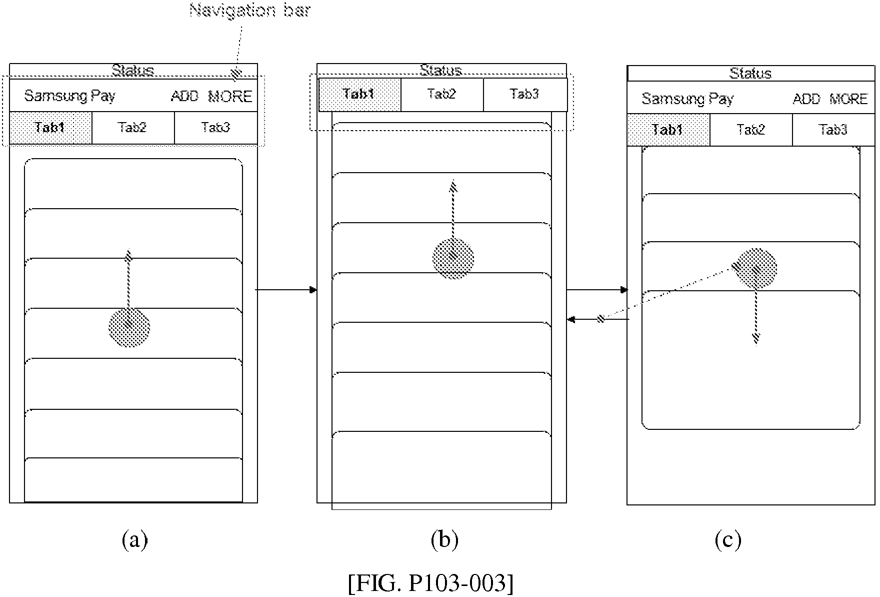

According to an embodiment of the present disclosure, a related card and information may be displayed in a separate area of the screen that shows the last card in the list, as shown in the diagram (c) of FIG. P103-004. In addition, information associated with a store that is related to the present location may be displayed in the separate area.

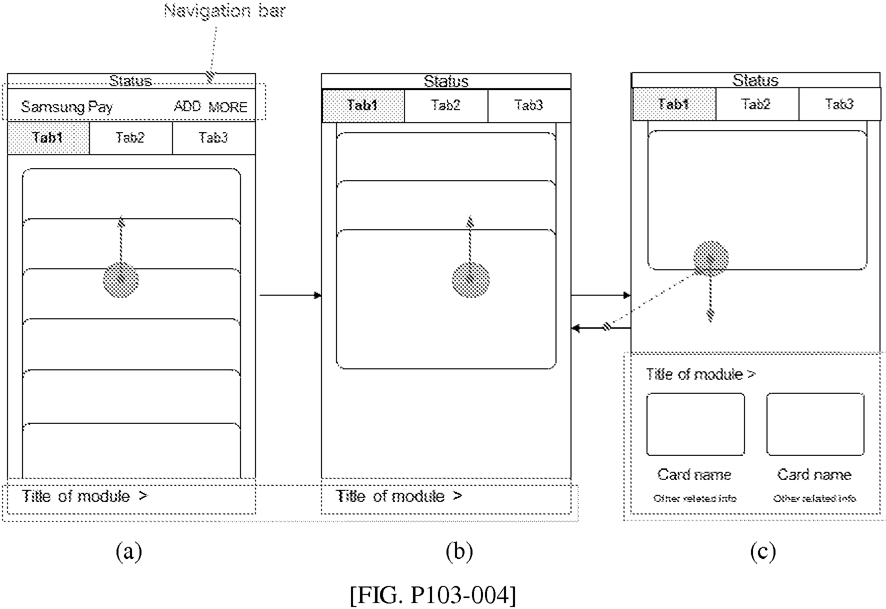

According to an embodiment of the present disclosure, a user may manage a card in the payment application. As shown in FIG. P103-005, a user selects a card and may see the entire card image and card information as illustrated in the diagram (b), and the card is partially shown and the card information is shown by being enlarged almost to a full screen as shown in the diagram (c).

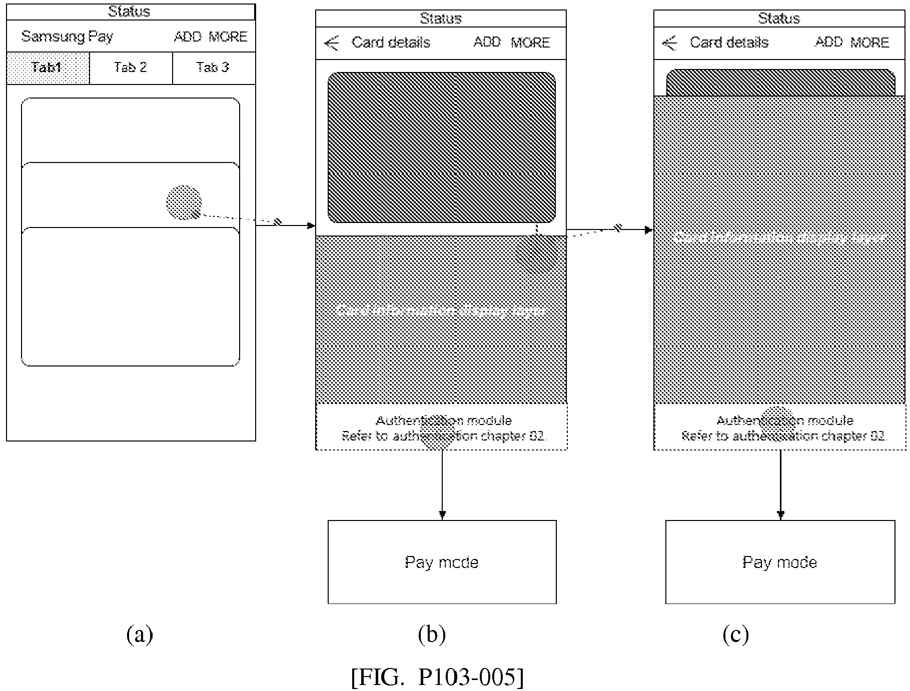

According to an embodiment of the present disclosure, when a user selects a card in the diagram (a) or selects a part marked with (i) as shown in FIG. P103-006, the user may determine detailed card information in a manner that is illustrated in the diagram (b). At least one of a card number, a pin number, a total spent, a balance, an issue date of a card, a digital PAN, a usage limitation, and a barcode may be included and displayed. With respect to some items, such as "Balance" or the like, a corresponding item may be newly updated or refreshed by selecting a refresh button.

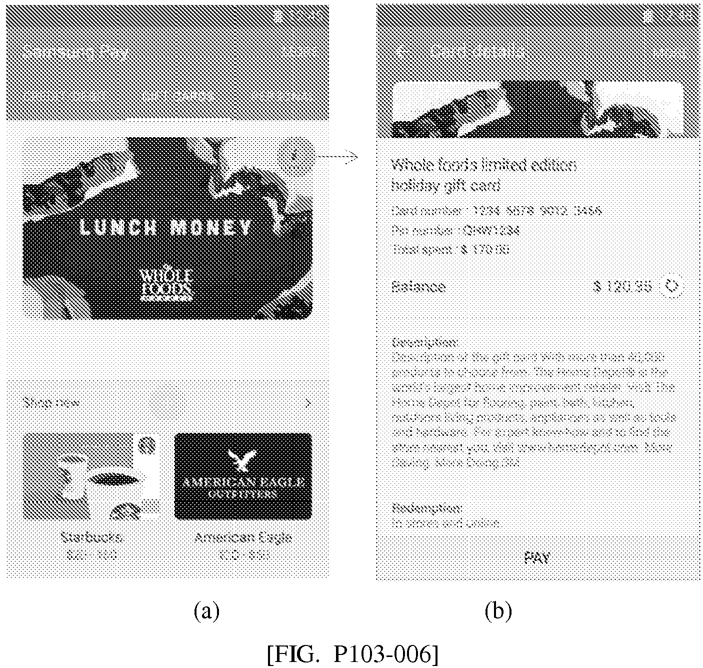

According to an embodiment of the present disclosure, the number of cards that are used or managed by the payment application may be different from the number of cards that a user is capable of using for a simple pay application for convenience. FIG. P103-007 is a diagram illustrating an embodiment in which a user selects whether to use a card for a simple payment, and adds the card to the simple payment during or after registration of the card. When the user puts a check mark in or selects the "Add to simple pay", the card may be added so that the user may be capable of using the card for the simple payment. The number of cards that can be added to the simple payment may be limited and there may be a situation in which further addition is no longer possible. In this instance, as illustrated in the diagram d of FIG. P103-007, the user may edit a list of cards that can be used for the simple payment by editing the existing list of cards, and may add a new card to the simple payment.

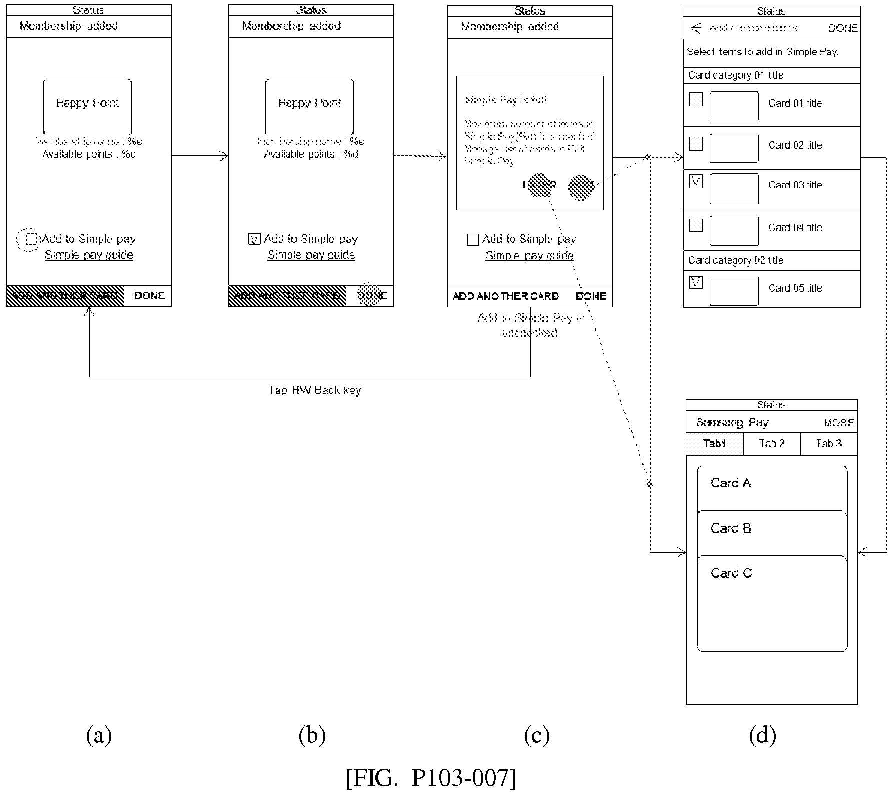

Although it is described that the payment application and the simple payment are different applications for the ease of description, they may be substantially a single application and they may be different modules or routines of which entry points, UIs, or operation methods may be different. They may use a common module in an identical application.

FIG. P103-005 is a diagram illustrating a catalog in the bottom of a screen according to various embodiments of the present disclosure. The catalog image and text may be moved to a catalog main page by providing a touch, a tap, or a click. The catalog area may disappear after a predetermined period of time.

Also, as illustrated in the diagram (b) of FIG. P103-008, a notification may be provided to a user. In this case, the notification may disappear by a selection made by a user that clicks an "X."

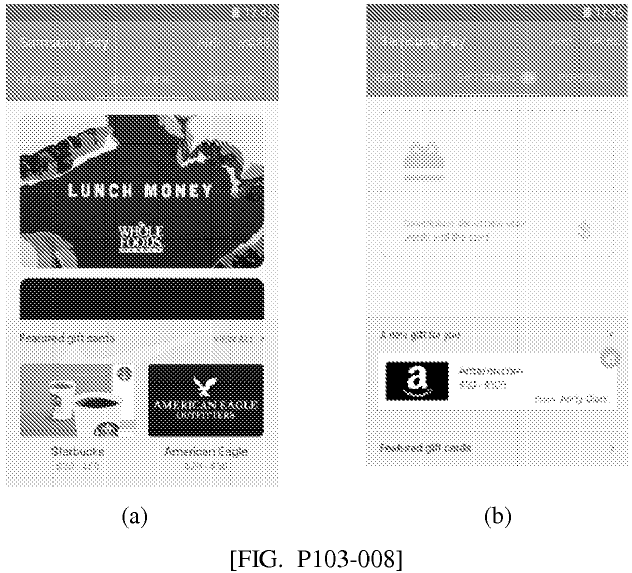

According to an embodiment of the present disclosure, a user may use simple pay by moving (browsing) from a screen where a plurality of cards is shown to a screen where a desired card is shown. The user may move to other cards in various methods, and the user may move a corresponding card by tapping an indicator shown in the bottom of the cards or may move a corresponding card through swiping. Also, as illustrated in the diagram (b) of FIG. P103-009, the user may quickly browse cards by sliding to the left or to the right while holding an indicator, and a currently selected card image may be displayed in a manner in which a card that a user currently browses rises up unlike other cards. When card browsing is stopped at a desired card, the selected card may be displayed in the form of a screen (d), and when card browsing is executed fast, this may be reported to a user through at least one of a haptic feedback and a notification sound.

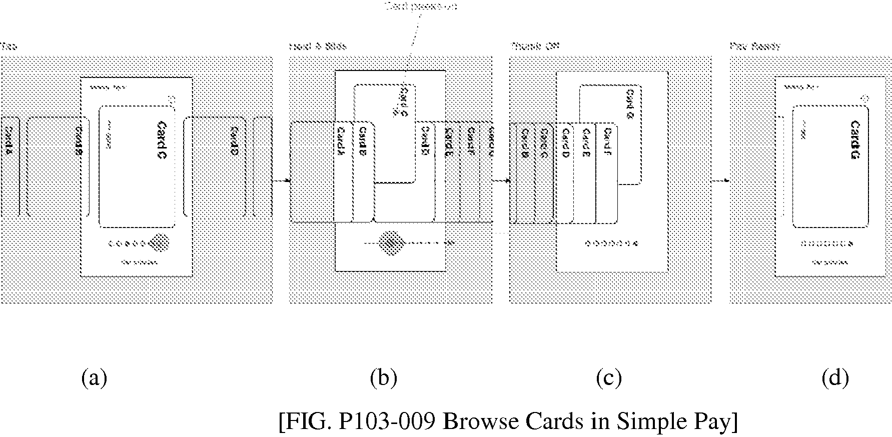

FIG. P103-010 is a diagram illustrating an example of changing an order of displayed cards according to various embodiments of the present disclosure. A user may continuously hold a state of touching (Tap & hold) Card E, of which the order the user desires to change, out of the one or more arranged cards. In the state in which the user holds the state of touching Card E with a finger, the user may move the finger in the upper direction or the lower direction. In this instance, the card may be displayed in the form of a diagram (b). The user may move Card E to a desired location in the arranged cards and remove the finger from the card, or move the card between slots of cards. The diagram (b) shows the process. When the card is freed from the tap input of the user, the order of the card may be changed and fixed to a corresponding location. The diagram (d) illustrates an example in which the location of Card E may be changed to the original location in the card list.

The user may set an enlargement of the size, a change in color, a notification sound, or haptic feedback provided in association with a touched card to be different for each stage in response to a user input.

Referring to FIG. P04-102, a screen that is shown when a user executes and initially enters a payment application is described below. According to an embodiment of the present disclosure, one of the images associated with a card that is in the state in which a token is activated may be displayed. For example, the displayed card may be the latest used card. The displayed card may be a card that is set by a user. The payment application may receive information from an external device, and may select and display a card that is advantageous to a user, such as discount, mileage points, or the like in association with a payment to be made at a corresponding store.

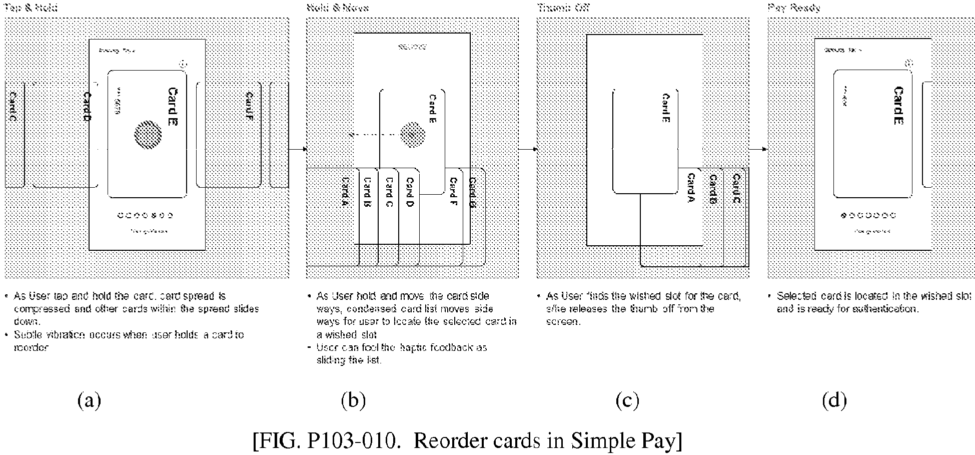

According to an embodiment of the present disclosure, the payment application may be executed when a user touches an icon of the payment application shown through a terminal, or the payment application may be executed through a swiping motion provided from the bottom to the top in a home screen.

According to an embodiment of the present disclosure, one of the images associated with a card that is in the state in which a token is activated may be displayed. The diagram (a) of FIG. P103-011 illustrates an example thereof. A user may execute user authentication through a fingerprint using a fingerprint sensor when the user desires to execute payment using the corresponding card. When the user authentication is successfully executed through fingerprint authentication or inputting a PIN, the user may proceed with a subsequent operation for payment.

A device may proceed with payment using NFC, MST, or a barcode. The device may display a screen of the diagram (b), and may generate a signal to execute communication through NFC, MST, or the like. The device may generate a signal during a predetermined period of time, and the signal may be displayed in a form that is similar to a progress bar over time. A terminal device generates an MST or NFC communication signal while the progress bar proceeds. After that, the terminal device may not generate an MST or NFC communication signal.

According to an embodiment of the present disclosure, while the screen of the diagram (b) is displayed, the terminal device may determine whether an NFC terminal exists within a predetermined range of the terminal device. The terminal device may detect a signal transmitted from an NFC terminal within the predetermined range, and may determine whether the NFC terminal exists. After determining the existence, payment may be executed by transmitting a token and a cryptogram to the NFC terminal based on an NFC communication scheme.

When an electronic device is close to, or enters, a store, the electronic device recognizes in advance whether a payment POS device supports NFC, MST, or Barcode, and may support a UI of the payment application and execute operations based on the same. According to various embodiments of the present disclosure, whether the payment POS device supports NFC, MST, or Barcode is determined based on the beacon information of Bluetooth or BLE, or frame data of WiFi. The payment application may enable one module of NFC/MST/barcode to operate when payment is actually made based on the POS information.

When the orientation of the device is incorrect, an image of the diagram (c) may be displayed to induce the device to be correctly oriented to the POS device through a proximity sensor, a camera, or a gyro sensor. When payment is abnormally executed because a predetermined period of time elapses, a user touches a retry button so as to re-generate a communication signal, so that a signal for the communication may be re-generated.

According to an embodiment of the present disclosure, after a payment application normally communicates with a payment server, or data including token information, or an NFC or MST signal is normally generated with respect to the POS device, a screen returns to a home screen, or after the simple payment application is terminated, a screen returns to a previous screen.

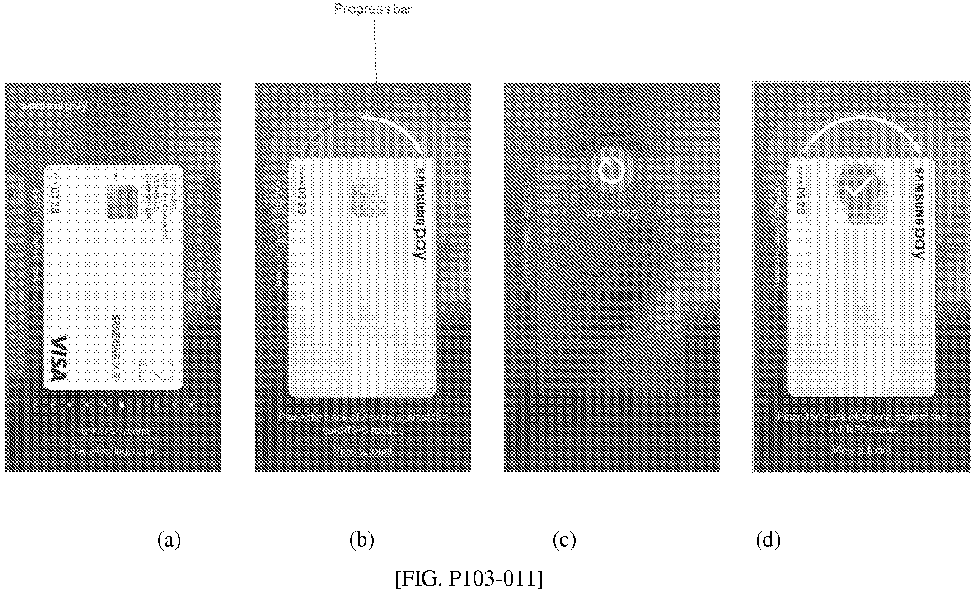

### 4.3 Home/Card management

### 4.3.1 View cards

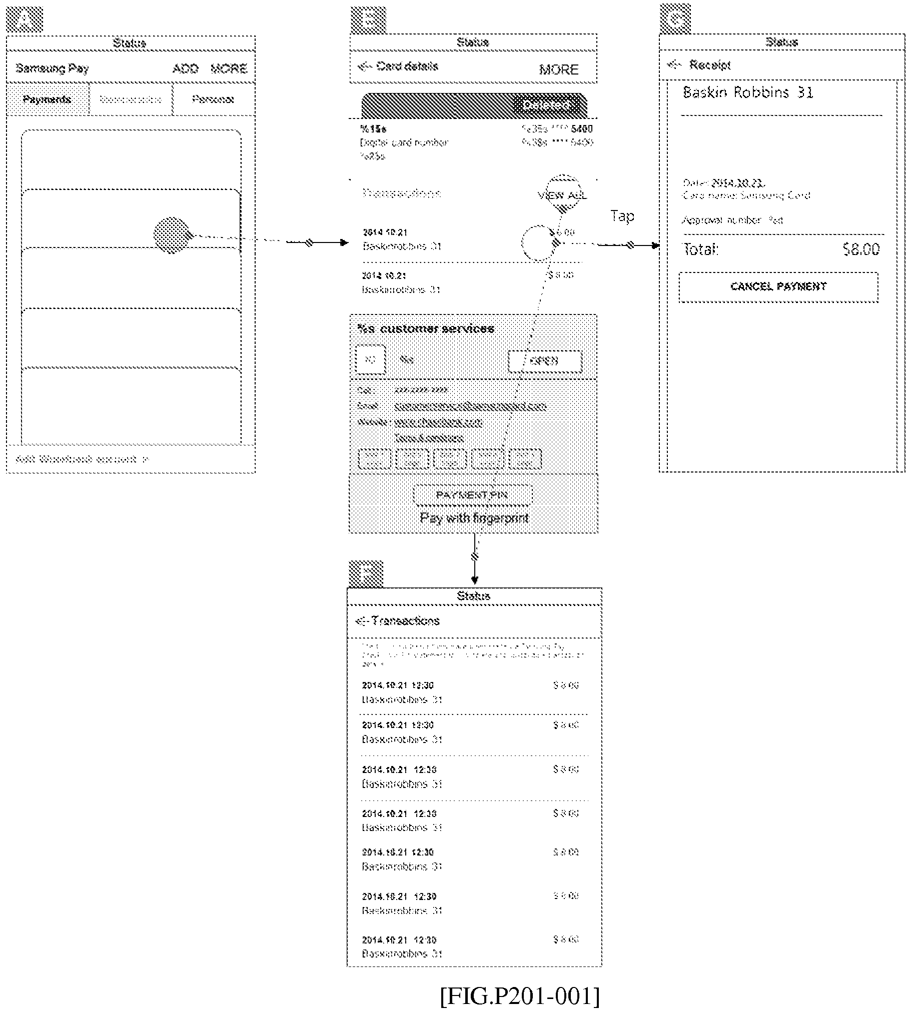

A screen shown after executing a payment application will be described through FIG. P201-001. For example, when the payment application is executed or a registered card is deleted, the screen of the diagram A may be displayed.

According to an embodiment of the present disclosure, an "ADD" menu for adding a card and a "MORE" menu for showing an additional menu may be displayed in the top of the screen, like the screen of the diagram A. In addition, the menu may be displayed by classifying cards based on a type. For example, the menu (such as, "payments," "memberships," and "personal") may be displayed. By touching each tap, only cards that belong to a corresponding category may be displayed to a user. For example, "payments" may include a credit card, a debit card, a private label credit card (PLCC), a voucher, a gift card, an ATM card, a bank account, and the like. For example, "Memberships" may include a membership card, a loyalty card, a coupon, and the like. For example, "personal" may include a resident registration certificate card, a bank security card, a driver's license, and the like.

According to an embodiment of the present disclosure, a plurality of registered cards may be displayed as shown in the screen of the diagram A. For example, the cards are displayed in a form in which a card overlaps another card.

According to an embodiment of the present disclosure, when one of the plurality of cards is selected, the screen is changed to a screen that shows the detailed information of the corresponding card. For example, at least some of a digital card number (e.g., token, digital account number (DAN)) that is different from an actual card number (PAN) may be displayed. Also, when a terminal has a plurality of transmission schemes for transmitting payment information, a corresponding digital card number may exist for each transmission scheme. When payment is made with Card A through MST, a digital card number of 1234 may be used. When payment is made with Card A through NFC, a digital card number of 5678 may be used.

In addition, the details of the payment made using the corresponding card may be displayed. The details of the payment may include the name of a store, an amount of payment, product information, a date of payment, and the like.

Additionally, when the fingerprint authentication is executed through a home key of the terminal in the screen, payment may be executed. Alternatively, a button, such as "payment PIN," may be provided to execute payment.

An electronic device may execute a payment application based on a predetermined event. The electronic device may display an initial screen including a payment card image in response to the execution of the payment application.

According to an embodiment of the present disclosure, when one of the transactions is selected, the screen is changed to a screen that displays additional information related to the transaction. For example, the name of a store, an amount of payment, product information, a date of payment, and a payment cancellation button are displayed.

According to an embodiment of the present disclosure, when a user presses the payment cancellation button, payment information is generated that is related to a digital card number (e.g., a token or a DAN) that was used when the payment was made, and the payment information may be transmitted to the outside using an MST or NFC antenna. When a user presses the payment cancellation button, a one-time token that was used when the payment was made may be requested from a server, and the token may be transmitted outside using an MST or NFC antenna.

According to an embodiment of the present disclosure, the payment cancellation button may be displayed by being distinguished by whether the payment is made based on MST or NFC.

According to an embodiment of the present disclosure, when "View all" in the screen of the diagram E is tapped, the transactions may be displayed in a full screen.

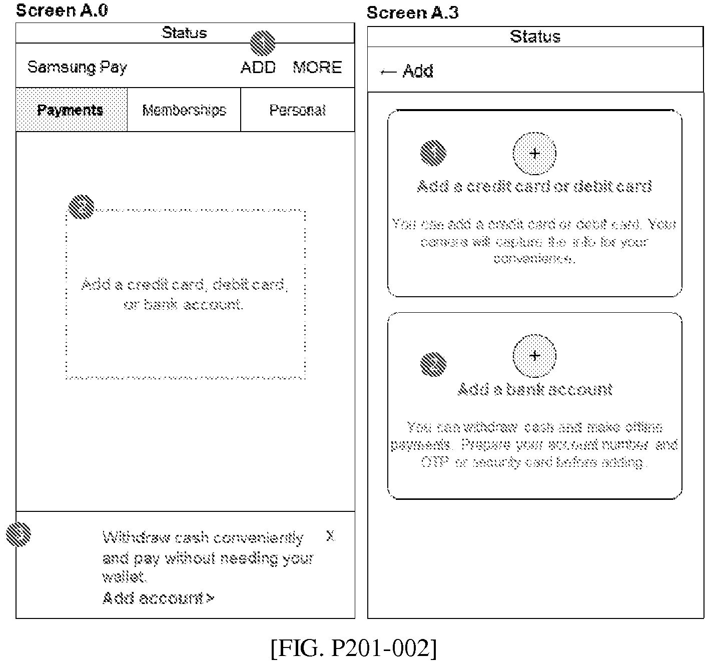

A method of adding a card will be described with reference to FIG. P201-002.

According to an embodiment of the present disclosure, when no card is registered, screen A.0 is displayed. The screen may be changed into a screen for registering a card by tapping at least one of (1) ADD, (2) a guidance image for adding a card, and (3) a guidance sentence for adding an account, which are displayed in screen A.0.

According to an embodiment of the present disclosure, a screen for registering a card may be displayed as shown in screen A.3. For example, the button (1) for registering a card and the button (2) for registering an account may be displayed to be distinguished from one another. When the button for registering a card is tapped, the screen is changed into an OCR screen, so that card information may be recognized through a camera. When the button for registering an account is tapped, the screen is changed into a screen for registering a bank account.

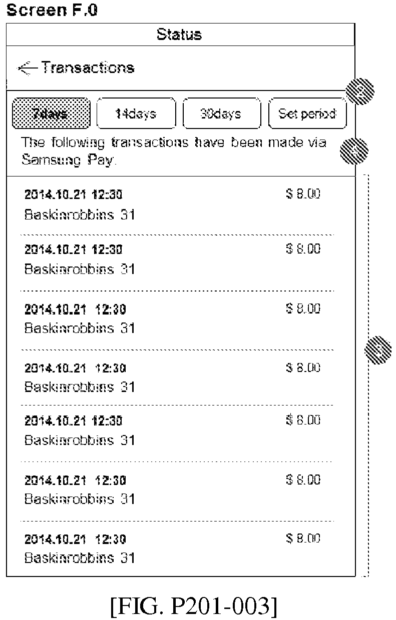

FIG. P201-003 is an example of a screen that is changed when "View All" is tapped in the diagram E of FIG. P201-001.

According to an embodiment of the present disclosure, a menu may be provided so that transactions are displayed by being distinguished based on time intervals. For example, a menu (such as, 7 days, 14 days, 30 days, "Set period," or the like) may be provided. This may be displayed based on an interval of week or month. Only transactions corresponding to the selected time interval may be displayed in the screen. Information disposed in the top may include a transaction with the greatest amount of payment, a transaction with the smallest amount of payment, the latest transaction, the oldest transaction, a transaction through which a predetermined mileage point is saved, and the like. In addition, the information disposed in the top may be changed by a user through an additional menu.

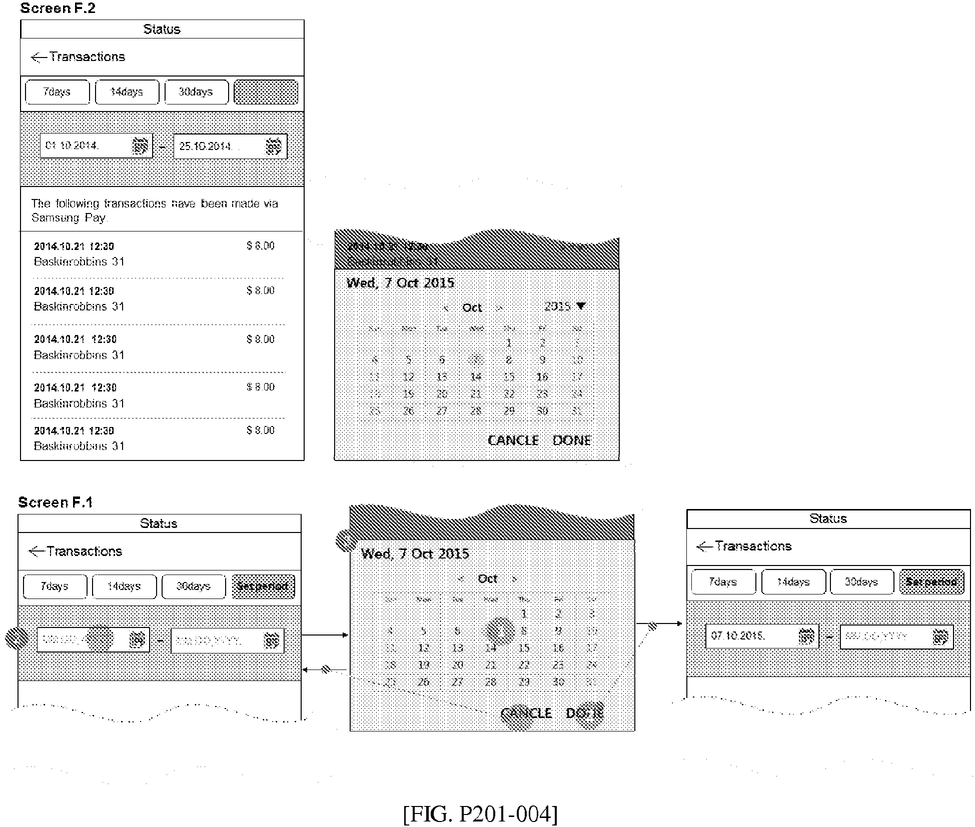

FIG. P201-004 illustrates a screen when 'set period' is selected.

According to an embodiment of the present disclosure, a user may arbitrarily select a desired period to check corresponding transactions. For example, when a start date or an end date is tapped, a calendar is shown and the user may select a desired date in the calendar. In this case, only the transactions corresponding to the period selected by the user may be displayed, as opposed to being displayed based on a predetermined period.

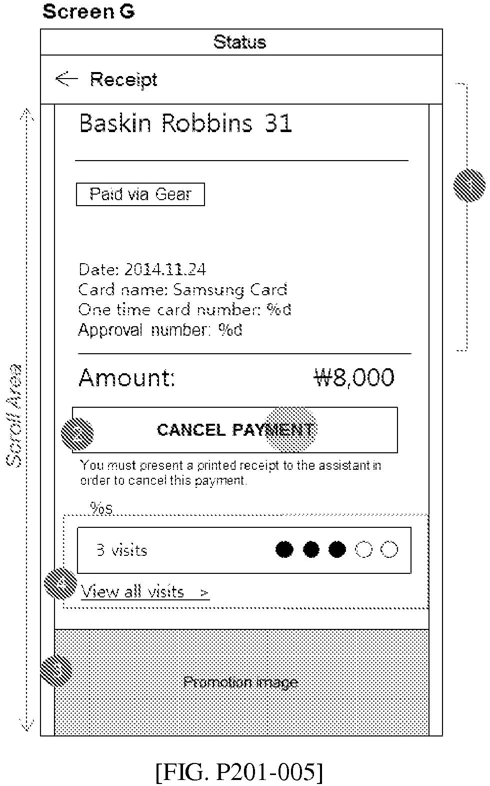

FIG. P201-005 illustrates a screen that displays the details of payment.

According to an embodiment of the present disclosure, the details of payment may display whether a device excluding a corresponding terminal is used for payment (e.g., paid via gear). Also, at least some of a digital card number (e.g., a token, a DAN, or an OTC number) that is different from an actual card number (PAN) may be displayed. When a terminal has a plurality of transmission schemes for transmitting payment information, a corresponding digital card number may exist for each transmission scheme. For example, when payment is made with Card A through MST, a digital card number of 1234 may be used, and when payment is made with Card A through NFC, a digital card number of 5678 may be used. In addition, this may be displayed to be distinguished from each other.

According to an embodiment of the present disclosure, detailed payment information may display the number of times that a user visits a corresponding store. Based on the information, the user may be provided with services, such as, a discount, a coupon, a free product, and the like.

According to an embodiment of the present disclosure, the detailed payment information may display a screen for advertising.

According to an embodiment of the present disclosure, the detailed payment information may provide a payment cancellation menu (e.g., CANCEL PAYMENT). For example, when a user presses a payment cancellation button (e.g., cancel payment), payment information related to a digital card number (e.g., a token or a DAN) that was used when payment was made may be generated, and may be transmitted to the outside using an MST or NFC antenna. When a user presses the payment cancellation button, a one-time token that was used when the payment was made may be requested from a server, and the token may be transmitted outside using an MST or NFC antenna.

According to an embodiment of the present disclosure, the payment cancellation button may be displayed by being distinguished by whether a corresponding payment is made based on MST or NFC.

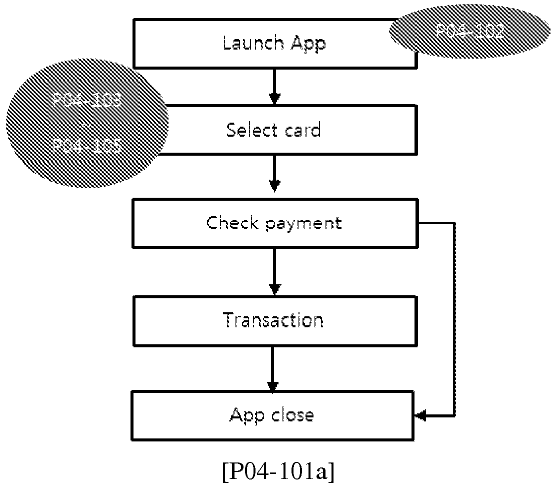

According to an embodiment of the present disclosure, payment is executed according to the order as described in P04-101a.

According to an embodiment of the present disclosure, a payment related application may be executed. A card to be used for payment may be selected. A user may execute user authentication using a fingerprint. Whether payment is executable is determined. For example, user authentication using a fingerprint may be used. A battery may be checked. Detailed descriptions thereof will be provided with reference to P04-101b.

According to an embodiment of the present disclosure, a payment transaction may be executed by recognizing payment conditions. Payment may be executed using NFC, MST, or Barcode. Detailed descriptions thereof will be provided with reference to P04-101c.

According to an embodiment of the present disclosure, when payment is completed or when a payment error occurs due to an error, the user may terminate the payment related application.

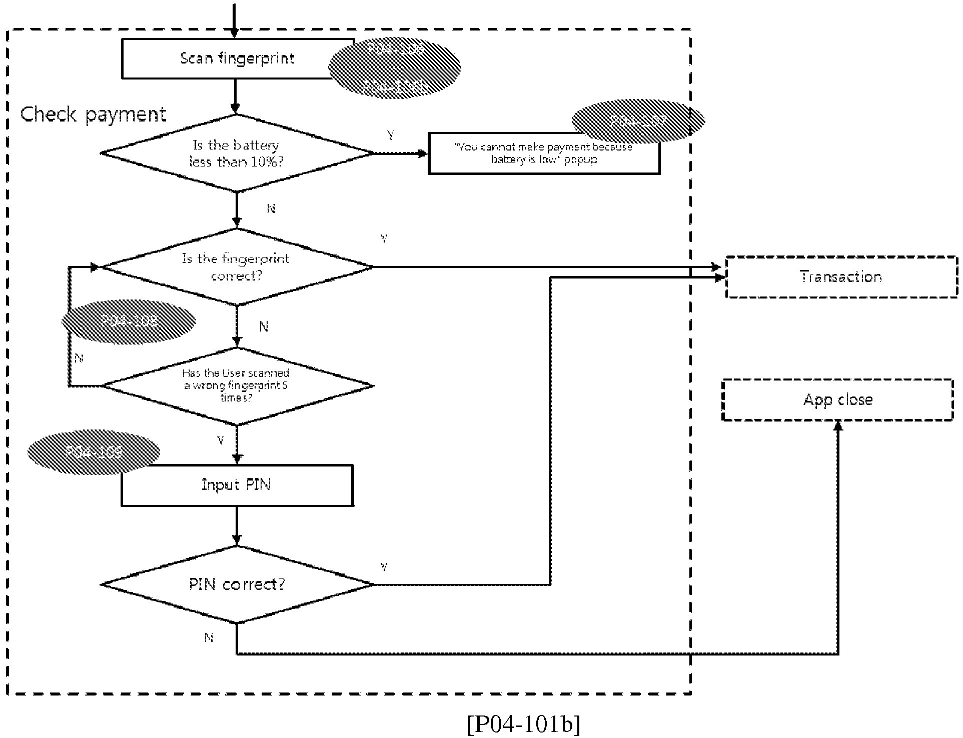

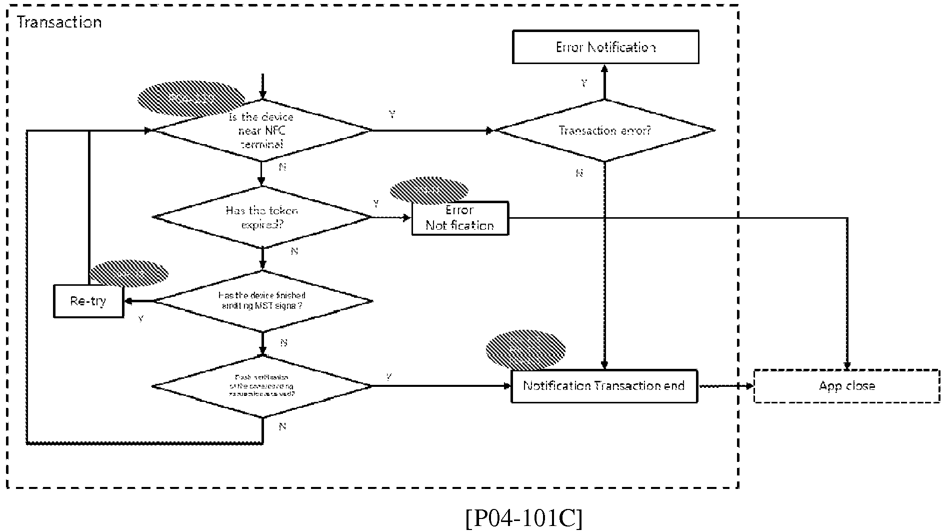

### 4.4.1.1 Transaction

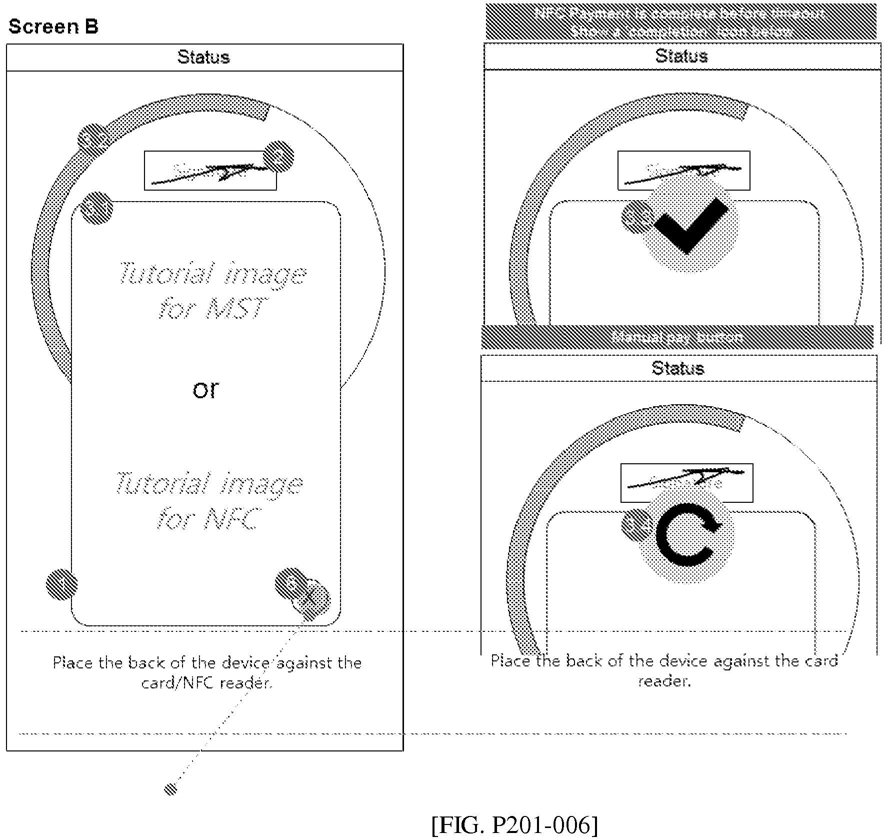

A screen of a terminal when payment is made will be described with reference to FIG. P201-006.

According to an embodiment of the present disclosure, when personal authentication is completed, a screen, such as Screen B, may be displayed. For example, as shown in the diagram 3.1, how to execute payment through MST or NFC is shown in the form of an image or animation. When an error occurs during transaction, this may be displayed to a user. As shown in the diagram 3.2, an amount of time that remains for transmitting payment information through MST is displayed as an animation in the form of a circular bar that increases or decreases over time.

According to an embodiment of the present disclosure, when the user makes a payment, a shape of a signature that is input when the user registers a card may be displayed in a payment screen as shown in the diagram 2.

According to an embodiment of the present disclosure, when payment is completed through NFC, the screen is displayed as shown in the diagram 3.3. In this instance, the time bar provided in a circular shape may stop in response to the suspension of the transmission of an MST signal, and the completion of the NFC payment is separately displayed.

According to an embodiment of the present disclosure, when the transmission of an MST signal stops after a predetermined period of time, a button for beginning the transmission is provided as shown in the diagram 3.4. For example, when the corresponding button is tapped, the transmission of an MST signal starts again. In this case, the order of track data, the strength of an MST magnetic signal, a period, or the like may be different from the previous transmission.

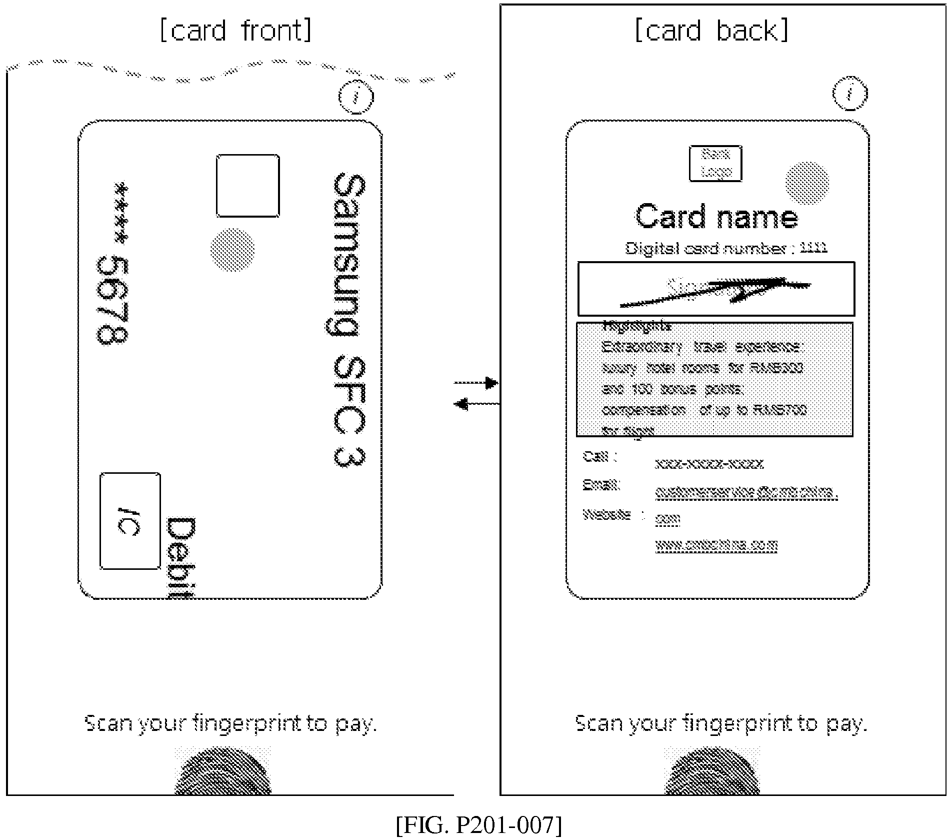

An example of determining card information will be described with reference to FIG. P201-007.

According to an embodiment of the present disclosure, information associated with a card may be determined from a screen for determining card transaction (e.g., a simple pay screen or a card application home screen). For example, the front of a card (e.g., card front in the diagram) may display at least one of, or a combination of, some of a PAN of the card, a feature of the card (e.g., a credit card or a debit card), the name of a card company, a type of card (e.g., SFC3, gold, silver), and the logo of a card company or bank.

According to an embodiment of the present disclosure, when a user input (e.g., a tap) is detected in the front of the card, the screen is changed to a screen displaying the back of the card (e.g., card back in the diagram). In this case, information included in the back of the card may display at least one of, or a combination of, some of the PAN, a balance, a signature, transportation, some of a digital card number (e.g., 1111), information indicating whether the card is a gift card, point information associated with the card, and contacts of a card company (e.g., a phone number, an e-mail website, and an address).

According to an embodiment of the present disclosure, user authentication may be executed when the screen displaying the front of the card is changed into the screen displaying the back of the card. For example, when a user provides a user input (e.g., a tap) in the front of the card, a screen for inputting a predetermined PIN may be generated. When the input PIN matches the predetermined PIN, the screen is changed into the screen displaying the back of the card. A fingerprint through a biometric sensor 2401 of an electronic device is received instead of the PIN, and when the fingerprint matches a predetermined fingerprint, the screen is changed to the screen displaying the back of the card.

According to an embodiment of the present disclosure, the front of the card and the back of the card may be continuously changed by a user input (e.g., tap).

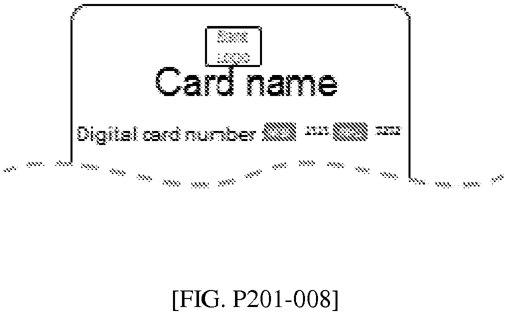

Another embodiment associated with the back of a card will be described with reference of FIG. P201-008.

According to an embodiment of the present disclosure, a digital card number is displayed, in the back of the card, to be distinguished from one another. For example, when a terminal includes a plurality of transmission schemes for transmitting payment information, a digital card number (e.g., a token, DAN, or OTC number) may be issued from a token server 630 to be different for each transmission scheme although the card is an identical plastic card. For example, the last four digits of a digital card number that is transferred to an external device (e.g., a POS device) through an MST module 810 may be 1111, and the last four digits of a digital card number that is transferred to the external POS device through an NFC module 820 may be 2222. Based on a different digital card number, for example, a digital card number is displayed as 1111 when payment is made using MST, and a digital card number is displayed as 2222 when payment is made using NFC.

According to an embodiment of the present disclosure, tokens related to different digital card numbers may be distinguished when used for payment. For example, a token to be used for the payment through NFC may be a token that is issued from a bank. In addition, a token to be used for the payment through MST may be a token that is newly issued by a bank or a card network by matching a token for NFC and a token for MST.

According to an embodiment of the present disclosure, a token for NFC and a cryptogram are transmitted as an NFC signal, and a token for MST and a cryptogram are transmitted as an MST signal. In this case, the token for MST and the cryptogram may be transmitted to the outside in the form of track data, and a cryptogram for NFC and a cryptogram for MST may be generated to be different from each other.

A personal card is a card that does not include a separate payment function, which may be separately stored for a user's personal identification or based on a user's intention. For example, personal cards may be a passport, a resident registration certificate, a social security card, an ID card, a student ID card, a driver's license, a library card, a membership card (e.g., gym membership card or a coupon), a bank security card, and the like. When a personal card registered by a user is registered in an application, the personal card and the real card may be equivalently used.

FIG. P105-001 illustrates a screen for adding a personal card in a payment application. When a previously registered personal card does not exist, a registration screen is displayed as shown in the diagram (a), or a list of previously registered cards is displayed and a menu for adding a personal card is displayed in the corresponding screen, as shown in the diagram (b). A user may newly register a card using an "ADD" button located in the topright side in FIG. P105-001.

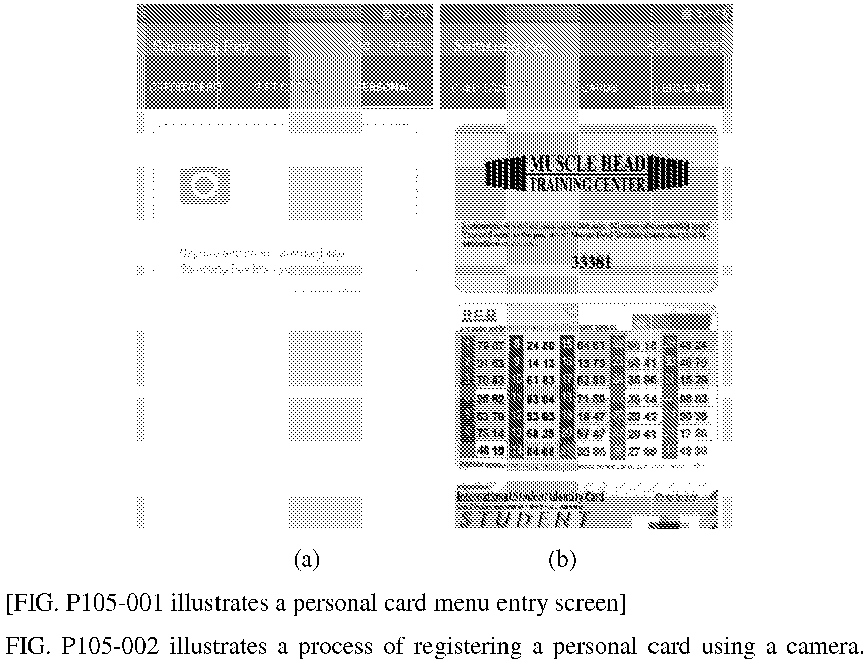

When "ADD" is selected to register a card, a terminal internally determines the availability of a memory and a camera sensor, and an OCR module is executed through a camera. The terminal provides a guideline, through a screen, that instructs a user to put a real card in the center of the screen, and the camera captures the real card and obtains card information through the image. In the case of a personal card, both sides of the personal card include required information, unlike a general card, and thus, the terminal may induce capturing both sides. An image captured for registration as a personal card may be stored in a secure area, such as, Trustzone or eSE of the terminal, and thus, the corresponding image may be managed to be securely protected. The camera may be a camera included inside an electronic device, or may be a camera provided in the form of an accessory or an external device that is capable of communicating with the electronic device.

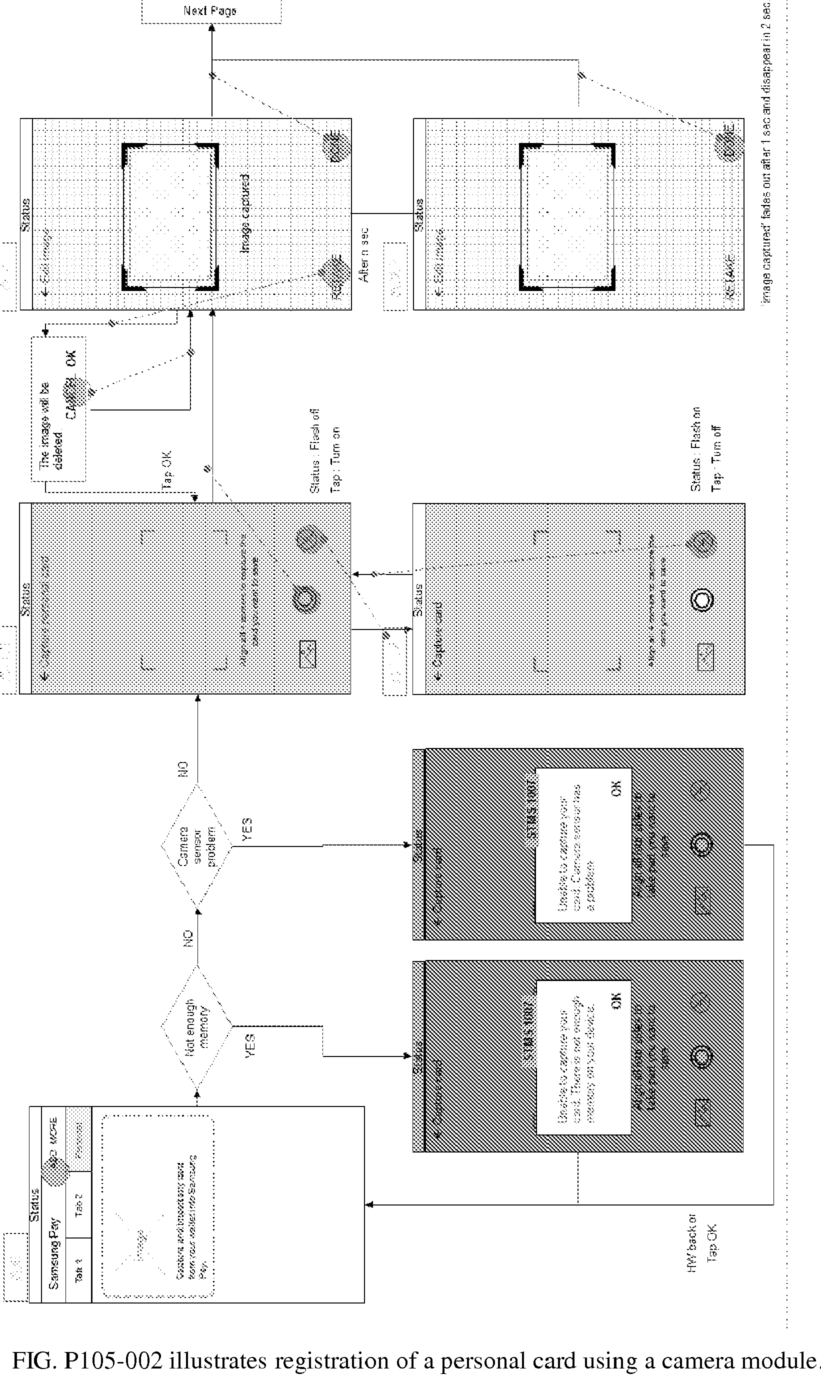

FIG. P105-003 illustrates a case in which a camera is not driven since the terminal battery is low, although a user desires to capture a card to register the card. When capturing through a camera is not possible, the terminal may induce importing an image stored in the terminal for registration. 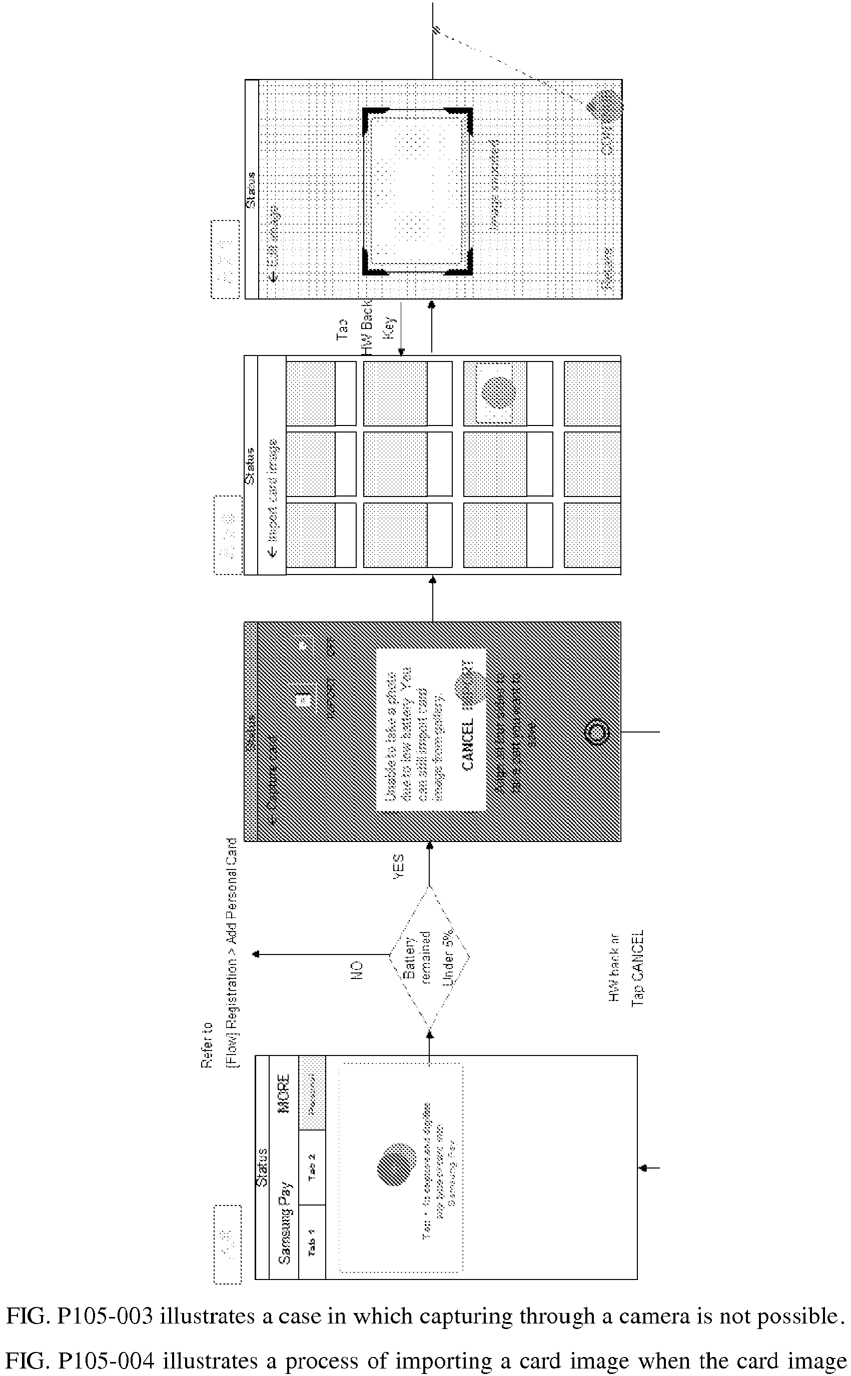 is stored in a terminal, and registering a corresponding card. A user may select a card image corresponding to a desired card out of the stored images, register the corresponding image, and use the corresponding card as a personal card. When a stored image is imported, only an image stored in a secure area, such as trustzone or eSE, may be used. When an image is imported from a normal area and is registered as a personal card, the image may be moved to, and stored in, the secure area. In the case of an image that is registered as a personal card based on the above described method, the security level of the image may be set to be different from other images.

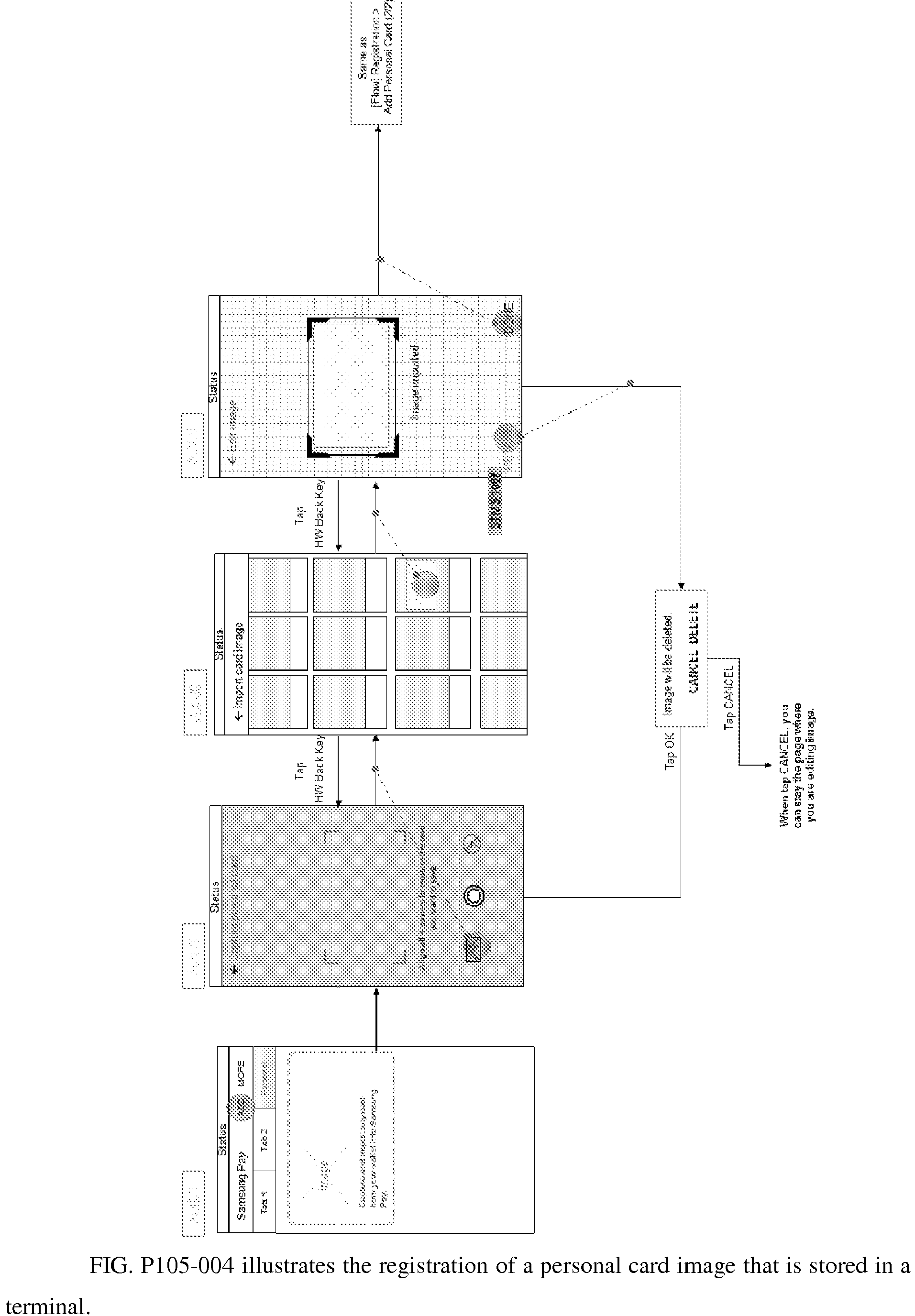

In a process of registering a captured or stored image as a personal card, the card image to be registered may be adjusted within a rectangular frame, as illustrated in FIG. P105-005. The card image may be enlarged/reduced using pinch-to-zoom as shown in the diagram (a), and the card image may be registered by moving the card image to the left or to the right, and designating a desired area for registration as a personal card as shown in the diagram (b).

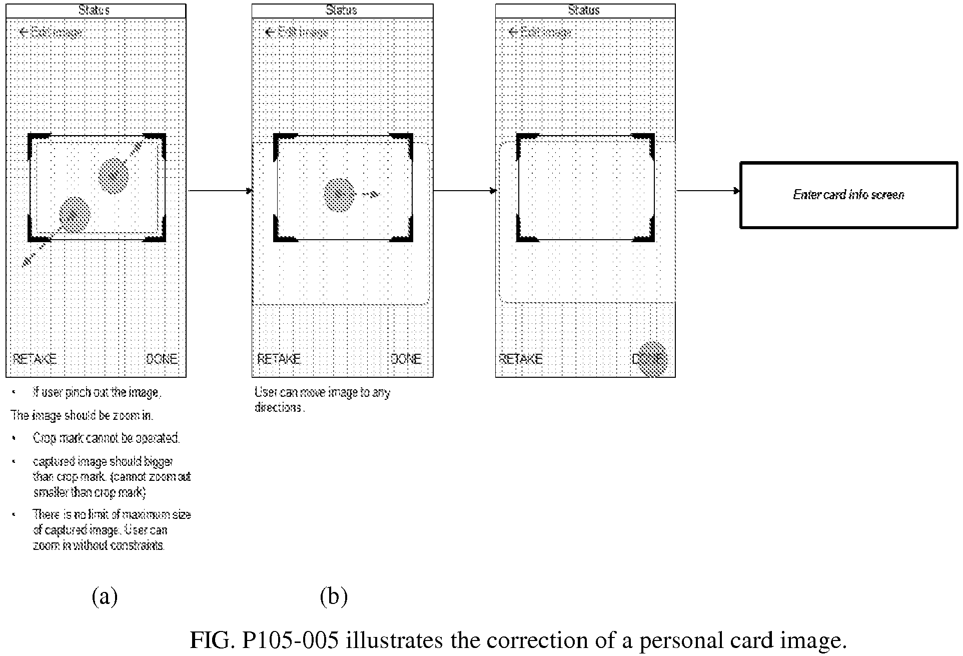

In addition to a card image, various pieces of information related to a corresponding card may be input by a selection made by a user, and may be stored together. As shown in FIG. P105-006, the name of a card may be stored together with content that a user desires to store together when the user inputs the content. The stored content may be displayed together with the card image or when the user makes a predetermined gesture on the corresponding card to check the corresponding information.

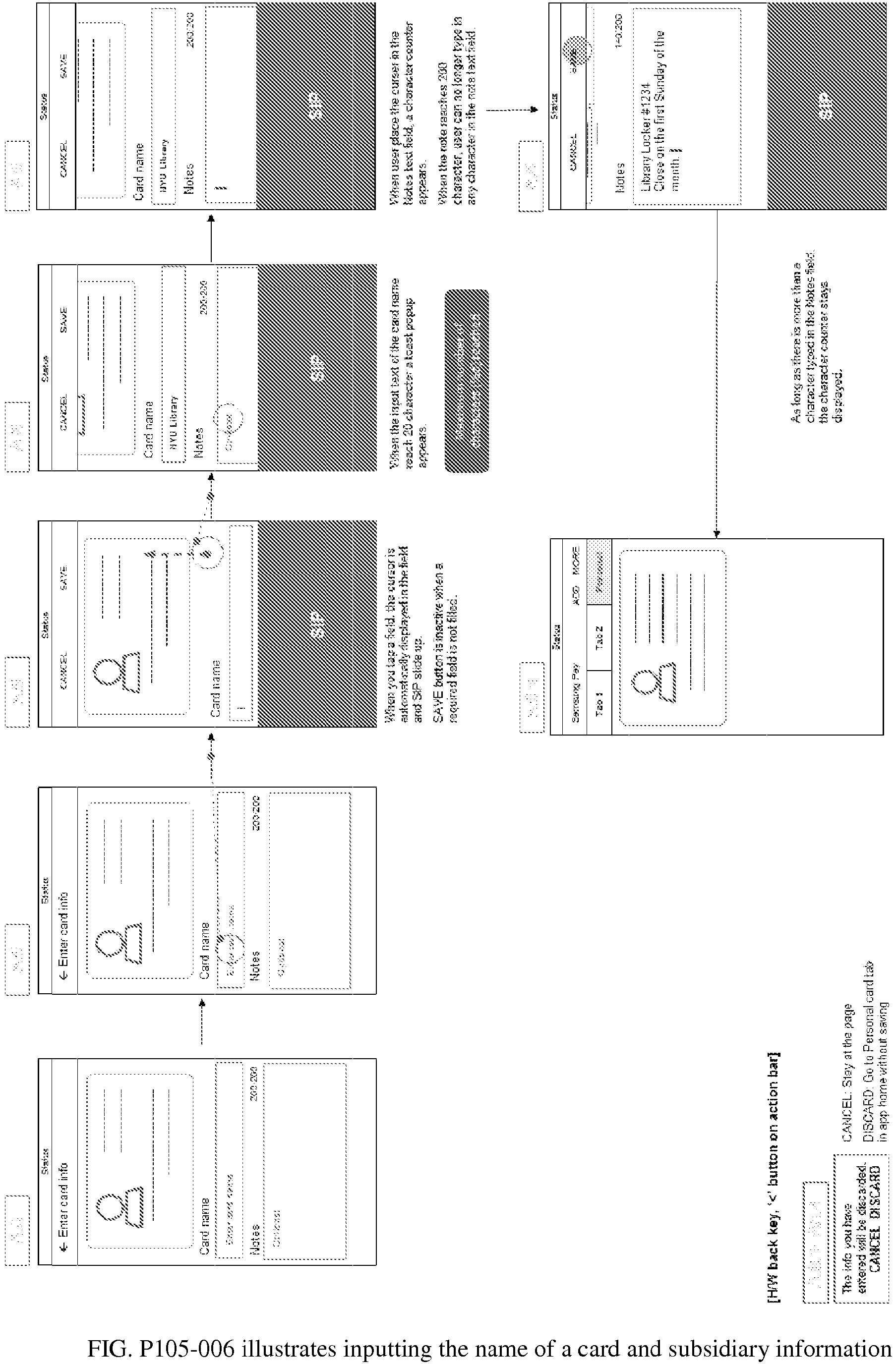

The number of cards that can be registered is limited, and when the number of cards reaches the limitation, it may be reported as shown in FIG. P105-007.

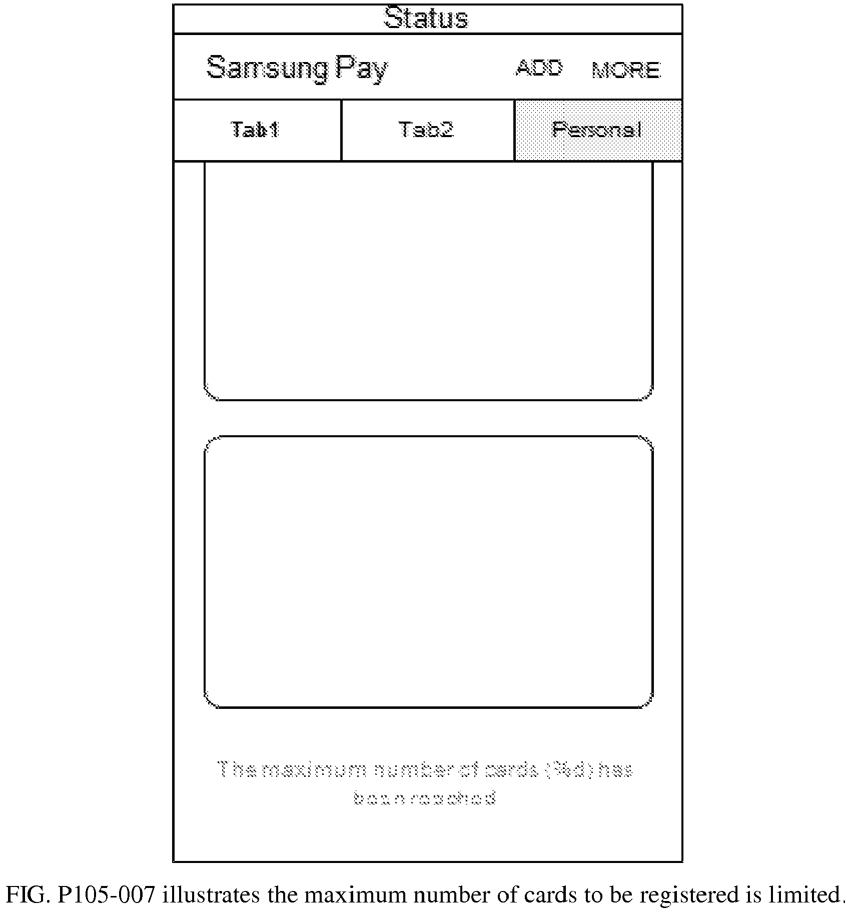

### 4.5.2 Home/Card Management

A registered personal card may be displayed as a card image when a user enters an application. FIG. P105-008 illustrates a method of determining, in a personal card menu entry screen, subsidiary information that is stored by a user. When the user touches a card that the user desires to determine its detailed information, or selects the corresponding card by making a predetermined gesture, such as hovering or the like, the user may determine information that is stored together when the corresponding card is registered.

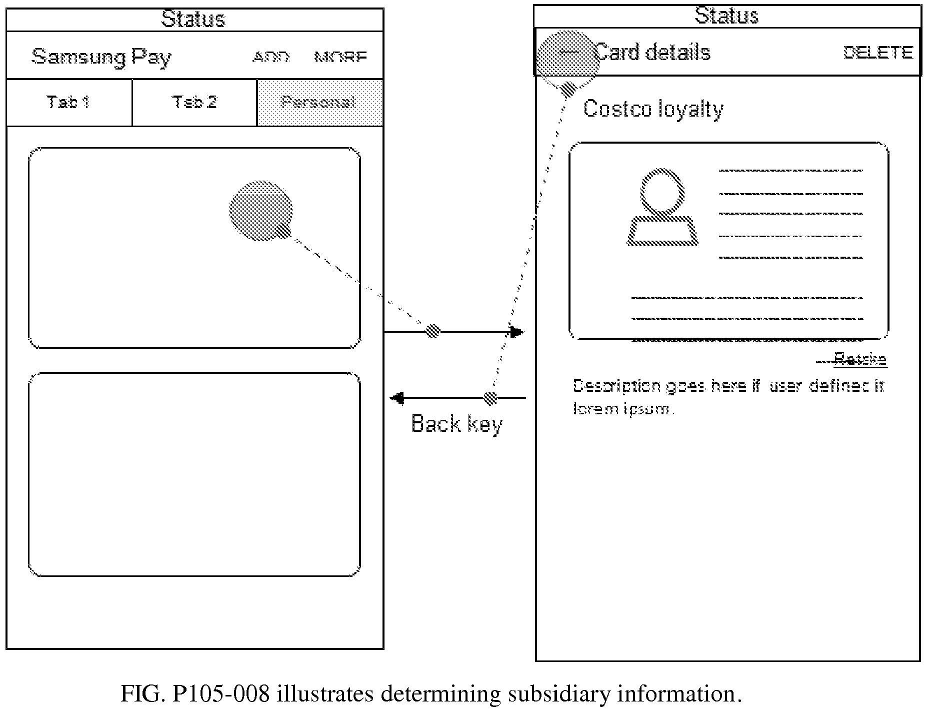

To conveniently utilize a registered card, a card screen may be enlarged/reduced or browsed, as shown in FIG. P105-009. A user may enlarge/reduce a desired part through a gesture, such as pinch-to-zoom, and may browse a part including content that the user desires to determine. A registered card may be displayed by changing a landscape mode/portrait mode through a button, such as "Rotate," displayed in the bottom of the drawing. After determining the contents by modifying (enlarging/reducing/browsing) the card image, a hardware button, a return button, or the like may support returning the modified card image to an image as it was registered.

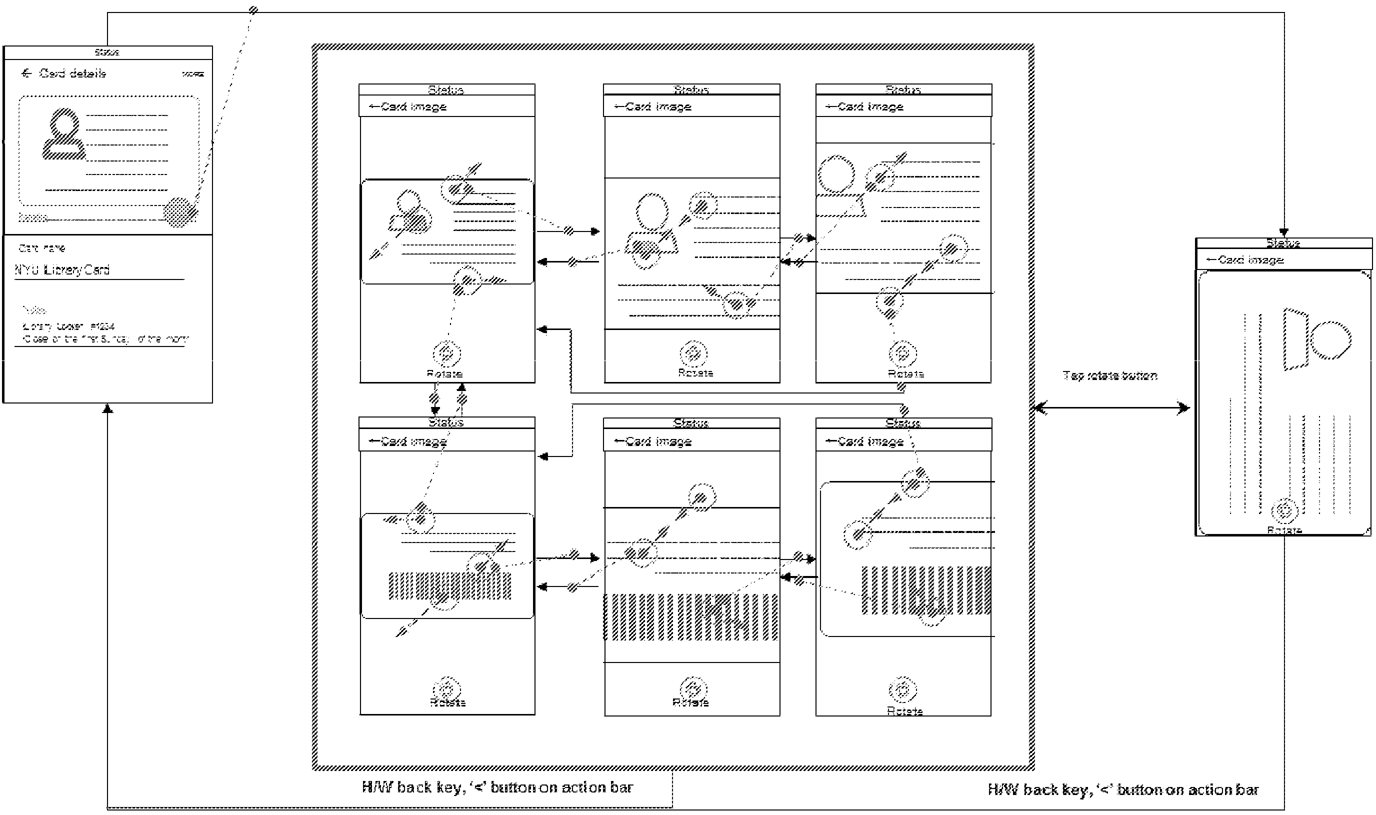

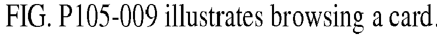

FIG. P105-010 illustrates modifying/correcting some of the registered card information. A card image may be captured again to change an image, or content may be updated by modifying the content of subsidiary information that is stored together with the card image.

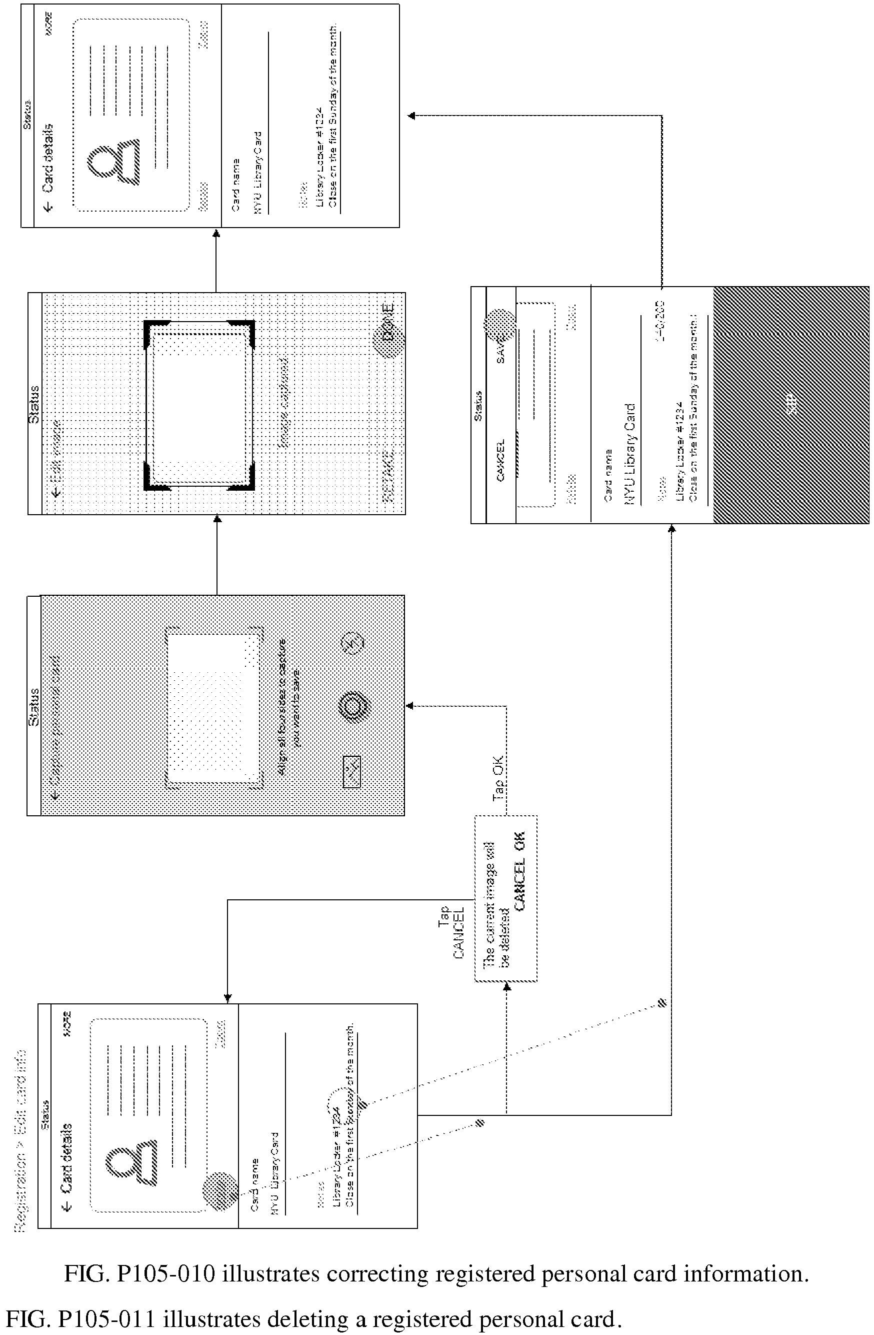

When a user selects the deletion of a registered personal card, information associated with front and back images of the corresponding card may be deleted.

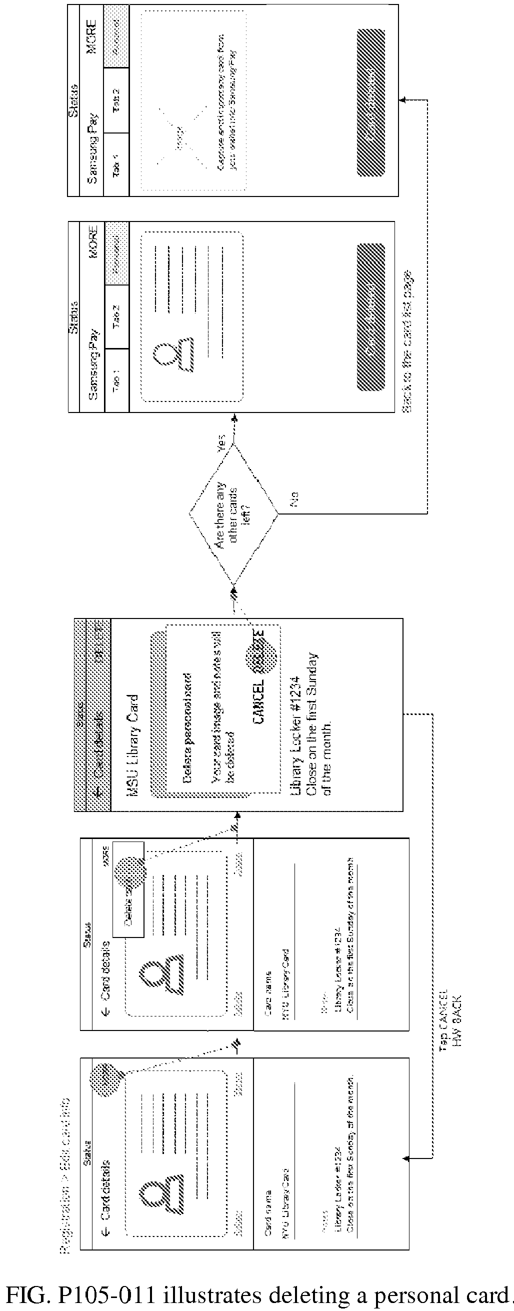

FIG. P105-012 illustrates a personal card that is locked. In the case of a personal card that includes important information, such as, a resident registration certificate, a passport, or the like, when the corresponding card image is exposed as it is, this may be dangerous, and thus, the security level of the corresponding image may be set to be different from other cards by use setting. When additional authentication is not executed as shown in the following diagram, an actual personal card image may not be displayed. Only when additional authentication is executed, such as a fingerprint or PIN, an actual personal card image may be exposed and allowed to be used.

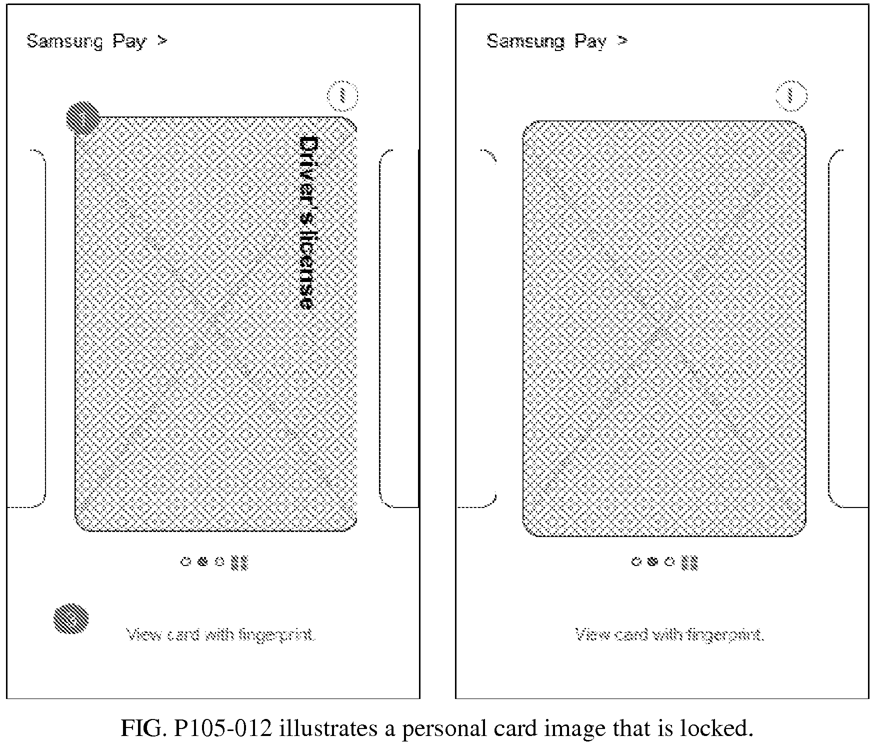

### 4.6 MORE IN APP

### 4.6.1 Announcements/Events

When a notification or an event that should be reported to a user exists in association with the use of a payment related application, a menu through which the user may determine the same may be provided. FIG. P106-001 illustrates a "More" menu through which a notification/event is reported. When a new notification exists, it is reported that content that a user does not determine yet exists, through a badge. The user may make the badge disappear when the user determines the corresponding content.

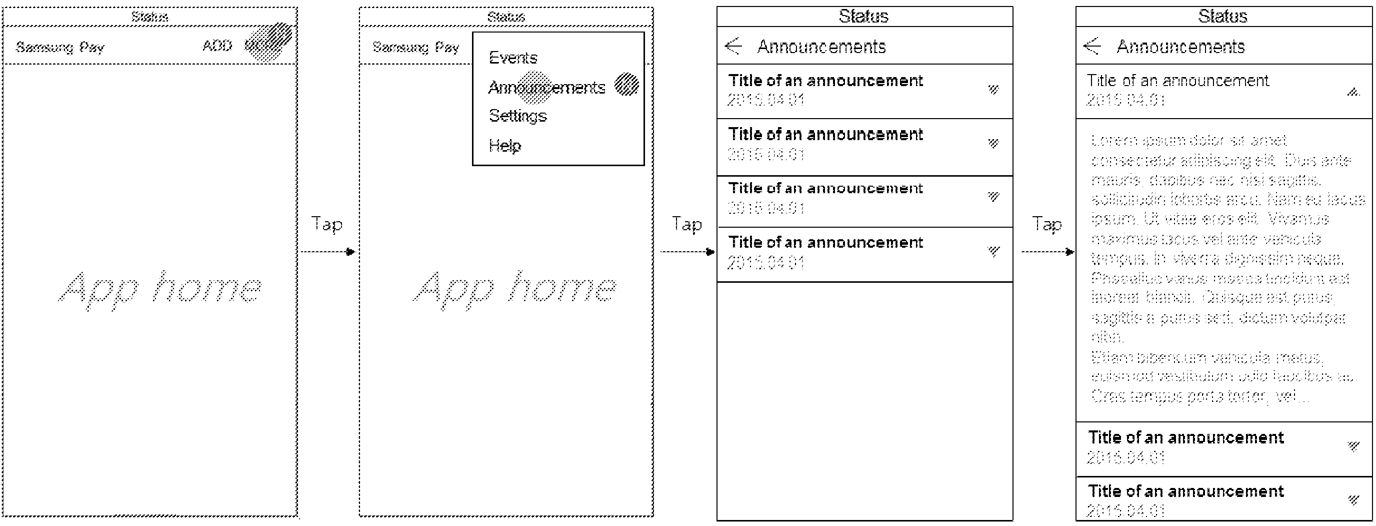

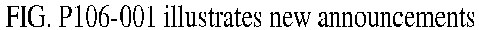

### 4.6.2 Simple Pay

A payment method that is referred to as Simple pay or Quick pay indicates a payment method that enables simple payment without accessing a payment application. To utilize Simple pay, a configuration needs to be set in advance. For example, a user may select a method for accessing Simple pay. FIG. P106-002 illustrates a process of displaying types of methods of accessing Simple pay and enabling a user to select a status to be used when accessing Simple pay. Access to Simple pay may be supported based on a selection made by a user in a lock screen state, a home screen state, or a screen-off state.

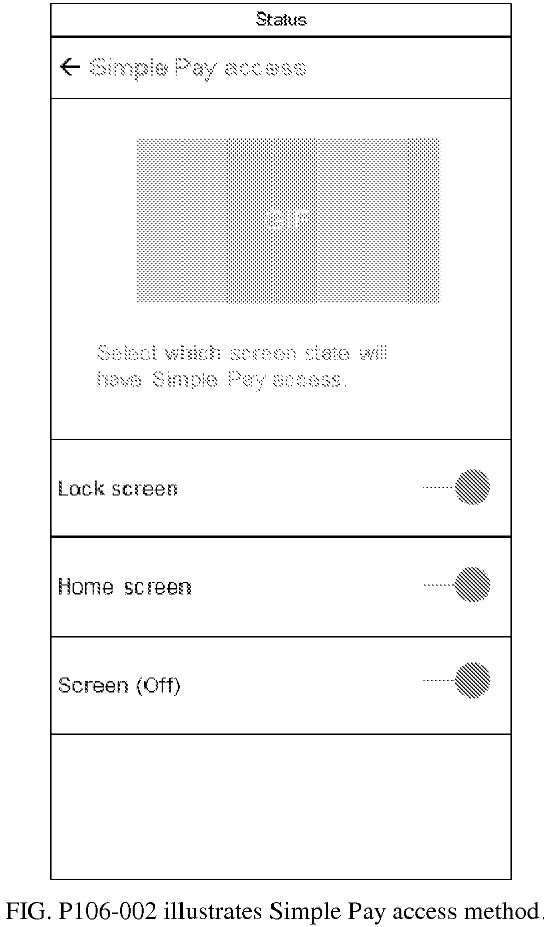

As opposed to the method of displaying all of the cards registered in a terminal and enabling a user to select a card, Simple pay uses a method of displaying some of the cards and enabling a user to select a card. As shown in FIG. P106-003, a user may select, through an application setting, a card that is capable of executing payment through Simple pay. The number of cards that a user may use in Simple pay is limited. When the user desires to use more than the limitation, it is reported that the number of cards exceeds the maximum number of registered cards through a pop-up message. When cards are displayed for registration in Simple pay, all of the cards are displayed by being categorized based on a type of card, and the cards displayed in the form of a combo box may be supported to enable a user to select a plurality of cards.

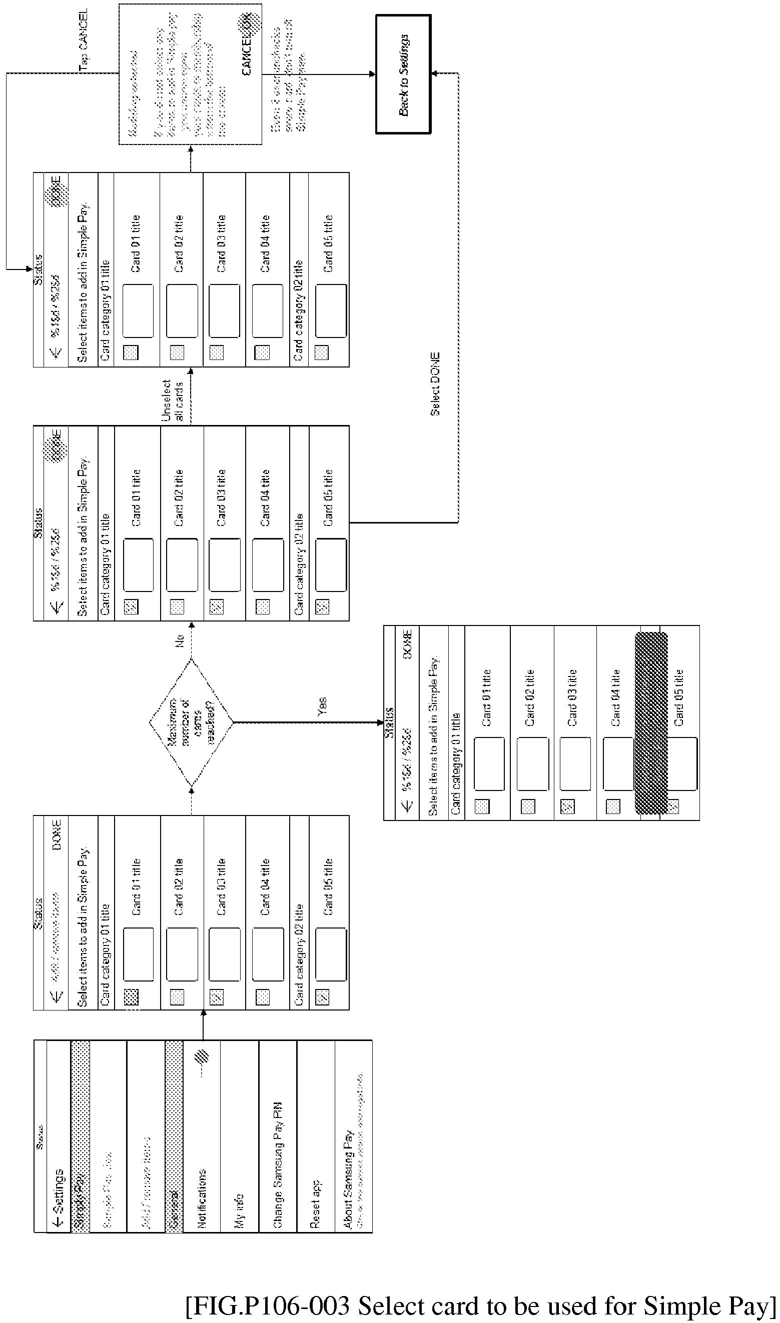

### 4.6.3 My info

User information may be stored in the terminal, and may be automatically retrieved when it is necessary at a specific payment time without directly inputting the corresponding information. FIG. P106-004 may be a diagram showing the receipt of the user information. The user information, which can be input in advance, may contain a name, a mobile phone number, an email address, a home address, or the like. According to an embodiment of the present disclosure, a plurality of home addresses may be registered, and when a new address is added to the existing addresses, it may be selectively determined whether a plurality of addresses including the new address are to be stored or whether the new address is to be stored while eliminating the existing addresses.

In an embodiment of the present disclosure, the user makes an online/offline payment and receives the purchased product through a home delivery service. The general procedure is performed by making the payment and entering the address and phone number necessary for receiving the product. However, in the case where the personal information is stored in the terminal, the procedure following the payment may be performed by using the information stored in the terminal without separately entering the information. Reading or parsing the personal information stored in the terminal in order to utilize the same may require additional personal verification, such as fingerprint recognition or a PIN input. The information stored by the user may be safely managed through the additional verification.

When the user attempts to store the information, the user may use personal card information that is stored in the user terminal. For example, in the case where the user has stored a personal registration number as the personal card, the user verification may be performed by reading the personal card information that is stored in a security area of the terminal, and the corresponding information may be stored in the terminal through an operation in which the user identifies whether or not the corresponding information is correct.

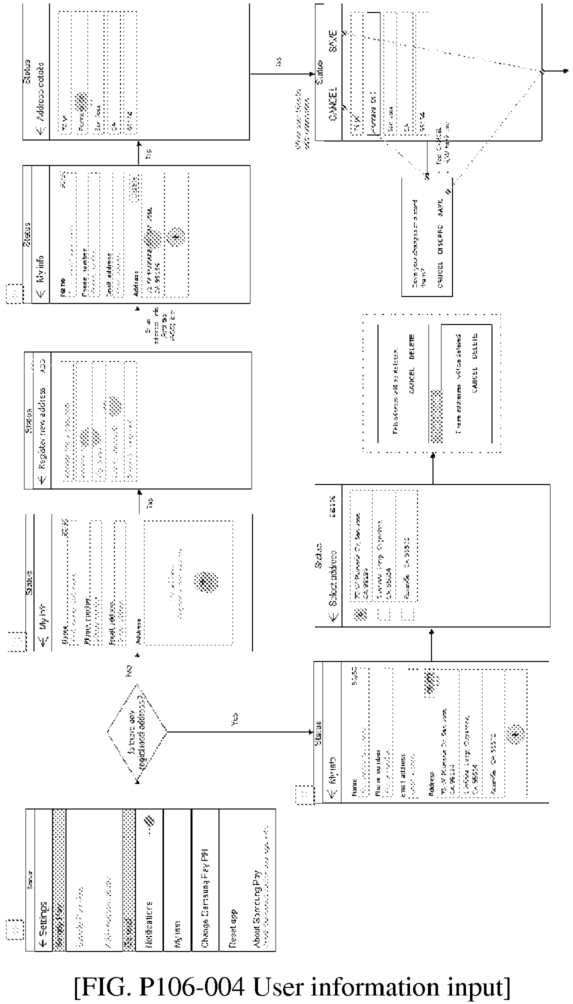

Information on the payment application, which is installed in the user terminal, may be shown. The current version of the application and the latest version thereof may be displayed as shown in FIG. P106-005, and if the application installed in the user terminal is not the latest version, the user may be led to install/use the latest version of the application through a link to download the same. In addition, the corresponding menu may provide links to various policies of the payment application.

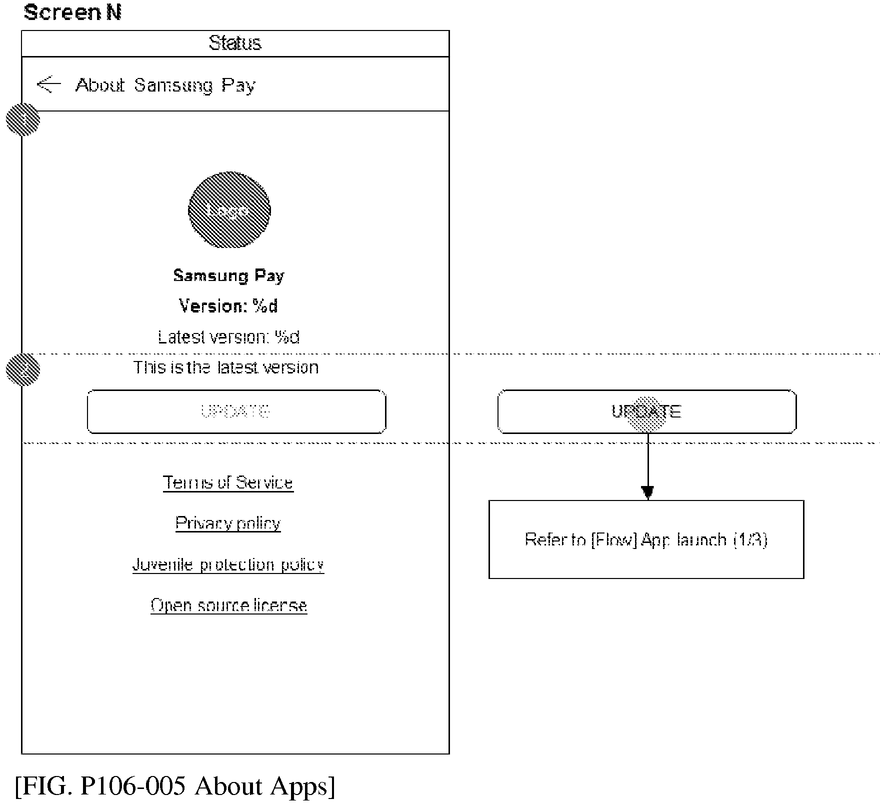

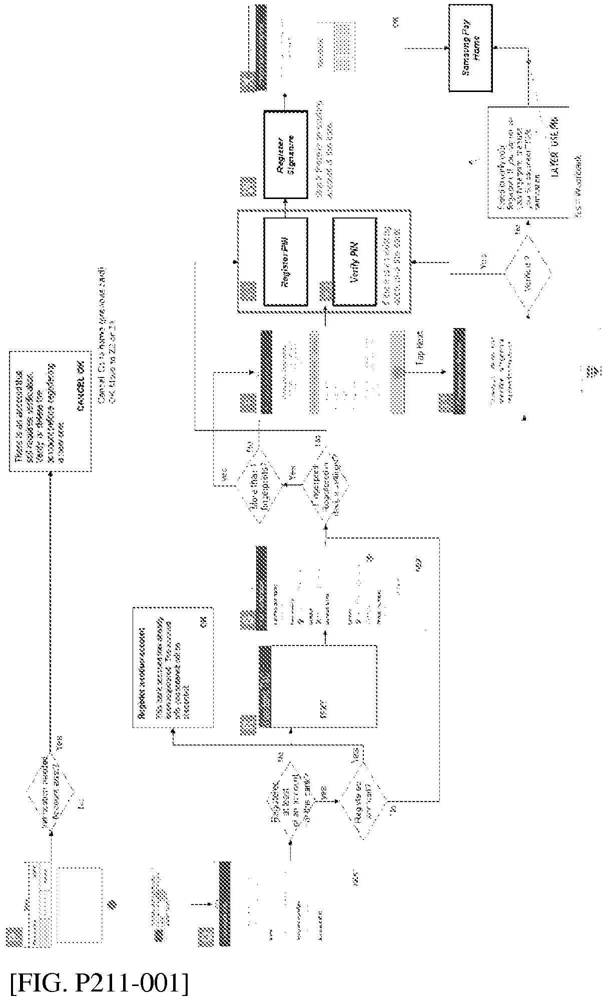

In an embodiment of the present disclosure, information that is associated with the bank account may be registered in the terminal. When the bank account is registered, for example, all functions, which can be executed through the ATM by using the card that is issued by the bank, may be performed by using the terminal. For example, cash withdrawal, cash transfer, account inquiry, loan services, or additional services may be performed by using the ATM.

The bank account may be registered in the terminal by a method of photographing the image of the card issued by the bank to then be recognized; entering card information by using a magnetic strip or IC chip of the card issued by the bank; entering the account-related information through the online access or other applications in the terminal; entering the account number by the user; recognizing the image of a bankbook; or other methods.

The process of registering the bank account in the terminal may be divided into two operations. One is a "registration" operation to register the bank account, and the other is a "verification" operation to identify the user information. In the case of performing the "registration" operation, the corresponding information may be stored temporarily or permanently in the terminal. In addition, when the subsequent "verification" operation is performed, the operation of the user verification is performed by accessing the bank, the card company, or the external verification company through the network. If it is impossible to perform the "verification" operation according to a user's request or due to the network state after completing the "registration" operation, only the "verification" process may be performed based on the information that is entered by the user in the "registration" operation. As another example, if it is impossible to perform the "verification" operation after completing the "registration" operation, all of the corresponding information may be deleted and the "registration" operation may be resumed.

It is possible to use a method of photographing the image of the card issued by the bank to then be recognized; entering card information by using a magnetic strip or IC chip of the card issued by the bank; entering the account-related information through the online access or other applications in the terminal; entering the account number by the user; recognizing the image of a bankbook; or other methods.

In the case where the user inputs at least some of the card number or the account number, additional information related to the account may be automatically input. The information that is automatically input may contain a bank name. As another example, the user may directly input the additional information concerning the account. The information that is directly input may contain a bank name.

The "registration" operation may include an operation of entering a password of the account. The corresponding information may be temporarily or permanently stored in the terminal. The corresponding information may be stored through encryption. The password may be replaced by "*" or may be shaded while entering the same. When the password is temporarily stored in the terminal, the password may remain until the "verification" operation is carried out. The information may be transmitted to the card company or the bank through the network during the "verification" process. The password may be cleared unless the "verification" operation is performed after the "registration" operation.

The process may include an operation of identifying whether or not there is an account that has been pre-registered in the bank. If there is an account that has been pre-registered in the bank, the information that is input during the "registration" operation may be deleted. If there is an account that has been pre-registered in the bank, the information that is input in the "registration" operation may be stored, and the pre-registered account information may be deleted. If the "registered" information matches the account information that is not completed with the "verification," the "verification" operation of the corresponding account information may be started. In another embodiment, it may be possible to input a plurality of pieces of account information with respect to the bank that is the same as the pre-registered account. The pre-registered bank information may be utilized in the "verification" operation or the "registration" operation.

The process may include an operation of displaying T & C that is received from the bank or the card company in the "verification" operation. Alternatively, T & C that is stored in the terminal may be displayed. The process may include an operation of entering a user's personal information. The personal information may contain at least one of a user's name, a user's nationality, a user's gender, the date of birth of the user, the provider of the terminal, or the user's phone number. The input personal information may be transferred to the bank or card company.

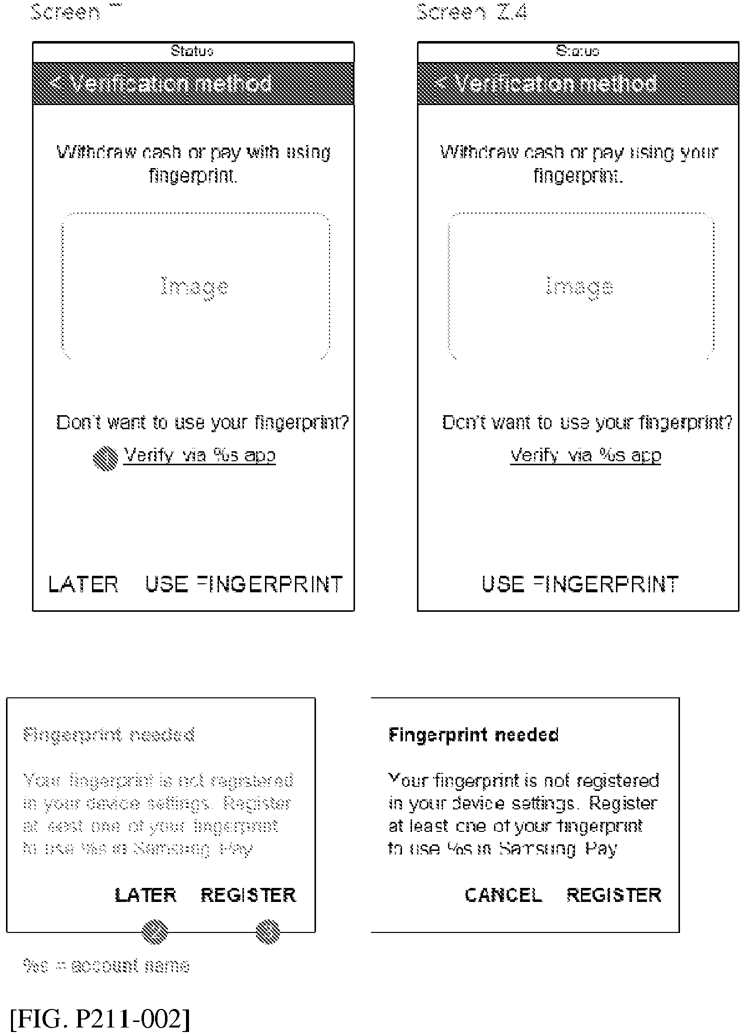

The process may include an operation of associating the account information with the verification information in the terminal before sending the user's personal information to the bank or card company. The verification information in the terminal may use at least one of the characters/numerals/special characters (such as, a PIN or a password), or may use at least one piece of the user's body information (such as, fingerprint, iris, or face recognition). In addition, the user verification may be performed by using other applications that are installed in the terminal. The verification information may be configured during the "verification" operation, or may be pre-stored. In addition, the user's body information of the verification information may be registered during the "verification" operation, or may be pre-stored. In the case of verifying the user by using the other application that is stored in the terminal, the application may be related to the bank or card company regarding the account. The user verification may be performed by using an additional verification method, such as a password input or an ARS, through the application, and the verification result may be used in the "verification" operation.

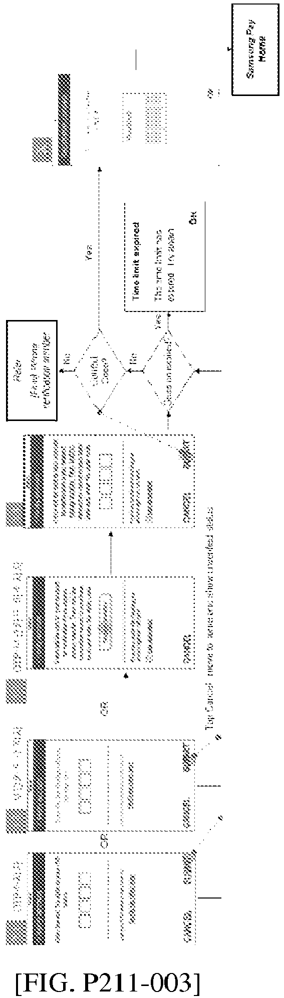

The additional verification may be performed by using a user's signature information according to the policy of the bank or card company. Alternatively, the additional verification operation may be conducted in accordance with the policy of the bank or card company rather than the signature information. The operation may be performed right after the operation 'W' of FIG. P211-001, and may be performed at anytime during the "verification" operation. The additional verification method may be conducted by using at least one of the OTP, the security card, or the ARS.

When the "verification" operation is completed, the terminal registration of the account information is completed.

In the course of the "registration" operation or the "verification" operation, if the user presses a Back key that is included in hardware (H/W) or software (S/W) of the terminal, all the information may be deleted without storing the corresponding information. In another embodiment, if the user presses the Back key, at least some of the information may be stored. If the user presses the Back key during the "verification" operation after the completion of the "registration" operation, at least some of the information that has been input in the "registration" operation may be stored.

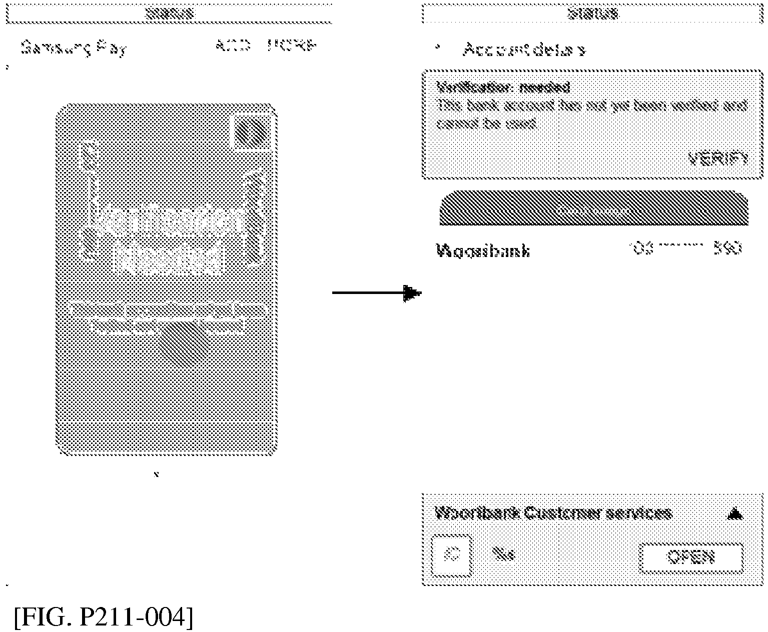

If the "verification" operation is stopped before the completion, the image of the card or bankbook may be displayed to be shaded as shown in FIG. P211-004. Alternatively, the card or bankbook may be displayed to be inactive to the user in other manners.

In the case of the bank or the card company, which is not supported by the terminal, a pop-up message stating that the service is not available may be displayed to the user. Alternatively, in the case of the bankbook or the card, which is not supported by the terminal, a pop-up message stating that the service is not available may be displayed as well. The pop-up message may contain the reason why the terminal is not able to support the same.

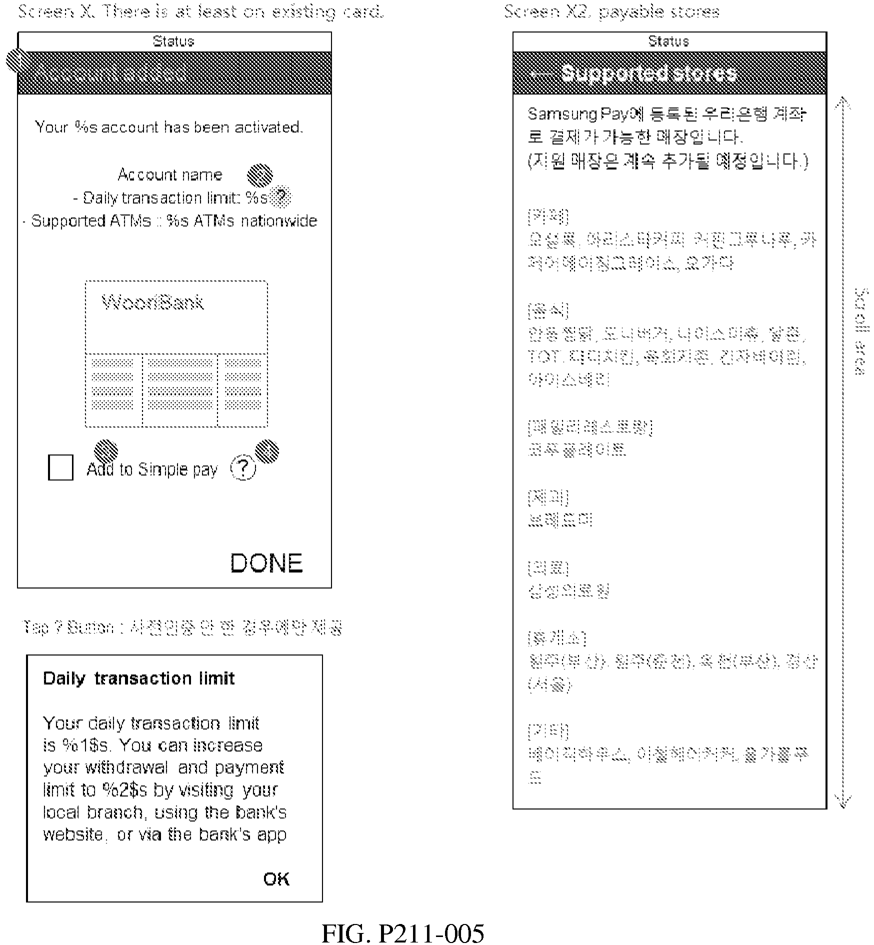

If the registration of the account information is completed, the terminal may display the notification that informs the user of the registration completion as shown in FIG. P211-005. As the registration is completed, the account information and information related to banking services via the terminal may be displayed together.

The information, which can be displayed together, may contain an account name, account information, a daily transaction limit, supportable ATM information, or the like. The daily transaction limit and information on the configuration method thereof may be separately displayed to the user.

The configuration may be added, by which the user directly proceeds with the payment by using the account information. A list of stores where the user can directly proceed with the payment by using the account information may be displayed. In addition, the benefit information that the user will be rewarded for the direct payment by using the account information may be displayed.

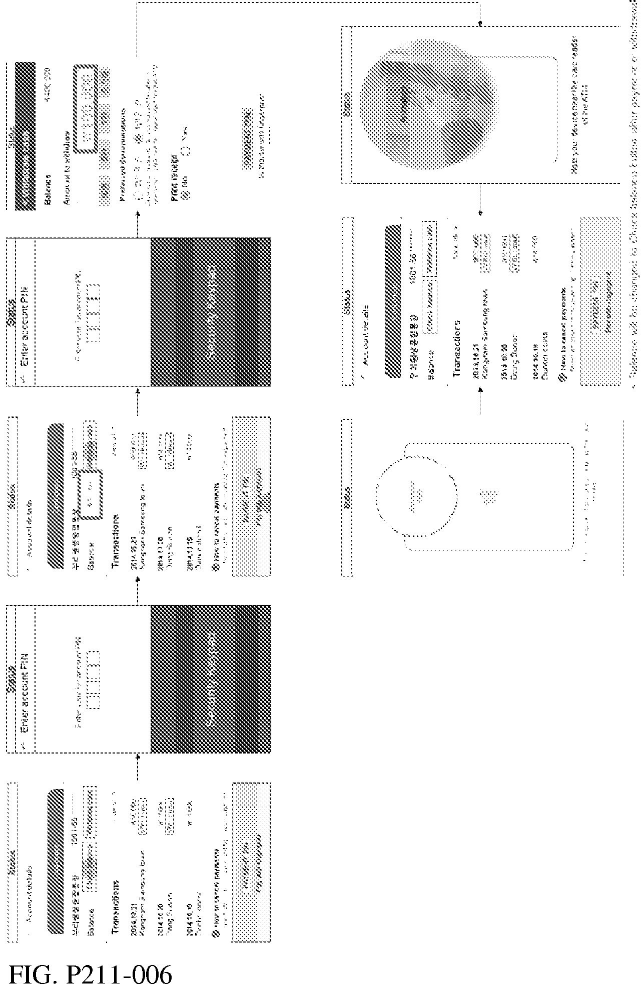

It is possible to check the balance of the account of which registration is complete. An operation of entering a password for the account may be performed in order to check the balance of the account. In addition, after checking the balance of the account, it is possible to immediately proceed to an operation of withdrawing cash as well.

The user may enter the amount of money to be withdrawn and may select the type of note that the user desires in the withdrawal screen. In addition, the user may select the output of a receipt in relation to the withdrawal in advance. The terminal may transmit the selected information to the ATM during the withdrawal so that the user may withdraw money without an additional input. The corresponding configuration may be pre-selected based on the user's previous information. The user's previous information may be created based on at least one piece of the most recently used information, the frequently used information, or the information on another user who has a similar usage pattern.

The terminal may communicate with the ATM by using short-range communication, such as NFC/BT/WiFi, or the like, in order to thereby transmit/receive the account information and the withdrawal-related information. Alternatively, the terminal may communicate with the ATM by using broad-range communication, such as the 3G. When the terminal communicates with the ATM, the withdrawal operation may be performed without the user's input into the ATM because the user verification has been completed.

After the withdrawal operation, the balance of the account may be updated immediately. The balance of the account may be updated by immediately receiving the corresponding information from the bank or the card company as well. In another embodiment, when the terminal receives the information stating that the transaction has been successfully completed from the bank, the card company, or the ATM, the terminal may directly calculate the balance by applying the withdrawal information to the existing balance information, and may display the same.

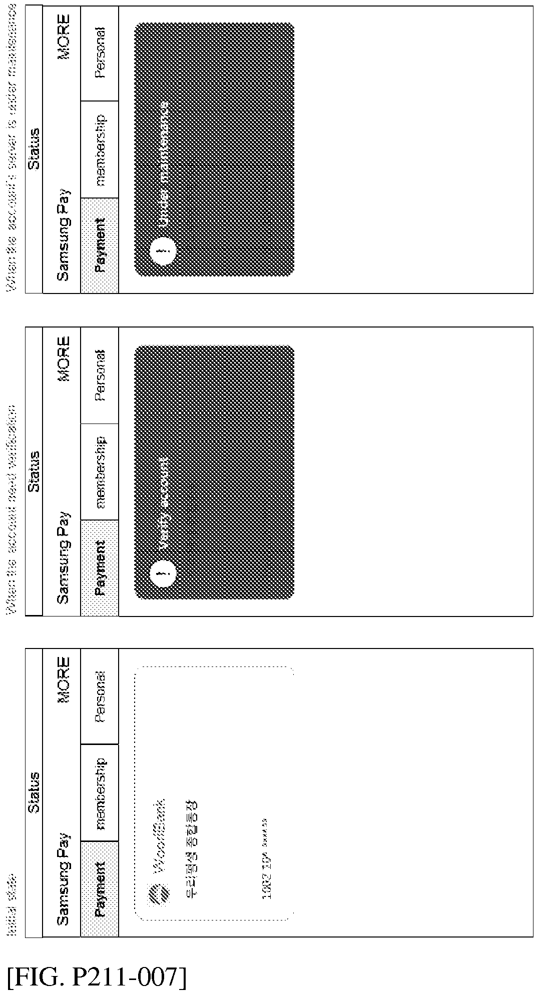

The terminal may display state information on the account of which registration is complete. The terminal may display one of the available account, the account that requires the "verification" operation, or the unavailable account that requires additional processes. In the case of the unavailable account that requires additional processes, if the user restores the account to be in a normal state through the ARS or by visiting the bank, the account may be displayed to be available.

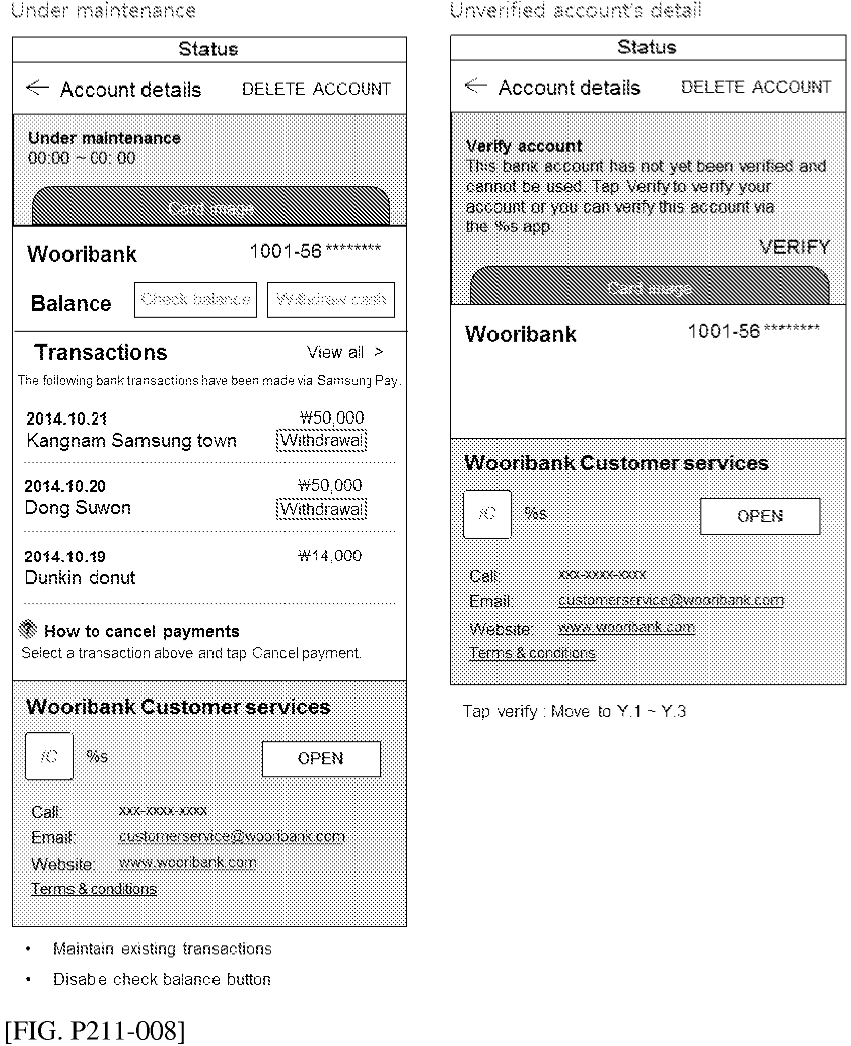

The detailed information related to the account, of which registration is completed, may be displayed. If the account is not available, the corresponding information may be displayed through the detailed information. In addition, the detailed information may contain a deposit and withdrawal list of the account. The user may perform "cancellation" in the deposit and withdrawal list. The user may read contact information of the customer service and T & C information in relation to the account. An icon for deleting the account may be displayed as well.

The verification method in the case of withdrawing cash by using the input account information may be configured to be different from, or the same as, the verification method in the case of directly proceeding with the payment. Even when the verification methods are the same, the password and biometric information may be configured to be different from each other.

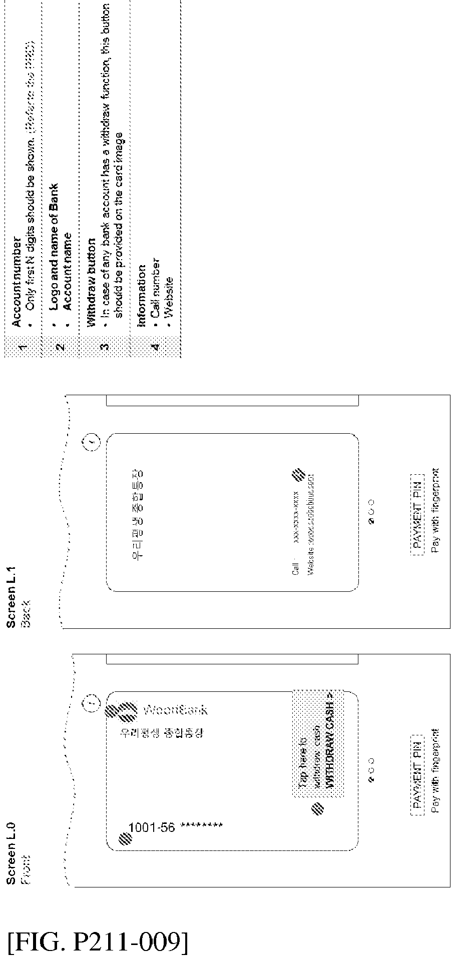

In order to proceed with the payment, the terminal may execute a payment application in various manners. If the terminal approaches the NFC of the ATM, a list of account information available for the withdrawal may be displayed. If the terminal receives bank information from the ATM, the account information related to the bank may be displayed.

Even when the terminal is in the lock screen state or the display is in the off state, the payment application may be executed by recognizing a specific gesture of the user. In addition, if a specific gesture is recognized while the terminal is in the idle state, the payment application may be executed. An application for recognizing the gesture may always be in progress in the background in order to thereby execute the payment application by a specific gesture.

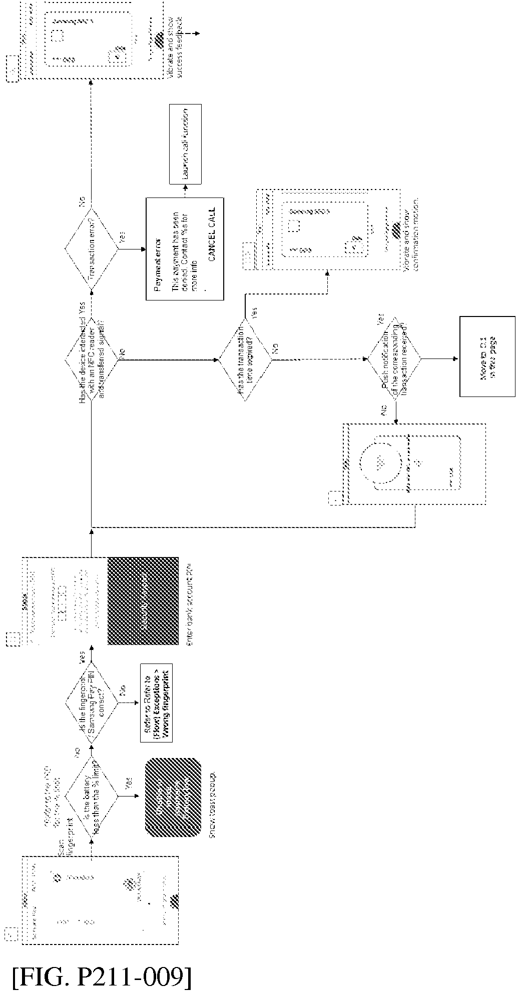

After the application is executed, the card or bankbook related to the account, by which the user wishes to make payment, may be displayed in the center of the screen through the user input. The user input may include the scrolling.

If the card or bankbook related to the account, by which the user wishes to make payment, is displayed in the center of the screen, the user may perform a pre-selected verification method in order to thereby proceed with the payment. The recognition method may include a password input and biometric information recognition. If an input or a user's gesture related to "withdrawal" is received instead of the pre-selected verification method, the withdrawal operation may be performed.

The terminal may check the current battery status after the verification is completed and before performing the payment. If the battery percentage is lower than a predetermined value, the terminal may inform the user that the payment is unavailable, and may stop the payment process.

In the next operation, the user may enter a password for the bank account.

After the bank account password is verified, the terminal may transmit the payment information to the POS device through the NFC and MST. If the NFC signal is detected, the transmission of the MST is stopped. In the course of transmitting the payment information through the NFC and MST, an animation indicating the payment limit time may be displayed. During the transmission of the payment information through the NFC and MST, the user may be notified that the payment information is being transmitted by means of an animation, a sound, or a vibration. The output of the animation, the vibration, or the sound may be changed according to the user's configuration.

Multitasking H/W keys may not operate while the payment information is transmitted through the NFC and MST. This may be implemented by a method in which the H/W is interrupted but the interruption is not processed in the AP end, or by a method in which the H/W is not interrupted at all.

Additional verification - PIN input/application installation?

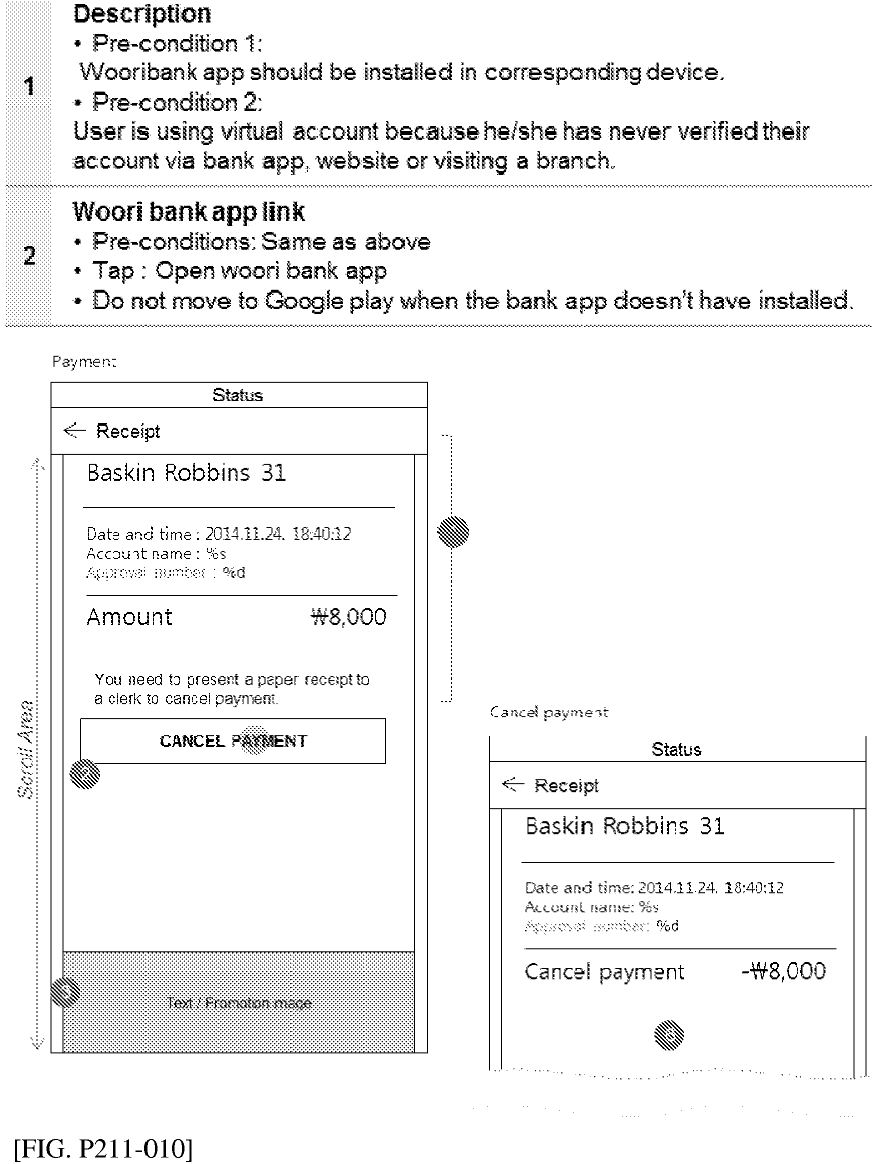

If the payment is completed, the payment related information may be displayed to the user. The payment related information may be received from the card company or the bank; directly from the POS device (through a short-range network or a broad-range network); or from an intermediate server that transfers the payment information of the POS device to the card company or the bank. The information related to the payment information may contain a payment completion time, an approval number, an affiliated store name, the payment amount, or the like. In addition, the icon for cancelling the payment may be displayed as well. If the payment is cancelled, the cancellation information may be displayed to the user by using a sign (-).

If there are additional promotion events in return for the payment, the information thereof may be displayed together with the payment information.

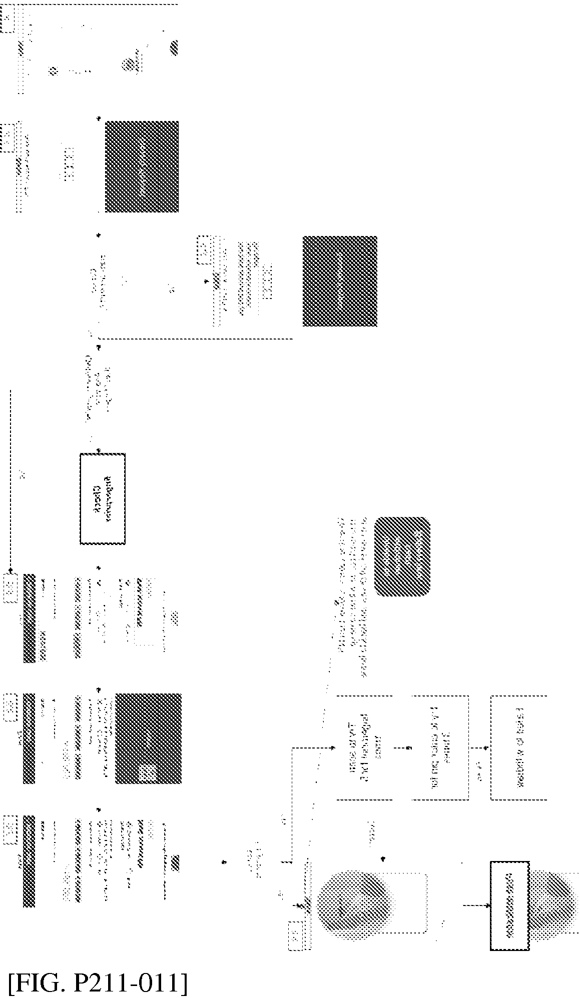

After the application is executed, the card or bankbook related to the account that the user desires may be displayed in the center of the screen in order to thereby receive the user input. The user input may include a scrolling input.

When the card or bankbook related to the account that the user desires is displayed in the center of the screen, if a touch input is made on an icon related to "withdrawal" or if a predetermined gesture is received, the withdrawal operation may be performed.

In the next operation, the user may enter an account password of the bank or the card company. The verification through the password or the verification through other methods may be determined according to the policy of the bank or the card company. In addition, the verification result of the password may be determined by the bank or the card company to then be transmitted to the terminal.

When the verification of the bank or the card company is completed, the information related to the account may be displayed to the user. The account-related information may contain the balance of the account.

Once the verification of the bank or the card company is complete, the withdrawal-related information may be received from the user. The withdrawal-related information may include at least one of: the withdrawal amount; the type of note that the user desires; or the output of a receipt. The terminal may transmit the withdrawal-related information to the ATM in the withdrawing operation so that the withdrawal may be carried out without additional user input. The corresponding configuration may be pre-selected based on the user's previous information. The user's previous information may be created based on at least one piece of: the most recently used information; the frequently used information; or the information on another user who has a similar usage pattern.

The terminal may perform its own verification after the verification of the bank account password is completed. The verification in the terminal may be made through a PIN input or a biometric information input. If at least one piece of the biometric information stored in the terminal is changed before the terminal performs its own verification through the biometric information, the user verification may be performed once more in the corresponding verification operation by using the biometric information and the additional verification information. The operation of the biometric recognition sensor may be controlled to operate only when the withdrawal-related information is input. In the case of an iris, a camera may be driven after the withdrawal information input is completed. In the case of a fingerprint sensor, the fingerprint sensor may be driven after the withdrawal information input is completed. In the case of a display-integrated fingerprint sensor, the fingerprint verification may be performed at the same time the user presses the completion button. In addition, with the operation of the sensor, the terminal may display information that informs the user that the sensor is in operation. In another embodiment, the camera may be driven at the same time as the start of the withdrawal information input, and may recognize the user's face or iris information in order to thereby verify the user. In another embodiment, the display-integrated fingerprint sensor may be driven at the same time as the start of the withdrawal information input, and may recognize the fingerprint at the time of receiving the user input in order to thereby verify the user.

After the verification of the terminal is completed, the terminal may transmit the withdrawal information to the ATM through NFC and MST in order to thereby attempt the withdrawal.

If the time for inputting the withdrawal-related information and performing the verification in the terminal exceeds a predetermined period of time, the verification of the bank or card company may be performed again. The predetermined period of time will vary depending on the policy of the bank or card company.

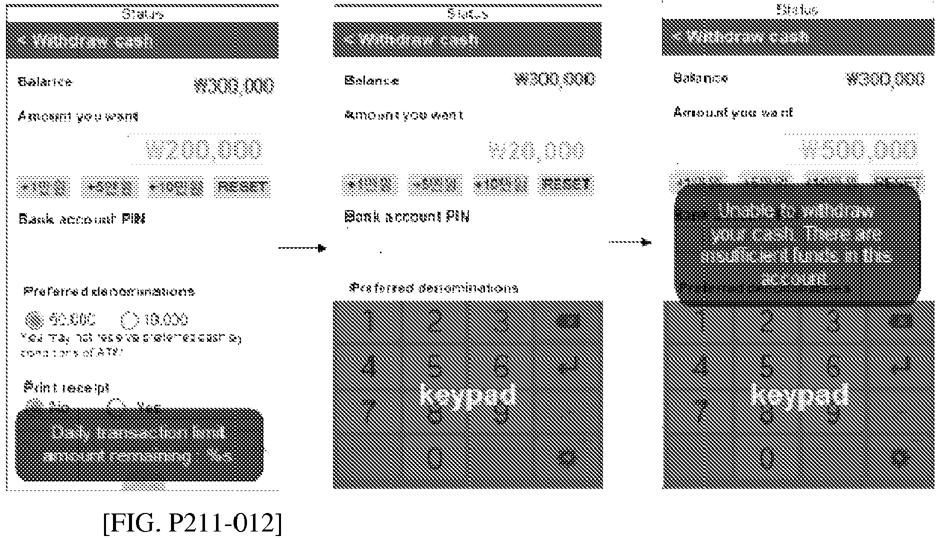

If the transaction amount exceeds a daily limit, the user may be informed of the excess by calculating the corresponding amount. In this case, the terminal may store each transaction amount on a daily basis, and may inform the user when a sum of the input amount and the transaction amount exceeds the daily limit.

When the user enters the amount of money, a comma "," may be automatically inserted every third digit.

If the transaction amount exceeds a one-time transaction limit, the user may be informed of the excess. The one-time transaction limit may vary depending on the policy of the bank or card company, and may be greater than the current balance of the account. In the case where the one-time transaction limit follows the policy of the bank or card company, the terminal may store the corresponding value in the application.

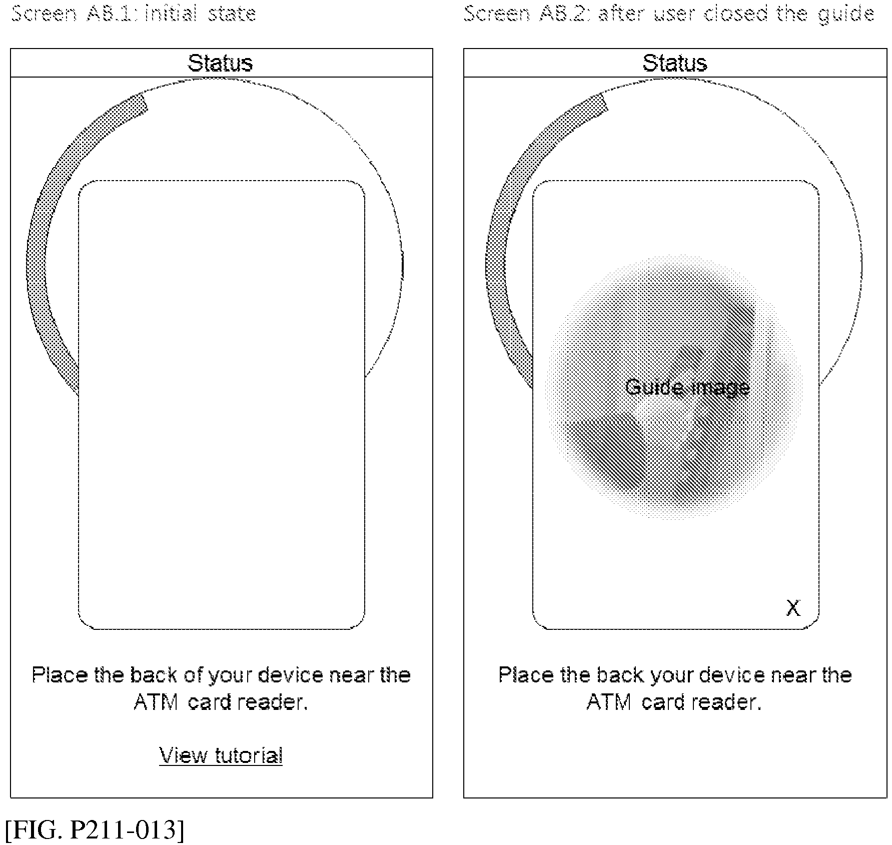

An animation representing the withdrawal information transmission time may be displayed in the operation of transmitting the withdrawal information to the ATM through NFC and MST. The user may be informed of the transmission of the withdrawal information through an animation, a vibration, or a sound during the operation of transmitting the withdrawal information through NFC and MST. The output of the animation, the vibration, or the sound may be changed according to the user's configuration.

Multitasking H/W keys may not operate while the withdrawal information is transmitted through NFC and MST. This may be implemented by a method in which the H/W is interrupted but the interruption is not processed in the AP end, or by a method in which the H/W is not interrupted at all.

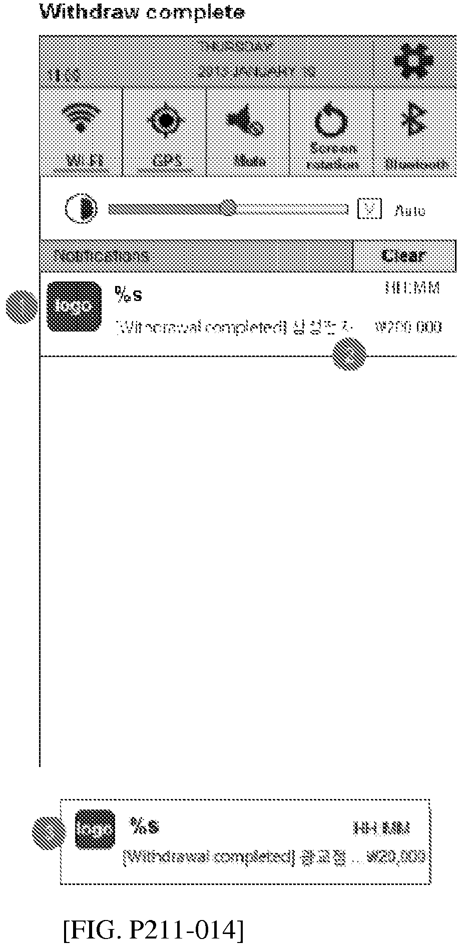

The withdrawal result may be displayed through a notification. The notification may be received from the bank or the card company, or may be directly received from the ATM. The displayed withdrawal result may contain at least one of a bank name, a bank logo, a transaction time, the transaction amount, the position of the ATM.

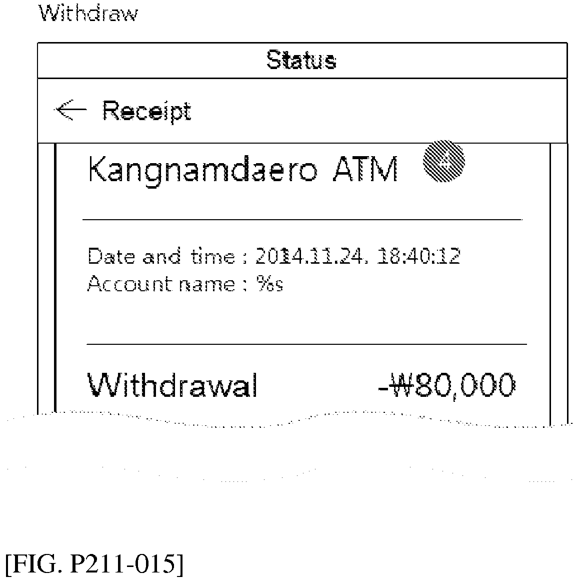

When the withdrawal is completed, the withdrawal information may be displayed in the form of a receipt. At least one of the transaction ATM, the transaction time, or the transaction amount may be displayed.

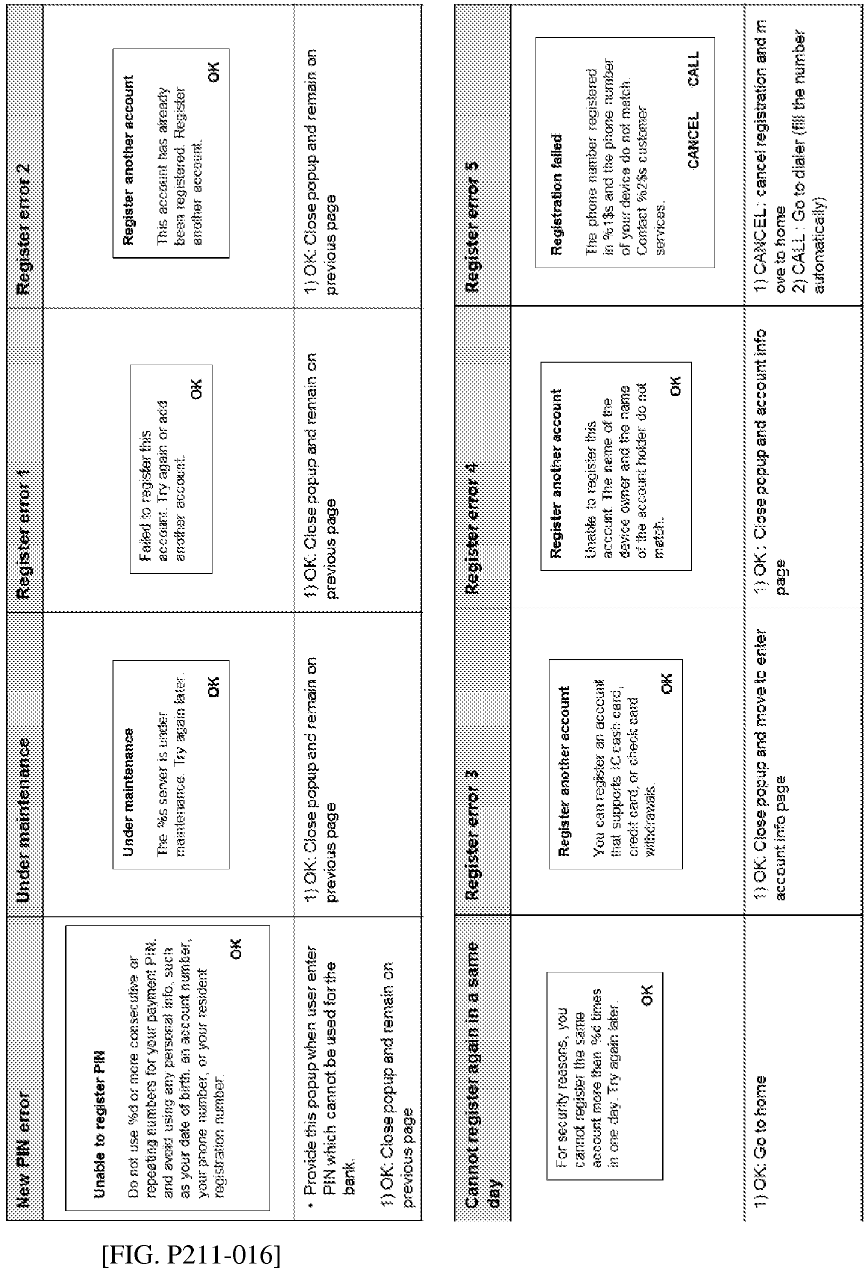

Errors may occur depending on the situation in the withdrawal operation. If an error occurs, the reason for the error may be displayed as well.

If a certain criterion is not satisfied in the registration of the PIN, it is impossible to register the PIN. The certain criterion may be information that is directly related to the user. The certain criterion may contain a user name, a birthday, account information, a telephone number, an address, or the like.

When the bank or the card company checks the server for maintenance, the withdrawal or transaction for the account of the bank or card company may not be available.

In the case where the same account is registered with respect to the same bank, the user may be notified of the corresponding information.

The repeated registration of the same account is limited to a predetermined number of times. In order to prevent the repeated registration of the same account, the daily registration information of the account may be stored in the terminal or the server.

The account may be registered in the terminal only when the actual user of the terminal is the same as the account owner. If the terminal user is different from the account owner, the account registration may be interrupted.

In order to register the account in the terminal, the phone number of the terminal should be the same as the phone number of the account owner who is stored in the account. If the phone number of the terminal is different from the phone number of the account owner, the phone number of the account owner may be changed through the additional verification by calling the bank or card company in order to thereby register the account.

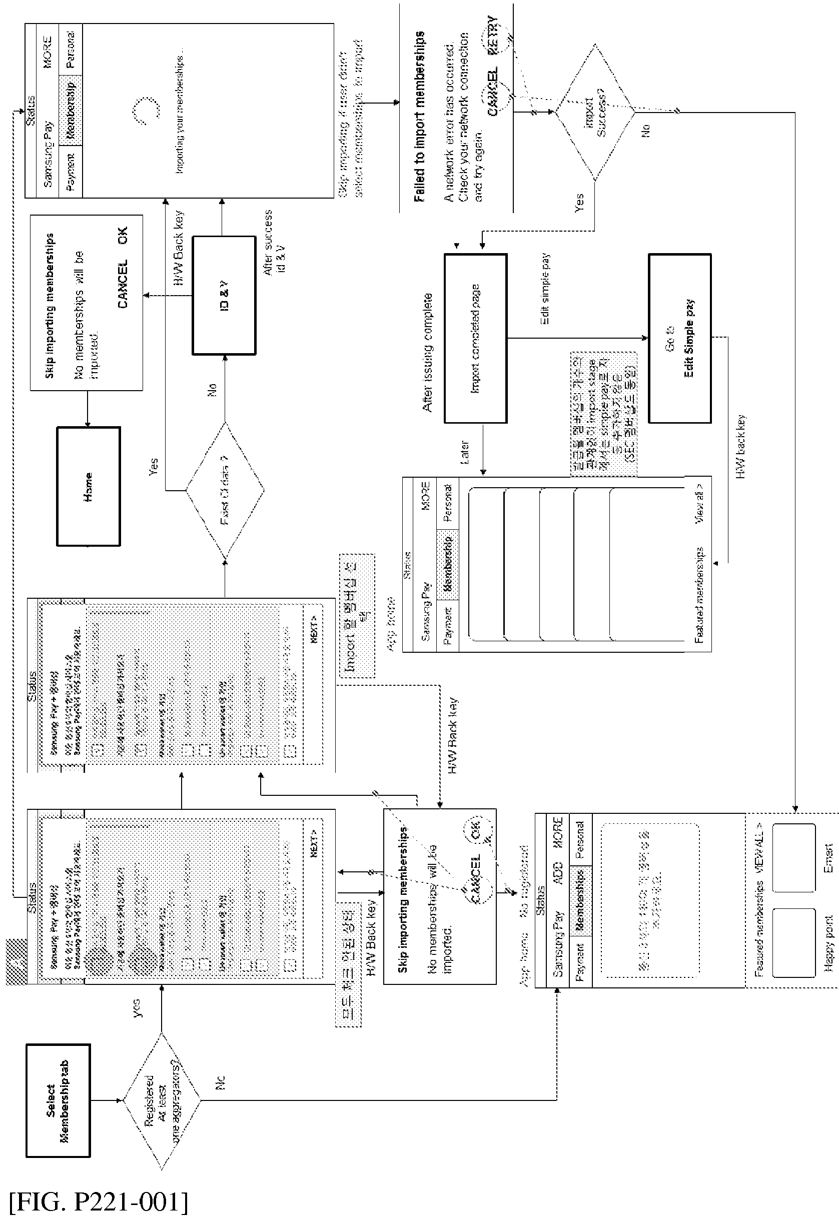

The electronic device may select the membership tab in the initial screen in order to thereby import the membership card. If the electronic device belongs to one or more carriers, the electronic device may display a screen in which the user can select the carrier membership first, and the user may select a carrier membership import menu in order to thereby register the membership card. In this case, if ID & V is necessary, the ID & V process is performed to then complete the final registration, and if there is CL data and the ID & V is not necessary, the registration may be performed without the ID & V. If there is no registered carrier in the initial screen, a home screen of the application may be displayed. In addition, the screen may display a notification stating that the user can add the membership cards.

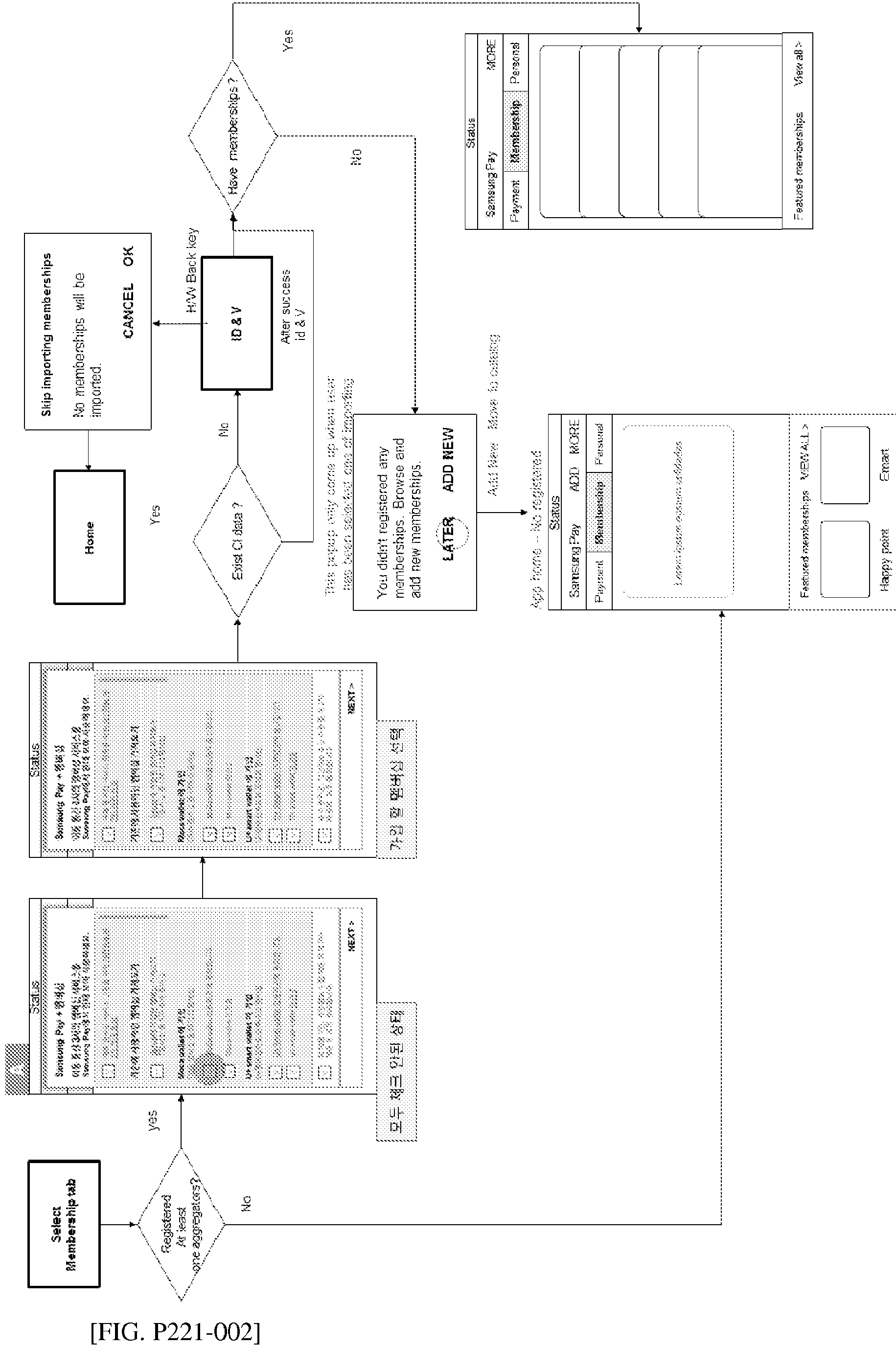

The electronic device may select the membership tab in the initial screen in order to thereby select the membership card that the user wishes to apply for. The electronic device may provide the type of membership in the status screen, and the user may sign up for the membership by agreeing to the terms and conditions of the membership.

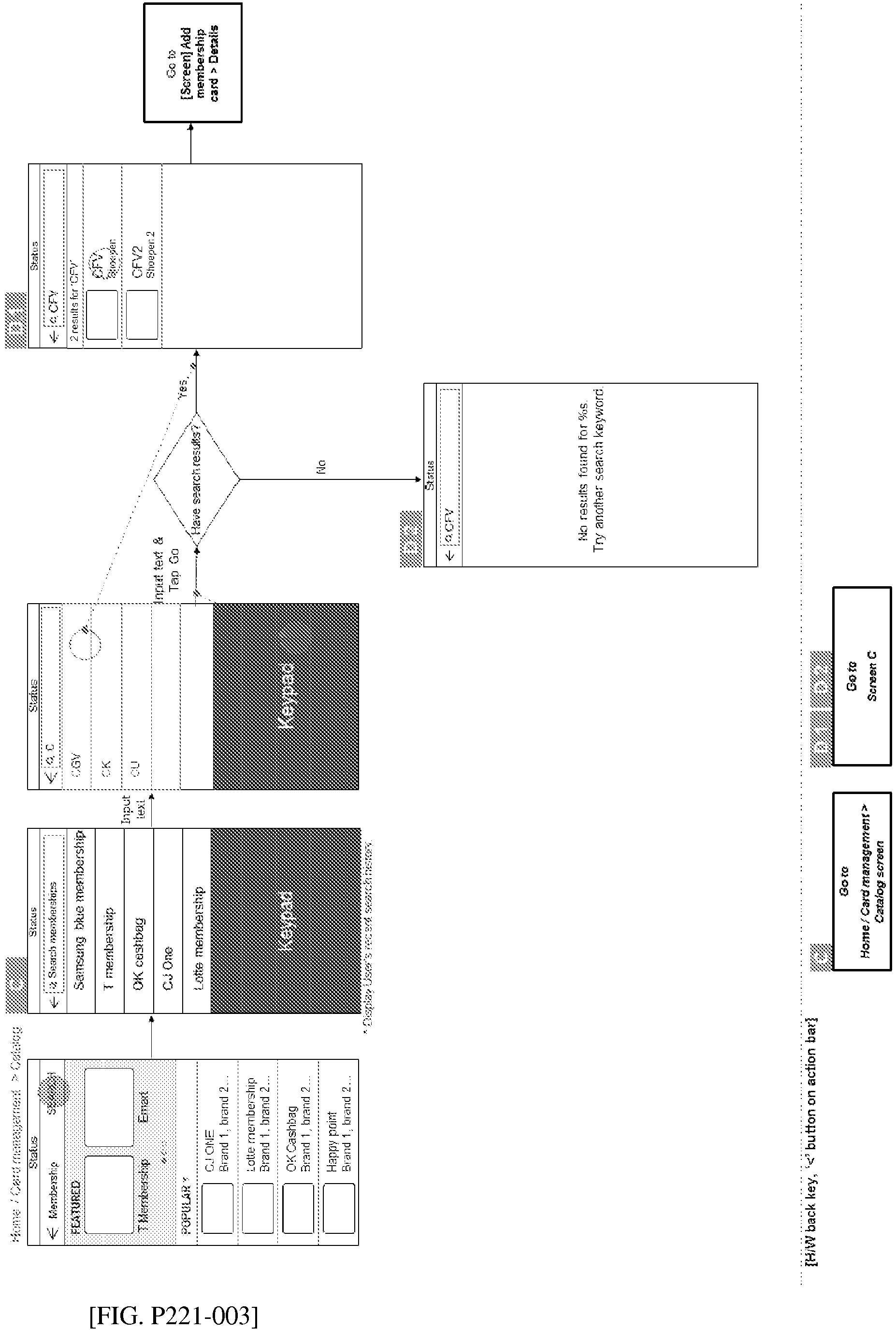

The electronic device may search for the membership cards, which can be added, through a search function. Even though the user does not input all of the memberships, the electronic device may provide a candidate group, and if there is the same, or a similar, membership, the terminal may provide detailed information about the membership. In addition, the electronic device may remember the history of the search function, and may provide the same to the user. The history may be stored or deleted.

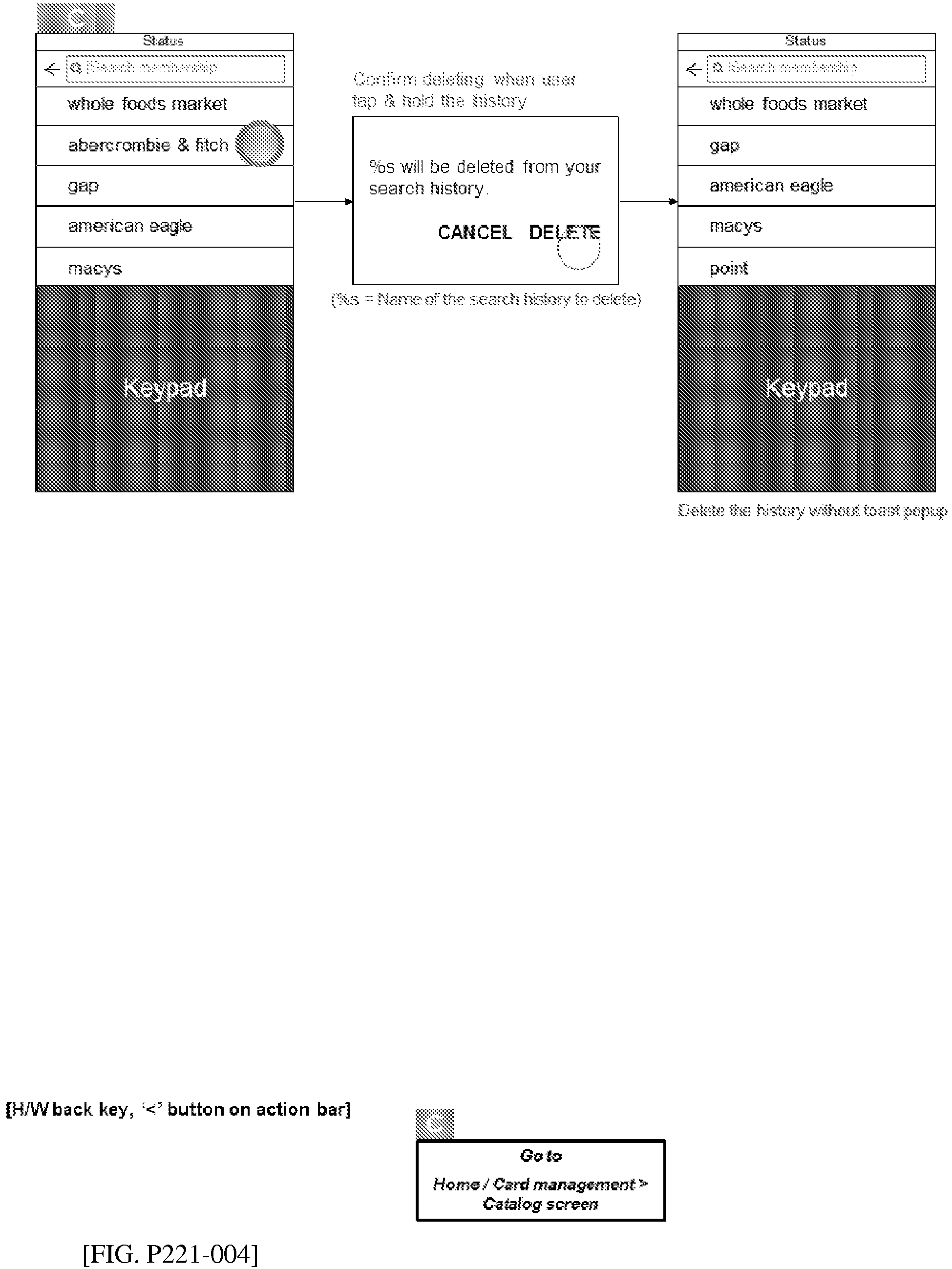

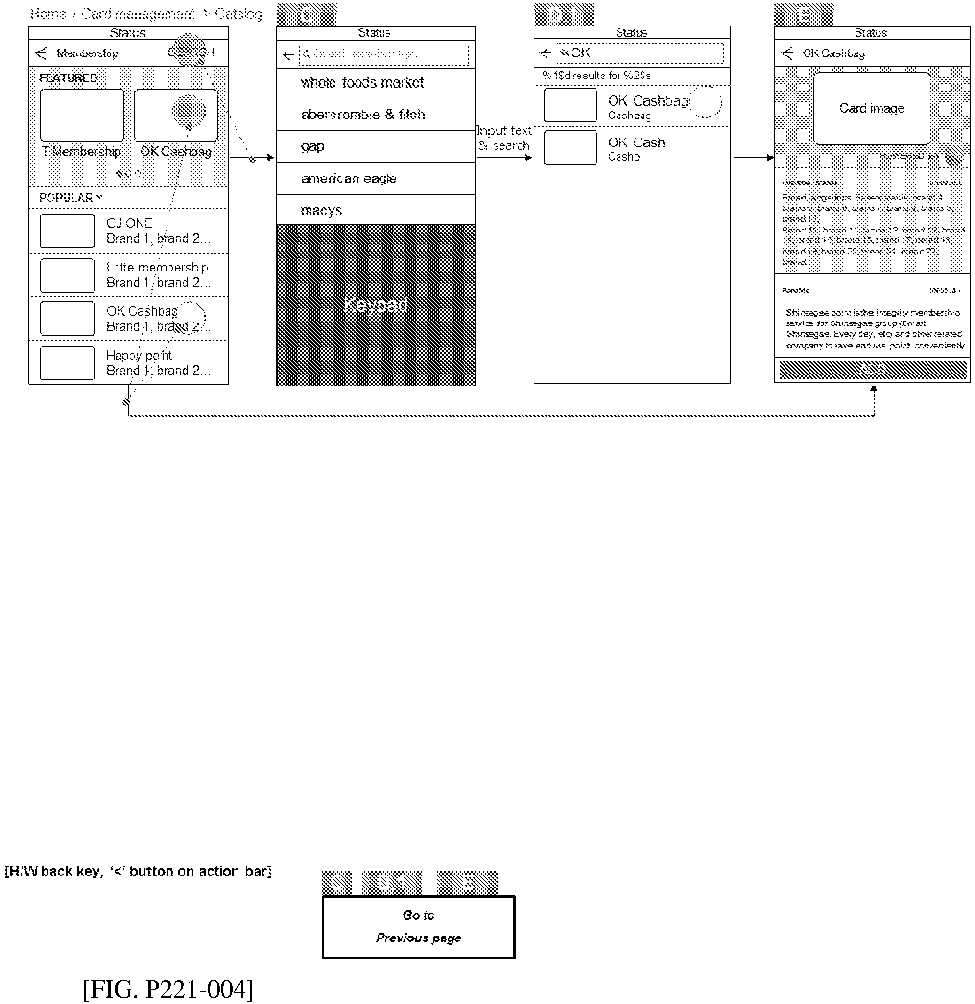

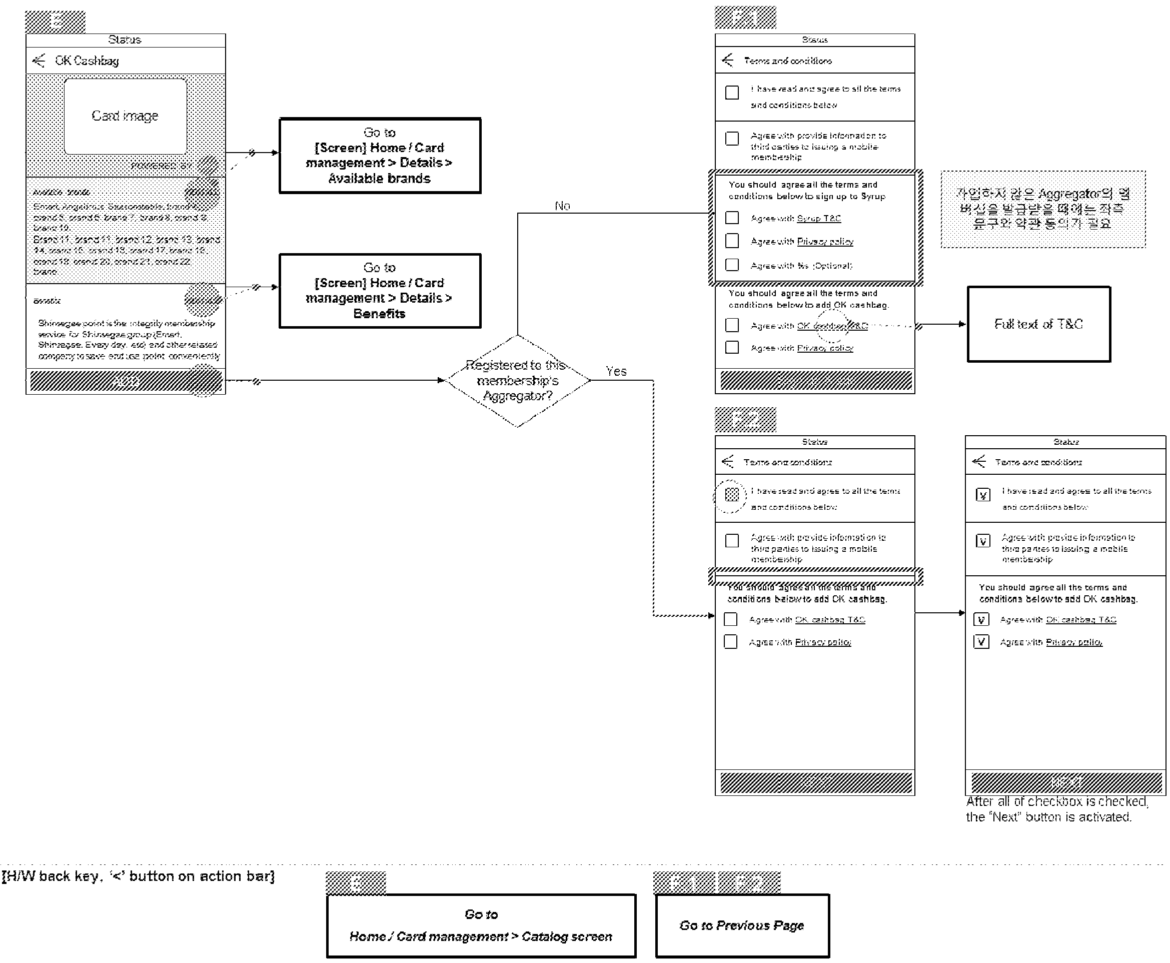

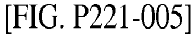

The electronic device may provide the user with detailed information of the membership. At this time, the detailed information may contain a card name, a card image, available brands, or benefit information. The electronic device may include a menu for the membership card registration in the detail information page. For example, an ADD button is pressed, the terminal may display a membership card registration menu. In addition, the registration menu may display terms and conditions for the membership card registration to then receive a user's consent.

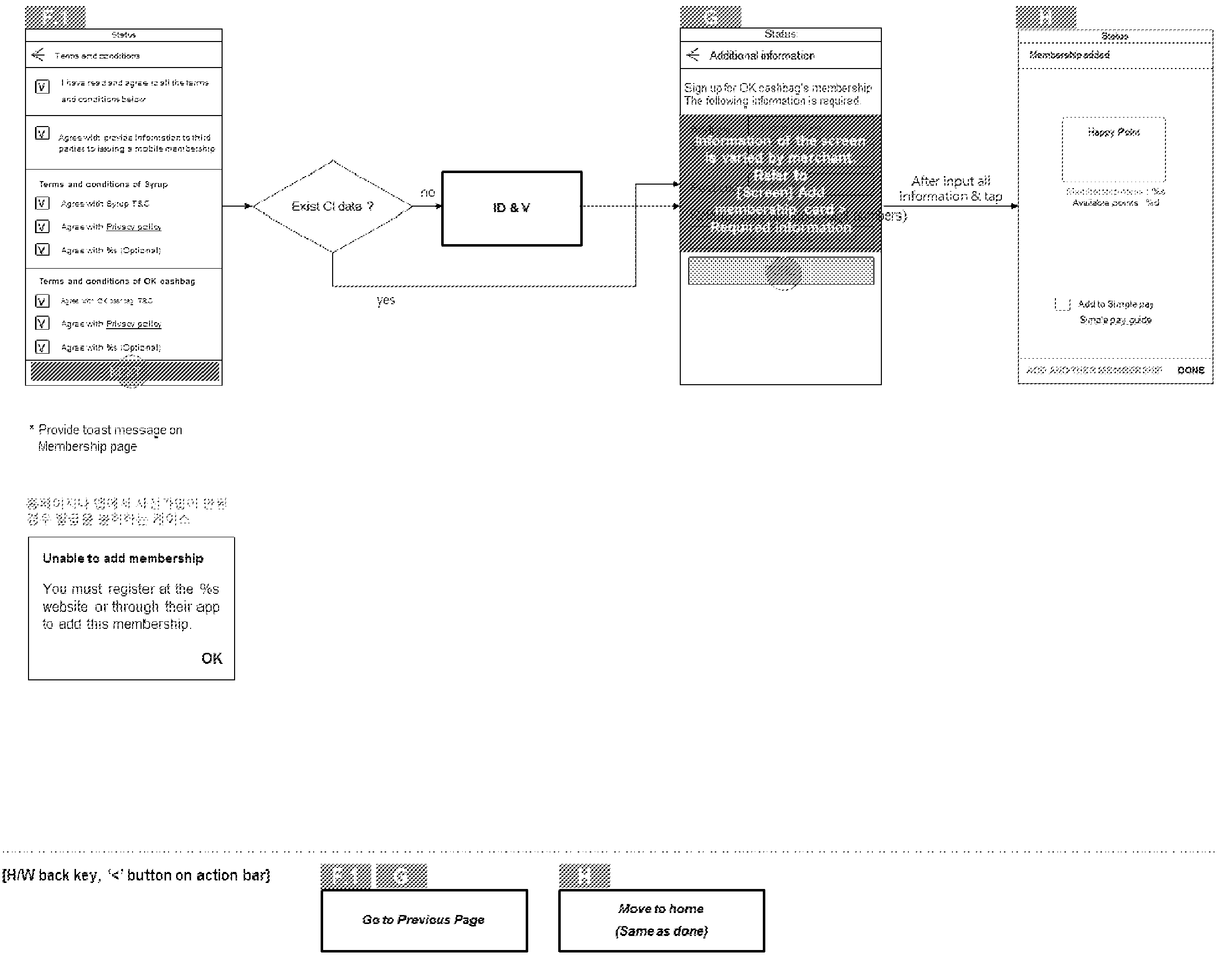

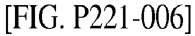

The electronic device may add the membership card after the consent of the user, and if a card is not pre-signed up for through a website or application, it may be unavailable. In addition, the electronic device may receive additional information, such as an address or a zip code, as well as the consent to terms and conditions in the registration operation. In addition, the membership card, of which registration is complete, may be used in Simple Pay.

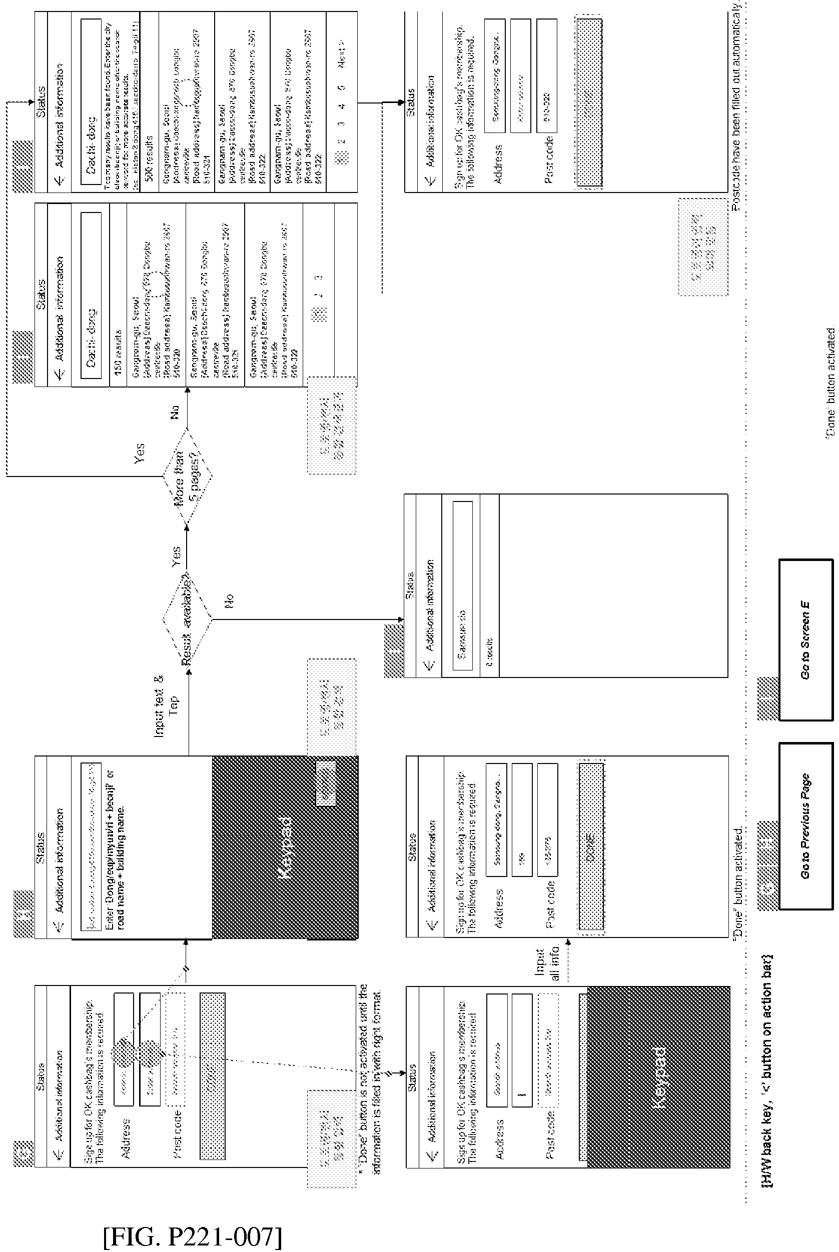

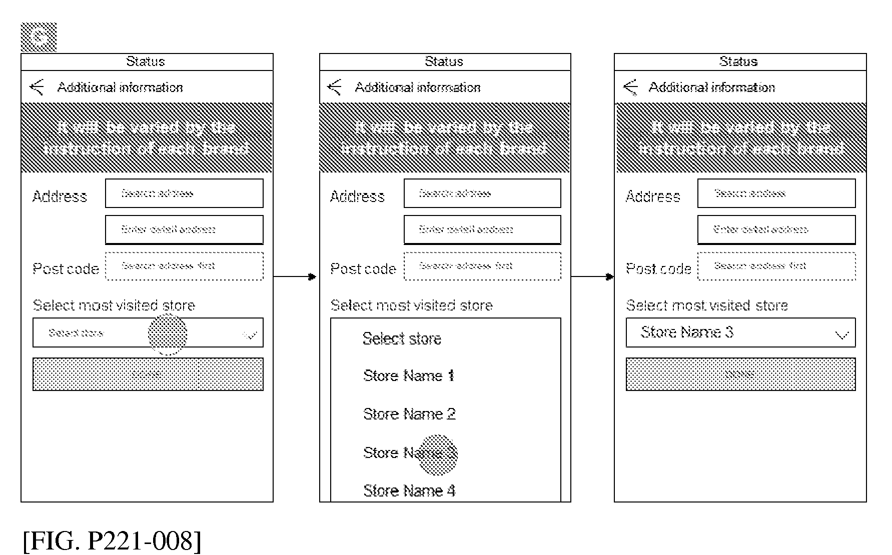

In the operation of registering the additional information, information on the store that the user frequently visits may be selected, and the electronic device may receive the information.

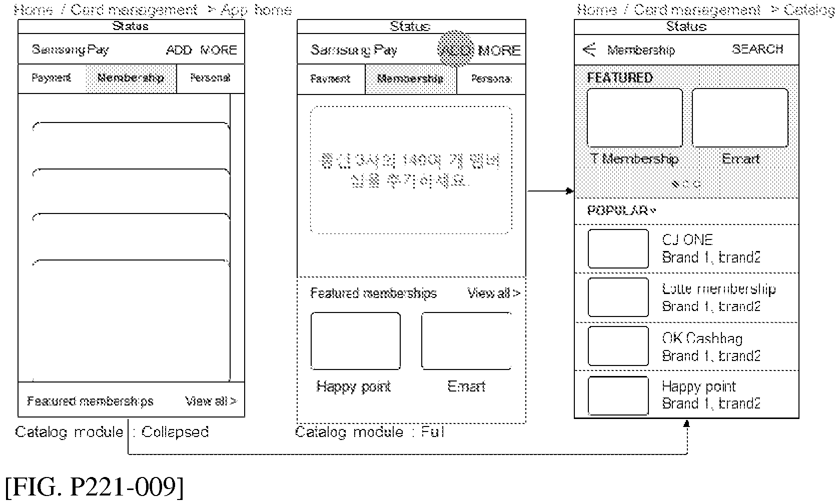

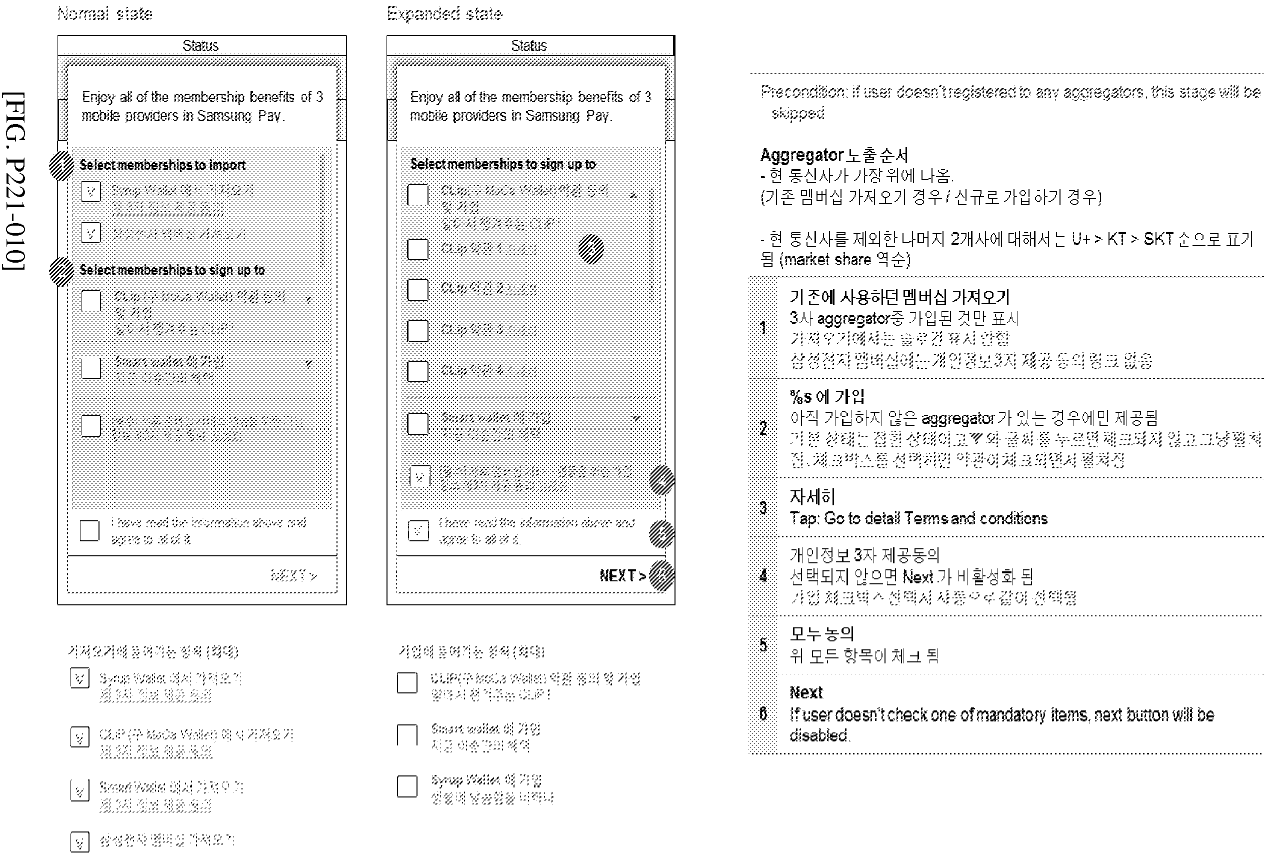

The electronic device may differently display the entry screen to the user depending on the subscribed carrier in the membership registration operation. For example, the terminal may display the registration screen for the currently subscribed carrier in the uppermost layer. In addition, the terminal may provide terms and conditions in the folded state or in the unfolded state to show the details of the terms and conditions in the screen for the consent to the terms and conditions.

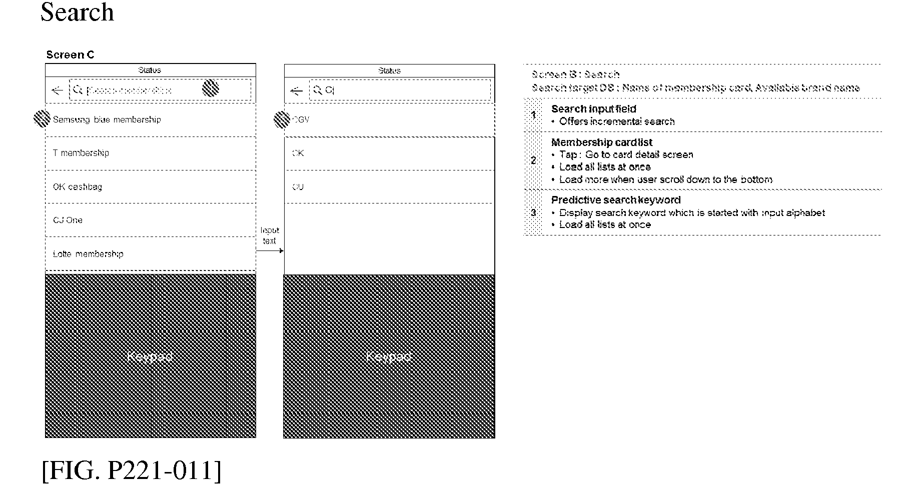

The electronic device may provide a search function to find the membership card. The electronic device may provide a menu for receiving the user input for the search, and even if the user does not enter all letters of the membership card, the electronic device may show a candidate group of memberships, which includes the letters that are input through an input unit.

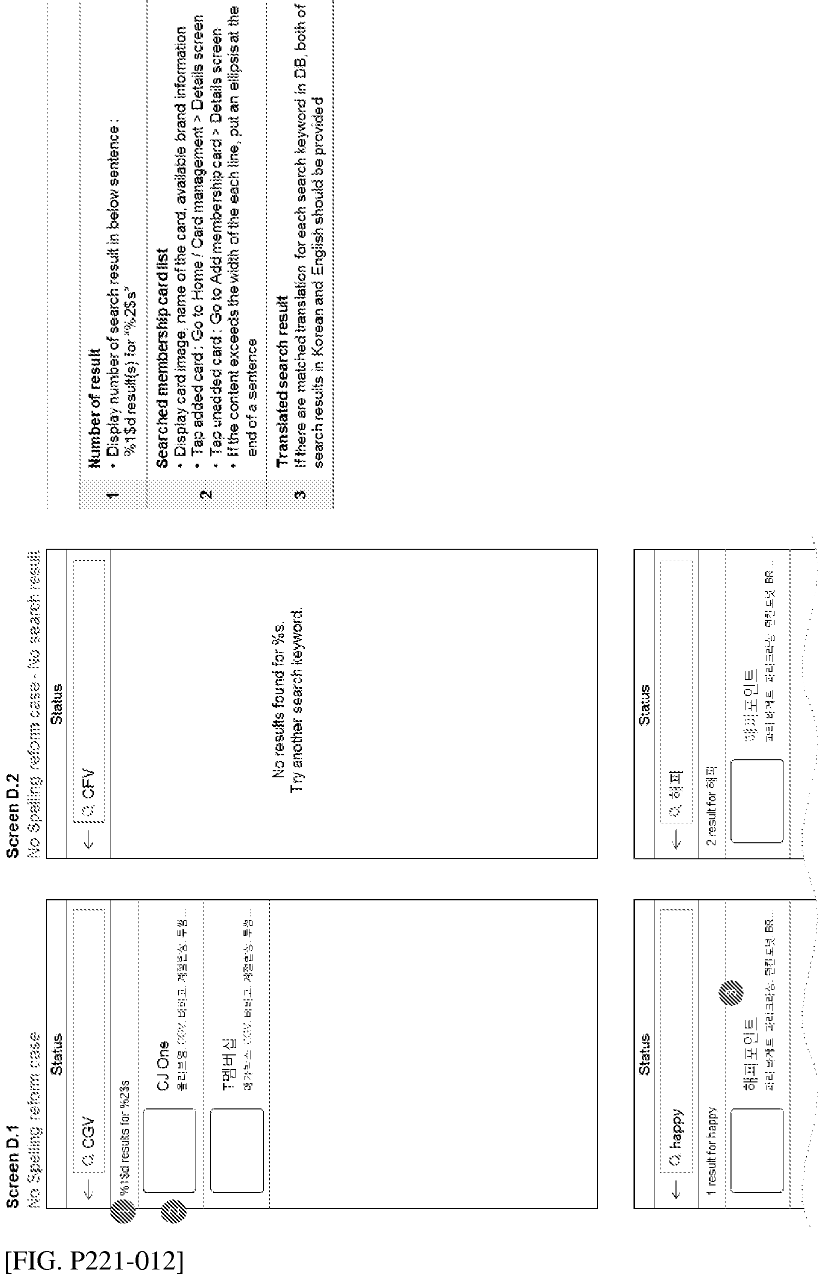

The electronic device may display one or more search results according to the user input, and if there is no search result, the electronic device may inform that no search result was obtained.

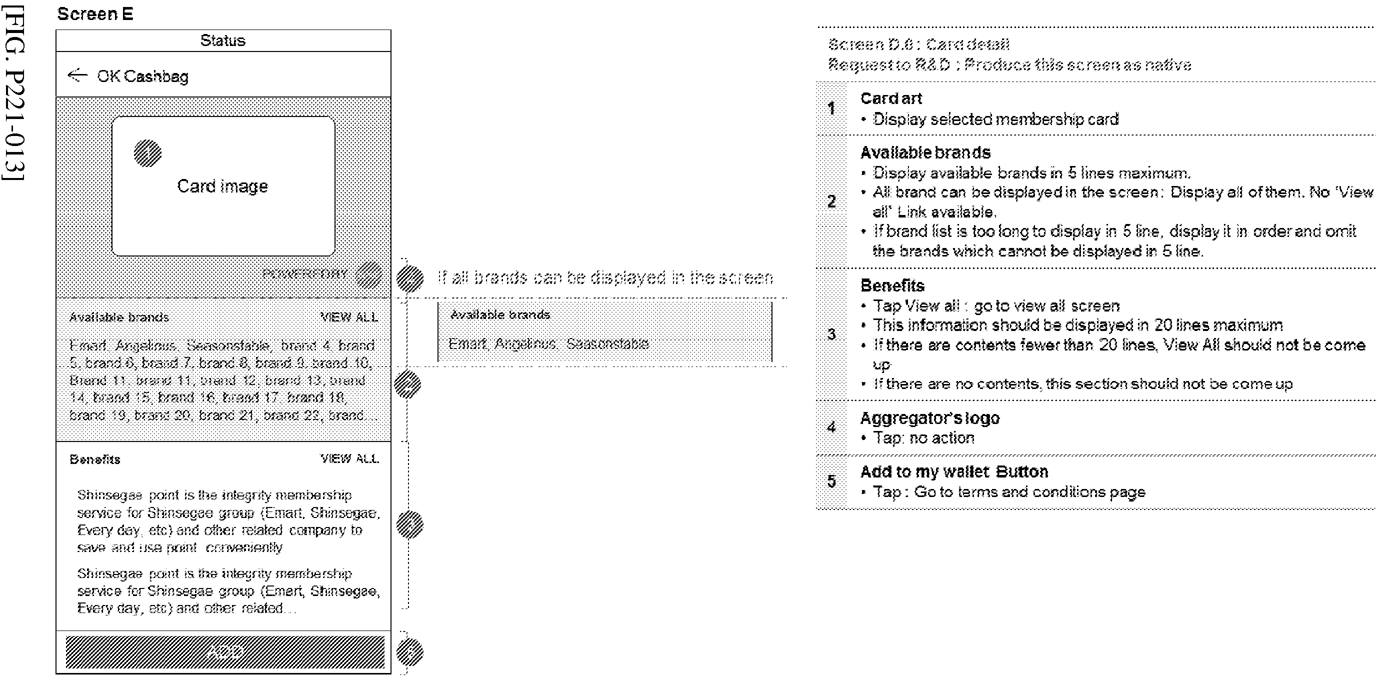

The electronic device may display additional information, such as images, available brands, or benefit information, on the membership card. In addition, the electronic device may provide a function in which the user can add the membership cards in the detailed information screen. For example, when the ADD button shown at the bottom of FIG. P221-013 is pressed, a function for registering the membership card may be executed.

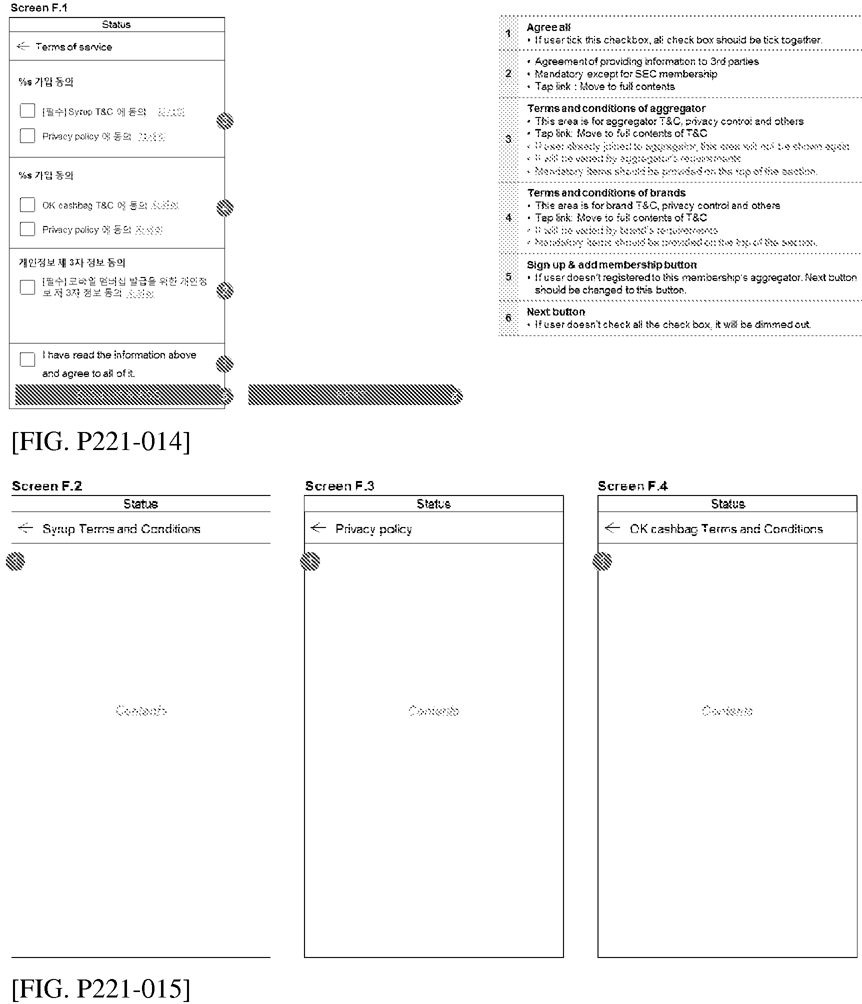

FIG. P221-014 and FIG. P221-015 show an example of an operation of registering the membership card. In the registration operation, the electronic device may provide the user with terms and conditions that require the user's consent, and may store the user's consent to the terms and conditions through the user input. In addition, in the case of a plurality of terms and conditions, each of them may be displayed to the user.

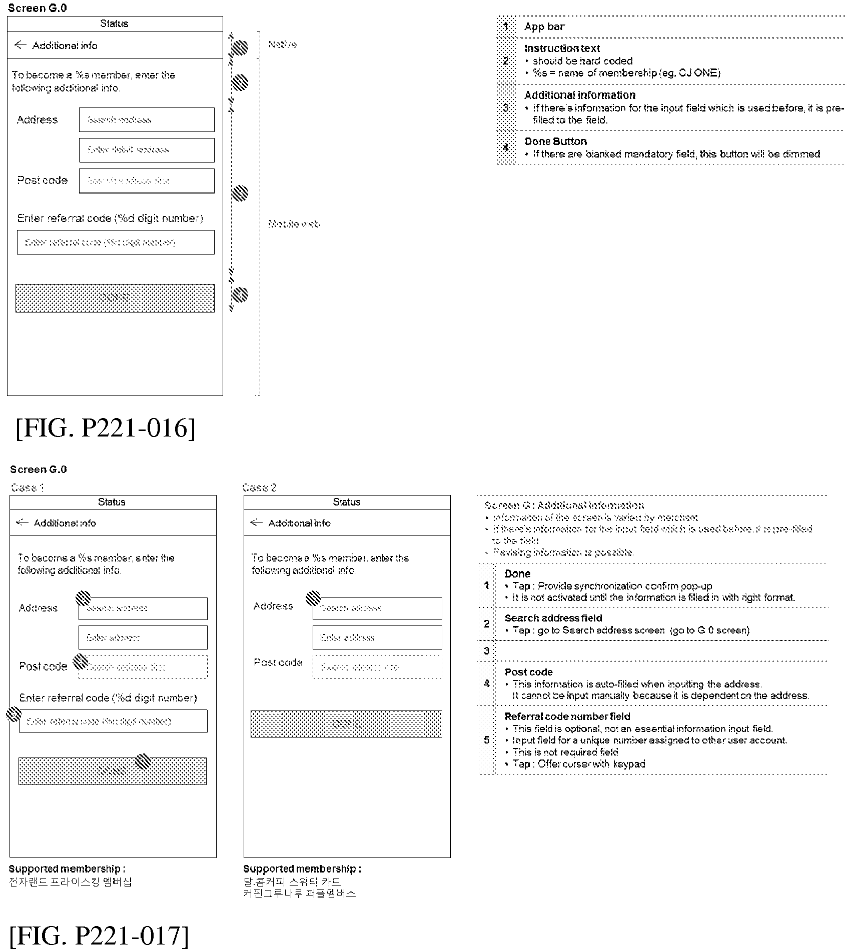

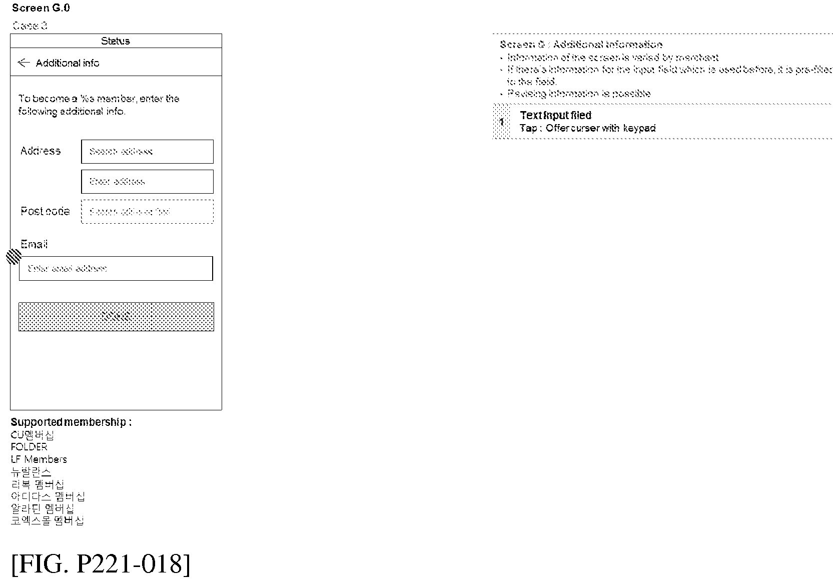

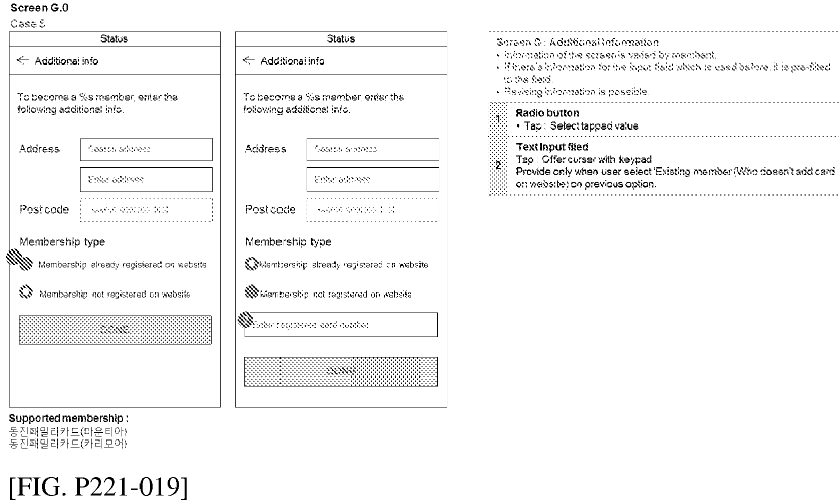

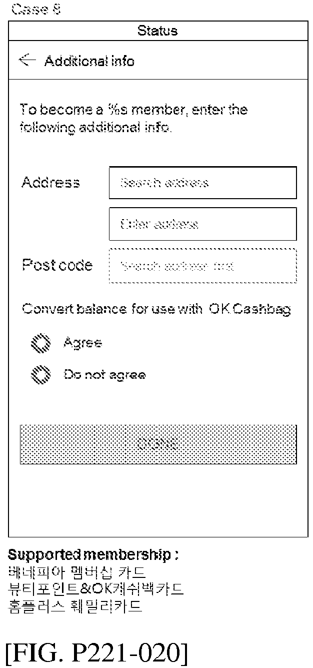

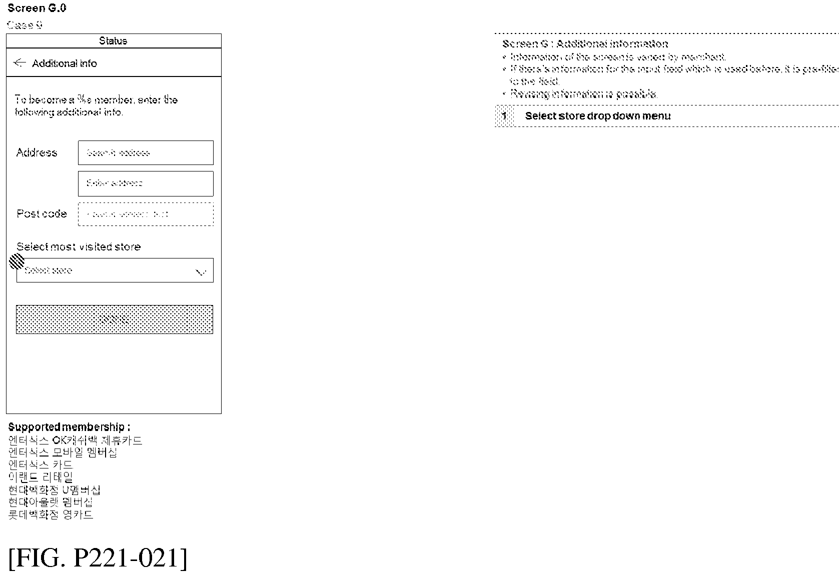

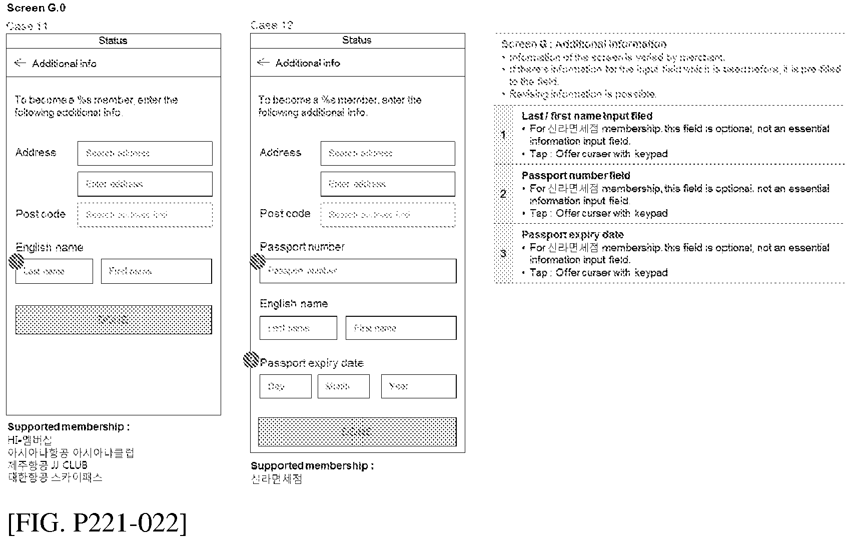

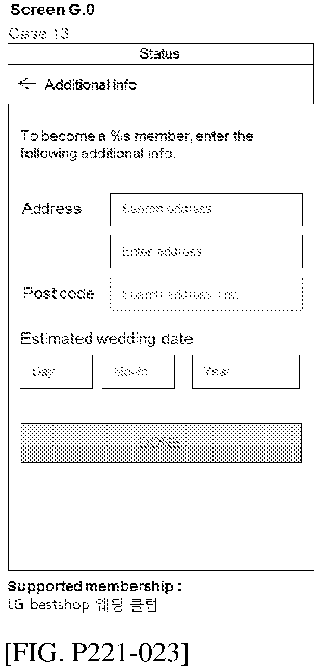

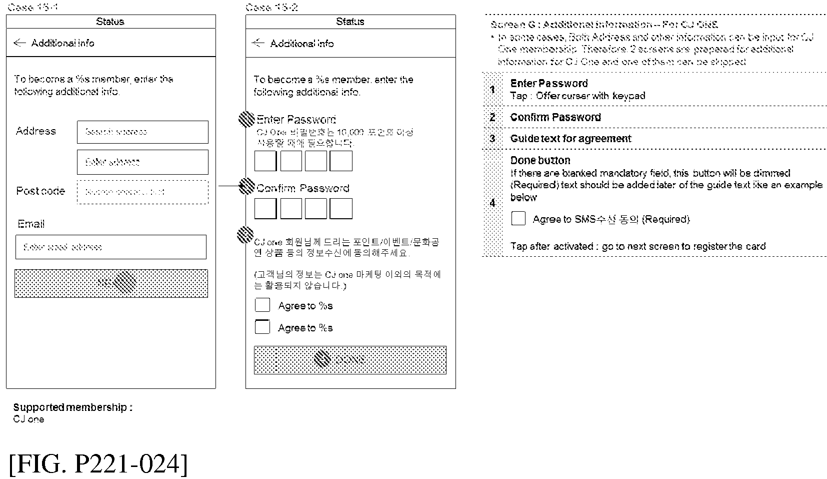

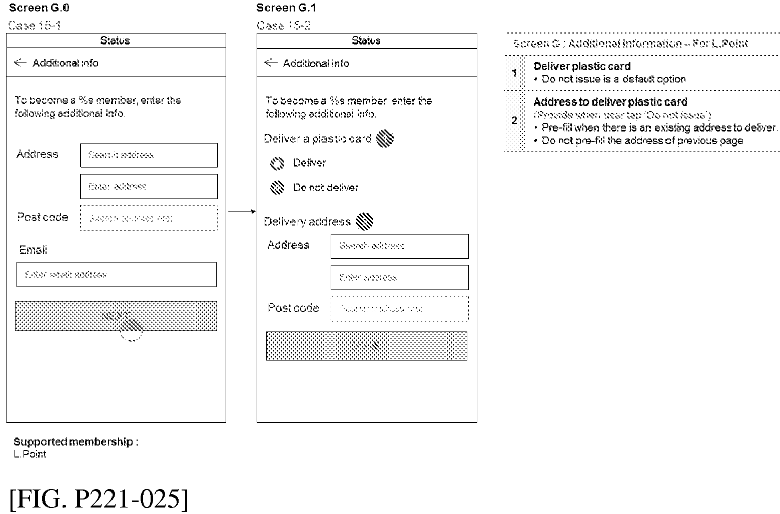

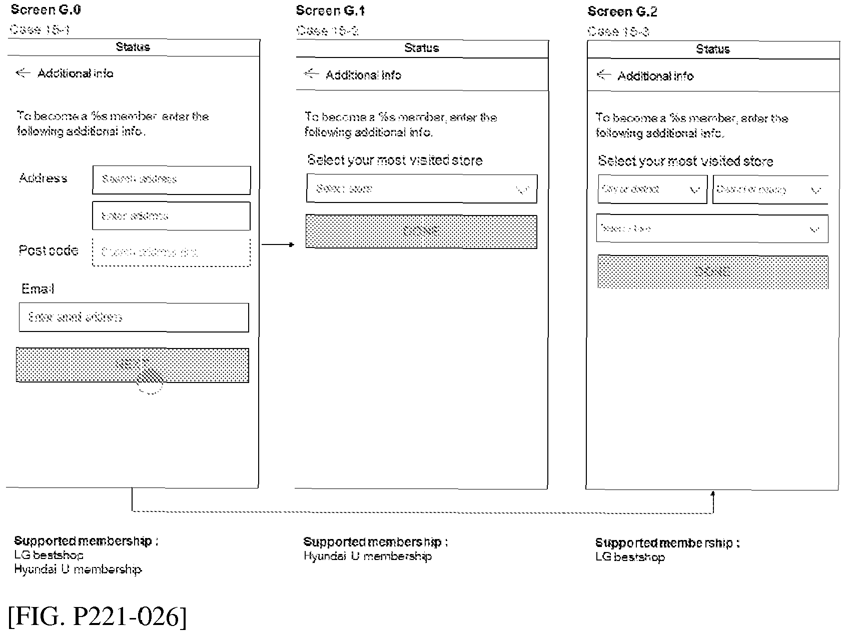

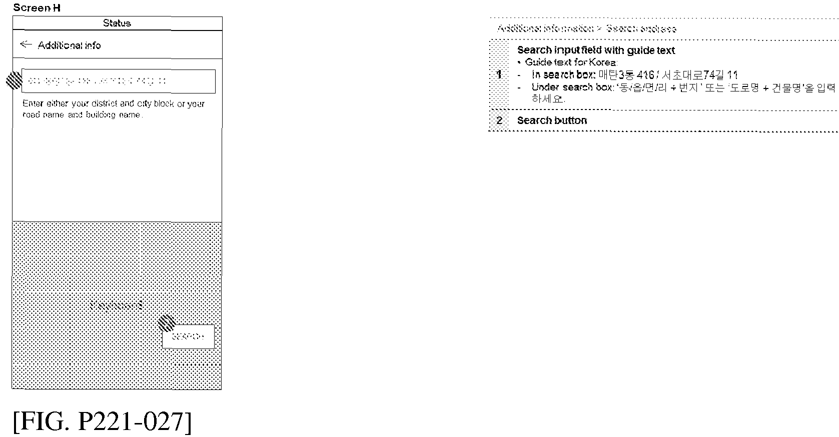

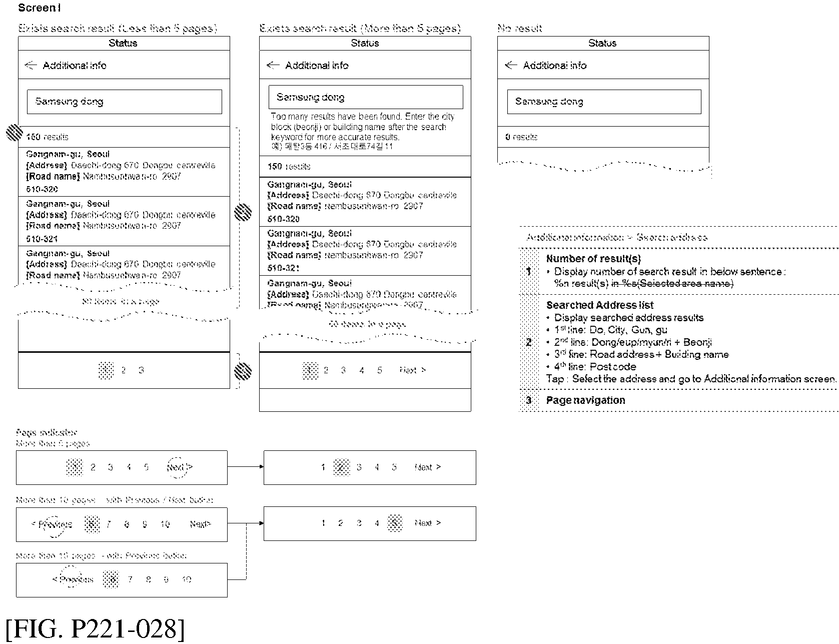

The electronic device may request additional information in the membership card registration operation. The additional information may be the same, or different from, each other according to the membership. The additional information, for example, may contain a user's address, a zip code, a referral code, an e-mail address, information on whether or not the membership already has been registered through websites, the consent to the association with points of different membership cards, information on the store that the user most frequently visits, the English name of the user, a passport number, a passport expiry date, a wedding-scheduled date, a password for using a specific points or more, the consent to the receipt of marketing information, information on whether or not the user wishes to receive a plastic card, the address for delivery of the plastic card, or the location of the store that the user frequently visits.

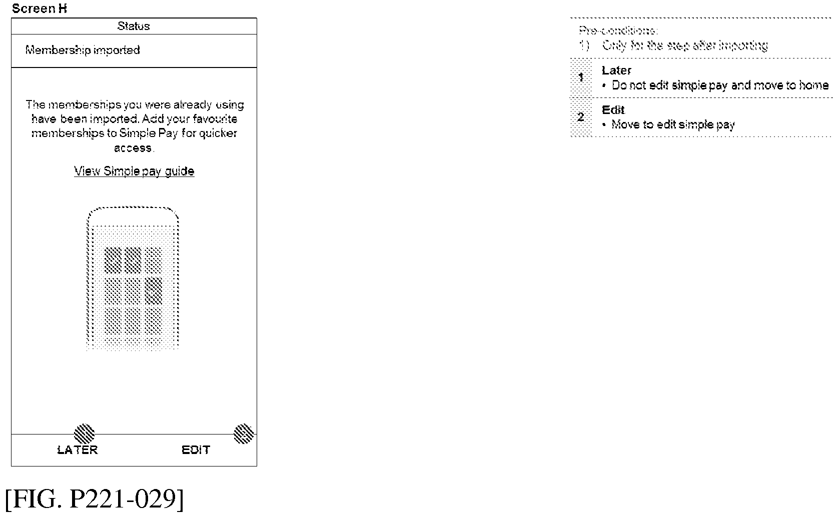

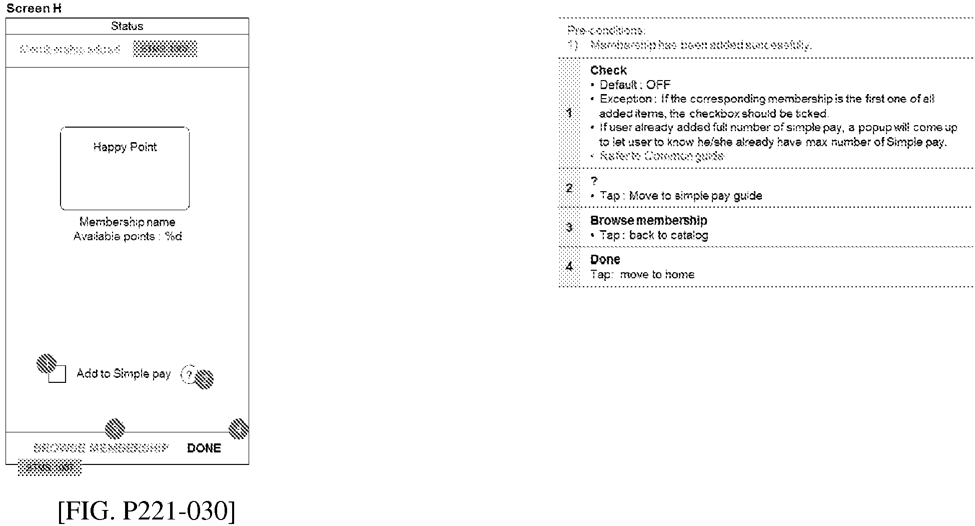

After the registration of the membership card, the electronic device may determine the order in which the membership cards are displayed to the user. In addition, the electronic device may display the point status of a specific membership card and may allow the user to select the corresponding card for the Simple Pay.

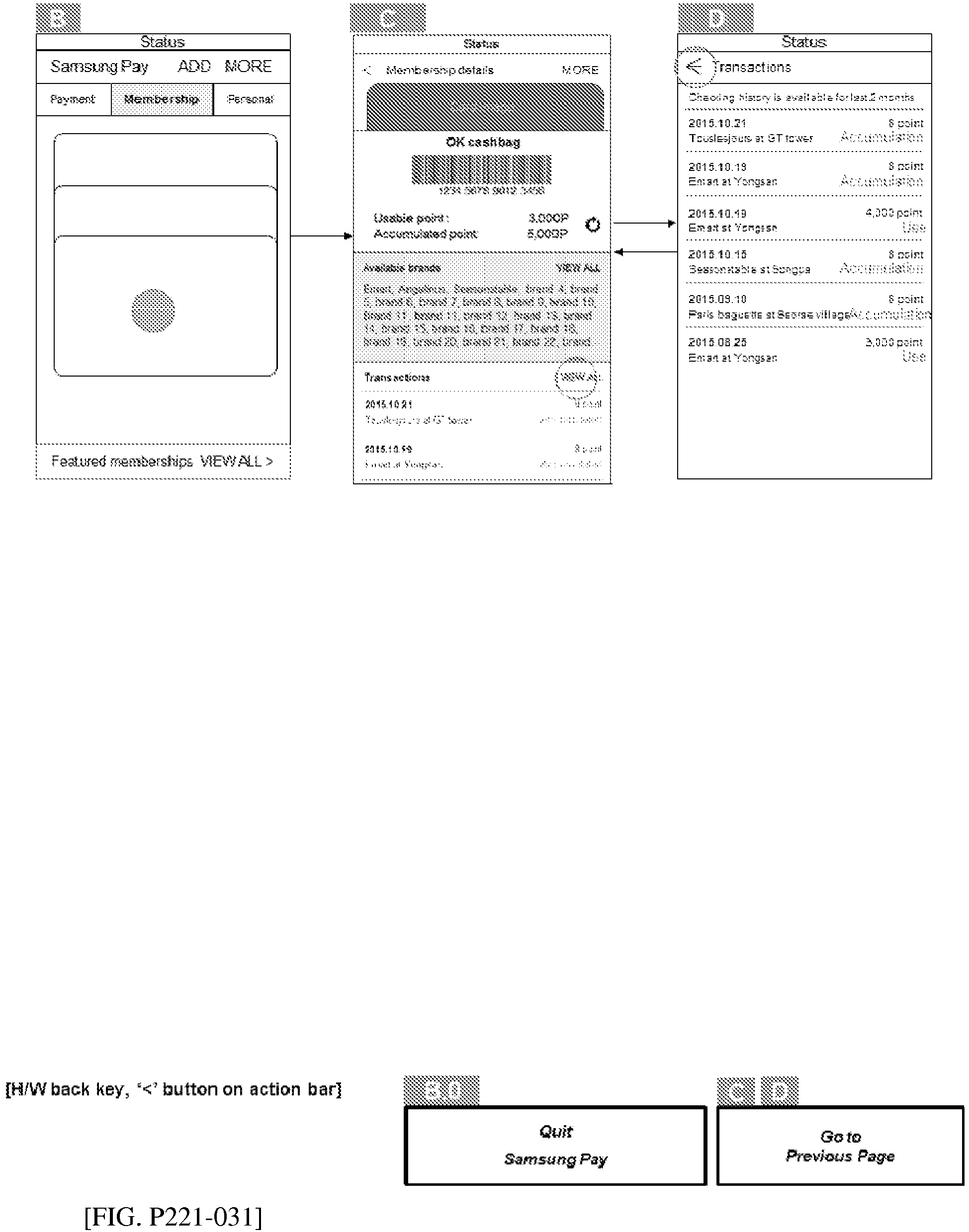

The electronic device may provide a menu for managing the membership card. If the user selects a membership card for details in the screen, the electronic device may display the card name, the card image, usable points, accumulated points, available brands, or transactions. In the case where there are too many transactions to be displayed in the screen, the electronic device may display the same to the user through an extended screen.

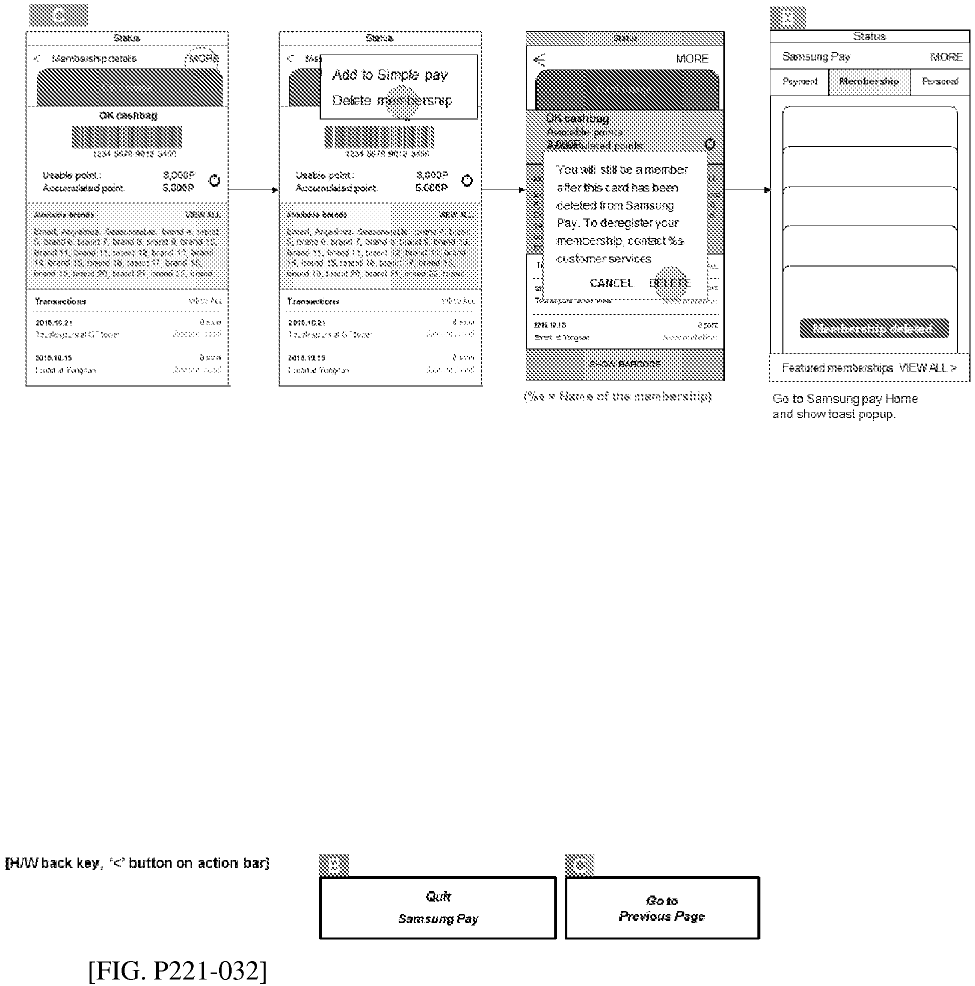

The electronic device may provide a function for deleting the registered membership card. In addition, even if the membership card is deleted from the electronic device, the actual membership may not be removed. In this case, the electronic device may provide the information on the same to the user.

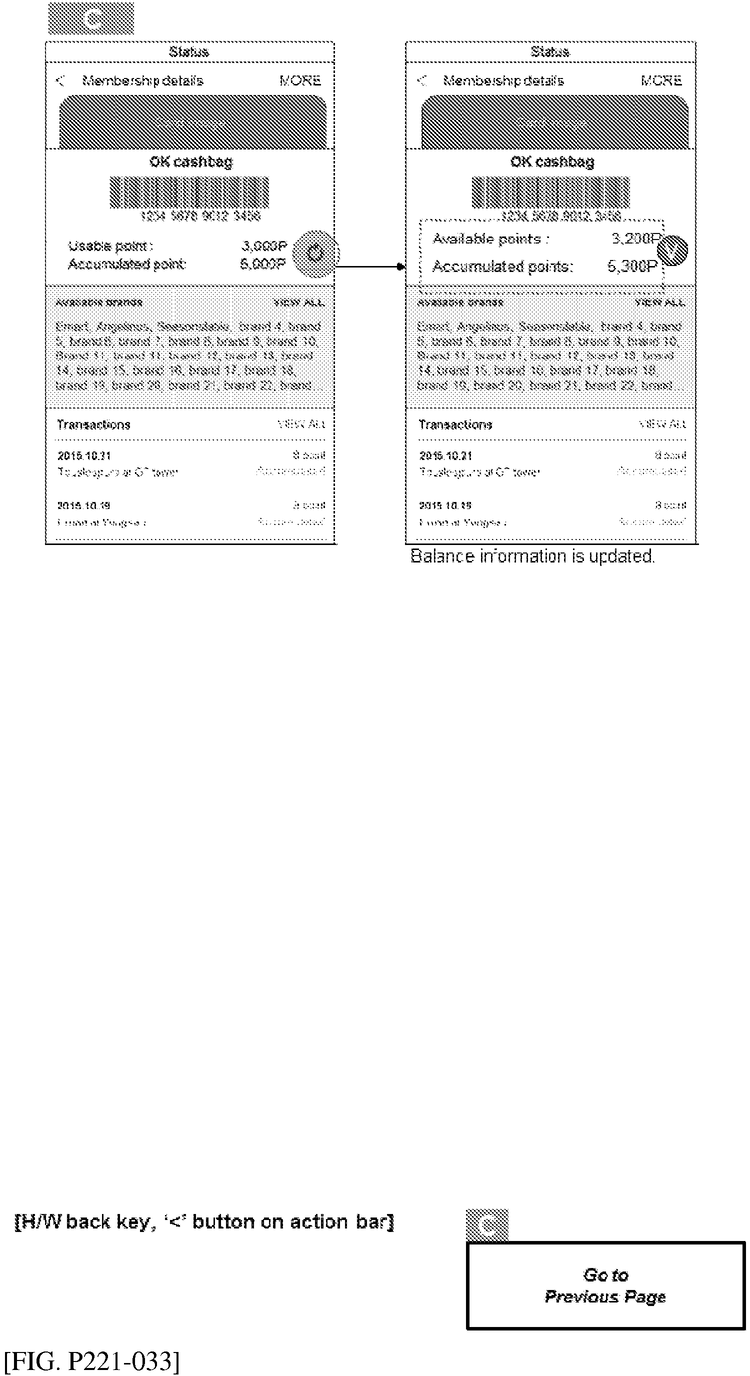

The electronic device may display the usable points and the accumulated points of the membership card to the user. In addition, the electronic device may provide a function that allows the user to update the same in order to thereby display the latest information to the user. In addition, if the user is deregistered so that the points cannot be identified during the update, the terminal may inform the user of the same.

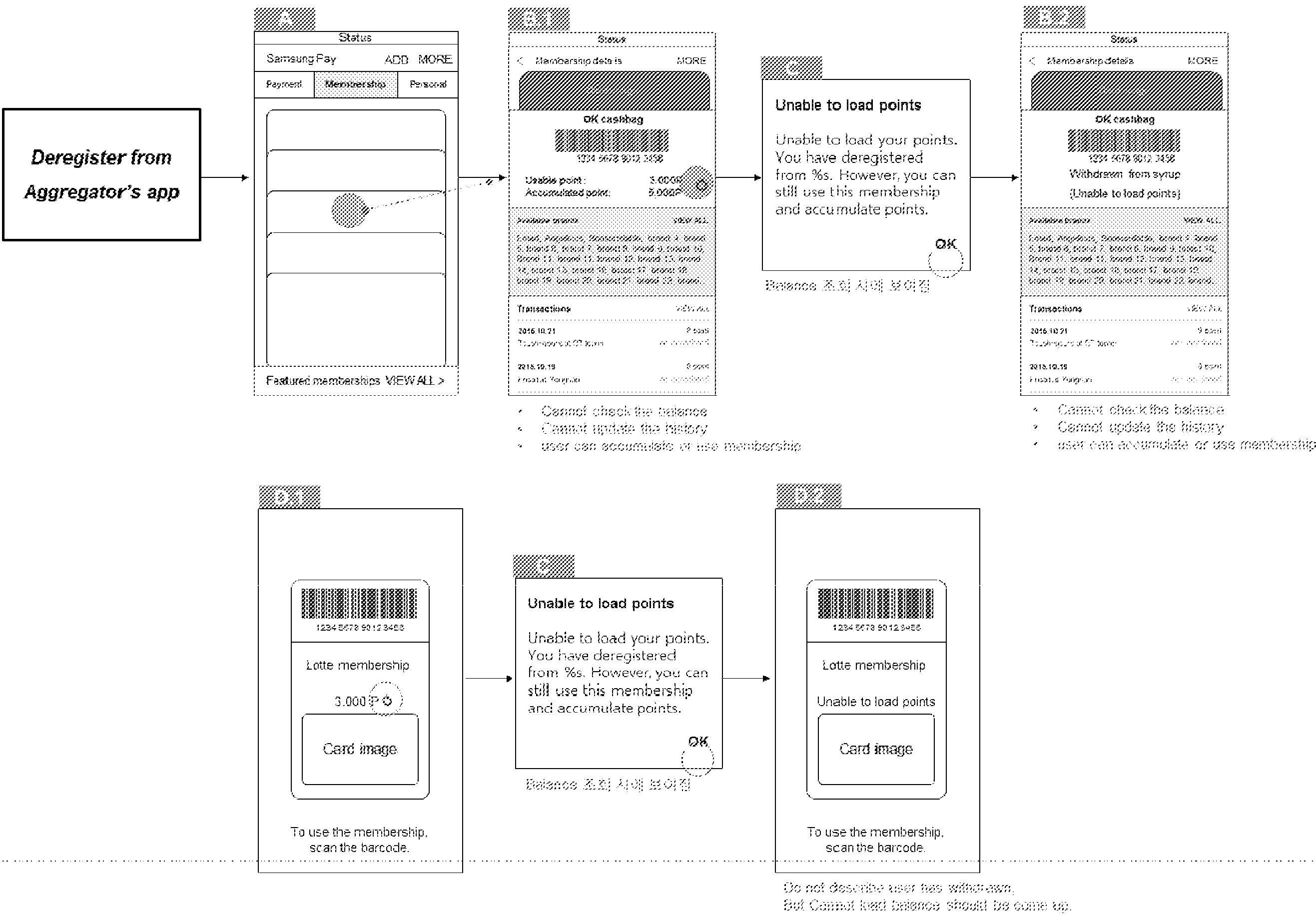

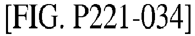

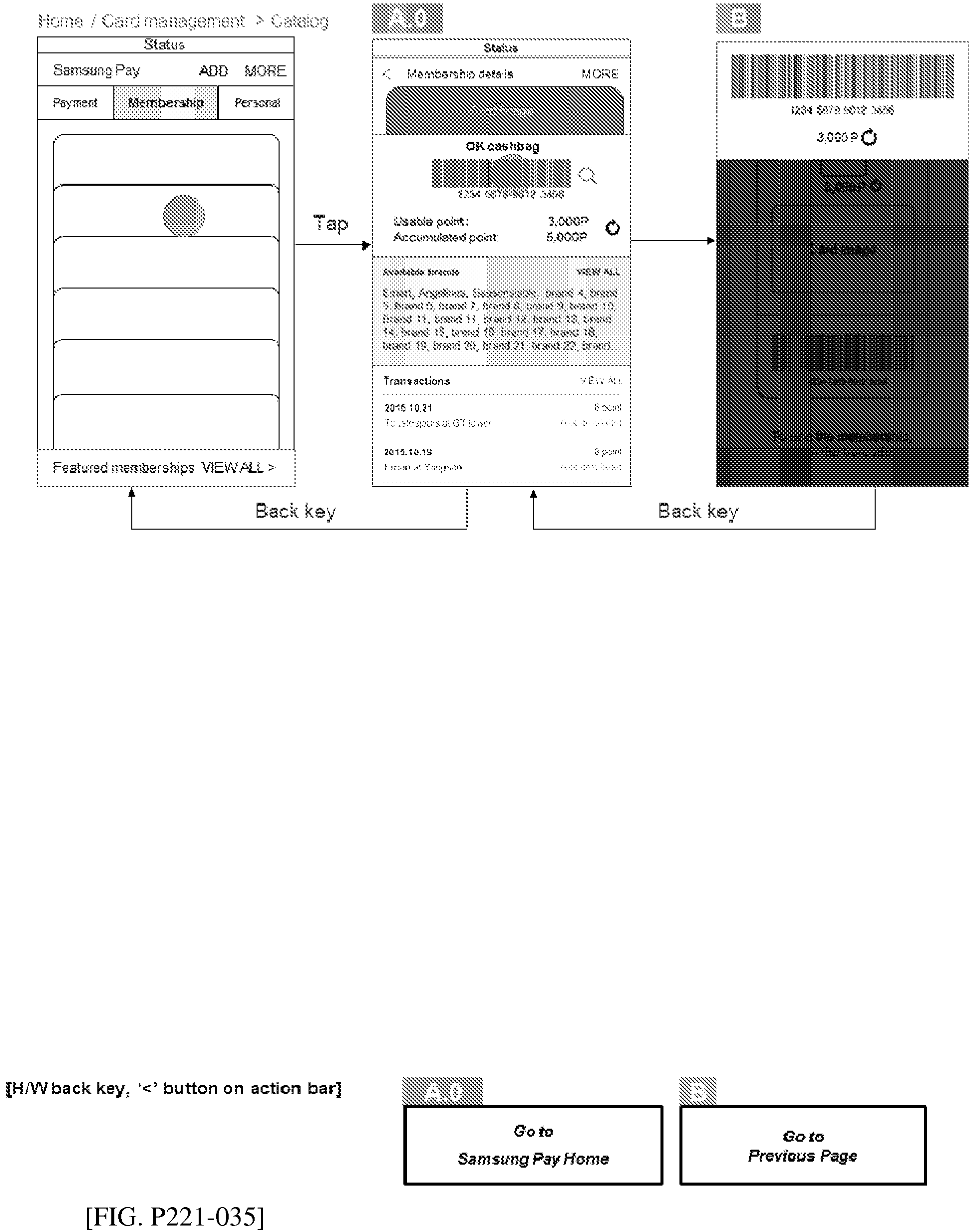

The electronic device may create and display a barcode of the corresponding membership card in order to supplement the use of the membership card. In addition, only the bar code may be displayed in the screen, or the bar code may be displayed together with the details of the membership card.

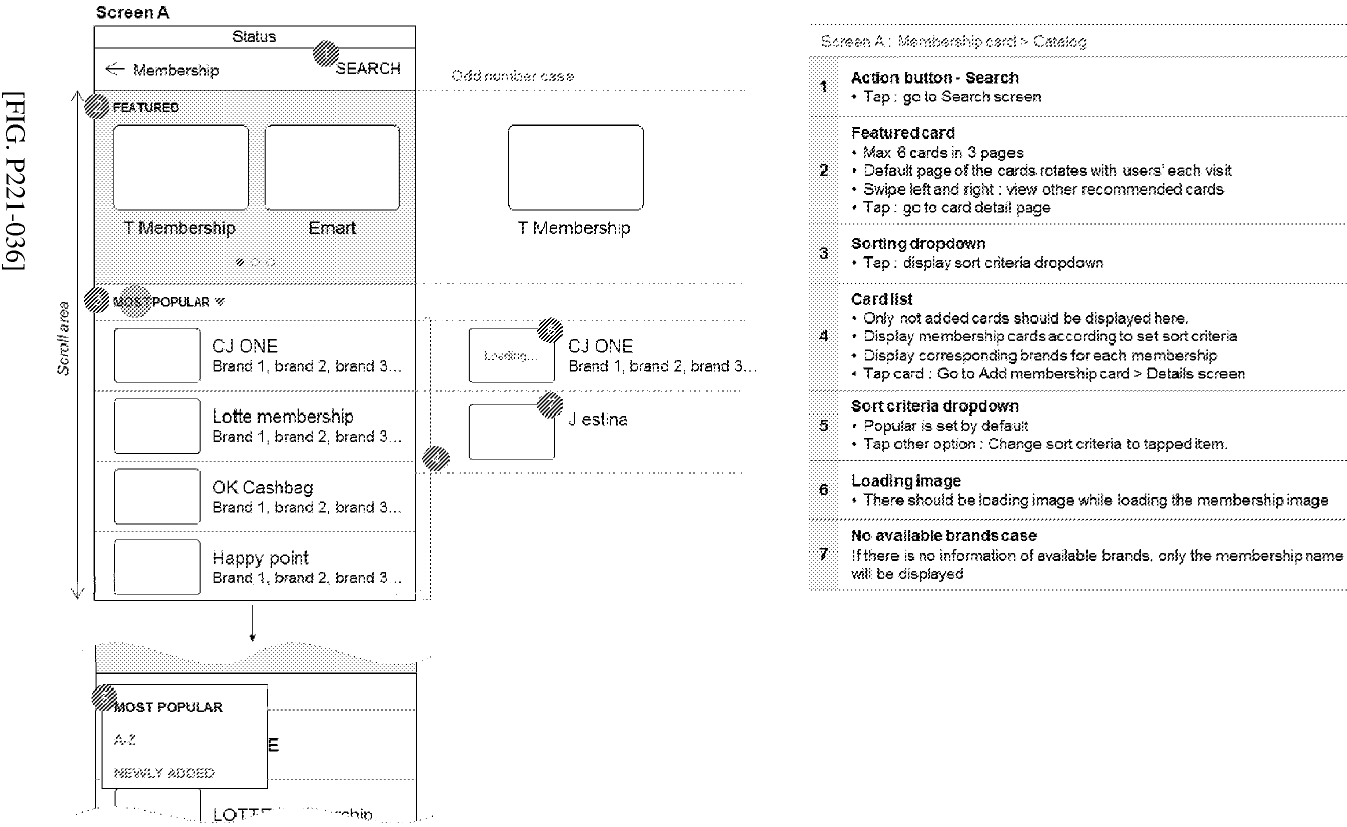

The electronic device may display the membership cards in the form of a catalog. The electronic device may show the membership cards in order of a popular card, alphabetically (A to Z), or a newly added card. The electronic device may separately display a featured card on the screen.

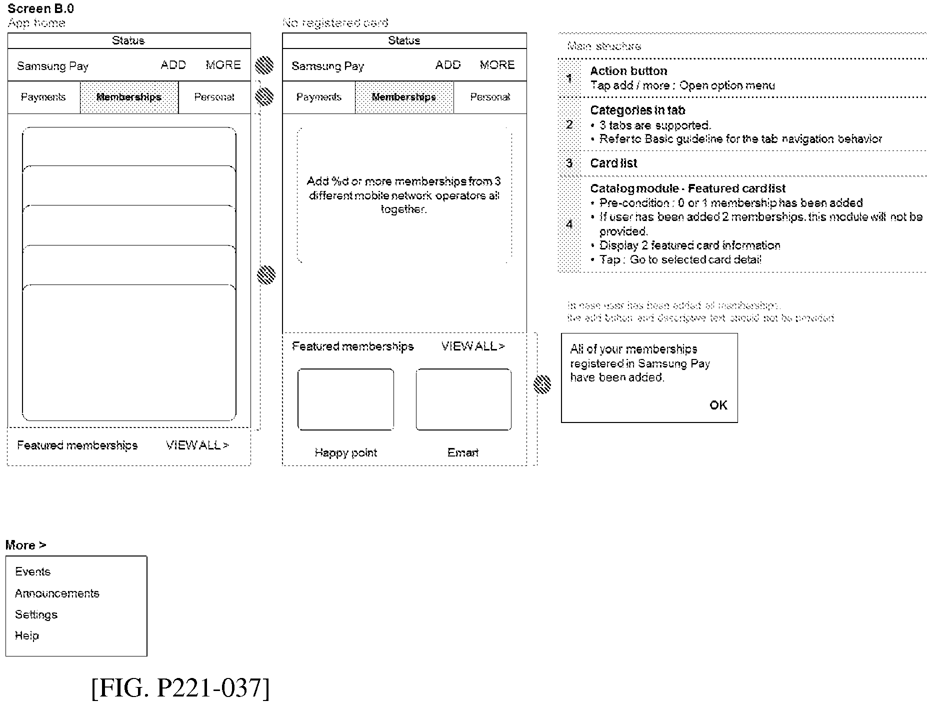

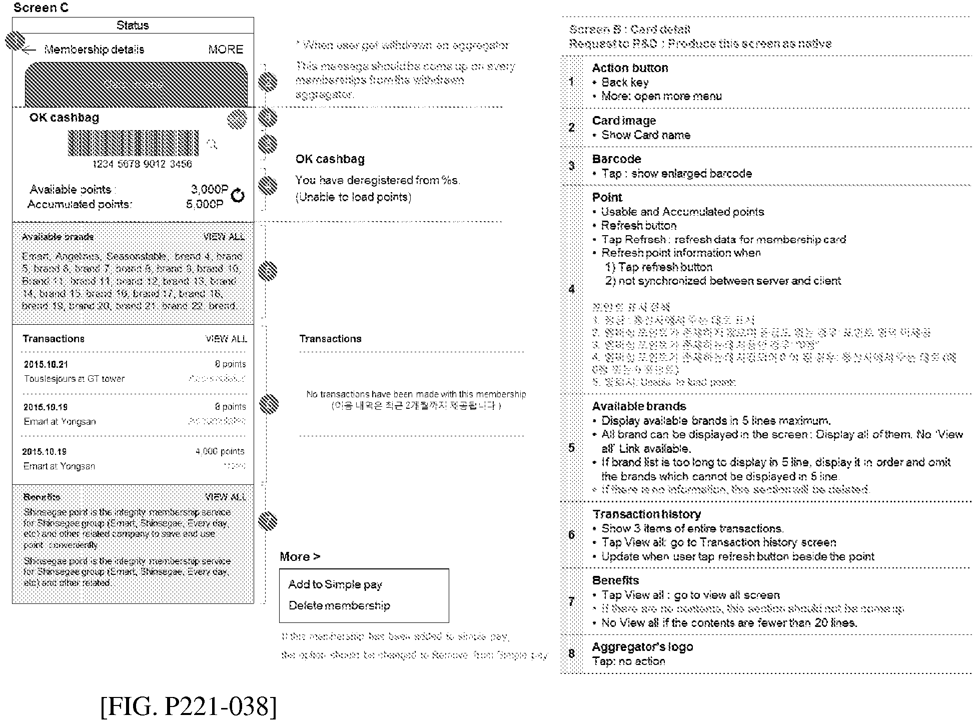

The electronic device may provide a menu for managing the membership card.The electronic device may provide a menu for managing the membership card. If the user selects a membership card for details in the screen, the electronic device may display the card name, the card image, a bar code, usable points, accumulated points, available brands, transactions, or benefit information as shown in diagram C. In the case where there are too many transactions to be displayed in the screen, the electronic device may display the same to the user through an extended screen. In addition, the detailed information may be different depending on the membership card, so different information may be provided according to the card.

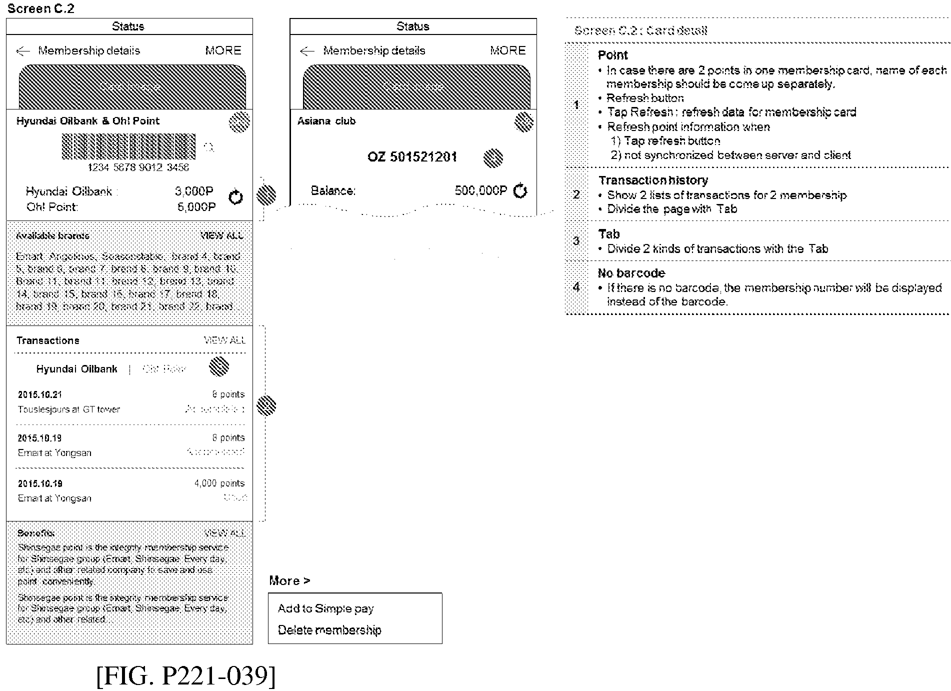

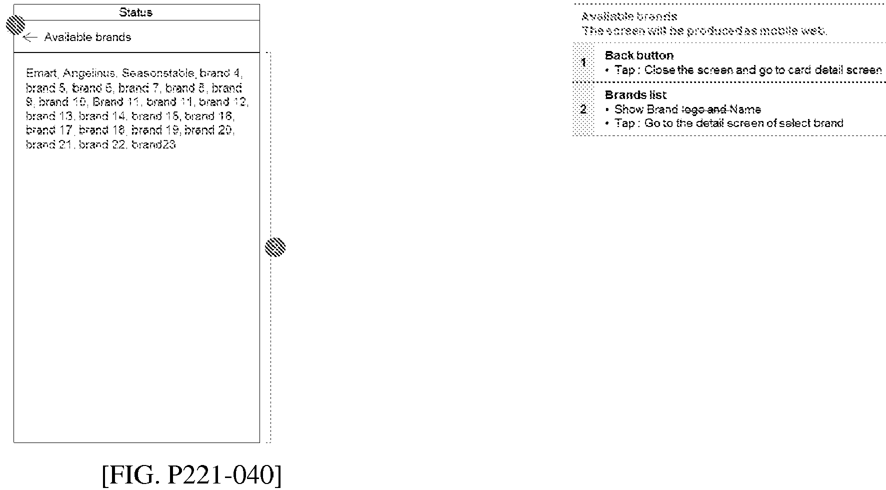

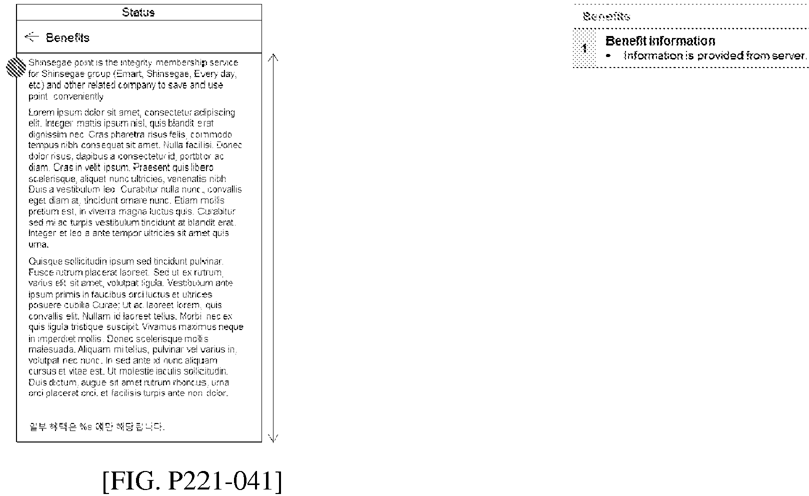

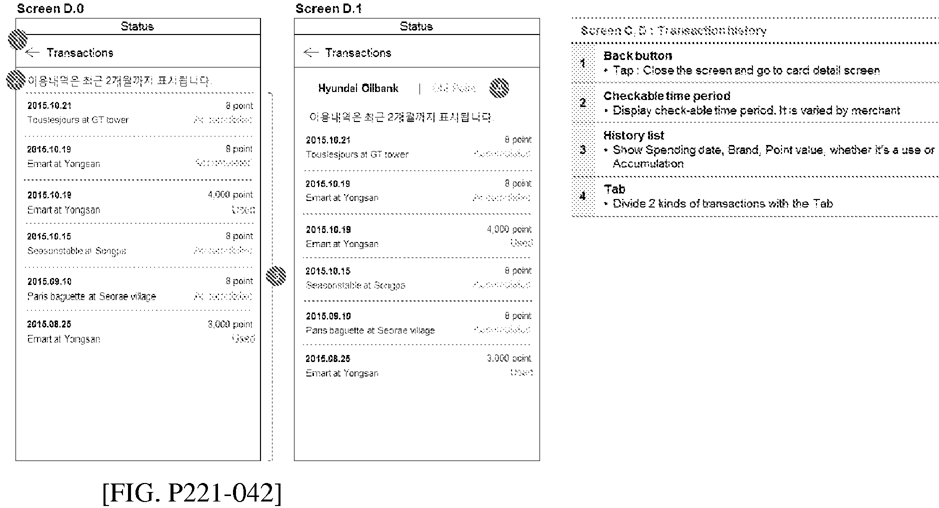

The electronic device may display the history of the transaction for a certain period of time.

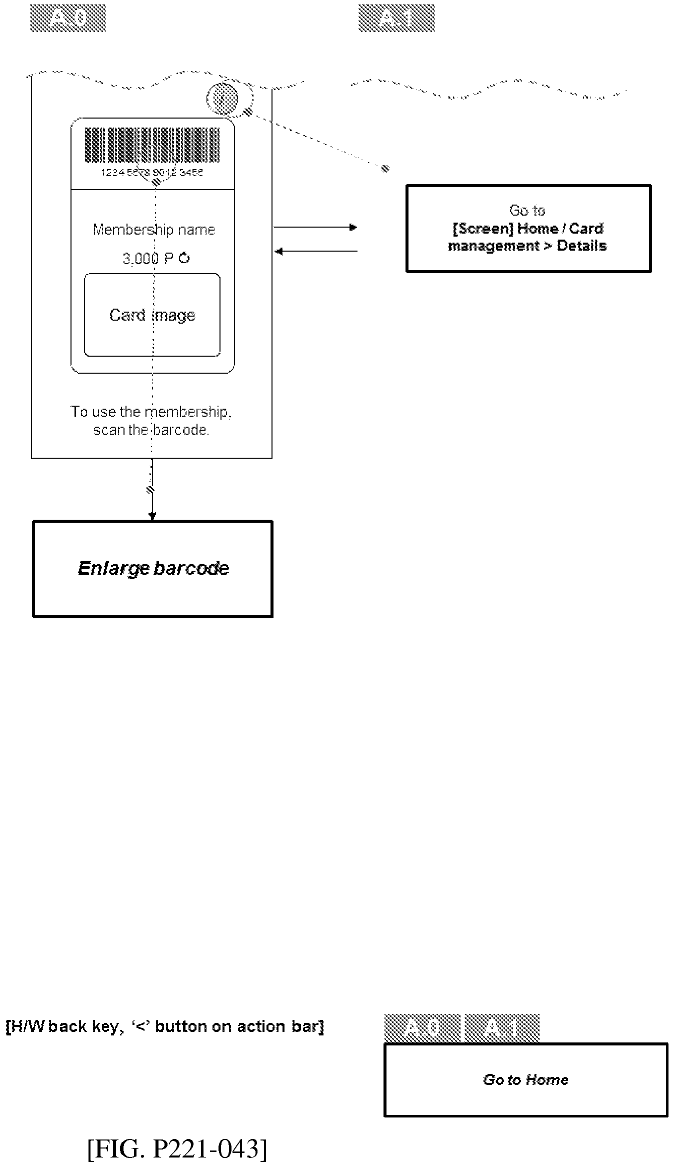

The electronic device displays the membership card in a Simple Pay mode. In this case, the electronic device may display a barcode, a card number, a membership name, points, a card image, or usage instructions of the membership card. The electronic device may provide a function of enlarging the bar code to be displayed. In addition, the electronic device may provide a function of displaying the details of the card.

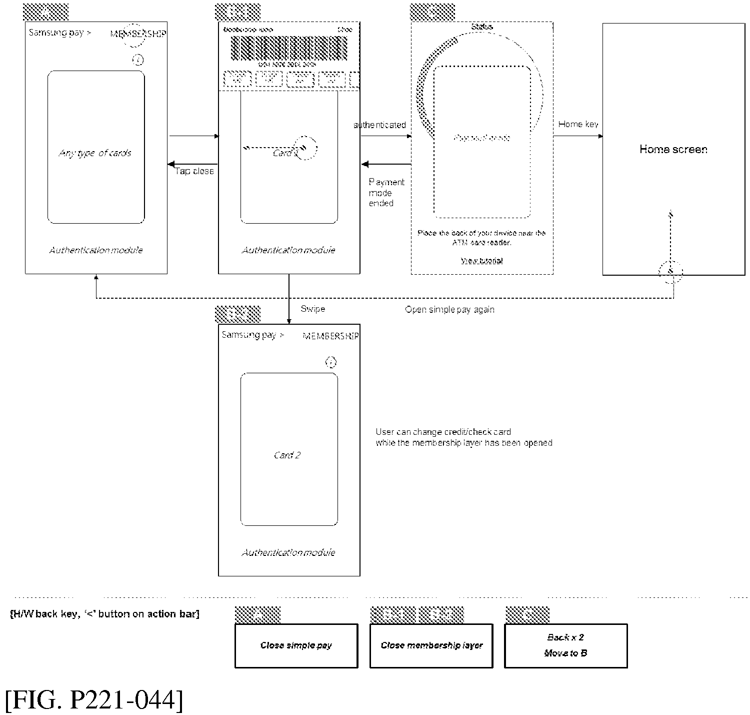

The electronic device may display a displaying portion that shows the barcodes of a credit/check card and a membership card to be used for payment in the Simple Pay mode. In this case, the membership card displaying portion may show membership names, barcodes, thumb nail images, or card numbers. In addition, the credit/check card to be used for payment may be replaced with another card by the user input while the corresponding displaying portion is shown. The barcode shown in the membership card displaying portion may be replaced with another membership card according to the user input.

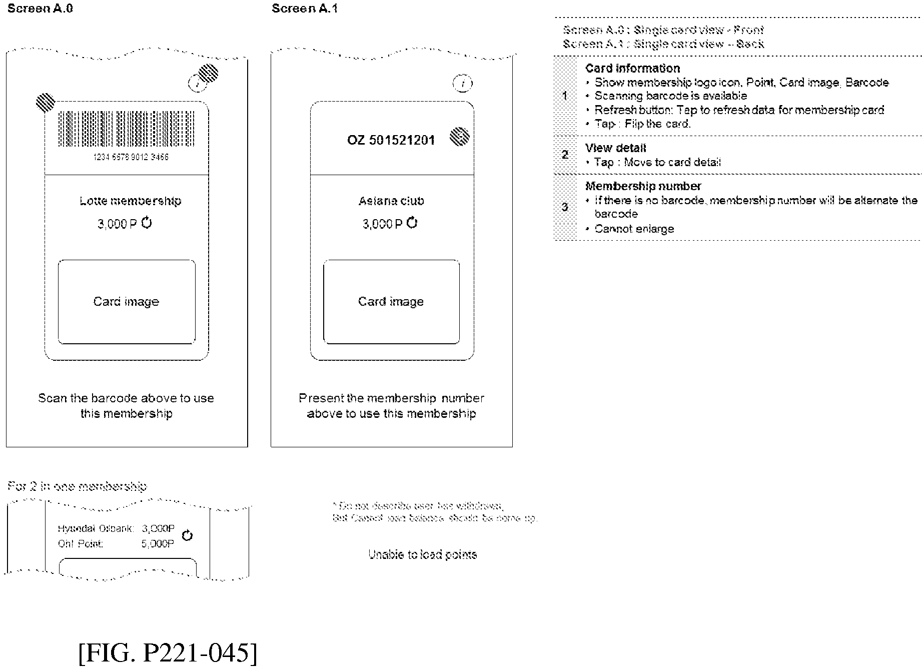

The electronic device may provide information, such as a membership number, as well as the barcode. In addition, the information may be provided in the form of a radio wave that can be accepted by the equipment, such as a POS device.

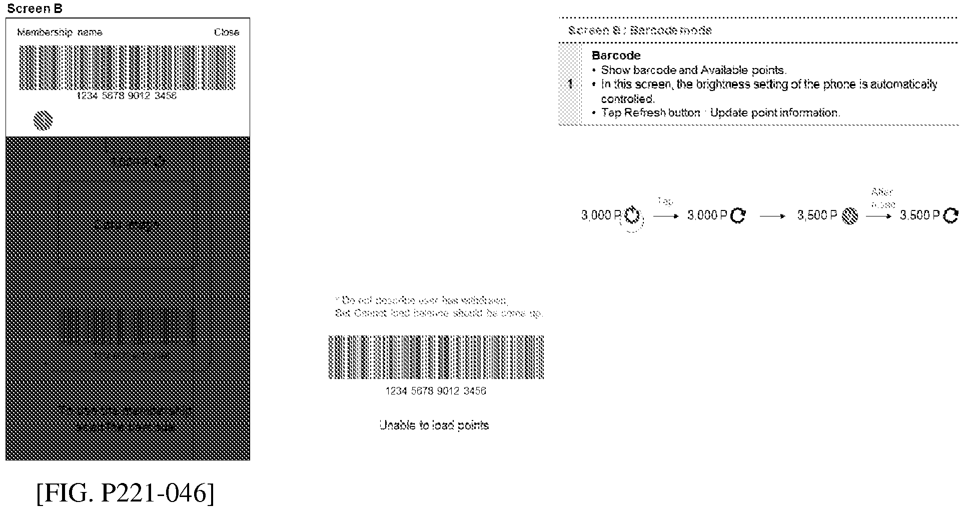

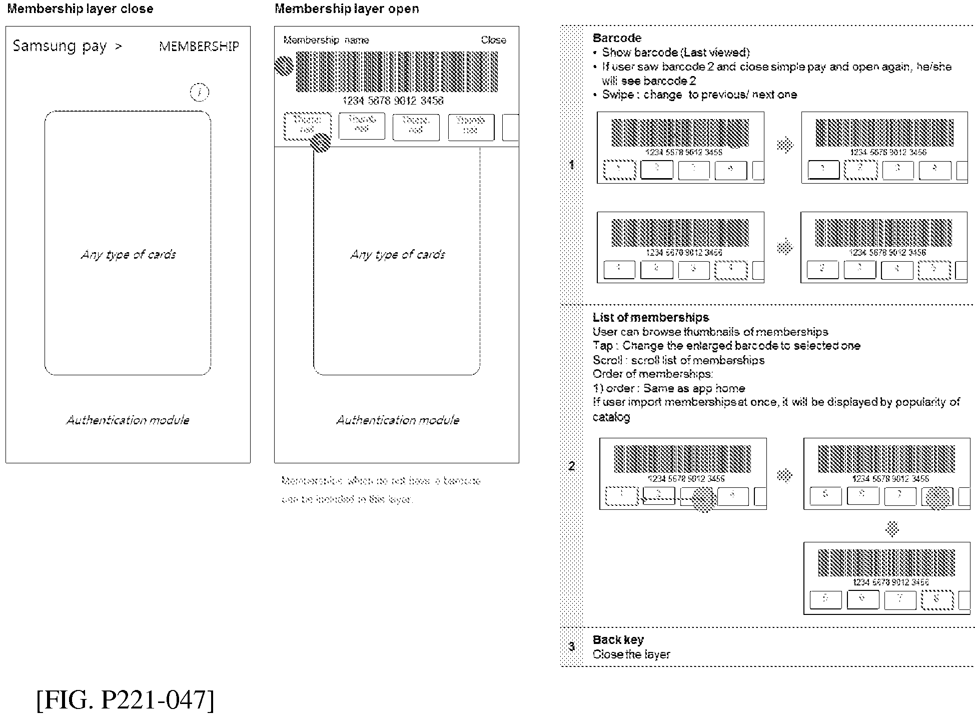

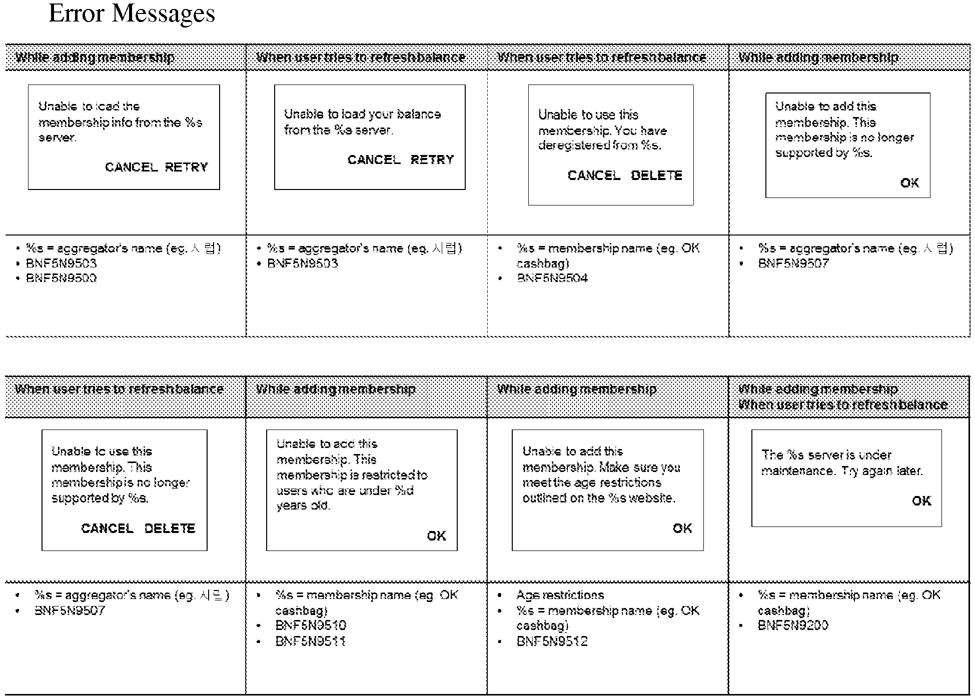

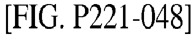

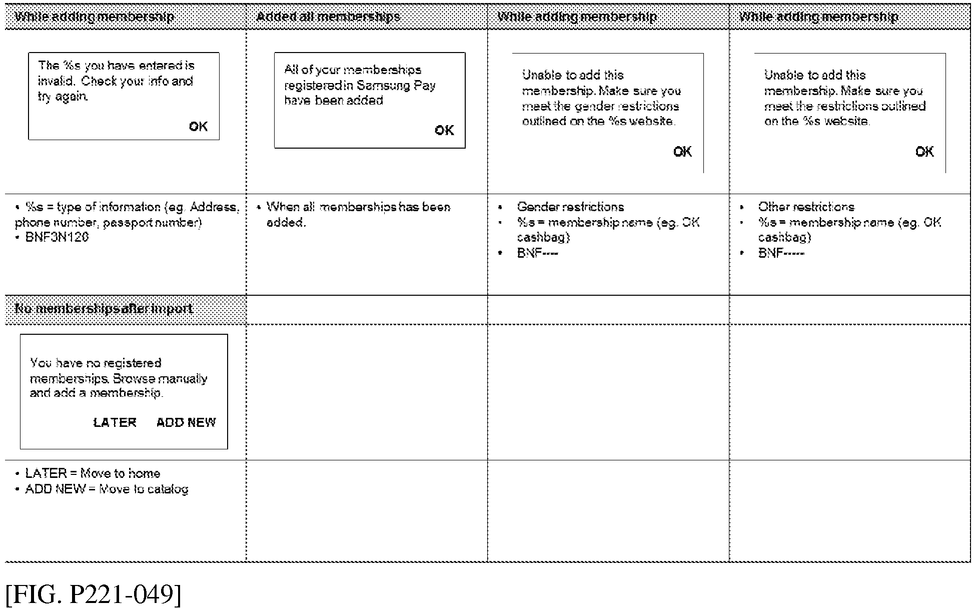

The electronic device may show an error message as above.

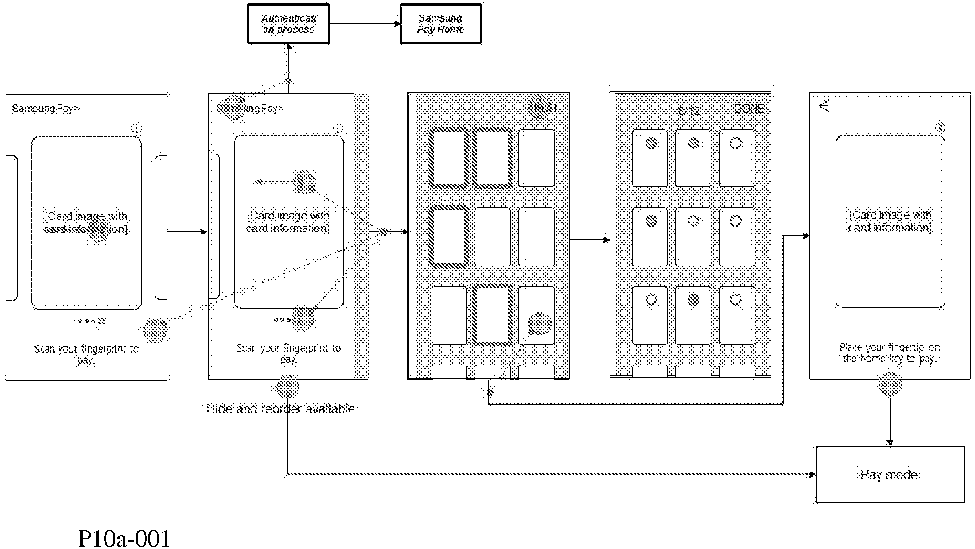

According to an embodiment of the present disclosure, the electronic device may display images of one or more cards among the cards that are registered in the electronic device in predetermined positions in the Simple Pay screen, and may convert the currently displayed card image to another card image based on the user input (for example, Swype) to then be displayed. As another example, the electronic device may provide more card images that are registered in the electronic device in a single screen in response to a specific input that is received from the user in the Simple Pay screen. The certain input may include at least one of a swiping input in relation to the direction in which no more card images exist in the Simple Pay screen, a user input corresponding to one or more specified edge areas among a plurality of edge areas in the screen, or a user input for a certain indicator or icon, which is displayed to switch to a function of displaying more card images in a single screen. The certain input may include a specified gesture input that includes a multi-touch input, such as a two-finger swiping input in a specified direction or a pinch-in or pinch-out input. The certain input may include a gesture input that is created by sensors of the electronic device, which recognize the movement information received from the user, such as an acceleration sensor, a geomagnetic sensor, a gyro sensor, or an optical sensor.

According to an embodiment of the present disclosure, the screen, which provides more card images, may provide all of the card images that are registered in the electronic device, and each card image may be smaller than the card image that is displayed in the Simple Pay screen. As another example, if the display of all the provided images exceeds a single screen, the electronic device may display a screen on which the user can scroll.

According to an embodiment of the present disclosure, the electronic device may display some selected cards to be distinct from other non-selected cards in the screen that provides more card images. The operation of displaying the cards to be distinct may include displaying a border, an icon, or a badge image, which is specified in relation to the selected card image, to be augmented, or differently displaying at least one of the color, the size, the brightness, the saturation, and the transparency of the selected card image.

According to an embodiment of the present disclosure, the cards may be selected by the user. The electronic device may provide the image of the card selected by the user from among the cards that are registered in the electronic device in the Simple Pay screen. As another example, the electronic device may determine the order of the card images that are provided in the Simple Pay screen based on the information on the cards that are selected by the user from among the cards that are registered in the electronic device. As another example, the electronic device may determine the card images that are provided in the initial screen in response to the operation of executing the Simple Pay based on the information on the cards that are selected by the user from among the cards that are registered in the electronic device.

According to an embodiment of the present disclosure, the electronic device may provide an edit screen or an edit screen link by which the user can update or change the selected cards, through the screen that provides the more card images. For example, the user may change or update the selected cards in the edit screen, based on the user input.

According to an embodiment of the present disclosure, the cards may be selected by the electronic device. The cards, which are selected by the electronic device, may be cards that are determined to be recommended to use through a variety of data collection.

For example, the electronic device may determine the recommended cards based on affiliated store information in relation to the location of the user, the amount of usage for a specific period of time, the total amount of the card usage, a usage limit, a point accumulation rate, or discount conditions. In addition, the electronic device may include or store the past transaction in the payment application or a cloud, and may check and analyze the purchase pattern from the history in order to thereby determine the recommended cards.

The electronic device may recognize the affiliated stores by identifying a unique ID of each store and each website in the case of online stores through the payment application. In addition, the electronic device may identify the offline stores based on the data that is contained in the frame received from a beacon of Bluetooth or BLE, or a network base station of 3G or LTE, and may obtain the location and affiliated store information through a positioning technique, such as a GPS or an indoor LBS. The electronic device may identify event, discount, or point earning information in relation to the affiliated store information that is pre-stored or received from the outside, based on the obtained affiliated store information.

According to an embodiment of the present disclosure, the electronic device may provide, in the Simple Pay screen, an image of the card that is selected by the electronic device from among the cards that are registered in the electronic device. As another example, the electronic device may determine the order of the card images that are provided in the Simple Pay screen based on the information on the card that is selected by the electronic device from among the cards that are registered in the electronic device. As another example, the electronic device may determine the card images that are provided in the initial screen in response to the operation of executing the Simple Pay based on the information on the card that is selected by the electronic device from among the cards that are registered in the electronic device.

As another example, the selected card may be the card that is frequently used through the payment application in the electronic device; most recently used; frequently used in relation to the current location; most recently used in relation to the current location; frequently used in relation to the current time; or most recently used in relation to the current time.

According to an embodiment of the present disclosure, the electronic device may receive a user input for each card image in the screen that provides the more card images. In response to the user input for one or more card images of the more card images, the electronic device may display the Simple Pay screen that provides the card images that are related to the corresponding card, based on the card information corresponding to the user input.

According to an embodiment of the present disclosure, the electronic device may group the more card images according to their attributes, and may provide the same in the screen that provides the more card images. For example, the card images may be grouped and provided according to the type of card, such as payment cards, membership cards, personal cards, or withdrawal cards. As another example, the card images may be grouped and provided according to the type of purchase, such as a dining card or a petrol card. As another example, the groups may be created by a user input, and the cards may be classified according to the groups through the user input, and to then be provided.

According to an embodiment of the present disclosure, when the payment application is executed, a card for payment may be selected and the user verification may be performed through the fingerprint recognition. After the user verification, the user may bring the device, of which the payment application is in progress, to the POS device, and may encrypt the token that is stored in the device or is newly issued through a payment server in order to thereby transmit an NFC or MST signal from the device. If it is determined that the device is shaking more than a predetermined degree as a result of the detection by sensors, such as an accelerometer or a gyro-sensor, the payment mode may be temporarily stopped, and afterwards, when the device is motionless, the payment mode may resume. In the case of the pause of the payment mode, the MST and NFC signal of the data containing the token through the server may be stopped.

In addition, the user does not directly proceed with the payment through the POS device, and a clerk or cashier may proceed with the payment by using the device through the POS device instead. At this time, the POS device may be located near, or far from, the user. The terminal may sense the movement distance of the user through a movement detecting sensor, such as an accelerometer, a gyro-sensor, or a pedometer, and if it is determined that the user has moved more than a predetermined distance, the terminal may switch into a protection mode. In the protection mode, the payment mode may be temporarily stopped, and the terminal may be in the locked state in order to prevent others rather than the user from using the terminal for payment or other purposes.

In this case, the user may release the protection mode through the fingerprint recognition, the PIN input, or the face recognition to then return the terminal to the payment mode again. Once the protection mode is released, the payment may be normally conducted again. FIG. P103-012 is a flowchart showing the operation described above.

In the case where the user gives, for a while, the terminal to the clerk for payment, it is possible to prevent theft by allowing the clerk to not take the terminal away, and when the terminal is in a big motion, the transmission of the data containing the unnecessary token may be prevented.

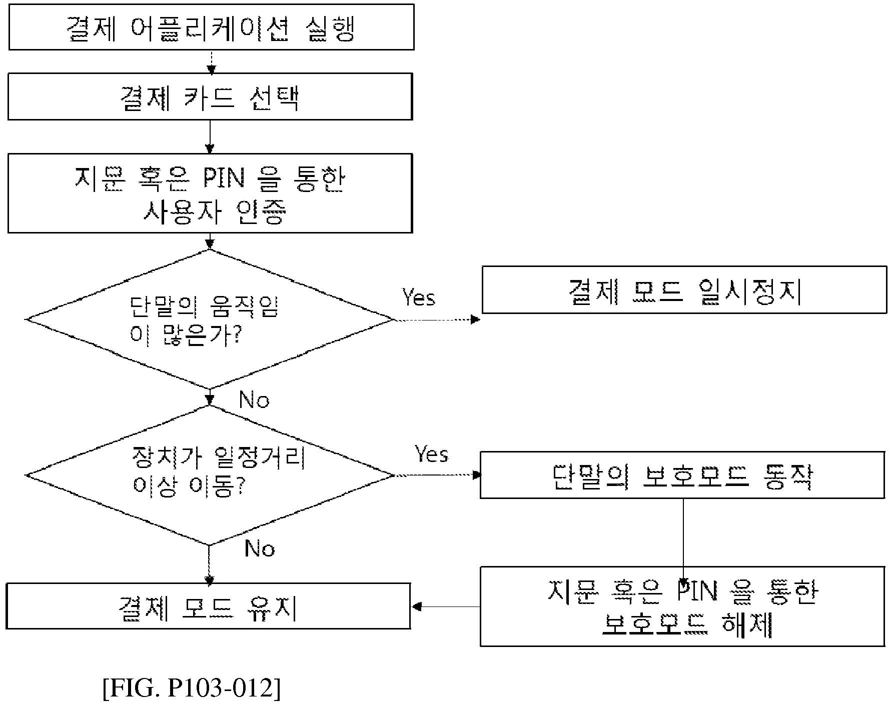

The movement and location may be determined in various ways. The distance may be calculated according to the reception strength of a signal received from an AP of the WiFi and BLE (BT) in the store and a connection lost thereof. It may be determined whether or not the terminal enters, or is out of, a specific geofence by using GPS or Cell information. In addition, the location may be determined by utilizing crowd sourcing information by means of a nearby terminal and an IOT device.

The cards, which can be registered in the application, may include various payment types of cards. For example, cards may be included, which support the MST or NFC payment method and support the deposit and withdrawal through the ATM. In the case of using the card in the offline store, a motion to use the card may be different depending on the type of card. For example, the NFC card may come into contact with the POS device for payment, and the MST card may be swiped through the POS device for payment. As described above, the card usability in the offline store may be shown in the form of an animation, and the animation of the card may be differently provided on the display of the terminal according to the payment type of card. The payment methods may be displayed by different animations in order to thereby show a variety of card usability.

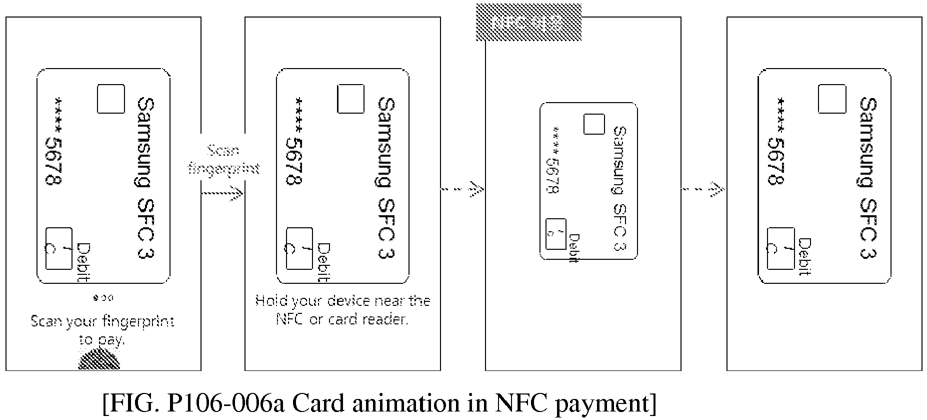

FIG. P106-006b may be a diagram showing an embodiment of the animation of the MST payment card that is displayed on the terminal. In order to indicate the motion of swiping the card through the MST POS, the animation may show that the card image moves up and down along the edge of the display.

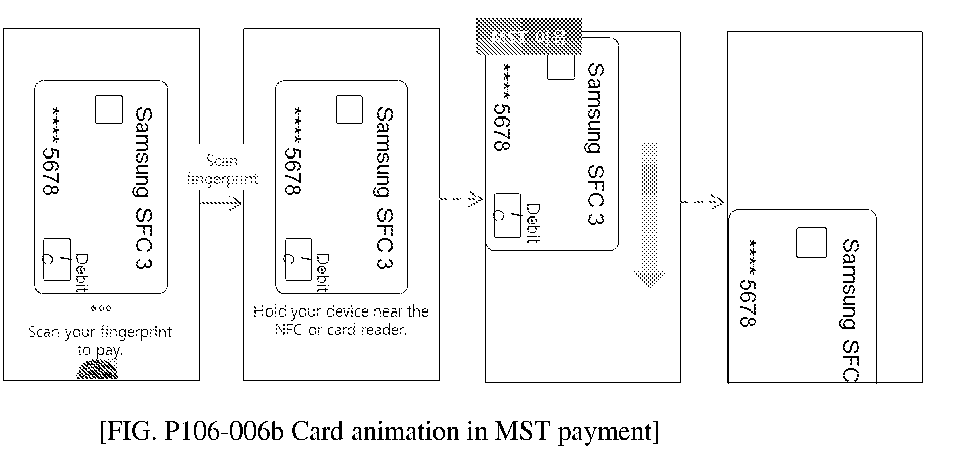

FIG. P106-006c may be a diagram showing an embodiment of the animation of the card that is used for the ATM, which is displayed on the terminal. In order to indicate the motion of inserting/taking out the card into/from the ATM, the animation may show that the card image goes up to the top of the display and goes down to the bottom thereof.

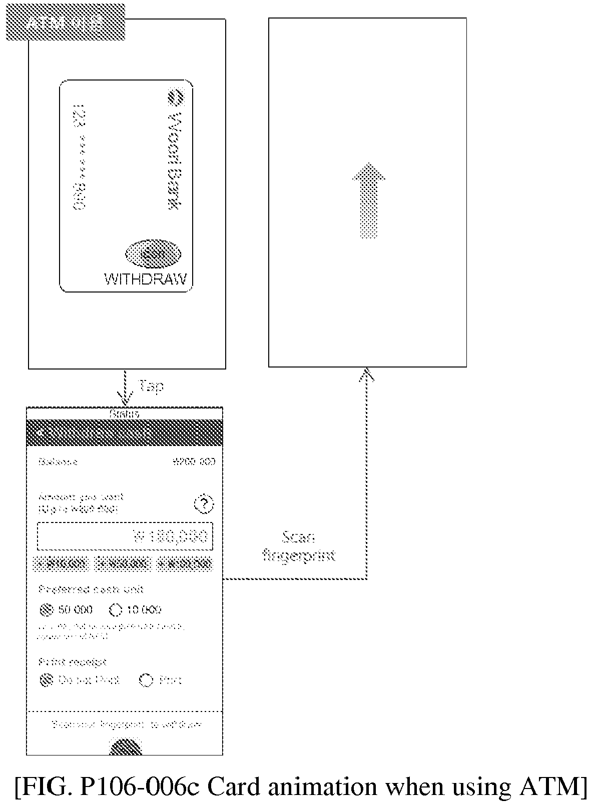

The above-mentioned card image animations are examples that are displayed on the display by using gestures based on the offline card usage, and the disclosure is not limited thereto. In addition to the above-mentioned embodiments, other animations to show that the cards may be further provided according to the payment method.

### 4.9.4 Lock setting/Personal card lock

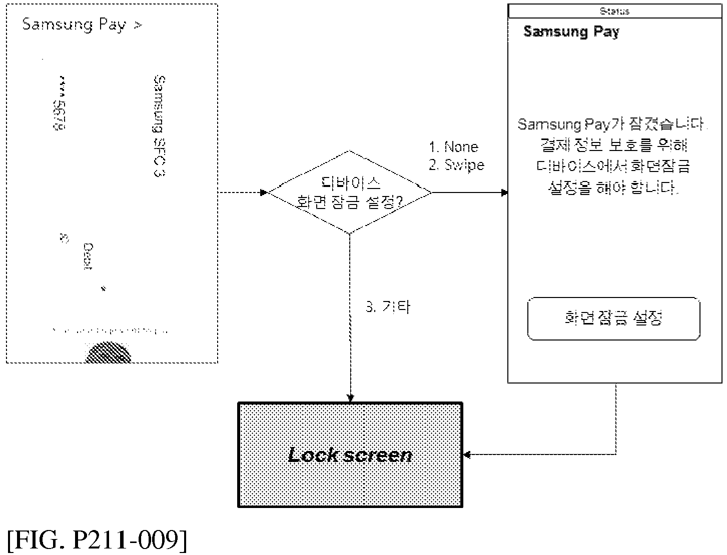

The card application may be executed according to the user input in the screen lock state, the screen-off state, or the idle state for the simple card payment. The user input may include an icon touch input or a specific gesture.

After the card application is executed, when the user enters the main screen of the card application for the card management, a locked screen of the terminal may be displayed. If the security level of the screen lock configuration by the user is lower than a reference level of the payment application, the additional verification may be required. For example, if the user's screen lock configuration is "None" or "Swipe," the user may be required to perform the additional verification. If the security level of the user's screen lock configuration is lower than the reference level of the payment application, a pop-up window may be displayed to allow the user to configure the security level of the screen lock to be more than the reference level of the payment application.

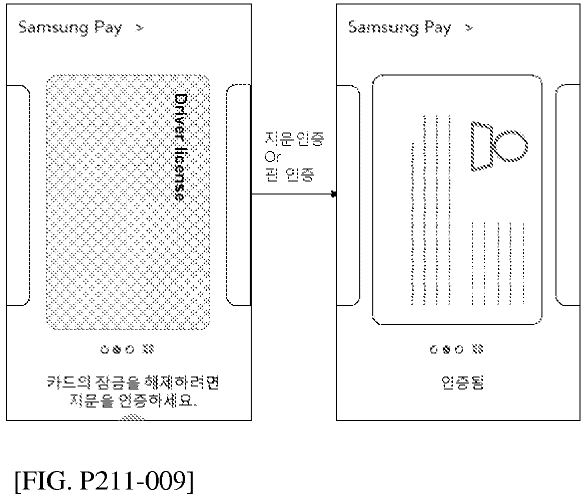

If the security level of the user's screen lock configuration is lower than the reference level of the payment application, some cards may not be displayed in the card list screen of the card application. If the security level of the user's screen lock configuration is lower than the reference level of the payment application, some cards may be displayed such that some of the card information thereof is deleted from the card list screen as shown in the drawing.

In the case of the cards that are removed from the card list screen, or the cards of which some information is not displayed, the card list or the whole card information may be displayed through the additional verification. The level of the additional verification may be greater than the reference level of the card application. The additional verification method may include the PIN verification or the verification using the biometric information.

In another embodiment, when the security level of the user's screen lock configuration is higher than the reference level of the card application and the locked state by the user is released (i.e., in the idle state), all information on all the cards may be displayed. When one or more of the criteria above are not satisfied, the card information may not be displayed or some of the information may not be displayed.

In an embodiment of the present disclosure, the user may configure such that a specific card may be displayed only after the user verification.

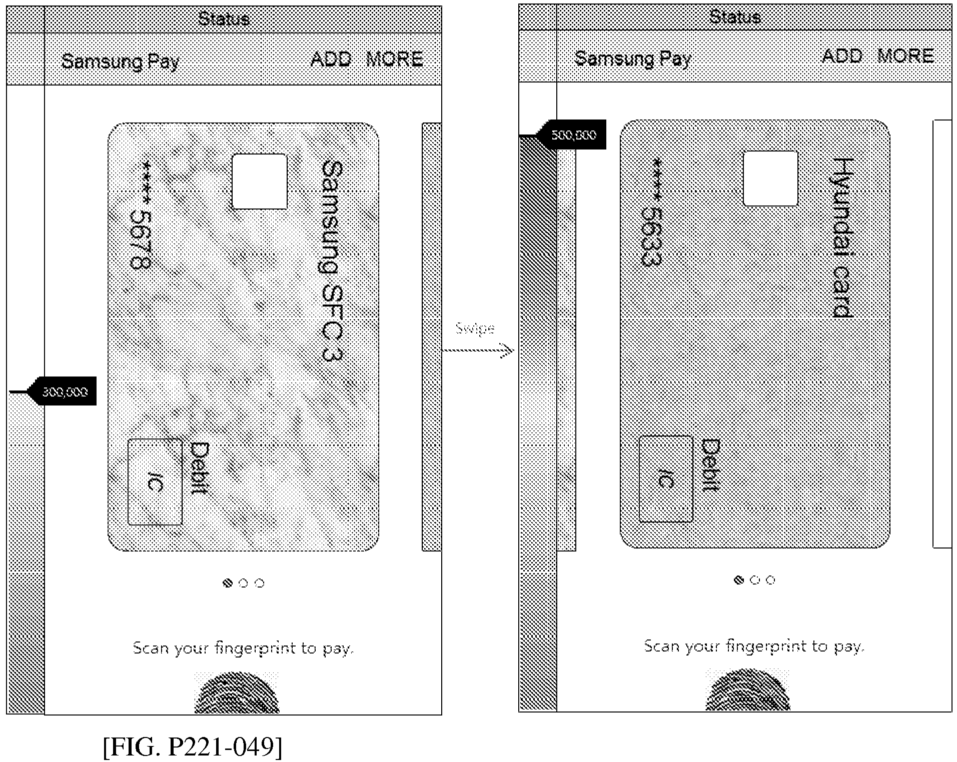

The electronic device may display a card usage limit and the amount of card usage until now for each of the registered cards. The card usage limit and the amount of card usage may be displayed on the basis of a payment date, a year, a month, a week, a date, or a user-specified period.

Information on the card usage limit and the amount of card usage may be received from the card company server to then be displayed, or may be displayed based on the payment information that is stored in the terminal. In addition, the corresponding information may be updated by a user's request; whenever any change occurs; periodically; or in another manner.

The electronic device may display the usage limit and the amount of usage of the registered card in the form of a graph instead of numbers. For example, the electronic device may display the card usage limit and the total amount of card usage by using a color temperature graph in the empty space on the left side in the screen. In this case, the electronic device may provide the user with a ratio of the amount of card usage to the card usage limit.

The electronic device may show a sum of the usage limits of all the cards that are registered in the payment application. In addition, the electronic device may show the amount of usage for each card in relation to the card usage limit. For example, in the case where Card A, of which the usage limit is KRW 1,000,000, and Card B, of which the usage limit is KRW 2,000,000, are registered in the payment application, the electronic device may separately display the total usage limit KRW 3,000,000, which is the sum of the usage limits of Card A and Card B, and the current total amount of usage for each card within the usage limit.

In the case where the user sets the target amount for a specific card, the electronic device may show whether or not the amount of usage reaches the target amount to the user.

The electronic device may show the required usage amount of a specific card to be used in order to receive benefits. For example, if Card A provides a benefit of free admission to an amusement park to the customer who made purchases of more than KRW 300,000 last month, the electronic device may show whether or not the total amount of card usage reaches KRW 300,000 beside Card A. As another example, if Card A provides a benefit of a communication charge discount to the customer who made purchases of more than KRW 300,000, except for petrol, last month, the electronic device may provide the total current amount of card usage, except for the petrol, to the user.

The electronic device may provide the total amount of available benefits and the total amount of benefits that have been provided for each month in relation to a specific card. For example, in the case where the total amount of available discount benefits of Card A for this month is KRW 30,000 and the user has actually received a discount benefit of KRW 10,000, the electronic device may display the total available amount of discount KRW 30,000 and the actual amount of discount KRW 10,000 beside the card image.

The payment application may show coupons that contain a variety of benefits and may be used for payment in addition to the card. The coupons may be displayed in various manners. FIG. P106-010 illustrates an embodiment showing a plurality of coupons that are registered in the payment application entry screen. As shown in the drawing below, the coupon, which is displayed on the top of the screen, may show detailed information, such as stores that accept the coupons, the discount amount, or the validity period, and brief information on the remaining coupons may be shown in the form of a list at the bottom thereof. The coupons, which may be shown in the form of a list at the bottom, may be scrolled on in order to view more various coupons, and a UX similar to the offline coupon may be provided by adopting an animation in which the catalog is foldable.

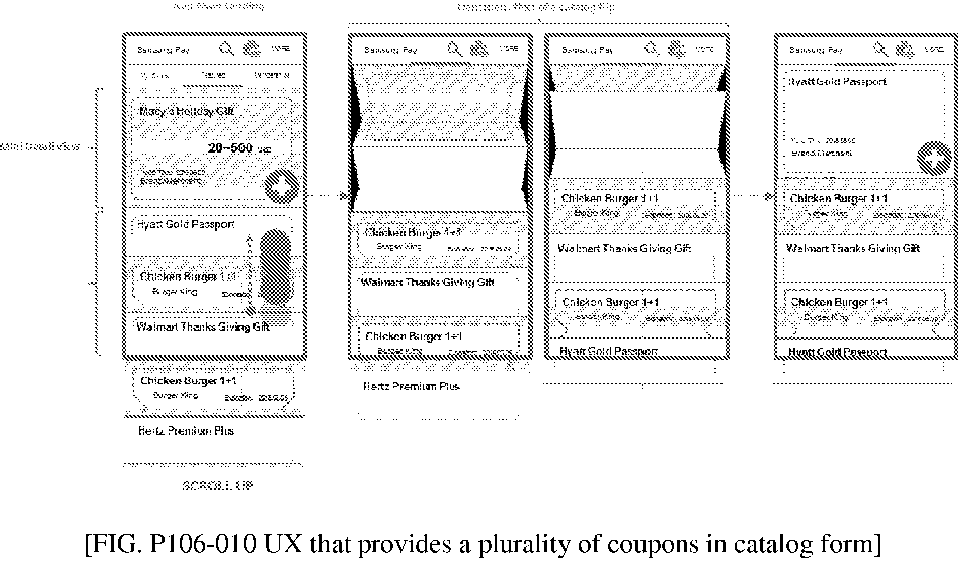

The drawing above is not limited to the coupons, and may be utilized to show other cards or menus. FIG. P106-011 illustrates a screen may show a plurality of gift cards, wherein information containing detailed information of a specific card is shown on the top of the screen and a list of a plurality of cards except for the corresponding card are shown at the bottom of the screen. If the user scrolls on the card list, the card information at the bottom goes up to the top, and the uppermost card may be displayed with detailed information thereof. However, the present disclosure is not limited to the gift card, and may be used for the membership card or other cards.

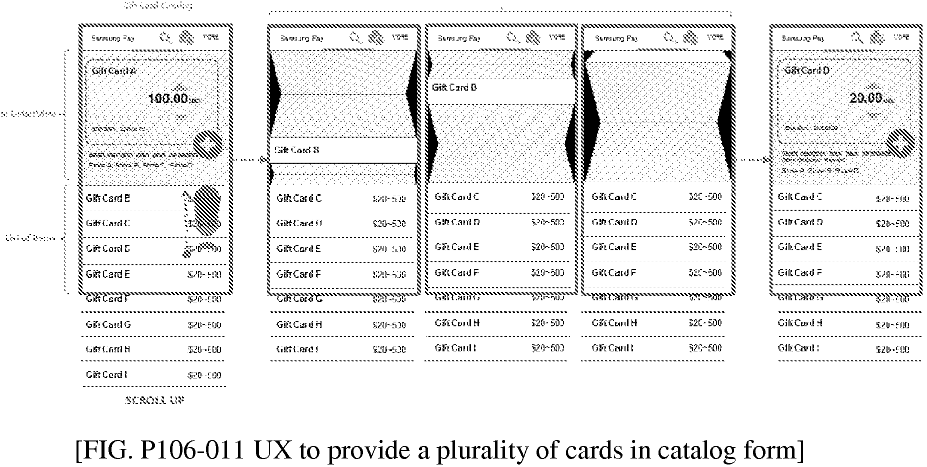

In order to check the detailed information in the card list of the drawing above, the user may select and check the card in the list as shown in FIG. P106-012.. When the user scrolls on the card list, the animation may be shown in a similar manner as turning the pages of the catalog, and when the user selects a specific card, detailed information thereof may be provided.

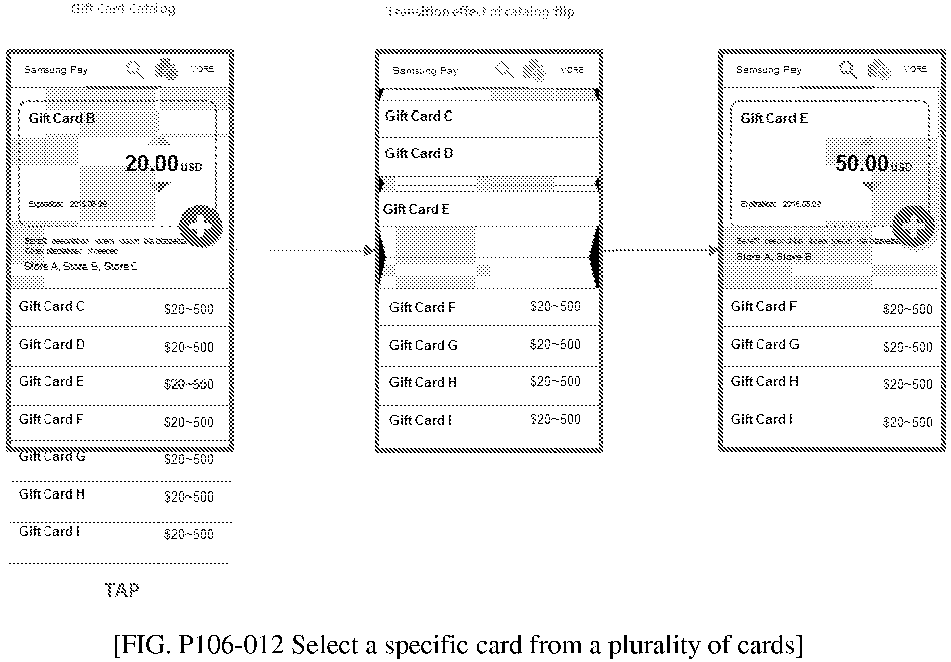

In the drawing above, various coupon/card benefits may be identified through the scrolling up and down, and other benefit information, such as coupons/membership/gift cards, may be provided through scrolling left and right. FIG. P106-013 shows an embodiment to check other benefits, wherein the screen showing the membership information may be converted to a screen showing the gift cards (i.e., another menu) by scrolling left and right on the same. In this case, the animation may be displayed to the user in a similar manner as turning the pages of the offline catalog.

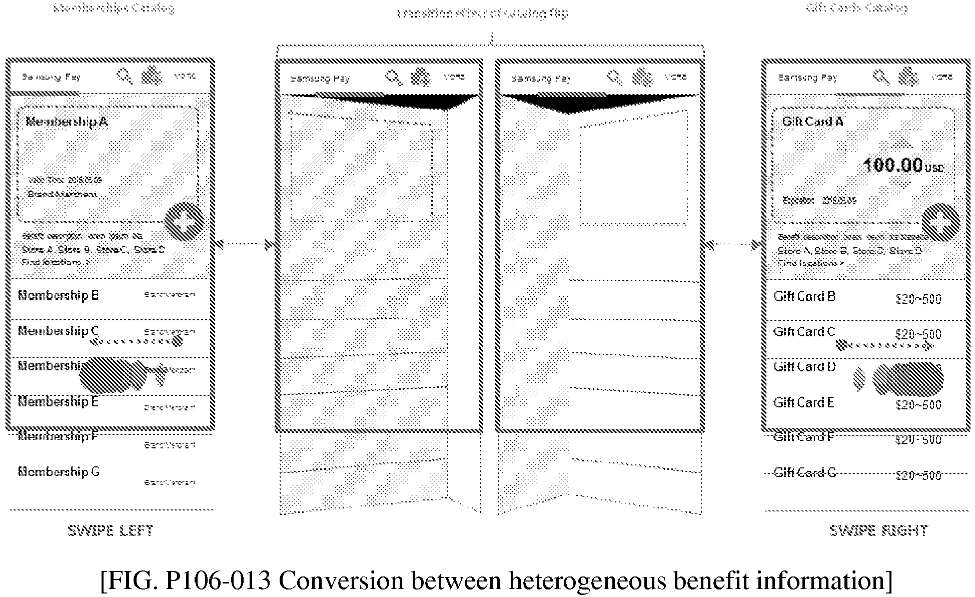

### 4.9.7 Add to Simple Pay

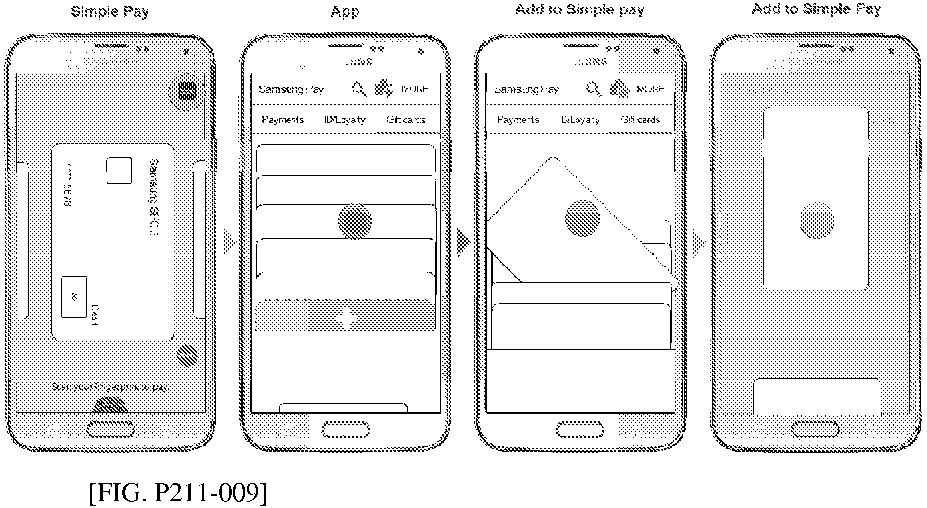

All the cards that are registered by the user may not be displayed in the card list screen for payment (payment card list). The payment card list may contain one or more cards among all the cards based on information that is configured by the user or is collected by the terminal through the sensors. In addition, the order of the cards in the payment card list may vary based on the user's configuration or the information that is collected by the terminal through the sensors.

It is possible to define a user input to switch from the card list screen for payment to the entire card list screen. The user input may be at least one of the selection for a specific icon, a predetermined motion of the terminal, or a certain input that is measured by the sensor of the terminal.

The card list screen for payment may be added by selecting one from the entire card list. When the user presses, for a while, one card among the entire card list, detailed information on the card may be displayed. Alternatively, if the user selects one card and makes a gesture of taking it out, detailed information on the card may be displayed. The operation of selecting the card and displaying the detailed information may be shown such that the card rotates in a similar manner as taking the actual card from the wallet.

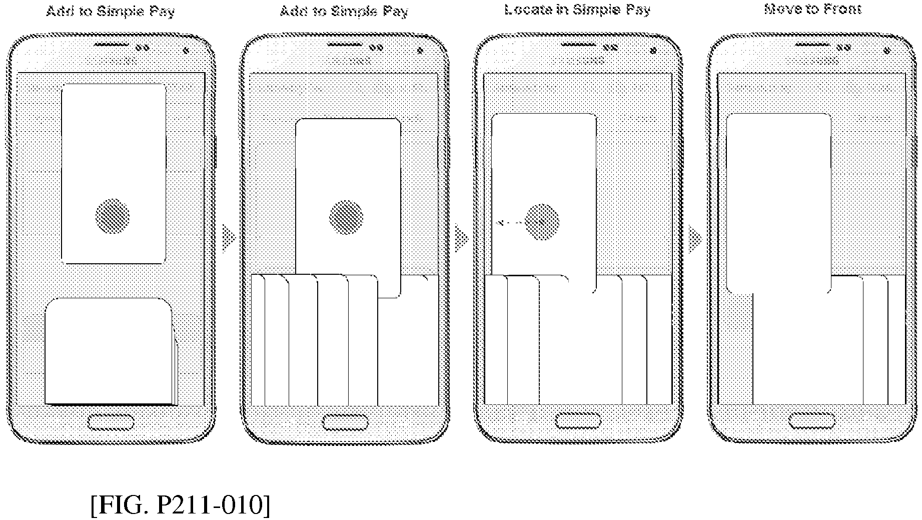

The card of which the detailed information is displayed may be added to the payment card list. In an embodiment of the present disclosure, the user may determine the order when adding the card to the payment card list. The order may be determined by selecting one card and moving the same to a desired position in the existing payment card list and then releasing the selection by the user. In this case, in order to identify the position where the card is placed, at least one of the shape or size of the front or behind card may be changed. Detailed information of the next card of the position where the card is placed may be displayed, or the display range of the card may gradually increase.

In an embodiment of the present disclosure, if the card is selected again after the card is placed in the card addition screen, the shape of the card may be deformed in order to thereby inform the user of the selection of the card. The card may be deformed such that the area of the card increases or the position of the card is changed.

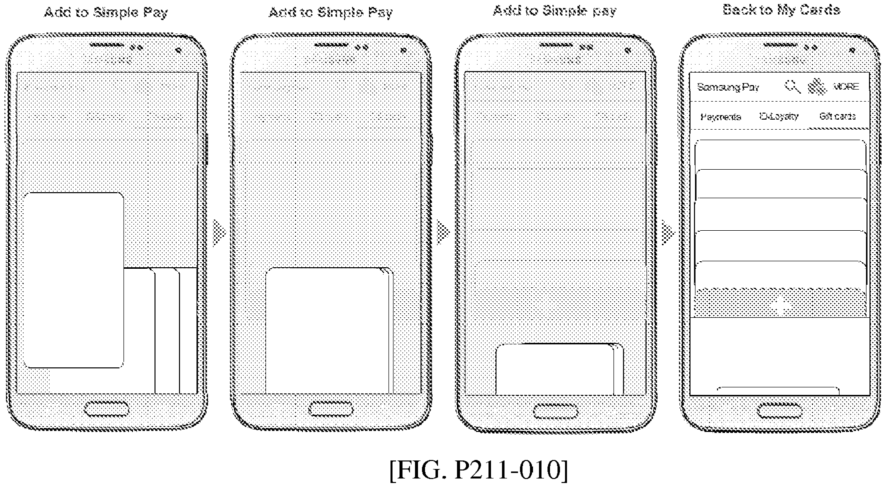

If the positioning of the card is completed, the screen may switch to the entire card list screen again. In this case, if no input is received for a specific period of time, if a predetermined user input is received, or if the selection of the card is released, the screen may switch to the entire card list screen.

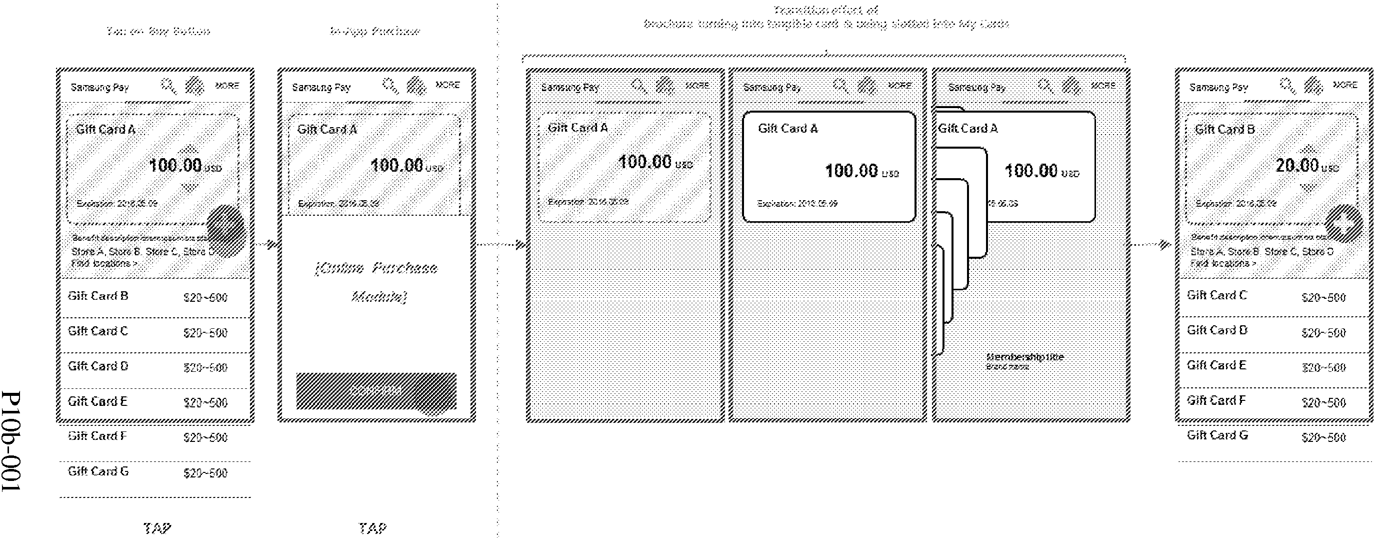

The electronic device may provide a list of available cards (i.e., registered or stored cards) to the user through a My Card screen in the payment application. As another example, the electronic device may receive, from the outside, list information on the cards that are not registered or stored in the electronic device but can be used through the registering or storing operation, and may provide the same to the user. The electronic device may provide a link or icon for registering or storing one or more cards in the screen that provides the list information of the cards that can be used through the registering or storing operation. The electronic device may receive an input for the link or icon from the user, and may perform the operation of registering or storing the corresponding card. The electronic device may provide an operation of updating the available card list information (i.e., the My Card list information) with respect to the corresponding card item in the form of an animation in response to the completion of the registering or storing operation. The provided animation may include a visual and continuous operation in which a My Card list is temporarily displayed; a new card item related to the registering or storing operation is inserted into a specific position of the temporarily displayed My Card list; and the My Card list having the new inserted card item disappears. In the operation of temporarily displaying and removing the My Card list, at least some of the card items corresponding to the My Card list may be moved at a different time from other card items.

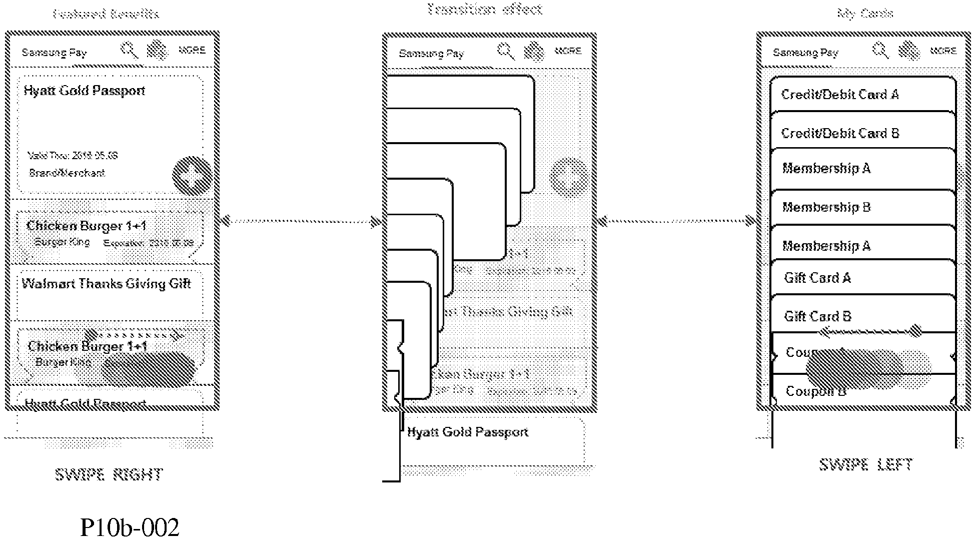

The electronic device may provide a function of switching from a certain screen in the payment application to a screen that provides the My Card list information in response to a specific gesture input from the user. The operation of switching to the screen that provides the My Card list information may include an animation in which at least some of the card items corresponding to the My Card list may be moved at a different time from other card items.

According to an embodiment of the present disclosure, the certain gesture input may be a Swype input that includes particular directional information. 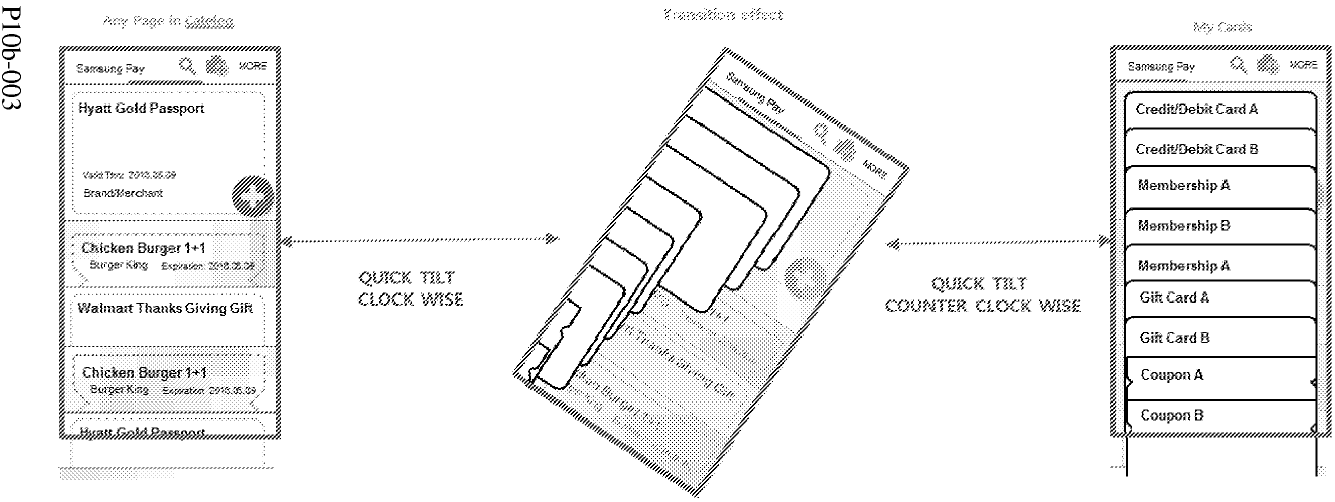 According to an embodiment of the present disclosure, the certain gesture input may include a gesture input that is created by sensors that sense the physical movement or recognizes the movement information received from the user, such as an acceleration sensor, a geomagnetic sensor, a gyro sensor, or an optical sensor.

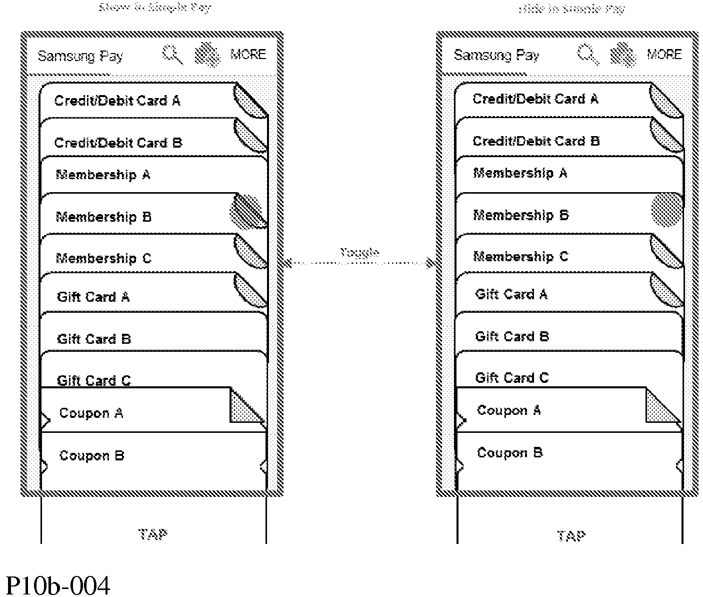

The electronic device may provide the card items, which are to be provided to the Simple Pay screen, and the card items, which are not to be provided to the same, to be separated from each other in the screen that provides the My Card list information. For example, the card items, which are not provided to the Simple Pay screen, may be visually provided such that at least some of the card item image of the My Card list information is shown to be folded.

According to an embodiment of the present disclosure, the partially folded image may be provided to be different in its shape depending on the type of card item in the My Card list information. For example, the items corresponding to the coupons among the card items may be provided such that the corner angle of the folded image is different from that of other card items.

According to an embodiment of the present disclosure, the partially folded image may be provided as a toggle switch that performs a function of switching between the card items that are provided to the Simple Pay screen and the card items that are not provided to the same. For example, the electronic device may receive a user input corresponding to the partially folded image from the user, and may provide the function of switching between the card items that are provided to the Simple Pay screen and the card items that are not provided to the same in response to the user input.

According to an embodiment of the present disclosure, the user may easily and conveniently find and use the coupon while using the Simple Pay. FIG. P103-012 shows an example of using the Simple Pay. The user may swipe up the bottom of the screen to execute the Simple Pay so that the cards are displayed. If the user touches, for a while, an icon at the bottom of the cards and moves toward the center of the screen (touch & move), the circle of the icon display area may be gradually enlarged. When the size of the circle increases to more than a predetermined value, the image of the card and circle may disappear and the coupons may be displayed. The coupons may be provided, which may be used in nearby stores or related stores, based on the detection of the location of the terminal. The coupons may be displayed in the order of the nearest store to the terminal.

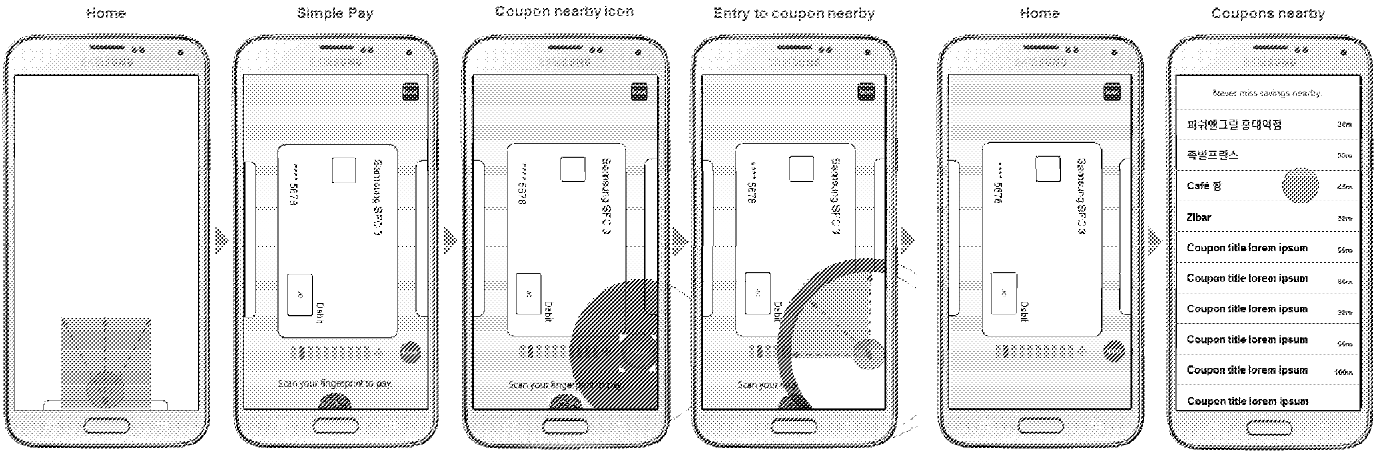

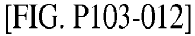

FIG. P103-013 is a view following FIG. P103-012, which may show the details of the coupon and an interface to download the same when a desired coupon is selected from the list, as shown in diagram (b) of FIG. P103-013. When the coupon is downloaded through the interface, a GUI for using the coupon may be displayed as shown in diagram (c) of FIG. P103-013. If the user selects "Use Coupon," the coupon may be displayed, for example, in the form of a barcode that can be used in the stores, as shown in diagram (d) of FIG. P103-013.

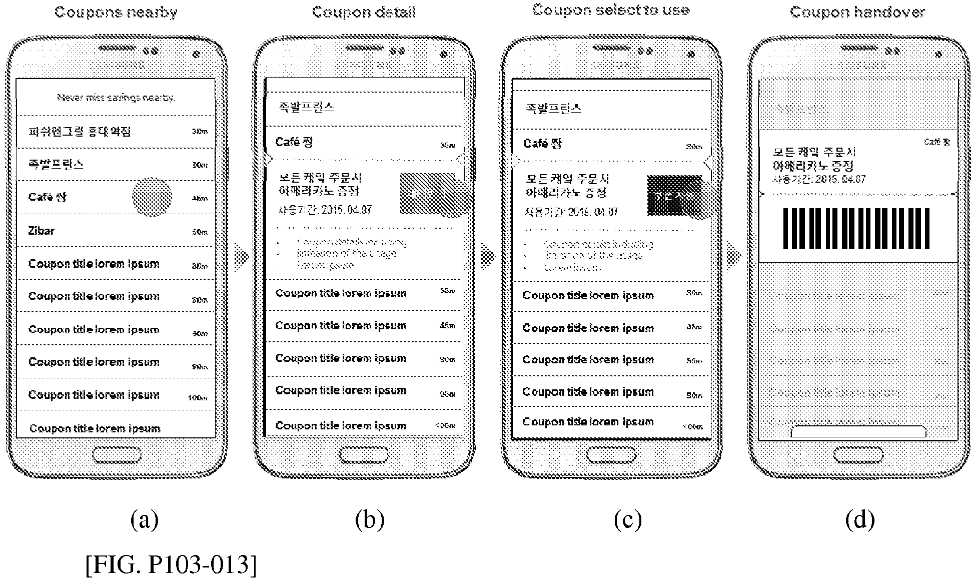

According to an embodiment of the present disclosure, if the user presses the coupon for a while in diagram (c) of FIG. P103-013 or selects the download of the coupon in diagram (b) of FIG. P103-013, the coupon may rotate in the order of the GUI and may be added to the card list that can be directly used for the Simple Pay as shown in FIG. P103-014. In this case, the user may select the coupon and may use the same for payment and discount through the Simple Pay. Since the coupon may be used in the nearby stores, the coupon may be easily added in the Simple Pay.

Unlike the credit card or the membership card, the user verification may be omitted or changed in the case of the coupon. When the coupon has been used, it may be directly removed from the Simple Pay, or the display of the coupon may be changed in order for the user to recognize the same. When the coupon expires without being used, the expiry of the coupon may be shown, or the display of the coupon may be changed.

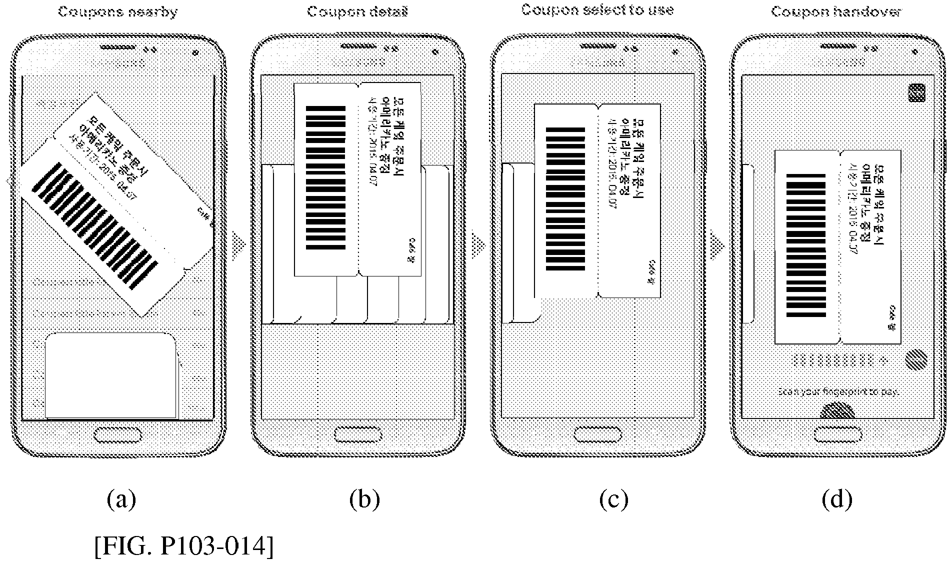

### 4.9.11 Edit card order

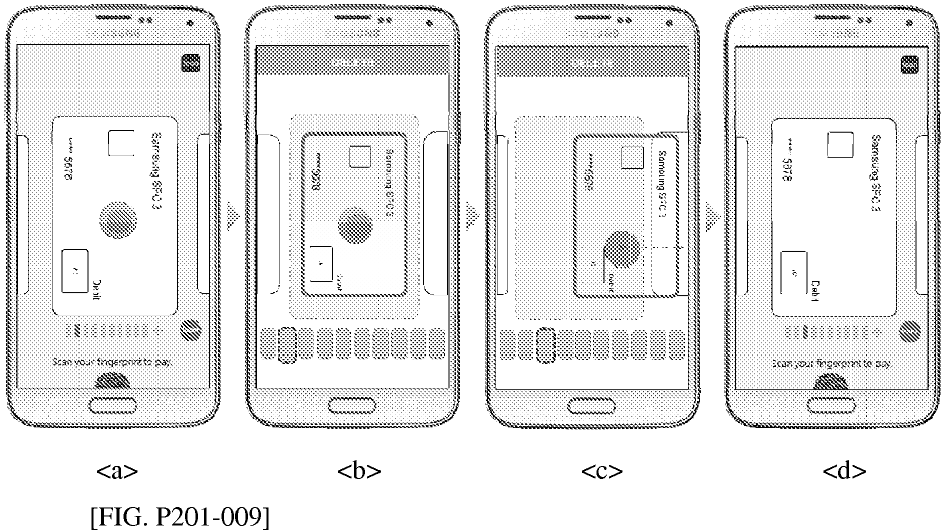

The operation of changing the order of the card images will be described with reference to FIG. P201-009. According to an embodiment of the present disclosure, a preparation screen of the payment may be displayed as shown in diagram <a>. For example, when the user makes an input of swiping up a portion of an LCD off-state screen, a lock screen, or an idle screen of the electronic device, or when the user executes the payment application and selects the card, the payment preparation screen may be created as shown in diagram <a>. For example, the screen may display the current card image in the center thereof and a scroll bar to indicate the order of the current card at the bottom thereof. In this case, the scroll bar may display the order of the current card (by using, for example, colors, frame lines, transparency, or the like). If the user selects and presses the card image for a while or strongly in the screen of diagram <a>, the screen may be changed into a screen to edit the order of the cards.

According to an embodiment of the present disclosure, a screen is provided to edit the order of the cards may be described with reference to diagram <b>. For example, if the user presses the card image for a while or strongly, the card image may be changed (for example, the enlargement or reduction of the card image, the creation of the frame lines of the card image, or the change in the color of the card image). In addition, the shape or size of the scroll bar may be changed. For example, the scroll bar may be in the form of an arrangement of the card images. The position of the selected image may be shown in the scroll bar. For example, the order of the current card may be displayed by using frame lines, dotted lines, or a change in the color in the current card position of the scroll bar. If the user moves the card image to the left or right while maintaining the user input (e.g., a tap or touch input), the card image may be replaced by the lateral card images and the scroll image at the bottom may show the change in the order of the card as well. For example, the order of the card may be changed from the second to the third as shown in the bottom scroll bar of diagrams <b> and <c>.

According to an embodiment of the present disclosure, the screen may be displayed after the completion of editing. When the continuous user input (e.g., a tap or touch input) is terminated, the card image may be fixed to the current position, and the screen may be displayed as diagram <a>. However, after the order of the card image is changed, the bottom scroll bar may be displayed according to the changed order of the card image (for example, from the second place in the scroll bar of diagram <a> to the third place in the scroll bar of diagram <d>).

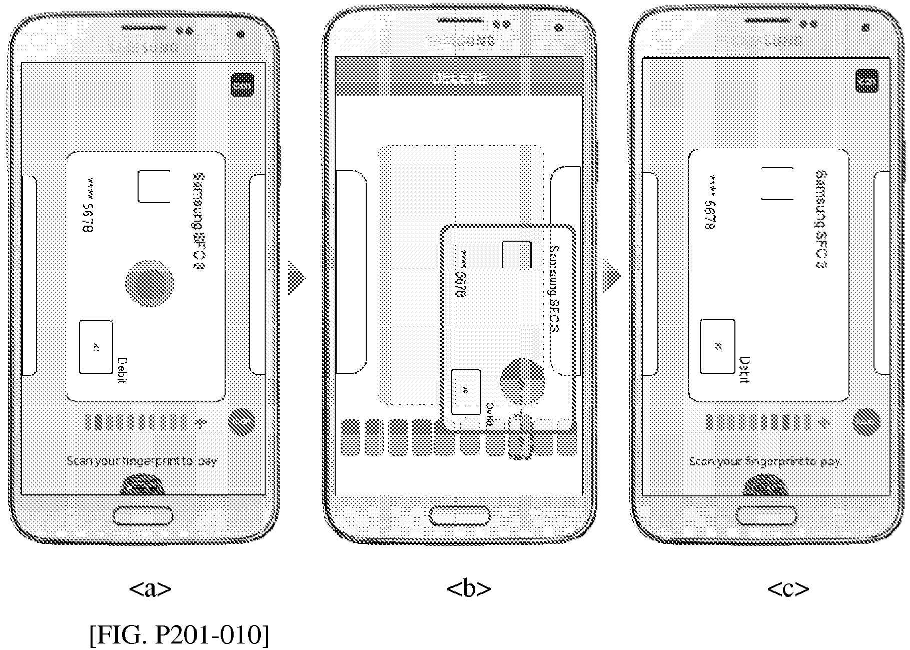

Another embodiment of changing the order of card images will be described with reference to FIG. P201-010.

According to an embodiment of the present disclosure, a preparation screen of the payment may be displayed as shown in diagram <a>.. For example, when the user swipes a portion of an LCD off-state screen, a lock screen, or an idle screen of the electronic device, or when the user executes the payment application and selects the card, the payment preparation screen may be created as shown in diagram <a>. For example, the screen may display the current card image in the center thereof and a scroll bar to indicate the order of the current card at the bottom thereof. In this case, the scroll bar may display the order of the current card (by using, for example, colors, frame lines, transparency, or the like). If the user selects and presses the card image for a while or strongly in the screen of diagram <a>, the screen may be changed into a screen to edit the order of the card.

According to an embodiment of the present disclosure, a screen to edit the order of the card will be described with reference to diagram <b>. For example, if the user presses the card image for a while or strongly in the screen of diagram <b>, the card image may be changed (for example, the enlargement or reduction of the card image, the creation of the frame lines of the card image, or the change in the color of the card image). In addition, the shape or size of the scroll bar may be changed. For example, the scroll bar may be displayed to be enlarged. In this case, the user may make a gesture (e.g., drag & drop) of moving the card image to a desired position of the bottom scroll bar while maintaining the user input (e.g., a tap or touch input). Thus, the card image may be displayed according to the changed order as shown in diagram <c>.

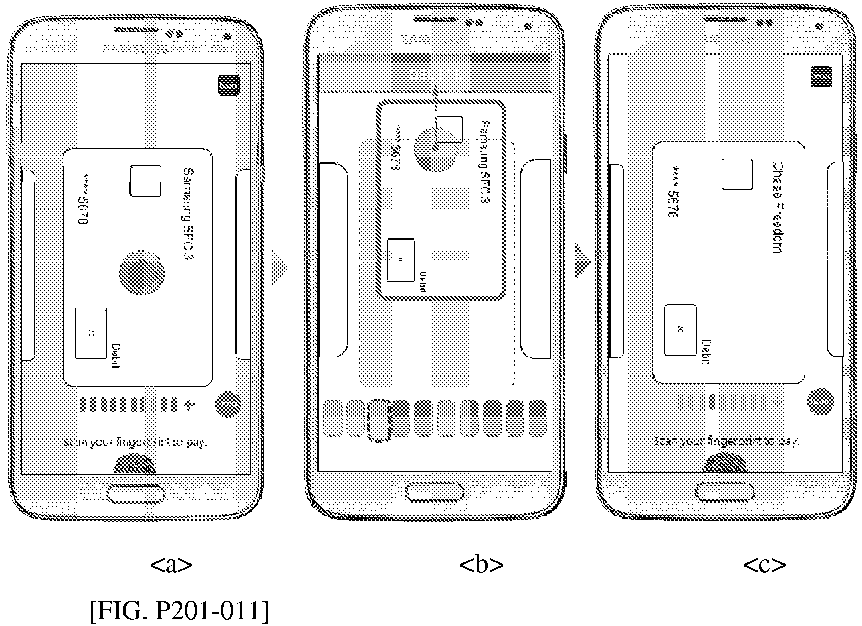

A method of deleting the card will be described with reference to FIG. P201-011.

According to an embodiment of the present disclosure, a preparation screen of the payment may be displayed as shown in diagram <a>. For example, when the user swipes a portion of an LCD off-state screen, a lock screen, or an idle screen of the electronic device, or when the user executes the payment application and selects the card, the payment preparation screen may be created as shown in diagram <a>. For example, the screen may display the current card image in the center thereof and a scroll bar to indicate the order of the current card at the bottom thereof. In this case, the scroll bar may display the order of the current card (by using, for example, colors, frame lines, transparency, or the like). If the user selects and presses the card image for a while or strongly in the screen, the screen may be changed into a screen to delete the card.

According to an embodiment of the present disclosure, if the screen is changed into the screen for deleting the card, a "delete" area may be shown at the top of the screen. For example, the 'delete' area may be displayed at the top of diagram <b>. At this case, if the user presses the card image for a while or strongly, the card image may be changed (for example, the enlargement or reduction of the card image, the creation of the frame lines of the card image, or the change in the color of the card image). The user may make a gesture (e.g., drag & drop) of moving the card image to the "delete" area at the top of the screen while maintaining the user input (e.g., a tap or touch input). In this case, the card image may be deleted from the screen, and the next card of the deleted card may be positioned in the center. The number of cards shown in the bottom scroll bar may be changed to conform to the number of card images.

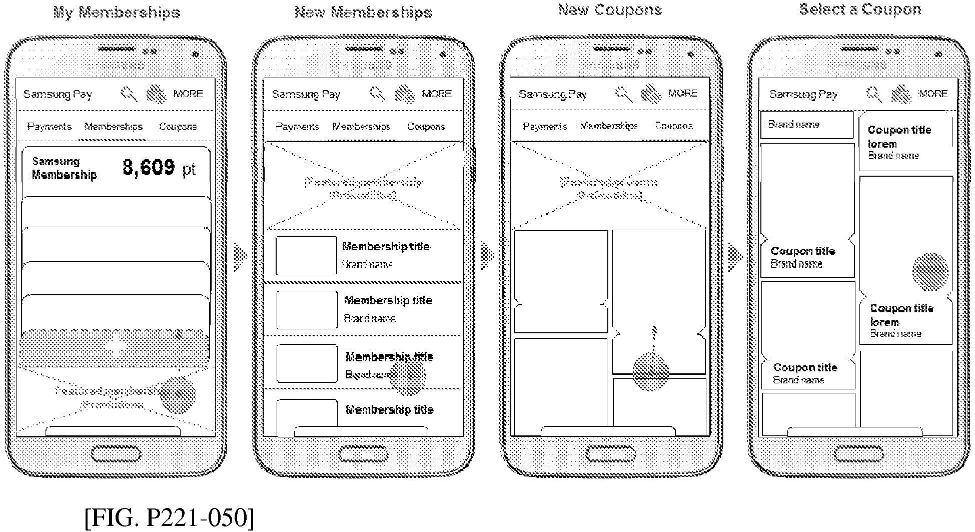

The electronic device provides an interface for managing the membership and coupons. For example, if the user input is received in the screen showing the membership card list as shown in the first diagram of FIG. P221-050, the electronic device may display the membership card list as shown in the second diagram. In addition, if the user input is received in the second screen, a list of total coupons that are available for the user may be displayed as shown in the third diagram. The user may make an input onto the coupon in order to thereby select the coupon as shown in the fourth diagram.

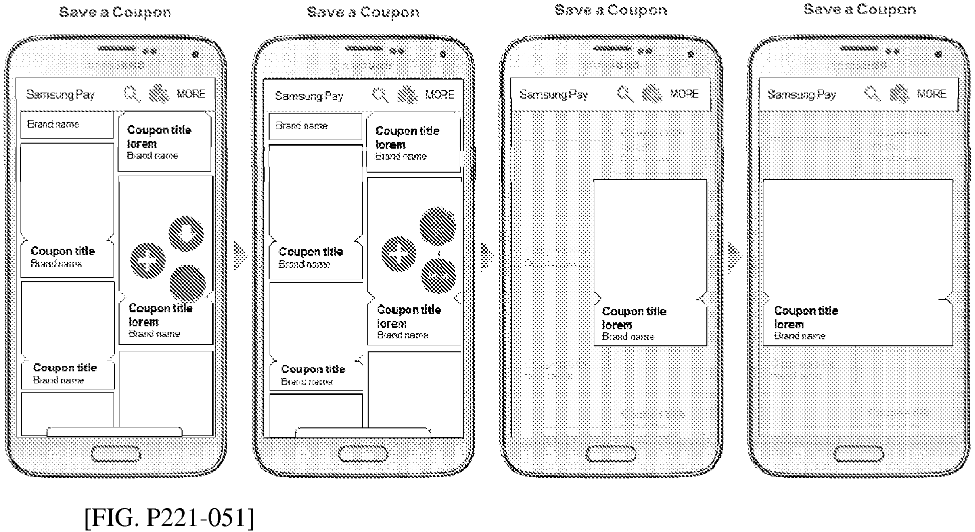

The electronic device provides an interface for storing the selected coupon. For example, the electronic device provides a screen that shows all of the available coupons as shown in the first diagram of FIG. P221-051. In addition, a portion where the user input is received (for example, icons or divided tiles) may be disposed in a certain coupon in order to thereby enable an additional operation. The additional operation may include an operation of storing the coupon; transmitting the coupon to other users; or viewing the details of the coupon. As another example, the coupon to be stored may be displayed in a big screen as shown in the fourth diagram of FIG. P221-051.

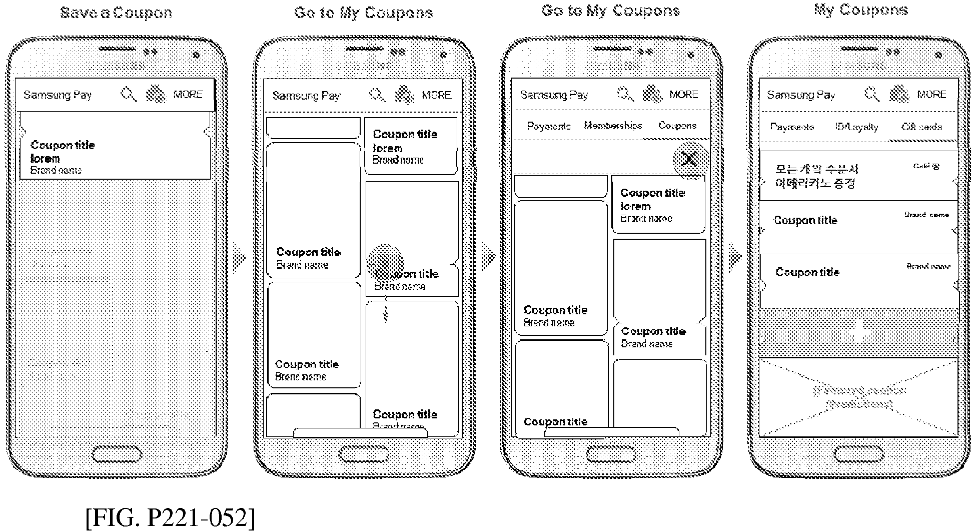

The electronic device may provide an interface to store the coupons and to access the coupons that are stored by the user. For example, after the user stores a certain coupon, if the user wishes to view all of the coupons that are stored, the user may scroll down on the screen of the coupons as shown in the first diagram of FIG. P221-052. The electronic device marks the upper right portion with an "X" in response to the input, and if the user makes an input onto the portion, the electronic device displays a list of coupons that are stored by the user.

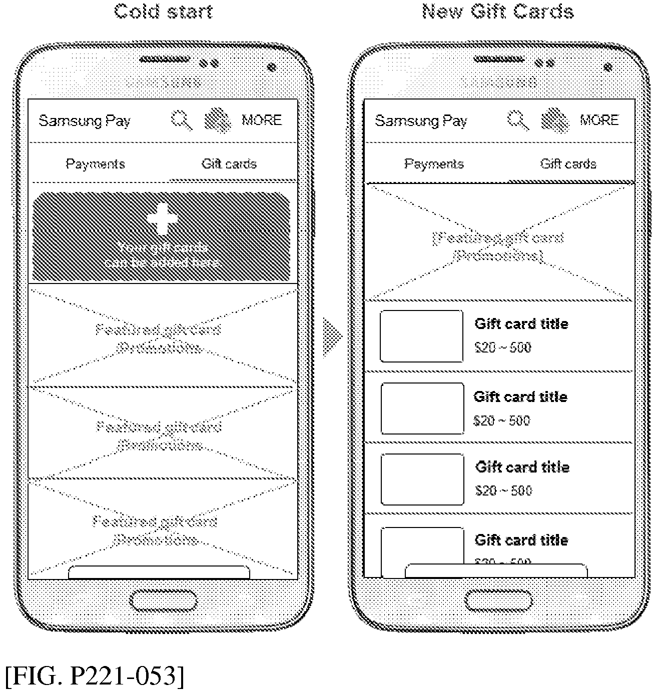

If there is no gift card that was previously registered, the electronic device may display a list of the gift cards that can be added in response to the user input for the same. For example, if the user makes an input onto the portion marked with "Your gift cards can be added here" in the screen of FIG. P221-053, the electronic device provides the user with a list of gift cards that can be added to the screen.

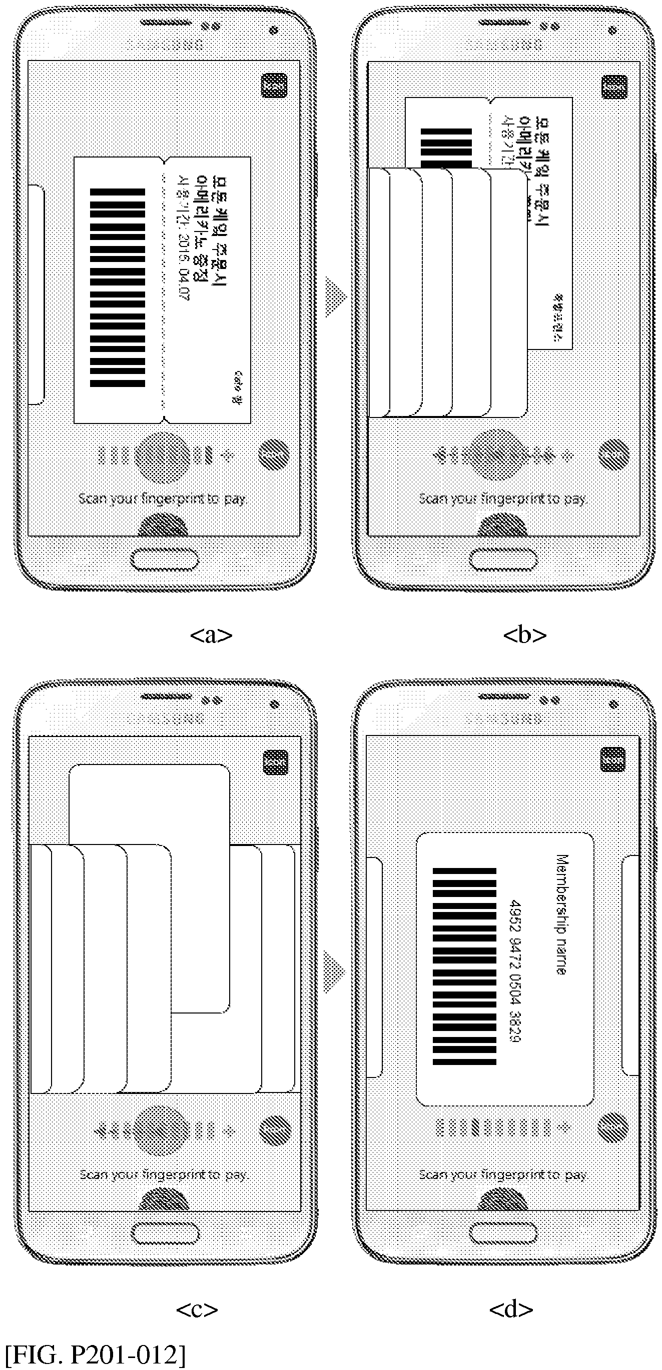

A method of scrolling on the cards (for example, membership cards, coupons, or the like) will be described with reference to FIG. P201-012.

According to an embodiment of the present disclosure, the user may rapidly search for another card (for example, membership cards, coupons, or the like) while the card is displayed. For example, the user input (for example, a tap or touch input) may be made onto the scroll bar at the bottom of the screen in which the card is shown. If the user input is maintained for a while or if the intensity of the user input is changed, another card may be searched for by using the scroll bar at the bottom. The bottom scroll bar may display the currently selected membership cards, coupons, or the like. For example, the bottom scroll bar may be displayed to indicate the number of cards, and the currently selected membership cards, coupons, or the like may be displayed in a different shape or color.

According to an embodiment of the present disclosure, the screen for searching for the card by using the bottom scroll bar will be described. For example, if the user moves the bottom scroll bar to the left or right while maintaining the user input (for example, a tap or touch input), the user may search for other membership cards, coupons, or the like. In this case, the currently selected membership cards, coupons, or the like may be displayed to be different (for example, in the color, the size, or the position) from other arranged membership cards, coupons, or the like by activating the scroll bar. For example, the currently selected membership cards, coupons, or the like may be displayed to protrude from the upper end line of other membership cards, coupons, or the like) as shown in diagrams <b> and <c>.

According to an embodiment of the present disclosure, a screen after the search of a card is provided. For example, the user input is released from the bottom scroll bar (e.g., a tab or touch input), the selected card image (for example, membership cards, coupons, or the like) may be displayed in the center of the screen as shown in diagram <d>. The screen may be displayed to be the same as the screen of diagram <a> except for the card (such as membership cards, coupons, or the like) image and the bottom scroll bar.

According to an embodiment of the present disclosure, a method performed by an electronic device including a first communication module and a second communication module, is provided. The method includes generating payment information; transmitting the payment information to the outside of the electronic device through the first communication module; and transmitting the payment information to the outside through the second communication module when payment based on the payment information fails or when a predetermined time has passed from the transmission.

According to an embodiment of the present disclosure, the electronic device may operate a plurality of execution environments including a first execution environment and a second execution environment.

According to an embodiment of the present disclosure, the first execution environment includes an execution environment having a first security level and the second execution environment includes an execution environment having a second security level.

According to an embodiment of the present disclosure, transmitting the payment information through the first communication module is performed in the first execution environment, and the operation of transmitting the payment information through the second communication module is performed in the second execution environment.

According to an embodiment of the present disclosure, a user corresponding to the electronic device may be authenticated through a first application executed in the first execution environment, wherein generating the payment information is performed through a second application executed in the first execution environment.

According to an embodiment of the present disclosure, the operation of authenticating includes transmitting the result of the authentication from the first application to the second application through the second execution environment.

According to an embodiment of the present disclosure, transmitting the result includes transmitting a first authentication value from the first application to the second application, and the first authentication value is generated on the basis of a second authentication value corresponding to the second application.

According to an embodiment of the present disclosure, transmitting the result includes encrypting the result or the first authentication value.

According to an embodiment of the present disclosure, transmitting the payment information to the external device or another external device includes determining, using the second application, whether the first authentication value matches the second authentication value.

According to an embodiment of the present disclosure, before authenticating, the second authentication value is transmitted from the second application to the first application through the second execution environment.

According to an embodiment of the present disclosure, method in an electronic device capable of operating a plurality of execution environments including a first execution environment and a second execution environment is provided. The method includes generating a first authentication value, using a first application executed in the first execution environment; transmitting the first authentication value from the first application through the second execution environment to a second application executed in the first execution environment; transmitting, based on reception of the first authentication value, a second authentication value and a result of authentication of the user from the second application to the first application through the second execution environment; and, when the second authentication value corresponds to the first authentication value, processing the data as valid data, using the first application.

According to an embodiment of the present disclosure, the first execution environment is a trusted execution environment and the second execution environment is a rich execution environment.

According to an embodiment of the present disclosure, an electronic device is provided. The electronic device includes a plurality of communication modules including a first communication module and a second communication module; and a processor functionally connected to the first communication module and the second communication module, wherein the processor is configured to generate payment information, transmit the payment information to the outside of the electronic device through the first communication module, and transmit the payment information to the outside through the second communication module when payment based on the payment information fails or when a predetermined time has passed from the transmission.

According to an embodiment of the present disclosure, the first communication module includes an MST communication module and the second communication module includes an NFC module.

According to an embodiment of the present disclosure, the processor is configured to, using a sensor functionally connected to the electronic device, acquire at least one piece of biometric information of a user corresponding to the electronic device and authenticate the user based on the at least one piece of biometric information.

According to an embodiment of the present disclosure, the sensor includes at least one of a fingerprint sensor, an iris sensor, a camera sensor, a sound sensor (microphone), and a cardiac sensor.

According to an embodiment of the present disclosure, the electronic device can operate a plurality of execution environments including a first execution environment and a second execution environment.

According to an embodiment of the present disclosure, the processor authenticates a user corresponding to the electronic device through a first application executed in the first execution environment and generates the payment information through a second application executed in the first execution environment.

According to an embodiment of the present disclosure, the processor is configured to transmit the payment information through the second communication module, based on an HCE.

According to an embodiment of the present disclosure, a non-transitory computer-readable recording medium is provided in which a program for executing a method is stored in an electronic device including a first communication module and a second communication module, wherein the method includes generating payment information; transmitting the payment information to the outside of the electronic device through the first communication module; and transmitting the payment information to the outside through the second communication module when payment based on the payment information fails or when a predetermined time has passed from the transmission.

According to an embodiment of the present disclosure, an electronic device is provided. The electronic device includes a memory for storing data; a first coil and a second coil; at least one sensor, and a processor functionally connected to the sensor, wherein the processor is configured to acquire an orientation of the electronic device, using the at least one sensor, and transmit the data to the outside, using at least one coil selected based on the orientation among the first coil and the second coil.

According to an embodiment of the present disclosure, the first coil or the second coil includes an antenna for performing magnetic stripe transmission.

According to an embodiment of the present disclosure, the first coil or the second coil is formed on a plurality of surfaces of a printed circuit board of the electronic device.

According to an embodiment of the present disclosure, the first coil is formed in a first direction and the second coil is formed in a second direction.

According to an embodiment of the present disclosure, the processor is configured to identify that processing based on the data has failed; and based on the identifying, when a movement of the electronic device is detected, transmit the payment information again to the outside, using at least one coil among the first coil and the second coil.

According to an embodiment of the present disclosure, a method performed by an electronic device is provided. The method includes receiving an input to the electronic device; determining the state of the electronic device and communication connection between the electronic device and an external electronic device; when the state corresponds to a first state, changing at least a part of the security information stored in the electronic device; and, when the state corresponds to the second state, refraining from changing the at least a part of the security information.

According to an embodiment of the present disclosure, the input includes a request for resetting the electronic device.

According to an embodiment of the present disclosure, determining whether at least one among a signal intensity, a congestion degree, QoS, and bandwidth, which correspond to the communication connection, belongs to a predetermined range. According to an embodiment of the present disclosure, the communication connection is performed by a wireless network.

According to an embodiment of the present disclosure, the security information includes payment information.

According to an embodiment of the present disclosure, deleting the at least a part of the security the information.

According to an embodiment of the present disclosure, transmitting a message associated with the at least a part of the security information to the external electronic device or another external electronic device.

According to an embodiment of the present disclosure, information associated with a token is used for payment.

According to an embodiment of the present disclosure, displaying (e.g., marking) that the at least a part of the security information has not been changed.

According to an embodiment of the present disclosure, changing, by the electronic device, the at least a part of the security information after a predetermined time or after the electronic device is reset.

According to an embodiment of the present disclosure, an electronic device is provided. The electronic device includes a communication module for connecting the electronic device to the outside; a memory functionally connected to the communication module; and a processor functionally connected to the memory and the communication module, wherein the processor is configured to receive an input to the electronic device, determine the state of the electronic device and the communication connection between the electronic device and an external electronic device, change at least a part of security information stored in the electronic device when the determined state corresponds to a first state, and refrain from changing the at least a part of the security information when the determined state corresponds to a second state.

According to an embodiment of the present disclosure, the input includes a request for resetting the electronic device.

According to an embodiment of the present disclosure, the processor is configured to include an operation of determining whether at least one among a signal intensity, a congestion degree, QoS, and bandwidth, which correspond to the communication connection, belongs to a predetermined range.

According to an embodiment of the present disclosure, the communication connection is performed by a wireless network.

According to an embodiment of the present disclosure, the security information includes payment information.

According to an embodiment of the present disclosure, the processor is configured to include an operation of deleting the at least a part of the security information.

According to an embodiment of the present disclosure, the processor is configured to include an operation of transmitting the at least a part of the security information to the external electronic device or another external electronic device.

According to an embodiment of the present disclosure, the message includes information associated with a token to be used for payment.

According to an embodiment of the present disclosure, the processor is configured to include an operation of displaying (marking) that the at least a part of the security information has not been changed.

According to an embodiment of the present disclosure, the processor is configured to include an operation of changing the at least a part of the security information after a predetermined time or after the electronic device is reset.

According to an embodiment of the present disclosure, a non-transitory computer-readable recording medium is provided. in which a program for executing a method is stored in an electronic device. The method includes receiving an input to the electronic device; determining the state of the electronic device and communication connection between the electronic device and an external electronic device; changing, when the state corresponds to a first state, at least a part of the security information stored in the electronic device; and refraining from changing, when the state corresponds to the second state, the at least a part of the security information.

According to an embodiment of the present disclosure, a method performed by an electronic device is provided. The method includes identifying an execution environment of the electronic device; an operation of, when the execution environment is a first execution environment, transmitting at least one piece of security information corresponding to the electronic device to an external electronic device of the electronic device; and an operation of, when the execution environment is a second execution environment, refraining from transmitting the at least one piece of security information.

According to an embodiment of the present disclosure, the security information includes first authentication information and second authentication information, the first authentication information may include public information, and the second authentication information may include private information.

According to an embodiment of the present disclosure, encrypting or signing (e.g., verifying) the security information, based on at least one among the first authentication information and the second authentication information.

According to an embodiment of the present disclosure, the security information includes at least one among a LUK, card information, and a token.

According to an embodiment of the present disclosure, performing payment based on the security information.

According to an embodiment of the present disclosure, an electronic device is provided. The electronic device includes a communication module for connecting the electronic device to the outside; a memory functionally connected to the communication module; and a processor functionally connected to the memory and the communication module, wherein the processor is configured to identify an execution environment of the electronic device, transmit at least one piece of security information corresponding to the electronic device to an external electronic device outside of the electronic device when the execution environment is a first execution environment, and refrain from transmitting the the security information when the execution environment is a second execution environment.

According to an embodiment of the present disclosure, the security information includes first authentication information and second authentication information, the first authentication information may include public information, and the second authentication information may include private information.

According to an embodiment of the present disclosure, the processor is configured to include an operation of encrypting or signing e.g., (verifying) the security information, based on at least one among the first authentication information and the second authentication information.

According to an embodiment of the present disclosure, the security information includes at least one among a LUK, card information, and a token.

According to an embodiment of the present disclosure, the processor is configured to further include an operation of performing payment based on the security information.

According to an embodiment of the present disclosure, a non-transitory computer-readable recording medium in which a program for executing operations is stored in an electronic device is provided. The method includes identifying an execution environment of the electronic device; transmitting, when the execution environment is a first execution environment, at least one piece of security information corresponding to the electronic device to an external electronic device of the electronic device; and refraining from transmitting, when the execution environment is a second execution environment, the at least one piece of security information.

According to an embodiment of the present disclosure, a method performed by an electronic device is provided. The method includes acquiring attestation information corresponding to the electronic device from an external electronic device of the electronic device; performing, based on the attestation information, attestation of the electronic device; and transmitting a result of the attestation to the external electronic device or another electronic device.

According to an embodiment of the present disclosure, attestation includes an operation of determining an integrity.

According to an embodiment of the present disclosure, attestation information includes at least one among the security of the electronic device, a disposable random number (e.g., a nonce), and a blob.

According to an embodiment of the present disclosure, an electronic device. The electronic device includes a communication module for connecting the electronic device to the outside; a memory functionally connected to the communication module; and a processor functionally connected to the memory and the communication module, wherein the processor is configured to obtain attestation information corresponding to the electronic device from an external electronic device corresponding to the electronic device, perform attestation of the electronic device based on the attestation information, and transmit a result of the attestation to the external electronic device or another electronic device.

According to an embodiment of the present disclosure, the processor is configured to include an operation of determining the integrity.

According to an embodiment of the present disclosure, attestation information includes at least one among the security of the electronic device, a disposable random number (e.g., a nonce), and a blob.

According to an embodiment of the present disclosure, a non-transitory computer-readable recording medium in which a program for executing operations is stored, in an electronic device, is provided. The method includes acquiring attestation information corresponding to the electronic device from an external electronic device of the electronic device; performing, based on the attestation information, attestation of the electronic device; and transmitting a result of the attestation to the external electronic device or another electronic device.

According to an embodiment of the present disclosure, an electronic device is provided. The electronic device includes a wireless or wired interface; a processor electrically coupled to the interface; a memory electrically coupled to the processor; and at least one antenna electrically coupled to the processor, wherein the memory stores instructions that, when executed, cause the processor to: at least temporarily store payment information in the memory; provide data including or derived from the payment information; transmit the data using the at least one antenna, wherein the electronic device further includes additional components and/or performs at least one operation according to one or more embodiments described in the present document.

According to an embodiment of the present disclosure, the wireless interface is configured to provide a short range communication with an external electronic device, wherein the short range is less than about 100 m.

According to an embodiment of the present disclosure, a structure is adapted to be worn by a user.

According to an embodiment of the present disclosure, a structure is adapted to be attached to a user or an external apparatus.

According to an embodiment of the present disclosure, the processor to receive at least part of the payment information or the data via the interface from an external apparatus.

According to an embodiment of the present disclosure, the instructions cause the processor to receive at least part of the payment information or the data from one or more payment-associated server via a mobile device, an accessory device and/or an access point.

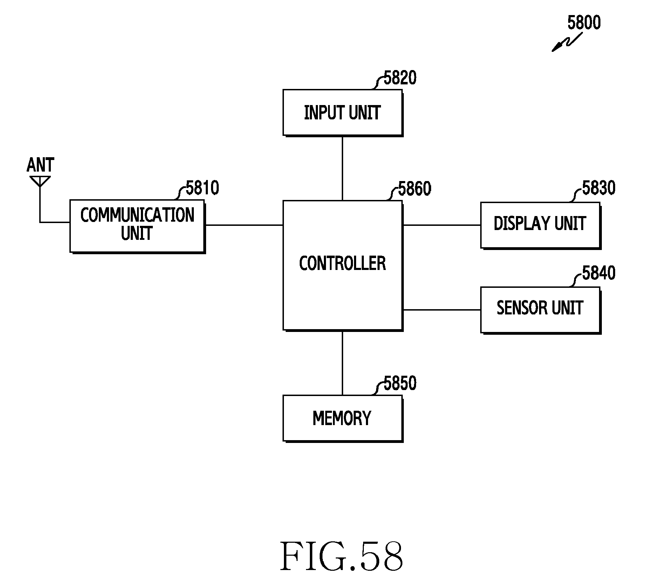

FIG. 58 is a block diagram of an electronic device according to an embodiment of the present disclosure.

Referring to FIG. 58, the electronic device 5800, according to an embodiment of the present disclosure, may include a communication unit 5810, an input unit 5820, a display unit 5830, a sensor unit 5840, a storage unit (e.g., memory) 5850, and a controller 5860.

The communication unit 5810 may perform communications in the electronic device 5800. In this case, the communication unit 5810 may communicate with external devices in various communication methods. For example, the communication unit 5810 may perform communications in a wired or wireless method. In this case, the communication unit 5810 may access at least one of a mobile communication network or a data communication network. Alternatively, the communication unit 5810 may perform short-range communication. For example, the external devices may include an electronic device, base stations, servers, and satellites. In addition, the communication schemes may include LTE, WCDMA, a GSM, WiFi, a WLAN, Bluetooth, and NFC.

The input unit 5820 may generate input data in the electronic device 5800. In this case, the input unit 5820 may generate the input data in response to the user input of the electronic device 5800. In addition, the input unit 5820 may include one or more input means. The input unit 5820 may include a keypad, a dome switch, physical buttons, a touch panel, a jog & shuttle, and sensors.

The display unit 5830 may output display data in the electronic device 5800. According to an embodiment of the present disclosure, the display unit 5830 may be driven by using a light-emitting technique. The display unit 5830 may include an organic light emitting diode (OLED) display, or an active matrix light emitting diode (AMOLED) display. In this case, the display unit 5830 may be implemented as a touch screen by being combined with the input unit 420.

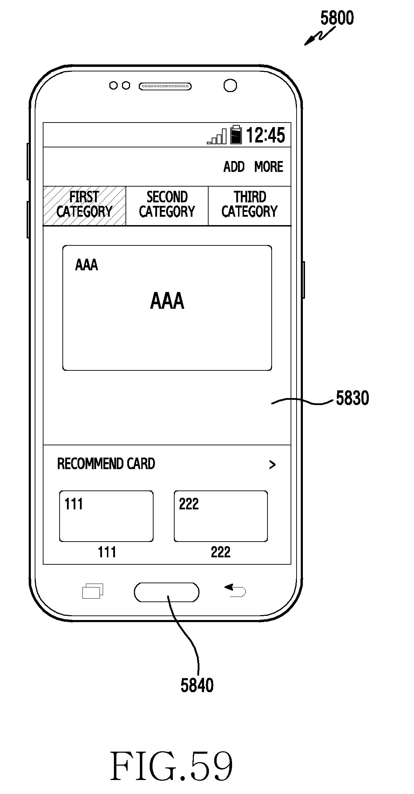

The sensor unit 5840 may detect at least one of the peripheral state of the electronic device 5800 or the state of the electronic device 5800. The sensor unit 5840 may include one or more sensors. According to an embodiment of the present disclosure, the sensor unit 5840 may include a fingerprint sensor for detecting a user's fingerprint in the electronic device 5800. For example, the fingerprint sensor 141 may be positioned on the front side of the electronic device 5800 as shown in FIG. 59. In this case, the fingerprint sensor may be provided at the bottom of the display unit 5830 in the electronic device 5800. In addition, the fingerprint sensor may be coupled with the input unit 5820 of the electronic device 5800. For example, the fingerprint sensor may include at least one of an optical fingerprint sensor, which may capture the fingerprint of the user of the electronic device 5800 in the form of an image, the ultrasonic fingerprint sensor, a capacitive fingerprint sensor, a semiconductor fingerprint sensor for detecting the electric conductivity, or a heart rate sensor.

The storage unit 5850 may store operational programs of the electronic device 5800. According to an embodiment of the present disclosure, the storage unit 5850 may store programs to control the payment management function and the payment execution function. The payment management function may be an application to manage one or more electronic cards and card information corresponding thereto. The payment execution function may be a mini-application to smoothly support the interaction between the user of the electronic device 5800 and the payment management function. In addition, the storage unit 5850 may store data that is generated during the execution of the programs. In addition, the storage unit 5850 may store the card information corresponding to one or more electronic cards. For example, the electronic cards may include at least one of: a payment card for payment; a service card for using the membership services; a gift card for goods exchange; or a personal identification card for identification.

The controller 5860 may control the overall operations of the electronic device 5800. In this case, the controller 5860 may be functionally connected to the elements of the electronic device 5800 in order to thereby control the elements of the electronic device 5800. In addition, the controller 5860 may receive commands or data from the elements of the electronic device 5800 in order to thereby process the same. In this case, the controller 5860 may perform various functions. For example, the controller 5860 may include a function processor for each function. In addition, the function processor may be an application processor (AP). According to an embodiment of the present disclosure, the controller 5860 may execute the payment management function and the payment execution function.

According to an embodiment of the present disclosure, the electronic device 5800 may include the display unit 5830 and the controller 5860 that is functionally connected to the display unit 5830. The controller 5860 may be configured to: display images of the electronic cards, usage information, and a payment module on the screen; detect the selection of the payment module; and execute the payment with the electronic card.

According to an embodiment of the present disclosure, the controller 5860 may display the images, the usage information, and the payment module in different layers, respectively.

According to an embodiment of the present disclosure, the controller 5860 may control the layer for the usage information while displaying the payment module.

According to an embodiment of the present disclosure, the controller 5860 may display a list of one or more electronic cards; detect the selection of the electronic card in the list; and display the screen.

According to an embodiment of the present disclosure, the controller 5860 may display a recommended card at the end of the list.

According to an embodiment of the present disclosure, the controller 5860 may display the recommended card at the end of the list in response to the scrolling on the list.

According to an embodiment of the present disclosure, the controller 5860 may classify the electronic cards into a plurality of categories; display the categories by using taps; and display the list to correspond to any one of the categories.

According to an embodiment of the present disclosure, the electronic card may be registered in the first application to display the screen, and the controller 5860 may register the electronic card in the second application or may remove the electronic card from the second application.

According to an embodiment of the present disclosure, the controller 5860 may register the electronic card in the first application to display the screen, and may register the electronic card in the second application.

According to an embodiment of the present disclosure, the controller 5860 may display the recommended card based on input keywords.

FIG. 59 is an illustration of the electronic device of FIG. 58.

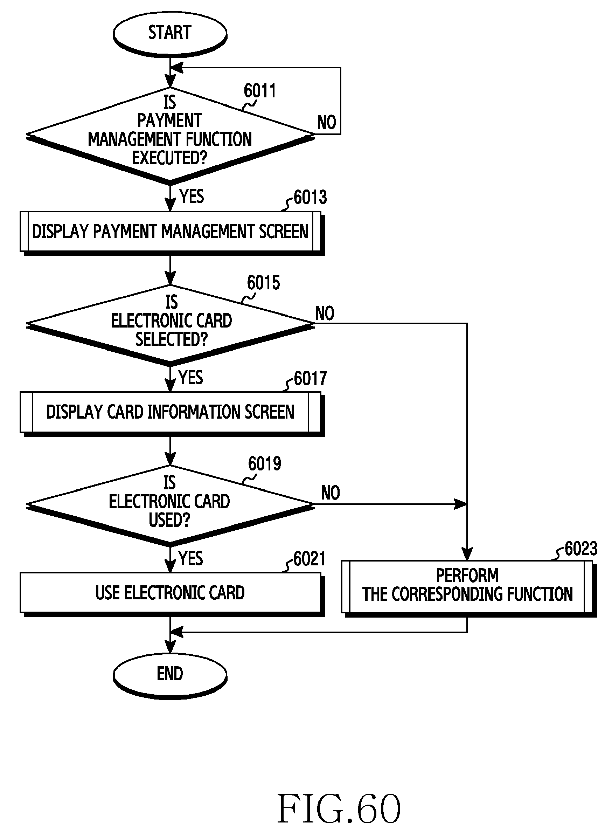

FIG. 60 is a flowchart of a method of an electronic device according to an embodiment of the present disclosure.

Referring to FIG. 60, the method of the electronic device 5800, , may start with an operation of executing the payment management function in step 6011 by the controller 5860. The payment management function may be an application for managing one or more electronic cards and card information corresponding thereto. For example, when an icon for the payment management function is selected, the controller 5860 may execute the payment management function. Alternatively, when a menu for the payment management function is selected while the payment execution function is in progress, the controller 5860 may execute the payment management function. The payment execution function may be a mini-application to smoothly support the interaction between the user of the electronic device 5800 and the payment management function.

Then, in step 6011, when the payment management function is executed, the controller 5860 may display the payment management screen 6410 in step 6013. In this case, the controller 5860 may display one or more electronic cards 6400 on the payment management screen 6410, in step 6017. In this case, the controller 5860 may classify the electronic cards 6400 into a plurality of categories. For example, the categories may be determined to be any one of a payment card, a service card, a gift card, or a personal identification card to correspond to the attribute of the electronic card 6400. In addition, the controller 5860 may display the electronic card 6400 to correspond to any one of the categories. In this case, the electronic card 6400 may be a user card 6401 that is pre-registered by the user of the electronic device 5800 to correspond to the payment management function, or may be a non-registered recommended card 6403.

Then, the payment management screen 6410 may include a menu display area 6420 and a card display area 6430. The menu display area 6420 may include one or more menus 6421. For example, the menu 6421 for registering the non-registered electronic card 6400 may be included in response to the payment management function. The card display area 6430 may include a tab area 6440 and a card area 6450. The tab area 6440 may include a plurality of tabs 6441. In this case, each tab 6441 may be allocated with a category. The card area 6450 may include a card layer 6451 for the user card 6401 and a recommended layer 6453 for the recommended card 6403. The recommended layer 6453 may include a recommended area 6457 for displaying the recommended card 6403 and a call area 6455 for calling the recommended area 6457.

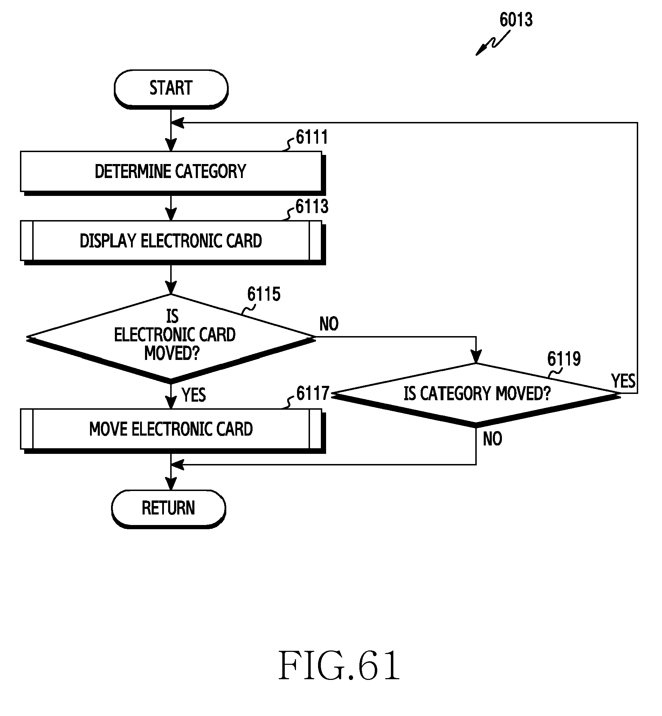

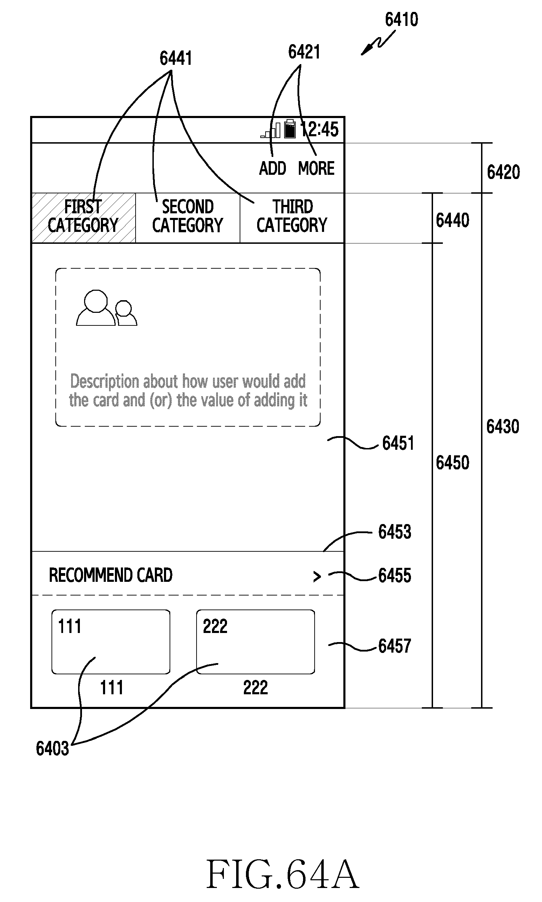

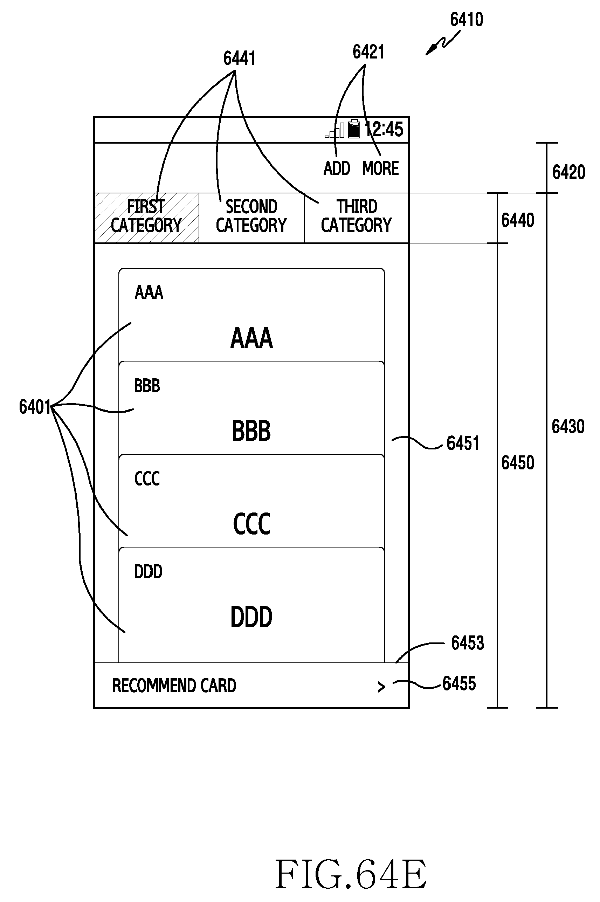

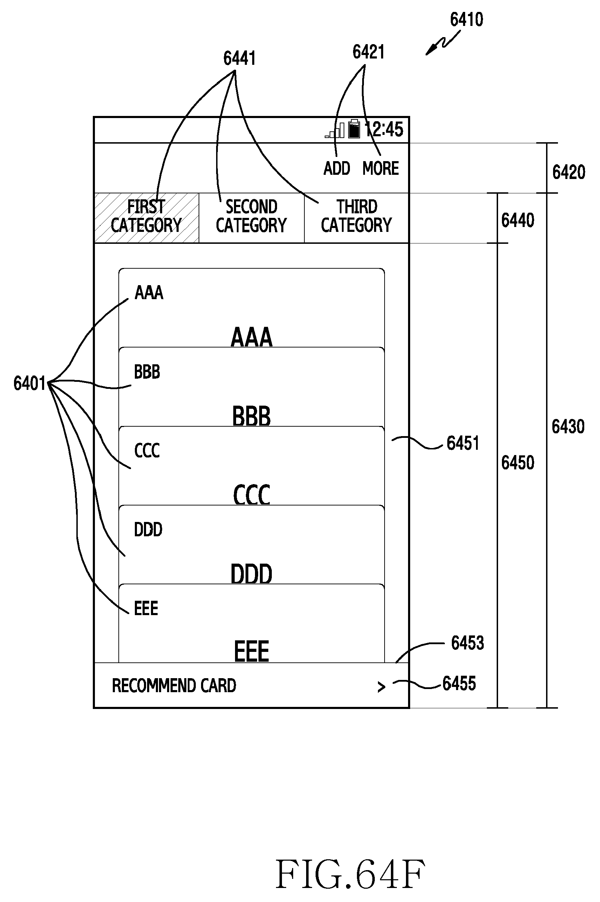

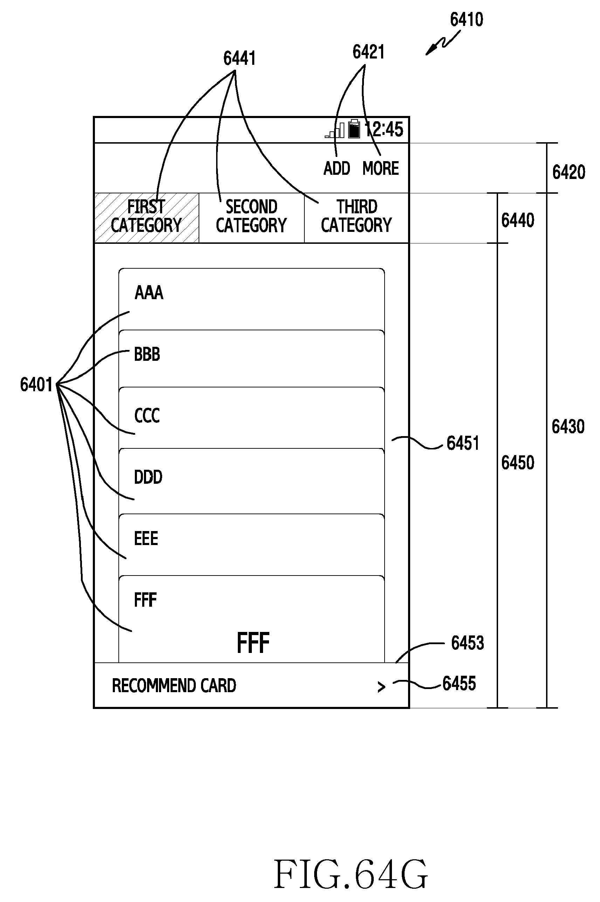

FIG. 61 is a flowchart showing the step of displaying the payment management screen according to step 6013 in FIG. 60. FIGs. 64A to 67B illustrate exemplary views for of the payment management screen displaying step 6013 in FIG. 61.

Referring to FIG. 61, the controller 5860 may determine any one of the plurality of categories in step 6111. In this case, the controller 5860 may determine any one of the categories according to the predetermined configuration. Alternatively, the controller 5860 may determine any one of the categories based on the selection of the user of the electronic device 5800. In addition, the controller 5860 may display one or more electronic cards 6400 in step 6113. That is, the controller 5860 may display the electronic card 6400 to correspond to any one of the categories.

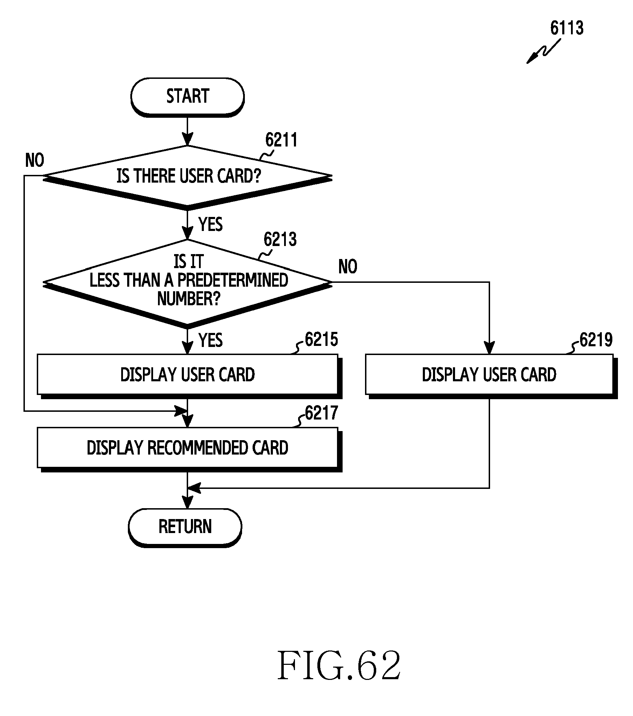

FIG. 62 is a flowchart of a method of displaying the electronic card of FIG. 61.

Referring to FIG. 62, the controller 5860 may determine whether or not the user card 6401 exists in step 6211. That is, the controller 5860 may determine whether or not the user card 6401 corresponds to any of the categories. For example, if any of the categories is determined to be the "payment card," the controller 5860 may detect the user card 6401 to correspond to the "payment card."

Then, if it is determined that there is no user card 6401 in operation 6211, the controller 5860 may display one or more recommended cards 6403 in operation 6217. That is, the controller 5860 may display the recommended cards 6403 in the recommended layer 6453 of the card area 6450. Then, the recommended cards 6403 may include at least one of payment cards, service cards, gift cards, or personal identification cards. Afterwards, the controller 5860 may return to FIG. 61.

For example, the controller 5860 may display the recommended cards 6403 without displaying the user card 6401 in the card area 6450, as shown in FIG. 64a. In this case, the controller 5860 may display the images of the recommended cards 6403 and the names thereof in the recommended area 6457 of the recommended layer 6453. In addition, the controller 5860 may display an information message to guide the registration of the user card 6401 in the card layer 6451.

In addition, if it is determined that the user card 6401 exists in operation 6211, the controller 5860 may determine whether or not the number of user cards 6401 is less than or equal to a predetermined value in step 6213. For example, the predetermined value may be one.

Then, if it is determined that the number of user cards 6401 is less than or equal to a predetermined value in step 6213, the controller 5860 may display one or more user cards 6401 in step 6215. That is, the controller 5860 may display the user cards 6401 in the card layer 6451 of the card area 6450. In this case, the controller 5860 may display the user cards 6401 in the form of a list. For example, the controller 5860 may arrange the user cards 6401 in one direction. In addition, the controller 5860 may display one or more recommended cards 6403 in step 6217. That is, the controller 5860 may display the recommended cards 6403 in the recommended layer 6453 of the card area 6450. After that, the controller 5860 may return to FIG. 61.

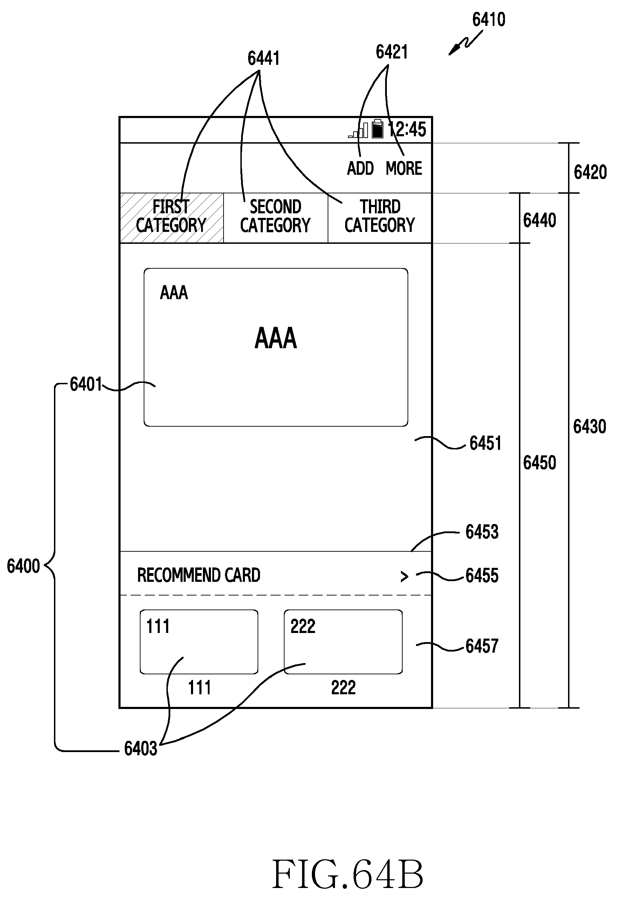

For example, the controller 5860 may display the recommended cards 6403, as well as the user card 6401, in the card area 6450 as shown in FIG. 64B. In this case, the controller 5860 may display the image of the user card 6401 in the card layer 6451. In addition, the controller 5860 may display the images of the recommended cards 6403 and the names thereof in the recommended area 6457 of the recommended layer 6453.

In addition, if it is determined that the number of user cards 6401 exceeds the predetermined value in step 6213, the controller 5860 may display a plurality of user cards 6401 in step 6219. That is, the controller 5860 may display the user cards 6401 in the card layer 6451 of the card area 6450. In this case, the controller 5860 may display the user cards 6401 in the form of a list. For example, the controller 5860 may arrange the user cards 6401 in one direction. In addition, the controller 5860 may remove the recommended layer 6453 from the card area 6450. Alternatively, the controller 5860 may remove the recommended area 6457 from the recommended layer 6453. That is, the controller 5860 may continue to display the call area 6455 in the recommended layer 6453. In this case, when the call area 6455 is selected, the controller 5860 may display the recommended area 6457 in the recommended layer 6453 again. Afterwards, the controller 5860 may return to FIG. 61.

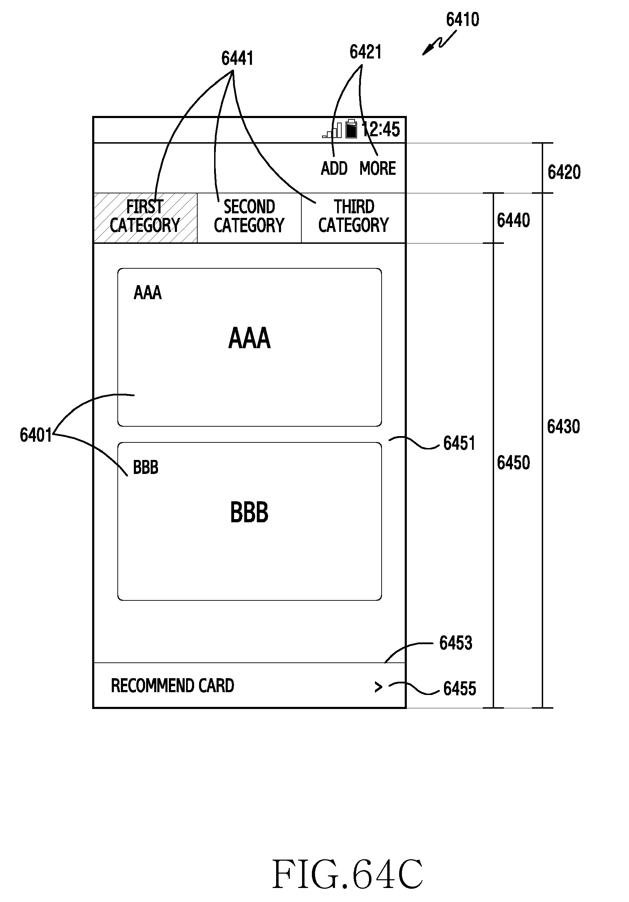

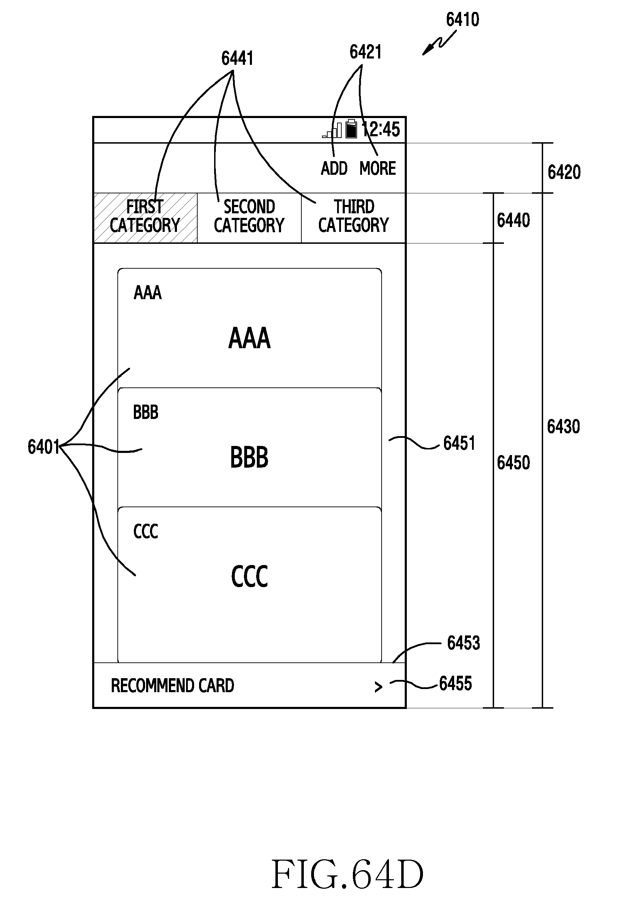

For example, the controller 5860 may display the user cards 6401 in the card area 6450 as shown in FIG. 64C. In this case, the controller 5860 may display the card images of the user cards 6401 in the card layer 6451. In addition, the controller 5860 may display the user cards 6401 to be spaced from each other. Alternatively, the controller 5860 may display the user cards 6401 in the card area 6450 as shown in FIGs. 64D to 64G. In this case, the controller 5860 may display the card images of the user cards 6401 in the card layer 6451. In addition, the controller 5860 may display the user cards 6401 to overlap each other. That is, the controller 5860 may display the user cards 6401 to be exposed, at least in part, in order to separate the same from each other. In this case, the controller 5860 may determine the height of the exposed portion of the user card 6401 according to the number of user cards 6401. According to this, the exposed portions of the user cards 6401 may have the same height.

Then, when a request for moving the electronic card 6400 is generated, the controller 5860 may detect the same in step 6115. In this case, the controller 5860 may detect the request for moving the electronic card 6400 in any one of the categories. In this case, the controller 5860 may detect the request for moving the electronic card 6400 to correspond to the card area 6450. For example, when a scroll signal is generated in one direction to correspond to the card layer 6451, the controller 5860 may detect the request for moving the user card 6401 in the card layer 6451. Alternatively, if the recommended card 6403 is selected from the recommended layer 6453, the controller 5860 may detect the request for moving the recommended card 6403 from the recommended layer 6453 to the card layer 6451.

Then, the controller 5860 may move the electronic card 6400 in step 6117. That is, the controller 5860 may move the electronic card 6400 in the card area 6450. For example, the controller 5860 may scroll on the user card 6401 in one direction in the card layer 6451. Alternatively, the controller 5860 may move the recommended card 6403 of the recommended layer 6453 to the card layer 6451. That is, the controller 5860 may convert the recommended card 6403 to the user card 6401. Afterwards, the controller 5860 may return to FIG. 60.

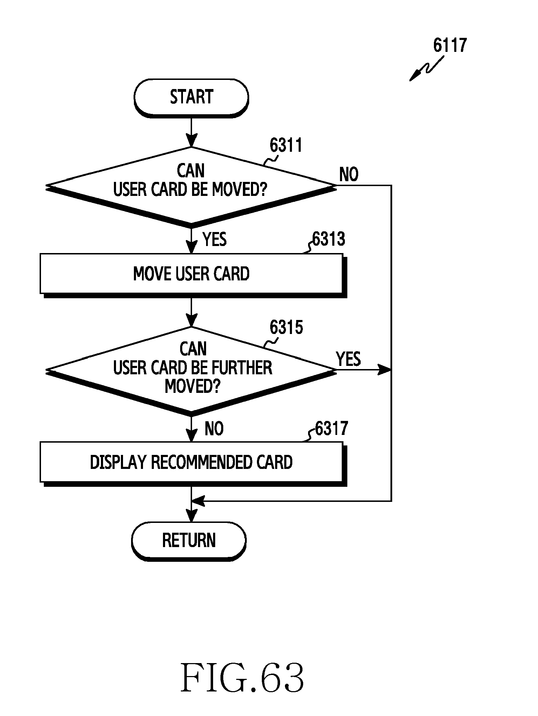

FIG. 63 is a flowchart of a method of moving the electronic card of FIG. 61.

Referring to FIG. 63, the controller 5860 may determine whether or not the user card 6401 is movable in step 6311. That is, the controller 5860 may determine whether or not the user card 6401 is movable in the card area 6450. For example, the controller 5860 may display a plurality of user cards 6401, and may determine whether or not to scroll on the user cards 6401.

Then, if it is determined that the user card 6401 is movable in step 6311, the controller 5860 may move the user card 6401 in step 6313. That is, the controller 5860 may move the user card 6401 in the card area 6450. In this case, the controller 5860 may scroll on the user card 6401 in the card layer 6451.

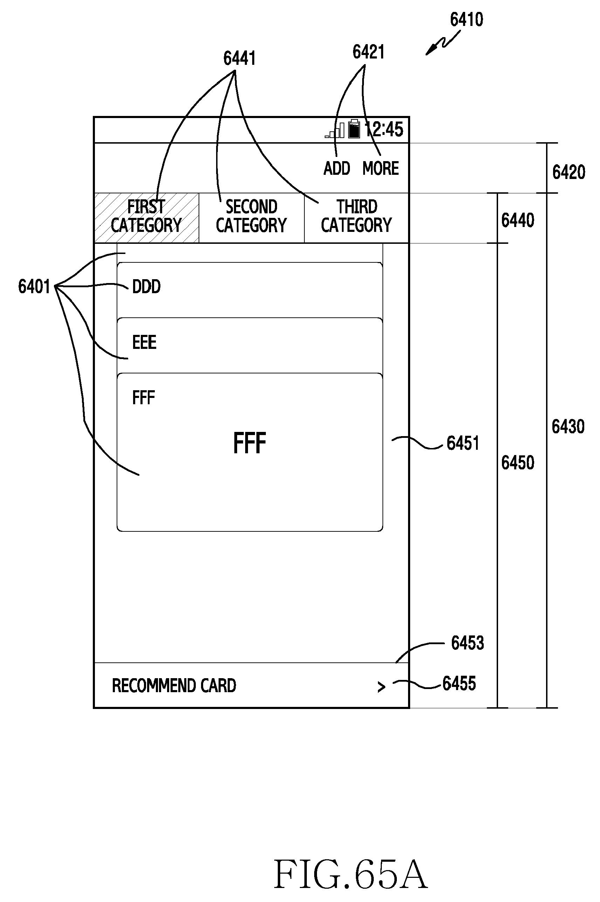

For example, the controller 5860 may scroll up on the user cards 6401 in the card area 6450 as shown in FIG. 65A. In this case, the controller 5860 may continue to display the call area 6455 of the recommended layer 6453. In this case, the controller 5860 may scroll on the end of the user cards 6401.

Then, the controller 5860 may determine whether or not the user card 6401 can be further moved in step 6315. That is, when the movement of the electronic card 6400 is stopped, the controller 5860 may determine whether or not the user card 6401 can be further moved. In this case, the controller 5860 may determine whether or not the user cards 6401 can be further scrolled up on to the top in the card layer 6451.

Then, if it is determined that the further movement of the user card 6401 is impossible in step 6315, the controller 5860 may display the recommended cards 6403 in step 6317. That is, the controller 5860 may display the recommended cards 6403 in the recommended layer 6453 of the card area 6450. In this case, the controller 5860 may display the recommended layer 6453 in the card area 6450 again. Alternatively, the controller 5860 may display the recommended area 6457 in the recommended layer 6453 again. After that, the controller 5860 may return to FIG. 61.

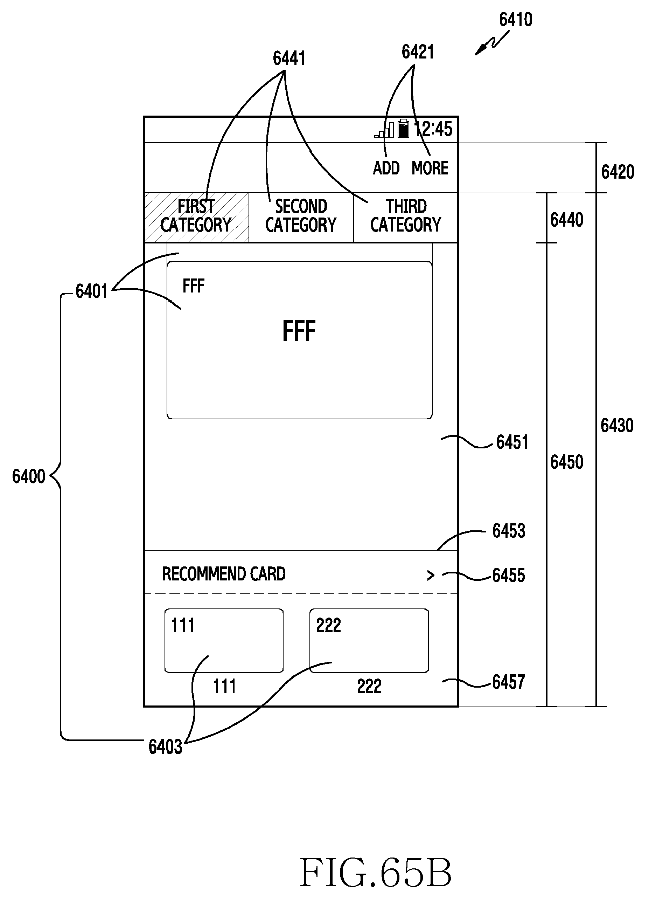

For example, the controller 5860 may display the recommended card 6403 at the end of the user cards 6401 as shown in FIG. 65B. In this case, the controller 5860 may display the card images of the recommended cards 6403 and the names thereof in the recommended area 6457 of the recommended layer 6453.

In addition, if it is determined that the movement of the user card 6401 is impossible in step 6311, the controller 5860 may return to FIG. 61. Alternatively, if it is determined that the further movement of the user card 6401 is impossible in step 6315, the controller 5860 may return to FIG. 61.

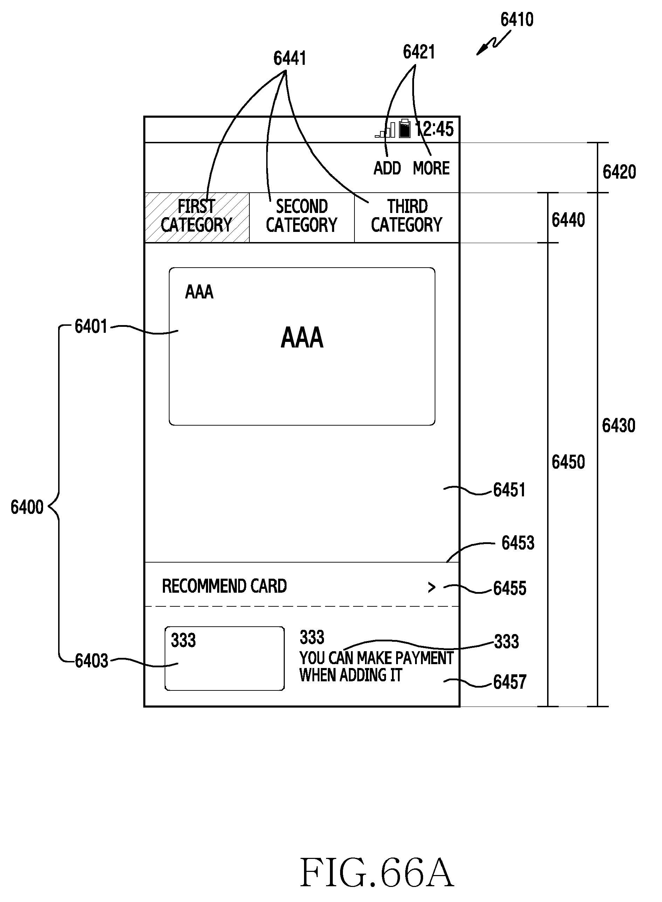

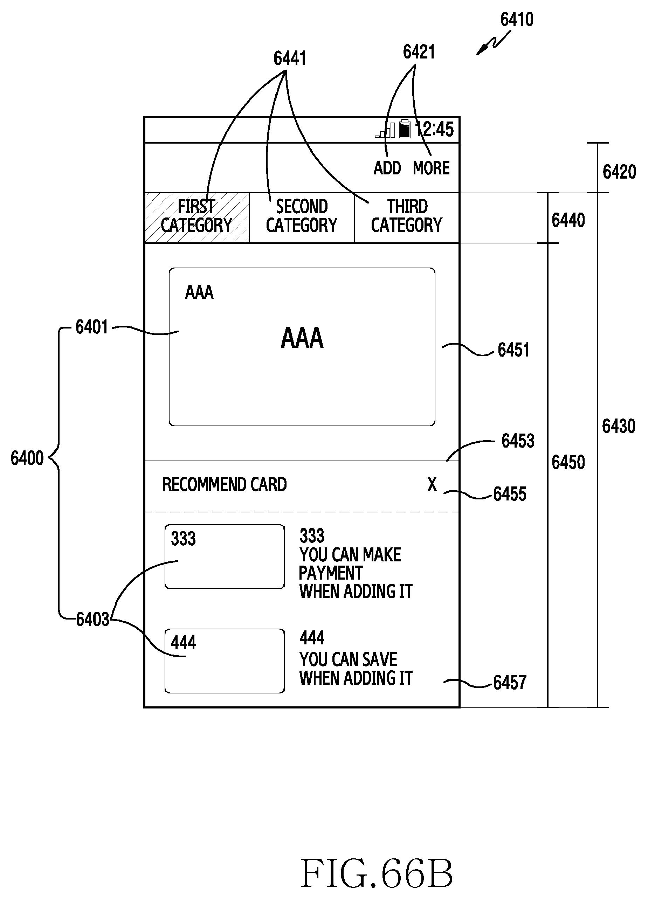

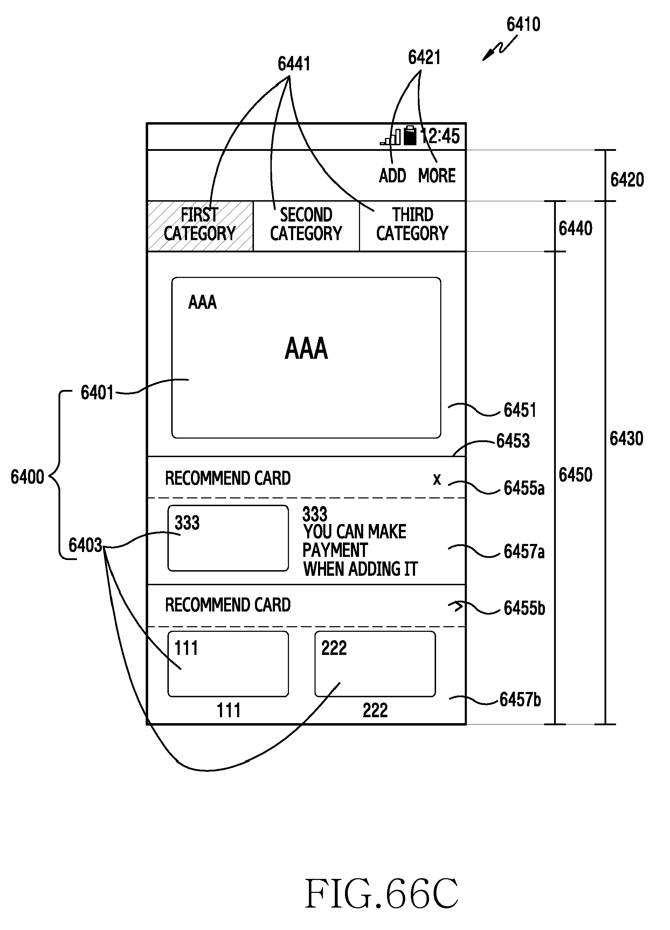

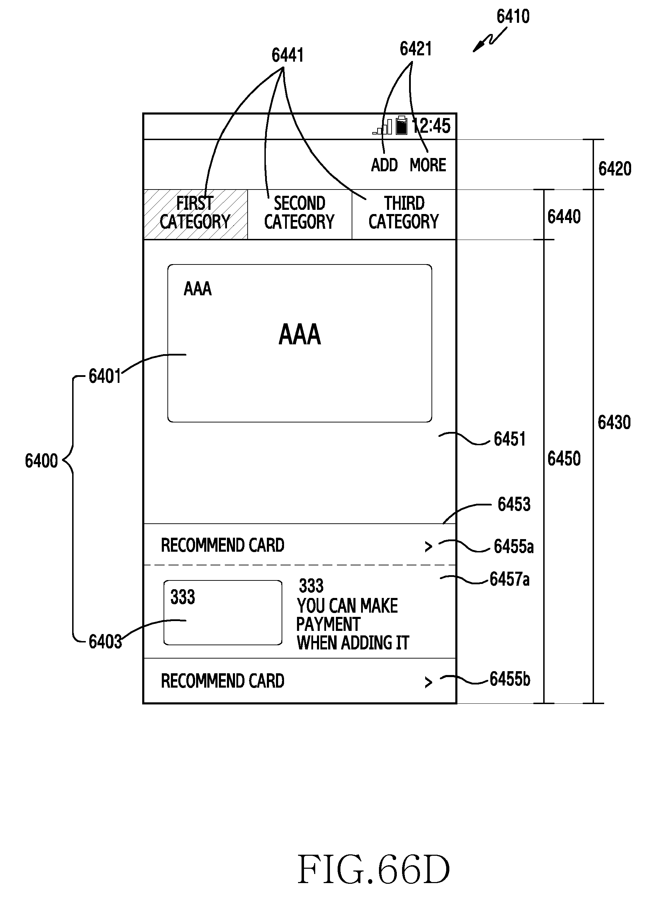

According to an embodiment of the present disclosure, the controller 5860 may display the recommended cards 6403 in the recommended layer 6453 as shown in FIGs. 66A to 66D. In this case, the controller 5860 may display the card images of the recommended cards 6403 and the recommendation messages in the recommended area 6457 of the recommended layer 6453 as shown in FIGs. 66A or 66B. Alternatively, the controller 5860 may display the first call area 6455a, the first recommended area 6457a, the second call area 6455b, and the second recommended area 6457b in the recommended layer 6453 as shown in FIG. 66C. Alternatively, the controller 5860 may display the first call area 6455a, the first recommended area 6457a, and the second call area 6455b in the recommended layer 6453 as shown in FIG. 66D. In addition, when the second call area 6455b is selected, the controller 5860 may further display the second recommended area 6457b in the recommended layer 6453. In this case, the controller 5860 may display the card image and recommendation message of the recommended card 6403 in the first recommended area 6457a, and may display the card image and the name of the recommended card 6403 in the second recommended area 6457b. Alternatively, the controller 5860 may display the card image and the name of the recommended card 6403 in the first recommended area 6457a, and may display the card image and recommendation message of the recommended card 6403 in the second recommended area 6457b.

In addition, when a request for moving the category occurs in a state in which the request for moving the electronic card 6400 is not detected in step 6117, the controller 5860 may detect the same in step 6021. In this case, the controller 5860 may detect the request for moving the category to correspond to the card area 6450. For example, when a moving signal is detected in a different direction to correspond to the card layer 6451, the controller 5860 may detect the request for moving the category in the card layer 6451. In addition, the controller 5860 may return to step 6111.

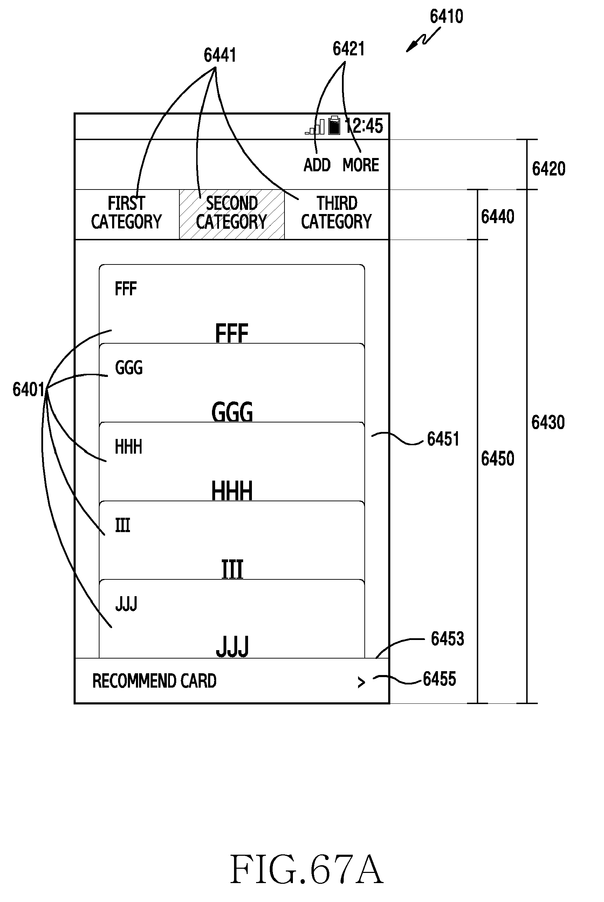

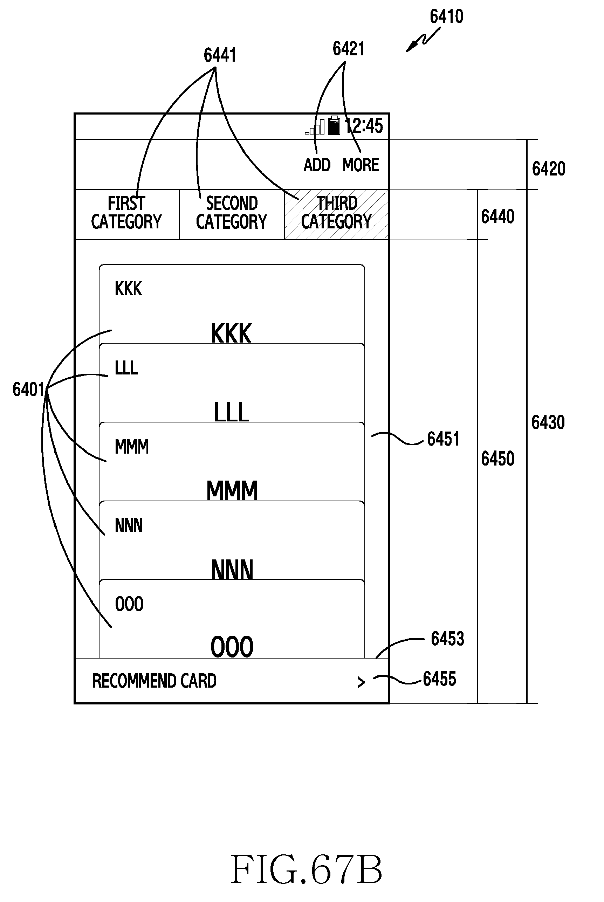

For example, the controller 5860 may move between the tabs 6441 of the tab area 6440 as shown in FIGs. 67B and 67C. In this case, the controller 5860 may move to the left and right. In this case, the controller 5860 may move from one of the categories to another.

In addition, if the request for moving the category is not detected in step 6121, the controller 5860 may return to FIG. 60.

Subsequently, if the electronic card 6400 is selected in the payment management screen 6410, the controller 5860 may detect the same in step 6015. In addition, the controller 5860 may display the card information screen 6910 in step 6017. In this case, the controller 5860 may display the card image, the usage information, and the payment module of the electronic card 6400 in the card information screen 6910. In this case, the controller 5860 may display the card image, the usage information, and the payment module in different layers.

In this case, the card information screen 6910 may include a menu display area 6920 and an information display area 6930. The menu display area 6920 may include one or more menus 6921. For example, the menus 6921 may include a menu for registering a non-registered electronic card 6400 in response to the payment execution function. The information display area 6930 may include an image layer 6931 for the card images, an information layer 6933 for the usage information, and a payment layer 6935 for the payment module.

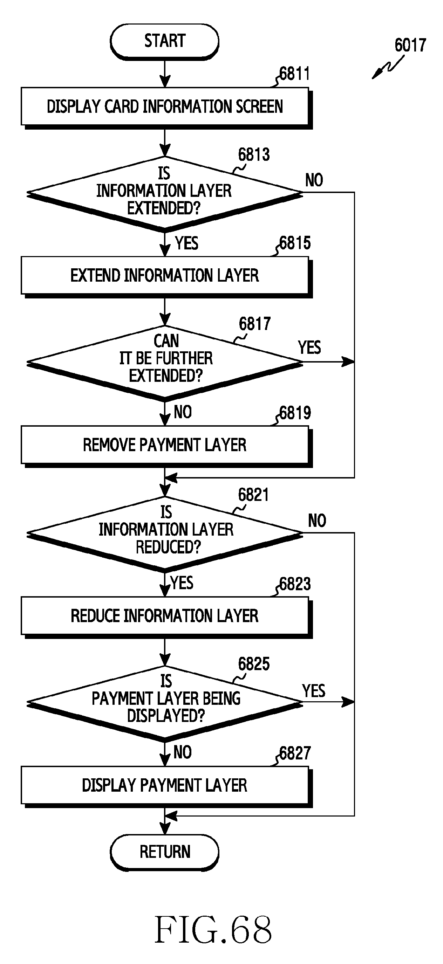

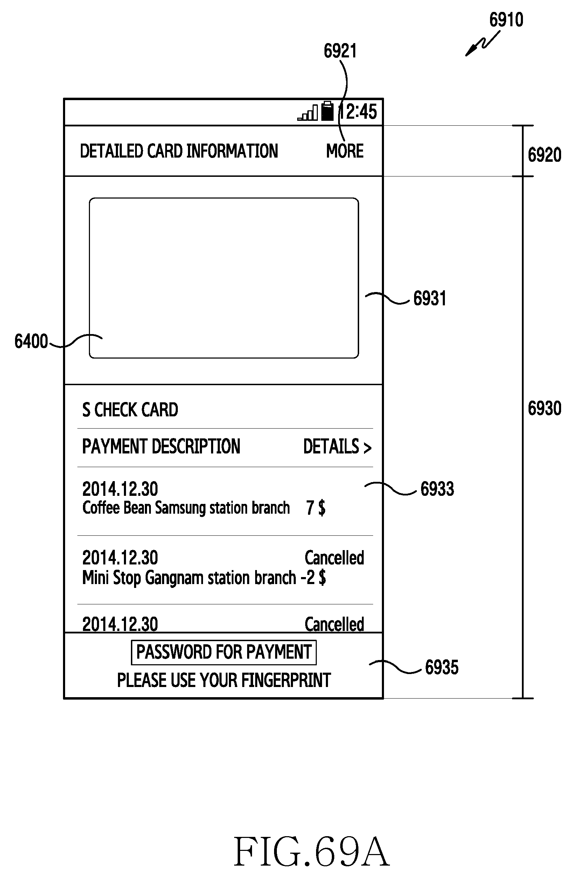

FIG. 68 is a flowchart of a method of displaying the card information screen in FIG. 60. In addition, FIGs. 69A to 69C illustrate examples of the card information screen displaying step in FIG. 68.

Referring to FIG. 68, the controller 5860 may display the card information screen 6910 in step 6811. In this case, the controller 5860 may display the image layer 6931, the information layer 6933, and the payment layer 6935 in the information display area 6930. In addition, the controller 5860 may display the card image of the electronic card 6400 in the image layer 6931; display the usage information in the information layer 6933; and display the payment module for using the electronic card 6400 in the payment layer 6935. For example, the controller 5860 may display the image layer 6931, the information layer 6933, and the payment layer 6935 in the information display area 6930 as shown in FIG. 69A. In addition, the controller 5860 may activate the payment module in response to the payment layer 6935.

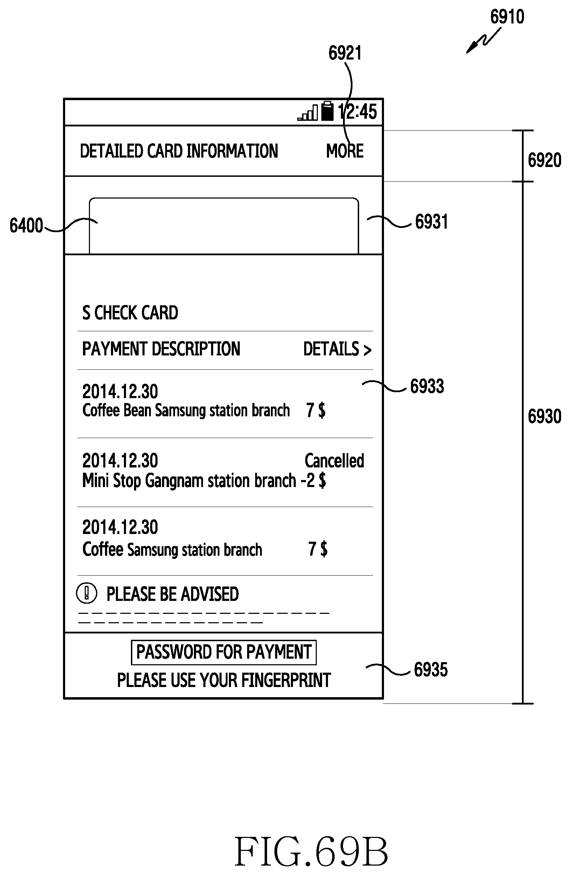

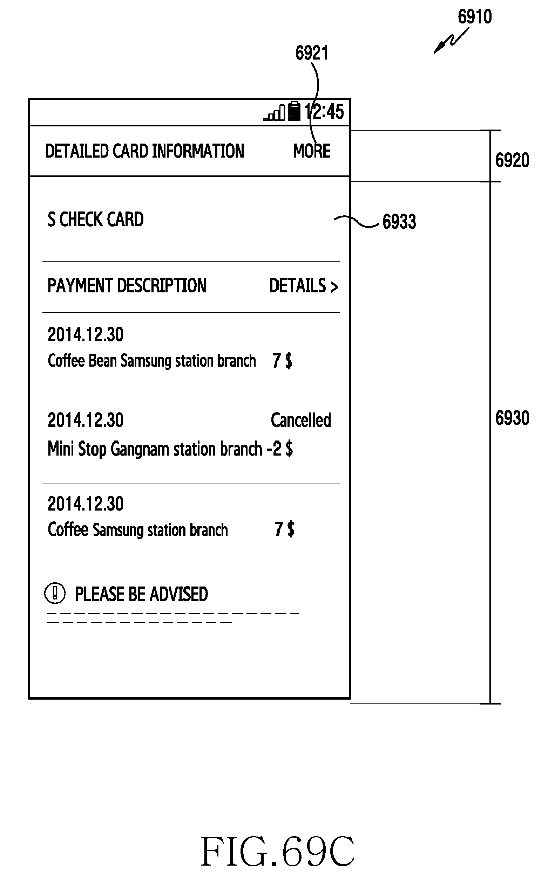

Then, when a request for extending the information layer 6933 occurs in the card information screen 6910, the controller 5860 may detect the same in step 6813. For example, if an extension signal is generated in one direction to correspond to the information layer 6933, the controller 5860 may detect the request for extending the information layer 6933 in the card information screen 6910. In addition, the controller 5860 may extend the information layer 6933 in the card information screen 6910 in operation 6815. In this case, the controller 5860 may display the user information to overlap the card image of the electronic card 6400. For example, the controller 5860 may extend the information layer 6933 in the information display area 6930 as shown in FIGs. 69B or 69C. In this case, the controller 5860 may display more information in the information layer 6933.

Then, the controller 5860 may determine whether or not the information layer 6933 can be further extended in step 6817. In other words, when the extension of the information layer 6933 is stopped, the controller 5860 may determine whether or not the information layer 6933 can be further extended. In this case, the controller 5860 may determine whether or not the information layer 6933 can be further extended in one direction in the card information screen 6910. In this case, the controller 5860 may determine whether or not the information layer 6933 can be further extended upwards in the card information screen 6910.

Then, if it is determined that the information layer 6933 cannot be further extended in operation 6817, the controller 5860 may remove the payment layer 6935 from the card information screen 6910 in step 6819. For example, if the information layer 6933 is extended to the maximum size, the controller 5860, as shown in FIG. 69C, may remove the payment layer 6935 from the information display area 6930. In addition, if it is determined that the information layer 6933 can be further extended in step 6817, the controller 5860 may maintain the payment layer 6935 in the card information screen 6910 instead of removing the same. For example, if the information layer 6933 is not extended to the maximum size, the controller 5860 may continue to display the payment layer 6935 in the information display area 6930 as shown in FIG. 69B.

Then, when a request for reducing the information layer 6933 occurs in the card information screen 6910, the controller 5860 may detect the same in step 6821. For example, if a reduction signal in one direction is generated to correspond to the information layer 6933, the controller 5860 may detect the request for reducing the information layer 6933 in the card information screen 6910. In addition, the controller 5860 may reduce the information layer 6933 in the card information screen 6910 in step 6823. In this case, the controller 5860 may expose the card image of the electronic card 6400 at least in part. For example, the controller 5860 may reduce the information layer 6933 in the information display area 6930 as shown in FIGs. 69A and 69B. In this case, the controller 5860 may display less usage information in the information layer 6933. In addition, the controller 5860 may determine whether or not the payment layer 6933 is displayed on the information display screen 6910 in step 6825.

Then, if it is determined that the payment layer 6933 is not displayed on the information display screen 6910 in step 6825, the controller 5860 may display the payment layer 6933 in the information display screen 6910 in step 6827. For example, the controller 5860 may display the payment layer 6933 in the information display area 6930 as shown in FIGs. 69A and 69B. In addition, the controller 5860 may activate the payment module to correspond to the payment layer 6935. Afterwards, the controller 5860 may return to FIG. 60.

In addition, if the request for reducing the information layer 6933 is not detected in the card information screen 6910 in step 6821, the controller 5860 may return to FIG. 60. Alternatively, if it is determined that the payment layer 6933 is not displayed in the information display screen 6910 in step 6825, the controller 5860 may return to FIG. 60.

Then, if a request for using the electronic card 6400 is created in the card information screen 6910, the controller 5860 may detect the same in step 6019. In this case, when the payment module of the payment layer 6935 is selected in the card information screen 6910, the controller 5860 may detect the request for using the electronic card 6400. In addition, the controller 5860 may use the electronic card 6400 in step 6021. For example, in the case where the electronic card 6400 is the payment card, the controller 5860 may perform the payment by using the electronic card 6400. Alternatively, in the case where the electronic card 6400 is the service card, the controller 5860 may use the membership services by using the electronic card 6400. Alternatively, in the case where the electronic card 6400 is the gift card, the controller 5860 may perform the goods exchange by using the electronic card 6400. Alternatively, in the case where the electronic card 6400 is the personal identification card, the controller 5860 may perform the user authentication by using the electronic card 6400. In this case, the operating method of the electronic device 5800 may be terminated.

In addition, in a state in which the selection of the electronic card 6400 is not detected in the payment management screen 6410 in step 6015, the controller 5860 may perform the corresponding function in step 6023. In this case, the controller 5860 may register the electronic card 6400 in response to the payment management function in the payment management screen 6410. In this case, the controller 5860 may register the electronic card 6400 as the user card 6401 in the payment management screen 6410.

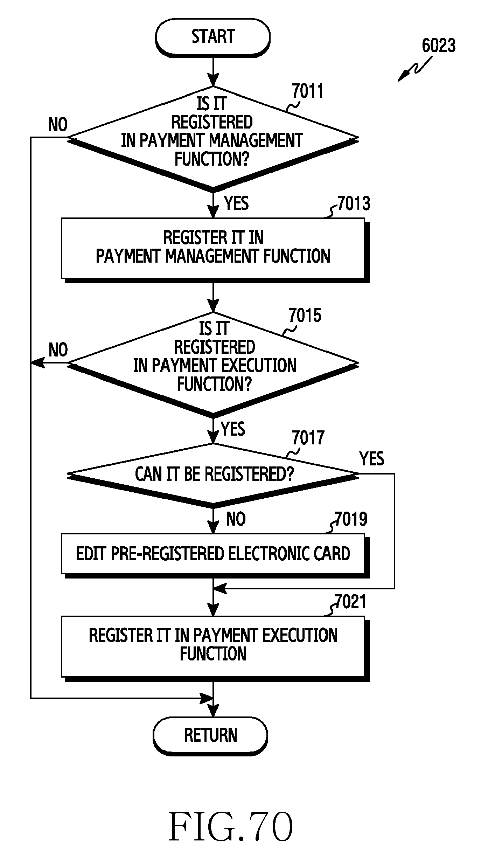

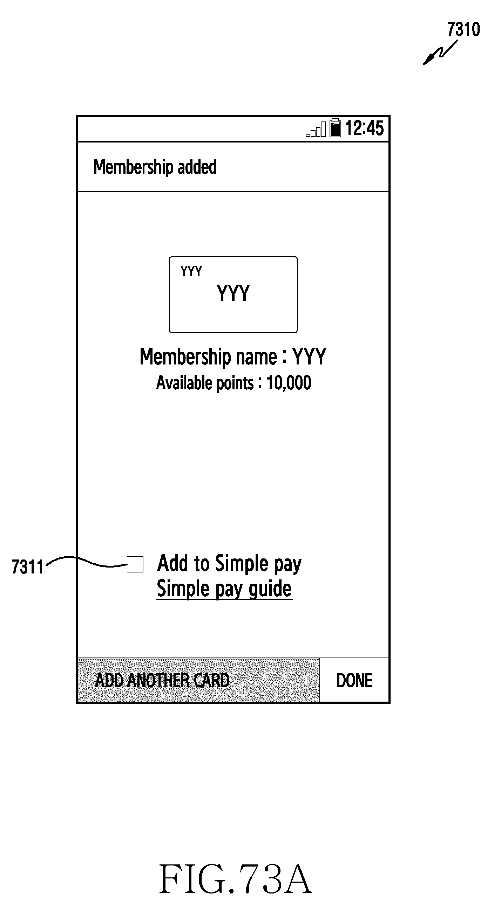

FIG. 70 is a flowchart of a method of executing the corresponding function in FIG. 60. In addition, FIGs. 73A to 73D illustrate examples of the step of executing the corresponding function in FIG. 70.

Referring to FIG. 70, with regard to the payment management function, when a request for registering the electronic card 6400 is generated, the controller 5860 may detect the same in step 7011. In this case, when a menu 6421 for registering the electronic card 6400 is selected in the payment management screen 6410, the controller 5860 may detect the request for registering the electronic card 6400 to correspond to the payment management function. In addition, the controller 5860 may register the electronic card 6400 in response to the payment management function in step 7013. In this case, the controller 5860 may search for and register the electronic card 6400. Alternatively, the controller 5860 may register the electronic card 6400 by photographing the real card. Alternatively, the controller 5860 may register the electronic card 6400 by using the card image that is pre-stored in the electronic device 5800. In this case, the controller 5860 may add the electronic card 6400 to the payment management screen 6410.

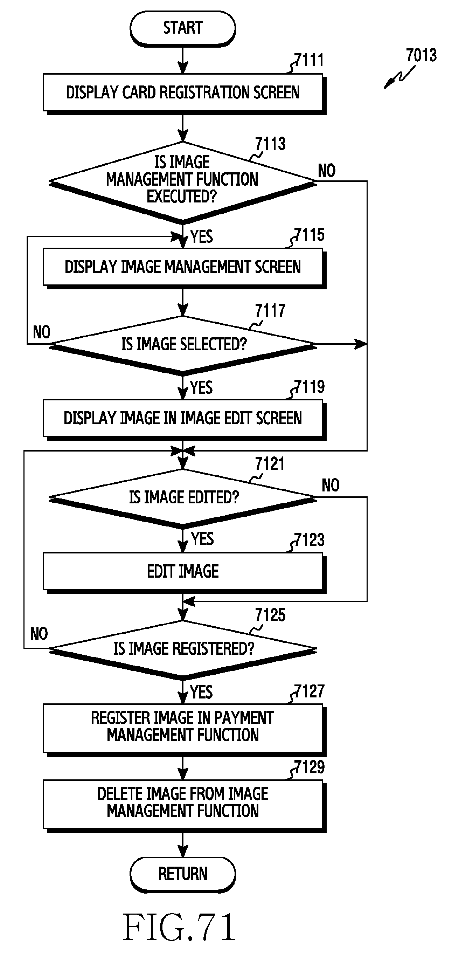

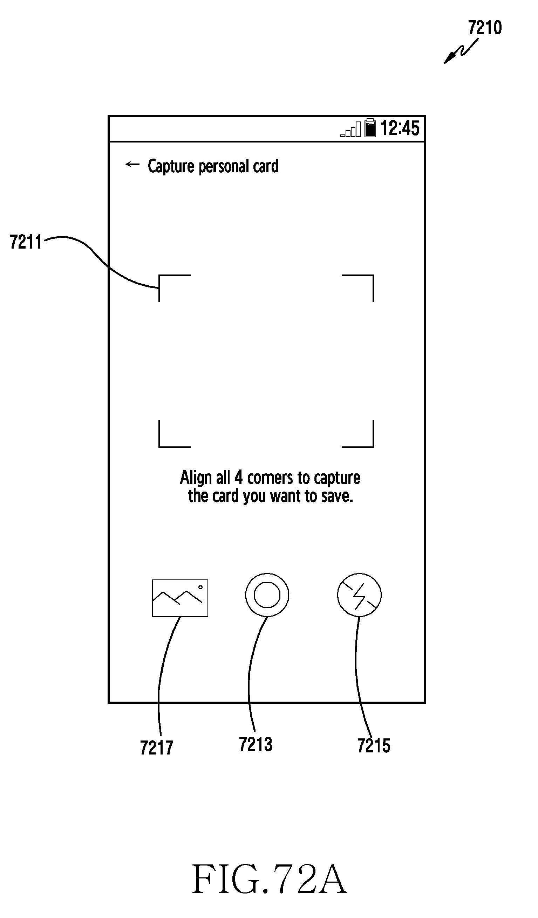

FIG. 71 is a flowchart of a method of registration for the payment management function in FIG. 70. In addition, FIGs. 72A to 72F illustrate views showing examples of the registration step in the payment management function in FIG. 71.

Referring to FIG. 71, the controller 5860 may display the card registration screen 7210 in step 7111. For example, the controller 5860 may display the card registration screen 7210 as shown in FIG. 72A. In this case, the card registration screen 7210 may include a guide window 7211 for guiding the location of the real card; a photographing icon 7213 for photographing images in the guide window 7211; a flash icon 7215 for illuminating the secondary light when photographing the images; and an image icon 7217 for performing the image management function.

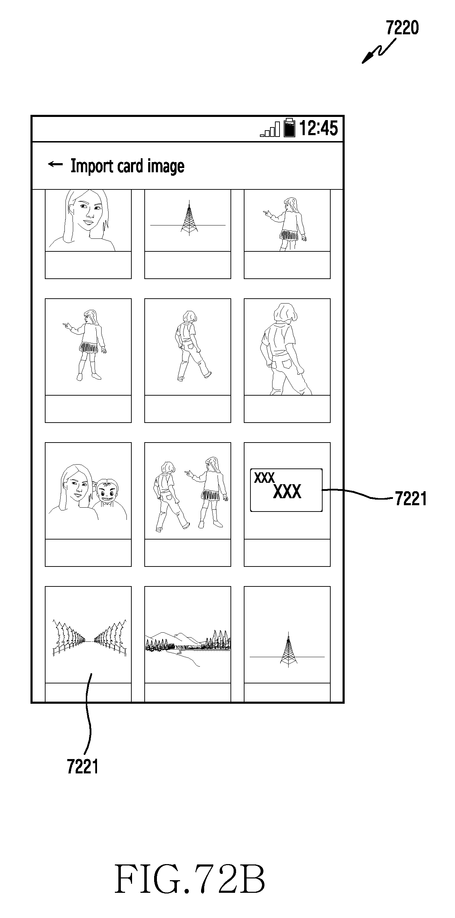

Then, when a request for executing the image management function is received, the controller 5860 may detect the same in step 7113. In this case, when the image icon 7217 is selected in the card registration screen 7210, the controller 5860 may detect the request for executing the image management function. In addition, the controller 5860 may display the image management screen 7220 in step 7115. In this case, the image management screen 7220 may include one or more images that are pre-stored to correspond to the image management function. For example, the controller 5860 may display the images in the form of a list as shown in FIG. 72B.

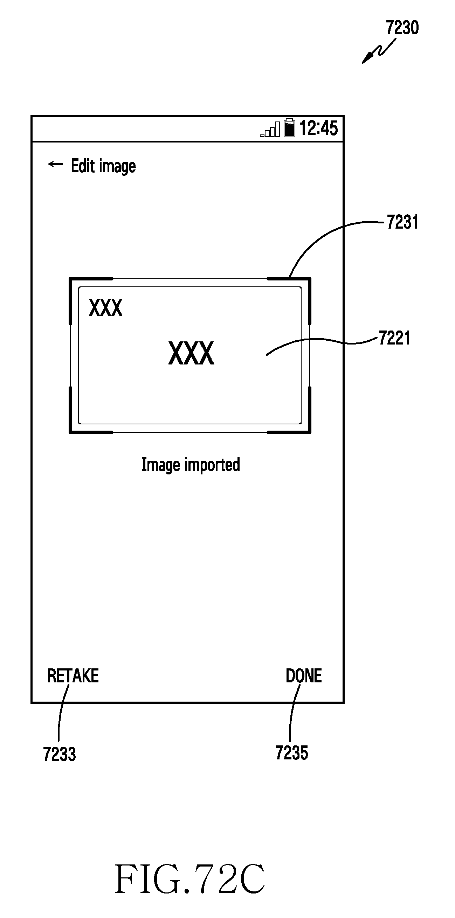

Then, when the image is selected in the image management screen 7220, the controller 5860 may detect the same in step 7117. In addition, the controller 5860 may display the image 7221 in the image editing screen 7230 in step 7119. For example, the controller 5860 may display the image 7221 in the image edit screen 7230 as shown in FIG. 72C. In this case, the image editing screen 7230 may include an image window 7231 for displaying the image 7221 in the image editing screen 7230; a returning item 7233 to return to the card registration screen 7210; and a registration item 7235 for registering the image 7221.

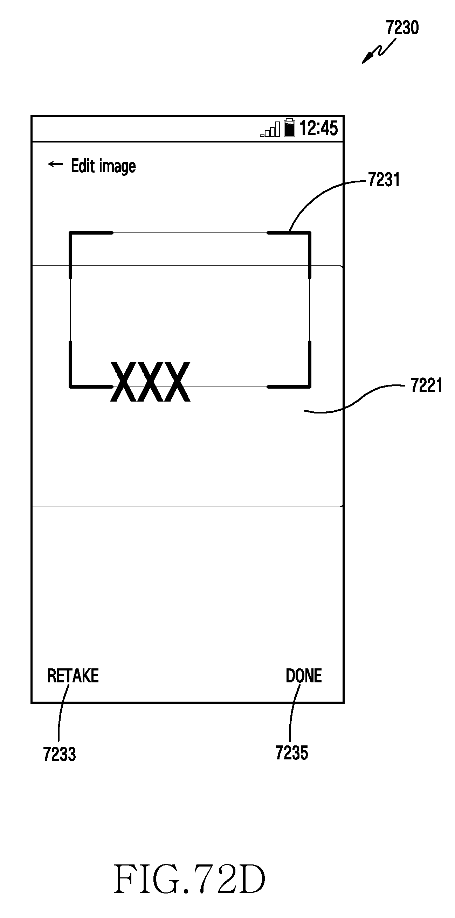

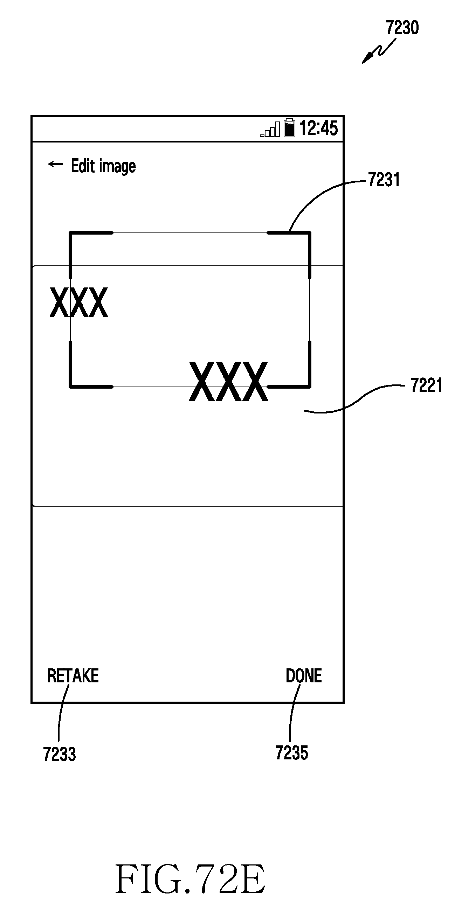

Then, when a request for editing the image 7221 is received in the image editing screen 7230, the controller 5860 may detect the same in step 7121. In addition, the controller 5860 may edit the image 7221 in the image editing screen 7230 in step 7123. For example, the controller 5860 may enlarge the image 7221 as shown in FIG. 72D, and may move the image 7221 as shown in FIG. 72E.

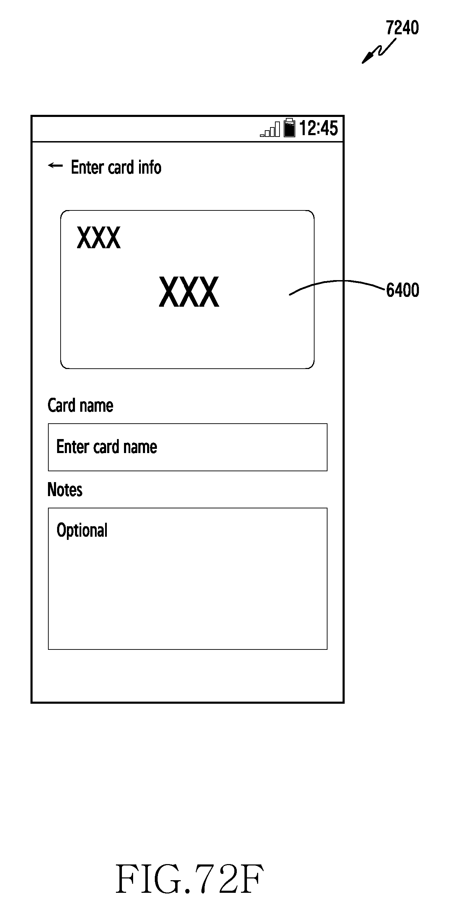

Then, when a request for registering the image 7221 is received in the image editing screen 7230, the controller 5860 may detect the same in step 7125. In this case, when the registration item 7235 is selected in the image editing screen 7230, the controller 5860 may detect the request for registering the image 7221 in the image edit screen 7230. In addition, the controller 5860 may register the image 7221 in response to the payment management function in step 7127. In this case, the controller 5860 may register the image 7221 by using the card image of the electronic card 6400. For example, the controller 5860 may display the information input screen 7240 as shown in FIG. 72F. In addition, the controller 5860 may register the card name of the electronic card 6400 through the information input screen 7240.

Then, the controller 5860 may delete the image 7221 in the image management function in step 7129. Afterwards, the controller 5860 may return to FIG. 70.

In addition, if the request for executing the image management function is not detected in step 7113, the controller 5860 may return to FIG. 70. Alternatively, the controller may photograph the real card in a state in which the request for executing the image management function is not detected in step 7113, and may register the electronic card 6400. For example, if the photographing icon 7213 is selected in the card registration screen 7210, the controller 5860 may photograph the image in the guide window 7211. In addition, the controller 5860 may display the image 7221 in the image editing screen 7230 as shown in FIG. 72C. Here, the controller 5860 may edit the image 7221 in the image editing screen 7230. In addition, if the request for the registration of the image 7221 is received in the image editing screen 7230, the controller 5860 may register the image 7221 to correspond to the payment management function. Afterwards, the controller 5860 may return to FIG. 70.

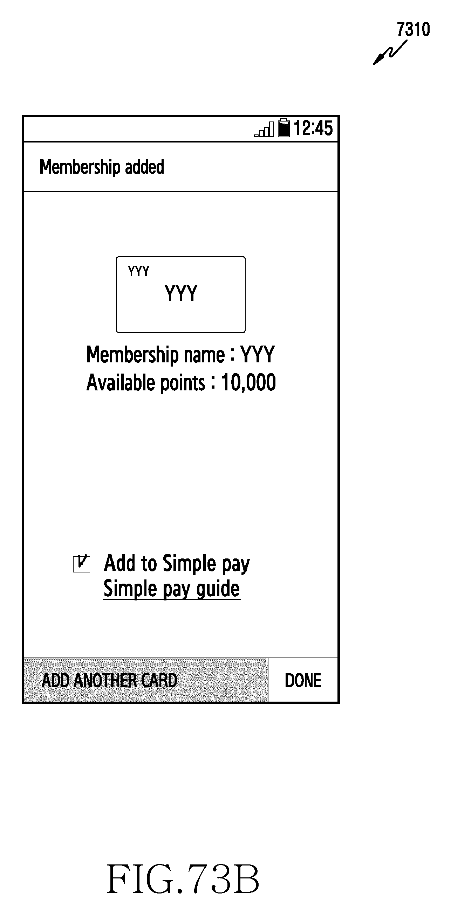

Then, the controller 5860 may register the electronic card 6400 in response to the payment management function in step 7013, and may determine whether or not to register the electronic card 6400 in response to the payment execution function in step 7015. For example, when the electronic card 6400 is registered in response to the payment management function, the controller 5860 may display the registration confirmation screen 7310 as shown in FIG. 73A. In this case, the controller 5860 may display a radio button 7311 to choose the registration of the electronic card 6400 in response to the payment execution function in the registration confirmation screen 7310. In addition, when the radio button 7311 is selected as shown in FIG. 73B, the controller 5860 may determine to register the electronic card 6400 in response to the payment management function.

Then, if it is determined that the electronic card 6400 is to be registered in response to the payment execution function in step 7015, the controller 5860 may determine whether or not the electronic card 6400 can be registered in response to the payment execution function in step 7017. In this case, the controller 5860 may determine whether or not the number of electronic cards 6400 corresponding to the payment execution function reaches a predetermined number.

Then, if it is determined that the electronic card 6400 can be registered in response to the payment execution function in step 7017, the controller 5860 may register the electronic card 6400 to correspond to the payment execution function in step 7021. Afterwards, the controller 5860 may return to FIG. 60.

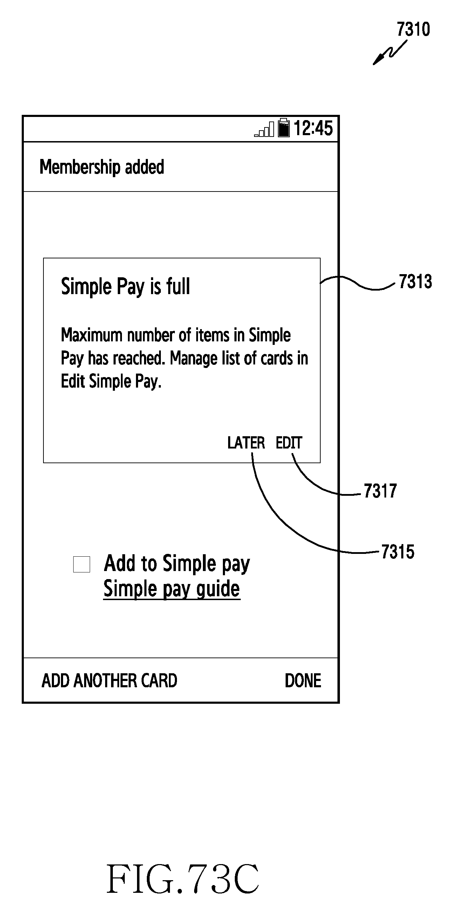

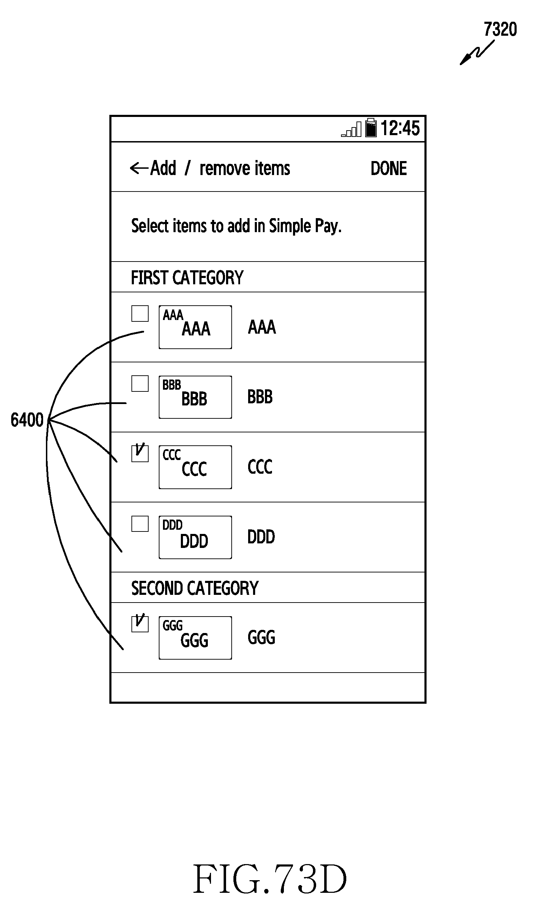

In addition, if it is determined that the electronic card 6400 cannot be registered in response to the payment execution function in step 7017, the controller 5860 may edit the pre-registered electronic card 6400 to correspond to the payment execution function in step 7019. For example, the controller 5860 may display a message window 7313 that inquires whether or not the pre-registered electronic card 6400 is to be edited in response to the payment execution function as shown in FIG. 73C. In this case, the message window 7313 may include an end item 7315 to close the message window 7313 without editing the pre-registered electronic card 6400 in response to the payment execution function, and an editing item 7317 to edit the pre-registered electronic card 6400 in response to the payment execution function. In addition, when the editing item 7317 is selected in the message window 7313, the controller 5860 may display the card editing screen 7320 as shown in FIG. 73D. In this case, the controller 5860 may display the pre-registered electronic card 6400 in response to the payment execution function in the card editing screen 7320. In addition, if the pre-registered electronic card 6400 is selected in the card editing screen 7320, the controller 5860, in response to the payment execution function, may delete the pre-registered electronic card 6400.

Then, the controller 5860 may register the electronic card 6400 in response to the payment execution function in step 7021. Afterwards, the controller 5860 may return to FIG. 60.

In addition, in a state in which the request for using the electronic card 6400 is not detected in the card information screen 6910 in step 6019, the controller 5860 may perform the corresponding function in step 6023. In this case, the controller 5860 may register the electronic card 6400 in the card information screen 6910, in response to the payment execution function.

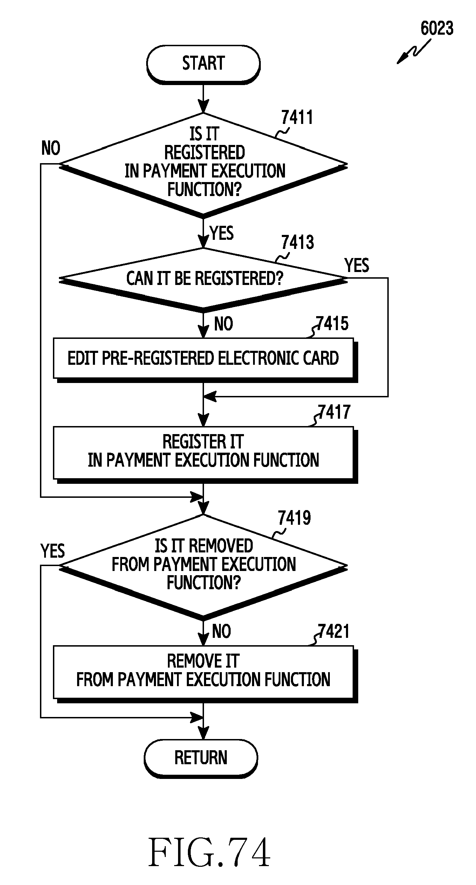

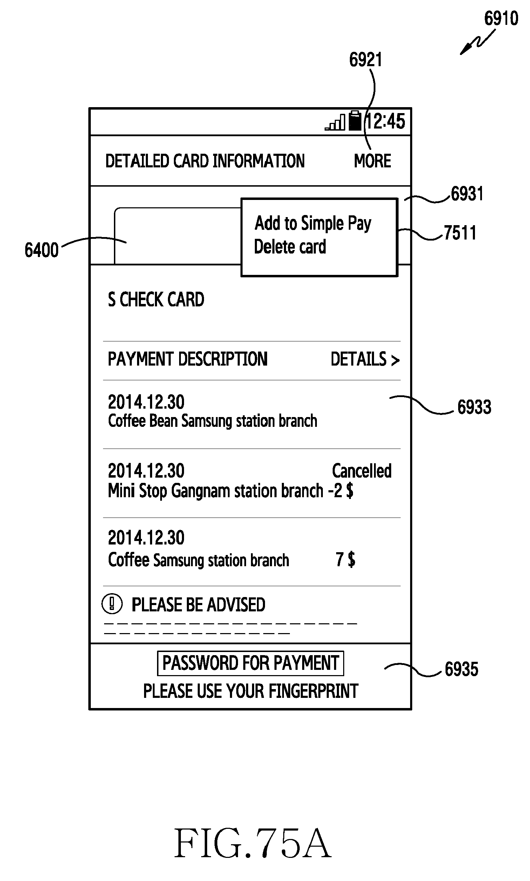

FIG. 74 is a flowchart of a method of executing the corresponding function in FIG. 60. In addition, FIGs. 75A to 76C illustrate views showing examples of the function execution step in FIG. 74.

Referring to FIG. 74, when a request for registering the electronic card 6400 is received in response to the payment execution function, the controller 5860 may detect the same in step 7411. In this case, a menu 6921 for registering the electronic card 6400 is selected in response to the payment execution function in the card information screen 6910, the controller 5860 may detect the request for registering the electronic card 6400 in response to the payment execution function. For example, if the menu 6921 is selected in the card information screen 6910, the controller 5860 may display the sub-menu 7511 as shown in FIG. 75A. In this case, the sub-menu 7511 may be for registering the electronic card 6400 in response to the payment execution function, or may be for deleting the electronic card 6400 in response to the payment registration function. In addition, the controller 5860 may determine whether or not the electronic card 6400 can be registered in response to the payment execution function in step 7413. In this case, the controller 5860 may determine whether or not the number of electronic cards 6400 corresponding to the payment execution function reaches a predetermined number.

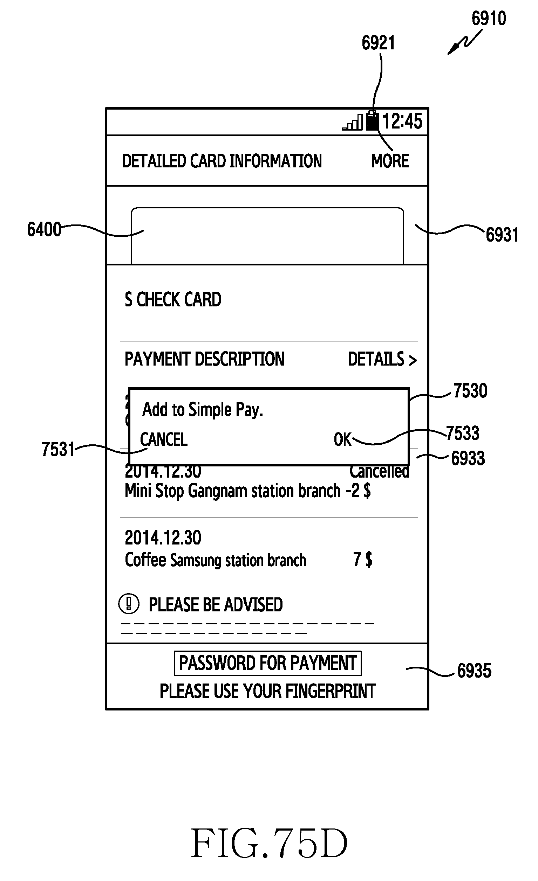

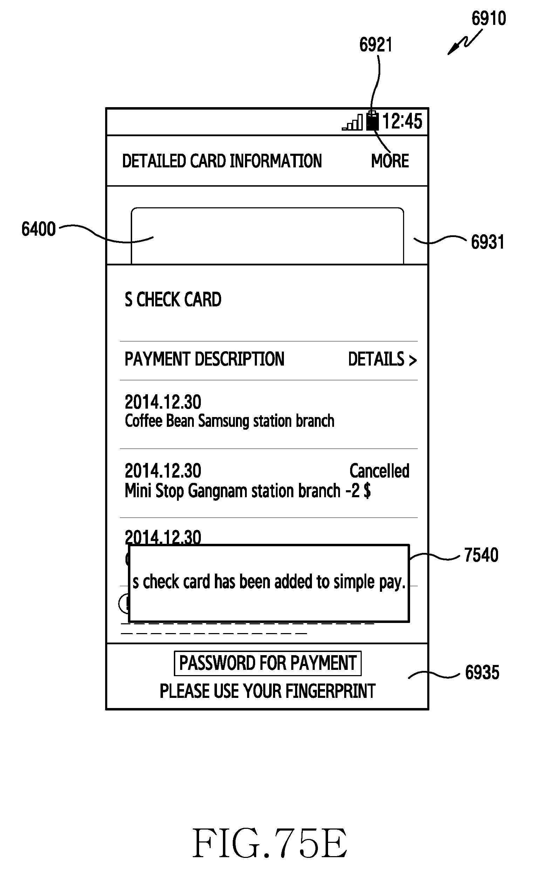

Then, if it is determined that the electronic card 6400 can be registered in response to the payment execution function in step 7413, the controller 5860 may register the electronic card 6400 to correspond to the payment execution function in step 7417. For example, the controller 5860 may display a message window 7530 that confirms the registration of the electronic card 6400 in response to the payment execution function as shown in FIG. 75D. In this case, the message window 7530 may include a cancellation item 7531 to cancel the registration of the electronic card 6400, and an application item 7533 to apply the registration of the electronic card 6400. In addition, when the application item 7533 is selected in the message window 7530, the controller 5860 may register the electronic card 6400 in response to the payment execution function. In addition, the controller 5860 may display a message window 7540 to inform of the completion of the registration of the electronic card 6400 in response to the payment execution function as shown in FIG. 75E.

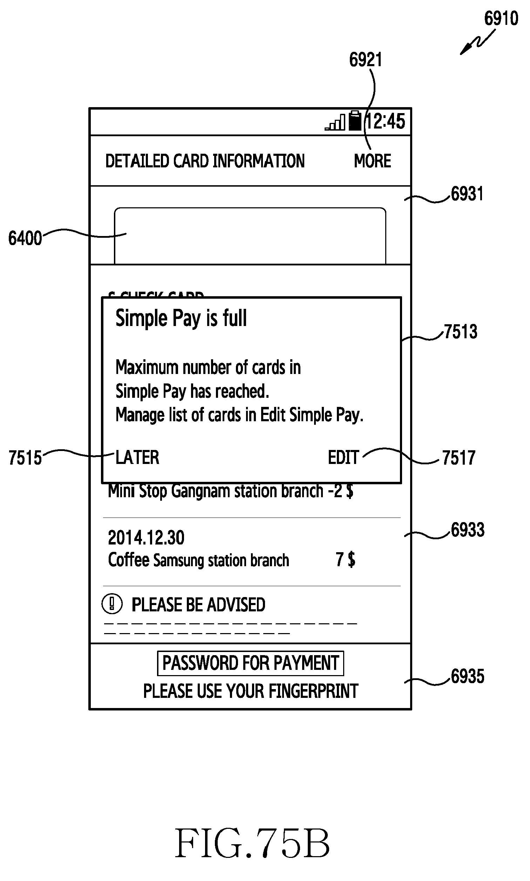

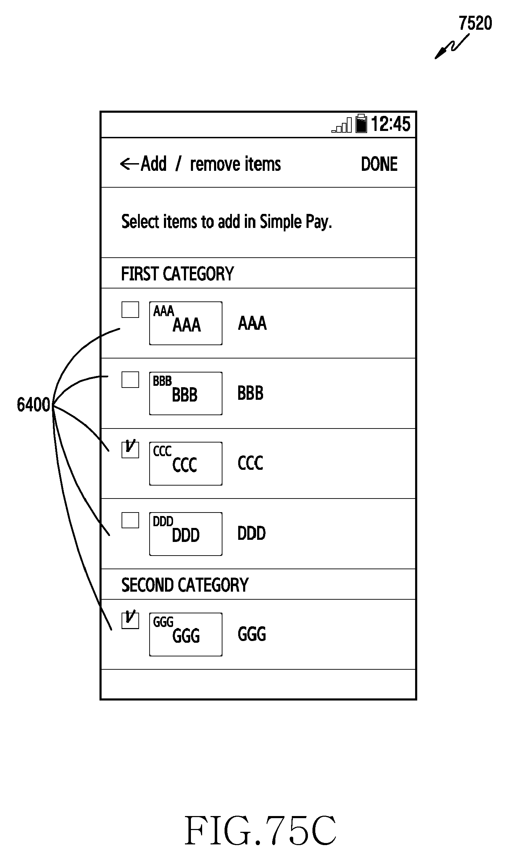

Meanwhile, if it is determined that the registration of the electronic card 6400 is impossible in response to the payment execution function in step 7413, the controller 5860 may edit the pre-registered electronic card 6400 in response to the payment execution function in step 7415. For example, the controller 5860 may display a message window 7513 that inquires whether or not the pre-registered electronic card 6400 is to be edited, in response to the payment execution function, as shown in FIG. 75B. In this case, the message window 7513 may include an end item 7515 to close the message window 7513 without editing the pre-registered electronic card 6400 in response to the payment execution function, and may further include an editing item 7517 to edit the pre-registered electronic card 6400 in response to the payment execution function. In addition, when the editing item 7517 is selected in the message window 7513, the controller 5860 may display the card editing screen 7520 as shown in FIG. 75C. In this case, the controller 5860 may display the pre-registered electronic card 6400 in response to the payment execution function in the card editing screen 7520. In addition, if the pre-registered electronic card 6400 is selected in the card editing screen 7520, the controller 5860, in response to the payment execution function, may delete the pre-registered electronic card 6400.

Then, the controller 5860 may register the electronic card 6400 in response to the payment execution function in step 7417. For example, the controller 5860 may display a message window 7533 that confirms the registration of the electronic card 6400 in response to the payment execution function as shown in FIG. 75D. In this case, the message window 7533 may include the cancellation item 7531 to cancel the registration of the electronic card 6400, and the application item 7533 to apply the registration of the electronic card 6400. In addition, when the application item 7533 is selected in the message window 7533, the controller 5860 may register the electronic card 6400 in response to the payment execution function. In addition, the controller 5860 may display a message window 7540 to inform of the completion of the registration of the electronic card 6400 in response to the payment execution function as shown in FIG. 75E. Afterwards, the controller 5860 may return to FIG. 60.

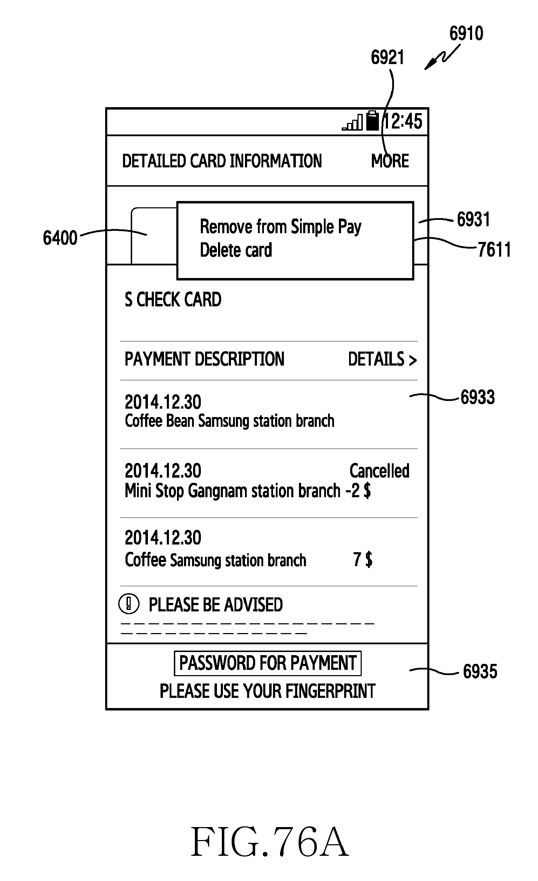

In addition, when a request for deleting (e.g., removing) the electronic card 6400 is received in response to the payment execution function, the controller 5860 may detect the same in step 7419. In this case, a menu 6921 for deleting the electronic card 6400 is selected in response to the payment execution function in the card information screen 6910, the controller 5860 may detect the request for deleting the electronic card 6400 in response to the payment execution function. For example, if the menu 6921 is selected in the card information screen 6910, the controller 5860 may display a sub-menu 7611 as shown in FIG. 76A. In this case, the sub-menu 7611 may be for deleting the electronic card 6400 in response to the payment execution function, or may be for deleting the electronic card 6400 in response to the payment registration function.

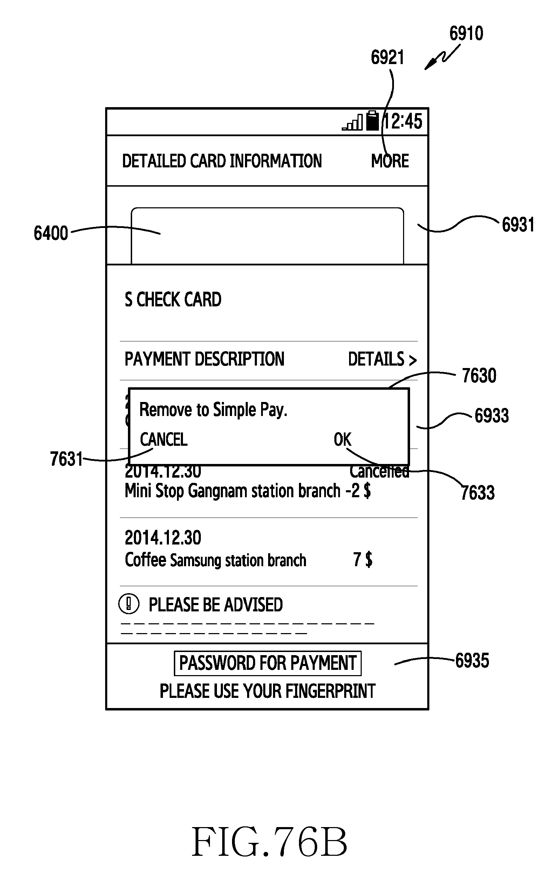

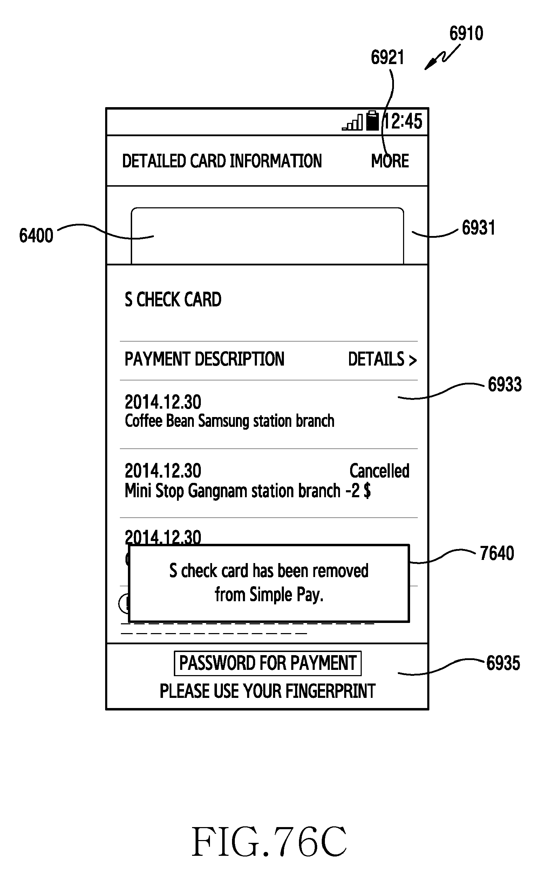

Then, the controller 5860 may delete (e.g., remove) the electronic card 6400 in response to the payment execution function in step 7421. For example, the controller 5860 may display a message window 7630 that confirms the deletion of the electronic card 6400 in response to the payment execution function as shown in FIG. 76B. In this case, the message window 7630 may include a cancellation item 7631 to cancel the deletion of the electronic card 6400 and an application item 7633 to apply the deletion of the electronic card 6400. In addition, when the application item 7633 is selected in the message window 7630, the controller 5860 may delete the electronic card 6400 in response to the payment execution function. In addition, the controller 5860 may display a message window 7640 to inform of the completion of the deletion of the electronic card 6400 in response to the payment execution function as shown in FIG. 76C.

In addition, in a state in which the selection of the electronic card 6400 is not detected in the payment management screen 6410 in step 6015, or in a state in which the request for using the electronic card 6400 is not detected in the card information screen 6910 in step 6019, the controller 5860 may perform the corresponding function in step 6023. In this case, the controller 5860 may search for the electronic cards 6400. For example, the controller 5860 may search for the non-registered electronic cards 6400 in response to the payment management function. In this case, the controller 5860 may register the electronic card 6400 in response to the payment management function. That is, the controller 5860 may register the electronic card 6400 as the user card 6401.

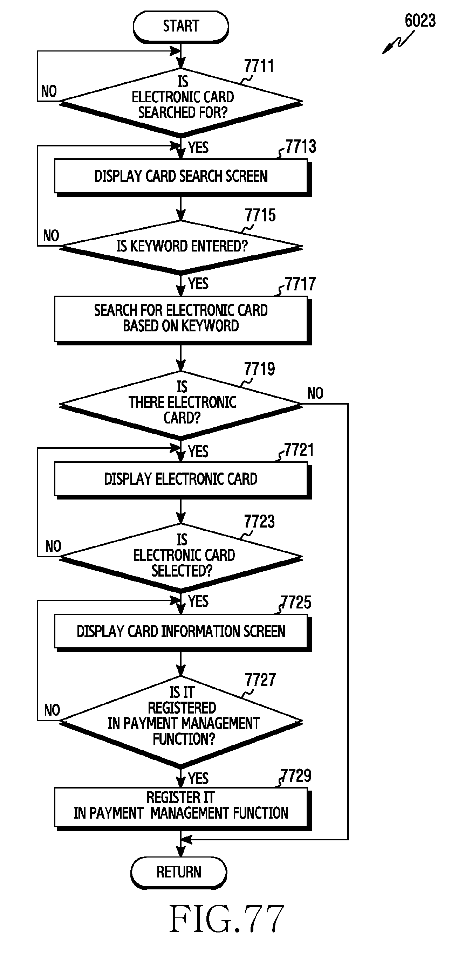

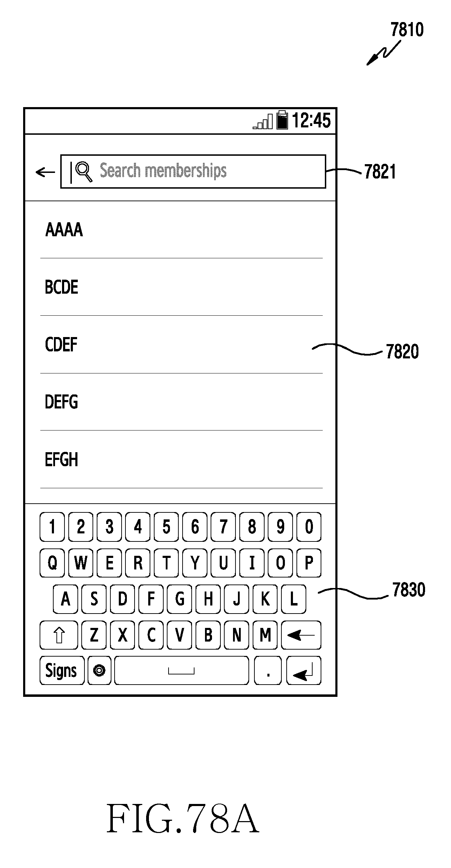

FIG. 77 is a flowchart of a method of executing the corresponding function in FIG. 60. In addition, FIGs. 78A to 78D illustrate views showing examples of the function execution step in FIG. 77.

Referring to FIG. 77, when a request for searching for the electronic cards 6400 is received, the controller 5860 may detect the same in step 7711. In addition, the controller 5860 may display a card search screen 7810 in step 7713. In this case, the card search screen 7810 may include a search layer 7820 for displaying keywords, and a keypad layer 7830 for entering keywords. In this case, the search layer 7820 may include a search window 7821 for displaying text. In addition, the controller 5860 may display a keypad in the keypad layer 7830. The keypad may include a plurality of character keys, and at least one character may be allocated to each character key.

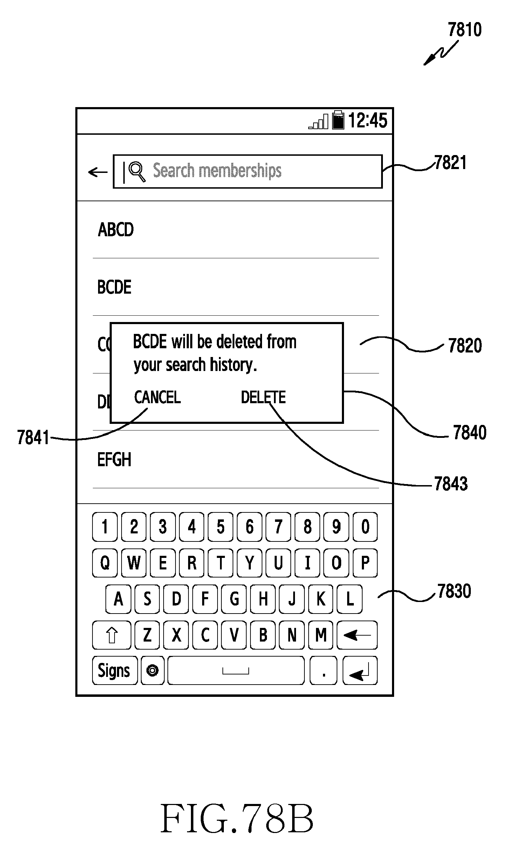

For example, the controller 5860 may display a search history that contains one or more previous keywords in the search layer 7820 as shown in FIG. 78A. In this case, when the search history is selected in the search layer 7820, the controller 5860 may display a message window 7840 that inquires whether or not the search history is to be deleted as shown in FIG. 78B. In this case, the message window 7840 may include an end item 7841 to close the message window 7840 without deleting the search history, and a deletion item 7843 to delete the search history. In addition, when the deletion item 7843 is selected in the message window 7840, the controller 5860 may delete the search history from the search layer 7820.

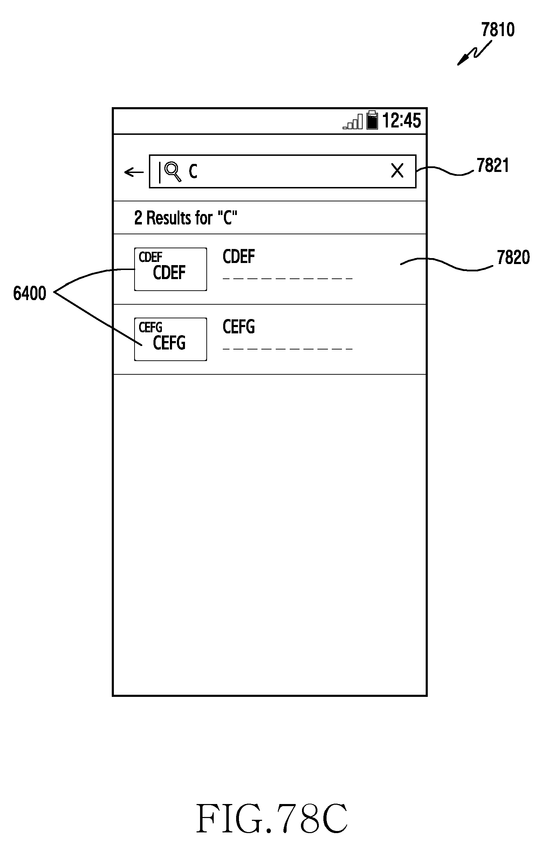

Then, when a keyword is input (e.g., entered), the controller 5860 may detect the same in step 7715. In this case, when one or more character keys are selected in the layer 7830, the controller 5860 may determine the text by combining one or more characters or a plurality of characters. In addition, the controller 5860 may display the text in the search window 7821 of the search layer 7820 as the keyword. For example, the controller 5860 may display the keyword in the search window 7821 of the search layer 7820 as shown in FIG. 78C.

Then, the controller 5860 may search for the electronic cards 6400 based on the keyword in step 7717. For example, the controller 5860 may search for the electronic card 6400 of which the name is the same as the keyword. The controller 5860 may search for the electronic card 6400 of which the name contains the keyword. In addition, the controller 5860 may determine whether or not there is an electronic card 6400 corresponding to the keyword in step 7719.

Then, when there is an electronic card 6400 in step 7719, the controller 5860 may display the electronic card 6400 in step 7721. In this case, the controller 5860 may display the electronic card 6400 in the search layer 7820. That is, the controller 5860 may display the electronic card 6400 as the recommended card 6403. For example, the controller 5860 may display the electronic cards 6400 in the search layer 7820 as shown in FIG.78C. When the electronic card 6400 is selected in the search layer 7820, the controller 5860 may detect the same in step 7723.

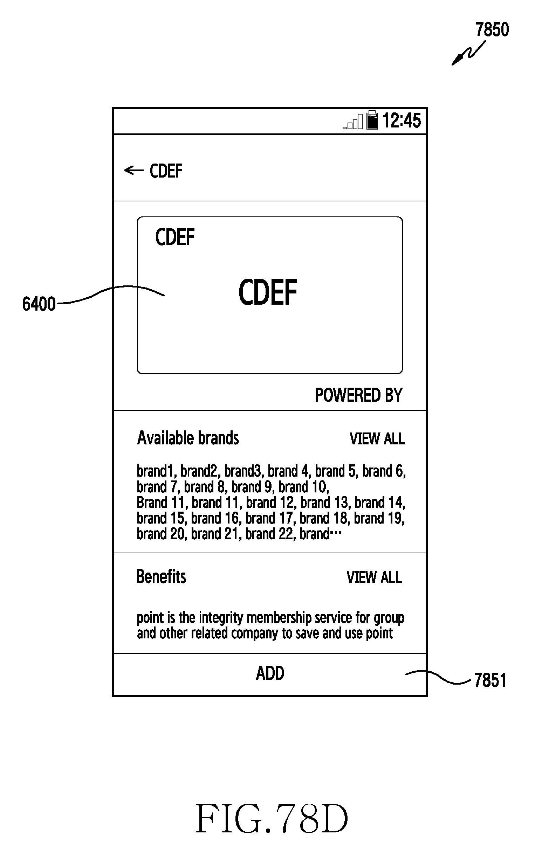

Then, the controller 5860 may display the card information screen 7850 in step 7725. In this case, the controller 5860 may display the card information of the electronic card 6400 in the card information screen 7850. For example, the controller 5860 may display the card information screen 7850 as shown in FIG. 78D. In this case, the card information screen 7850 may include an addition item 7851 to register the electronic card 6400 in response to the payment management function.

Then, when a request for registering the electronic card 6400 is received in response to the payment management function, the controller 5860 may detect the same in step 7727. In this case, if the addition item 7851 is selected in the card information screen 7850, the controller 5860 may detect the request for registering the electronic card 6400. In addition, the controller 5860 may register the electronic card 6400 in response to the payment management function in step 7729. In this case, the controller 5860 may register the electronic card 6400 as the user card 6401. Afterwards, the controller 5860 may return to FIG. 60.

In addition, if it is determined that there is no electronic card 6400 in step 7719, the controller 5860 may return to FIG. 60. That is, the controller 5860 may return to FIG. 60 without displaying the electronic card 6400.

In this case, the operating method of the electronic device 5800 may be terminated.

According to an embodiment of the present disclosure, the method of the electronic device 5800 may include displaying an image, usage information, and a payment module of an electronic card 6400 on the screen; detecting the selection of the payment module; and performing payment by using the electronic card 6400.

According to an embodiment of the present disclosure, the image, the usage information, and the payment module may be displayed in different layers in the displaying step.

According to an embodiment of the present disclosure, the displaying step may include controlling the layer for the usage information while displaying the payment module.

According to an embodiment of the present disclosure, the displaying step may include displaying one or more electronic cards 6400 in the form of a list; detecting the selection for the electronic card 6400 in the list; and displaying the screen.

According to an embodiment of the present disclosure, displaying the list may include displaying recommended cards 6403 at the end of the list.

According to an embodiment of the present disclosure, displaying the recommended cards 6403 may include displaying the recommended cards 6403 at the end of the list in response to the scrolling on the list.

According to an embodiment of the present disclosure, the electronic cards 6400 may be classified into a plurality of categories, and the displaying of the list may include displaying the categories by tabs; and displaying the list to correspond to any one of the categories.

According to an embodiment of the present disclosure, the electronic card 6400 may be registered in the first application to display the screen, and the displaying of the screen may include at least one of registering the electronic card 6400 in the second application; or removing the electronic card 6400 from the second application.

According to an embodiment of the present disclosure, the method of the electronic device 5800 may further include registering the electronic card 6400 in the first application to display the screen; and registering the electronic card 6400 in the second application.

According to an embodiment of the present disclosure, the operating method of the electronic device 5800 may further include displaying recommended cards 6403 based on input keywords.

The foregoing is illustrative of embodiments of the present disclosure and is not intended to be construed as limiting thereof. Although certain embodiments have been described, those skilled in the art will readily appreciate that many modifications are possible without materially departing from the novel teachings and advantages. Accordingly, all such modifications are intended to be included within the scope of the present disclosure as defined in the appended claims and their equivalents.

## Claims

1. A method of an electronic device, the method comprising:
displaying an image, usage information, and a payment module of an electronic card on a screen;
detecting a selection of the payment module; and
performing payment by using the electronic card.

2. The method of claim 1, wherein the image, the usage information, and the payment module are displayed in different layers on the screen, and
wherein displaying the image, the usage information, and the payment module of the electronic card comprises controlling a layer for the usage information while displaying the payment module.

3. The method of claim 1, wherein displaying the image, the usage information, and the payment module of the electronic card comprises:
displaying one or more electronic cards in a list;
detecting a selection one of the one or more electronic cards in the list; and
displaying the screen.

4. The method of claim 3, wherein displaying one or more electronic cards in the list comprises displaying recommended electronic cards at an end of the list,
wherein displaying the recommended cards comprises displaying the recommended cards at the end of the list in response to a scrolling on the list.

5. The method of claim 3, wherein the one or more electronic cards are classified into a plurality of categories, and displaying of the list comprises:
displaying the categories by tabs; and
displaying the one or more electronic cards in the list to correspond to any one of the categories.

6. The method of claim 1, wherein the electronic card is registered in a first application to display the screen, and displaying the image, the usage information, and the payment module of the electronic card on the screen comprises at least one of:
registering the electronic card in a second application; and removing the electronic card from the second application.

7. The method of claim 1, further comprising:
registering the electronic card in a first application to display the screen; and
registering the electronic card in the second application.

8. An electronic device, comprising:
a display unit; and
a controller connected to the display unit and configured to display an image, usage information, and a payment module of an electronic card on a screen, detect a selection of the payment module, and perform a payment using the electronic card.

9. The electronic device of claim 8, wherein the controller is further configured to display the image, the usage information, and the payment module in different layers, and
wherein the controller is further configured to control a layer for the usage information while displaying the payment module.

10. The electronic device of claim 8, wherein the controller is further configured to display one or more electronic cards in a list, detect a selection of the one or more electronic cards in the list, and display the screen.

11. The electronic device of claim 10, wherein the controller is further configured to display recommended electronic cards at an end of the list, and
wherein the controller is further configured to display the recommended cards at the end of the list in response to a scrolling on the list.

12. The electronic device of claim 10, wherein the controller is further configured to classify the one or more electronic cards into a plurality of categories, display the categories by tabs, and display the list to correspond to any one of the categories.

13. The electronic device of claim 8, wherein the electronic card is registered in the first application to display the screen, and wherein the controller is further configured to register the electronic card in the second application or remove the electronic card from the second application.

14. The electronic device of claim 8, wherein the controller is further configured to register the electronic card in the first application to display the screen, and register the electronic card in the second application.

15. The electronic device of claim 8, wherein the controller is further configured to display recommended cards based on input keywords.
